# EUROPÄISCHE PATENTANMELDUNG

(11) **EP 3 210 469 A1**
(43) Veröffentlichungstag der Anmeldung: **30.08.2017**
(21) Anmeldenummer: 16156878.7
(22) Anmeldetag: 23.02.2016
(51) Int. Cl.: A01N 43/653

(54) **VERWENDUNG VON SUBSTITUIERTEN THIO-1,2,4-TRIAZOLEN ZUR STEIGERUNG DER STRESSTOLERANZ IN PFLANZEN**

(71) Anmelder: Bayer CropScience AG, 40789 Monheim (DE)
(72) Erfinder: FRACKENPOHL, Jens, 60322 Frankfurt/Main (DE); BOJACK, Guido, 65207 Wiesbaden-Naurod (DE); HELMKE, Hendrik, 65835 Liederbach (DE); LEHR, Stefan, 65835 Liederbach (DE); HEINEMANN, Ines, 65719 Hofheim (DE); MINN, Klemens, 65795 Hattersheim (DE); DITTGEN, Jan, 60316 Frankfurt (DE); SCHMUTZLER, Dirk, 65795 Hattersheim (DE); BICKERS, Udo, 50737 Köln (DE); HILLS, Martin, Jeffrey, 65510 Idstein (DE); ROTH, Franziska, 60385 Frankfurt (DE); POREE, Fabien, 69009 Lyon (FR)
(74) Vertreter: BIP Patents

(57) **Zusammenfassung**

Die Erfindung betrifft die Verwendung substituierter Thio-1,2,4-triazole oder deren Salze 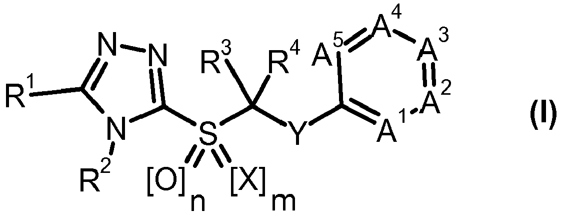 wobei die Reste und Indizes in der allgemeinen Formel (I) den in der Beschreibung gegebenen Definitionen entsprechen,
zur Steigerung der Stresstoleranz in Pflanzen gegenüber abiotischem Stress und/oder zur Erhöhung des Pflanzenertrags.

## Beschreibung

Die Erfindung die Verwendung von substituierten Thio-1,2,4-triazolen zur Steigerung der Stresstoleranz in Pflanzen gegenüber abiotischem Stress, sowie zur Steigerung des Pflanzenwachstums und/oder zur Erhöhung des Pflanzenertrags.

Es ist bekannt, dass bestimmte substituierte Triazole, wie beispielsweise durch Aryl- oder Hetarylgruppen substituierte Benzylthio-1,2,4-triazole, fungizide Eigenschaften besitzen (vgl. z. B. CN102766102; Youji Huaxue 2012, 32, 2373; CN103183662; CN103373987; CN103626737; Int. J. Mol. Sciences 2014, 15, 8075). Substituierte Benzylthio-1,2,4-triazole und ihre herbizide Wirkung sind z.B. in CN102391193 und CN102276596 beschrieben, wobei als bevorzugte Kernsubstituenten der betreffenden 1,2,4-Triazolyleinheit beispielsweise N-Cyclopropyl in Kombination mit einer Methylgruppe oder einer Thiadiazolylgruppe beschrieben werden, jedoch keine Kombinationen von Cycloalkylsubstituenten an N und C-Atom der 1,2,4-Triazolyleinheit. Arylalkyl-substituierte Pyridin-2-carboxamide und ihre nematizide Wirkung werden in WO2015007626 beschrieben. Es ist weiter bekannt, daß bestimmte substituierte Carbonylmethylthiotriazole als insektizide oder anthelmintische Wirkstoffe sowie als Inhibitoren von Geruchsrezeptoren bei Insekten eingesetzt werden können (vgl. WO2012/154403; WO2004/074272).

Es ist weiterhin bekannt, daß substituierte Thiotriazole als pharmazeutische Wirkstoffe verwendet werden können, z.B. als antibakterielle Wirkstoffe (vgl. WO2014/173904; US2014/0243381), als tuberkulostatische Wirkstoffe (vgl. WO2014/165090; WO2014/161516), als TGR5-Agonisten (vgl. WO2014/100025; WO2014/100021; WO2010/093845), als antidiabetische Wirkstoffe (vgl. WO2003/065983; CN103483281; CN103467398), als GABA-Agonisten (vgl. WO2005/039569) sowie als Glycintransporter 2-Inhibitoren (vgl. WO2002/064135). Verfahren zur Herstellung von substituierten Thiotriazolen werden z.B. in WO2006/013948; Med. Chem. 2007, 3, 551; WO2010/068172; Lett. Drug Des. Disc. 2012, 9, 431; Mol. Diversity 2012, 16, 251 und in DE4339412 beschrieben. Die Interaktion von bestimmten Aryl- oder Heteroarylsubstituierten Benzylthio-1,2,4-triazolen mit CYP2C9 und CYP3A4 ist in J. Med. Chem. 2008, 51, 1755 beschrieben.

Es ist weiterhin bekannt, dass gegebenenfalls substituierte S-Benzylthiouracile zur Stärkung des Wurzelwachstums von Pflanzen verwendet werden können (vgl. WO2015/108938). Die Verwendung von substituierten Thio-1,2,4-triazolen zur Steigerung der Stresstoleranz in Pflanzen gegenüber abiotischem Stress, sowie zur Steigerung des Pflanzenwachstums und/oder zur Erhöhung des Pflanzenertrags ist dagegen bisher noch nicht beschrieben.

Es ist bekannt, dass Pflanzen auf natürliche Stressbedingungen, wie beispielsweise Kälte-, Hitze-, Trockenstress (Stress verursacht durch Trockenheit und/oder Wassermangel), Verwundung, Pathogenbefall (Viren, Bakterien, Pilze, Insekten) etc. aber auch auf Herbizide mit spezifischen oder unspezifischen Abwehrmechanismen reagieren können [Pflanzenbiochemie, S. 393-462 , Spektrum Akademischer Verlag, Heidelberg, Berlin, Oxford, Hans W. Heldt, 1996.; Biochemistry and Molecular Biology of Plants, S. 1102-1203, American Society of Plant Physiologists, Rockville, Maryland, eds. Buchanan, Gruissem, Jones, 2000].

In Pflanzen sind zahlreiche Proteine und die sie codierenden Gene bekannt, die an Abwehrreaktionen gegen abiotischen Stress (z.B. Kälte, Hitze, Trockenheit, Salz, Überflutung) beteiligt sind. Diese gehören teilweise zu Signaltransduktionsketten (z.B. Transkriptionsfaktoren, Kinasen, Phosphatasen) oder bewirken eine physiologische Antwort der Pflanzenzelle (z.B. Ionentransport, Entgiftung reaktiver Sauerstoff-Spezies). Zu den Signalkettengenen der abiotischen Stressreaktion gehören u.a. Transkriptionsfaktoren der Klassen DREB und CBF (Jaglo-Ottosen et al., 1998, Science 280: 104-106). An der Reaktion auf Salzstress sind Phosphatasen vom Typ ATPK und MP2C beteiligt. Ferner wird bei Salzstress häufig die Biosynthese von Osmolyten wie Prolin oder Sucrose aktiviert. Beteiligt sind hier z.B. die Sucrose-Synthase und Prolin-Transporter (Hasegawa et al., 2000, Annu Rev Plant Physiol Plant Mol Biol 51: 463-499). Die Stressabwehr der Pflanzen gegen Kälte und Trockenheit benutzt z.T. die gleichen molekularen Mechanismen. Bekannt ist die Akkumulation von sogenannten Late Embryogenesis Abundant Proteins (LEA-Proteine), zu denen als wichtige Klasse die Dehydrine gehören (Ingram and Bartels, 1996, Annu Rev Plant Physiol Plant Mol Biol 47: 277-403, Close, 1997, Physiol Plant 100: 291-296). Es handelt sich dabei um Chaperone, die Vesikel, Proteine und Membranstrukturen in gestressten Pflanzen stabilisieren (Bray, 1993, Plant Physiol 103: 1035-1040). Außerdem erfolgt häufig eine Induktion von Aldehyd-Deydrogenasen, welche die bei oxidativem Stress entstehenden reaktiven Sauerstoff-Spezies (ROS) entgiften (Kirch et al., 2005, Plant Mol Biol 57: 315-332).
Heat Shock Faktoren (HSF) und Heat Shock Proteine (HSP) werden bei Hitzestress aktiviert und spielen hier als Chaperone eine ähnliche Rolle wie die Dehydrine bei Kälte- und Trockenstress (Yu et al., 2005, Mol Cells 19: 328-333).

Eine Reihe von pflanzenendogenen Signalstoffen, die in die Stresstoleranz bzw. die Pathogenabwehr involviert sind, sind bereits bekannt. Zu nennen sind hier beispielsweise Salicylsäure, Benzoesäure, Jasmonsäure oder Ethylen [Biochemistry and Molecular Biology of Plants, S. 850-929, American Society of Plant Physiologists, Rockville, Maryland, eds. Buchanan, Gruissem, Jones, 2000]. Einige dieser Substanzen oder deren stabile synthetische Derivate und abgeleitete Strukturen sind auch bei externer Applikation auf Pflanzen oder Saatgutbeizung wirksam und aktivieren Abwehrreaktionen, die eine erhöhte Stress- bzw. Pathogentoleranz der Pflanze zur Folge haben [Sembdner, and Parthier, 1993, Ann. Rev. Plant Physiol. Plant Mol. Biol. 44: 569-589].

Es ist weiter bekannt, dass chemische Substanzen die Toleranz von Pflanzen gegen abiotischen Stress erhöhen können. Derartige Substanzen werden dabei entweder durch Saatgut-Beizung, durch Blattspritzung oder durch Bodenbehandung appliziert. So wird eine Erhöhung der abiotischen Stresstoleranz von Kulturpflanzen durch Behandlung mit Elicitoren der Systemic Acquired Resistance (SAR) oder Abscisinsäure-Derivaten beschrieben (Schading and Wei, WO2000/28055; Abrams and Gusta, US5201931; Abrams et al, WO97/23441, Churchill et al., 1998, Plant Growth Regul 25: 35-45). Desweiteren wurden Effekte von Wachstumsregulatoren auf die Stresstoleranz von Kulturpflanzen beschrieben (Morrison and Andrews, 1992, J Plant Growth Regul 11: 113-117, RD-259027). In diesem Zusammenhang ist ebenfalls bekannt, dass ein wachstumsregulierendes Naphthylsulfonamid (4-Brom-N-(pyridin-2-ylmethyl)naphthalin-1-sulfonamid) die Keimung von Pflanzensamen in dergleichen Weise wie Abscisinsäure beeinflusst (Park et al. Science 2009, 324, 1068-1071). Weiterhin zeigt eine Naphthylsulfamidocarbonsäure (N-[(4-Brom-1-naphthyl)sulfonyl]-5-methoxynorvalin) eine Wirkungsweise in biochemischen Rezeptortests, die mit 4-Brom-N-(pyridin-2-ylmethyl)naphthalin-1-sulfonamid vergleichbar ist (Melcher et al. Nature Structural & Molecular Biology 2010, 17, 1102-1108). Außerdem ist bekannt, dass ein weiteres Naphthylsulfonamid, N-(6-aminohexyl)-5-chlornaphthalin-1-sulfonamid, den Calcium-Spiegel in Pflanzen beeinflusst, die einem Kälteschock ausgesetzt wurden (Cholewa et al. Can. J. Botany 1997, 75, 375-382).

Auch bei Anwendung von Fungiziden, insbesondere aus der Gruppe der Strobilurine oder der Succinat Dehydrogenase Inhibitoren werden ähnliche Effekte beobachtet, die häufig auch mit einer Ertragssteigerung einhergehen (Draber et al., DE3534948, Bartlett et al., 2002, Pest Manag Sci 60: 309). Es ist ebenfalls bekannt, dass das Herbizid Glyphosat in niedriger Dosierung das Wachstum einiger Pflanzenarten stimuliert (Cedergreen, Env. Pollution 2008, 156, 1099).

Bei osmotischem Stress ist eine Schutzwirkung durch Applikation von Osmolyten wie z.B. Glycinbetain oder deren biochemischen Vorstufen, z.B. Cholin-Derivate beobachtet worden (Chen et al., 2000, Plant Cell Environ 23: 609-618, Bergmann et al., DE4103253). Auch die Wirkung von Antioxidantien wie z.B Naphthole und Xanthine zur Erhöhung der abiotischen Stresstoleranz in Pflanzen wurde bereits beschrieben (Bergmann et al., DD277832, Bergmann et al., DD277835). Die molekularen Ursachen der Anti-Stress-Wirkung dieser Substanzen sind jedoch weitgehend unbekannt.

Es ist weiter bekannt, dass die Toleranz von Pflanzen gegenüber abiotischem Stress durch eine Modifikation der Aktivität von endogenen Poly-ADP-ribose Polymerasen (PARP) oder Poly-(ADP-ribose) glycohydrolasen (PARG) erhöht werden kann (de Block et al., The Plant Journal, 2004, 41, 95; Levine et al., FEBS Lett. 1998, 440, 1; WO00/04173; WO2004/090140).

Somit ist bekannt, dass Pflanzen über mehrere endogene Reaktionsmechanismen verfügen, die eine wirksame Abwehr gegenüber verschiedensten Schadorganismen und/oder natürlichem abiotischem Stress bewirken können. Da sich die ökologischen und ökonomischen Anforderungen an moderne Pflanzenbehandlungsmittel laufend erhöhen, beispielsweise was deren Toxizität, Selektivität, Aufwandmenge, Rückstandsbildung und günstige Herstellbarkeit angeht, besteht die ständige Aufgabe, neue Pflanzenbehandlungsmittel zu entwickeln, die zumindest in Teilbereichen Vorteile gegenüber den bekannten aufweisen.

Daher bestand die Aufgabe der vorliegenden Erfindung darin, Verbindungen bereitzustellen, die die Toleranz gegenüber abiotischem Stress in Pflanzen weiter erhöhen, eine Stärkung des Pflanzenwachstums bewirken und/oder zur Erhöhung des Pflanzenertrags beitragen. In diesem Zusammenhang wird unter Toleranz gegenüber abiotischem Stress beispielsweise die Toleranz gegenüber Kälte-, Hitze-, Trockenstress (Stress verursacht durch Trockenheit und/oder Wassermangel), Salzen und Überflutung verstanden.

Überraschenderweise wurde nun gefunden, dass ausgewählte substituierte Thiotriazole zur Steigerung der Stresstoleranz in Pflanzen gegenüber abiotischem Stress, sowie zur Steigerung des Pflanzenwachstums und/oder zur Erhöhung des Pflanzenertrags verwendet werden können.

Gegenstand der vorliegenden Erfindung ist demnach die Verwendung von substituierten Thio-1,2,4-triazolen der allgemeinen Formel (I) oder deren Salzen, 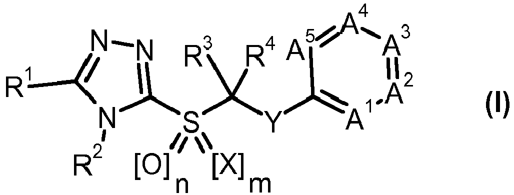 zur Steigerung der Stresstoleranz in Pflanzen gegenüber abiotischem Stress, sowie zur Steigerung des Pflanzenwachstums und/oder zur Erhöhung des Pflanzenertrags
worin
R¹ für Wasserstoff, (C₁-C₈)-Alkyl, Cyano-(C₁-C₈)-Alkyl, Nitro-(C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁ -C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₃-C₈)-Cycloalkyloxy-(C₁-C₈)-alkyl, COR²³, Hydroxycarbonyl, (C₁-C₈)-Alkoxycarbonyl, (C₂-C₈)-Alkenyloxycarbonyl, (C₂-C₈)-Alkinyloxycarbonyl, Aryl-(C₁-C₈)-alkoxycarbonyl, Heteroaryl-(C₁-C₈)-alkoxycarbonyl, Heteroaryloxycarbonyl, Aryloxycarbonyl, Heterocyclyloxycarbonyl, (C₃-C₈)-Cycloalkyl-(C₁-C₈)-alkoxycarbonyl, Heterocyclyl-(C₁-C₈)-alkoxycarbonyl, CONR²¹R²², SO₂R²⁴, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl, (C₁-C₈)-Alkylcarbonyl-(C₁-C₈)-alkyl, Arylcarbonyl-(C₁-C₈)-alkyl, Heteroarylcarbonyl-(C₁-C₈)-alkyl, Aryloxy-(C₁-C₈)-alkyl, Heteroaryloxy-(C₁-C₈)-alkyl steht,
R² für (C₁-C₈)-Alkyl, Cyano-(C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, (C₃-C₁₀)-Halocycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₂-C₈)-Alkenyloxy-(C₁-C₈)-alkyl, (C₂-C)-Alkinyloxy-(C₁-C)-alkyl, Nitro-(C₁-C₈)-Alkyl, Aryloxy-(C₁-C₈)-alkyl, Aryl-(C₁-C₈)-alkoxy-(C₁-C₈)-alkyl, Heteroaryloxy-(C₁-C₈)-alkyl, Heteroaryl-(C₁-C₈)-alkoxy-(C₁-C₈)-alkyl, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl, (C₁-C₈)-Alkylcarbonyl-(C₁-C₈)-alkyl, (C₃-C)-Cycloalkylcarbonyl-(C₁-C)-alkyl, Arylcarbonyl-(C₁-C₈)-alkyl, Heteroarylcarbonyl-(C₁-C₈)-alkyl, Heterocyclylcarbonyl-(C₁-C₈)-alkyl, (C₃-C₈)-Cycloalkyl-(C₃-C₈)-Cycloalkyl steht,
R³ und R⁴ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³, CONR²¹R²², Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₈)-Alkoxy-(C₁-C₈)-haloalkyl, (C₁-C₈)-Haloalkoxy-(C₁-C₈)-haloalkyl, (C₁-C₈)-Haloalkoxy-(C₁-C₈)-alkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkylcarbonyl-(C₁-C₈)-alkyl, COOR²³, CONR²¹R²², COR²³, -C=NOR²³, R²¹R²²N-(C₁-C₈)-alkyl, R²³OOC-(C₁-C₈)-alkyl, Aryl-(C₁-C₈)-alkinyl, Heteroaryl-(C₁-C₈)-alkinyl, Heterocyclyl-(C₁-C₈)-alkinyl, Tris-[(C₁-C₈)-alkyl]silyl-(C₂-C₈)-alkinyl, Bis-[(C₁-C₈)-alkyl](aryl)silyl-(C₂-C₈)-alkinyl, Bis-aryl[(C₁-C₈)-alkyl]silyl-(C₂-C₈)-alkinyl, (C₃-C)-Cycloalkyl-(C₂-C)-alkilnyl, Aryl-(C₂-C₈)-alkenyl, Heteroaryl-(C₂-C₈)-alkenyl, Heterocyclyl-(C₂-C₈)-alkenyl, (C₃-C₈)-Cycloalkyl-(C₂-C₈)-alkenyl, (C₁-C₈)-Alkoxy-(C₁-C₈)-alkoxy-(C₁-C₈)-alkyl, (C₁-C₈)-Alkylaminosulfonylamino, (C₃-C₈)-Cycloalkylaminosulfonylamino, Diazo, Aryldiazo, Tris-[(C₁-C₈)-alkyl]silyl, Bis-[(C₁-C₈)-alkyl](aryl)silyl, Bis-aryl[(C₁-C₈)-alkyl]silyl steht,
X für O (Sauerstoff) oder NR⁶ steht,
n, m unabhängig voneinander für 0 oder 1 stehen
v für 0, 1 oder 2 steht,
R⁶ für Wasserstoff, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 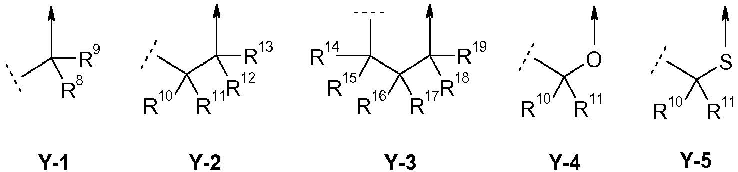 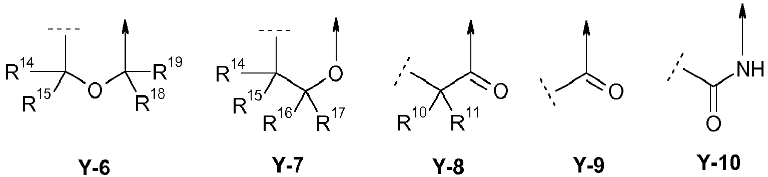 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³ stehen,
R²¹ und R²² gleich oder verschieden sind und unabhängig voneinander für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Haloalkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, COR²³, SO₂R²⁴, (C₁-C₈)-Alkyl-HNO₂S-, (C₃-C₈)-Cycloalkyl-HNO₂S-, Heterocyclyl, (C₁-C₈)-Alkoxycarbonyl-(C₁-C₈)-alkyl, (C₁-C₈)-Alkoxycarbonyl, Aryl-(C₁-C₈)-Alkoxycarbonyl-(C₁-C₈)-alkyl, Aryl-(C₁-C₈)-Alkoxycarbonyl, Hydroxycarbonyl-(C₁-C₈)-alkyl, Heteroaryl-(C₁-C₈)-Alkoxycarbonyl, (C₂-C₈)-Alkenyloxycarbonyl, (C₂-C₈)-Alkinyloxycarbonyl, Heterocyclyl-(C₁-C₈)-alkyl stehen,
R²³ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, Aryl-(C₁-C₈)-Alkoxycarbonyl-(C₁-C₈)-alkyl, Hydroxycarbonyl-(C₁-C₈)-alkyl, R²¹R²²NOC-(C₁-C₈)-alkyl, Heterocyclyl, Heterocyclyl-(C₁-C₈)-alkyl, (C₁-C₈)-Alkylcarbonyl-(C₁-C₈)-alkyl, (C₃-C₈)-Cycloalkylcarbonyl-(C₁-C₈)-alkyl, Arylcarbonyl-(C₁-C₈)-alkyl, Heteroarylcarbonyl-(C₁-C₈)-alkyl, Heterocyclylcarbonyl-(C₁-C₈)-alkyl steht und
R²⁴ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, Heterocyclyl-(C₁-C₈)-alkyl, (C₃-C₈)-Cycloalkyl-(C₁-C₈)-alkyl, (C₄-C₁₀)-Cycloalkenyl-(C₁-C₈)-alkyl, NR²¹R²² steht.

Die Verbindungen der allgemeinen Formel (I) können durch Anlagerung einer geeigneten anorganischen oder organischen Säure, wie beispielsweise Mineralsäuren, wie beispielsweise HCl, HBr, H₂SO₄, H₃PO₄ oder HNO₃, oder organische Säuren, z. B. Carbonsäuren, wie Ameisensäure, Essigsäure, Propionsäure, Oxalsäure, Milchsäure oder Salicylsäure oder Sulfonsäuren, wie zum Beispiel p-Toluolsulfonsäure, an eine basische Gruppe, wie z.B. Amino, Alkylamino, Dialkylamino, Piperidino, Morpholino oder Pyridino, Salze bilden. Diese Salze enthalten dann die konjugierte Base der Säure als Anion. Geeignete Substituenten, die in deprotonierter Form, wie z.B. Sulfonsäuren, bestimmte Sulfonsäureamide oder Carbonsäuren, vorliegen, können innere Salze mit ihrerseits protonierbaren Gruppen, wie Aminogruppen bilden. Salzbildung kann auch durch Einwirkung einer Base auf Verbindungen der allgemeinen Formel (I) erfolgen. Geeignete Basen sind beispielsweise organische Amine, wie Trialkylamine, Morpholin, Piperidin und Pyridin sowie Ammonium-, Alkali- oder Erdalkalimetallhydroxide, -carbonate und -hydrogencarbonate, insbesondere Natrium- und Kaliumhydroxid, Natrium- und Kaliumcarbonat und Natrium- und Kaliumhydrogencarbonat. Diese Salze sind Verbindungen, in denen der acide Wasserstoff durch ein für die Landwirtschaft geeignetes Kation ersetzt wird, beispielsweise Metallsalze, insbesondere Alkalimetall-salze oder Erdalkalimetallsalze, insbesondere Natrium- und Kaliumsalze, oder auch Ammoniumsalze, Salze mit organischen Aminen oder quartäre Ammoniumsalze, zum Beispiel mit Kationen der Formel [NR^{a}R^{b}R^{c}R^{d}]⁺, worin R^{a} bis R^{d} jeweils unabhängig voneinander einen organischen Rest, insbesondere Alkyl, Aryl, Aralkyl oder Alkylaryl darstellen. Infrage kommen auch Alkylsulfonium- und Alkylsulfoxoniumsalze, wie (C₁-C₄)-Trialkylsulfonium- und (C₁-C₄)-Trialkylsulfoxoniumsalze.

Bevorzugt ist die Verwendung von substituierten Thio-1,2,4-triazolen der allgemeinen Formel (I) oder deren Salzen,
worin
R¹ für Wasserstoff, (C₁-C₇)-Alkyl, Cyano-(C₁-C₇)-Alkyl, Nitro-(C₁-C₇)-Alkyl, (C₂-C₇)-Alkenyl, (C₂-C₇)-Alkinyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, R²¹R²²N-(C₁-C₇)-alkyl, (C₁-C₇)-Alkoxy-(C₁-C₇)-alkoxy-(C₁-C₇)-alkyl, (C₃-C₇)-Cycloalkyloxy-(C₁-C₇)-alkyl, COR²³, Hydroxycarbonyl, (C₁-C₇)-Alkoxycarbonyl, (C₂-C₇)-Alkenyloxycarbonyl, (C₂-C₇)-Alkinyloxycarbonyl, Aryl-(C₁-C₇)-alkoxycarbonyl, Heteroaryl-(C₁-C₇)-alkoxycarbonyl, Heteroaryloxycarbonyl, Aryloxycarbonyl, Heterocyclyloxycarbonyl, (C₃-C₇)-Cycloalkyl-(C₁-C₇)-alkoxycarbonyl, Heterocyclyl-(C₁-C₇)-alkoxycarbonyl, CONR²¹R²², SO₂R²⁴, Hydroxycarbonyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, (C₂-C₇)-Alkinyloxycarbonyl-(C₁-C₇)-alkyl, Aryl-(C₁-C₇)-alkoxycarbonyl-(C₁-C₇)-alkyl, Heteroaryl-(C₁-C₇)-alkoxycarbonyl-(C₁-C₇)-alkyl, Heterocyclyl-(C₁-C₇)-alkoxycarbonyl-(C₁-C₇)-alkyl, (C₁-C₇)-Alkylcarbonyl-(C₁-C₇)-alkyl, Arylcarbonyl-(C₁-C₇)-alkyl, Heteroarylcarbonyl-(C₁-C₇)-alkyl, Aryloxy-(C₁-C₇)-alkyl, Heteroaryloxy-(C₁-C₇)-alkyl steht,
R² für (C₁-C₇)-Alkyl, Cyano-(C₁-C₇)-Alkyl, (C₂-C₇)-Alkenyl, (C₂-C₇)-Alkinyl, (C₁-C₈)-Haloalkyl, (C₃-C₈)-Cycloalkyl, (C₃-C₈)-Halocycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, R²¹R²²N-(C₁-C₇)-alkyl, (C₁-C₇)-Alkoxy-(C₁-C₇)-alkoxy-(C₁-C₇)-alkyl, (C₂-C₇)-Alkenyloxy-(C₁-C₇)-alkyl, (C₂-C₇)-Alkinyloxy-(C₁-C₇)-alkyl, Nitro-(C₁-C₇)-Alkyl, Aryloxy-(C₁-C₇)-alkyl, Aryl-(C₁-C₇)-alkoxy-(C₁-C₇)-alkyl, Heteroaryloxy-(C₁-C₇)-alkyl, Heteroaryl-(C₁-C₇)-alkoxy-(C₁-C₇)-alkyl, Hydroxycarbonyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, (C₂-C₇)-Alkinyloxycarbonyl-(C₁-C₇)-alkyl, Aryl-(C₁-C₇)-alkoxycarbonyl-(C₁-C₇)-alkyl, Heteroaryl-(C₁-C₇)-alkoxycarbonyl-(C₁-C₇)-alkyl, Heterocyclyl-(C₁-C₇)-alkoxycarbonyl-(C₁-C₇)-alkyl, (C₁-C₇)-Alkylcarbonyl-(C₁-C₇)-alkyl, (C₃-C₇)-Cycloalkylcarbonyl-(C₁-C₇)-alkyl, Arylcarbonyl-(C₁-C₇)-alkyl, Heteroarylcarbonyl-(C₁-C₇)-alkyl, Heterocyclylcarbonyl-(C₁-C₇)-alkyl, (C₃-C₇)-Cycloalkyl-(C₃-C₇)-Cycloalkyl steht,
R³ und R⁴ unabhängig voneinander für Wasserstoff, (C₁-C₇)-Alkyl, (C₂-C₇)-Alkenyl, (C₂-C₇)-Alkinyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, COOR²³, CONR²¹R²², Hydroxycarbonyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, (C₂-C₇)-Alkinyloxycarbonyl-(C₁-C₇)-alkyl, Aryl-(C₁-C₇)-alkoxycarbonyl-(C₁-C₇)-alkyl, Heteroaryl-(C₁-C₇)-alkoxycarbonyl-(C₁-C₇)-alkyl, Heterocyclyl-(C₁-C₇)-alkoxycarbonyl-(C₁-C₇)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₇)-Alkyl, (C₂-C₇)-Alkenyl, (C₂-C₇)-Alkinyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Pentafluorthio, (C₁-C₇)-Alkoxy-(C₁-C₇)-haloalkyl, (C₁-C₇)-Haloalkoxy-(C₁-C₇)-haloalkyl, (C₁-C₇)-Haloalkoxy-(C₁-C₇)-alkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₈)-Cycloalkenyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkylthio-(C₁-C₇)-alkyl, (C₁-C₇)-Alkylcarbonyl-(C₁-C₇)-alkyl, COOR²³, CONR²¹R²², COR²³, -C=NOR²³, R²¹R²²N-(C₁-C₇)-alkyl, R²³OOC-(C₁-C₇)-alkyl, Aryl-(C₁-C₇)-alkinyl, Heteroaryl-(C₁-C₇)-alkinyl, Heterocyclyl-(C₁-C₇)-alkinyl, Tris-[(C₁-C₇)-alkyl]silyl-(C₂-C₇)-alkinyl, Bis-[(C₁-C₇)-alkyl](aryl)silyl-(C₂-C₇)-alkinyl, Bis-aryl[(C₁-C₇)-alkyl]silyl-(C₂-C₇)-alkinyl, (C₃-C₇)-Cycloalkyl-(C₂-C₇)-alkinyl, Aryl-(C₂-C₇)-alkenyl, Heteroaryl-(C₂-C₇)-alkenyl, Heterocyclyl-(C₂-C₇)-alkenyl, (C₃-C₇)-Cycloalkyl-(C₂-C₇)-alkenyl, (C₁-C₇)-Alkoxy-(C₁-C₇)-alkoxy-(C₁-C₇)-alkyl, (C₁-C₇)-Alkylaminosulfonylamino, (C₃-C₇)-Cycloalkylaminosulfonylamino, Diazo, Aryldiazo, Tris-[(C₁-C₇)-alkyl]silyl, Bis-[(C₁-C₇)-alkyl](aryl)silyl, Bis-aryl[(C₁-C₇)-alkyl]silyl steht,
X für O (Sauerstoff) oder NR⁶ steht,
n, m unabhängig voneinander für 0 oder 1 stehen
v für 0, 1 oder 2 steht,
R⁶ für Wasserstoff, (C₁-C₇)-Alkyl, (C₂-C₇)-Alkenyl, (C₂-C₇)-Alkinyl, (C₁-C₈)-Haloalkyl, (C₃-C₈)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 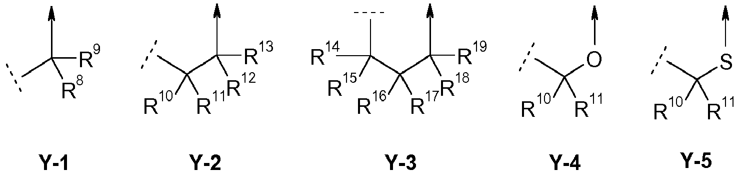 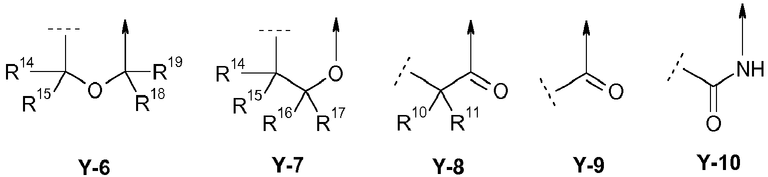 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₇)-Alkyl, (C₂-C₇)-Alkenyl, (C₂-C₇)-Alkinyl, (C₁-C₈)-Haloalkyl, (C₂-C₇)-Haloalkenyl, (C₂-C₇)-Haloalkinyl, (C₃-C₈)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, COOR²³ stehen,
R²¹ und R²² gleich oder verschieden sind und unabhängig voneinander für Wasserstoff, (C₁-C₇)-Alkyl, (C₂-C₇)-Alkenyl, (C₂-C₇)-Alkinyl, (C₁-C₇)-Cyanoalkyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₇)-Alkoxy-(C₁-C₇)-alkyl, (C₁-C₇)-Haloalkoxy-(C₁-C₇)-alkyl, (C₁-C₇)-Alkylthio-(C₁-C₇)-alkyl, (C₁-C₇)-Haloalkylthio-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₈)-Cycloalkenyl-(C₁-C₇)-alkyl, COR²³, SO₂R²⁴, (C₁-C₇)-Alkyl-HNO₂S-, (C₃-C₇)-Cycloalkyl-HNO₂S-, Heterocyclyl, (C₁-C₇)-Alkoxycarbonyl-(C₁-C₇)-alkyl, (C₁-C₇)-Alkoxycarbonyl, Aryl-(C₁-C₇)-Alkoxycarbonyl-(C₁-C₇)-alkyl, Aryl-(C₁-C₇)-Alkoxycarbonyl, Hydroxycarbonyl-(C₁-C₇)-alkyl, Heteroaryl-(C₁-C₇)-Alkoxycarbonyl, (C₂-C₇)-Alkenyloxycarbonyl, (C₂-C₇)-Alkinyloxycarbonyl, Heterocyclyl-(C₁-C₇)-alkyl stehen
R²³ für Wasserstoff, (C₁-C₇)-Alkyl, (C₂-C₇)-Alkenyl, (C₂-C₇)-Alkinyl, (C₁-C₇)-Cyanoalkyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₇)-Alkoxy-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₈)-Cycloalkenyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, Aryl-(C₁-C₇)-Alkoxycarbonyl-(C₁-C₇)-alkyl, Hydroxycarbonyl-(C₁-C₇)-alkyl, R²¹R²²NOC-(C₁-C₇)-alkyl, Heterocyclyl, Heterocyclyl-(C₁-C₇)-alkyl, (C₁-C₇)-Alkylcarbonyl-(C₁-C₇)-alkyl, (C₃-C₇)-Cycloalkylcarbonyl-(C₁-C₇)-alkyl, Arylcarbonyl-(C₁-C₇)-alkyl, Heteroarylcarbonyl-(C₁-C₇)-alkyl, Heterocyclylcarbonyl-(C₁-C₇)-alkyl steht und
R²⁴ für Wasserstoff, (C₁-C₇)-Alkyl, (C₂-C₇)-Alkenyl, (C₂-C₇)-Alkinyl, (C₁-C₇)-Cyanoalkyl, (C₁-C₈)-Haloalkyl, (C₂-C₇)-Haloalkenyl, (C₂-C₇)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₇)-Alkoxy-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, Heterocyclyl-(C₁-C₇)-alkyl, (C₃-C₇)-Cycloalkyl-(C₁-C₇)-alkyl, (C₄-C₈)-Cycloalkenyl-(C₁-C₈)-alkyl, NR²¹R²² steht.

Besonders bevorzugt ist die Verwendung von substituierten Thio-1,2,4-triazolen der allgemeinen Formel (I) oder deren Salzen,
worin
R¹ für Wasserstoff, (C₁-C₆)-Alkyl, Cyano-(C₁-C₆)-Alkyl, Nitro-(C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₃-C₆)-Cycloalkyloxy-(C₁-C₆)-alkyl, COR²³, Hydroxycarbonyl, (C₁-C₆)-Alkoxycarbonyl, (C₂-C₆)-Alkenyloxycarbonyl, (C₂-C₆)-Alkinyloxycarbonyl, Aryl-(C₁-C₆)-alkoxycarbonyl, Heteroaryl-(C₁-C₆)-alkoxycarbonyl, Heteroaryloxycarbonyl, Aryloxycarbonyl, Heterocyclyloxycarbonyl, (C₃-C₆)-Cycloalkyl-(C₁-C₆)-alkoxycarbonyl, Heterocyclyl-(C₁-C₆)-alkoxycarbonyl, CONR²¹R²², SO₂R²⁴, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, Arylcarbonyl-(C₁-C₆)-alkyl, Heteroarylcarbonyl-(C₁-C₆)-alkyl, Aryloxy-(C₁-C₆)-alkyl, Heteroaryloxy-(C₁-C₆)-alkyl steht,
R² für (C₁-C₆)-Alkyl, Cyano-(C₁-C₆)-Alkyl, (C₂-C₆)-Alkenyl, (C₂-C₆)-Alkinyl, (C₁-C₈)-Haloalkyl, (C₃-C₈)-Cycloalkyl, (C₃-C₈)-Halocycloalkyl, Aryl, Aryl-(C₁-C₆)-alkyl, Heteroaryl, Heteroaryl-(C₁₋C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₂-C₆)-Alkenyloxy-(C₁-C₆)-alkyl, (C₂-C₆)-Alkinyloxy-(C₁-C₆)-alkyl, Nitro-(C₁-C₆)-Alkyl, Aryloxy-(C₁-C₆)-alkyl, Aryl-(C₁-C₆)-alkoxy-(C₁-C₆)-alkyl, Heteroaryloxy-(C₁-C₆)-alkyl, Heteroaryl-(C₁-C₆)-alkoxy-(C₁-C₆)-alkyl, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl, (C₃-C₆)-Cycloalkyl-(C₃-C₆)-Cycloalkyl steht,
R³ und R⁴ unabhängig voneinander für Wasserstoff, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³, CONR²¹R²², Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Pentafluorthio, (C₁-C₆)-Alkoxy-(C₁-C₆)-haloalkyl, (C₁-C₆)-Haloalkoxy-(C₁-C₆)-haloalkyl, (C₁-C₆)-Haloalkoxy-(C₁-C₆)-alkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Tris-[(C₁-C₆)-alkyl]silyl-(C₂-C₆)-alkinyl, Bis-[(C₁-C₆)-alkyl](aryl)silyl-(C₂-C₆)-alkinyl, Bis-aryl[(C₁-C₆)-alkyl]silyl-(C₂-C₆)-alkinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkoxy-(C₁-C₆)-alkoxy-(C₁-C₆)-alkyl, (C₁-C₆)-Alkylaminosulfonylamino, (C₃-C₆)-Cycloalkylaminosulfonylamino, Diazo, Aryldiazo, Tris-[(C₁-C₆)-alkyl]silyl, Bis-[(C₁-C₆)-alkyl](aryl)silyl, Bis-aryl[(C₁-C₆)-alkyl]silyl steht,
X für O (Sauerstoff) oder NR⁶ steht,
n, m unabhängig voneinander für 0 oder 1 stehen
v für 0, 1 oder 2 steht,
R⁶ für Wasserstoff, (C₁-C₆)-Alkyl, (C₂-C₆)-Alkenyl, (C₂-C₆)-Alkinyl, (C₁-C₈)-Haloalkyl, (C₃-C₈)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 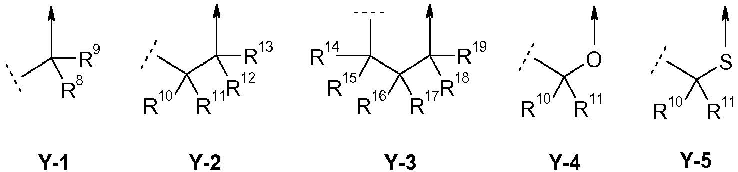 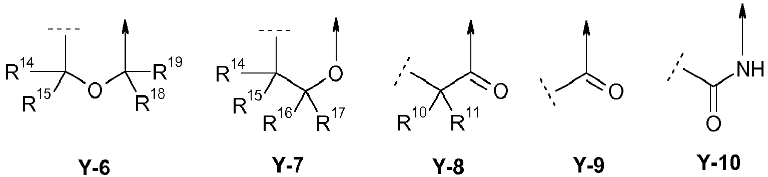 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³ stehen,
R²¹ und R²² gleich oder verschieden sind und unabhängig voneinander für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Haloalkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, COR²³, SO₂R²⁴, (C₁-C₆)-Alkyl-HNO₂S-, (C₃-C₆)-Cycloalkyl-HNO₂S-, Heterocyclyl, (C₁-C₆)-Alkoxycarbonyl-(C₁-C₆)-alkyl, (C₁-C₆)-Alkoxycarbonyl, Aryl-(C₁-C₆)-Alkoxycarbonyl-(C₁-C₆)-alkyl, Aryl-(C₁-C₆)-Alkoxycarbonyl, Hydroxycarbonyl-(C₁-C₆)-alkyl, Heteroaryl-(C₁-C₆)-Alkoxycarbonyl, (C₂-C₆)-Alkenyloxycarbonyl, (C₂-C₆)-Alkinyloxycarbonyl, Heterocyclyl-(C₁-C₆)-alkyl stehen
R²³ für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, R²¹R²²NOC-(C₁-C₆)-alkyl, Heterocyclyl, Heterocyclyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl steht und
R²⁴ für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, Heterocyclyl-(C₁-C₆)-alkyl, (C₃-C₆)-Cycloalkyl-(C₁-C₆)-alkyl, (C₄-C₈)-Cycloalkenyl-(C₁-C₈)-alkyl, NR²¹R²² steht.

Ganz besonders bevorzugt ist die Verwendung von substituierten Thio-1,2,4-triazolen der allgemeinen Formel (I) oder deren Salzen,
worin
R¹ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 2-Methoxycyclopropyl, 3-Methoxycyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 3-Ethylcyclobutyl, 3-Methoxycyclobutyl, 3,3-Dimethylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclopentyl, 2-Methylcyclopentyl, 3-Methylcyclopentyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyanomethyl, Cyanoethyl, Cyano-n-propyl, Cyano-n-butyl, Nitromethyl, Nitroethyl, Nitro-n-propyl, Nitro-n-butyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxymethyl, Ethoxymethyl, Ethoxyethyl, Methoxyethyl, Methoxy-n-propyl, Ethoxy-n-propyl, Methoxy-n-butyl, Ethoxy-n-butyl, Methoxy-iso-butyl, Methoxy-n-pentyl, Methoxy-iso-Propyl, iso-Propoxymethyl, iso-Propoxyethyl,n-butyloxymethyl, sec-Butyloxymethyl, tert-Butyloxymethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl, 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, (C₃-C₈)-Halocycloalkyl, (C₄-C₈)-Halocycloalkenyl, Aryl-(C₁-C₅)-alkyl, Heteroaryl-(C₁-C₅)-alkyl, (C₃-C₆)-Cycloalkyl-(C₁-C₅)-alkyl, Heterocyclyl-(C₁-C₅)-alkyl, R²¹R²²N-(C₁-C₆)-alkyl, (C₃-C₆)-Cycloalkyloxy-(C₁-C₅)-alkyl, COR²³, Hydroxycarbonyl, (C₁-C₆)-Alkoxycarbonyl, (C₂-C₆)-Alkenyloxycarbonyl, (C₂-C₆)-Alkinyloxycarbonyl, Aryl-(C₁-C₆)-alkoxycarbonyl, Heteroaryl-(C₁-C₅)-alkoxycarbonyl, Heteroaryloxycarbonyl, Aryloxycarbonyl, Heterocyclyloxycarbonyl, (C₃-C₆)-Cycloalkyl-(C₁-C₅)-alkoxycarbonyl, Heterocyclyl-(C₁-C₅)-alkoxycarbonyl, CONR²¹R²², SO₂R²⁴, Hydroxycarbonyl-(C₁-C₅)-alkyl, (C₁-C₆)-Alkoxycarbonyl-(C₁-C₅)-alkyl, (C₂-C₆)-Alkenyloxycarbonyl-(C₁-C₆)-alkyl, (C₂-C₆)-Alkinyloxycarbonyl-(C₁-C₅)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, Arylcarbonyl-(C₁-C₆)-alkyl, Heteroarylcarbonyl-(C₁-C₆)-alkyl, Aryloxy-(C₁-C₅)-alkyl, Heteroaryloxy-(C₁-C₅)-alkyl steht,
R² für Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 2-Methoxycyclopropyl, 3-Methoxycyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 3-Ethylcyclobutyl, 3-Methoxycyclobutyl, 3,3-Dimethylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclopentyl, 2-Methylcyclopentyl, 3-Methylcyclopentyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyanomethyl, Cyanoethyl, Cyano-n-propyl, Cyano-n-butyl, Trifluormethyl, Pentafluorethyl, Heptafluorpropyl, Nonafluorbutyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxymethyl, Ethoxymethyl, Ethoxyethyl, Methoxyethyl, Methoxy-n-propyl, Ethoxy-n-propyl, Methoxy-n-butyl, Ethoxy-n-butyl, Methoxy-iso-butyl, Methoxy-n-pentyl, Methoxy-iso-Propyl, iso-Propoxymethyl, iso-Propoxyethyl, Nitromethyl, Nitroethyl, Nitro-n-propyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Methylthio-n-butyl, Ethylthio-n-propyl, Trifluormethylthiomethyl, Trifluormethylthioethyl, Trifluormethylthio-n-propyl, Trifluormethylthio-n-butyl, (C₃-C₈)-Halocycloalkyl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₂-C₆)-Alkenyloxy-(C₁-C₆)-alkyl, (C₂-C₆)-Alkinyloxy-(C₁-C₆)-alkyl, Aryloxy-(C₁-C₆)-alkyl, Aryl-(C₁-C₆)-alkoxy-(C₁-C₆)-alkyl, Heteroaryloxy-(C₁-C₆)-alkyl, Heteroaryl-(C₁-C₆)-alkoxy-(C₁-C₆)-alkyl, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl, (C₃-C₆)-Cycloalkyl-(C₃-C₆)-Cycloalkyl steht,
R³ und R⁴ unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Cycloalkyl, (C₃-C₆)-Halocycloalkyl, (C₄-C₆)-Cycloalkenyl, (C₄-C₆)-Halocycloalkenyl, Aryl, Aryl-(C₁-C₅)-alkyl, Heteroaryl, Heteroaryl-(C₁-C₅)-alkyl, Heterocyclyl, Heterocyclyl-(C₁-C₅)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³, CONR²¹R²², Hydroxycarbonyl-(C₁-C₅)-alkyl, (C₁-C₅)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₅)-alkyl, Aryl-(C₁-C₅)-alkoxycarbonyl-(C₁-C₅)-alkyl, Heteroaryl-(C₁-C₅)-alkoxycarbonyl-(C₁-C₅)-alkyl, Heterocyclyl-(C₁-C₅)-alkoxycarbonyl-(C₁-C₅)-alkyl stehen,
R⁵ für Wasserstoff, Fluor, Chlor, Brom, Iod, Cyano, Nitro, NR²¹R²², OR²³, S(O)ᵥR²⁴, Thiocyanato, Isothiocyanato, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, Pentafluorthio, Aryl-(C₁-C₆)-alkyl, Heteroaryl-(C₁-C₆)-alkyl, Heterocyclyl-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Trimethylsilylethinyl, Triethylsilylethinyl, Tris-(iso-propyl)silylethinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkylaminosulfonylamino, (C₃-C₆)-Cycloalkylaminosulfonylamino, Diazo, Aryldiazo, Trimethylsilyl, Triethylsilyl, Tris-(iso-propyl)silyl, Diphenyl(methyl)silyl, Dimethyl(phenyl)silyl, Dimethyl(tert.-butyl)silyl, Diphenyl(tert.-butyl)silyl steht,
X für O (Sauerstoff) oder NR⁶ steht,
n, m unabhängig voneinander für 0 oder 1 stehen
v für 0, 1 oder 2 steht,
R⁶ für Wasserstoff, Methyl, Ethyl, n-Propyl, iso-Propyl, n-Butyl, sec-Butyl, tert-Butyl, n-Pentyl, Cyclopropyl, Cyclobutyl, Cyclopentyl, Cyclohexyl, Cyclopropylmethyl, Cyclobutylmethyl, Cyclopentylmethyl, 2,2-Difluorethyl, 2,2,2-Trifluorethyl, 3,3,3-Trifluor-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 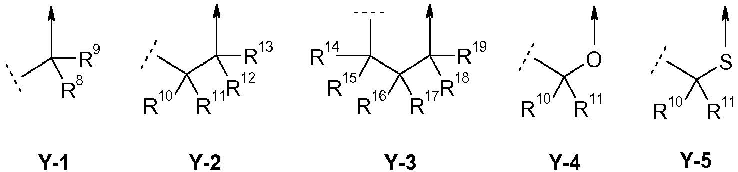 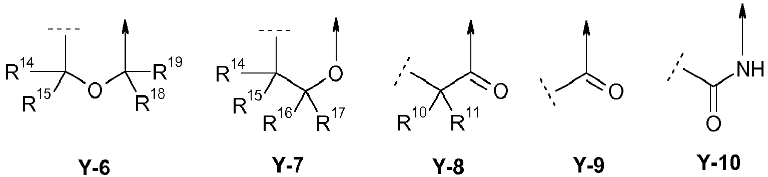 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, Fluor, Methyl, Ethyl, n-Propyl, iso-Propyl, n-Butyl, iso-Butyl, tert.-Butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, Cyclopropylmethyl, Cyclobutylmethyl, Cyclopentylmethyl, Cyclohexylmethyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³ stehen,
R²¹ und R²² gleich oder verschieden sind und unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, (C₁-C₆)-Haloalkyl, (C₂-C₆)-Haloalkenyl, (C₂-C₆)-Haloalkinyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 3-Methoxycyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, gegebenenfalls substituiertes Phenyl, Aryl-(C₁-C₅)-alkyl, Heteroaryl, Heteroaryl-(C₁-C₅)-alkyl, (C₄-C₆)-Cycloalkenyl-(C₁-C₅)-alkyl, COR²³, SO₂R²⁴, -(C₁-C₆)-Alkyl-HNO₂S-, (C₃-C₆)-Cycloalkyl-HNO₂S-, Heterocyclyl, (C₁-C₅)-Alkoxycarbonyl-(C₁-C₅)-alkyl, (C₁-C₅)-Alkoxycarbonyl, Aryl-(C₁-C₅)-Alkoxycarbonyl-(C₁-C₅)-alkyl, Aryl-(C₁-C₅)-Alkoxycarbonyl, Heteroaryl-(C₁-C₅)-Alkoxycarbonyl, (C₂-C₆)-Alkenyloxycarbonyl, (C₂-C₆)-Alkinyloxycarbonyl, Heterocyclyl-(C₁-C₅)-alkyl stehen,
R²³ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, (C₄-C₆)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, Heterocyclyl, Heterocyclyl-(C₁-C₆)-alkyl steht und
R²⁴ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, Heterocyclyl-(C₁-C₆)-alkyl, (C₄-C₆)-Cycloalkenyl-(C₁-C₆)-alkyl, NR²¹R²² steht.

Die oben aufgeführten allgemeinen oder in Vorzugsbereichen aufgeführten Restedefinitionen gelten sowohl für die Endprodukte der Formel (I) als auch entsprechend für die jeweils zur Herstellung benötigten Ausgangs- oder Zwischenprodukte. Diese Restedefinitionen können untereinander, also auch zwischen den angegebenen bevorzugten Bereichen beliebig kombiniert werden.

Im Wesentlichen sind die zuvor genannten substituierten N-(Cycloalkyl)-5-cycloalkyl-3-thio-1,2,4-triazole und N-(Cycloalkyl)-5-heterocyclyl-3-thio-1,2,4-triazole der allgemeinen Formel (II) noch nicht im Stand der Technik bekannt. Somit gelten als weiterer Teil der Erfindung substituierte N-(Cycloalkyl)-5-Cycloalkyl-3-thio-1,2,4-triazole und N-(Cycloalkyl)-5-heterocyclyl-3-thio-1,2,4-triazole der allgemeinen Formel (II) oder deren Salze, 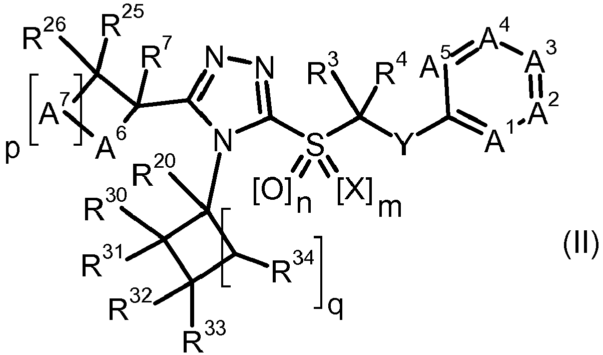 worin
R³ und R⁴ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³, CONR²¹R²², Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₈)-Alkoxy-(C₁-C₈)-haloalkyl, (C₁-C₈)-Haloalkoxy-(C₁-C₈)-haloalkyl, (C₁-C₈)-Haloalkoxy-(C₁-C₈)-alkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkylcarbonyl-(C₁-C₈)-alkyl, COOR²³, CONR²¹R²², COR²³, -C=NOR²³, R²¹R²²N-(C₁-C₈)-alkyl, R²³OOC-(C₁-C₈)-alkyl, Aryl-(C₁-C₈)-alkinyl, Heteroaryl-(C₁-C₈)-alkinyl, Heterocyclyl-(C₁-C₈)-alkinyl, Tris-[(C₁-C₈)-alkyl]silyl-(C₂-C₈)-alkinyl, Bis-[(C₁-C₈)-alkyl](aryl)silyl-(C₂-C₈)-alkinyl, Bis-aryl[(C₁-C₈)-alkyl]silyl-(C₂-C₈)-alkinyl, (C₃-C₈)-Cycloalkyl-(C₂-C₈)-alkinyl, Aryl-(C₂-C₈)-alkenyl, Heteroaryl-(C₂-C₈)-alkenyl, Heterocyclyl-(C₂-C₈)-alkenyl, (C₃-C₈)-Cycloalkyl-(C₂-C₈)-alkenyl, (C₁-C₈)-Alkoxy-(C₁-C₈)-alkoxy-(C₁-C₈)-alkyl, (C₁-C₈)-Alkylaminosulfonylamino, (C₃-C₈)-Cycloalkylaminosulfonylamino, Diazo, Aryldiazo, Tris-[(C₁-C₈)-alkyl]silyl, Bis-[(C₁-C₈)-alkyl](aryl)silyl, Bis-aryl[(C₁-C₈)-alkyl]silyl steht,
X für O (Sauerstoff) oder NR⁶ steht,
n, m unabhängig voneinander für 0 oder 1 stehen
v für 0, 1 oder 2 steht,
p, q unabhängig voneinander für 0, 1, 2, 3 oder 4 stehen, mit der Maßgabe, dass p und q nicht gleichzeitig für 0 stehen, wenn A⁶ für die die Gruppierung CR²⁷R²⁸ steht
R⁶ für Wasserstoff, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl steht,
R⁷ und R²⁰ unabhängig voneinander für Wasserstoff, Halogen, Cyano, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-Alkyl, Cyano-(C₁-C₈)-Alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 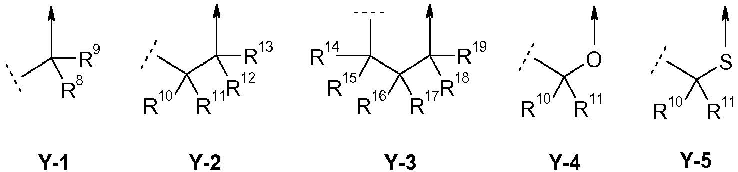 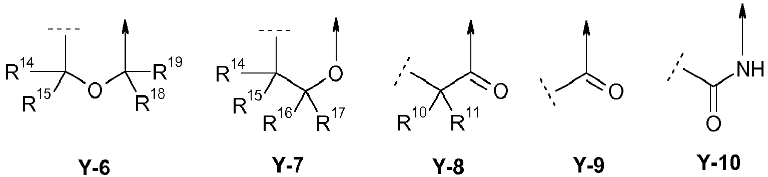 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³ stehen,
R²¹ und R²² gleich oder verschieden sind und unabhängig voneinander für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C)-Alkoxy-(C₁-C)-alkyl, (C₁-C₈)-Haloalkoxy-(C₁-C₈)-alkyl, (C₁-C)-Alkylthio-(C₁-C₈)-alkyl, (C₁-C₈)-Haloalkylthio-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, COR²³, SO₂R²⁴, (C₁-C₈)-Alkyl-HNO₂S-, (C₃-C₈)-Cycloalkyl-HNO₂S-, Heterocyclyl, (C₁-C₈)-Alkoxycarbonyl-(C₁-C₈)-alkyl, (C₁-C₈)-Alkoxycarbonyl, Aryl-(C₁-C₈)-Alkoxycarbonyl-(C₁-C₈)-alkyl, Aryl-(C₁-C₈)-Alkoxycarbonyl, Hydroxycarbonyl-(C₁-C₈)-alkyl, Heteroaryl-(C₁-C₈)-Alkoxycarbonyl, (C₂-C₈)-Alkenyloxycarbonyl, (C₂-C₈)-Alkinyloxycarbonyl, Heterocyclyl-(C₁-C₈)-alkyl stehen
R²³ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, Aryl-(C₁-C₈)-Alkoxycarbonyl-(C₁-C₈)-alkyl, Hydroxycarbonyl-(C₁-C₈)-alkyl, R²¹R²²NOC-(C₁-C₈)-alkyl, Heterocyclyl, Heterocyclyl-(C₁-C₈)-alkyl, (C₁-C₈)-Alkylcarbonyl-(C₁-C₈)-alkyl, (C₃-C₈)-Cycloalkylcarbonyl-(C₁-C₈)-alkyl, Arylcarbonyl-(C₁-C₈)-alkyl, Heteroarylcarbonyl-(C₁-C₈)-alkyl, Heterocyclylcarbonyl-(C₁-C₈)-alkyl steht,
R²⁴ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, Heterocyclyl-(C₁-C₈)-alkyl, (C₃-C₈)-Cycloalkyl-(C₁-C₈)-alkyl, (C₄-C₁₀)-Cycloalkenyl-(C₁-C₈)-alkyl, NR²¹R²² steht,
R²⁵, R²⁶, R²⁷ und R²⁸ unabhängig voneinander für Wasserstoff, Cyano, Halogen, Nitro, Hydroxy, (C₁-C₈)-Alkyl, Cyano-(C₁-C₈)-Alkyl, Nitro-(C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy, (C₁-C₈)-Haloalkoxy, (C₁-C₈)-Alkylthio, (C₁-C₈)-Haloalkylthio, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₃-C₈)-Cycloalkyloxy-(C₁-C₈)-alkyl, COR²³, COOR²³, CONR²¹R²², SO₂R²⁴, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl, (C₁-C₈)-Alkylcarbonyl-(C₁-C₈)-alkyl, Arylcarbonyl-(C₁-C₈)-alkyl, Heteroarylcarbonyl-(C₁-C₈)-alkyl stehen,
R²⁹ für (C₁-C₈)-Alkyl, Cyano-(C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, (C₃-C₁₀)-Halocycloalkyl, (C₁-C₈)-Alkoxy, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, COR²³, COOR²³, CONR²¹R²², SO₂R²⁴, R²³OOC-(C₁-C₈)-alkyl, R²³OC-(C₁-C₈)-alkyl steht und
R³⁰, R³¹, R³², R³³ und R³⁴ unabhängig voneinander für Wasserstoff, Cyano, Halogen, Hydroxy, (C₁-C₈)-Alkyl, (C₂-C₈)-Alkenyl, (C₂-C₈)-Alkinyl, (C₁-C₁₀)-Haloalkyl, (C₁-C₈)-Alkoxy, (C₁-C₈)-Haloalkoxy, (C₁-C₈)-Alkylthio, (C₁-C₈)-Haloalkylthio, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COR²³, COOR²³, CONR²¹R²² stehen.

Bevorzugt sind substituierte N-(Cycloalkyl)-5-Cycloalkyl-3-thio-1,2,4-triazole und N-(Cycloalkyl)-5-heterocyclyl-3-thio-1,2,4-triazole der allgemeinen Formel (II) oder deren Salze, worin
R³ und R⁴ unabhängig voneinander für Wasserstoff, (C₁-C₇)-Alkyl, (C₂-C₇)-Alkenyl, (C₂-C₇)-Alkinyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, COOR²³, CONR²¹R²², Hydroxycarbonyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, (C₂-C₇)-Alkinyloxycarbonyl-(C₁-C₇)-alkyl, Aryl-(C₁-C₇)-alkoxycarbonyl-(C₁-C₇)-alkyl, Heteroaryl-(C₁-C₇)-alkoxycarbonyl-(C₁-C₇)-alkyl, Heterocyclyl-(C₁-C₇)-alkoxycarbonyl-(C₁-C₇)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₇)-Alkyl, (C₂-C₇)-Alkenyl, (C₂-C₇)-Alkinyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₇)-Alkoxy-(C₁-C₇)-haloalkyl, (C₁-C₇)-Haloalkoxy-(C₁-C₇)-haloalkyl, (C₁-C₇)-Haloalkoxy-(C₁-C₇)-alkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₁₀)-Cycloalkenyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkylthio-(C₁-C₇)-alkyl, (C₁-C₇)-Alkylcarbonyl-(C₁-C₇)-alkyl, COOR²³, CONR²¹R²², COR²³, -C=NOR²³, R²¹R²²N-(C₁-C₇)-alkyl, R²³OOC-(C₁-C₇)-alkyl, Aryl-(C₁-C₇)-alkinyl, Heteroaryl-(C₁-C₇)-alkinyl, Heterocyclyl-(C₁-C₇)-alkinyl, Tris-[(C₁-C₇)-alkyl]silyl-(C₂-C₇)-alkinyl, Bis-[(C₁-C₇)-alkyl](aryl)silyl-(C₂-C₇)-alkinyl, Bis-aryl[(C₁-C₇)-alkyl]silyl-(C₂-C₇)-alkinyl, (C₃-C₇)-Cycloalkyl-(C₂-C₇)-alkinyl, Aryl-(C₂-C₇)-alkenyl, Heteroaryl-(C₂-C₇)-alkenyl, Heterocyclyl-(C₂-C₇)-alkenyl, (C₃-C₇)-Cycloalkyl-(C₂-C₇)-alkenyl, (C₁-C₇)-Alkoxy-(C₁-C₇)-alkoxy-(C₁-C₇)-alkyl, (C₁-C₇)-Alkylaminosulfonylamino, (C₃-C₇)-Cycloalkylaminosulfonylamino, Diazo, Aryldiazo, Tris-[(C₁-C₇)-alkyl]silyl, Bis-[(C₁-C₇)-alkyl](aryl)silyl, Bis-aryl[(C₁-C₇)-alkyl]silyl steht,
X für O (Sauerstoff) oder NR⁶ steht,
n, m unabhängig voneinander für 0 oder 1 stehen,
v für 0, 1 oder 2 steht,
p, q unabhängig voneinander für 0, 1, 2, 3 oder 4 stehen, mit der Maßgabe, dass p und q nicht gleichzeitig für 0 stehen, wenn A⁶ für die die Gruppierung CR²⁷R²⁸ steht,
R⁶ für Wasserstoff, (C₁-C₇)-Alkyl, (C₂-C₇)-Alkenyl, (C₂-C₇)-Alkinyl, (C₁-C₁₀)-Haloalkyl, (C₃-C₁₀)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl steht,
R⁷ und R²⁰ unabhängig voneinander für Wasserstoff, Halogen, Cyano, (C₁-C₇)-Alkyl, (C₂-C₇)-Alkenyl, (C₂-C₇)-Alkinyl, (C₁-C₁₀)-Haloalkyl, (C₃-C₁₀)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-Alkyl, Cyano-(C₁-C₇)-Alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 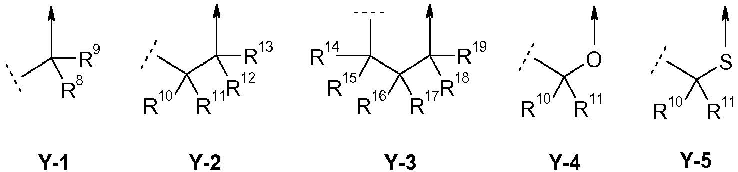 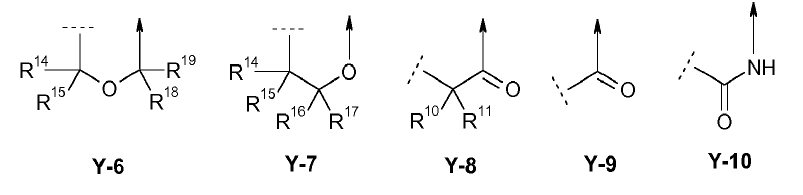 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₇)-Alkyl, (C₂-C₇)-Alkenyl, (C₂-C₇)-Alkinyl, (C₁-C₁₀)-Haloalkyl, (C₂-C₇)-Haloalkenyl, (C₂-C₇)-Haloalkinyl, (C₃-C₁₀)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, COOR²³ stehen,
R²¹ und R²² gleich oder verschieden sind und unabhängig voneinander für Wasserstoff, (C₁-C₇)-Alkyl, (C₂-C₇)-Alkenyl, (C₂-C₇)-Alkinyl, (C₁-C₇)-Cyanoalkyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₇)-Alkoxy-(C₁-C₇)-alkyl, (C₁-C₇)-Haloalkoxy-(C₁-C₇)-alkyl, (C₁-C₇)-Alkylthio-(C₁-C₇)-alkyl, (C₁-C₇)-Haloalkylthio-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₁₀)-Cycloalkenyl-(C₁-C₇)-alkyl, COR²³, SO₂R²⁴, (C₁-C₇)-Alkyl-HNO₂S-, (C₃-C₇)-Cycloalkyl-HNO₂S-, Heterocyclyl, (C₁-C₇)-Alkoxycarbonyl-(C₁-C₇)-alkyl, (C₁-C₇)-Alkoxycarbonyl, Aryl-(C₁-C₇)-Alkoxycarbonyl-(C₁-C₇)-alkyl, Aryl-(C₁-C₇)-Alkoxycarbonyl, Hydroxycarbonyl-(C₁-C₇)-alkyl, Heteroaryl-(C₁-C₇)-Alkoxycarbonyl, (C₂-C₇)-Alkenyloxycarbonyl, (C₂-C₇)-Alkinyloxycarbonyl, Heterocyclyl-(C₁-C₇)-alkyl stehen
R²³ für Wasserstoff, (C₁-C₇)-Alkyl, (C₂-C₇)-Alkenyl, (C₂-C₇)-Alkinyl, (C₁-C₇)-Cyanoalkyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₇)-Alkoxy-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, (C₄-C₁₀)-Cycloalkenyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, Aryl-(C₁-C₇)-Alkoxycarbonyl-(C₁-C₇)-alkyl, Hydroxycarbonyl-(C₁-C₇)-alkyl, R²¹R²²NOC-(C₁-C₇)-alkyl, Heterocyclyl, Heterocyclyl-(C₁-C₇)-alkyl, (C₁-C₇)-Alkylcarbonyl-(C₁-C₇)-alkyl, (C₃-C₇)-Cycloalkylcarbonyl-(C₁-C₇)-alkyl, Arylcarbonyl-(C₁-C₇)-alkyl, Heteroarylcarbonyl-(C₁-C₇)-alkyl, Heterocyclylcarbonyl-(C₁-C₇)-alkyl steht,
R²⁴ für Wasserstoff, (C₁-C₇)-Alkyl, (C₂-C₇)-Alkenyl, (C₂-C₇)-Alkinyl, (C₁-C₇)-Cyanoalkyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₇)-Alkoxy-(C₁-C₇)-alkyl, (C₁-C₇)-Alkoxy-(C₁-C₇)-haloalkyl, Aryl, Aryl-(C₁-C₇)-alkyl, Heteroaryl, Heteroaryl-(C₁-C₇)-alkyl, Heterocyclyl-(C₁-C₇)-alkyl, (C₃-C₇)-Cycloalkyl-(C₁-C₇)-alkyl, (C₄-C₁₀)-Cycloalkenyl-(C₁-C₇)-alkyl, NR²¹R²² steht,
R²⁵, R²⁶, R²⁷ und R²⁸ unabhängig voneinander für Wasserstoff, Cyano, Halogen, Nitro, Hydroxy, (C₁-C₇)-Alkyl, Cyano-(C₁-C₇)-Alkyl, Nitro-(C₁-C₇)-Alkyl, (C₂-C₇)-Alkenyl, (C₂-C₇)-Alkinyl, (C₁-C₁₀)-Haloalkyl, (C₂-C₇)-Haloalkenyl, (C₂-C₇)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₇)-Alkoxy, (C₁-C₇)-Haloalkoxy, (C₁-C₇)-Alkylthio, (C₁-C₇)-Haloalkylthio, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, R²¹R²²N-(C₁-C₇)-alkyl, (C₁-C₇)-Alkoxy-(C₁-C₇)-alkoxy-(C₁-C₇)-alkyl, (C₃-C₇)-Cycloalkyloxy-(C₁-C₇)-alkyl, COR²³, COOR²³, CONR²¹R²², SO₂R²⁴, Hydroxycarbonyl-(C₁-C₇)-alkyl, (C₁-C₇)-Alkoxycarbonyl-(C₁-C₇)-alkyl, (C₂-C₇)-Alkenyloxycarbonyl-(C₁-C₇)-alkyl, (C₂-C₇)-Alkinyloxycarbonyl-(C₁-C₇)-alkyl, Aryl-(C₁₋C₇)-alkoxycarbonyl-(C₁-C₇)-alkyl, Heteroaryl-(C₁-C₇)-alkoxycarbonyl-(C₁-C₇)-alkyl, Heterocyclyl-(C₁-C₇)-alkoxycarbonyl-(C₁-C₇)-alkyl, (C₁-C₇)-Alkylcarbonyl-(C₁-C₇)-alkyl, Arylcarbonyl-(C₁-C₇)-alkyl, Heteroarylcarbonyl-(C₁-C₇)-alkyl steht,
R²⁹ für (C₁-C₇)-Alkyl, Cyano-(C₁-C₇)-Alkyl, (C₂-C₇)-Alkenyl, (C₂-C₇)-Alkinyl, (C₁-C₁₀)-Haloalkyl, (C₃-C₁₀)-Cycloalkyl, (C₃-C₁₀)-Halocycloalkyl, (C₁-C₇)-Alkoxy, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, R²¹R²²N-(C₁-C₇)-alkyl, (C₁-C₇)-Alkoxy-(C₁-C₇)-alkoxy-(C₁-C₇)-alkyl, COR²³, COOR²³, CONR²¹R²², SO₂R²⁴, R²³OOC-(C₁-C₇)-alkyl, R²³OC-(C₁-C₇)-alkyl steht und
R³⁰, R³¹, R³², R³³ und R³⁴ unabhängig voneinander für Wasserstoff, Cyano, Halogen, Hydroxy, (C₁-C₇)-Alkyl, (C₂-C₇)-Alkenyl, (C₂-C₇)-Alkinyl, (C₁-C₁₀)-Haloalkyl, (C₁-C₇)-Alkoxy, (C₁-C₇)-Haloalkoxy, (C₁-C₇)-Alkylthio, (C₁-C₇)-Haloalkylthio, (C₂-C₇)-Haloalkenyl, (C₂-C₇)-Haloalkinyl, (C₃-C₁₀)-Cycloalkyl, Aryl, Aryl-(C₁-C₇)-alkyl, Heteroaryl, Heteroaryl-(C₁-C₇)-alkyl, (C₃-C₇)-Cycloalkyl-(C₁-C₇)-alkyl, Heterocyclyl, Heterocyclyl-(C₁-C₇)-alkyl, (C₁-C₇)-Alkoxy-(C₁-C₇)-alkyl, (C₁-C₇)-Alkylthio-(C₁-C₇)-alkyl, (C₁-C₇)-Haloalkoxy-(C₁-C₇)-alkyl, (C₁-C₇)-Haloalkylthio-(C₁-C₇)-alkyl, COR²³, COOR²³, CONR²¹R²² stehen.

Besonders bevorzugt sind substituierte N-(Cycloalkyl)-5-Cycloalkyl-3-thio-1,2,4-triazole und N-(Cycloalkyl)-5-heterocyclyl-3-thio-1,2,4-triazole der allgemeinen Formel (II) oder deren Salze, worin
R³ und R⁴ unabhängig voneinander für Wasserstoff, (C₁-C₆)-Alkyl, (C₂-C₆)-Alkenyl, (C₂-C₆)-Alkinyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³, CONR²¹R²², Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₆)-Alkyl, (C₂-C₆)-Alkenyl, (C₂-C₆)-Alkinyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₆)-Alkoxy-(C₁-C₆)-haloalkyl, (C₁-C₆)-Haloalkoxy-(C₁-C₆)-haloalkyl, (C₁-C₆)-Haloalkoxy-(C₁-C₆)-alkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₁₀)-Cycloalkenyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Tris-[(C₁-C₆)-alkyl]silyl-(C₂-C₆)-alkinyl, Bis-[(C₁-C₆)-alkyl](aryl)silyl-(C₂-C₆)-alkinyl, Bis-aryl[(C₁-C₆)-alkyl]silyl-(C₂-C₆)-alkinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkoxy-(C₁-C₆)-alkoxy-(C₁-C₆)-alkyl, (C₁-C₆)-Alkylaminosulfonylamino, (C₃-C₆)-Cycloalkylaminosulfonylamino, Diazo, Aryldiazo, Tris-[(C₁-C₆)-alkyl]silyl, Bis-[(C₁-C₆)-alkyl](aryl)silyl, Bis-aryl[(C₁-C₆)-alkyl]silyl steht,
X für O (Sauerstoff) oder NR⁶ steht,
n, m unabhängig voneinander für 0 oder 1 stehen,
v für 0, 1 oder 2 steht,
p, q unabhängig voneinander für 0, 1, 2, 3 oder 4 stehen, mit der Maßgabe, dass p und q nicht gleichzeitig für 0 stehen, wenn A⁶ für die die Gruppierung CR²⁷R²⁸ steht,
R⁶ für Wasserstoff, (C₁-C₆)-Alkyl, (C₂-C₆)-Alkenyl, (C₂-C₆)-Alkinyl, (C₁-C₁₀)-Haloalkyl, (C₃-C₁₀)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl steht,
R⁷ und R²⁰ unabhängig voneinander für Wasserstoff, Halogen, Cyano, (C₁-C₆)-Alkyl, (C₂-C₆)-Alkenyl, (C₂-C₆)-Alkinyl, (C₁-C₁₀)-Haloalkyl, (C₃-C₁₀)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-Alkyl, Cyano-(C₁-C₆)-Alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 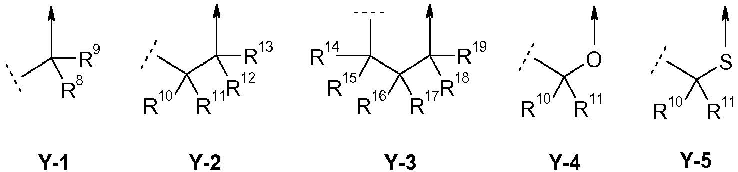 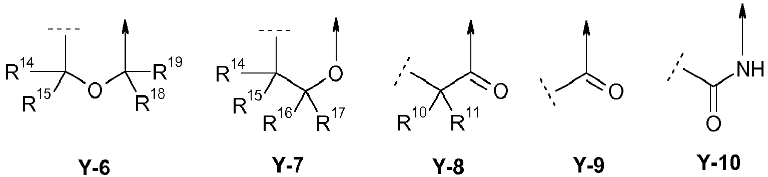 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₆)-Alkyl, (C₂-C₆)-Alkenyl, (C₂-C₆)-Alkinyl, (C₁-C₁₀)-Haloalkyl, (C₂-C₆)-Haloalkenyl, (C₂-C₆)-Haloalkinyl, (C₃-C₁₀)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³ stehen,
R²¹ und R²² gleich oder verschieden sind und unabhängig voneinander für Wasserstoff, (C₁-C₆)-Alkyl, (C₂-C₆)-Alkenyl, (C₂-C₆)-Alkinyl, (C₁-C₆)-Cyanoalkyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₆)-Alkoxy-(C₁-C₆)-alkyl, (C₁-C₆)-Haloalkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₁₀)-Cycloalkenyl-(C₁-C₆)-alkyl, COR²³, SO₂R²⁴, (C₁-C₆)-Alkyl-HNO₂S-, (C₃-C₆)-Cycloalkyl-HNO₂S-, Heterocyclyl, (C₁-C₆)-Alkoxycarbonyl-(C₁-C₆)-alkyl, (C₁-C₆)-Alkoxycarbonyl, Aryl-(C₁-C₆)-Alkoxycarbonyl-(C₁-C₆)-alkyl, Aryl-(C₁-C₆)-Alkoxycarbonyl, Hydroxycarbonyl-(C₁-C₆)-alkyl, Heteroaryl-(C₁-C₆)-Alkoxycarbonyl, (C₂-C₆)-Alkenyloxycarbonyl, (C₂-C₆)-Alkinyloxycarbonyl, Heterocyclyl-(C₁-C₆)-alkyl stehen,
R²³ für Wasserstoff, (C₁-C₆)-Alkyl, (C₂-C₆)-Alkenyl, (C₂-C₆)-Alkinyl, (C₁-C₆)-Cyanoalkyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₁₀)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, R²¹R²²NOC-(C₁-C₆)-alkyl, Heterocyclyl, Heterocyclyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl steht,
R²⁴ für Wasserstoff, (C₁-C₆)-Alkyl, (C₂-C₆)-Alkenyl, (C₂-C₆)-Alkinyl, (C₁-C₆)-Cyanoalkyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, Heterocyclyl-(C₁-C₆)-alkyl, (C₃-C₆)-Cycloalkyl-(C₁-C₆)-alkyl, (C₄-C₁₀)-Cycloalkenyl-(C₁-C₆)-alkyl, NR²¹R²² steht,
R²⁵, R²⁶, R²⁷ und R²⁸ unabhängig voneinander für Wasserstoff, Cyano, Halogen, Nitro, Hydroxy, (C₁-C₆)-Alkyl, Cyano-(C₁-C₆)-Alkyl, Nitro-(C₁-C₆)-Alkyl, (C₂-C₆)-Alkenyl, (C₂-C₆)-Alkinyl, (C₁-C₁₀)-Haloalkyl, (C₂-C₆)-Haloalkenyl, (C₂-C₆)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₆)-Alkoxy, (C₁-C₆)-Haloalkoxy, (C₁-C₆)-Alkylthio, (C₁-C₆)-Haloalkylthio, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₃-C₆)-Cycloalkyloxy-(C₁-C₆)-alkyl, COR²³, COOR²³, CONR²¹R²², SO₂R²⁴, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, Arylcarbonyl-(C₁-C₆)-alkyl, Heteroarylcarbonyl-(C₁-C₆)-alkyl steht,
R²⁹ für (C₁-C₆)-Alkyl, Cyano-(C₁-C₆)-Alkyl, (C₂-C₆)-Alkenyl, (C₂-C₆)-Alkinyl, (C₁-C₁₀)-Haloalkyl, (C₃-C₁₀)-Cycloalkyl, (C₃-C₁₀)-Halocycloalkyl, (C₁-C₆)-Alkoxy, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, COR²³, COOR²³, CONR²¹R²², SO₂R²⁴, R²³OOC-(C₁-C₆)-alkyl, R²³OC-(C₁-C₆)-alkyl steht und
R³⁰, R³¹, R³², R³³ und R³⁴ unabhängig voneinander für Wasserstoff, Cyano, Halogen, Hydroxy, (C₁-C₆)-Alkyl, (C₂-C₆)-Alkenyl, (C₂-C₆)-Alkinyl, (C₁-C₁₀)-Haloalkyl, (C₁-C₆)-Alkoxy, (C₁-C₆)-Haloalkoxy, (C₁-C₆)-Alkylthio, (C₁-C₆)-Haloalkylthio, (C₂-C₆)-Haloalkenyl, (C₂-C₆)-Haloalkinyl, (C₃-C₁₀)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COR²³, COOR²³, CONR²¹R²² stehen.

Ganz besonders bevorzugt sind substituierte N-(Cycloalkyl)-5-Cycloalkyl-3-thio-1,2,4-triazole und N-(Cycloalkyl)-5-heterocyclyl-3-thio-1,2,4-triazole der allgemeinen Formel (II) oder deren Salze, worin
R³ und R⁴ unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Cycloalkyl, (C₃-C₆)-Halocycloalkyl, (C₄-C₆)-Cycloalkenyl, (C₄-C₆)-Halocycloalkenyl, Aryl, Aryl-(C₁-C₅)-alkyl, Heteroaryl, Heteroaryl-(C₁-C₅)-alkyl, Heterocyclyl, Heterocyclyl-(C₁-C₅)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³, CONR²¹R²², Hydroxycarbonyl-(C₁-C₅)-alkyl, (C₁-C₅)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₅)-alkyl, Aryl-(C₁-C₅)-alkoxycarbonyl-(C₁-C₅)-alkyl, Heteroaryl-(C₁-C₅)-alkoxycarbonyl-(C₁-C₅)-alkyl, Heterocyclyl-(C₁-C₅)-alkoxycarbonyl-(C₁-C₅)-alkyl stehen,
R⁵ für Wasserstoff, Fluor, Chlor, Brom, Iod, Cyano, Nitro, NR²¹R²², OR²³, S(O)ᵥR²⁴, Thiocyanato, Isothiocyanato, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, Pentafluorthio, Aryl-(C₁-C₆)-alkyl, Heteroaryl-(C₁-C₆)-alkyl, Heterocyclyl-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Trimethylsilylethinyl, Triethylsilylethinyl, Tris-(iso-propyl)silylethinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkylaminosulfonylamino, (C₃-C₆)-Cycloalkylaminosulfonylamino, Diazo, Aryldiazo, Trimethylsilyl, Triethylsilyl, Tris-(iso-propyl)silyl, Diphenyl(methyl)silyl, Dimethyl(phenyl)silyl, Dimethyl(tert.-butyl)silyl, Diphenyl(tert.-butyl)silyl steht,
X für O (Sauerstoff) oder NR⁶ steht,
n, m unabhängig voneinander für 0 oder 1 stehen,
v für 0, 1 oder 2 steht,
p, q unabhängig voneinander für 0, 1, 2, 3 oder 4 stehen, mit der Maßgabe, dass p und q nicht gleichzeitig für 0 stehen, wenn A⁶ für die die Gruppierung CR²⁷R²⁸ steht,
R⁶ für Wasserstoff, Methyl, Ethyl, n-Propyl, iso-Propyl, n-Butyl, sec-Butyl, tert-Butyl, n-Pentyl, Cyclopropyl, Cyclobutyl, Cyclopentyl, Cyclohexyl, Cyclopropylmethyl, Cyclobutylmethyl, Cyclopentylmethyl, 2,2-Difluorethyl, 2,2,2-Trifluorethyl, 3,3,3-Trifluor-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl steht,
R⁷ und R²⁰ unabhängig voneinander für Wasserstoff, Fluor, Chlor, Brom, Iod, Cyano, Methyl, Ethyl, n-Propyl, iso-Propyl, n-Butyl, sec-Butyl, tert.-Butyl, n-Pentyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, 1-Methylcycloprop-1-yl, 2-Methylcycloprop-1-yl, Cyclopropylmethyl, Cyclobutylmethyl, Cyclopentylmethyl, Cyclohexylmethyl, Cyanomethyl, Cyanoethyl, Cyano-n-propyl, Methoxymethyl, Methoxyethyl, Ethoxymethyl, Ethoxyethyl, Methoxy-n-Propyl, Ethoxy-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 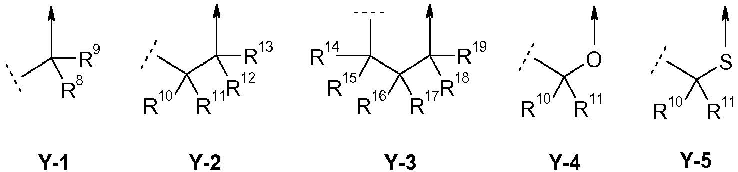 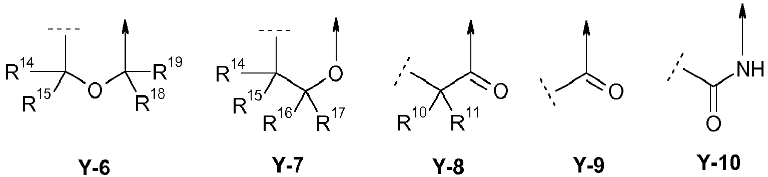 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, Fluor, Methyl, Ethyl, n-Propyl, iso-Propyl, n-Butyl, iso-Butyl, tert.-Butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, Cyclopropylmethyl, Cyclobutylmethyl, Cyclopentylmethyl, Cyclohexylmethyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³ stehen,
R²¹ und R²² gleich oder verschieden sind und unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, (C₁-C₆)-Haloalkyl, (C₂-C₆)-Haloalkenyl, (C₂-C₆)-Haloalkinyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 3-Methoxycyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, gegebenenfalls substituiertes Phenyl, Aryl-(C₁-C₅)-alkyl, Heteroaryl, Heteroaryl-(C₁-C₅)-alkyl, (C₄-C₆)-Cycloalkenyl-(C₁-C₅)-alkyl, COR²³, SO₂R²⁴, -(C₁-C₆)-Alkyl-HNO₂S-, (C₃-C₆)-Cycloalkyl-HNO₂S-, Heterocyclyl, (C₁-C₅)-Alkoxycarbonyl-(C₁-C₅)-alkyl, (C₁-C₅)-Alkoxycarbonyl, Aryl-(C₁-C₅)-Alkoxycarbonyl-(C₁-C₅)-alkyl, Aryl-(C₁-C₅)-Alkoxycarbonyl, Heteroaryl-(C₁-C₅)-Alkoxycarbonyl, (C₂-C₆)-Alkenyloxycarbonyl, (C₂-C₆)-Alkinyloxycarbonyl, Heterocyclyl-(C₁-C₅)-alkyl stehen,
R²³ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl,, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, (C₄-C₆)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, Heterocyclyl, Heterocyclyl-(C₁-C₆)-alkyl steht,
R²⁴ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, Heterocyclyl-(C₁-C₆)-alkyl, (C₄-C₆)-Cycloalkenyl-(C₁-C₆)-alkyl, NR²¹R²² steht,
R²⁵, R²⁶, R²⁷ und R²⁸ unabhängig voneinander für Wasserstoff, Cyano, Fluor, Chlor, Brom, Iod, Nitro, Hydroxy, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, Cyanomethyl, Cyanoethyl, Cyano-n-propyl, Nitromethyl, Nitroethyl, (C₂-C₅)-Haloalkenyl, (C₂-C₅)-Haloalkinyl, (C₃-C₆)-Halocycloalkyl, (C₄-C₈)-Halocycloalkenyl, Methoxy, Ethoxy, iso-Propyloxy, n-Propyloxy, n-Butyloxy, sec-Butyloxy, tert-Butyloxy, n-Pentyloxy, neo-Pentyloxy, Trifluormethyloxy, Difluormethyloxy, 2,2-Difluorethyloxy, 2,2,2-Trifluorethyloxy, 3,3,3-Trifluor-n-propyloxy, Methylthio, Ethylthio, n-Propylthio, iso-Propylthio, Trifluormethylthio, Pentafluorethylthio, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₃-C₆)-Cycloalkyloxy-(C₁-C₅)-alkyl, COR²³, COOR²³, CONR²¹R²², SO₂R²⁴, Hydroxycarbonyl-(C₁-C₅)-alkyl, (C₁-C₆)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₅)-alkyl, Heterocyclyl-(C₁-C₅)-alkoxycarbonyl-(C₁-C₅)-alkyl, (C₁-C₆)-Alkylcarbonyl-(C₁-C₅)-alkyl, Arylcarbonyl-(C₁-C₅)-alkyl, Heteroarylcarbonyl-(C₁-C₅)-alkyl stehen,
R²⁹ für Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, Cyanomethyl, Cyanoethyl, Cyano-n-propyl, Allyl, Propargyl, 2,2-Difluorethyl, 2,2,2-Trifluorethyl, Cyclopropyl, Cyclobutyl, Cyclopentyl, Cyclohexyl, (C₃-C₁₀)-Halocycloalkyl, Methoxy, Ethoxy, n-Propyloxy, iso-Propyloxy, n-Butyloxy, gegebenenfalls substituiertes Phenyl, Aryl-(C₁-C₆)-alkyl, Heteroaryl, Heteroaryl-(C₁-C₆)-alkyl, Cyclopropylmethyl, Cyclobutylmethyl, Cyclopentylmethyl, Cyclohexylmethyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxy-n-butyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, R²¹R²²N-(C₁-C₆)-alkyl, (C₁-C₆)-Alkoxy-(C₁-C₆)-alkoxy-(C₁-C₆)-alkyl, COR²³, COOR²³, CONR²¹R²², SO₂R²⁴, R²³OOC-(C₁-C₆)-alkyl, R²³OC-(C₁-C₆)-alkyl steht und
R³⁰, R³¹, R³², R³³ und R³⁴ unabhängig voneinander für Wasserstoff, Cyano, Fluor, Chlor, Brom, Iod, Hydroxy, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxy, Ethoxy, iso-Propyloxy, n-Propyloxy, n-Butyloxy, sec-Butyloxy, tert-Butyloxy, n-Pentyloxy, neo-Pentyloxy, Trifluormethyloxy, Difluormethyloxy, 2,2-Difluorethyloxy, 2,2,2-Trifluorethyloxy, 3,3,3-Trifluor-n-propyloxy, Methylthio, Ethylthio, n-Propylthio, iso-Propylthio, Trifluormethylthio, Pentafluorethylthio, Cyclopropyl, Cyclobutyl, Cyclopentyl, Cyclohexyl, gegebenenfalls substituiertes Phenyl, Aryl-(C₁-C₆)-alkyl, Heteroaryl, Heteroaryl-(C₁-C₆)-alkyl, Cyclopropylmethyl, Cyclobutylmethyl, Cyclopentylmethyl, Cyclohexylmethyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COR²³, COOR²³, CONR²¹R²² stehen.

Weiterhin sind einige spezifische substituierte Thio-1,2,4-triazole der allgemeinen Formel (I) ebenfalls noch nicht im Stand der Technik bekannt.

Somit gelten als weiterer Teil der Erfindung die folgenden Thio-1,2,4-triazole der allgemeinen Formel (I) oder deren Salze:
3-(4-Chlorphenyl)-4-cyclopropyl-5-[(4-fluorbenzyl)sulfanyl]-4H-1,2,4-triazol,
3,4-Dicyclopropyl-5-[(2,3-dichlorbenzyl)sulfanyl]-4H-1,2,4-triazol,
N-(2-Chlorphenyl)-2-{[5-(4-chlorphenyl)-4-cyclopropyl-4H-1,2,4-triazol-3-yl]sulfanyl}acetamid,
3,4-Dichlor-2-({[5-(4-chlorphenyl)-4-cyclopropyl-4H-1,2,4-triazol-3-yl]sulfanyl}methyl)pyridin,
2,6-Dichlor-3-({[5-(4-chlorphenyl)-4-cyclopropyl-4H-1,2,4-triazol-3-yl]sulfanyl}methyl)pyridin,
3,4-Dichlor-2-({[5-(4-chlorphenyl)-4-methyl-4H-1,2,4-triazol-3-yl]sulfanyl}methyl)pyridin,
2,6-Dichlor-3-({[5-(4-chlorphenyl)-4-methyl-4H-1,2,4-triazol-3-yl]sulfanyl}methyl)pyridin,
3,4-Dichlor-2-{[(4,5-dicyclopropyl-4H-1,2,4-triazol-3-yl)sulfanyl]methyl}pyridin,
2,6-Dichlor-3-{[(4,5-dicyclopropyl-4H-1,2,4-triazol-3-yl)sulfanyl]methyl}pyridin,
3,4-Dichlor-2-{[(5-cyclopropyl-4-methyl-4H-1,2,4-triazol-3-yl)sulfanyl]methyl}pyridin,
2,6-Dichlor-3-{[(5-cyclopropyl-4-methyl-4H-1,2,4-triazol-3-yl)sulfanyl]methyl}pyridin.

Die oben aufgeführten allgemeinen oder in Vorzugsbereichen aufgeführten Restedefinitionen gelten sowohl für die Endprodukte der allgemeinen Formeln (I) und (II) als auch entsprechend für die jeweils zur Herstellung benötigten Ausgangs- oder Zwischenprodukte. Diese Restedefinitionen können untereinander, also auch zwischen den angegebenen bevorzugten Bereichen beliebig kombiniert werden.

Im Hinblick auf die erfindungsgemäßen Verbindungen werden die vorstehend und weiter unten verwendeten Bezeichnungen erläutert. Diese sind dem Fachmann geläufig und haben insbesondere die im Folgenden erläuterten Bedeutungen:
Erfindungsgemäß steht "Arylsulfonyl" für gegebenenfalls substituiertes Phenylsulfonyl oder gegebenenfalls substituiertes polycyclisches Arylsulfonyl, hier insbesondere gegebenenfalls substituiertes Naphthyl-sulfonyl, beispielsweise substituiert durch Fluor, Chlor, Brom, Iod, Cyano, Nitro, Alkyl-, Haloalkyl-, Haloalkoxy-, Amino-, Alkylamino-, Alkylcarbonylamino-, Dialkylamino- oder Alkoxy-gruppen.

Erfindungsgemäß steht "Cycloalkylsulfonyl" - in Alleinstellung oder als Bestandteil einer chemischen Gruppe - für gegebenenfalls substituiertes Cycloalkylsulfonyl, vorzugsweise mit 3 bis 6 Kohlenstoffatomen wie beispielsweise Cyclopropylsulfonyl, Cyclobutylsulfonyl, Cyclopentylsulfonyl oder Cyclohexylsulfonyl.

Erfindungsgemäß steht "Alkylsulfonyl" - in Alleinstellung oder als Bestandteil einer chemischen Gruppe - für geradkettiges oder verzweigtes Alkylsulfonyl, vorzugsweise mit 1 bis 8, oder mit 1 bis 6 Kohlenstoffatomen, z.B. (aber nicht beschränkt auf) (C₁-C₆)-Alkylsulfonyl wie Methylsulfonyl, Ethylsulfonyl, Propylsulfonyl, 1-Methylethylsulfonyl, Butylsulfonyl, 1-Methylpropylsulfonyl, 2-Methylpropylsulfonyl, 1,1-Dimethyl-ethylsulfonyl, Pentylsulfonyl, 1-Methylbutylsulfonyl, 2-Methylbutylsulfonyl, 3-Methylbutylsulfonyl, 1,1-Dimethylpropylsulfonyl, 1,2-Dimethylpropylsulfonyl, 2,2-Dimethylpropylsulfonyl, 1-Ethylpropylsulfonyl, Hexylsulfonyl, 1-Methylpentylsulfonyl, 2-Methylpentylsulfonyl, 3-Methylpentylsulfonyl, 4-Methylpentylsulfonyl, 1,1-Dimethylbutylsulfonyl, 1,2-Dimethylbutylsulfonyl, 1,3-Dimethylbutylsulfonyl, 2,2-Dimethylbutylsulfonyl, 2,3-Dimethylbutylsulfonyl, 3,3-Dimethylbutylsulfonyl, 1-Ethylbutylsulfonyl, 2-Ethylbutylsulfonyl, 1,1,2-Trimethylpropylsulfonyl, 1,2,2-Trimethylpropylsulfonyl, 1-Ethyl-1-methylpropylsulfonyl und 1-Ethyl-2-methylpropylsulfonyl.

Erfindungsgemäß steht "Heteroarylsulfonyl" für gegebenenfalls substituiertes Pyridylsulfonyl, Pyrimidinylsulfonyl, Pyrazinylsulfonyl oder gegebenenfalls substituiertes polycyclisches Heteroarylsulfonyl, hier insbesondere gegebenenfalls substituiertes Chinolinylsulfonyl, beispielsweise substituiert durch Fluor, Chlor, Brom, Iod, Cyano, Nitro, Alkyl-, Haloalkyl-, Haloalkoxy-, Amino-, Alkylamino-, Alkylcarbonylamino-, Dialkylamino- oder Alkoxygruppen.

Erfindungsgemäß steht "Alkylthio" - in Alleinstellung oder als Bestandteil einer chemischen Gruppe - für geradkettiges oder verzweigtes S-Alkyl, vorzugsweise mit 1 bis 8, oder mit 1 bis 6 Kohlenstoffatomen, wie (C₁-C₁₀)-, (C₁-C₆)- oder (C₁-C₄)-Alkylthio, z.B. (aber nicht beschränkt auf) (C₁-C₆)-Alkylthio wie Methylthio, Ethylthio, Propylthio, 1-Methylethylthio, Butylthio, 1-Methylpropylthio, 2-Methylpropylthio, 1,1-Dimethylethylthio, Pentylthio, 1-Methylbutylthio, 2-Methylbutylthio, 3-Methylbutylthio, 1,1-Dimethyl-propylthio, 1,2-Dimethylpropylthio, 2,2-Dimethylpropylthio, 1-Ethylpropylthio, Hexylthio, 1-Methylpentylthio, 2-Methylpentylthio, 3-Methylpentylthio, 4-Methylpentylthio, 1,1-Dimethylbutylthio, 1,2-Dimethylbutylthio, 1,3-Dimethylbutylthio, 2,2-Dimethylbutylthio, 2,3-Dimethylbutylthio, 3,3-Dimethylbutylthio, 1-Ethylbutylthio, 2-Ethylbutylthio, 1,1,2-Trimethylpropylthio, 1,2,2-Trimethylpropylthio, 1-Ethyl-1-methylpropylthio und 1-Ethyl-2-methylpropylthio.

Alkenylthio bedeutet erfindungsgemäß ein über ein Schwefelatom gebundenen Alkenylrest, Alkinylthio bedeutet ein über ein Schwefelatom gebundenen Alkinylrest, Cycloalkylthio bedeutet ein über ein Schwefelatom gebundenen Cycloalkylrest und Cycloalkenylthio bedeutet ein über ein Schwefelatom gebundenen Cycloalkenylrest.

Alkylsulfinyl (Alkyl-S(=O)-), soweit nicht an anderer Stelle anders definiert steht erfindungsgemäß für Alkylreste, die über -S(=O)- an das Gerüst gebunden sind, wie (C₁-C₁₀)-, (C₁-C₆)- oder (C₁-C₄)-Alkylsulfinyl, z. B. (aber nicht beschränkt auf) (C₁-C₆)-Alkylsulfinyl wie Methylsulfinyl, Ethylsulfinyl, Propylsulfinyl, 1-Methylethylsulfinyl, Butylsulfinyl, 1-Methylpropylsulfinyl, 2-Methylpropylsulfinyl, 1,1-Dimethylethylsulfinyl, Pentylsulfinyl, 1-Methylbutylsulfinyl, 2-Methylbutylsulfinyl, 3-Methylbutylsulfinyl, 1,1-Dimethylpropylsulfinyl, 1,2-Dimethylpropylsulfinyl, 2,2-Dimethylpropylsulfinyl, 1-Ethylpropylsulfinyl, Hexylsulfinyl, 1-Methylpentylsulfinyl, 2-Methylpentylsulfinyl, 3-Methylpentylsulfinyl, 4-Methylpentylsulfinyl, 1,1-Dimethylbutylsulfinyl, 1,2-Dimethylbutylsulfinyl, 1,3-Dimethylbutylsulfinyl, 2,2-Dimethylbutylsulfinyl, 2,3-Dimethylbutylsulfinyl, 3,3-Dimethylbutylsulfinyl, 1-Ethylbutylsulfinyl, 2-Ethylbutylsulfinyl, 1,1,2-Trimethyl-propylsulfinyl, 1,2,2-Trimethylpropylsulfinyl, 1-Ethyl-1-methylpropylsulfinyl und 1-Ethyl-2-methylpropylsulfinyl.

Analog sind Alkenylsulfinyl und Alkinylsulfinyl, erfindungsgemäß definiert als Alkenyl- bzw. Alkinylreste, die über -S(=O)- an das Gerüst gebunden sind, wie (C₂-C₁₀)-, (C₂-C₆)- oder (C₂-C₄)-Alkenylsulfinyl bzw. (C₃-C₁₀)-, (C₃-C₆)- oder (C₃-C₄)-Alkinylsulfinyl.

Analog sind Alkenylsulfonyl und Alkinylsulfonyl erfindungsgemäß definiert als Alkenyl- bzw. Alkinylreste, die über -S(=O)₂- an das Gerüst gebunden sind, wie (C₂-C₁₀)-, (C₂-C₆)- oder (C₂-C₄)-Alkenylsulfonyl bzw. (C₃-C₁₀)-, (C₃-C₆)- oder (C₃-C₄)-Alkinylsulfonyl.

"Alkoxy" bedeutet ein über ein Sauerstoffatom gebundenen Alkylrest, z. B. (aber nicht beschränkt auf) (C₁-C₆)-Alkoxy wie Methoxy, Ethoxy, Propoxy, 1-Methylethoxy, Butoxy, 1-Methylpropoxy, 2-Methylpropoxy, 1,1-Dimethylethoxy, Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, Hexoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy und 1-Ethyl-2-methylpropoxy. Alkenyloxy bedeutet ein über ein Sauerstoffatom gebundenen Alkenylrest, Alkinyloxy bedeutet ein über ein Sauerstoffatom gebundenen Alkinylrest wie (C₂-C₁₀)-, (C₂-C₆)- oder (C₂-C₄)-Alkenoxy bzw. (C₃-C₁₀)-, (C₃-C₆)- oder (C₃-C₄)-Alkinoxy.

"Cycloalkyloxy" bedeutet ein über ein Sauerstoffatom gebundenen Cycloalkylrest und Cycloalkenyloxy bedeutet ein über ein Sauerstoffatom gebundenen Cycloalkenylrest.

"Alkylcarbonyl" (Alkyl-C(=O)-), soweit nicht an anderer Stelle anders definiert, steht erfindungsgemäß für Alkylreste, die über -C(=O)- an das Gerüst gebunden sind, wie (C₁-C₁₀)-, (C₁-C₆)- oder (C₁-C₄)-Alkylcarbonyl. Die Anzahl der C-Atome bezieht sich dabei auf den Alkylrest in der Alkylcarbonylgruppe.

Analog stehen "Alkenylcarbonyl" und "Alkinylcarbonyl", soweit nicht an anderer Stelle anders definiert, erfindungsgemäß für Alkenyl- bzw. Alkinylreste, die über -C(=O)- an das Gerüst gebunden sind, wie (C₂-C₁₀)-, (C₂-C₆)- oder (C₂-C₄)-Alkenylcarbonyl bzw. (C₂-C₁₀)-, (C₂-C₆)- oder (C₂-C₄)-Alkinylcarbonyl. Die Anzahl der C-Atome bezieht sich dabei auf den Alkenyl- bzw. Alkinylrest in der Alkenyl- bzw. Alkinylcarbonylgruppe. Alkoxycarbonyl (Alkyl-O-C(=O)-), soweit nicht an anderer Stelle anders definiert: Alkylreste, die über -O-C(=O)- an das Gerüst gebunden sind, wie (C₁-C₁₀)-, (C₁-C₆)-oder (C₁-C₄)-Alkoxycarbonyl. Die Anzahl der C-Atome bezieht sich dabei auf den Alkylrest in der Alkoxycarbonylgruppe.
Analog stehen "Alkenyloxycarbonyl" und "Alkinyloxycarbonyl", soweit nicht an anderer Stelle anders definiert, erfindungsgemäß für Alkenyl- bzw. Alkinylreste, die über -O-C(=O)- an das Gerüst gebunden sind, wie (C₂-C₁₀)-, (C₂-C₆)- oder (C₂-C₄)-Alkenyloxy-carbonyl bzw. (C₃-C₁₀)-, (C₃-C₆)- oder (C₃-C₄)-Alkinyloxycarbonyl. Die Anzahl der C-Atome bezieht sich dabei auf den Alkenyl- bzw. Alkinylrest in der Alken- bzw. Alkinyloxycarbonylgruppe.

Der Begriff "Alkylcarbonyloxy" (Alkyl-C(=O)-O-) steht erfindungsgemäß, soweit nicht an anderer Stelle anders definiert, für Alkylreste, die über eine Carbonyloxygruppe (-C(=O)-O-) mit dem Sauerstoff an das Gerüst gebunden sind, wie (C₁-C₁₀)-, (C₁-C₆)-oder (C₁-C₄)-Alkylcarbonyloxy. Die Anzahl der C-Atome bezieht sich dabei auf den Alkylrest in der Alkylcarbonyloxygruppe.

Analog sind "Alkenylcarbonyloxy" und "Alkinylcarbonyloxy" erfindungsgemäß definiert als Alkenyl- bzw. Alkinylreste, die über (-C(=O)-O-) mit dem Sauerstoff an das Gerüst gebunden sind, wie (C₂-C₁₀)-, (C₂-C₆)- oder (C₂-C₄)-Alkenylcarbonyloxy bzw. (C₂-C₁₀)-, (C₂-C₆)- oder (C₂-C₄)-Alkinylcarbonyloxy. Die Anzahl der C-Atome bezieht sich dabei auf den Alkenyl- bzw. Alkinylrest in der Alkenyl- bzw. Alkinylcarbonyloxygruppe.

Der Begriff "Aryl" bedeutet ein gegebenenfalls substituiertes mono-, bi- oder polycyclisches aromatisches System mit vorzugsweise 6 bis 14, insbesondere 6 bis 10 Ring-C-Atomen, beispielsweise Phenyl, Naphthyl, Anthryl, Phenanthrenyl, und ähnliches, vorzugsweise Phenyl.

Vom Begriff "gegebenenfalls substituiertes Aryl" sind auch mehrcyclische Systeme, wie Tetrahydronaphtyl, Indenyl, Indanyl, Fluorenyl, Biphenylyl, umfasst, wobei die Bindungsstelle am aromatischen System ist. Von der Systematik her ist "Aryl" in der Regel auch von dem Begriff "gegebenenfalls substituiertes Phenyl" umfasst. Bevorzugte Aryl-Substituenten sind hier zum Beispiel Wasserstoff, Halogen, Alkyl, Cycloalkyl, Cycloalkylalkyl, Cycloalkenyl, Halocycloalkyl, Alkenyl, Alkinyl, Aryl, Arylalkyl, Arylalkenyl, Heteroaryl, Heteroarylalkyl, Heterocyclyl, Heterocyclylalkyl, Alkoxyalkyl, Alkylthio, Haloalkylthio, Haloalkyl, Alkoxy, Haloalkoxy, Cycloalkoxy, Cycloalkylalkoxy, Aryloxy, Heteroraryloxy, Alkoxyalkoxy, Alkinylalkoxy, Alkenyloxy, Bis-alkylaminoalkoxy, Tris-[alkyl]silyl, Bis-[alkyl]arylsilyl, Bis-[alkyl]alkylsilyl, Tris-[alkyl]silylalkinyl, Arylalkinyl, Heteroarylalkinyl, Alkylalkinyl, Cycloalkylalkinyl, Haloalkylalkinyl, Heterocyclyl-N-alkoxy, Nitro, Cyano, Amino, Alkylamino, Bis-alkylamino, Alkylcarbonylamino, Cycloalkylcarbonylamino, Arylcarbonylamino, Alkoxycarbonylamino, Alkoxycarbonylalkylamino, Arylalkoxycarbonylalkylamino, Hydroxycarbonyl, Alkoxycarbonyl, Aminocarbonyl, Alkylaminocarbonyl, Cycloalkylaminocarbonyl, Bis-Alkylaminocarbonyl, Heteroarylalkoxy, Arylalkoxy Ein heterocyclischer Rest (Heterocyclyl) enthält mindestens einen heterocyclischen Ring (=carbocyclischer Ring, in dem mindestens ein C-Atom durch ein Heteroatom ersetzt ist, vorzugsweise durch ein Heteroatom aus der Gruppe N, O, S, P) der gesättigt, ungesättigt, teilgesättigt oder heteroaromatisch ist und dabei unsubstituiert oder substituiert sein kann, wobei die Bindungsstelle an einem Ringatom lokalisiert ist. Ist der Heterocyclylrest oder der heterocyclische Ring gegebenenfalls substituiert, kann er mit anderen carbocyclischen oder heterocyclischen Ringen annelliert sein. Im Falle von gegebenenfalls substituiertem Heterocyclyl werden auch mehrcyclische Systeme umfasst, wie beispielsweise 8-Aza-bicyclo[3.2.1]octanyl, 8-Azabicyclo[2.2.2]octanyl oder 1-Aza-bicyclo[2.2.1]heptyl. Im Falle von gegebenenfalls substituiertem Heterocyclyl werden auch spirocyclische Systeme umfasst, wie beispielsweise 1-Oxa-5-aza-spiro[2.3]hexyl. Wenn nicht anders definiert, enthält der heterocyclische Ring vorzugsweise 3 bis 9 Ringatome, insbesondere 3 bis 6 Ringatome, und ein oder mehrere, vorzugsweise 1 bis 4, insbesondere 1, 2 oder 3 Heteroatome im heterocyclischen Ring, vorzugsweise aus der Gruppe N, O, und S, wobei jedoch nicht zwei Sauerstoffatome direkt benachbart sein sollen, wie beispielsweise mit einem Heteroatom aus der Gruppe N, O und S 1- oder 2- oder 3-Pyrrolidinyl, 3,4-Dihydro-2H-pyrrol-2- oder 3-yl, 2,3-Dihydro-1 H-pyrrol-1- oder 2- oder 3- oder 4- oder 5-yl; 2,5-Dihydro-1 H-pyrrol-1- oder 2- oder 3-yl, 1- oder 2- oder 3- oder 4-Piperidinyl; 2,3,4,5-Tetrahydropyridin-2- oder 3- oder 4- oder 5-yl oder 6-yl; 1,2,3,6-Tetrahydropyridin-1- oder 2- oder 3- oder 4- oder 5- oder 6-yl; 1,2,3,4-Tetrahydropyridin-1- oder 2- oder 3- oder 4- oder 5- oder 6-yl; 1,4-Dihydropyridin-1-oder 2- oder 3- oder 4-yl; 2,3-Dihydropyridin-2- oder 3- oder 4- oder 5- oder 6-yl; 2,5-Dihydropyridin-2- oder 3- oder 4- oder 5- oder 6-yl, 1- oder 2- oder 3- oder 4-Azepanyl; 2,3,4,5-Tetrahydro-1H-azepin-1- oder 2- oder 3- oder 4- oder 5- oder 6- oder 7-yl; 2,3,4,7-Tetrahydro-1H-azepin-1- oder 2- oder 3- oder 4- oder 5- oder 6- oder 7-yl; 2,3,6,7-Tetrahydro-1H-azepin-1- oder 2- oder 3- oder 4-yl; 3,4,5,6-Tetrahydro-2H-azepin-2- oder 3- oder 4- oder 5- oder 6- oder 7-yl; 4,5-Dihydro-1 H-azepin-1- oder 2-oder 3- oder 4-yl; 2,5-Dihydro-1H-azepin-1- oder -2- oder 3- oder 4- oder 5- oder 6-oder 7-yl; 2,7-Dihydro-1 H-azepin-1- oder -2- oder 3- oder 4-yl; 2,3-Dihydro-1H-azepin-1- oder -2- oder 3- oder 4- oder 5- oder 6- oder 7-yl; 3,4-Dihydro-2H-azepin-2- oder 3-oder 4- oder 5- oder 6- oder 7-yl; 3,6-Dihydro-2H-azepin-2- oder 3- oder 4- oder 5-oder 6- oder 7-yl; 5,6-Dihydro-2H-azepin-2- oder 3- oder 4- oder 5- oder 6- oder 7-yl; 4,5-Dihydro-3H-azepin-2- oder 3- oder 4- oder 5- oder 6- oder 7-yl; 1 H-Azepin-1- oder -2- oder 3- oder 4- oder 5- oder 6- oder 7-yl; 2H-Azepin-2- oder 3- oder 4- oder 5- oder 6- oder 7-yl; 3H-Azepin-2- oder 3- oder 4- oder 5- oder 6- oder 7-yl; 4H-Azepin-2- oder 3- oder 4- oder 5- oder 6- oder 7-yl, 2- oder 3-Oxolanyl (= 2- oder 3-Tetrahydrofuranyl); 2,3-Dihydrofuran-2- oder 3- oder 4- oder 5-yl; 2,5-Dihydrofuran-2- oder 3-yl, 2- oder 3-oder 4-Oxanyl (= 2- oder 3- oder 4-Tetrahydropyranyl); 3,4-Dihydro-2H-pyran-2- oder 3- oder 4- oder 5- oder 6-yl; 3,6-Dihydro-2H-pyran-2- oder 3-oder 4- oder 5- oder 6-yl; 2H-Pyran-2- oder 3- oder 4- oder 5- oder 6-yl; 4H-Pyran-2- oder 3- oder 4-yl, 2- oder 3-oder 4-Oxepanyl, 2,3,4,5-Tetrahydrooxepin-2- oder 3- oder 4- oder 5- oder 6- oder 7-yl; 2,3,4,7-Tetrahydrooxepin-2- oder 3- oder 4- oder 5- oder 6- oder 7-yl; 2,3,6,7-Tetrahydrooxepin-2- oder 3- oder 4-yl; 2,3-Dihydrooxepin-2- oder 3- oder 4- oder 5-oder 6- oder 7-yl; 4,5-Dihydrooxepin-2- oder 3- oder 4-yl; 2,5-Dihydrooxepin-2- oder 3-oder 4- oder 5- oder 6- oder 7-yl; Oxepin-2- oder 3- oder 4- oder 5- oder 6- oder 7-yl; 2- oder 3-Tetrahydrothiophenyl; 2,3-Dihydrothiophen-2- oder 3- oder 4- oder 5-yl; 2,5-Dihydrothiophen-2- oder 3-yl; Tetrahydro-2H-thiopyran-2- oder 3- oder 4-yl; 3,4-Dihydro-2H-thiopyran-2- oder 3- oder 4- oder 5- oder 6-yl; 3,6-Dihydro-2H-thiopyran-2- oder 3- oder 4- oder 5- oder 6-yl; 2H-Thiopyran-2- oder 3- oder 4- oder 5- oder 6-yl; 4H-Thiopyran-2- oder 3- oder 4-yl. Bevorzugte 3-Ring und 4-Ring-Heterocyclen sind beispielsweise 1- oder 2-Aziridinyl, Oxiranyl, Thiiranyl, 1- oder 2- oder 3-Azetidinyl, 2-oder 3-Oxetanyl, 2- oder 3-Thietanyl, 1,3-Dioxetan-2-yl. Weitere Beispiele für "Heterocyclyl" sind ein partiell oder vollständig hydrierter heterocyclischer Rest mit zwei Heteroatomen aus der Gruppe N, O und S, wie beispielsweise 1- oder 2- oder 3-oder 4-Pyrazolidinyl; 4,5-Dihydro-3H-pyrazol- 3- oder 4- oder 5-yl; 4,5-Dihydro-1 H-pyrazol-1- oder 3- oder 4- oder 5-yl; 2,3-Dihydro-1 H-pyrazol-1- oder 2- oder 3- oder 4-oder 5-yl; 1- oder 2- oder 3- oder 4- Imidazolidinyl; 2,3-Dihydro-1H-imidazol-1- oder 2-oder 3- oder 4-yl; 2,5-Dihydro-1H-imidazol-1- oder 2- oder 4- oder 5-yl; 4,5-Dihydro-1 H-imidazol-1- oder 2- oder 4- oder 5-yl; Hexahydropyridazin-1- oder 2- oder 3- oder 4-yl; 1,2,3,4-Tetrahydropyridazin-1- oder 2- oder 3- oder 4- oder 5- oder 6-yl, 1,2,3,6-Tetrahydropyridazin-1- oder 2- oder 3- oder 4- oder 5- oder 6-yl; 1,4,5,6-Tetrahydropyridazin-1- oder 3- oder 4- oder 5- oder 6-yl; 3,4,5,6-Tetrahydropyridazin-3- oder 4- oder 5-yl; 4,5-Dihydropyridazin-3- oder 4-yl; 3,4-Dihydropyridazin-3- oder 4-oder 5- oder 6-yl; 3,6-Dihydropyridazin-3- oder 4-yl; 1,6-Dihydropyriazin-1- oder 3-oder 4- oder 5- oder 6-yl; Hexahydropyrimidin-1- oder 2- oder 3- oder 4-yl; 1,4,5,6-Tetrahydropyrimidin-1- oder 2- oder 4- oder 5- oder 6-yl; 1,2,5,6-Tetrahydropyrimidin-1- oder 2- oder 4- oder 5- oder 6-yl; 1,2,3,4-Tetrahydropyrimidin-1- oder 2- oder 3-oder 4- oder 5- oder 6-yl; 1,6-Dihydropyrimidin-1- oder 2- oder 4- oder 5- oder 6-yl; 1,2-Dihydropyrimidin-1- oder 2- oder 4- oder 5- oder 6-yl; 2,5-Dihydropyrimidin-2- oder 4- oder 5-yl; 4,5-Dihydropyrimidin- 4- oder 5- oder 6-yl; 1,4-Dihydropyrimidin-1- oder 2-oder 4- oder 5- oder 6-yl; 1- oder 2- oder 3-Piperazinyl; 1,2,3,6-Tetrahydropyrazin-1-oder 2- oder 3- oder 5- oder 6-yl; 1,2,3,4-Tetrahydropyrazin-1- oder 2- oder 3- oder 4-oder 5- oder 6-yl; 1,2-Dihydropyrazin-1- oder 2- oder 3- oder 5- oder 6-yl; 1,4-Dihydropyrazin-1- oder 2- oder 3-yl; 2,3-Dihydropyrazin-2- oder 3- oder 5- oder 6-yl; 2,5-Dihydropyrazin-2- oder 3-yl; 1,3-Dioxolan-2- oder 4- oder 5-yl; 1,3-Dioxol-2- oder 4-yl; 1,3-Dioxan-2- oder 4- oder 5-yl; 4H-1,3-Dioxin-2- oder 4- oder 5- oder 6-yl; 1,4-Dioxan-2- oder 3- oder 5- oder 6-yl; 2,3-Dihydro-1,4-dioxin-2- oder 3- oder 5- oder 6-yl; 1,4-Dioxin-2- oder 3-yl; 1,2-Dithiolan-3- oder 4-yl; 3H-1,2-Dithiol-3- oder 4- oder 5-yl; 1,3-Dithiolan-2- oder 4-yl; 1,3-Dithiol-2- oder 4-yl; 1,2-Dithian-3- oder 4-yl; 3,4-Dihydro-1,2-dithiin-3- oder 4- oder 5- oder 6-yl; 3,6-Dihydro-1,2-dithiin-3- oder 4-yl; 1,2-Dithiin-3- oder 4-yl; 1,3-Dithian-2- oder 4- oder 5-yl; 4H-1,3-Dithiin-2- oder 4- oder 5- oder 6-yl; Isoxazolidin-2- oder 3- oder 4- oder 5-yl; 2,3-Dihydroisoxazol-2- oder 3- oder 4-oder 5-yl; 2,5-Dihydroisoxazol-2- oder 3- oder 4- oder 5-yl; 4,5-Dihydroisoxazol-3- oder 4- oder 5-yl; 1,3-Oxazolidin-2- oder 3- oder 4- oder 5-yl; 2,3-Dihydro-1,3-oxazol-2- oder 3- oder 4- oder 5-yl; 2,5-Dihydro-1,3-oxazol-2- oder 4- oder 5-yl; 4,5-Dihydro-1,3-oxazol-2- oder 4- oder 5-yl; 1,2-Oxazinan-2- oder 3- oder 4- oder 5- oder 6-yl; 3,4-Dihydro-2H-1,2-oxazin-2- oder 3- oder 4- oder 5- oder 6-yl; 3,6-Dihydro-2H-1,2-oxazin-2- oder 3- oder 4- oder 5- oder 6-yl; 5,6-Dihydro-2H-1,2-oxazin-2- oder 3- oder 4- oder 5- oder 6-yl; 5,6-Dihydro-4H-1,2-oxazin-3- oder 4- oder 5- oder 6-yl; 2H-1,2-Oxazin-2-oder 3- oder 4- oder 5- oder 6-yl; 6H-1,2-Oxazin-3- oder 4- oder 5- oder 6-yl; 4H-1,2-Oxazin-3- oder 4- oder 5- oder 6-yl; 1,3-Oxazinan-2- oder 3- oder 4- oder 5- oder 6-yl; 3,4-Dihydro-2H-1,3-oxazin-2- oder 3- oder 4- oder 5- oder 6-yl; 3,6-Dihydro-2H-1,3-oxazin-2- oder 3- oder 4- oder 5- oder 6-yl; 5,6-Dihydro-2H-1,3-oxazin-2- oder 4- oder 5- oder 6-yl; 5,6-Dihydro-4H-1,3-oxazin-2- oder 4- oder 5- oder 6-yl; 2H-1,3-Oxazin-2-oder 4- oder 5- oder 6-yl; 6H-1,3-Oxazin-2- oder 4- oder 5- oder 6-yl; 4H-1,3-Oxazin-2-oder 4- oder 5- oder 6-yl; Morpholin-2- oder 3- oder 4-yl; 3,4-Dihydro-2H-1,4-oxazin-2-oder 3- oder 4- oder 5- oder 6-yl; 3,6-Dihydro-2H-1,4-oxazin-2- oder 3- oder 5- oder 6-yl; 2H-1,4-oxazin-2- oder 3- oder 5- oder 6-yl; 4H-1,4-oxazin-2- oder 3-yl; 1,2-Oxazepan-2- oder 3- oder 4- oder 5- oder 6- oder 7-yl; 2,3,4,5-Tetrahydro-1,2-oxazepin-2- oder 3- oder 4- oder 5- oder 6- oder 7-yl; 2,3,4,7-Tetrahydro-1,2-oxazepin-2- oder 3- oder 4- oder 5- oder 6- oder 7-yl; 2,3,6,7-Tetrahydro-1,2-oxazepin-2- oder 3-oder 4- oder 5- oder 6- oder 7-yl; 2,5,6,7-Tetrahydro-1,2-oxazepin-2- oder 3- oder 4-oder 5- oder 6- oder 7-yl; 4,5,6,7-Tetrahydro-1,2-oxazepin-3- oder 4- oder 5- oder 6-oder 7-yl; 2,3-Dihydro-1,2-oxazepin-2- oder 3- oder 4- oder 5- oder 6- oder 7-yl; 2,5-Dihydro-1,2-oxazepin-2- oder 3- oder 4- oder 5- oder 6- oder 7-yl; 2,7-Dihydro-1,2-oxazepin-2- oder 3- oder 4- oder 5- oder 6- oder 7-yl; 4,5-Dihydro-1,2-oxazepin-3- oder 4- oder 5- oder 6- oder 7-yl; 4,7-Dihydro-1,2-oxazepin-3- oder 4- oder 5- oder 6- oder 7-yl; 6,7-Dihydro-1,2-oxazepin-3- oder 4- oder 5- oder 6- oder 7-yl; 1,2-Oxazepin-3-oder 4- oder 5- oder 6- oder 7-yl; 1,3-Oxazepan-2- oder 3- oder 4- oder 5- oder 6- oder 7-yl; 2,3,4,5-Tetrahydro-1,3-oxazepin-2- oder 3- oder 4- oder 5- oder 6- oder 7-yl; 2,3,4,7-Tetrahydro-1,3-oxazepin-2- oder 3- oder 4- oder 5- oder 6- oder 7-yl; 2,3,6,7-Tetrahydro-1,3-oxazepin-2- oder 3- oder 4- oder 5- oder 6- oder 7-yl; 2,5,6,7-Tetrahydro-1,3-oxazepin-2- oder 4- oder 5- oder 6- oder 7-yl; 4,5,6,7-Tetrahydro-1,3-oxazepin-2- oder 4- oder 5- oder 6- oder 7-yl; 2,3-Dihydro-1,3-oxazepin-2- oder 3- oder 4- oder 5- oder 6- oder 7-yl; 2,5-Dihydro-1,3-oxazepin-2- oder 4- oder 5- oder 6- oder 7-yl; 2,7-Dihydro-1,3-oxazepin-2- oder 4- oder 5- oder 6- oder 7-yl; 4,5-Dihydro-1,3-oxazepin-2- oder 4- oder 5- oder 6- oder 7-yl; 4,7-Dihydro-1,3-oxazepin-2- oder 4- oder 5- oder 6- oder 7-yl; 6,7-Dihydro-1,3-oxazepin-2- oder 4- oder 5- oder 6- oder 7-yl; 1,3-Oxazepin-2- oder 4- oder 5- oder 6- oder 7-yl; 1,4-Oxazepan-2- oder 3- oder 5-oder 6- oder 7-yl; 2,3,4,5-Tetrahydro-1,4-oxazepin-2- oder 3- oder 4- oder 5- oder 6-oder 7-yl; 2,3,4,7-Tetrahydro-1,4-oxazepin-2- oder 3- oder 4- oder 5- oder 6- oder 7-yl; 2,3,6,7-Tetrahydro-1,4-oxazepin-2- oder 3- oder 5- oder 6- oder 7-yl; 2,5,6,7-Tetrahydro-1,4-oxazepin-2- oder 3- oder 5- oder 6- oder 7-yl; 4,5,6,7-Tetrahydro-1,4-oxazepin-2- oder 3- oder 4- oder 5- oder 6- oder 7-yl; 2,3-Dihydro-1,4-oxazepin-2- oder 3- oder 5- oder 6- oder 7-yl; 2,5-Dihydro-1,4-oxazepin-2- oder 3- oder 5- oder 6- oder 7-yl; 2,7-Dihydro-1,4-oxazepin-2- oder 3- oder 5- oder 6- oder 7-yl; 4,5-Dihydro-1,4-oxazepin-2- oder 3- oder 4- oder 5- oder 6- oder 7-yl; 4,7-Dihydro-1,4-oxazepin-2- oder 3- oder 4- oder 5- oder 6- oder 7-yl; 6,7-Dihydro-1,4-oxazepin-2- oder 3- oder 5- oder 6- oder 7-yl; 1,4-Oxazepin-2- oder 3- oder 5- oder 6- oder 7-yl; Isothiazolidin-2- oder 3-oder 4- oder 5-yl; 2,3-Dihydroisothiazol-2- oder 3- oder 4- oder 5-yl; 2,5-Dihydroisothiazol-2- oder 3- oder 4- oder 5-yl; 4,5-Dihydroisothiazol-3- oder 4- oder 5-yl; 1,3-Thiazolidin-2- oder 3- oder 4- oder 5-yl; 2,3-Dihydro-1,3-thiazol-2- oder 3- oder 4- oder 5-yl; 2,5-Dihydro-1,3-thiazol-2- oder 4- oder 5-yl; 4,5-Dihydro-1,3-thiazol-2-oder 4- oder 5-yl; 1,3-Thiazinan-2- oder 3- oder 4- oder 5- oder 6-yl; 3,4-Dihydro-2H-1,3-thiazin-2- oder 3- oder 4- oder 5- oder 6-yl; 3,6-Dihydro-2H-1,3-thiazin-2- oder 3-oder 4- oder 5- oder 6-yl; 5,6-Dihydro-2H-1,3-thiazin-2- oder 4- oder 5- oder 6-yl; 5,6-Dihydro-4H-1,3-thiazin-2- oder 4- oder 5- oder 6-yl; 2H-1,3-Thiazin-2- oder 4- oder 5-oder 6-yl; 6H-1,3-Thiazin-2- oder 4- oder 5- oder 6-yl; 4H-1,3-Thiazin-2- oder 4- oder 5- oder 6-yl. Weitere Beispiele für "Heterocyclyl" sind ein partiell oder vollständig hydrierter heterocyclischer Rest mit 3 Heteroatomen aus der Gruppe N, O und S, wie beispielsweise 1,4,2-Dioxazolidin-2- oder 3- oder 5-yl; 1,4,2-Dioxazol-3- oder 5-yl; 1,4,2-Dioxazinan-2- oder -3- oder 5- oder 6-yl; 5,6-Dihydro-1,4,2-dioxazin-3- oder 5-oder 6-yl; 1,4,2-Dioxazin-3- oder 5- oder 6-yl; 1,4,2-Dioxazepan-2- oder 3- oder 5- oder 6- oder 7-yl; 6,7-Dihydro-5H-1,4,2-Dioxazepin-3- oder 5- oder 6- oder 7-yl; 2,3-Dihydro-7H-1,4,2-Dioxazepin-2- oder 3- oder 5- oder 6- oder 7-yl; 2,3-Dihydro-5H-1,4,2-Dioxazepin-2- oder 3- oder 5- oder 6- oder 7-yl; 5H-1,4,2-Dioxazepin-3- oder 5-oder 6- oder 7-yl; 7H-1,4,2-Dioxazepin-3- oder 5- oder 6- oder 7-yl. Strukturbeispiele für gegebenenfalls weiter substituierte Heterocyclen sind auch im Folgenden aufgeführt:

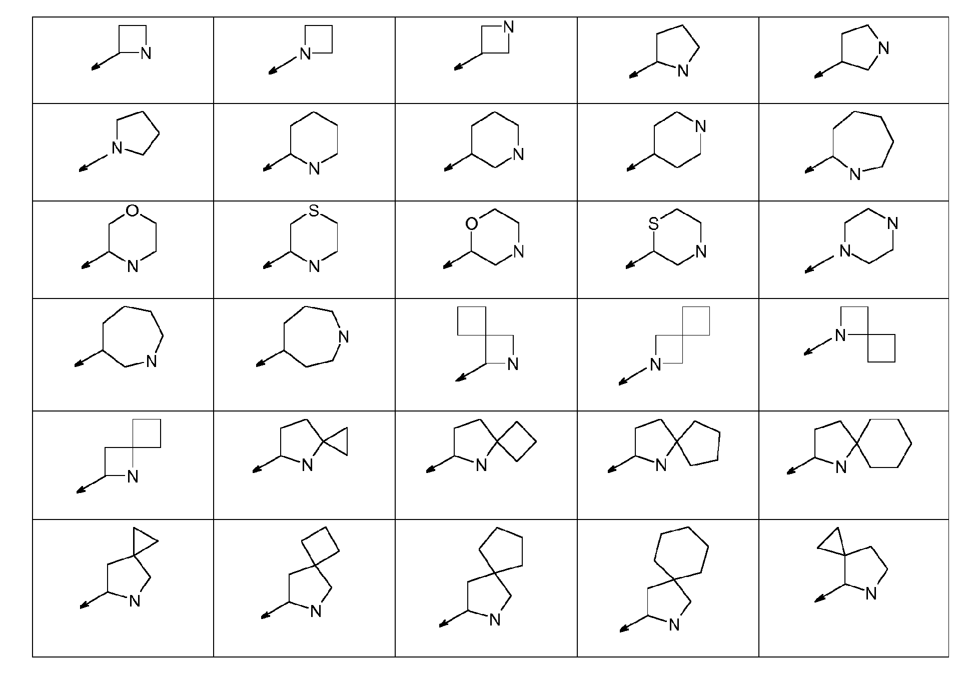

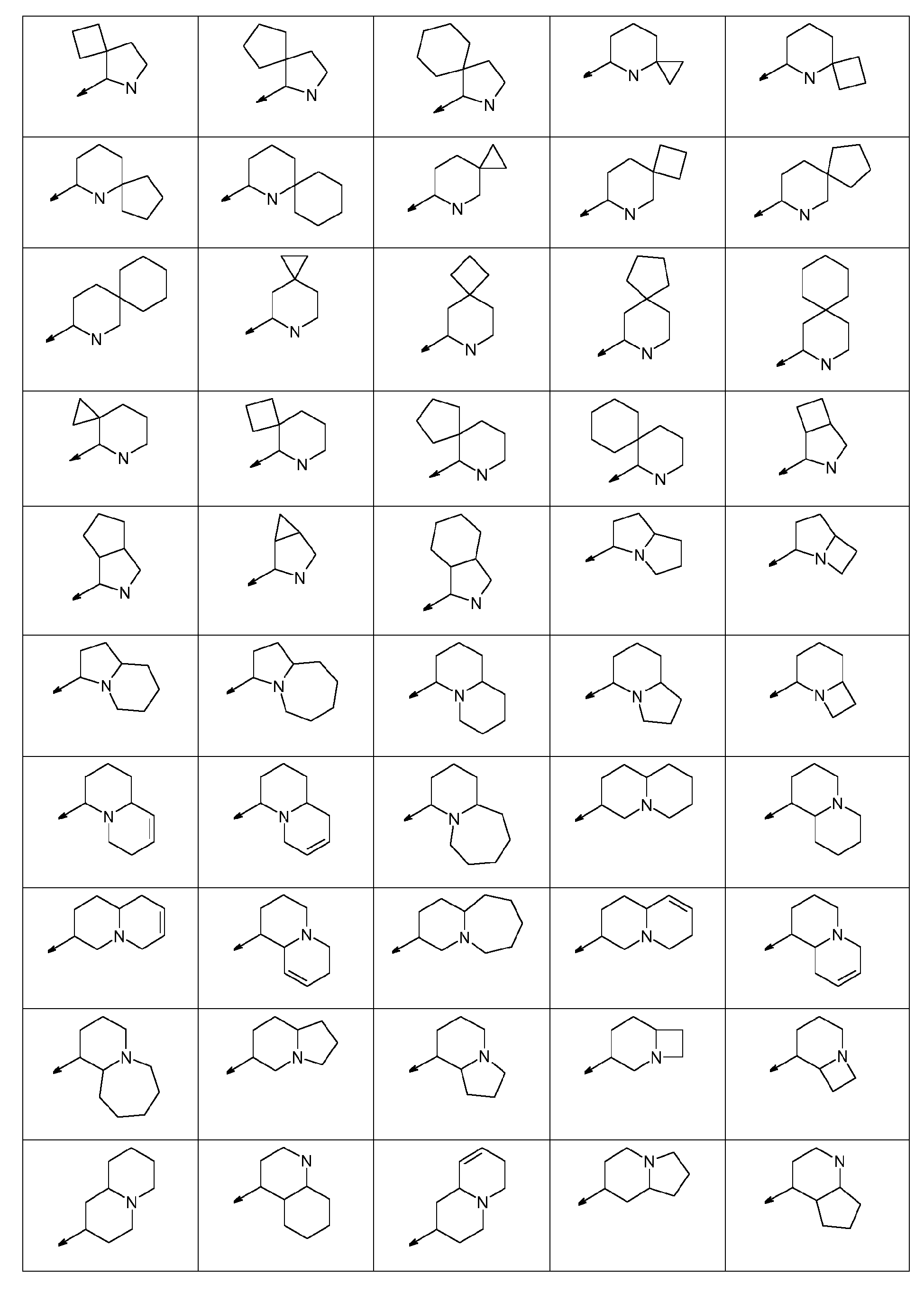

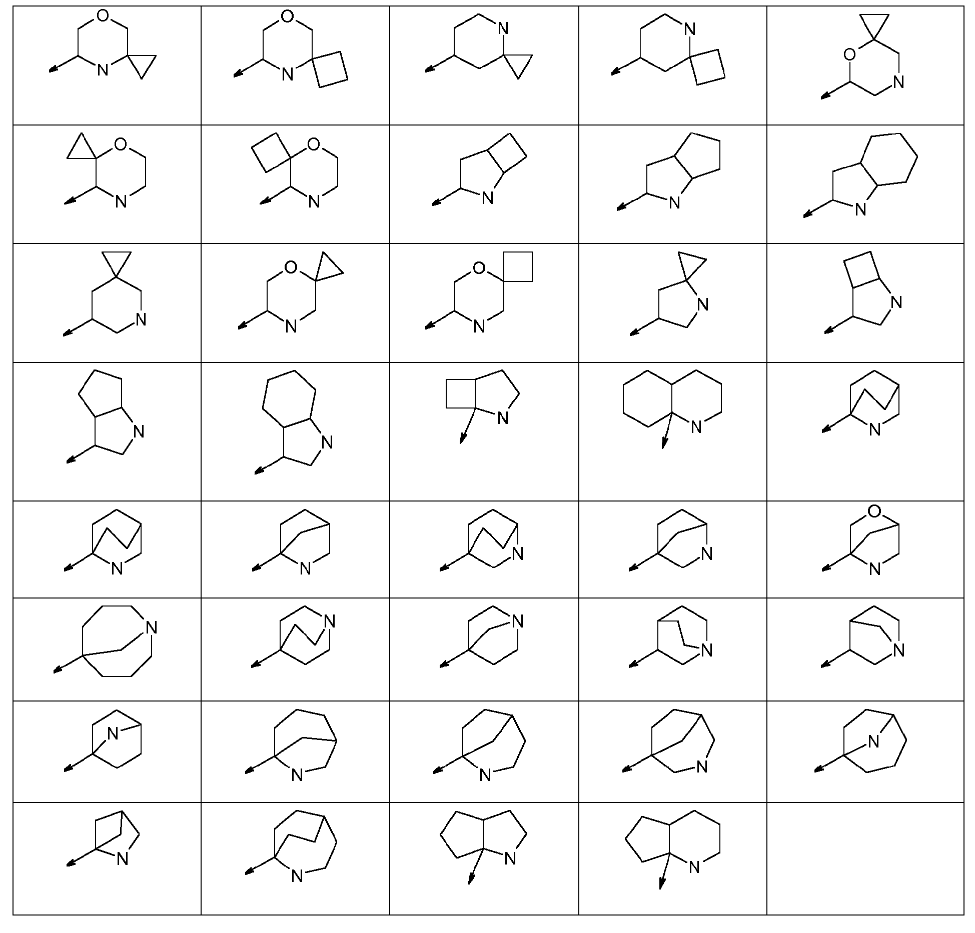

Die oben aufgeführten Heterocyclen sind bevorzugt beispielsweise durch Wasserstoff, Halogen, Alkyl, Haloalkyl, Hydroxy, Alkoxy, Cycloalkoxy, Aryloxy, Alkoxyalkyl, Alkoxyalkoxy, Cycloalkyl, Halocycloalkyl, Aryl, Arylalkyl, Heteroaryl, Heterocyclyl, Alkenyl, Alkylcarbonyl, Cycloalkylcarbonyl, Arylcarbonyl, Heteroarylcarbonyl, Alkoxycarbonyl, Hydroxycarbonyl, Cycloalkoxycarbonyl, Cycloalkylalkoxycarbonyl, Alkoxycarbonylalkyl, Arylalkoxycarbonyl, Arylalkoxycarbonylalkyl, Alkinyl, Alkinylalkyl, Alkylalkinyl, Tris-alkylsilylalkinyl, Nitro, Amino, Cyano, Haloalkoxy, Haloalkylthio, Alkylthio, Hydrothio, Hydroxyalkyl, Oxo, Heteroarylalkoxy, Arylalkoxy, Heterocyclylalkoxy, Heterocyclylalkylthio, Heterocyclyloxy, Heterocyclylthio, Heteroaryloxy, Bis-alkylamino, Alkylamino, Cycloalkylamino, Hydroxycarbonylalkylamino, Alkoxycarbonylalkylamino, Arylalkoxycarbonylalkylamino, Alkoxycarbonylalkyl(alkyl)amino, Aminocarbonyl, Alkylaminocarbonyl, Bis-alkylaminocarbonyl, Cycloalkylaminocarbonyl, Hydroxycarbonylalkylaminocarbonyl, Alkoxycarbonylalkylaminocarbonyl, Arylalkoxycarbonylalkylaminocarbonyl substituiert.

Wenn ein Grundkörper "durch einen oder mehrere Reste" aus einer Aufzählung von Resten (= Gruppe) oder einer generisch definierten Gruppe von Resten substituiert ist, so schließt dies jeweils die gleichzeitige Substitution durch mehrere gleiche und/oder strukturell unterschiedliche Reste ein.

Handelt es sich es sich um einen teilweise oder vollständig gesättigten StickstoffHeterocyclus, so kann dieser sowohl über Kohlenstoff als auch über den Stickstoff mit dem Rest des Moleküls verknüpft sein.

Als Substituenten für einen substituierten heterocyclischen Rest kommen die weiter unten genannten Substituenten in Frage, zusätzlich auch Oxo und Thioxo. Die Oxogruppe als Substituent an einem Ring-C-Atom bedeutet dann beispielsweise eine Carbonylgruppe im heterocyclischen Ring. Dadurch sind vorzugsweise auch Lactone und Lactame umfasst. Die Oxogruppe kann auch an den Heteroringatomen, die in verschiedenen Oxidationsstufen existieren können, z.B. bei N und S, auftreten und bilden dann beispielsweise die divalenten Gruppen N(O), S(O) (auch kurz SO) und S(O)₂ (auch kurz SO₂) im heterocyclischen Ring. Im Fall von -N(O)- und -S(O)-Gruppen sind jeweils beide Enantiomere umfasst.

Erfindungsgemäß steht der Ausdruck "Heteroaryl" für heteroaromatische Verbindungen, d. h. vollständig ungesättigte aromatische heterocyclische Verbindungen, vorzugsweise für 5- bis 7-gliedrige Ringe mit 1 bis 4, vorzugsweise 1 oder 2 gleichen oder verschiedenen Heteroatomen, vorzugsweise O, S oder N. Erfindungsgemäße Heteroaryle sind beispielsweise 1H-Pyrrol-1-yl; 1H-Pyrrol-2-yl; 1 H-Pyrrol-3-yl; Furan-2-yl; Furan-3-yl; Thien-2-yl; Thien-3-yl, 1H-Imidazol-1-yl; 1H-Imidazol-2-yl, 1H-Imidazol-4-yl; 1H-Imidazol-5-yl; 1H-Pyrazol-1-yl; 1H-Pyrazol-3-yl; 1 H-Pyrazol-4-yl; 1 H-Pyrazol-5-yl, 1H-1,2,3-Triazol-1-yl, 1H-1,2,3-Triazol-4-yl, 1H-1,2,3-Triazol-5-yl, 2H-1,2,3-Triazol-2-yl, 2H-1,2,3-Triazol-4-yl, 1H-1,2,4-Triazol-1-yl, 1 H-1,2,4-Triazol-3-yl, 4H-1,2,4-Triazol-4-yl, 1,2,4-Oxadiazol-3-yl, 1,2,4-Oxadiazol-5-yl, 1,3,4-Oxadiazol-2-yl, 1,2,3-Oxadiazol-4-yl, 1,2,3-Oxadiazol-5-yl, 1,2,5-Oxadiazol-3-yl, Azepinyl, Pyridin-2-yl, Pyridin-3-yl, Pyridin-4-yl, Pyrazin-2-yl, Pyrazin-3-yl, Pyrimidin-2-yl, Pyrimidin-4-yl, Pyrimidin-5-yl, Pyridazin-3-yl, Pyridazin-4-yl, 1,3,5-Triazin-2-yl, 1,2,4-Triazin-3-yl, 1,2,4-Triazin-5-yl, 1,2,4-Triazin-6-yl, 1,2,3-Triazin-4-yl, 1,2,3-Triazin-5-yl, 1,2,4-, 1,3,2-, 1,3,6- und 1,2,6-Oxazinyl, Isoxazol-3-yl, Isoxazol-4-yl, Isoxazol-5-yl, 1,3-Oxazol-2-yl, 1,3-Oxazol-4-yl, 1,3-Oxazol-5-yl, Isothiazol-3-yl, Isothiazol-4-yl, Isothiazol-5-yl, 1,3-Thiazol-2-yl, 1,3-Thiazol-4-yl, 1,3-Thiazol-5-yl, Oxepinyl, Thiepinyl, 1,2,4-Triazolonyl und 1,2,4-Diazepinyl, 2H-1,2,3,4-Tetrazol-5-yl, 1H-1,2,3,4-Tetrazol-5-yl, 1,2,3,4-Oxatriazol-5-yl, 1,2,3,4-Thiatriazol-5-yl, 1,2,3,5-Oxatriazol-4-yl, 1,2,3,5-Thiatriazol-4-yl. Die erfindungsgemäßen Heteroarylgruppen können ferner mit einem oder mehreren, gleichen oder verschiedenen Resten substituiert sein. Sind zwei benachbarte Kohlenstoffatome Bestandteil eines weiteren aromatischen Rings, so handelt es sich um annellierte heteroaromatische Systeme, wie benzokondensierte oder mehrfach annellierte Heteroaromaten. Bevorzugt sind beispielsweise Chinoline (z. B. Chinolin-2-yl, Chinolin-3-yl, Chinolin-4-yl, Chinolin-5-yl, Chinolin-6-yl, Chinolin-7-yl, Chinolin-8-yl); Isochinoline (z. B. Isochinolin-1-yl, Isochinolin-3-yl, Isochinolin-4-yl, Isochinolin-5-yl, Isochinolin-6-yl, Isochinolin-7-yl, Isochinolin-8-yl), Chinoxalin; Chinazolin; Cinnolin; 1,5-Naphthyridin; 1,6-Naphthyridin; 1,7-Naphthyridin; 1,8-Naphthyridin; 2,6-Naphthyridin; 2,7-Naphthyridin; Phthalazin; Pyridopyrazine; Pyridopyrimidine; Pyridopyridazine; Pteridine; Pyrimidopyrimidine. Beispiele für Heteroaryl sind auch 5- oder 6-gliedrige benzokondensierte Ringe aus der Gruppe 1 H-Indol-1-yl, 1H-Indol-2-yl, 1H-Indol-3-yl, 1H-Indol-4-yl, 1H-Indol-5-yl, 1H-Indol-6-yl, 1H-Indol-7-yl, 1-Benzofuran-2-yl, 1-Benzofuran-3-yl, 1-Benzofuran-4-yl, 1-Benzofuran-5-yl, 1-Benzofuran-6-yl, 1-Benzofuran-7-yl, 1-Benzothiophen-2-yl, 1-Benzothiophen-3-yl, 1-Benzothiophen-4-yl, 1-Benzothiophen-5-yl, 1-Benzothiophen-6-yl, 1-Benzothiophen-7-yl, 1H-Indazol-1-yl, 1H-Indazol-3-yl, 1H-Indazol-4-yl, 1H-Indazol-5-yl, 1H-Indazol-6-yl, 1H-Indazol-7-yl, 2H-Indazol-2-yl, 2H-Indazol-3-yl, 2H-Indazol-4-yl, 2H-Indazol-5-yl, 2H-Indazol-6-yl, 2H-Indazol-7-yl, 2H-Isoindol-2-yl, 2H-Isoindol-1-yl, 2H-Isoindol-3-yl, 2H-Isoindol-4-yl, 2H-Isoindol-5-yl, 2H-Isoindol-6-yl, 2H-Isoindol-7-yl, 1 H-Benzimidazol-1-yl, 1 H-Benzimidazol-2-yl, 1 H-Benzimidazol-4-yl, 1 H-Benzimidazol-5-yl, 1 H-Benzimidazol-6-yl, 1 H-Benzimidazol-7-yl, 1,3-Benzoxazol-2-yl, 1,3-Benzoxazol-4-yl, 1,3-Benzoxazol-5-yl, 1,3-Benzoxazol-6-yl, 1,3-Benzoxazol-7-yl, 1,3-Benzthiazol-2-yl, 1,3-Benzthiazol-4-yl, 1,3-Benzthiazol-5-yl, 1,3-Benzthiazol-6-yl, 1,3-Benzthiazol-7-yl, 1,2-Benzisoxazol-3-yl, 1,2-Benzisoxazol-4-yl, 1,2-Benzisoxazol-5-yl, 1,2-Benzisoxazol-6-yl, 1,2-Benzisoxazol-7-yl, 1,2-Benzisothiazol-3-yl, 1,2-Benzisothiazol-4-yl, 1,2-Benzisothiazol-5-yl, 1,2-Benzisothiazol-6-yl, 1,2-Benzisothiazol-7-yl.

Die Bezeichnung "Halogen" bedeutet beispielsweise Fluor, Chlor, Brom oder Iod. Wird die Bezeichnung für einen Rest verwendet, dann bedeutet "Halogen" beispielsweise ein Fluor-, Chlor-, Brom- oder Iodatom.

Erfindungsgemäß bedeutet "Alkyl" einen geradkettigen oder verzweigten offenkettigen, gesättigten Kohlenwasserstoffrest, der gegebenenfalls ein- oder mehrfach substituiert ist und im letzteren Falle als "substituiertes Alkyl" bezeichnet wird. Bevorzugte Substituenten sind Halogenatome, Alkoxy-, Haloalkoxy-, Cyano-, Alkylthio, Haloalkylthio-, Amino- oder Nitrogruppen, besonders bevorzugt sind Methoxy, Methyl, Fluoralkyl, Cyano, Nitro, Fluor, Chlor, Brom oder Iod. Die Vorsilbe "Bis" schließt auch die Kombination unterschiedlicher Alkylreste ein, z. B. Methyl(Ethyl) oder Ethyl(Methyl).

"Haloalkyl", "-alkenyl" und "-alkinyl" bedeuten durch gleiche oder verschiedene Halogenatome, teilweise oder vollständig substituiertes Alkyl, Alkenyl bzw. Alkinyl, z.B. Monohaloalkyl (= Monohalogenalkyl) wie z. B. CH₂CH₂Cl, CH₂CH₂Br, CHClCH₃, CH₂Cl, CH₂F; Perhaloalkyl wie z. B. CCl₃, CClF₂, CFCl₂,CF₂CClF₂, CF₂CClFCF₃; Polyhaloalkyl wie z. B. CH₂CHFCl, CF₂CClFH, CF₂CBrFH, CH₂CF₃; Der Begriff Perhaloalkyl umfasst dabei auch den Begriff Perfluoralkyl.

Teilfluoriertes Alkyl bedeutet einen geradkettigen oder verzweigten, gesättigten Kohlenwasserstoff, der einfach oder mehrfach durch Fluor substituiert ist, wobei sich die entsprechenden Fluoratome als Substituenten an einem oder mehreren verschiedenen Kohlenstoffatomen der geradkettigen oder verzweigten Kohlenwasserstoffkette befinden können, wie z. B. CHFCH₃, CH₂CH₂F, CH₂CH₂CF₃, CHF₂, CH₂F, CHFCF₂CF₃

Teilfluoriertes Haloalkyl bedeutet einen geradkettigen oder verzweigten, gesättigten Kohlenwasserstoff, der durch verschiedenene Halogenatomen mit mindestens einem Fluoratom substituiert ist, wobei alle anderen gegebenenfalls vorhandenen Halogenatome ausgewählt sind aus der Gruppe Fluor, Chlor oder Brom, Iod. Die entsprechenden Halogenatome können sich dabei als Substituenten an einem oder mehreren verschiedenen Kohlenstoffatomen der geradkettigen oder verzweigten Kohlenwasserstoffkette befinden. Teilfluoriertes Haloalkyl schließt auch die vollständige Substitution der geradkettigen oder verzweigten Kette durch Halogen unter Beteiligung von mindestens einem Fluoratom ein.

Haloalkoxy ist z.B. OCF₃, OCHF₂, OCH₂F, OCF₂CF₃, OCH₂CF₃ und OCH₂CH₂Cl; Entsprechendes gilt für Haloalkenyl und andere durch Halogen substituierten Reste.

Der hier beispielhaft genannte Ausdruck "(C₁-C₄)-Alkyl" bedeutet eine Kurzschreibweise für geradkettiges oder verzweigtes Alkyl mit einem bis 4 Kohlenstoffatomen entsprechend der Bereichsangabe für C-Atome, d. h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z. B. "(C₁-C₆)-Alkyl", umfassen entsprechend auch geradkettige oder verzweigte Alkylreste mit einer größeren Zahl von C-Atomen, d. h. gemäß Beispiel auch die Alkylreste mit 5 und 6 C-Atomen.

Wenn nicht speziell angegeben, sind bei den Kohlenwasserstoffresten wie Alkyl-, Alkenyl- und Alkinylresten, auch in zusammengesetzten Resten, die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Resten wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste, wobei mindestens eine Doppelbindung bzw. Dreifachbindung enthalten ist. Bevorzugt sind Reste mit einer Doppelbindung bzw. Dreifachbindung.

Der Begriff "Alkenyl" schließt insbesondere auch geradkettige oder verzweigte offenkettige Kohlenwasserstoffreste mit mehr als einer Doppelbindung ein, wie 1,3-Butadienyl und 1,4-Pentadienyl, aber auch Allenyl- oder Kumulenyl-reste mit einer bzw. mehreren kumulierten Doppelbindungen, wie beispielsweise Allenyl (1,2-Propadienyl), 1,2-Butadienyl und 1,2,3-Pentatrienyl. Alkenyl bedeutet z.B. Vinyl, welches ggf. durch weitere Alkylreste substituiert sein kann, z B. (aber nicht beschränkt auf) (C₂-C₆)-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Der Begriff "Alkinyl" schließt insbesondere auch geradkettige oder verzweigte offenkettige Kohlenwasserstoffreste mit mehr als einer Dreifachbindung oder auch mit einer oder mehreren Dreifachbindungen und einer oder mehreren Doppelbindungen ein, wie beispielsweise 1,3-Butatrienyl bzw. 3-Penten-1-in-1-yl. (C₂-C₆)-Alkinyl bedeutet z.B. Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Me¬thyl-1-pentinyl, 4-Methyl-2-pentinyl, 1,1-Di-methyl-2-butinyl, 1,1-Dimethyl-3-butinyl, 1,2-Di¬methyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Der Begriff "Cycloalkyl" bedeutet ein carbocyclisches, gesättigtes Ringsystem mit vorzugsweise 3-8 Ring-C-Atomen, z.B. Cyclopropyl, Cyclobutyl, Cyclopentyl oder Cyclohexyl, das gegebenenfalls weiter substituiert ist, bevorzugt durch Wasserstoff, Alkyl, Alkoxy, Cyano, Nitro, Alkylthio, Haloalkylthio, Halogen, Alkenyl, Alkinyl, Haloalkyl, AMino, Alkylamino, Bisalkylamino, Alkocycarbonyl, Hydroxycarbonyl, Arylalkoxycarbonyl, Aminocarbonyl, Alkylaminocarbonyl, Cycloalkylaminocarbonyl. Im Falle von gegebenenfalls substituiertem Cycloalkyl werden cyclische Systeme mit Substituenten umfasst, wobei auch Substituenten mit einer Doppelbindung am Cycloalkylrest, z. B. eine Alkylidengruppe wie Methyliden, umfasst sind. Im Falle von gegebenenfalls substituiertem Cycloalkyl werden auch mehrcyclische aliphatische Systeme umfasst, wie beispielsweise Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl und Adamantan-2-yl, aber auch Systeme wie z. B. 1,1'-Bi(cyclopropyl)-1-yl, 1,1'-Bi(cyclopropyl)-2-yl. Der Ausdruck "(C₃-C₇)-Cycloalkyl" bedeutet eine Kurzschreibweise für Cycloalkyl mit drei bis 7 Kohlenstoffatomen entsprechend der Bereichsangabe für C-Atome.

Im Falle von substituiertem Cycloalkyl werden auch spirocyclische aliphatische Systeme umfasst, wie beispielsweise Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl.

"Cycloalkenyl" bedeutet ein carbocyclisches, nicht aromatisches, partiell ungesättigtes Ringsystem mit vorzugsweise 4-8 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, wobei auch Substituenten mit einer Doppelbindung am Cycloalkenylrest, z. B. eine Alkylidengruppe wie Methyliden, umfasst sind. Im Falle von gegebenenfalls substituiertem Cycloalkenyl gelten die Erläuterungen für substituiertes Cycloalkyl entsprechend.

Der Begriff "Alkyliden", z. B. auch in der Form (C₁-C₁₀)-Alkyliden, bedeutet den Rest eines geradkettigen oder verzweigten offenkettigen Kohlenwasserstoffrests, der über eine Zweifachbindung gebunden ist. Als Bindungsstelle für Alkyliden kommen naturgemäß nur Positionen am Grundkörper in Frage, an denen zwei H-Atome durch die Doppelbindung ersetzt werden können; Reste sind z. B. =CH₂, =CH-CH₃, =C(CH₃)-CH₃, =C(CH₃)-C₂H₅ oder =C(C₂H₅)-C₂H_{5.} Cycloalkyliden bedeutet ein carbocyclischer Rest, der über eine Zweifachbindung gebunden ist.

Wenn die Verbindungen durch Wasserstoffverschiebung Tautomere bilden können, welche strukturell formal nicht durch die Formeln (I) und (II) erfasst würden, so sind diese Tautomere gleichwohl von der Definition der erfindungsgemäßen Verbindungen der Formeln (I) und (II) umfasst, sofern nicht ein bestimmtes Tautomer Gegenstand der Betrachtung ist. So können beispielsweise viele Carbonylverbindungen sowohl in der Ketoform wie auch in der Enolform vorliegen, wobei beide Formen durch die Definition der Verbindung der Formeln (I) und (II) umfasst werden.

Die Verbindungen der allgemeinen Formeln (I) und (II) können je nach Art und Verknüpfung der Substituenten als Stereoisomere vorliegen. Die durch ihre spezifische Raumform definierten möglichen Stereoisomere, wie Enantiomere, Diastereomere, Z-und E-Isomere sind alle von den Formeln (I) und (II) umfasst. Sind beispielsweise eine oder mehrere Alkenylgruppen vorhanden, so können Diastereomere (Z- und E-Isomere) auftreten. Sind beispielsweise ein oder mehrere asymmetrische Kohlenstoffatome vorhanden, so können Enantiomere und Diastereomere auftreten. Stereoisomere lassen sich aus den bei der Herstellung anfallenden Gemischen nach üblichen Trennmethoden erhalten. Die chromatographische Trennung kann sowohl im analytischen Maßstab zur Feststellung des Enantiomerenüberschusses bzw. des Diastereomerenüberschusses, wie auch im präparativen Maßstab zur Herstellung von Prüfmustern für die biologische Ausprüfung erfolgen. Ebenso können Stereoisomere durch Einsatz stereoselektiver Reaktionen unter Verwendung optisch aktiver Ausgangs- und/oder Hilfsstoffe selektiv hergestellt werden. Die Erfindung betrifft somit auch alle Stereoisomeren, die von den allgemeinen Formeln (I) und (II) umfasst, jedoch nicht mit ihrer spezifischen Stereoform angegeben sind, sowie deren Gemische.

### Synthese von substituierten Thio-1,2,4-triazolen:

Substituierte Thio-1,2,4-triazole der allgemeinen Formeln (I) und (II) können nach bekannten Verfahren hergestellt werden (vgl. Arch. Pharmazie 2012, 345, 203; Acta Pharmaceutica Sciencia 2010, 52, 353; WO2010/068172; Pharm. Chem. J. 2009, 43, 12; Molecules, 2010, 15, 766; Med. Chem. 2007, 3, 551; WO2003/065983; WO2006/013948; JP2005/170939; Med. Chem. Res. 2013, 22, 4239; J. Med. Chem. 2013, 56, 437; Med. Chem. Res. 2013, 22, 3193; WO2012/154403; Mol. Diversity 2012, 16, 251; Pharm. Chem. J. 2012, 45, 705; CN102391193; Lett. Drug. Design Disc. 2012, 9, 431; Molecules, 2013, 18, 12725; Asian J. Chem. 2013, 25, 8723; Monatsh. Chem. 2014, 145, 319; Phosphorous, Sulfur, Silicon and rel. Elem. 2014, 189, 379; Int. J. Mol. Sciences 2014, 15, 8075; Drug Des. Develop. Ther. 2014, 8, 505; Russ. J. Org. Chem. 2014, 50, 736; J. Heterocyclic Chem. 2014, 51, 690). Verschiedene literaturbekannte Herstellungswege zum Aufbau der Kernstruktur wurden verwendet und teilweise optimiert (siehe Schema 1). Ausgewählte detaillierte Synthesebeispiele sind im nächsten Abschnitt aufgeführt. Die eingesetzten und untersuchten Syntheserouten zur Herstellung von substituierten Thio-1,2,4-triazolen gehen dabei von kommerziell erhältlichen oder anhand von literaturbeschriebenen Syntheserouten leicht herstellbaren Aryl-, Alkyl-, Cycloalkyl- und Heteroarylcarbonsäuren oder den entsprechenden Carbonsäurechloriden aus. Die betreffende gegebenenfalls weiter substituierte Carbonsäure wird dabei mit Hilfe geeigneter Methylierungsreagenzien (z. B. Methanol unter Zusatz von konz. Schwefelsäure) in den entsprechenden Carbonsäureester überführt und danach durch Reaktion mit Hydrazinhydrat in einem geeigneten polar-aprotischen Lösemittel in ein entsprechendes Carbonsäurehydrazid (A) umgesetzt. Alternativ wird die betreffende gegebenenfalls weiter substituierte Carbonsäure mit Hilfe eines geeigneten Chlorierungsmittels (z. B. Oxalylchlorid oder Thionylchlorid) in einem aprotischen Lösemittel (z.B. Toluol) in das entsprechende Carbonsäurechlorid überführt, falls dieses nicht kommerziell verfügbar ist, und dieses danach mit einem Hydrazin-Hydrat unter Verwendung einer geeigneten Base (z.B. Triethylamin (Et₃N), Di-iso-Propylethylamin) in einem geeigneten polar-aprotischen Lösemittel (z.B. Tetrahydrofuran (THF) oder Dichlormethan (DCM)) zu dem entsprechenden Carbonsäurehydrazid (A) umgesetzt. Das Carbonsäurehydrazid (A) wird daraufhin mit einem geeigneten gegebenenfalls weiter substituierten Isothiocyanat in einem geeigneten Lösemittel (z. B. Ethanol oder Methanol) bei erhöhter Temperatur in das entsprechende gegebenenfalls weiter substituierte Thiosemicarbazid (B) überführt, das im nächsten Schritt unter Verwendung einer geeigneten Base (z. B. Natriumhydroxid (NaOH) oder Kaliumhydroxid (KOH)) zum entsprechenden gegebenenfalls weiter substituierten Thio-1,2,4-triazol (C) cyclisiert wird. Das intermediäre gegebenenfalls weiter substituierte Thio-1,2,4-triazol (C) wird daraufhin beispielsweise mit einem geeigneten gegebenenfalls weiter substituierten Benzyl oder Heteroarylmethylhalogenid unter Verwendung einer geeigneten Base (z. B. Kaliumcarbonat oder Natriumcarbonat) in einem geeigneten Lösemitten (z. B. Tetrahydrofuran (THF), Acetonitril (MeCN) oder Methanol) in das entsprechende substituierte Benzyl- oder Heteroarylmethylthio-1,2,4-triazol (**Ia**) oder mit einem geeigneten gegebenenfalls weiter substituierten 2-Halogen-N-Aryl- oder Heteroarylacetamid (**D**) unter Verwendung einer geeigneten Base (z. B. Kaliumcarbonat, Caesiumcarbonat oder Natriumcarbonat) in das gegebenenfalls weiter substituierte Thio-1,2,4-triazolylacetamid (**Ib**) überführt. R¹ und R² sowie A¹, A², A³, A⁴ und A⁵ haben im unten stehenden Schema 1 die zuvor definierten Bedeutungen, R³ und R⁴ stehen beispielhaft, aber nicht einschränkend, im folgenden Schema 1 für Wasserstoff, Y steht beispielhaft, aber nicht einschränkend, für eine Bindung im Fall von Verbindungen des Typs (**Ia**) und für C(O)NH im Fall von Verbindungen des Typs (**Ib**), und n und m stehen beispielhaft, aber nicht einschränkend, für 0.

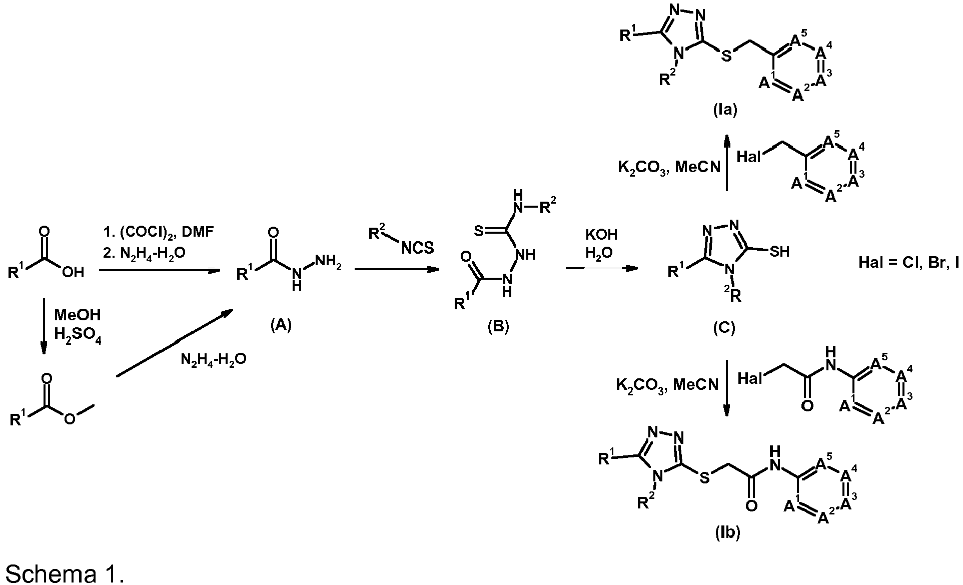

Das Schwefelatom in gegebenenfalls weiter substituierten Thio-1,2,4-triazolen (**I**) kann mit Hilfe von geeigneten Oxidationsmitteln (z.B. meta-Chlorperoxybenzoesäure (MCPBA) oder Wasserstoffperoxid) oxidiert werden. In Abhängigkeit von der eingesetzten Menge an Oxidationsmittel werden dabei in der in Schema 2 beispielhaft, aber nicht einschränkend dargestellten Umsetzung des gegebenenfalls weiter substituierten Thio-1,2,4-triazols (**Ia**) entweder das entsprechende Sulfoxid (**Ic**), das entsprechende Sulfon (**Id**) oder ein Gemisch aus (**Ic**) und (**Id**) gebildet. R¹ und R² sowie A¹, A², A³, A⁴ und A⁵ haben im folgenden Schema 2 die zuvor definierten Bedeutungen, R³ und R⁴ stehen beispielhaft, aber nicht einschränkend, im folgenden Schema 2 für Wasserstoff und Y steht beispielhaft, aber nicht einschränkend, für eine Bindung.

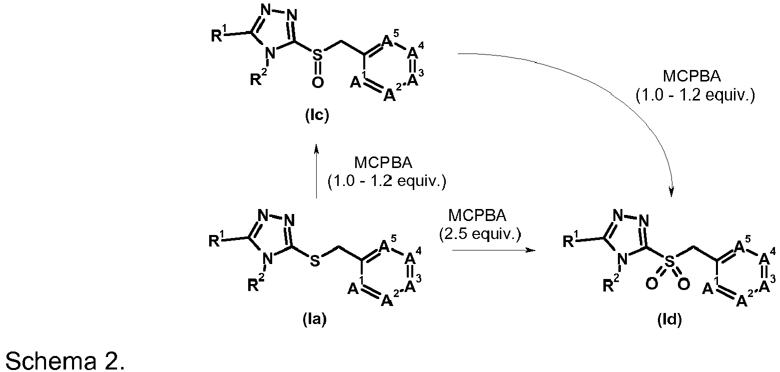

Ausgewählte detaillierte Synthesebeispiele für die Verbindungen der allgemeinen Formeln (I) und (II) sind im Folgenden aufgeführt. Die angegebenen Beispielnummern entsprechen den in den nachstehenden Tabellen A1 bis S4 genannten Numerierungen. Die ¹H-NMR-, ¹³C-NMR- und ¹⁹F-NMR-spektroskopischen Daten, die für die in den nachfolgenden Abschnitten beschriebenen chemischen Beispiele angegeben sind, (400 MHz bei ¹H-NMR und 150 MHz bei ¹³C-NMR und 375 MHz bei ¹⁹F-NMR, Lösungsmittel CDCl₃, CD₃OD oder d₆-DMSO, interner Standard: Tetramethylsilan δ = 0.00 ppm), wurden mit einem Gerät der Firma Bruker erhalten, und die bezeichneten Signale haben die nachfolgend aufgeführten Bedeutungen: br = breit(es); s = Singulett, d = Dublett, t = Triplett, dd = Doppeldublett, ddd = Dublett eines Doppeldubletts, m = Multiplett, q = Quartett, quint = Quintett, sext = Sextett, sept = Septett, dq = Doppelquartett, dt = Doppeltriplett. Bei Diastereomerengemischen werden entweder die jeweils signifikanten Signale beider Diastereomere oder das charakteristische Signal des Hauptdiastereomers angegeben. Die verwendeten Abkürzungen für chemische Gruppen haben beispielsweise die nachfolgenden Bedeutungen: Me = CH₃, Et = CH₂CH₃, t-Hex = C(CH₃)₂CH(CH₃)₂, t-Bu = C(CH₃)₃, n-Bu = unverzweigtes Butyl, n-Pr = unverzweigtes Propyl, i-Pr = verzweigtes Propyl, c-Pr = Cyclopropyl, c-Hex = Cyclohexyl.

### Synthesebeispiele:

### No. A1-462: 3-Cyclopropyl-4-methyl-5-[(2,6-difluorphenyl-n-propyl)-sulfanyl]-4H-1,2,4-triazol

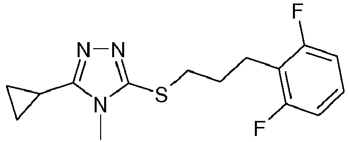

Cyclopropancarbonsäuremethylester (1 equiv) wurde in abs. Ethanol (40 ml) gelöst und mit Hydrazinhydrat (5 equiv) versetzt. Das resultierende Reaktionsgemisch wurde 4 h lang unter Rückflussbedingungen gerührt und nach dem Abkühlen auf Raumtemperatur vorsichtig eingeengt. Eine Teilmenge des so erhaltenen Cyclopropanoylhydrazids (1 equiv) wurde ohne weitere Reinigung in abs. Ethanol (1.5 ml/mmol) gelöst und mit Methylisothiocyanat (1.3 equiv) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-Cyclopropanoyl-N-(Methyl)hydrazincarbothioamid in Form eines farblosen Feststoffs erhalten. 2-Cyclopropanoyl-N-(methyl)hydrazincarbothioamid (1 equiv) wurde ohne weitere Reinigung in wässrige 2N Natriumhydroxidlösung gegeben (2.5 ml/mmol) und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser (zweimal jeweils 1ml/mmol) nachgewaschen. Durch gründliches Trocknen im Exsikkator über P₂O₅/KOH wurde 5-Cyclopropyl-4-methyl-4H-1,2,4-triazol-3-thiol in Form eines farblosen Feststoffs erhalten. 5-Cyclopropyl-4-methyl-4H-1,2,4-triazol-3-thiol (300 mg, 1.93 mmol) und frisch gepulvertes Kaliumcarbonat (668 mg, 4.83 mmol) wurden in abs. N,N-Dimethylformamid (20 ml) unter Argon gegeben und nach 5 Minuten Rühren bei Raumtemperatur mit 2,6-Difluorphenyl-n-propylbromid (500 mg, 2.13 mmol) versetzt. Das resultierende Reaktionsgemisch wurde 5 Stunden lang bei einer Temperatur von 90 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclopropyl-4-methyl-5-[(2,6-difluorphenyl-n-propyl)-sulfanyl]-4H-1,2,4-triazol in Form eines farblosen Feststoffs isoliert werden (368 mg, 61 % der Theorie), ¹H-NMR (400 MHz, CDCl₃ δ, ppm) 7.16-7.11 (m, 1 H), 6.86-6.81 (m, 2H), 3.58 (s, 3H), 3.18 (t, 2H), 2.82 (t, 2H), 2.05-2.00 (m, 2H), 1.74-1.70 (m, 1 H), 1.11-1.07 (m, 2H), 1.04-1.01 (m, 2H); ¹³C-NMR (150 MHz, CDCl₃ δ, ppm) 162.4; 162.3; 157.4; 149.9; 127.7; 116.6; 111.2; 111.0; 33.0; 29.8; 29.3; 21.2; 6.4; 5.6.

### No. B6-63: 3-(4-Chlorphenyl)-4-ethyl-5-[(4-cyanobenzyl)-sulfanyl]-4H-1,2,4-triazol

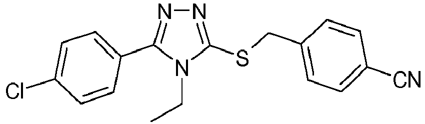

4-Chlorphenylcarbonsäuremethylester (1 equiv) wurde in abs. Ethanol (1 ml/mmol) gelöst und mit Hydrazinhydrat (5 equiv) versetzt. Das resultierende Reaktionsgemisch wurde 4 h lang unter Rückflussbedingungen gerührt und nach dem Abkühlen auf Raumtemperatur vorsichtig eingeengt. Das so erhaltene 4-Chlorbenzoylhydrazid wurde ohne weitere Reinigung in abs. Ethanol (1.5 ml/mmol) gelöst und mit Ethylisothiocyanat (1.5 equiv) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-(4-Chlorbenzoyl)-N-(ethyl)hydrazincarbothioamid in Form eines farblosen Feststoffs erhalten. 2-(4-Chlorbenzyl)-N-(ethyl)hydrazincarbothioamid (1 equiv) wurde ohne weitere Reinigung in wässrige 2N Natriumhydroxidlösung gegeben (2.5 ml/mmol), und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser sowie n-Hexan (zweimal jeweils 1ml/mmol) nachgewaschen. Durch gründliches Trocknen im Exsikkator über P₂O₅/KOH wurde 5-(4-Chlorphenyl)-4-ethyl-4H-1,2,4-triazol-3-thiol in Form eines farblosen Feststoffs erhalten. 5-(4-Chlorphenyl)-4-ethyl-4H-1,2,4-triazol-3-thiol (1000 mg, 4.17 mmol) und frisch gepulvertes Kaliumcarbonat (1441 mg, 10.43 mmol) wurden in abs. Acetonitril (25 ml) unter Argon gegeben und nach 5 Minuten Rühren bei Raumtemperatur mit 4-Cyanobenzylchlorid (664 mg, 4.38 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-(4-Chlorphenyl)-4-ethyl-5-[(4-cyanobenzyl)-sulfanyl]-4H-1,2,4-triazol in Form eines farblosen Feststoffs isoliert werden (1008 mg, 68% der Theorie), ¹H-NMR (600 MHz, CDCl₃ δ, ppm) 7.61 (d, 2H), 7.56 (d, 2H), 7.53-7.48 (m, 4H), 4.55 (s, 2H), 3.86 (q, 2H), 1.24 (t, 3H); ¹³C-NMR (150 MHz, CDCl₃ δ, ppm) 154.8; 150.2; 142.5; 136.6; 132.5; 132.4; 129.9; 129.7; 129.4; 129.3; 125.6; 118.5; 111.7; 39.7; 36.8; 15.3.

### No. D2-15: 3-Cyclobutyl-4-cyclopropyl-5-[(2,4-difluorbenzyl)-sulfanyl]-4H-1,2,4-triazol

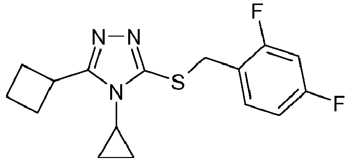

Cyclobutancarbonsäuremethylester (7.00 g, 61,33 mmol) wurde in abs. Ethanol (40 ml) gelöst und mit Hydrazinhydrat (18.65 ml, 306.63 mmol) versetzt. Das resultierende Reaktionsgemisch wurde 4 h lang unter Rückflussbedingungen gerührt und nach dem Abkühlen auf Raumtemperatur vorsichtig eingeengt. Eine Teilmenge des so erhaltenen Cyclobutanoylhydrazids (2.90 g, 25.41 mmol) wurde ohne weitere Reinigung in abs. Ethanol (1.5 ml/mmol) gelöst und mit Cyclopropylisothiocyanat (3.78 g, 38.11 mmol) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-Cyclobutanoyl-N-(Cyclopropyl)hydrazincarbothioamid (4.92 g, 91 % der Theorie) in Form eines farblosen Feststoffs erhalten. 2-Cyclobutanoyl-N-(Cyclopropyl)hydrazincarbothioamid (4.87 g, 20.57 mmol) wurde ohne weitere Reinigung in wässrige 2N Natriumhydroxidlösung gegeben (51.41 ml), und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser (zweimal jeweils 1ml/mmol) nachgewaschen. Durch gründliches Trocknen im Exsikkator über P₂O₅/KOH wurde 5-Cyclobutyl-4-cyclopropyl-4H-1,2,4-triazol-3-thiol (3.69 g, 92 % der Theorie) in Form eines farblosen Feststoffs erhalten. 5-Cyclobutyl-4-cyclopropyl-4H-1,2,4-triazol-3-thiol (195 mg, 1.00 mmol) und frisch gepulvertes Kaliumcarbonat (346 mg, 2.50 mmol) wurden in abs. Acetonitril (8 ml) unter Argon gegeben und nach 5 Minuten Rühren bei Raumtemperatur mit 2,4-Difluorbenzylchlorid (171 mg, 1.05 mmol) versetzt. Das resultierende Reaktionsgemisch wurde zweieinhalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclobutyl-4-cyclopropyl-5-[(2,4-difluorbenzyl)-sulfanyl]-4H-1,2,4-triazol in Form eines farblosen Feststoffs isoliert werden (146 mg, 43% der Theorie), ¹H-NMR (400 MHz, CDCl₃ δ, ppm) 7.59 (m, 1 H), 6.82-6.76 (m, 2H), 4.47 (s, 2H), 3.62 (m, 1 H), 2.73 (m, 1 H), 2.54-2.47 (m, 2H), 2.40-2.35 (m, 2H), 2.13-2.07 (m, 1 H), 2.05-1.94 (m, 1 H), 1.11-1.03 (m, 2H), 0.95-0.88 (m, 2H).

### No. D2-99: 3-Cyclobutyl-4-cyclopropyl-5-[(2,6-dichlorpyridin-3-yl)-sulfanyl]-4H-1,2,4-triazol

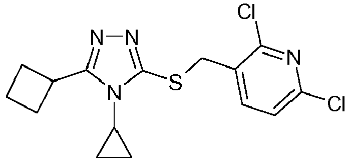

5-Cyclobutyl-4-cyclopropyl-4H-1,2,4-triazol-3-thiol (120 mg, 0.61 mmol) und frisch gepulvertes Kaliumcarbonat (212 mg, 1.54 mmol) wurden in abs. Acetonitril (5 ml) unter Argon gegeben und nach 5 Minuten Rühren bei Raumtemperatur mit 2,6-Dichlororpyridin-3-ylmethylchlorid (127 mg, 0.64 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclobutyl-4-cyclopropyl-5-[(2,6-dichlorpyridin-3-yl)-sulfanyl]-4H-1,2,4-triazol in Form eines farblosen Feststoffs isoliert werden (146 mg, 67% der Theorie), ¹H-NMR (400 MHz, CDCl₃ δ, ppm) 8.17 (d, 1H), 7.20 (d, 1H), 4.51 (s, 2H), 3.66-3.58 (m, 1 H), 2.81-2.76 (m, 1 H), 2.55-2.47 (m, 2H), 2.42-2.35 (m, 2H), 2.14-1.97 (m, 2H), 1.12-1.07 (m, 2H), 0.93-0.88 (m, 2H).

### No. D2-681: 3-Cyclobutyl-4-cyclopropyl-5-[(2-fluor-4-methyl-5-(3,3,3-trifluorethyl-sulfanyl)phenylcarbonylmethyl)-sulfanyl]-4H-1,2,4-triazol

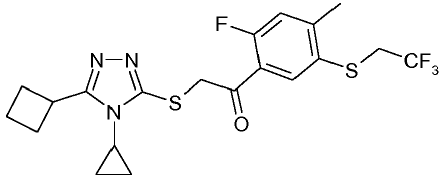

5-Cyclobutyl-4-cyclopropyl-4H-1,2,4-triazol-3-thiol (110 mg, 0.32 mmol) und frisch gepulvertes Kaliumcarbonat (110 mg, 0.79 mmol) wurden in abs. Acetonitril (5 ml) unter Argon gegeben und nach 5 Minuten Rühren bei Raumtemperatur mit 2-Brom-1-[2-fluor-4-methyl-5-(3,3,3-trifluorethylsulfanyl)phenyl]ethanon (68 mg, 0.70 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclobutyl-4-cyclopropyl-5-[(2-fluor-4-methyl-5-(3,3,3-trifluorethyl-sulfanyl)phenylcarbonylmethyl)-sulfanyl]-4H-1,2,4-triazol in Form eines farblosen Feststoffs isoliert werden (115 mg, 78% der Theorie), ¹H-NMR (400 MHz, CDCl₃ δ, ppm) 8.09 (m, 1 H), 7.09 (m, 1 H), 4.78 (s, 2H), 3.66-3.60 (m, 1 H), 4.34-3.36 (q, 2H), 2.93-2.87 (m, 1 H), 2.52-2.48 (m, 2H), 2.42-2.34 (m, 2H), 2.13-1.97 (m, 2H), 1.16-1.11 (m, 2H), 1.04-0.98 (m, 2H).

### No. D3-63: 3-Cyclopentyl-4-cyclopropyl-5-[(4-Cyanobenzyl)-sulfanyl]-4H-1,2,4-triazol

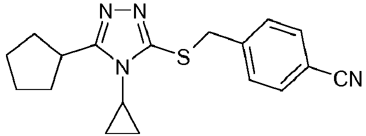

Cyclopentancarbonsäuremethylester (1.0 g, 7.80 mmol) wurde in abs. Ethanol (10 ml) gelöst und mit Hydrazinhydrat (1.89 ml, 39.01 mmol) versetzt. Das resultierende Reaktionsgemisch wurde 4 h lang unter Rückflussbedingungen gerührt und nach dem Abkühlen auf Raumtemperatur vorsichtig eingeengt. Das so erhaltene Cyclopentanoylhydrazid (840 mg, 6.55 mmol) wurde ohne weitere Reinigung in abs. Ethanol (1.5 ml/mmol) gelöst und mit Cyclopropylisothiocyanat (0.91 ml, 9.83 mmol) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-Cyclopentanoyl-N-(Cyclopropyl)hydrazincarbothioamid (520 mg, 35 % der Theorie) in Form eines farblosen Feststoffs erhalten. 2-Cyclopentanoyl-N-(Cyclopropyl)hydrazincarbothioamid (520 mg, 2.29 mmol) wurde ohne weitere Reinigung in wässrige 2N Natriumhydroxidlösung gegeben (20 ml), und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser sowie Hexan (zweimal jeweils 1ml/mmol) nachgewaschen. Durch gründliches Trocknen wurde 5-Cyclopentyl-4-cyclopropyl-4H-1,2,4-triazol-3-thiol (3.69 g, 92 % der Theorie) in Form eines farblosen Feststoffs erhalten. 5-Cyclopentyl-4-cyclopropyl-4H-1,2,4-triazol-3-thiol (140 mg, 0.67 mmol) und frisch gepulvertes Kaliumcarbonat (231 mg, 1.67 mmol) wurden in abs. Acetonitril (5 ml) unter Argon gegeben und nach 5 Minuten Rühren bei Raumtemperatur mit 2,6-4-Cyanobenzylchlorid (106 mg, 0.70 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclopentyl-4-cyclopropyl-5-[(4-Cyanobenzyl)-sulfanyl]-4H-1,2,4-triazol in Form eines farblosen Feststoffs isoliert werden (136 mg, 63% der Theorie), ¹H-NMR (400 MHz, CDCl₃ δ, ppm) 7.59 (m, 4H), 4.50 (s, 2H), 3.24-3.19 (m, 1 H), 2.87-2.81 (m, 1 H), 2.12-2.04 (m, 2H), 2.02-1.94 (m, 2H), 1.91-1.85 (m, 2H), 1.72-1.64 (m, 2H), 1.14-1.10 (m, 2H), 1.03-0.97 (m, 2H).

### No. D3-99: 3-Cyclopentyl-4-cyclopropyl-5-[(2,6-dichlorpyridin-3-yl)-sulfanyl]-4H-1,2,4-triazol

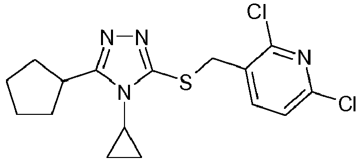

5-Cyclopentyl-4-cyclopropyl-4H-1,2,4-triazol-3-thiol (140 mg, 0.67 mmol) und frisch gepulvertes Kaliumcarbonat (231 mg, 1.67 mmol) wurden in abs. Acetonitril (5 ml) unter Argon gegeben und nach 5 Minuten Rühren bei Raumtemperatur mit 2,6-Dichlororpyridin-3-ylmethylchlorid (138 mg, 0.70 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-Cyclopentyl-4-cyclopropyl-5-[(2,6-dichlorpyridin-3-yl)-sulfanyl]-4H-1,2,4-triazol in Form eines farblosen Feststoffs isoliert werden (121 mg, 49% der Theorie), ¹H-NMR (400 MHz, CDCl₃ δ, ppm) 8.17 (d, 1H), 7.19 (d, 1H), 4.50 (s, 2H), 3.24-3.19 (m, 1 H), 2.87-2.81 (m, 1 H), 2.12-2.04 (m, 2H), 2.00-1.92 (m, 2H), 1.90-1.81 (m, 1 H), 1.70-1.65 (m, 1 H), 1.33-1.25 (m, 2H), 1.18-1.13 (m, 2H), 1.03-0.97 (m, 2H).

### No. D6-13: 3-(4-Chlorphenyl)-4-cyclopropyl-5-[(4-fluorbenzyl)-sulfanyl]-4H-1,2,4-triazol

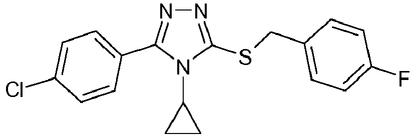

4-Chlorphenylcarbonsäuremethylester (1 equiv) wurde in abs. Ethanol (1 ml/mmol) gelöst und mit Hydrazinhydrat (5 equiv) versetzt. Das resultierende Reaktionsgemisch wurde 4 h lang unter Rückflussbedingungen gerührt und nach dem Abkühlen auf Raumtemperatur vorsichtig eingeengt. Das so erhaltene 4-Chlorbenzoylhydrazid wurde ohne weitere Reinigung in abs. Ethanol (1.5 ml/mmol) gelöst und mit Cyclopropylisothiocyanat (1.5 equiv) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-(4-Chlorbenzoyl)-N-(cyclopropyl)hydrazin-carbothioamid in Form eines farblosen Feststoffs erhalten. 2-(4-Chlorbenzyl)-N-(cyclopropyl)hydrazincarbothioamid (1equiv) wurde ohne weitere Reinigung in wässrige 2N Natriumhydroxidlösung gegeben (2.5 ml/mmol), und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser sowie n-Hexan (zweimal jeweils 1ml/mmol) nachgewaschen. Durch gründliches Trocknen im Exsikkator über P₂O₅/KOH wurde 5-(4-Chlorphenyl)-4-cyclopropyl-4H-1,2,4-triazol-3-thiol in Form eines farblosen Feststoffs erhalten. 5-(4-Chlorphenyl)-4-cyclopropyl-4H-1,2,4-triazol-3-thiol (1000 mg, 3.97 mmol) und frisch gepulvertes Kaliumcarbonat (1372 mg, 9.93 mmol) wurden in abs. Acetonitril (25 ml) unter Argon gegeben und nach 5 Minuten Rühren bei Raumtemperatur mit 4-Fluorbenzylchlorid (0.50 ml, 4.17 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 3-(4-Chlorphenyl)-4-cyclopropyl-5-[(4-fluorbenzyl)-sulfanyl]-4H-1,2,4-triazol in Form eines farblosen Feststoffs isoliert werden (1029 mg, 72% der Theorie), ¹H-NMR (400 MHz, CDCl₃ δ, ppm) 7.72 (d, 2H), 7.47-7.43 (m, 4H), 7.04-6.99 (m, 2H), 4.54 (s, 2H), 3.08-3.02 (m, 1 H), 1.07-1.01 (m, 2H), 0.71-0.66 (m, 2H).

### No. D6-726: N-(2-Chlorphenyl)-2-(Cyclopropyl-5-(4-chlorphenyl)-4H-1,2,4-triazol-3-yl)thio)acetamid

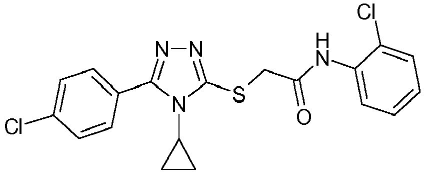

4-Chlorphenylcarbonsäuremethylester (1 equiv) wurde in abs. Ethanol (1 ml/mmol) gelöst und mit Hydrazinhydrat (5 equiv) versetzt. Das resultierende Reaktionsgemisch wurde 4 h lang unter Rückflussbedingungen gerührt und nach dem Abkühlen auf Raumtemperatur vorsichtig eingeengt. Das so erhaltene 4-Chlorbenzoylhydrazid wurde ohne weitere Reinigung in abs. Ethanol (1.5 ml/mmol) gelöst und mit Cyclopropylisothiocyanat (1.5 equiv) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-(4-Chlorbenzoyl)-N-(cyclopropyl)hydrazin-carbothioamid in Form eines farblosen Feststoffs erhalten. 2-(4-Chlorbenzyl)-N-(cyclopropyl)hydrazincarbothioamid (1equiv) wurde ohne weitere Reinigung in wässrige 2N Natriumhydroxidlösung gegeben (2.5 ml/mmol), und das so erhaltene Reaktionsgemisch wurde 3 h lang unter Rückflussbedingungen gerührt. Nach dem Abkühlen auf Raumtemperatur wurde das Reaktionsgemisch weiter auf 5 °C heruntergekühlt und danach durch vorsichtige Zugabe von Essigsäure auf einen pH-Wert von 7 eingestellt. Der ausgefallene Feststoff wurde abfiltriert und mit Wasser sowie n-Hexan (zweimal jeweils 1ml/mmol) nachgewaschen. Durch gründliches Trocknen im Exsikkator über P₂O₅/KOH wurde 5-(4-Chlorphenyl)-4-cyclopropyl-4H-1,2,4-triazol-3-thiol in Form eines farblosen Feststoffs erhalten. 5-(4-Chlorphenyl)-4-cyclopropyl-4H-1,2,4-triazol-3-thiol (1500 mg, 5.96 mmol) und frisch gepulvertes Kaliumcarbonat (2059 mg, 14.89 mmol) wurden in abs. Acetonitril (5 ml) unter Argon gegeben und nach 5 Minuten Rühren bei Raumtemperatur mit N-(Chloracetyl)-2-chloranilin (1337 mg, 6.56 mmol) versetzt. Das resultierende Reaktionsgemisch wurde anderthalb Stunden lang bei einer Temperatur von 40 °C gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte N-(2-Chlorphenyl)-2-(Cyclopropyl-5-(4-chlorphenyl)-4H-1,2,4-triazol-3-yl)thio)acetamid in Form eines farblosen Feststoffs isoliert werden (1369 mg, 55% der Theorie), ¹H-NMR (400 MHz, CDCl₃ δ, ppm) 9.92 (br. s, 1 H, NH), 8.32 (d, 1 H), 7.73 (d, 2H), 7.48 (m, 2H), 7.33 (d, 1H), 7.23 (m, 1 H), 7.04 (m, 1H), 4.16 (s, 2H), 3.22-3.18 (m, 1 H), 1.14-1.09 (m, 2H), 0.81-0.76 (m, 2H).

### No. L17-726: N-(2-Chlorphenyl)-2-(Cyclopropyl-5-(4-chlorphenyl)-4H-1,2,4-triazol-3-yl)sulfinyl)acetamid

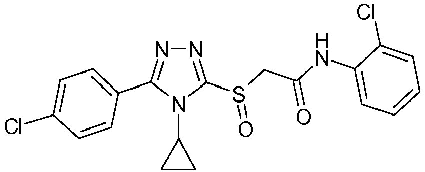

N-(2-Chlorphenyl)-2-(Cyclopropyl-5-(4-chlorphenyl)-4H-1,2,4-triazol-3-yl)thio)acetamid (200 mg, 0.48 mmol) wurde in abs. Dichlormethan (5 ml) unter Argon gelöst und nach 5 Minuten Rühren bei Raumtemperatur mit m-Chlorperbenzoesäure (129 mg, 0.57 mmol, 77%ige Reinheit) versetzt. Das resultierende Reaktionsgemisch wurde fünf Stunden lang bei Raumtemperatur gerührt und danach mit ges. Natriumhydrogencarbonatlösung und Dichlormethan versetzt. Die wässrige Phase wurde mehrfach intensiv mit Dichlormethan extrahiert, und die vereinigten organischen Phasen wurden mit Natriumbislufitlösung gewaschen, danach über Magnesiumsulfat getrocknet, filtriert und vorsichtig eingeengt, nachdem ein Peroxidtest durchgeführt worden war. Durch abschließende säulenchromatographische Reinigung des resultierenden Rohproduktes konnte N-(2-Chlorphenyl)-2-(Cyclopropyl-5-(4-chlorphenyl)-4H-1,2,4-triazol-3-yl)thio)acetamid in Form eines farblosen Feststoffs isoliert werden (193 mg, 93% der Theorie), ¹H-NMR (400 MHz, d₆-DMSO δ, ppm) 10.25 (br. s, 1 H, NH), 7.94 (d, 2H), 7.70 (m, 1 H), 7.67 (d, 2H), 7.52 (m, 1 H), 7.36 (m, 1H), 7.23 (m, 1H), 5.01 (d, 1H), 4.77 (d, 1 H), 3.85-3.80 (m, 1 H), 1.19-1.11 (m, 2H), 1.01-0.96 (m, 1 H), 0.81-0.75 (m, 1 H).

### No. M17-726: N-(2-Chlorphenyl)-2-(Cyclopropyl-5-(4-chlorphenyl)-4H-1,2,4-triazol-3-yl)sulfonyl)acetamid

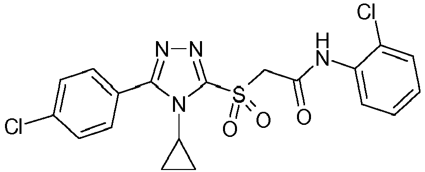

N-(2-Chlorphenyl)-2-(Cyclopropyl-5-(4-chlorphenyl)-4H-1,2,4-triazol-3-yl)thio)acetamid (200 mg, 0.48 mmol) wurde in abs. Dichlormethan (5 ml) unter Argon gelöst und nach 5 Minuten Rühren bei Raumtemperatur mit m-Chlorperbenzoesäure (235 mg, 1.05 mmol, 77%ige Reinheit) versetzt. Das resultierende Reaktionsgemisch wurde fünf Stunden lang bei Raumtemperatur gerührt und danach mit ges. Natriumhydrogencarbonatlösung und Dichlormethan versetzt. Die wässrige Phase wurde mehrfach intensiv mit Dichlormethan extrahiert, und die vereinigten organischen Phasen wurden mit Natriumbislufitlösung gewaschen, danach über Magnesiumsulfat getrocknet, filtriert und vorsichtig eingeengt, nachdem ein Peroxidtest durchgeführt worden war. Durch abschließende säulenchromatographische Reinigung des resultierenden Rohproduktes konnte N-(2-Chlorphenyl)-2-(Cyclopropyl-5-(4-chlorphenyl)-4H-1,2,4-triazol-3-yl)thio)acetamid in Form eines farblosen Feststoffs isoliert werden (181 mg, 87% der Theorie), ¹H-NMR (400 MHz, d₆-DMSO δ, ppm) 10.10 (br. s, 1 H, NH), 7.91 (d, 2H), 7.73 (m, 1 H), 7.67 (d, 2H), 7.52 (m, 1 H), 7.36 (m, 1 H), 7.23 (m, 1 H), 5.14 (s, 2H), 3.84-3.79 (m, 1 H), 1.08-1.01 (m, 2H), 0.86-0.78 (m, 2H).

### No. N1-726: N-(2-Chlorphenyl)-2-((4-furan-2-ylmethyl)-5-methyl-4H-1,2,4-triazol-3-yl)thio)acetamid

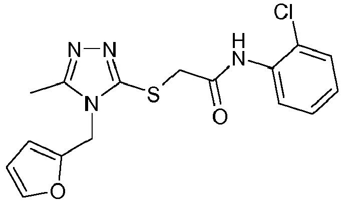

Acetylhydrazid (2.66 g, 35.9 mmol) wurde in abs. Ethanol (1.5 ml/mmol) gelöst und mit Furan-2-ylmethylisothiocyanat (3.60 ml, 35.9 mmol) versetzt. Nach 5 Minuten Rühren bei Raumtemperatur wurde das resultierende Reaktionsgemisch 3 h lang bei einer Temperatur von 80 °C gerührt. Nach dem Abkühlen auf Raumtemperatur wurde der ausgefallene Feststoff abfiltriert und mit kaltem Ethanol nachgewaschen. Durch gründliches Trocknen wurde 2-Acetyl-N-(furan-2-ylmethyl)hydrazincarbo-thioamid (5.67 g, 74 % der Theorie) in Form eines farblosen Feststoffs erhalten. 2-Acetyl-N-(furan-2-ylmethyl)hydrazincarbothioamid (5.67 g, 26.60 mmol) wurde ohne weitere Reinigung in wässrige 1 N Natriumhydroxidlösung gegeben (1ml/mmol), und das so erhaltene Reaktionsgemisch wurde 4 h lang unter Rückflussbedingungen gerührt.

Nach dem Abkühlen auf Raumtemperatur wurde das Reaktionsgemisch weiter auf 5 °C heruntergekühlt und danach durch vorsichtige Zugabe von wässriger HCl (1 N) auf einen pH-Wert von 6 bis 7 eingestellt. Der ausgefallene Feststoff wurde abfiltriert und mit Wasser (zweimal jeweils 1ml/mmol) nachgewaschen. Durch gründliches Trocknen im Exsikkator über P₂O₅/KOH wurde 4-(Furan-2-ylmethyl)-5-methyl-4H-1,2,4-triazol-3-thiol (4.88 g, 94 % der Theorie) in Form eines farblosen Feststoffs erhalten. 4-(Furan-2-ylmethyl)-5-methyl-4H-1,2,4-triazol-3-thiol (100 mg, 0.51 mmol) und frisch gepulvertes Kaliumcarbonat (2.0 equiv) wurden in abs. Acetonitril unter Argon gegeben und nach 5 Minuten Rühren bei Raumtemperatur mit N-(Bromacetyl)-2-chloranilin (136 mg, 0.55 mmol) versetzt. Das resultierende Reaktionsgemisch wurde 2 h lang unter Rückflussbedingungen gerührt und nach dem Abkühlen auf Raumtemperatur mit Wasser, ges. Natriumhydrogencarbonatlösung und Dichlormethan versetzt. Die wässrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte N-(2-Chlorphenyl)-2-((4-furan-2-ylmethyl)-5-methyl-4H-1,2,4-triazol-3-yl)thio)acetamid in Form eines farblosen Feststoffs isoliert werden (68 mg, 37% der Theorie), ¹H-NMR (400 MHz, d₆-DMSO δ, ppm) 9.94 (br. s, 1 H, NH), 7.58 (d, 1 H), 7.64 (m, 1 H), 7.50 (d, 1 H), 7.33 (m, 1 H), 7.19 (m, 1 H), 6.50-6.43 (m, 2H), 5.22 (s, 2H), 4.12 (s, 2H), 2.41 (s, 3H).

In Analogie zu den oben angeführten und an entsprechender Stelle rezitierten Herstellungsbeispielen und unter Berücksichtigung der allgemeinen Angaben zur Herstellung von substituierte Heteroarylcarbonsäurehydraziden der allgemeinen Formeln (I) und (II) erhält man die nachfolgend genannten Verbindungen. In der nachfolgenden Tabelle 1 steht Y = "-" für eine direkte Bindung.
A1. Verbindungen A1-1 bis A1-798 der allgemeinen Formel (Ia1), worin R³, R⁴, Y, A¹, A², A³, A⁴, A⁵ den Definitionen (Nos 1 bis 798; entsprechend Verbindungen A1-1 bis A1-798) in der folgenden Tabelle 1 entsprechen.

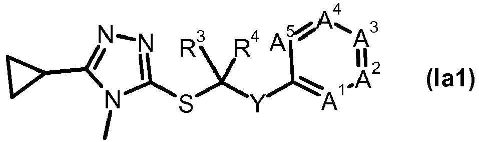

**Tabelle 1**

| No. | R³ | R⁴ | Y | A¹ | A² | A³ | A⁴ | A⁵ |
|---|---|---|---|---|---|---|---|---|
| 1 | H | H | - | C-Cl | C-H | C-H | C-H | C-H |
| 2 | H | H | - | C-H | C-Cl | C-H | C-H | C-H |
| 3 | H | H | - | C-H | C-H | C-Cl | C-H | C-H |
| 4 | H | H | - | C-Cl | C-Cl | C-H | C-H | C-H |
| 5 | H | H | - | C-Cl | C-H | C-Cl | C-H | C-H |
| 6 | H | H | - | C-Cl | C-H | C-H | C-Cl | C-H |
| 7 | H | H | - | C-Cl | C-H | C-H | C-H | C-Cl |
| 8 | H | H | - | C-H | C-Cl | C-Cl | C-H | C-H |
| 9 | H | H | - | C-H | C-Cl | C-H | C-Cl | C-H |
| 10 | H | H | - | C-Cl | C-H | C-Cl | C-H | C-Cl |
| 11 | H | H | - | C-F | C-H | C-H | C-H | C-H |
| 12 | H | H | - | C-H | C-F | C-H | C-H | C-H |
| 13 | H | H | - | C-H | C-H | C-F | C-H | C-H |
| 14 | H | H | - | C-F | C-F | C-H | C-H | C-H |
| 15 | H | H | - | C-F | C-H | C-F | C-H | C-H |
| 16 | H | H | - | C-F | C-H | C-H | C-F | C-H |
| 17 | H | H | - | C-F | C-H | C-H | C-H | C-F |
| 18 | H | H | - | C-H | C-F | C-F | C-H | C-H |
| 19 | H | H | - | C-H | C-F | C-H | C-F | C-H |
| 20 | H | H | - | C-F | C-H | C-F | C-H | C-F |
| 21 | H | H | - | N | C-H | C-H | C-H | C-H |
| 22 | H | H | - | C-H | N | C-H | C-H | C-H |
| 23 | H | H | - | C-H | C-H | N | C-H | C-H |
| 24 | H | H | - | N | N | C-H | C-H | C-H |
| 25 | H | H | - | N | C-H | N | C-H | C-H |
| 26 | H | H | - | N | C-H | C-H | N | C-H |
| 27 | H | H | - | N | C-H | C-H | C-H | N |
| 28 | H | H | - | C-H | N | N | C-H | C-H |
| 29 | H | H | - | C-H | N | C-H | N | C-H |
| 30 | H | H | - | N | C-OCH₃ | C-H | C-OCH₃ | N |
| 31 | H | H | - | N | C-Cl | C-H | C-H | C-H |
| 32 | H | H | - | N | C-H | C-Cl | C-H | C-H |
| 33 | H | H | - | N | C-H | C-H | C-Cl | C-H |
| 34 | H | H | - | N | C-H | C-H | C-H | C-Cl |
| 35 | H | H | - | N | C-H | C-Cl | C-H | C-Cl |
| 36 | H | H | - | N | C-H | C-CF₃ | C-H | C-Cl |
| 37 | H | H | - | N | C-H | C-CH₃ | C-OCH₃ | C-CH₃ |
| 38 | H | H | - | N | C-H | C-H | C-H | C-CH₃ |
| 39 | H | H | - | N | C-H | C-H | C-CH₃ | C-H |
| 40 | H | H | - | N | C-H | C-H | C-Cl | C-Cl |
| 41 | H | H | - | C-Br | C-H | C-H | C-H | C-H |
| 42 | H | H | - | C-H | C-Br | C-H | C-H | C-H |
| 43 | H | H | - | C-H | C-H | C-Br | C-H | C-H |
| 44 | H | H | - | C-F | C-H | C-Br | C-H | C-H |
| 45 | H | H | - | C-Cl | C-H | C-Br | C-H | C-H |
| 46 | H | H | - | C-Br | C-H | C-F | C-H | C-H |
| 47 | H | H | - | C-Br | C-H | C-Cl | C-H | C-H |
| 48 | H | H | - | C-H | C-Cl | C-Br | C-H | C-H |
| 49 | H | H | - | C-H | C-Br | C-Cl | C-H | C-H |
| 50 | H | H | - | C-H | N | C-H | C-Br | C-H |
| 51 | H | H | - | C-I | C-H | C-H | C-H | C-H |
| 52 | H | H | - | C-H | C-I | C-H | C-H | C-H |
| 53 | H | H | - | C-H | C-H | C-I | C-H | C-H |
| 54 | H | H | - | C-F | C-H | C-I | C-H | C-H |
| 55 | H | H | - | C-F | C-H | C-Cl | C-H | C-H |
| 56 | H | H | - | C-F | C-H | C-H | C-Cl | C-H |
| 57 | H | H | - | C-H | C-F | C-Cl | C-H | C-H |
| 58 | H | H | - | C-H | C-Cl | C-F | C-H | C-H |
| 59 | H | H | - | C-F | C-H | C-H | C-H | C-Cl |
| 60 | H | H | - | C-H | C-F | C-H | C-Cl | C-H |
| 61 | H | H | - | C-CN | C-H | C-H | C-H | C-H |
| 62 | H | H | - | C-H | C-CN | C-H | C-H | C-H |
| 63 | H | H | - | C-H | C-H | C-CN | C-H | C-H |
| 64 | H | H | - | C-Cl | C-H | C-CN | C-H | C-H |
| 65 | H | H | - | C-H | C-Cl | C-H | C-CN | C-H |
| 66 | H | H | - | C-OEt | C-H | C-H | C-H | C-H |
| 67 | H | H | - | C-H | C-OEt | C-H | C-H | C-H |
| 68 | H | H | - | C-H | C-H | C-OEt | C-H | C-H |
| 69 | H | H | - | C-Cl | C-H | C-OEt | C-H | C-H |
| 70 | H | H | - | C-H | C-Cl | C-H | C-OEt | C-H |
| 71 | H | H | - | C-CH₃ | C-H | C-H | C-H | C-H |
| 72 | H | H | - | C-H | C-CH₃ | C-H | C-H | C-H |
| 73 | H | H | - | C-H | C-H | C-CH₃ | C-H | C-H |
| 74 | H | H | - | C-CH₃ | C-CH₃ | C-H | C-H | C-H |
| 75 | H | H | - | C-CH₃ | C-H | C-CH₃ | C-H | C-H |
| 76 | H | H | - | C-CH₃ | C-H | C-H | C-CH₃ | C-H |
| 77 | H | H | - | C-CH₃ | C-H | C-H | C-H | C-CH₃ |
| 78 | H | H | - | C-H | C-CH₃ | C-CH₃ | C-H | C-H |
| 79 | H | H | - | C-H | C-CH₃ | C-H | C-CH₃ | C-H |
| 80 | H | H | - | C-CH₃ | C-H | C-CH₃ | C-H | C-CH₃ |
| 81 | H | H | - | C-CF₃ | C-H | C-H | C-H | C-H |
| 82 | H | H | - | C-H | C-CF₃ | C-H | C-H | C-H |
| 83 | H | H | - | C-H | C-H | C-CF₃ | C-H | C-H |
| 84 | H | H | - | C-CF₃ | C-Cl | C-H | C-H | C-H |
| 85 | H | H | - | C-CF₃ | C-H | C-CF₃ | C-H | C-H |
| 86 | H | H | - | C-Cl | C-H | C-H | C-CF₃ | C-H |
| 87 | H | H | - | C-Cl | C-H | C-H | C-H | C-CF₃ |
| 88 | H | H | - | C-H | C-CF₃ | C-CF₃ | C-H | C-H |
| 89 | H | H | - | C-H | C-CF₃ | C-H | C-CF₃ | C-H |
| 90 | H | H | - | C-Cl | C-H | C-Cl | C-H | C-CF₃ |
| 91 | H | H | - | C-Cl | C-H | C-CF₃ | C-H | C-H |
| 92 | H | H | - | C-CF₃ | C-H | C-Cl | C-H | C-H |
| 93 | H | H | - | C-H | C-Cl | C-CF₃ | C-H | C-H |
| 94 | H | H | - | C-H | N | C-Cl | C-H | C-H |
| 95 | H | H | - | C-H | N | C-F | C-H | C-H |
| 96 | H | H | - | C-H | N | C-CF₃ | C-H | C-H |
| 96 | H | H | - | C-H | N | C- H | C-CF₃ | C-H |
| 97 | H | H | - | C-Cl | N | C-H | C-H | C-H |
| 98 | H | H | - | C-H | N | C-H | C-Cl | C-H |
| 99 | H | H | - | C-Cl | N | C-Cl | C-H | C-H |
| 100 | H | H | - | C-Cl | N | C-H | C-H | C-Cl |
| 101 | H | H | - | C-OCH₃ | C-H | C-H | C-H | C-H |
| 102 | H | H | - | C-H | C-OCH₃ | C-H | C-H | C-H |
| 103 | H | H | - | C-H | C-H | C-OCH₃ | C-H | C-H |
| 104 | H | H | - | C-OCH₃ | C-OCH₃ | C-H | C-H | C-H |
| 105 | H | H | - | C-OCH₃ | C-H | C-OCH₃ | C-H | C-H |
| 106 | H | H | - | C-OCH₃ | C-H | C-H | C-OCH₃ | C-H |
| 107 | H | H | - | C-OCH₃ | C-H | C-H | C-H | C-Cl |
| 108 | H | H | - | C-H | C-OCH₃ | C-OCH₃ | C-H | C-H |
| 109 | H | H | - | C-H | C-OCH₃ | C-H | C-OCH₃ | C-H |
| 110 | H | H | - | C-H | C-OCH₃ | C-OCH₃ | C-OCH₃ | C-H |
| 101 | H | H | - | C-SCH₃ | C-H | C-H | C-H | C-H |
| 102 | H | H | - | C-H | C-SCH₃ | C-H | C-H | C-H |
| 103 | H | H | - | C-H | C-H | C-SCH₃ | C-H | C-H |
| 104 | H | H | - | C-SCF₃ | C-H | C-H | C-H | C-H |
| 105 | H | H | - | C-H | C-SCF₃ | C-H | C-H | C-H |
| 106 | H | H | - | C-H | C-H | C-SCF₃ | C-H | C-H |
| 107 | H | H | - | C-OCF₃ | C-H | C-H | C-H | C-H |
| 108 | H | H | - | C-H | C-OCF₃ | C-H | C-H | C-H |
| 109 | H | H | - | C-H | C-H | C-OCF₃ | C-H | C-H |
| 110 | H | H | - | C-NO₂ | C-H | C-H | C-H | C-H |
| 111 | H | H | - | C-H | C-NO₂ | C-H | C-H | C-H |
| 112 | H | H | - | C-H | C-H | C-NO₂ | C-H | C-H |
| 113 | H | H | - | C-Cl | C-H | C-NO₂ | C-H | C-H |
| 114 | H | H | - | C-Cl | C-H | C-OCH₃ | C-H | C-H |
| 115 | H | H | - | C-H | C-Cl | C-OCH₃ | C-H | C-H |
| 116 | H | H | - | C-SCN | C-H | C-H | C-H | C-H |
| 117 | H | H | - | C-H | C-SCN | C-H | C-H | C-H |
| 118 | H | H | - | C-H | C-H | C-SCN | C-H | C-H |
| 119 | H | H | - | C-H | N | C-CH₃ | C-H | C-H |
| 120 | H | H | - | C-H | N | C-OCH₃ | C-H | C-H |
| 121 | H | H | - | N | C-H | 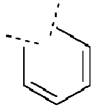 | | C-H |
| 122 | H | H | - | N | 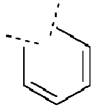 | | C-H | C-H |
| 123 | H | H | - | C-H | N | C-OCH₃ | C-H | C-H |
| 124 | H | H | - | C-H | N | C-SCH₃ | C-H | C-H |
| 125 | H | H | - | C-H | N | C-OCF₃ | C-H | C-H |
| 126 | H | H | - | C-Et | C-H | C-Et | C-H | C-CH₃ |
| 127 | H | H | - | C-Et | C-H | C-Et | C-H | C-H |
| 128 | H | H | - | C-H | C-H | C-Et | C-H | C-H |
| 129 | H | H | - | C-H | C-H | C-i-Pr | C-H | C-H |
| 130 | H | H | - | 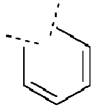 | | C-H | C-H | N |
| 131 | H | H | - | C-H | C-Cl | N | C-H | C-H |
| 132 | H | H | - | C-Cl | C-H | N | C-H | C-H |
| 133 | H | H | - | C-H | C-Cl | N | C-Cl | C-H |
| 134 | H | H | - | C-Cl | N | N | C-Cl | C-H |
| 135 | H | H | - | C-Cl | C-H | N | C-H | C-Cl |
| 136 | H | H | - | C-H | C-H | C-H | C-H | C-H |
| 137 | H | H | - | C-Cl | C-H | C-F | C-H | C-H |
| 138 | H | H | - | C-Cl | C-H | C-Cl | C-Cl | C-H |
| 139 | H | H | - | C-Cl | C-H | 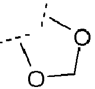 | | C-H |
| 140 | H | H | - | C-H | C-H | 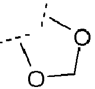 | | C-H |
| 141 | H | H | - | C-H | C-H | 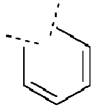 | | C-H |
| 142 | H | H | - | 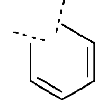 | | C-H | | C-H |
| 143 | H | H | - | C-H | C-H | C-t-Bu | C-H | C-H |
| 144 | H | H | - | N | C-H | C-H | C-OCH₂CF₃ | C-CH₃ |
| 145 | H | H | - | N | C-CH₃ | C-NO₂ | C-H | C-H |
| 146 | H | H | - | N | C-H | C-H | C-OCH₃ | C-H |
| 147 | H | H | - | C-Cl | C-H | C-OCH₃ | C-OCH₃ | C-H |
| 148 | H | H | - | N | C-H | C-H | C-Cl | C-OCH₃ |
| 149 | H | H | - | C-Cl | C-H | C-H | C-Cl | C-Cl |
| 150 | H | H | - | C-H | C-Cl | C-Cl | C-Cl | C-H |
| 151 | CH₃ | H | - | C-H | C-H | C-H | C-H | C-H |
| 152 | CH₃ | H | - | C-Cl | C-H | C-H | C-H | C-H |
| 153 | CH₃ | H | - | C-H | C-Cl | C-H | C-H | C-H |
| 154 | CH₃ | H | - | C-H | C-H | C-Cl | C-H | C-H |
| 155 | CH₃ | H | - | C-Cl | C-H | C-Cl | C-H | C-H |
| 156 | CH₃ | H | - | C-Cl | C-H | C-H | C-Cl | C-H |
| 157 | CH₃ | H | - | C-F | C-H | C-H | C-H | C-H |
| 158 | CH₃ | H | - | C-H | C-F | C-H | C-H | C-H |
| 159 | CH₃ | H | - | C-H | C-H | C-F | C-H | C-H |
| 160 | CH₃ | H | - | C-F | C-H | C-F | C-H | C-H |
| 161 | CH₃ | H | - | C-H | C-F | C-H | C-F | C-H |
| 162 | CH₃ | H | - | C-F | C-H | C-H | C-H | C-F |
| 163 | CH₃ | H | - | C-Br | C-H | C-H | C-H | C-H |
| 164 | CH₃ | H | - | C-H | C-Br | C-H | C-H | C-H |
| 165 | CH₃ | H | - | C-H | C-H | C-Br | C-H | C-H |
| 166 | CH₃ | H | - | C-I | C-H | C-H | C-H | C-H |
| 167 | CH₃ | H | - | C-OCH₃ | C-H | C-H | C-H | C-H |
| 168 | CH₃ | H | - | C-CF₃ | C-H | C-H | C-H | C-H |
| 169 | CH₃ | H | - | C-CH₃ | C-H | C-H | C-H | C-H |
| 170 | CH₃ | H | - | C-CN | C-H | C-H | C-H | C-H |
| 171 | CH₃ | H | - | C-H | C-H | C-I | C-H | C-H |
| 172 | CH₃ | H | - | C-H | C-H | C-OCH₃ | C-H | C-H |
| 173 | CH₃ | H | - | C-H | C-H | C-CF₃ | C-H | C-H |
| 174 | CH₃ | H | - | C-H | C-H | C-CH₃ | C-H | C-H |
| 175 | CH₃ | H | - | C-H | C-H | C-CN | C-H | C-H |
| 176 | CH₃ | H | - | C-H | C-H | C-SCF₃ | C-H | C-H |
| 177 | CH₃ | H | - | C-H | C-H | C-OCF₃ | C-H | C-H |
| 178 | CH₃ | H | - | C-H | C-H | C-OEt | C-H | C-H |
| 179 | CH₃ | H | - | C-H | C-H | C-t-Bu | C-H | C-H |
| 180 | CH₃ | H | - | C-F | C-H | C-Br | C-H | C-H |
| 181 | CH₃ | H | - | N | C-H | C-H | C-H | C-H |
| 182 | CH₃ | H | - | N | C-Cl | C-H | C-H | C-H |
| 183 | CH₃ | H | - | N | C-H | C-Cl | C-H | C-H |
| 184 | CH₃ | H | - | N | C-H | C-H | C-H | C-Cl |
| 185 | CH₃ | H | - | C-H | N | C-H | C-H | C-H |
| 186 | CH₃ | H | - | C-H | N | C-Cl | C-H | C-H |
| 187 | CH₃ | H | - | C-H | C-H | N | C-H | C-H |
| 188 | CH₃ | H | - | N | C-H | C-H | C-H | N |
| 189 | CH₃ | H | - | N | C-H | C-CF₃ | C-H | C-H |
| 190 | CH₃ | H | - | C-Cl | C-H | N | C-H | C-H |
| 191 | CH₃ | H | - | C-H | C-I | C-H | C-H | C-H |
| 192 | CH₃ | H | - | C-H | C-OCH₃ | C-H | C-H | C-H |
| 193 | CH₃ | H | - | C-H | C-CF₃ | C-H | C-H | C-H |
| 194 | CH₃ | H | - | C-H | C-CH₃ | C-H | C-H | C-H |
| 195 | CH₃ | H | - | C-H | C-CN | C-H | C-H | C-H |
| 196 | CH₃ | H | - | C-H | C-CH₃ | C-H | C-H | C-H |
| 197 | CH₃ | H | - | C-H | C-Cl | C-H | C-Cl | C-H |
| 198 | CH₃ | H | - | C-H | C-SCF₃ | C-H | C-H | C-H |
| 199 | CH₃ | H | - | C-H | C-OCF₃ | C-H | C-H | C-H |
| 200 | CH₃ | H | - | C-H | C-OEt | C-H | C-H | C-H |
| 201 | Et | H | - | C-H | C-H | C-H | C-H | C-H |
| 202 | Et | H | - | C-Cl | C-H | C-H | C-H | C-H |
| 203 | Et | H | - | C-H | C-Cl | C-H | C-H | C-H |
| 204 | Et | H | - | C-H | C-H | C-Cl | C-H | C-H |
| 205 | Et | H | - | C-Cl | C-H | C-Cl | C-H | C-H |
| 206 | Et | H | - | C-Cl | C-H | C-H | C-Cl | C-H |
| 207 | Et | H | - | C-F | C-H | C-H | C-H | C-H |
| 208 | Et | H | - | C-H | C-F | C-H | C-H | C-H |
| 209 | Et | H | - | C-H | C-H | C-F | C-H | C-H |
| 210 | Et | H | - | C-F | C-H | C-F | C-H | C-H |
| 211 | Et | H | - | C-H | C-F | C-H | C-F | C-H |
| 212 | Et | H | - | C-F | C-H | C-H | C-H | C-F |
| 213 | Et | H | - | C-Br | C-H | C-H | C-H | C-H |
| 214 | Et | H | - | C-H | C-Br | C-H | C-H | C-H |
| 215 | Et | H | - | C-H | C-H | C-Br | C-H | C-H |
| 216 | Et | H | - | C-I | C-H | C-H | C-H | C-H |
| 217 | Et | H | - | C-OCH₃ | C-H | C-H | C-H | C-H |
| 218 | Et | H | - | C-CF₃ | C-H | C-H | C-H | C-H |
| 219 | Et | H | - | C-CH₃ | C-H | C-H | C-H | C-H |
| 220 | Et | H | - | C-CN | C-H | C-H | C-H | C-H |
| 221 | Et | H | - | C-H | C-H | C-I | C-H | C-H |
| 222 | Et | H | - | C-H | C-H | C-OCH₃ | C-H | C-H |
| 223 | Et | H | - | C-H | C-H | C-CF₃ | C-H | C-H |
| 224 | Et | H | - | C-H | C-H | C-CH₃ | C-H | C-H |
| 225 | Et | H | - | C-H | C-H | C-CN | C-H | C-H |
| 226 | Et | H | - | C-H | C-H | C-SCF₃ | C-H | C-H |
| 227 | Et | H | - | C-H | C-H | C-OCF₃ | C-H | C-H |
| 228 | Et | H | - | C-H | C-H | C-OEt | C-H | C-H |
| 229 | Et | H | - | C-H | C-H | C-t-Bu | C-H | C-H |
| 230 | Et | H | - | C-F | C-H | C-Br | C-H | C-H |
| 231 | Et | H | - | N | C-H | C-H | C-H | C-H |
| 232 | Et | H | - | N | C-Cl | C-H | C-H | C-H |
| 233 | Et | H | - | N | C-H | C-Cl | C-H | C-H |
| 234 | Et | H | - | N | C-H | C-H | C-H | C-Cl |
| 235 | Et | H | - | C-H | N | C-H | C-H | C-H |
| 236 | Et | H | - | C-H | N | C-Cl | C-H | C-H |
| 237 | Et | H | - | C-H | C-H | N | C-H | C-H |
| 238 | Et | H | - | N | C-H | C-H | C-H | N |
| 239 | Et | H | - | N | C-H | C-H | N | C-H |
| 240 | Et | H | - | C-Cl | C-H | N | C-H | C-H |
| 241 | Et | H | - | C-H | C-I | C-H | C-H | C-H |
| 242 | Et | H | - | C-H | C-OCH₃ | C-H | C-H | C-H |
| 243 | Et | H | - | C-H | C-CF₃ | C-H | C-H | C-H |
| 244 | Et | H | - | C-H | C-CH₃ | C-H | C-H | C-H |
| 245 | Et | H | - | C-H | C-CN | C-H | C-H | C-H |
| 246 | Et | H | - | C-H | C-CH₃ | C-H | C-H | C-H |
| 247 | Et | H | - | C-H | C-Cl | C-H | C-Cl | C-H |
| 248 | Et | H | - | C-H | C-SCF₃ | C-H | C-H | C-H |
| 249 | Et | H | - | C-H | C-OCF₃ | C-H | C-H | C-H |
| 250 | Et | H | - | C-H | C-OEt | C-H | C-H | C-H |
| 251 | i-Pr | H | - | C-H | C-H | C-H | C-H | C-H |
| 252 | i-Pr | H | - | C-Cl | C-H | C-H | C-H | C-H |
| 253 | i-Pr | H | - | C-H | C-Cl | C-H | C-H | C-H |
| 254 | i-Pr | H | - | C-H | C-H | C-Cl | C-H | C-H |
| 255 | i-Pr | H | - | C-Cl | C-H | C-Cl | C-H | C-H |
| 256 | i-Pr | H | - | C-Cl | C-H | C-H | C-Cl | C-H |
| 257 | i-Pr | H | - | C-F | C-H | C-H | C-H | C-H |
| 258 | i-Pr | H | - | C-H | C-F | C-H | C-H | C-H |
| 259 | i-Pr | H | - | C-H | C-H | C-F | C-H | C-H |
| 260 | i-Pr | H | - | C-F | C-H | C-F | C-H | C-H |
| 261 | i-Pr | H | - | C-H | C-F | C-H | C-F | C-H |
| 262 | i-Pr | H | - | C-F | C-H | C-H | C-H | C-F |
| 263 | i-Pr | H | - | C-Br | C-H | C-H | C-H | C-H |
| 264 | i-Pr | H | - | C-H | C-Br | C-H | C-H | C-H |
| 265 | i-Pr | H | - | C-H | C-H | C-Br | C-H | C-H |
| 266 | i-Pr | H | - | C-I | C-H | C-H | C-H | C-H |
| 267 | i-Pr | H | - | C-OCH₃ | C-H | C-H | C-H | C-H |
| 268 | i-Pr | H | - | C-CF₃ | C-H | C-H | C-H | C-H |
| 269 | i-Pr | H | - | C-CH₃ | C-H | C-H | C-H | C-H |
| 270 | i-Pr | H | - | C-CN | C-H | C-H | C-H | C-H |
| 271 | i-Pr | H | - | C-H | C-H | C-I | C-H | C-H |
| 272 | i-Pr | H | - | C-H | C-H | C-OCH₃ | C-H | C-H |
| 273 | i-Pr | H | - | C-H | C-H | C-CF₃ | C-H | C-H |
| 274 | i-Pr | H | - | C-H | C-H | C-CH₃ | C-H | C-H |
| 275 | i-Pr | H | - | C-H | C-H | C-CN | C-H | C-H |
| 276 | i-Pr | H | - | C-H | C-H | C-SCF₃ | C-H | C-H |
| 277 | i-Pr | H | - | C-H | C-H | C-OCF₃ | C-H | C-H |
| 278 | i-Pr | H | - | C-H | C-H | C-OEt | C-H | C-H |
| 279 | i-Pr | H | - | C-H | C-H | C-t-Bu | C-H | C-H |
| 280 | i-Pr | H | - | C-F | C-H | C-Br | C-H | C-H |
| 281 | i-Pr | H | - | N | C-H | C-H | C-H | C-H |
| 282 | i-Pr | H | - | N | C-Cl | C-H | C-H | C-H |
| 283 | i-Pr | H | - | N | C-H | C-Cl | C-H | C-H |
| 284 | i-Pr | H | - | N | C-H | C-H | C-H | C-Cl |
| 285 | i-Pr | H | - | C-H | N | C-H | C-H | C-H |
| 286 | i-Pr | H | - | C-H | N | C-Cl | C-H | C-H |
| 287 | i-Pr | H | - | C-H | C-H | N | C-H | C-H |
| 288 | i-Pr | H | - | N | C-H | C-H | C-H | N |
| 289 | i-Pr | H | - | N | C-H | C-H | N | C-H |
| 290 | i-Pr | H | - | C-Cl | C-H | N | C-H | C-H |
| 291 | i-Pr | H | - | C-H | C-I | C-H | C-H | C-H |
| 292 | i-Pr | H | - | C-H | C-OCH₃ | C-H | C-H | C-H |
| 293 | i-Pr | H | - | C-H | C-CF₃ | C-H | C-H | C-H |
| 294 | i-Pr | H | - | C-H | C-CH₃ | C-H | C-H | C-H |
| 295 | i-Pr | H | - | C-H | C-CN | C-H | C-H | C-H |
| 296 | i-Pr | H | - | C-H | C-CH₃ | C-H | C-H | C-H |
| 297 | i-Pr | H | - | C-H | C-Cl | C-H | C-Cl | C-H |
| 298 | i-Pr | H | - | C-H | C-SCF₃ | C-H | C-H | C-H |
| 299 | i-Pr | H | - | C-H | C-OCF₃ | C-H | C-H | C-H |
| 300 | i-Pr | H | - | C-H | C-OEt | C-H | C-H | C-H |
| 301 | c-Pr | H | - | C-H | C-H | C-H | C-H | C-H |
| 302 | c-Pr | H | - | C-Cl | C-H | C-H | C-H | C-H |
| 303 | c-Pr | H | - | C-H | C-Cl | C-H | C-H | C-H |
| 304 | c-Pr | H | - | C-H | C-H | C-Cl | C-H | C-H |
| 305 | c-Pr | H | - | C-Cl | C-H | C-Cl | C-H | C-H |
| 306 | c-Pr | H | - | C-Cl | C-H | C-H | C-Cl | C-H |
| 307 | c-Pr | H | - | C-F | C-H | C-H | C-H | C-H |
| 308 | c-Pr | H | - | C-H | C-F | C-H | C-H | C-H |
| 309 | c-Pr | H | - | C-H | C-H | C-F | C-H | C-H |
| 310 | c-Pr | H | - | C-F | C-H | C-F | C-H | C-H |
| 311 | c-Pr | H | - | C-H | C-F | C-H | C-F | C-H |
| 312 | c-Pr | H | - | C-F | C-H | C-H | C-H | C-F |
| 313 | c-Pr | H | - | C-Br | C-H | C-H | C-H | C-H |
| 314 | c-Pr | H | - | C-H | C-Br | C-H | C-H | C-H |
| 315 | c-Pr | H | - | C-H | C-H | C-Br | C-H | C-H |
| 316 | c-Pr | H | - | C-I | C-H | C-H | C-H | C-H |
| 317 | c-Pr | H | - | C-OCH₃ | C-H | C-H | C-H | C-H |
| 318 | c-Pr | H | - | C-CF₃ | C-H | C-H | C-H | C-H |
| 319 | c-Pr | H | - | C-CH₃ | C-H | C-H | C-H | C-H |
| 320 | c-Pr | H | - | C-CN | C-H | C-H | C-H | C-H |
| 321 | c-Pr | H | - | C-H | C-H | C-I | C-H | C-H |
| 322 | c-Pr | H | - | C-H | C-H | C-OCH₃ | C-H | C-H |
| 323 | c-Pr | H | - | C-H | C-H | C-CF₃ | C-H | C-H |
| 324 | c-Pr | H | - | C-H | C-H | C-CH₃ | C-H | C-H |
| 325 | c-Pr | H | - | C-H | C-H | C-CN | C-H | C-H |
| 326 | c-Pr | H | - | C-H | C-H | C-SCF₃ | C-H | C-H |
| 327 | c-Pr | H | - | C-H | C-H | C-OCF₃ | C-H | C-H |
| 328 | c-Pr | H | - | C-H | C-H | C-OEt | C-H | C-H |
| 329 | c-Pr | H | - | C-H | C-H | C-t-Bu | C-H | C-H |
| 330 | c-Pr | H | - | C-F | C-H | C-Br | C-H | C-H |
| 331 | c-Pr | H | - | N | C-H | C-H | C-H | C-H |
| 332 | c-Pr | H | - | N | C-Cl | C-H | C-H | C-H |
| 333 | c-Pr | H | - | N | C-H | C-Cl | C-H | C-H |
| 334 | c-Pr | H | - | N | C-H | C-H | C-H | C-Cl |
| 335 | c-Pr | H | - | C-H | N | C-H | C-H | C-H |
| 336 | c-Pr | H | - | C-H | N | C-Cl | C-H | C-H |
| 337 | c-Pr | H | - | C-H | C-H | N | C-H | C-H |
| 338 | c-Pr | H | - | N | C-H | C-H | C-H | N |
| 339 | c-Pr | H | - | N | C-H | C-H | N | C-H |
| 340 | c-Pr | H | - | C-Cl | C-H | N | C-H | C-H |
| 341 | c-Pr | H | - | C-H | C-I | C-H | C-H | C-H |
| 342 | c-Pr | H | - | C-H | C-OCH₃ | C-H | C-H | C-H |
| 343 | c-Pr | H | - | C-H | C-CF₃ | C-H | C-H | C-H |
| 344 | c-Pr | H | - | C-H | C-CH₃ | C-H | C-H | C-H |
| 345 | c-Pr | H | - | C-H | C-CN | C-H | C-H | C-H |
| 346 | c-Pr | H | - | C-H | C-CH₃ | C-H | C-H | C-H |
| 347 | c-Pr | H | - | C-H | C-Cl | C-H | C-Cl | C-H |
| 348 | c-Pr | H | - | C-H | C-SCF₃ | C-H | C-H | C-H |
| 349 | c-Pr | H | - | C-H | C-OCF₃ | C-H | C-H | C-H |
| 350 | c-Pr | H | - | C-H | C-OEt | C-H | C-H | C-H |
| 351 | CH₃ | H | CH₂ | C-H | C-H | C-H | C-H | C-H |
| 352 | CH₃ | H | CH₂ | C-Cl | C-H | C-H | C-H | C-H |
| 353 | CH₃ | H | CH₂ | C-H | C-Cl | C-H | C-H | C-H |
| 354 | CH₃ | H | CH₂ | C-H | C-H | C-Cl | C-H | C-H |
| 355 | CH₃ | H | CH₂ | C-Cl | C-H | C-Cl | C-H | C-H |
| 356 | CH₃ | H | CH₂ | C-Cl | C-H | C-H | C-Cl | C-H |
| 357 | CH₃ | H | CH₂ | C-F | C-H | C-H | C-H | C-H |
| 358 | CH₃ | H | CH₂ | C-H | C-F | C-H | C-H | C-H |
| 359 | CH₃ | H | CH₂ | C-H | C-H | C-F | C-H | C-H |
| 360 | CH₃ | H | CH₂ | C-F | C-H | C-F | C-H | C-H |
| 361 | CH₃ | H | CH₂ | C-H | C-F | C-H | C-F | C-H |
| 362 | CH₃ | H | CH₂ | C-F | C-H | C-H | C-H | C-F |
| 363 | CH₃ | H | CH₂ | C-Br | C-H | C-H | C-H | C-H |
| 364 | CH₃ | H | CH₂ | C-H | C-Br | C-H | C-H | C-H |
| 365 | CH₃ | H | CH₂ | C-H | C-H | C-Br | C-H | C-H |
| 366 | CH₃ | H | CH₂ | C-I | C-H | C-H | C-H | C-H |
| 367 | CH₃ | H | CH₂ | C-OCH₃ | C-H | C-H | C-H | C-H |
| 368 | CH₃ | H | CH₂ | C-CF₃ | C-H | C-H | C-H | C-H |
| 369 | CH₃ | H | CH₂ | C-CH₃ | C-H | C-H | C-H | C-H |
| 370 | CH₃ | H | CH₂ | C-CN | C-H | C-H | C-H | C-H |
| 371 | CH₃ | H | CH₂ | C-H | C-H | C-I | C-H | C-H |
| 372 | CH₃ | H | CH₂ | C-H | C-H | C-OCH₃ | C-H | C-H |
| 373 | CH₃ | H | CH₂ | C-H | C-H | C-CF₃ | C-H | C-H |
| 374 | CH₃ | H | CH₂ | C-H | C-H | C-CH₃ | C-H | C-H |
| 375 | CH₃ | H | CH₂ | C-H | C-H | C-CN | C-H | C-H |
| 376 | CH₃ | H | CH₂ | C-H | C-H | C-SCF₃ | C-H | C-H |
| 377 | CH₃ | H | CH₂ | C-H | C-H | C-OCF₃ | C-H | C-H |
| 378 | CH₃ | H | CH₂ | C-H | C-H | C-OEt | C-H | C-H |
| 379 | CH₃ | H | CH₂ | C-H | C-H | C-t-Bu | C-H | C-H |
| 380 | CH₃ | H | CH₂ | C-F | C-H | C-Br | C-H | C-H |
| 381 | CH₃ | H | CH₂ | N | C-H | C-H | C-H | C-H |
| 382 | CH₃ | H | CH₂ | N | C-Cl | C-H | C-H | C-H |
| 383 | CH₃ | H | CH₂ | N | C-H | C-Cl | C-H | C-H |
| 384 | CH₃ | H | CH₂ | N | C-H | C-H | C-H | C-Cl |
| 385 | CH₃ | H | CH₂ | C-H | N | C-H | C-H | C-H |
| 386 | CH₃ | H | CH₂ | C-H | N | C-Cl | C-H | C-H |
| 387 | CH₃ | H | CH₂ | C-H | C-H | N | C-H | C-H |
| 388 | CH₃ | H | CH₂ | N | C-H | C-H | C-H | N |
| 389 | CH₃ | H | CH₂ | N | C-H | C-H | N | C-H |
| 390 | CH₃ | H | CH₂ | C-Cl | C-H | N | C-H | C-H |
| 391 | CH₃ | H | CH₂ | C-H | C-I | C-H | C-H | C-H |
| 392 | CH₃ | H | CH₂ | C-H | C-OCH₃ | C-H | C-H | C-H |
| 393 | CH₃ | H | CH₂ | C-H | C-CF₃ | C-H | C-H | C-H |
| 394 | CH₃ | H | CH₂ | C-H | C-CN | C-H | C-H | C-H |
| 395 | CH₃ | H | CH₂ | C-CH₃ | C-H | C-H | C-H | C-CH₃ |
| 396 | CH₃ | H | CH₂ | C-Cl | C-H | C-H | C-H | C-Cl |
| 397 | CH₃ | H | CH₂ | C-H | C-Cl | C-H | C-Cl | C-H |
| 398 | CH₃ | H | CH₂ | C-H | C-SCF₃ | C-H | C-H | C-H |
| 399 | CH₃ | H | CH₂ | C-H | C-OCF₃ | C-H | C-H | C-H |
| 400 | CH₃ | H | CH₂ | C-H | C-OEt | C-H | C-H | C-H |
| 401 | CH₃ | H | CH₂CH₂ | C-H | C-H | C-H | C-H | C-H |
| 402 | CH₃ | H | CH₂CH₂ | C-Cl | C-H | C-H | C-H | C-H |
| 403 | CH₃ | H | CH₂CH₂ | C-H | C-Cl | C-H | C-H | C-H |
| 404 | CH₃ | H | CH₂CH₂ | C-H | C-H | C-Cl | C-H | C-H |
| 405 | CH₃ | H | CH₂CH₂ | C-Cl | C-H | C-Cl | C-H | C-H |
| 406 | CH₃ | H | CH₂CH₂ | C-Cl | C-H | C-H | C-Cl | C-H |
| 407 | CH₃ | H | CH₂CH₂ | C-F | C-H | C-H | C-H | C-H |
| 408 | CH₃ | H | CH₂CH₂ | C-H | C-F | C-H | C-H | C-H |
| 409 | CH₃ | H | CH₂CH₂ | C-H | C-H | C-F | C-H | C-H |
| 410 | CH₃ | H | CH₂CH₂ | C-F | C-H | C-F | C-H | C-H |
| 411 | CH₃ | H | CH₂CH₂ | C-H | C-F | C-H | C-F | C-H |
| 412 | CH₃ | H | CH₂CH₂ | C-F | C-H | C-H | C-H | C-F |
| 413 | CH₃ | H | CH₂CH₂ | C-Br | C-H | C-H | C-H | C-H |
| 414 | CH₃ | H | CH₂CH₂ | C-H | C-Br | C-H | C-H | C-H |
| 415 | CH₃ | H | CH₂CH₂ | C-H | C-H | C-Br | C-H | C-H |
| 416 | CH₃ | H | CH₂CH₂ | C-I | C-H | C-H | C-H | C-H |
| 417 | CH₃ | H | CH₂CH₂ | C-OCH₃ | C-H | C-H | C-H | C-H |
| 418 | CH₃ | H | CH₂CH₂ | C-CF₃ | C-H | C-H | C-H | C-H |
| 419 | CH₃ | H | CH₂CH₂ | C-CH₃ | C-H | C-H | C-H | C-H |
| 420 | CH₃ | H | CH₂CH₂ | C-CN | C-H | C-H | C-H | C-H |
| 421 | CH₃ | H | CH₂CH₂ | C-H | C-H | C-I | C-H | C-H |
| 422 | CH₃ | H | CH₂CH₂ | C-H | C-H | C-OCH₃ | C-H | C-H |
| 423 | CH₃ | H | CH₂CH₂ | C-H | C-H | C-CF₃ | C-H | C-H |
| 424 | CH₃ | H | CH₂CH₂ | C-H | C-H | C-CH₃ | C-H | C-H |
| 425 | CH₃ | H | CH₂CH₂ | C-H | C-H | C-CN | C-H | C-H |
| 426 | CH₃ | H | CH₂CH₂ | C-H | C-H | C-SCF₃ | C-H | C-H |
| 427 | CH₃ | H | CH₂CH₂ | C-H | C-H | C-OCF₃ | C-H | C-H |
| 428 | CH₃ | H | CH₂CH₂ | C-H | C-H | C-OEt | C-H | C-H |
| 429 | CH₃ | H | CH₂CH₂ | C-H | C-H | C-t-Bu | C-H | C-H |
| 430 | CH₃ | H | CH₂CH₂ | C-F | C-H | C-Br | C-H | C-H |
| 431 | CH₃ | H | CH₂CH₂ | N | C-H | C-H | C-H | C-H |
| 432 | CH₃ | H | CH₂CH₂ | N | C-Cl | C-H | C-H | C-H |
| 433 | CH₃ | H | CH₂CH₂ | N | C-H | C-Cl | C-H | C-H |
| 434 | CH₃ | H | CH₂CH₂ | N | C-H | C-H | C-H | C-Cl |
| 435 | CH₃ | H | CH₂CH₂ | C-H | N | C-H | C-H | C-H |
| 436 | CH₃ | H | CH₂CH₂ | C-H | N | C-Cl | C-H | C-H |
| 437 | CH₃ | H | CH₂CH₂ | C-H | C-H | N | C-H | C-H |
| 438 | CH₃ | H | CH₂CH₂ | N | C-H | C-H | C-H | N |
| 439 | CH₃ | H | CH₂CH₂ | N | C-H | C-H | N | C-H |
| 440 | CH₃ | H | CH₂CH₂ | C-Cl | C-H | N | C-H | C-H |
| 441 | CH₃ | H | CH₂CH₂ | C-H | C-I | C-H | C-H | C-H |
| 442 | CH₃ | H | CH₂CH₂ | C-H | C-OCH₃ | C-H | C-H | C-H |
| 443 | CH₃ | H | CH₂CH₂ | C-H | C-CF₃ | C-H | C-H | C-H |
| 444 | CH₃ | H | CH₂CH₂ | C-H | C-CN | C-H | C-H | C-H |
| 445 | CH₃ | H | CH₂CH₂ | C-CH₃ | C-H | C-H | C-H | C-CH₃ |
| 446 | CH₃ | H | CH₂CH₂ | C-Cl | C-H | C-H | C-H | C-Cl |
| 447 | CH₃ | H | CH₂CH₂ | C-H | C-Cl | C-H | C-Cl | C-H |
| 448 | CH₃ | H | CH₂CH₂ | C-H | C-SCF₃ | C-H | C-H | C-H |
| 449 | CH₃ | H | CH₂CH₂ | C-H | C-OCF₃ | C-H | C-H | C-H |
| 450 | CH₃ | H | CH₂CH₂ | C-H | C-OEt | C-H | C-H | C-H |
| 451 | H | H | CH₂CH₂ | C-H | C-H | C-H | C-H | C-H |
| 452 | H | H | CH₂CH₂ | C-Cl | C-H | C-H | C-H | C-H |
| 453 | H | H | CH₂CH₂ | C-H | C-Cl | C-H | C-H | C-H |
| 454 | H | H | CH₂CH₂ | C-H | C-H | C-Cl | C-H | C-H |
| 455 | H | H | CH₂CH₂ | C-Cl | C-H | C-Cl | C-H | C-H |
| 456 | H | H | CH₂CH₂ | C-Cl | C-H | C-H | C-Cl | C-H |
| 457 | H | H | CH₂CH₂ | C-F | C-H | C-H | C-H | C-H |
| 458 | H | H | CH₂CH₂ | C-H | C-F | C-H | C-H | C-H |
| 459 | H | H | CH₂CH₂ | C-H | C-H | C-F | C-H | C-H |
| 460 | H | H | CH₂CH₂ | C-F | C-H | C-F | C-H | C-H |
| 461 | H | H | CH₂CH₂ | C-H | C-F | C-H | C-F | C-H |
| 462 | H | H | CH₂CH₂ | C-F | C-H | C-H | C-H | C-F |
| 463 | H | H | CH₂CH₂ | C-Br | C-H | C-H | C-H | C-H |
| 464 | H | H | CH₂CH₂ | C-H | C-Br | C-H | C-H | C-H |
| 465 | H | H | CH₂CH₂ | C-H | C-H | C-Br | C-H | C-H |
| 466 | H | H | CH₂CH₂ | C-I | C-H | C-H | C-H | C-H |
| 467 | H | H | CH₂CH₂ | C-OCH₃ | C-H | C-H | C-H | C-H |
| 468 | H | H | CH₂CH₂ | C-CF₃ | C-H | C-H | C-H | C-H |
| 469 | H | H | CH₂CH₂ | C-CH₃ | C-H | C-H | C-H | C-H |
| 470 | H | H | CH₂CH₂ | C-CN | C-H | C-H | C-H | C-H |
| 471 | H | H | CH₂CH₂ | C-H | C-H | C-I | C-H | C-H |
| 472 | H | H | CH₂CH₂ | C-H | C-H | C-OCH₃ | C-H | C-H |
| 473 | H | H | CH₂CH₂ | C-H | C-H | C-CF₃ | C-H | C-H |
| 474 | H | H | CH₂CH₂ | C-H | C-H | C-CH₃ | C-H | C-H |
| 475 | H | H | CH₂CH₂ | C-H | C-H | C-CN | C-H | C-H |
| 476 | H | H | CH₂CH₂ | C-H | C-H | C-SCF₃ | C-H | C-H |
| 477 | H | H | CH₂CH₂ | C-H | C-H | C-OCF₃ | C-H | C-H |
| 478 | H | H | CH₂CH₂ | C-H | C-H | C-OEt | C-H | C-H |
| 479 | H | H | CH₂CH₂ | C-H | C-H | C-t-Bu | C-H | C-H |
| 480 | H | H | CH₂CH₂ | C-F | C-H | C-Br | C-H | C-H |
| 481 | H | H | CH₂CH₂ | N | C-H | C-H | C-H | C-H |
| 482 | H | H | CH₂CH₂ | N | C-Cl | C-H | C-H | C-H |
| 483 | H | H | CH₂CH₂ | N | C-H | C-Cl | C-H | C-H |
| 484 | H | H | CH₂CH₂ | N | C-H | C-H | C-H | C-Cl |
| 485 | H | H | CH₂CH₂ | C-H | N | C-H | C-H | C-H |
| 486 | H | H | CH₂CH₂ | C-H | N | C-Cl | C-H | C-H |
| 487 | H | H | CH₂CH₂ | C-H | C-H | N | C-H | C-H |
| 488 | H | H | CH₂CH₂ | N | C-H | C-H | C-H | N |
| 489 | H | H | CH₂CH₂ | N | C-H | C-H | N | C-H |
| 490 | H | H | CH₂CH₂ | C-Cl | C-H | N | C-H | C-H |
| 491 | H | H | CH₂CH₂ | C-H | C-I | C-H | C-H | C-H |
| 492 | H | H | CH₂CH₂ | C-H | C-OCH₃ | C-H | C-H | C-H |
| 493 | H | H | CH₂CH₂ | C-H | C-CF₃ | C-H | C-H | C-H |
| 494 | H | H | CH₂CH₂ | C-H | C-CN | C-H | C-H | C-H |
| 495 | H | H | CH₂CH₂ | C-CH₃ | C-H | C-H | C-H | C-CH₃ |
| 496 | H | H | CH₂CH₂ | C-Cl | C-H | C-H | C-H | C-Cl |
| 497 | H | H | CH₂CH₂ | C-H | C-Cl | C-H | C-Cl | C-H |
| 498 | H | H | CH₂CH₂ | C-H | C-SCF₃ | C-H | C-H | C-H |
| 499 | H | H | CH₂CH₂ | C-H | C-OCF₃ | C-H | C-H | C-H |
| 500 | H | H | CH₂CH₂ | C-H | C-OEt | C-H | C-H | C-H |
| 501 | H | H | - | C-H | C-H | C-OH | C-H | C-H |
| 502 | H | H | - | C-H | C-OH | C-OCH₃ | C-Cl | C-H |
| 503 | CH₃ | CH₃ | - | C-H | C-H | C-H | C-H | C-H |
| 504 | H | H | - | C-H | C-H | C-NMe₂ | C-H | C-H |
| 505 | H | H | - | C-H | C-CH₃ | C-OCH₃ | C-H | C-H |
| 506 | H | H | - | C-H | C-Cl | C-OCH₃ | C-H | C-H |
| 507 | H | H | - | N | C-H | C-CH₃ | N | C-H |
| 508 | H | H | - | N | C-H | C-Cl | N | C-H |
| 509 | H | H | - | C-Cl | C-H | 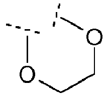 | | C-H |
| 510 | c-Bu | H | CH₂CH₃ | C-H | C-H | C-H | C-H | C-H |
| 511 | c-Pr | H | CH₂CH₃ | C-H | C-H | C-H | C-H | C-H |
| 512 | CO₂CH₃ | H | - | C-H | C-H | C-H | C-H | C-H |
| 513 | CO₂CH₃ | H | - | C-Cl | C-H | C-H | C-H | C-H |
| 514 | CO₂CH₃ | H | - | C-H | C-Cl | C-H | C-H | C-H |
| 515 | CO₂CH₃ | H | - | C-H | C-H | C-Cl | C-H | C-H |
| 516 | CO₂CH₃ | H | - | C-F | C-H | C-H | C-H | C-H |
| 517 | CO₂CH₃ | H | - | C-H | C-F | C-H | C-H | C-H |
| 518 | CO₂CH₃ | H | - | C-H | C-H | C-F | C-H | C-H |
| 519 | CO₂CH₃ | H | - | C-Cl | C-H | C-Cl | C-H | C-Cl |
| 520 | CO₂CH₃ | H | - | C-H | C-H | C-Br | C-H | C-H |
| 521 | CO₂CH₃ | H | - | C-H | C-H | C-I | C-H | C-H |
| 522 | CO₂CH₃ | H | - | C-H | C-H | C-OCH₃ | C-H | C-H |
| 523 | CO₂CH₃ | H | - | C-H | C-H | C-CN | C-H | C-H |
| 524 | CO₂CH₃ | H | - | C-H | C-Cl | C-H | C-Cl | C-H |
| 525 | CO₂Et | H | - | C-H | C-H | C-H | C-H | C-H |
| 526 | CO₂Et | H | - | C-Cl | C-H | C-H | C-H | C-H |
| 527 | CO₂Et | H | - | C-H | C-Cl | C-H | C-H | C-H |
| 528 | CO₂Et | H | - | C-H | C-H | C-Cl | C-H | C-H |
| 529 | CO₂Et | H | - | C-F | C-H | C-H | C-H | C-H |
| 530 | CO₂Et | H | - | C-H | C-F | C-H | C-H | C-H |
| 531 | CO₂Et | H | - | C-H | C-H | C-F | C-H | C-H |
| 532 | CO₂Et | H | - | C-Cl | C-H | C-Cl | C-H | C-Cl |
| 533 | CO₂Et | H | - | C-H | C-H | C-Br | C-H | C-H |
| 534 | CO₂Et | H | - | C-H | C-H | C-I | C-H | C-H |
| 535 | CO₂Et | H | - | C-H | C-H | C-OCH₃ | C-H | C-H |
| 536 | CO₂Et | H | - | C-H | C-H | C-CN | C-H | C-H |
| 537 | CO₂Et | H | - | C-H | C-Cl | C-H | C-Cl | C-H |
| 538 | CO₂CH₃ | H | CH₂ | C-H | C-H | C-H | C-H | C-H |
| 539 | CO₂CH₃ | H | CH₂ | C-Cl | C-H | C-H | C-H | C-H |
| 540 | CO₂CH₃ | H | CH₂ | C-H | C-Cl | C-H | C-H | C-H |
| 541 | CO₂CH₃ | H | CH₂ | C-H | C-H | C-Cl | C-H | C-H |
| 542 | CO₂CH₃ | H | CH₂ | C-F | C-H | C-H | C-H | C-H |
| 543 | CO₂CH₃ | H | CH₂ | C-H | C-F | C-H | C-H | C-H |
| 544 | CO₂CH₃ | H | CH₂ | C-H | C-H | C-F | C-H | C-H |
| 545 | CO₂CH₃ | H | CH₂ | C-Cl | C-H | C-Cl | C-H | C-Cl |
| 546 | CO₂CH₃ | H | CH₂ | C-H | C-H | C-Br | C-H | C-H |
| 547 | CO₂CH₃ | H | CH₂ | C-H | C-H | C-I | C-H | C-H |
| 548 | CO₂CH₃ | H | CH₂ | C-H | C-H | C-OCH₃ | C-H | C-H |
| 549 | CO₂CH₃ | H | CH₂ | C-H | C-H | C-CN | C-H | C-H |
| 550 | CO₂CH₃ | H | CH₂ | C-H | C-Cl | C-H | C-Cl | C-H |
| 551 | CO₂Et | H | CH₂ | C-H | C-H | C-H | C-H | C-H |
| 552 | CO₂Et | H | CH₂ | C-Cl | C-H | C-H | C-H | C-H |
| 553 | CO₂Et | H | CH₂ | C-H | C-Cl | C-H | C-H | C-H |
| 554 | CO₂Et | H | CH₂ | C-H | C-H | C-Cl | C-H | C-H |
| 555 | CO₂Et | H | CH₂ | C-F | C-H | C-H | C-H | C-H |
| 556 | CO₂Et | H | CH₂ | C-H | C-F | C-H | C-H | C-H |
| 557 | CO₂Et | H | CH₂ | C-H | C-H | C-F | C-H | C-H |
| 558 | CO₂Et | H | CH₂ | C-Cl | C-H | C-Cl | C-H | C-Cl |
| 559 | CO₂Et | H | CH₂ | C-H | C-H | C-Br | C-H | C-H |
| 560 | CO₂Et | H | CH₂ | C-H | C-H | C-I | C-H | C-H |
| 561 | CO₂Et | H | CH₂ | C-H | C-H | C-OCH₃ | C-H | C-H |
| 562 | CO₂Et | H | CH₂ | C-H | C-H | C-CN | C-H | C-H |
| 563 | CO₂Et | H | CH₂ | C-H | C-Cl | C-H | C-Cl | C-H |
| 564 | CO₂Et | H | CH₂ | N | C-H | C-H | C-H | C-H |
| 565 | CO₂CH₃ | H | CH₂ | N | C-H | C-H | C-H | C-H |
| 566 | CO₂Et | H | - | N | C-H | C-H | C-H | C-H |
| 567 | CO₂CH₃ | H | - | N | C-H | C-H | C-H | C-H |
| 568 | CO₂Et | H | CH₂ | C-H | N | C-H | C-H | C-H |
| 569 | CO₂CH₃ | H | CH₂ | C-H | N | C-H | C-H | C-H |
| 570 | CO₂Et | H | - | C-H | N | C-H | C-H | C-H |
| 571 | CO₂CH₃ | H | - | C-H | N | C-H | C-H | C-H |
| 572 | CO₂CH₃ | H | CH₂ | C-Cl | C-H | C-Cl | C-H | C-H |
| 573 | CO₂CH₃ | H | - | C-Cl | C-H | C-Cl | C-H | C-H |
| 574 | CO₂Et | H | CH₂ | C-Cl | C-H | C-Cl | C-H | C-H |
| 575 | CO₂Et | H | - | C-Cl | C-H | C-Cl | C-H | C-H |
| 576 | 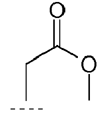 | H | - | C-H | C-H | C-H | C-H | C-H |
| 577 | 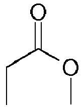 | H | - | C-H | C-H | C-Cl | C-H | C-H |
| 578 | 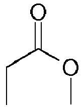 | H | - | C-H | C-H | C-Br | C-H | C-H |
| 579 | 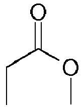 | H | - | C-H | C-H | C-I | C-H | C-H |
| 580 | 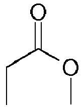 | H | - | C-H | C-Cl | C-H | C-H | C-H |
| 581 | 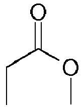 | H | - | C-Cl | C-H | C-Cl | C-H | C-H |
| 582 | 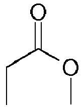 | H | CH₂ | C-H | C-H | C-H | C-H | C-H |
| 583 | 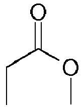 | H | CH₂ | C-H | C-H | C-Cl | C-H | C-H |
| 584 | 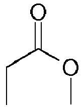 | H | CH₂ | C-H | C-H | C-Br | C-H | C-H |
| 585 | 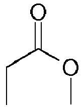 | H | CH₂ | C-H | C-H | C-I | C-H | C-H |
| 586 | 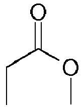 | H | CH₂ | C-H | C-Cl | C-H | C-H | C-H |
| 587 | 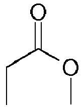 | H | CH₂ | C-Cl | C-H | C-Cl | C-H | C-H |
| 588 | 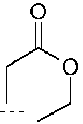 | H | - | C-H | C-H | C-H | C-H | C-H |
| 589 | 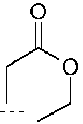 | H | - | C-H | C-H | C-Cl | C-H | C-H |
| 590 | 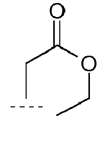 | H | - | C-H | C-H | C-Br | C-H | C-H |
| 591 | 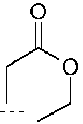 | H | - | C-H | C-H | C-I | C-H | C-H |
| 592 | 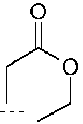 | H | - | C-H | C-Cl | C-H | C-H | C-H |
| 593 | 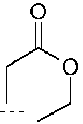 | H | - | C-Cl | C-H | C-Cl | C-H | C-H |
| 594 | 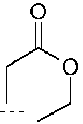 | H | CH₂ | C-H | C-H | C-H | C-H | C-H |
| 595 | 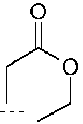 | H | CH₂ | C-H | C-H | C-Cl | C-H | C-H |
| 596 | 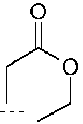 | H | CH₂ | C-H | C-H | C-Br | C-H | C-H |
| 597 | 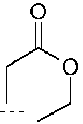 | H | CH₂ | C-H | C-H | C-I | C-H | C-H |
| 598 | 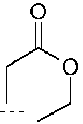 | H | CH₂ | C-H | C-Cl | C-H | C-H | C-H |
| 599 | 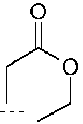 | H | CH₂ | C-Cl | C-H | C-Cl | C-H | C-H |
| 600 | 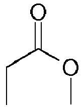 | H | - | N | C-H | C-H | C-H | C-H |
| 601 | CO₂CH₃ | H | CH₂ | C-Cl | C-H | C-CF₃ | C-H | C-H |
| 602 | CO₂Et | H | CH₂ | C-Cl | C-H | C-CF₃ | C-H | C-H |
| 603 | H | H | - | C-CO₂CH₃ | C-H | C-H | C-H | C-H |
| 604 | H | H | - | C-H | C-CO₂CH₃ | C-H | C-H | C-H |
| 605 | H | H | - | C-H | C-H | C-CO₂CH₃ | C-H | C-H |
| 606 | H | H | - | C-CO₂Et | C-H | C-H | C-H | C-H |
| 607 | H | H | - | C-H | C-CO₂Et | C-H | C-H | C-H |
| 608 | H | H | - | C-Cl | C-H | C-CF₃ | C-F | C-F |
| 609 | H | H | - | C-CO₂H | C-H | C-H | C-H | C-H |
| 610 | H | H | - | C-H | C-CO₂H | C-H | C-H | C-H |
| 611 | H | H | CH₂ | C-H | C-H | C-H | C-H | C-H |
| 612 | H | H | CH₂ | C-Cl | C-H | C-H | C-H | C-H |
| 613 | H | H | CH₂ | C-H | C-Cl | C-H | C-H | C-H |
| 614 | H | H | CH₂ | C-H | C-H | C-Cl | C-H | C-H |
| 615 | H | H | CH₂ | C-Cl | C-H | C-Cl | C-H | C-H |
| 616 | H | H | CH₂ | C-Cl | C-H | C-H | C-Cl | C-H |
| 617 | H | H | CH₂ | C-F | C-H | C-H | C-H | C-H |
| 618 | H | H | CH₂ | C-H | C-F | C-H | C-H | C-H |
| 619 | H | H | CH₂ | C-H | C-H | C-F | C-H | C-H |
| 620 | H | H | CH₂ | C-F | C-H | C-F | C-H | C-H |
| 621 | H | H | CH₂ | C-H | C-F | C-H | C-F | C-H |
| 622 | H | H | CH₂ | C-F | C-H | C-H | C-H | C-F |
| 623 | H | H | CH₂ | C-Br | C-H | C-H | C-H | C-H |
| 624 | H | H | CH₂ | C-H | C-Br | C-H | C-H | C-H |
| 625 | H | H | CH₂ | C-H | C-H | C-Br | C-H | C-H |
| 626 | H | H | CH₂ | C-I | C-H | C-H | C-H | C-H |
| 627 | H | H | CH₂ | C-OCH₃ | C-H | C-H | C-H | C-H |
| 628 | H | H | CH₂ | C-CF₃ | C-H | C-H | C-H | C-H |
| 629 | H | H | CH₂ | C-CH₃ | C-H | C-H | C-H | C-H |
| 630 | H | H | CH₂ | C-CN | C-H | C-H | C-H | C-H |
| 631 | H | H | CH₂ | C-H | C-H | C-I | C-H | C-H |
| 632 | H | H | CH₂ | C-H | C-H | C-OCH₃ | C-H | C-H |
| 633 | H | H | CH₂ | C-H | C-H | C-CF₃ | C-H | C-H |
| 634 | H | H | CH₂ | C-H | C-H | C-CH₃ | C-H | C-H |
| 635 | H | H | CH₂ | C-H | C-H | C-CN | C-H | C-H |
| 636 | H | H | CH₂ | C-H | C-H | C-SCF₃ | C-H | C-H |
| 637 | H | H | CH₂ | C-H | C-H | C-OCF₃ | C-H | C-H |
| 638 | H | H | CH₂ | C-H | C-H | C-OEt | C-H | C-H |
| 639 | H | H | CH₂ | C-H | C-H | C-t-Bu | C-H | C-H |
| 640 | H | H | CH₂ | C-F | C-H | C-Br | C-H | C-H |
| 641 | H | H | CH₂ | N | C-H | C-H | C-H | C-H |
| 642 | H | H | CH₂ | N | C-Cl | C-H | C-H | C-H |
| 643 | H | H | CH₂ | N | C-H | C-Cl | C-H | C-H |
| 644 | H | H | CH₂ | N | C-H | C-H | C-H | C-Cl |
| 645 | H | H | CH₂ | C-H | N | C-H | C-H | C-H |
| 646 | H | H | CH₂ | C-H | N | C-Cl | C-H | C-H |
| 647 | H | H | CH₂ | C-H | C-H | N | C-H | C-H |
| 648 | H | H | CH₂ | N | C-H | C-H | C-H | N |
| 649 | H | H | CH₂ | N | C-H | C-H | N | C-H |
| 650 | H | H | CH₂ | C-Cl | C-H | N | C-H | C-H |
| 651 | H | H | CH₂ | C-H | C-I | C-H | C-H | C-H |
| 652 | H | H | CH₂ | C-H | C-OCH₃ | C-H | C-H | C-H |
| 653 | H | H | CH₂ | C-H | C-CF₃ | C-H | C-H | C-H |
| 654 | H | H | CH₂ | C-H | C-CN | C-H | C-H | C-H |
| 655 | H | H | CH₂ | C-CH₃ | C-H | C-H | C-H | C-CH₃ |
| 656 | H | H | CH₂ | C-Cl | C-H | C-H | C-H | C-Cl |
| 657 | H | H | CH₂ | C-H | C-Cl | C-H | C-Cl | C-H |
| 658 | H | H | CH₂ | C-H | C-SCF₃ | C-H | C-H | C-H |
| 659 | H | H | CH₂ | C-H | C-OCF₃ | C-H | C-H | C-H |
| 660 | H | H | CH₂ | C-H | C-OEt | C-H | C-H | C-H |
| 661 | H | H | CH₂ | C-H | C-OCH₃ | C-OCH₃ | C-OCH₃ | C-H |
| 662 | H | H | CH₂ | C-H | C-OCH₃ | C-OCH₃ | C-H | C-H |
| 663 | H | H | CH₂ | C-H | C-CH₃ | C-CH₃ | C-H | C-H |
| 664 | H | H | CH₂ | C-CH₃ | C-H | C-CH₃ | C-H | C-H |
| 665 | H | H | CH₂ | C-CH₃ | C-H | C-CH₃ | C-H | C-CH₃ |
| 666 | H | H | CH₂ | C-Et | C-H | C-CH₃ | C-H | C-H |
| 667 | H | H | CH₂ | C-NO₂ | C-H | C-H | C-H | C-H |
| 668 | H | H | CH₂ | C-H | C-NO₂ | C-H | C-H | C-H |
| 669 | H | H | CH₂ | C-H | C-H | C-NO₂ | C-H | C-H |
| 670 | H | H | CH₂ | 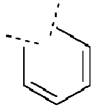 | | C-H | C-H | C-H |
| 671 | H | H | C=O | C-H | C-H | C-H | C-H | C-H |
| 672 | H | H | C=O | C-Cl | C-H | C-H | C-H | C-H |
| 673 | H | H | C=O | C-Cl | C-H | C-Cl | C-H | C-H |
| 674 | H | H | C=O | C-H | C-Cl | C-H | C-H | C-H |
| 675 | H | H | C=O | C-H | C-H | C-Cl | C-H | C-H |
| 676 | H | H | C=O | C-Cl | C-H | C-H | C-Cl | C-H |
| 677 | H | H | C=O | C-Cl | C-H | C-Cl | C-H | C-Cl |
| 678 | H | H | C=O | C-Cl | C-H | C-H | C-H | C-Cl |
| 679 | H | H | C=O | C-H | C-Cl | C-Cl | C-H | C-H |
| 680 | H | H | C=O | C-H | C-Cl | C-H | C-Cl | C-H |
| 681 | H | H | C=O | C-F | C-H | C-CH₃ | 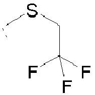 | C-H |
| 682 | H | H | C=O | C-F | C-H | C-H | C-H | C-H |
| 683 | H | H | C=O | C-F | C-H | C-F | C-H | C-H |
| 684 | H | H | C=O | C-H | C-F | C-H | C-H | C-H |
| 685 | H | H | C=O | C-H | C-H | C-F | C-H | C-H |
| 686 | H | H | C=O | C-F | C-H | C-H | C-F | C-H |
| 687 | H | H | C=O | C-F | C-H | C-F | C-H | C-F |
| 688 | H | H | C=O | C-F | C-H | C-H | C-H | C-F |
| 689 | H | H | C=O | C-H | C-F | C-F | C-H | C-H |
| 690 | H | H | C=O | C-H | C-F | C-H | C-F | C-H |
| 691 | H | H | C=O | C-F | C-H | C-CH₃ | 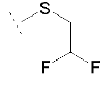 | C-H |
| 692 | H | H | C=O | C-CF₃ | C-H | C-H | C-H | C-H |
| 693 | H | H | C=O | C-Cl | C-H | C-CF₃ | C-H | C-H |
| 694 | H | H | C=O | C-H | C-CF₃ | C-H | C-H | C-H |
| 695 | H | H | C=O | C-H | C-H | C-CF₃ | C-H | C-H |
| 696 | H | H | C=O | C-Cl | C-H | C-H | C-CF₃ | C-H |
| 697 | H | H | C=O | C-Cl | C-H | C-CF₃ | C-H | N |
| 698 | H | H | C=O | C-F | C-H | C-H | C-H | C-Cl |
| 699 | H | H | C=O | C-H | C-F | C-Cl | C-H | C-H |
| 700 | H | H | C=O | C-H | C-F | C-H | C-Cl | C-H |
| 701 | H | H | C=O | C-CH₃ | C-H | C-H | C-H | C-H |
| 702 | H | H | C=O | C-H | C-CH₃ | C-H | C-H | C-H |
| 703 | H | H | C=O | C-H | C-H | C-CH₃ | C-H | C-H |
| 704 | H | H | C=O | C-CH₃ | C-H | C-H | C-CH₃ | C-H |
| 705 | H | H | C=O | C-CN | C-H | C-H | C-H | C-H |
| 706 | H | H | C=O | C-H | C-CN | C-H | C-H | C-H |
| 707 | H | H | C=O | C-H | C-H | C-CN | C-H | C-H |
| 708 | H | H | C=O | C-SCH₃ | C-H | C-H | C-H | C-H |
| 709 | H | H | C=O | C-H | C-SCH₃ | C-H | C-H | C-H |
| 710 | H | H | C=O | C-H | C-H | C-SCH₃ | C-H | C-H |
| 711 | H | H | C=O | C-SCF₃ | C-H | C-H | C-H | C-H |
| 712 | H | H | C=O | C-H | C-SCF₃ | C-H | C-H | C-H |
| 713 | H | H | C=O | C-H | C-H | C-SCF₃ | C-H | C-H |
| 714 | H | H | C=O | N | C-H | C-H | C-H | C-H |
| 715 | H | H | C=O | C-H | N | C-H | C-H | C-H |
| 716 | H | H | C=O | C-H | C-H | N | C-H | C-H |
| 717 | H | H | C=O | N | C-H | C-H | C-H | N |
| 718 | H | H | C=O | C-H | N | C-H | N | C-H |
| 719 | H | H | C=O | C-Br | C-H | C-H | C-H | C-H |
| 720 | H | H | C=O | C-H | C-Br | C-H | C-H | C-H |
| 721 | H | H | C=O | C-H | C-H | C-Br | C-H | C-H |
| 722 | H | H | C=O | C-I | C-H | C-H | C-H | C-H |
| 723 | H | H | C=O | C-H | C-I | C-H | C-H | C-H |
| 724 | H | H | C=O | C-H | C-H | C-I | C-H | C-H |
| 725 | H | H | C(=O)NH | C-H | C-H | C-H | C-H | C-H |
| 726 | H | H | C(=O)NH | C-Cl | C-H | C-H | C-H | C-H |
| 727 | H | H | C(=O)NH | C-Cl | C-H | C-Cl | C-H | C-H |
| 728 | H | H | C(=O)NH | C-H | C-Cl | C-H | C-H | C-H |
| 729 | H | H | C(=O)NH | C-H | C-H | C-Cl | C-H | C-H |
| 730 | H | H | C(=O)NH | C-Cl | C-H | C-H | C-Cl | C-H |
| 731 | H | H | C(=O)NH | C-Cl | C-H | C-Cl | C-H | C-Cl |
| 732 | H | H | C(=O)NH | C-Cl | C-H | C-H | C-H | C-Cl |
| 733 | H | H | C(=O)NH | C-H | C-Cl | C-Cl | C-H | C-H |
| 734 | H | H | C(=O)NH | C-H | C-Cl | C-H | C-Cl | C-H |
| 735 | H | H | C(=O)NH | C-H | C-H | C-OCH₃ | C-H | C-H |
| 736 | H | H | C(=O)NH | C-F | C-H | C-H | C-H | C-H |
| 737 | H | H | C(=O)NH | C-F | C-H | C-F | C-H | C-H |
| 738 | H | H | C(=O)NH | C-H | C-F | C-H | C-H | C-H |
| 739 | H | H | C(=O)NH | C-H | C-H | C-F | C-H | C-H |
| 740 | H | H | C(=O)NH | C-F | C-H | C-H | C-F | C-H |
| 741 | H | H | C(=O)NH | C-F | C-H | C-F | C-H | C-F |
| 742 | H | H | C(=O)NH | C-F | C-H | C-H | C-H | C-F |
| 743 | H | H | C(=O)NH | C-H | C-F | C-F | C-H | C-H |
| 744 | H | H | C(=O)NH | C-H | C-F | C-H | C-F | C-H |
| 745 | H | H | C(=O)NH | C-H | C-H | C-OCF₃ | C-H | C-H |
| 746 | H | H | C(=O)NH | C-CF₃ | C-H | C-H | C-H | C-H |
| 747 | H | H | C(=O)NH | C-Cl | C-H | C-CF₃ | C-H | C-H |
| 748 | H | H | C(=O)NH | C-H | C-CF₃ | C-H | C-H | C-H |
| 749 | H | H | C(=O)NH | C-H | C-H | C-CF₃ | C-H | C-H |
| 750 | H | H | C(=O)NH | C-Cl | C-H | C-H | C-CF₃ | C-H |
| 751 | H | H | C(=O)NH | C-Cl | C-H | C-CF₃ | C-H | N |
| 752 | H | H | C(=O)NH | C-F | C-H | C-H | C-H | C-Cl |
| 753 | H | H | C(=O)NH | C-H | C-F | C-Cl | C-H | C-H |
| 754 | H | H | C(=O)NH | C-H | C-F | C-H | C-Cl | C-H |
| 755 | H | H | C(=O)NH | C-CH₃ | C-H | C-H | C-H | C-H |
| 756 | H | H | C(=O)NH | C-H | C-CH₃ | C-H | C-H | C-H |
| 757 | H | H | C(=O)NH | C-H | C-H | C-CH₃ | C-H | C-H |
| 758 | H | H | C(=O)NH | C-CH₃ | C-H | C-H | C-CH₃ | C-H |
| 759 | H | H | C(=O)NH | C-CN | C-H | C-H | C-H | C-H |
| 760 | H | H | C(=O)NH | C-H | C-CN | C-H | C-H | C-H |
| 761 | H | H | C(=O)NH | C-H | C-H | C-CN | C-H | C-H |
| 762 | H | H | C(=O)NH | C-SCH₃ | C-H | C-H | C-H | C-H |
| 763 | H | H | C(=O)NH | C-H | C-SCH₃ | C-H | C-H | C-H |
| 764 | H | H | C(=O)NH | C-H | C-H | C-SCH₃ | C-H | C-H |
| 765 | H | H | C(=O)NH | C-SCF₃ | C-H | C-H | C-H | C-H |
| 766 | H | H | C(=O)NH | C-H | C-SCF₃ | C-H | C-H | C-H |
| 767 | H | H | C(=O)NH | C-H | C-H | C-SCF₃ | C-H | C-H |
| 768 | H | H | C(=O)NH | N | C-H | C-H | C-H | C-H |
| 769 | H | H | C(=O)NH | C-H | N | C-H | C-H | C-H |
| 770 | H | H | C(=O)NH | C-H | C-H | N | C-H | C-H |
| 771 | H | H | C(=O)NH | N | C-H | C-H | C-H | N |
| 772 | H | H | C(=O)NH | C-H | N | C-H | N | C-H |
| 773 | H | H | C(=O)NH | C-Br | C-H | C-H | C-H | C-H |
| 774 | H | H | C(=O)NH | C-H | C-Br | C-H | C-H | C-H |
| 775 | H | H | C(=O)NH | C-H | C-H | C-Br | C-H | C-H |
| 776 | H | H | C(=O)NH | C-I | C-H | C-H | C-H | C-H |
| 777 | H | H | C(=O)NH | C-H | C-I | C-H | C-H | C-H |
| 778 | H | H | C(=O)NH | C-H | C-H | C-I | C-H | C-H |
| 779 | H | H | C(=O)NH | C-F | C-H | C-Br | C-H | C-H |
| 780 | H | H | C(=O)NH | C-Cl | C-H | C-Br | C-H | C-H |
| 781 | H | H | C(=O)NH | C-CH₃ | C-H | C-H | C-H | C-H |
| 782 | H | H | C(=O)NH | C-OCH₃ | C-H | C-H | C-H | C-H |
| 783 | H | H | C(=O)NH | C-H | C-OCF₃ | C-H | C-H | C-H |
| 784 | H | H | C(=O)NH | C-OCF₃ | C-H | C-H | C-H | C-H |
| 785 | H | H | C(=O)NH | N | C-H | C-H | C-H | C-Cl |
| 786 | H | H | C(=O)NH | N | C-H | C-Cl | C-H | C-Cl |
| 787 | H | H | C(=O)NH | C-H | N | C-Cl | C-H | C-H |
| 788 | H | H | C(=O)NH | C-H | N | C-CF₃ | C-H | C-H |
| 789 | H | H | C(=O)NH | C-H | C-Cl | N | C-H | C-H |
| 790 | H | H | C(=O)NH | C-H | C-Cl | N | C-Cl | C-H |
| 791 | H | H | - | C-CHF₂ | C-H | C-H | C-H | C-H |
| 792 | H | H | - | C-H | C-CHF₂ | C-H | C-H | C-H |
| 793 | H | H | - | C-H | C-H | C-CHF₂ | C-H | C-H |
| 794 | H | H | - | C-CH₃ | C-CH₃ | C-CH₃ | C-CH₃ | C-CH₃ |
| 795 | H | H | - | C-F | C-F | C-F | C-F | C-F |
| 796 | H | H | - | C-OCHF₂ | C-H | C-H | C-H | C-H |
| 797 | H | H | - | C-H | C-OCHF₂ | C-H | C-H | C-H |
| 798 | H | H | - | C-H | C-H | C-OCHF₂ | C-H | C-H |

A2. Verbindungen A2-1 bis A2-798 der allgemeinen Formel (Ia2), worin R³, R⁴, Y, A¹, A², A³, A⁴, A⁵ den Definitionen (Nos 1 bis 798; entsprechend Verbindungen A2-1 bis A2-798) in der oben stehenden Tabelle 1 entsprechen. 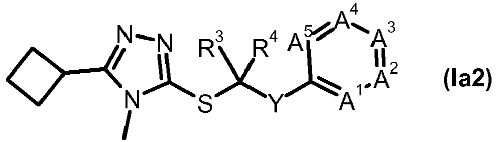 A3. Verbindungen A3-1 bis A3-798 der allgemeinen Formel (Ia3), worin R³, R⁴, Y, A¹, A², A³, A⁴, A⁵ den Definitionen (Nos 1 bis 798; entsprechend Verbindungen A3-1 bis A3-798) in der oben stehenden Tabelle 1 entsprechen. 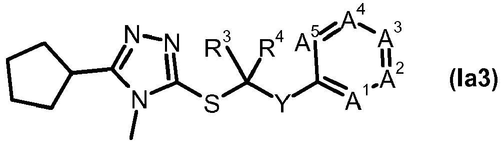 A4. Verbindungen A4-1 bis A4-798 der allgemeinen Formel (Ia4), worin R³, R⁴, Y, A¹, A², A³, A⁴, A⁵ den Definitionen (Nos 1 bis 798; entsprechend Verbindungen A4-1 bis A4-798) in der oben stehenden Tabelle 1 entsprechen. 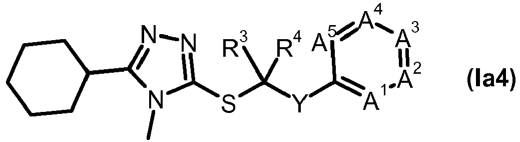 A5. Verbindungen A5-1 bis A5-798 der allgemeinen Formel (Ia5), worin R³, R⁴, Y, A¹, A², A³, A⁴, A⁵ den Definitionen (Nos 1 bis 798; entsprechend Verbindungen A5-1 bis A5-798) in der oben stehenden Tabelle 1 entsprechen. 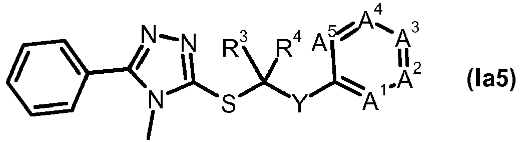 A6. Verbindungen A6-1 bis A6-798 der allgemeinen Formel (Ia6), worin R³, R⁴, Y, A¹, A², A³, A⁴, A⁵ den Definitionen (Nos 1 bis 798; entsprechend Verbindungen A6-1 bis A6-798) in der oben stehenden Tabelle 1 entsprechen. 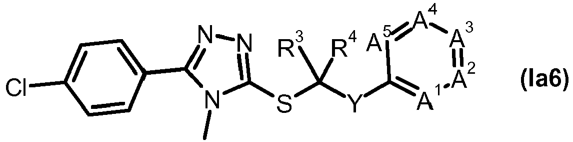 A7. Verbindungen A7-1 bis A7-798 der allgemeinen Formel (Ia7), worin R³, R⁴, Y, A¹, A², A³, A⁴, A⁵ den Definitionen (Nos 1 bis 798; entsprechend Verbindungen A7-1 bis A7-798) in der oben stehenden Tabelle 1 entsprechen. 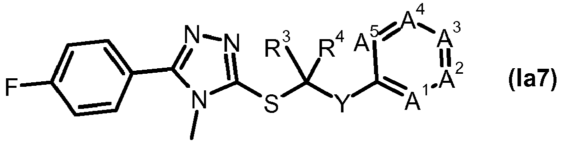 A8. Verbindungen A8-1 bis A8-798 der allgemeinen Formel (Ia8), worin R³, R⁴, Y, A¹, A², A³, A⁴, A⁵ den Definitionen (Nos 1 bis 798; entsprechend Verbindungen A8-1 bis A8-798) in der oben stehenden Tabelle 1 entsprechen. 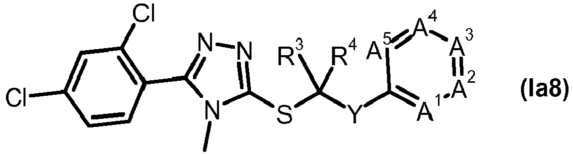 A9. Verbindungen A9-1 bis A9-798 der allgemeinen Formel (Ia9), worin R³, R⁴, Y, A¹, A², A³, A⁴, A⁵ den Definitionen (Nos 1 bis 798; entsprechend Verbindungen A9-1 bis A9-798) in der oben stehenden Tabelle 1 entsprechen. 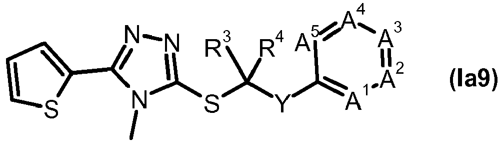 A10. Verbindungen A10-1 bis A10-798 der allgemeinen Formel (Ia10), worin R³, R⁴, Y, A¹, A², A³, A⁴, A⁵ den Definitionen (Nos 1 bis 798; entsprechend Verbindungen A10-1 bis A10-798) in der oben stehenden Tabelle 1 entsprechen. 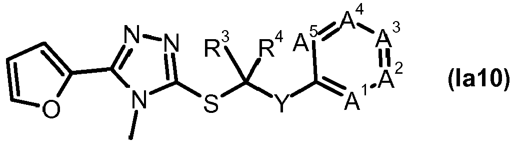 A11. Verbindungen A11-1 bis A11-798 der allgemeinen Formel (Ia11), worin R³, R⁴, Y, A¹, A², A³, A⁴, A⁵ den Definitionen (Nos 1 bis 798; entsprechend Verbindungen A11-1 bis A11-798) in der oben stehenden Tabelle 1 entsprechen. 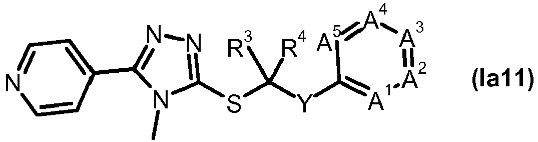 A12. Verbindungen A12-1 bis A12-798 der allgemeinen Formel (Ia12), worin R³, R⁴, Y, A¹, A², A³, A⁴, A⁵ den Definitionen (Nos 1 bis 798; entsprechend Verbindungen A12-1 bis A12-798) in der oben stehenden Tabelle 1 entsprechen. 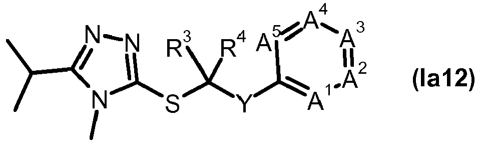 A13. Verbindungen A13-1 bis A13-798 der allgemeinen Formel (Ia13), worin R³, R⁴, Y, A¹, A², A³, A⁴, A⁵ den Definitionen (Nos 1 bis 798; entsprechend Verbindungen A13-1 bis A13-798) in der oben stehenden Tabelle 1 entsprechen. 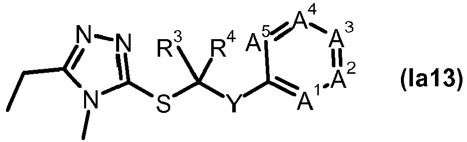 A14. Verbindungen A14-1 bis A14-798 der allgemeinen Formel (Ia14), worin R³, R⁴, Y, A¹, A², A³, A⁴, A⁵ den Definitionen (Nos 1 bis 798; entsprechend Verbindungen A14-1 bis A14-798) in der oben stehenden Tabelle 1 entsprechen. 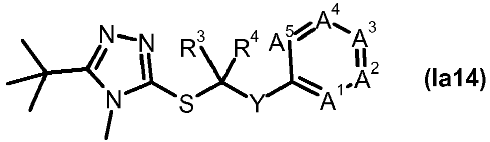 A15. Verbindungen A15-1 bis A15-798 der allgemeinen Formel (Ia15), worin R³, R⁴, Y, A¹, A², A³, A⁴, A⁵ den Definitionen (Nos 1 bis 798; entsprechend Verbindungen A15-1 bis A15-798) in der oben stehenden Tabelle 1 entsprechen. 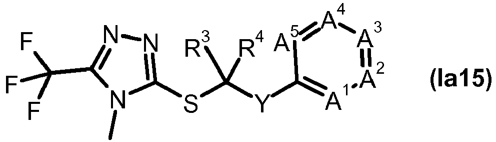 A16. Verbindungen A16-1 bis A16-798 der allgemeinen Formel (Ia16), worin R³, R⁴, Y, A¹, A², A³, A⁴, A⁵ den Definitionen (Nos 1 bis 798; entsprechend Verbindungen A16-1 bis A16-798) in der oben stehenden Tabelle 1 entsprechen. 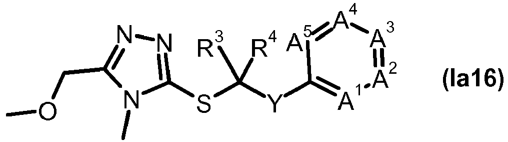 A17. Verbindungen A17-1 bis A17-798 der allgemeinen Formel (Ia17), worin R³, R⁴, Y, A¹, A², A³, A⁴, A⁵ den Definitionen (Nos 1 bis 798; entsprechend Verbindungen A17-1 bis A17-798) in der oben stehenden Tabelle 1 entsprechen. 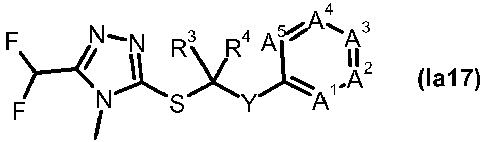 A18. Verbindungen A18-1 bis A18-798 der allgemeinen Formel (Ia18), worin R³, R⁴, Y, A¹, A², A³, A⁴, A⁵ den Definitionen (Nos 1 bis 798; entsprechend Verbindungen A18-1 bis A18-798) in der oben stehenden Tabelle 1 entsprechen. 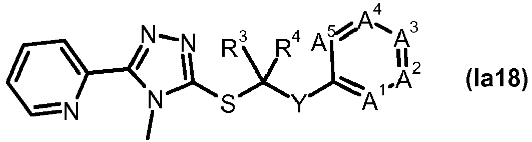 A19. Verbindungen A19-1 bis A19-798 der allgemeinen Formel (Ia19), worin R³, R⁴, Y, A¹, A², A³, A⁴, A⁵ den Definitionen (Nos 1 bis 798; entsprechend Verbindungen A19-1 bis A18-799) in der oben stehenden Tabelle 1 entsprechen. 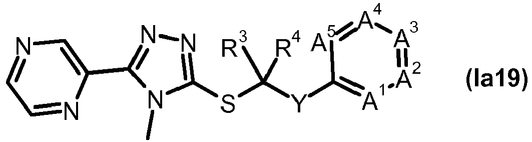 A20. Verbindungen A20-1 bis A20-798 der allgemeinen Formel (Ia20), worin R³, R⁴, Y, A¹, A², A³, A⁴, A⁵ den Definitionen (Nos 1 bis 798; entsprechend Verbindungen A20-1 bis A20-798) in der oben stehenden Tabelle 1 entsprechen. 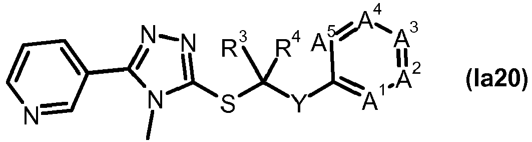 A21. Verbindungen A21-1 bis A21-798 der allgemeinen Formel (Ia21), worin R³, R⁴, Y, A¹, A², A³, A⁴, A⁵ den Definitionen (Nos 1 bis 798; entsprechend Verbindungen A21-1 bis A21-798) in der oben stehenden Tabelle 1 entsprechen. 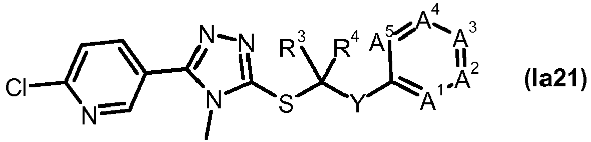 A22. Verbindungen A22-1 bis A22-798 der allgemeinen Formel (Ia22), worin R³, R⁴, Y, A¹, A², A³, A⁴, A⁵ den Definitionen (Nos 1 bis 798; entsprechend Verbindungen A22-1 bis A22-798) in der oben stehenden Tabelle 1 entsprechen. 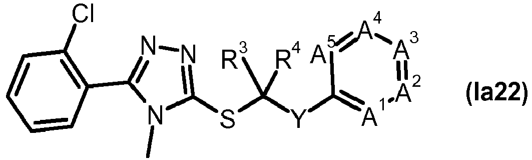 A23. Verbindungen A23-1 bis A23-798 der allgemeinen Formel (Ia23), worin R³, R⁴, Y, A¹, A², A³, A⁴, A⁵ den Definitionen (Nos 1 bis 798; entsprechend Verbindungen A23-1 bis A23-798) in der oben stehenden Tabelle 1 entsprechen. 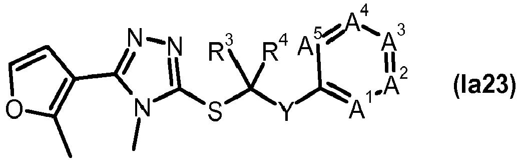 A24. Verbindungen A24-1 bis A24-798 der allgemeinen Formel (Ia24), worin R³, R⁴, Y, A¹, A², A³, A⁴, A⁵ den Definitionen (Nos 1 bis 798; entsprechend Verbindungen A24-1 bis A24-798) in der oben stehenden Tabelle 1 entsprechen. 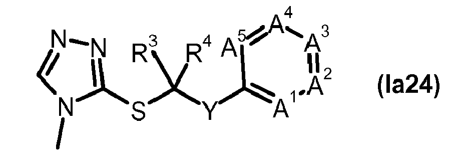 A25. Verbindungen A25-1 bis A25-798 der allgemeinen Formel (Ia25), worin R³, R⁴, Y, A¹, A², A³, A⁴, A⁵ den Definitionen (Nos 1 bis 798; entsprechend Verbindungen A25-1 bis A25-798) in der oben stehenden Tabelle 1 entsprechen. 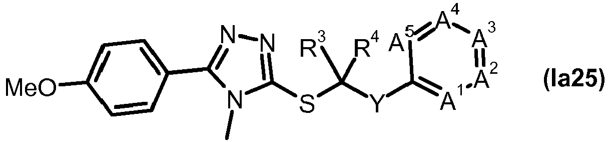 A26. Verbindungen A26-1 bis A26-798 der allgemeinen Formel (Ia26), worin R³, R⁴, Y, A¹, A², A³, A⁴, A⁵ den Definitionen (Nos 1 bis 798; entsprechend Verbindungen A26-1 bis A26-798) in der oben stehenden Tabelle 1 entsprechen. 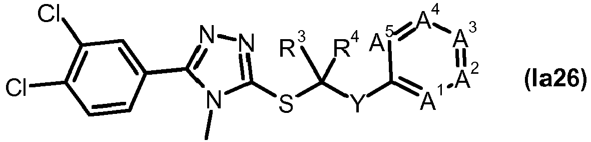 A27. Verbindungen A27-1 bis A27-798 der allgemeinen Formel (Ia27), worin R³, R⁴, Y, A¹, A², A³, A⁴, A⁵ den Definitionen (Nos 1 bis 798; entsprechend Verbindungen A27-1 bis A27-798) in der oben stehenden Tabelle 1 entsprechen. 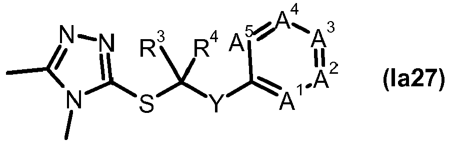 B1. Verbindungen B1-1 bis B1-798 der allgemeinen Formel (Ib1 ), worin R³, R⁴, Y, A¹, A², A³, A⁴, A⁵ den Definitionen (Nos 1 bis 798; entsprechend Verbindungen B1-1 bis B1-798) in der oben stehenden Tabelle 1 entsprechen. 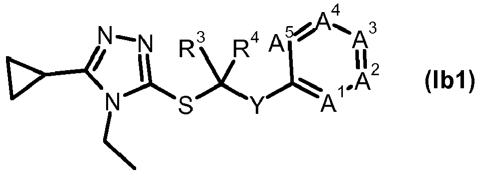 B2. Verbindungen B2-1 bis B2-798 der allgemeinen Formel (Ib2), worin R³, R⁴, Y, A¹, A², A³, A⁴, A⁵ den Definitionen (Nos 1 bis 798; entsprechend Verbindungen B2-1 bis B2-798) in der oben stehenden Tabelle 1 entsprechen. 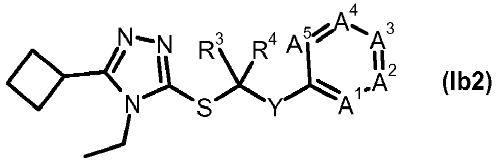 B3. Verbindungen B3-1 bis B3-798 der allgemeinen Formel (Ib3), worin R³, R⁴, Y, A¹, A², A³, A⁴, A⁵ den Definitionen (Nos 1 bis 798; entsprechend Verbindungen B3-1 bis B3-798) in der oben stehenden Tabelle 1 entsprechen. 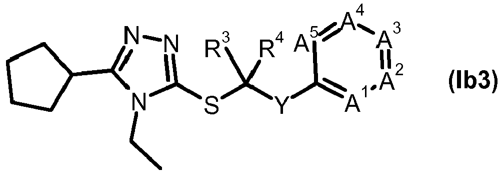 B4. Verbindungen B4-1 bis B4-798 der allgemeinen Formel (Ib4), worin R³, R⁴, Y, A¹, A², A³, A⁴, A⁵ den Definitionen (Nos 1 bis 798; entsprechend Verbindungen B4-1 bis B4-798) in der oben stehenden Tabelle 1 entsprechen. 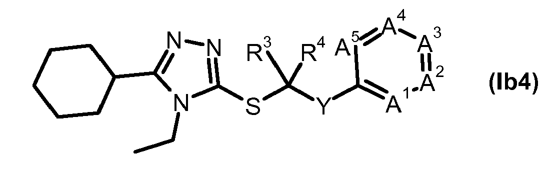 B5. Verbindungen B5-1 bis B5-798 der allgemeinen Formel (Ib5), worin R³, R⁴, Y, A¹, A², A³, A⁴, A⁵ den Definitionen (Nos 1 bis 798; entsprechend Verbindungen B5-1 bis B5-798) in der oben stehenden Tabelle 1 entsprechen. 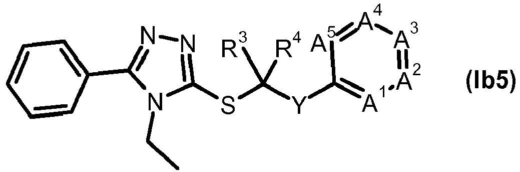 B6. Verbindungen B6-1 bis B6-798 der allgemeinen Formel (Ib6), worin R³, R⁴, Y, A¹, A², A³, A⁴, A⁵ den Definitionen (Nos 1 bis 798; entsprechend Verbindungen B6-1 bis B6-798) in der oben stehenden Tabelle 1 entsprechen. 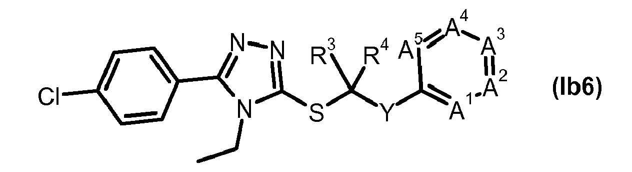 B7. Verbindungen B7-1 bis B7-798 der allgemeinen Formel (Ib7), worin R³, R⁴, Y, A¹, A², A³, A⁴, A⁵ den Definitionen (Nos 1 bis 798; entsprechend Verbindungen B7-1 bis B7-798) in der oben stehenden Tabelle 1 entsprechen. 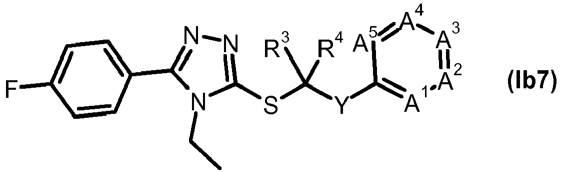 B8. Verbindungen B8-1 bis B8-798 der allgemeinen Formel (Ib8), worin R³, R⁴, Y, A¹, A², A³, A⁴, A⁵ den Definitionen (Nos 1 bis 798; entsprechend Verbindungen B8-1 bis B8-798) in der oben stehenden Tabelle 1 entsprechen. 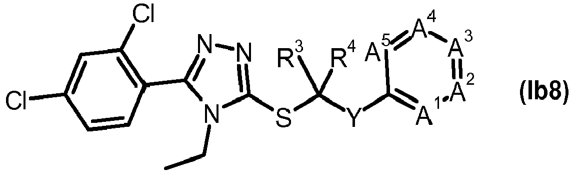 B9. Verbindungen B9-1 bis B9-798 der allgemeinen Formel (Ib9), worin R³, R⁴, Y, A¹, A², A³, A⁴, A⁵ den Definitionen (Nos 1 bis 798; entsprechend Verbindungen B9-1 bis B9-798) in der oben stehenden Tabelle 1 entsprechen. 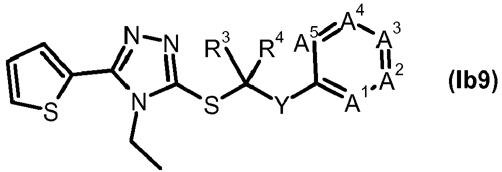 B10. Verbindungen B10-1 bis B10-798 der allgemeinen Formel (Ib10), worin R³, R⁴, Y, A¹, A², A³, A⁴, A⁵ den Definitionen (Nos 1 bis 798; entsprechend Verbindungen B10-1 bis B10-798) in der oben stehenden Tabelle 1 entsprechen. 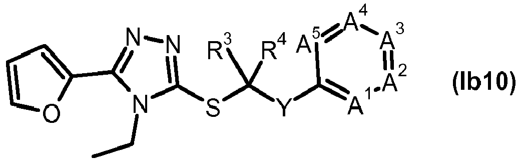 B11. Verbindungen B11-1 bis B11-798 der allgemeinen Formel (Ib11), worin R³, R⁴, Y, A¹, A², A³, A⁴, A⁵ den Definitionen (Nos 1 bis 798; entsprechend Verbindungen B11-1 bis B11-798) in der oben stehenden Tabelle 1 entsprechen. 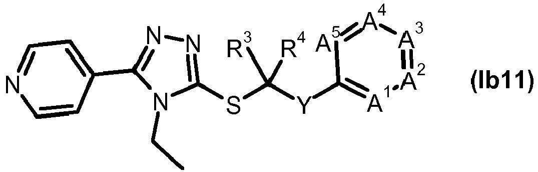 B12. Verbindungen B12-1 bis B12-798 der allgemeinen Formel (Ib12), worin R³, R⁴, Y, A¹, A², A³, A⁴, A⁵ den Definitionen (Nos 1 bis 798; entsprechend Verbindungen B12-1 bis B12-798) in der oben stehenden Tabelle 1 entsprechen. 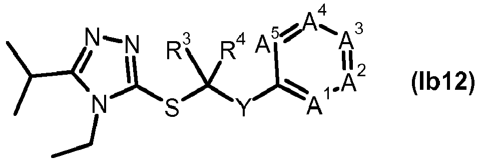 B13. Verbindungen B13-1 bis B13-798 der allgemeinen Formel (Ib13), worin R³, R⁴, Y, A¹, A², A³, A⁴, A⁵ den Definitionen (Nos 1 bis 798; entsprechend Verbindungen B13-1 bis B13-798) in der oben stehenden Tabelle 1 entsprechen. 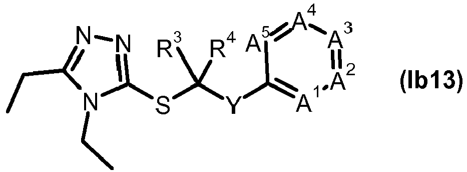 B14. Verbindungen B14-1 bis B14-798 der allgemeinen Formel (Ib14), worin R³, R⁴, Y, A¹, A², A³, A⁴, A⁵ den Definitionen (Nos 1 bis 798; entsprechend Verbindungen B14-1 bis B14-798) in der oben stehenden Tabelle 1 entsprechen. 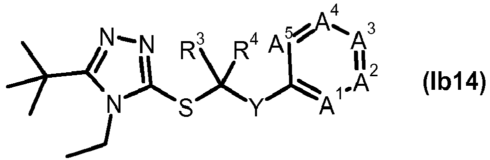 B15. Verbindungen B15-1 bis B15-798 der allgemeinen Formel (Ib15), worin R³, R⁴, Y, A¹, A², A³, A⁴, A⁵ den Definitionen (Nos 1 bis 798; entsprechend Verbindungen B15-1 bis B15-798) in der oben stehenden Tabelle 1 entsprechen. 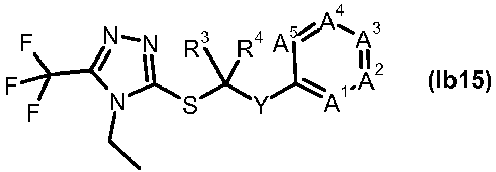 B16. Verbindungen B16-1 bis B16-798 der allgemeinen Formel (Ib16), worin R³, R⁴, Y, A¹, A², A³, A⁴, A⁵ den Definitionen (Nos 1 bis 798; entsprechend Verbindungen B16-1 bis B16-798) in der oben stehenden Tabelle 1 entsprechen. 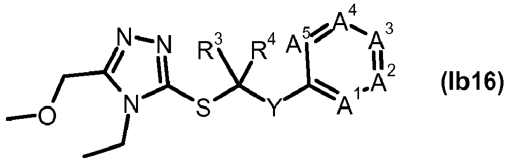 B17. Verbindungen B17-1 bis B17-798 der allgemeinen Formel (Ib17), worin R³, R⁴, Y, A¹, A², A³, A⁴, A⁵ den Definitionen (Nos 1 bis 798; entsprechend Verbindungen B17-1 bis B17-798) in der oben stehenden Tabelle 1 entsprechen. 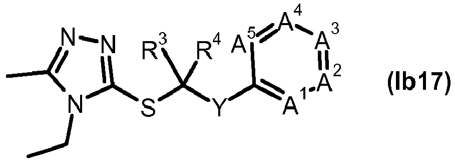 C1. Verbindungen C1-1 bis C1-798 der allgemeinen Formel (Ic1), worin R³, R⁴, Y, A¹, A², A³, A⁴, A⁵ den Definitionen (Nos 1 bis 798; entsprechend Verbindungen C1-1 bis C1-798) in der oben stehenden Tabelle 1 entsprechen. 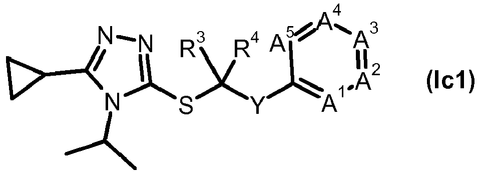 C2. Verbindungen C2-1 bis C2-798 der allgemeinen Formel (Ic2), worin R³, R⁴, Y, A¹, A², A³, A⁴, A⁵ den Definitionen (Nos 1 bis 798; entsprechend Verbindungen C2-1 bis C2-798) in der oben stehenden Tabelle 1 entsprechen. 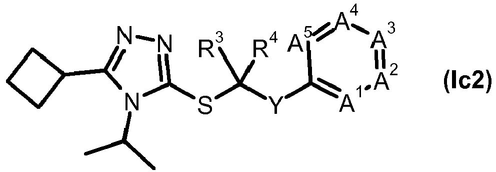 C3. Verbindungen C3-1 bis C3-798 der allgemeinen Formel (Ic3), worin R³, R⁴, Y, A¹, A², A³, A⁴, A⁵ den Definitionen (Nos 1 bis 798; entsprechend Verbindungen C3-1 bis C3-798) in der oben stehenden Tabelle 1 entsprechen. 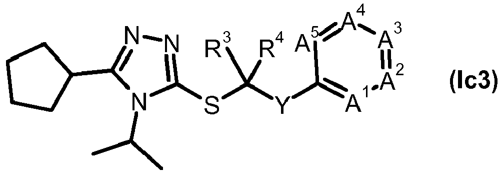 C4. Verbindungen C4-1 bis C4-798 der allgemeinen Formel (Ic4), worin R³, R⁴, Y, A¹, A², A³, A⁴, A⁵ den Definitionen (Nos 1 bis 798; entsprechend Verbindungen C4-1 bis C4-798) in der oben stehenden Tabelle 1 entsprechen. 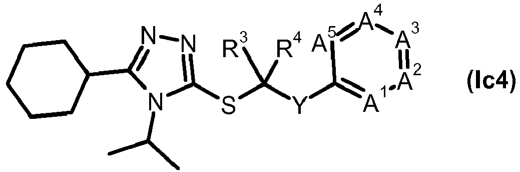 C5. Verbindungen C5-1 bis C5-798 der allgemeinen Formel (Ic5), worin R³, R⁴, Y, A¹, A², A³, A⁴, A⁵ den Definitionen (Nos 1 bis 798; entsprechend Verbindungen C5-1 bis C5-798) in der oben stehenden Tabelle 1 entsprechen. 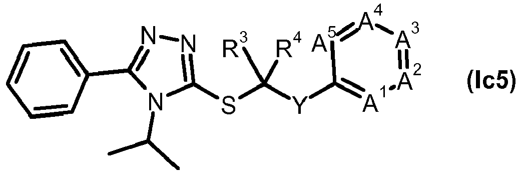 C6. Verbindungen C6-1 bis C6-798 der allgemeinen Formel (Ic6), worin R³, R⁴, Y, A¹, A², A³, A⁴, A⁵ den Definitionen (Nos 1 bis 798; entsprechend Verbindungen C6-1 bis C6-798) in der oben stehenden Tabelle 1 entsprechen. 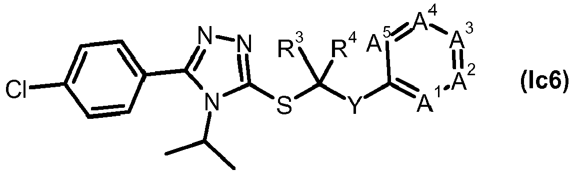 C7. Verbindungen C7-1 bis C7-798 der allgemeinen Formel (Ic7), worin R³, R⁴, Y, A¹, A², A³, A⁴, A⁵ den Definitionen (Nos 1 bis 798; entsprechend Verbindungen C7-1 bis C7-798) in der oben stehenden Tabelle 1 entsprechen. 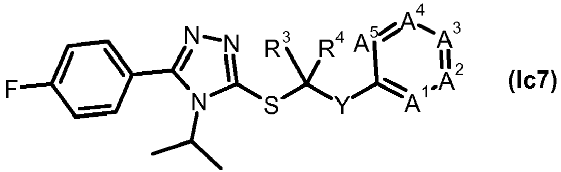 C8. Verbindungen C8-1 bis C8-798 der allgemeinen Formel (Ic8), worin R³, R⁴, Y, A¹, A², A³, A⁴, A⁵ den Definitionen (Nos 1 bis 798; entsprechend Verbindungen C8-1 bis C8-798) in der oben stehenden Tabelle 1 entsprechen. 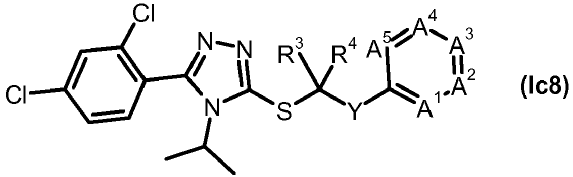 C9. Verbindungen C9-1 bis C9-798 der allgemeinen Formel (Ic9), worin R³, R⁴, Y, A¹, A², A³, A⁴, A⁵ den Definitionen (Nos 1 bis 798; entsprechend Verbindungen C9-1 bis C9-798) in der oben stehenden Tabelle 1 entsprechen. 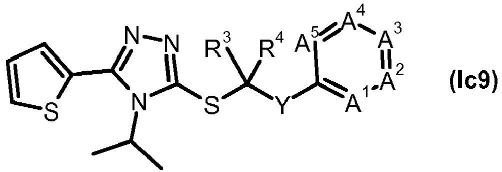 C10. Verbindungen C10-1 bis C10-798 der allgemeinen Formel (Ic10), worin R³, R⁴, Y, A¹, A², A³, A⁴, A⁵ den Definitionen (Nos 1 bis 798; entsprechend Verbindungen C10-1 bis C10-798) in der oben stehenden Tabelle 1 entsprechen. 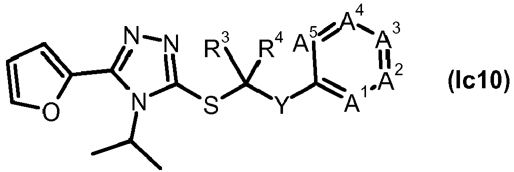 C11. Verbindungen C11-1 bis C11-798 der allgemeinen Formel (Ic11), worin R³, R⁴, Y, A¹, A², A³, A⁴, A⁵ den Definitionen (Nos 1 bis 798; entsprechend Verbindungen C11-1 bis C11-798) in der oben stehenden Tabelle 1 entsprechen. 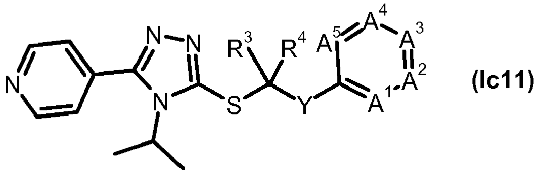 C12. Verbindungen C12-1 bis C12-798 der allgemeinen Formel (Ic12), worin R³, R⁴, Y, A¹, A², A³, A⁴, A⁵ den Definitionen (Nos 1 bis 798; entsprechend Verbindungen C12-1 bis C12-798) in der oben stehenden Tabelle 1 entsprechen. 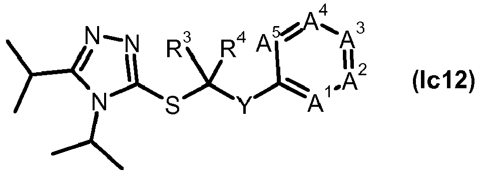 C13. Verbindungen C13-1 bis C13-798 der allgemeinen Formel (Ic13), worin R³, R⁴, Y, A¹, A², A³, A⁴, A⁵ den Definitionen (Nos 1 bis 798; entsprechend Verbindungen C13-1 bis C13-798) in der oben stehenden Tabelle 1 entsprechen. 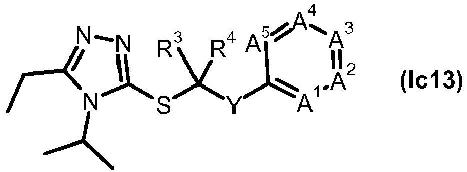 C14. Verbindungen C14-1 bis C14-798 der allgemeinen Formel (Ic14), worin R³, R⁴, Y, A¹, A², A³, A⁴, A⁵ den Definitionen (Nos 1 bis 798; entsprechend Verbindungen C14-1 bis C14-798) in der oben stehenden Tabelle 1 entsprechen. 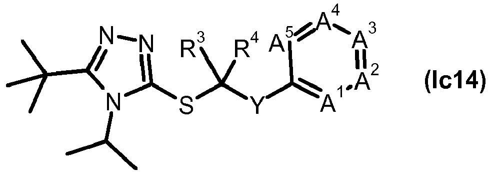 C15. Verbindungen C15-1 bis C15-798 der allgemeinen Formel (Ic15), worin R³, R⁴, Y, A¹, A², A³, A⁴, A⁵ den Definitionen (Nos 1 bis 798; entsprechend Verbindungen C15-1 bis C15-798) in der oben stehenden Tabelle 1 entsprechen. 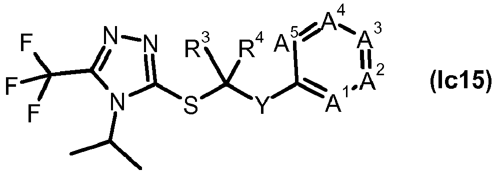 C16. Verbindungen C16-1 bis C16-798 der allgemeinen Formel (Ic16), worin R³, R⁴, Y, A¹, A², A³, A⁴, A⁵ den Definitionen (Nos 1 bis 798; entsprechend Verbindungen C16-1 bis C16-798) in der oben stehenden Tabelle 1 entsprechen. 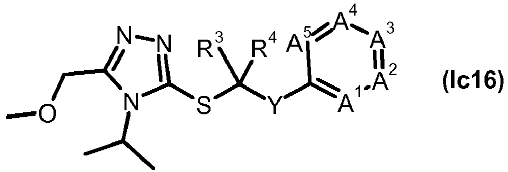 C17. Verbindungen C17-1 bis C17-798 der allgemeinen Formel (Ic17), worin R³, R⁴, Y, A¹, A², A³, A⁴, A⁵ den Definitionen (Nos 1 bis 798; entsprechend Verbindungen C17-1 bis C17-798) in der oben stehenden Tabelle 1 entsprechen. 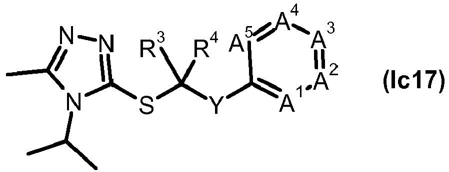 C18. Verbindungen C18-1 bis C18-798 der allgemeinen Formel (Ic18), worin R³, R⁴, Y, A¹, A², A³, A⁴, A⁵ den Definitionen (Nos 1 bis 798; entsprechend Verbindungen C18-1 bis C18-798) in der oben stehenden Tabelle 1 entsprechen. 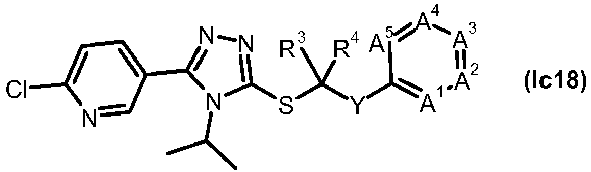 D1. Verbindungen D1-1 bis D1-798 der allgemeinen Formel (Id1), worin R³, R⁴, Y, A¹, A², A³, A⁴, A⁵ den Definitionen (Nos 1 bis 798; entsprechend Verbindungen D1-1 bis D1-798) in der oben stehenden Tabelle 1 entsprechen. 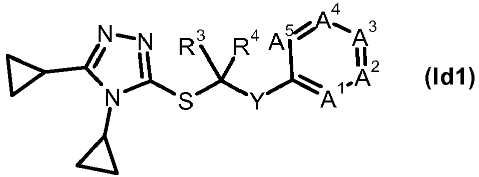 D2. Verbindungen D2-1 bis D2-798 der allgemeinen Formel (Id2), worin R³, R⁴, Y, A¹, A², A³, A⁴, A⁵ den Definitionen (Nos 1 bis 798; entsprechend Verbindungen D2-1 bis D2-798) in der oben stehenden Tabelle 1 entsprechen. 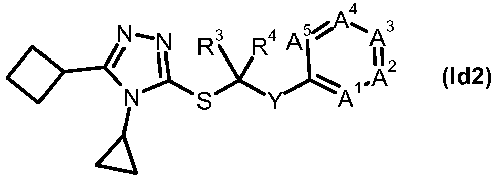 D3. Verbindungen D3-1 bis D3-798 der allgemeinen Formel (Id3), worin R³, R⁴, Y, A¹, A², A³, A⁴, A⁵ den Definitionen (Nos 1 bis 798; entsprechend Verbindungen D3-1 bis D3-798) in der oben stehenden Tabelle 1 entsprechen. 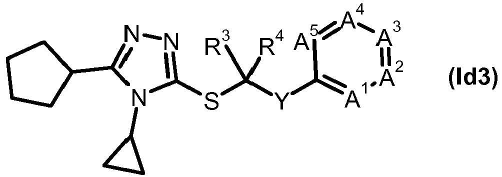 D4. Verbindungen D4-1 bis D4-798 der allgemeinen Formel (Id4), worin R³, R⁴, Y, A¹, A², A³, A⁴, A⁵ den Definitionen (Nos 1 bis 798; entsprechend Verbindungen D4-1 bis D4-798) in der oben stehenden Tabelle 1 entsprechen. 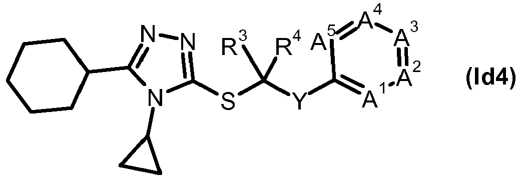 D5. Verbindungen D5-1 bis D5-798 der allgemeinen Formel (Id5), worin R³, R⁴, Y, A¹, A², A³, A⁴, A⁵ den Definitionen (Nos 1 bis 798; entsprechend Verbindungen D5-1 bis D5-798) in der oben stehenden Tabelle 1 entsprechen. 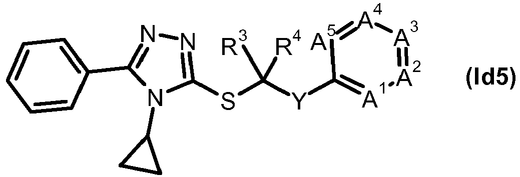 D6. Verbindungen D6-1 bis D6-798 der allgemeinen Formel (Id6), worin R³, R⁴, Y, A¹, A², A³, A⁴, A⁵ den Definitionen (Nos 1 bis 798; entsprechend Verbindungen D6-1 bis D6-798) in der oben stehenden Tabelle 1 entsprechen. 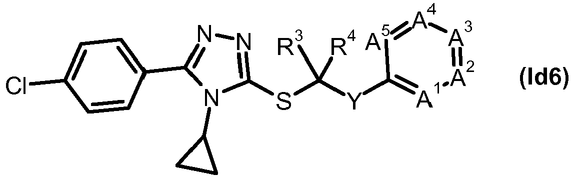 D7. Verbindungen D7-1 bis D7-798 der allgemeinen Formel (Id7), worin R³, R⁴, Y, A¹, A², A³, A⁴, A⁵ den Definitionen (Nos 1 bis 798; entsprechend Verbindungen D7-1 bis D7-798) in der oben stehenden Tabelle 1 entsprechen. 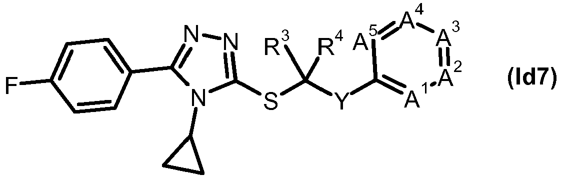 D8. Verbindungen D8-1 bis D8-798 der allgemeinen Formel (Id8), worin R³, R⁴, Y, A¹, A², A³, A⁴, A⁵ den Definitionen (Nos 1 bis 798; entsprechend Verbindungen D8-1 bis D8-798) in der oben stehenden Tabelle 1 entsprechen. 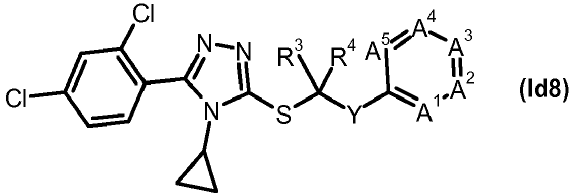 D9. Verbindungen D9-1 bis D9-798 der allgemeinen Formel (Id9), worin R³, R⁴, Y, A¹, A², A³, A⁴, A⁵ den Definitionen (Nos 1 bis 798; entsprechend Verbindungen D9-1 bis D9-798) in der oben stehenden Tabelle 1 entsprechen. 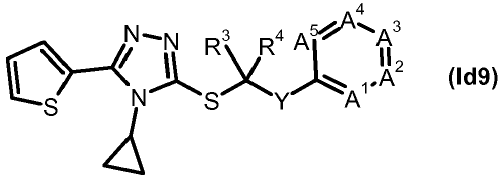 D10. Verbindungen D10-1 bis D10-798 der allgemeinen Formel (Id10), worin R³, R⁴, Y, A¹, A², A³, A⁴, A⁵ den Definitionen (Nos 1 bis 798; entsprechend Verbindungen D10-1 bis D10-798) in der oben stehenden Tabelle 1 entsprechen. 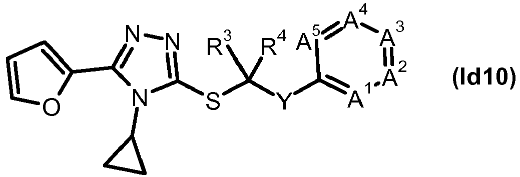 D11. Verbindungen D11-1 bis D11-798 der allgemeinen Formel (Id11), worin R³, R⁴, Y, A¹, A², A³, A⁴, A⁵ den Definitionen (Nos 1 bis 798; entsprechend Verbindungen D11-1 bis D11-798) in der oben stehenden Tabelle 1 entsprechen. 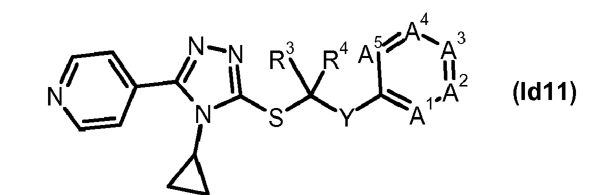 D12. Verbindungen D12-1 bis D12-798 der allgemeinen Formel (Id12), worin R³, R⁴, Y, A¹, A², A³, A⁴, A⁵ den Definitionen (Nos 1 bis 798; entsprechend Verbindungen D12-1 bis D12-798) in der oben stehenden Tabelle 1 entsprechen. 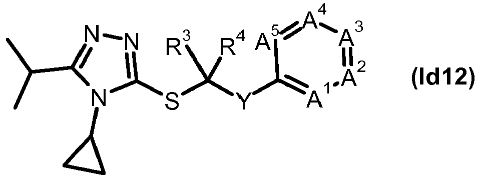 D13. Verbindungen D13-1 bis D13-798 der allgemeinen Formel (Id13), worin R³, R⁴, Y, A¹, A², A³, A⁴, A⁵ den Definitionen (Nos 1 bis 798; entsprechend Verbindungen D13-1 bis D13-798) in der oben stehenden Tabelle 1 entsprechen. 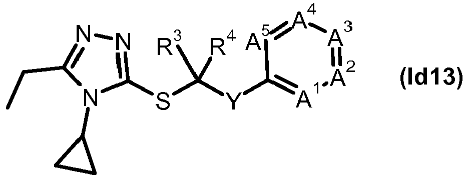 D14. Verbindungen D14-1 bis D14-798 der allgemeinen Formel (Id14), worin R³, R⁴, Y, A¹, A², A³, A⁴, A⁵ den Definitionen (Nos 1 bis 798; entsprechend Verbindungen D14-1 bis D14-798) in der oben stehenden Tabelle 1 entsprechen. 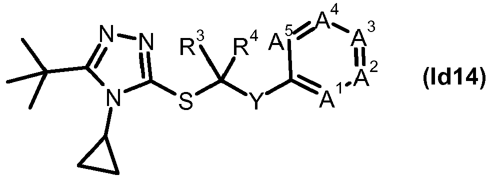 D15. Verbindungen D15-1 bis D15-798 der allgemeinen Formel (Id15), worin R³, R⁴, Y, A¹, A², A³, A⁴, A⁵ den Definitionen (Nos 1 bis 798; entsprechend Verbindungen D15-1 bis D15-798) in der oben stehenden Tabelle 1 entsprechen. 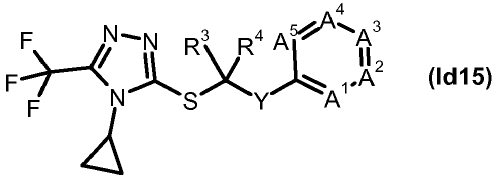 D16. Verbindungen D16-1 bis D16-798 der allgemeinen Formel (Id16), worin R³, R⁴, Y, A¹, A², A³, A⁴, A⁵ den Definitionen (Nos 1 bis 798; entsprechend Verbindungen D16-1 bis D16-798) in der oben stehenden Tabelle 1 entsprechen. 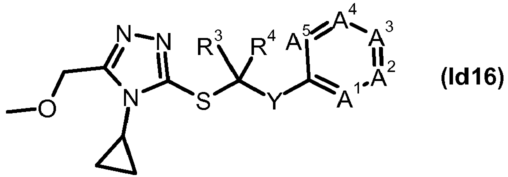 D17. Verbindungen D17-1 bis D17-798 der allgemeinen Formel (Id17), worin R³, R⁴, Y, A¹, A², A³, A⁴, A⁵ den Definitionen (Nos 1 bis 798; entsprechend Verbindungen D17-1 bis D17-798) in der oben stehenden Tabelle 1 entsprechen. 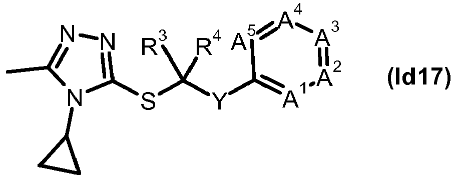 D18. Verbindungen D18-1 bis D18-798 der allgemeinen Formel (1d18), worin R³, R⁴, Y, A¹, A², A³, A⁴, A⁵ den Definitionen (Nos 1 bis 798; entsprechend Verbindungen D18-1 bis D18-798) in der oben stehenden Tabelle 1 entsprechen. 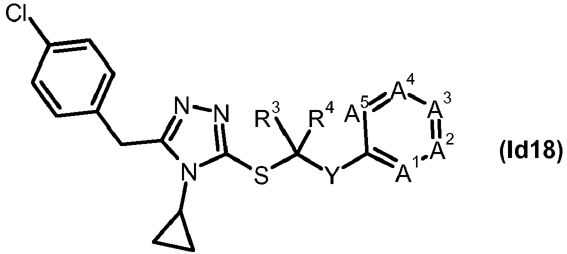 E1. Verbindungen E1-1 bis E1-798 der allgemeinen Formel (Ie1), worin R³, R⁴, Y, A¹, A², A³, A⁴, A⁵ den Definitionen (Nos 1 bis 798; entsprechend Verbindungen E1-1 bis E1-798) in der oben stehenden Tabelle 1 entsprechen. 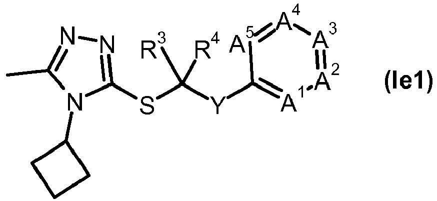 E2. Verbindungen E2-1 bis E2-798 der allgemeinen Formel (Ie2), worin R³, R⁴, Y, A¹, A², A³, A⁴, A⁵ den Definitionen (Nos 1 bis 798; entsprechend Verbindungen E2-1 bis E2-798) in der oben stehenden Tabelle 1 entsprechen. 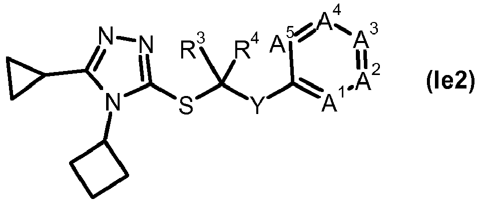 E3. Verbindungen E3-1 bis E3-798 der allgemeinen Formel (Ie3), worin R³, R⁴, Y, A¹, A², A³, A⁴, A⁵ den Definitionen (Nos 1 bis 798; entsprechend Verbindungen E3-1 bis E3-798) in der oben stehenden Tabelle 1 entsprechen. 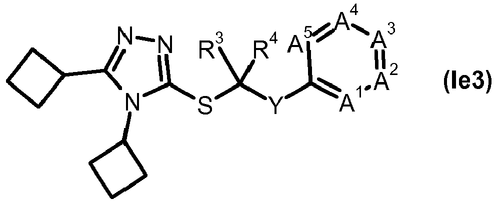 E4. Verbindungen E4-1 bis E4-798 der allgemeinen Formel (Ie4), worin R³, R⁴, Y, A¹, A², A³, A⁴, A⁵ den Definitionen (Nos 1 bis 798; entsprechend Verbindungen E4-1 bis E4-798) in der oben stehenden Tabelle 1 entsprechen. 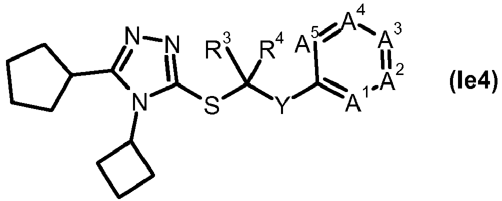 E5. Verbindungen E5-1 bis E5-798 der allgemeinen Formel (Ie5), worin R³, R⁴, Y, A¹, A², A³, A⁴, A⁵ den Definitionen (Nos 1 bis 798; entsprechend Verbindungen E5-1 bis E5-798) in der oben stehenden Tabelle 1 entsprechen. 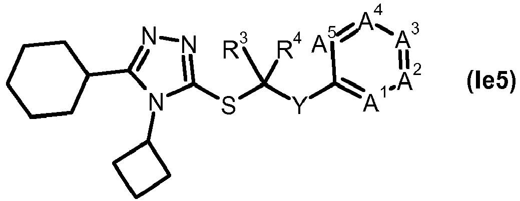 E6. Verbindungen E6-1 bis E6-798 der allgemeinen Formel (Ie6), worin R³, R⁴, Y, A¹, A², A³, A⁴, A⁵ den Definitionen (Nos 1 bis 798; entsprechend Verbindungen E6-1 bis E6-798) in der oben stehenden Tabelle 1 entsprechen. 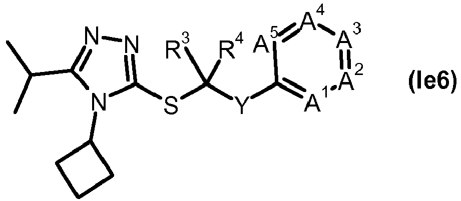 E7. Verbindungen E7-1 bis E7-798 der allgemeinen Formel (Ie7), worin R³, R⁴, Y, A¹, A², A³, A⁴, A⁵ den Definitionen (Nos 1 bis 798; entsprechend Verbindungen E7-1 bis E7-798) in der oben stehenden Tabelle 1 entsprechen. 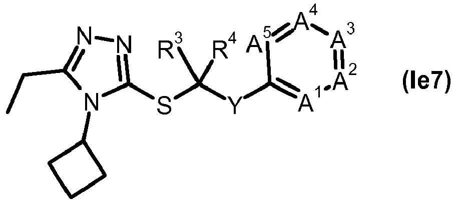 E8. Verbindungen E8-1 bis E8-798 der allgemeinen Formel (Ie8), worin R³, R⁴, Y, A¹, A², A³, A⁴, A⁵ den Definitionen (Nos 1 bis 798; entsprechend Verbindungen E8-1 bis E8-798) in der oben stehenden Tabelle 1 entsprechen. 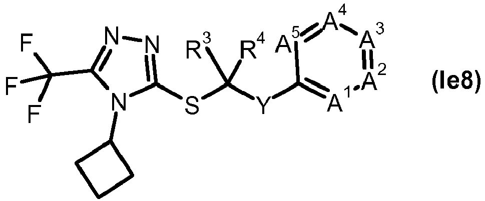 E9. Verbindungen E9-1 bis E9-798 der allgemeinen Formel (Ie9), worin R³, R⁴, Y, A¹, A², A³, A⁴, A⁵ den Definitionen (Nos 1 bis 798; entsprechend Verbindungen E9-1 bis E9-798) in der oben stehenden Tabelle 1 entsprechen. 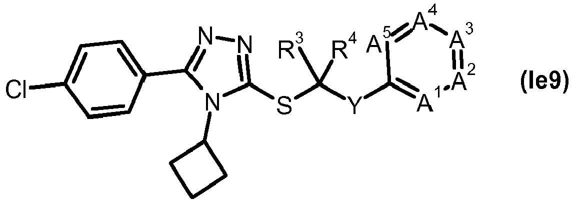 E10. Verbindungen E10-1 bis E10-798 der allgemeinen Formel (Ie10), worin R³, R⁴, Y, A¹, A², A³, A⁴, A⁵ den Definitionen (Nos 1 bis 798; entsprechend Verbindungen E10-1 bis E10-798) in der oben stehenden Tabelle 1 entsprechen. 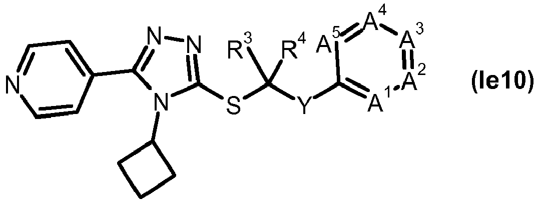 E11. Verbindungen E11-1 bis E11-798 der allgemeinen Formel (Ie11), worin R³, R⁴, Y, A¹, A², A³, A⁴, A⁵ den Definitionen (Nos 1 bis 798; entsprechend Verbindungen E11-1 bis E11-798) in der oben stehenden Tabelle 1 entsprechen. 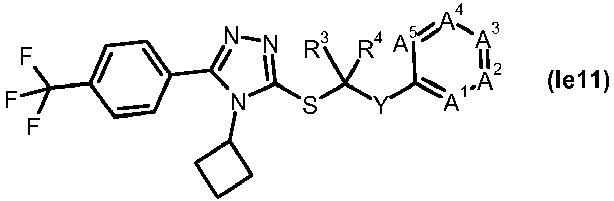 F1. Verbindungen F1-1 bis F1-798 der allgemeinen Formel (If1), worin R³, R⁴, Y, A¹, A², A³, A⁴, A⁵ den Definitionen (Nos 1 bis 798; entsprechend Verbindungen F1-1 bis F1-798) in der oben stehenden Tabelle 1 entsprechen. 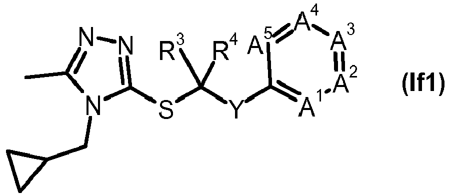 F2. Verbindungen F2-1 bis F2-798 der allgemeinen Formel (If2), worin R³, R⁴, Y, A¹, A², A³, A⁴, A⁵ den Definitionen (Nos 1 bis 798; entsprechend Verbindungen F2-1 bis F2-798) in der oben stehenden Tabelle 1 entsprechen. 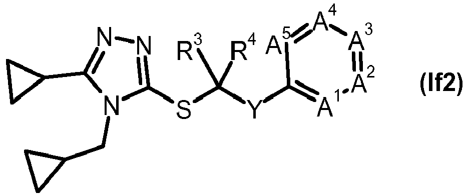 F3. Verbindungen F3-1 bis F3-798 der allgemeinen Formel (If3), worin R³, R⁴, Y, A¹, A², A³, A⁴, A⁵ den Definitionen (Nos 1 bis 798; entsprechend Verbindungen F3-1 bis F3-798) in der oben stehenden Tabelle 1 entsprechen. 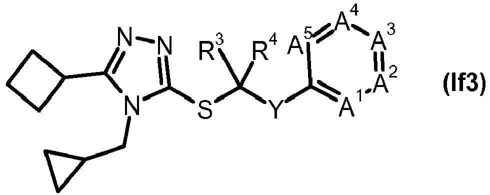 F4. Verbindungen F4-1 bis F4-798 der allgemeinen Formel (If4), worin R³, R⁴, Y, A¹, A², A³, A⁴, A⁵ den Definitionen (Nos 1 bis 798; entsprechend Verbindungen F4-1 bis F4-798) in der oben stehenden Tabelle 1 entsprechen. 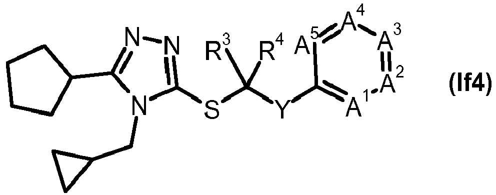 F5. Verbindungen F5-1 bis F5-798 der allgemeinen Formel (If5), worin R³, R⁴, Y, A¹, A², A³, A⁴, A⁵ den Definitionen (Nos 1 bis 798; entsprechend Verbindungen F5-1 bis F5-798) in der oben stehenden Tabelle 1 entsprechen. 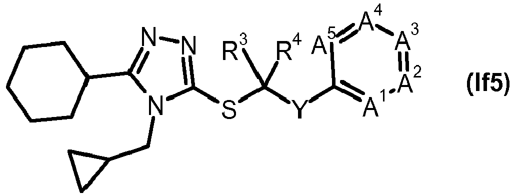 F6. Verbindungen F6-1 bis F6-798 der allgemeinen Formel (If6), worin R³, R⁴, Y, A¹, A², A³, A⁴, A⁵ den Definitionen (Nos 1 bis 798; entsprechend Verbindungen F6-1 bis F6-798) in der oben stehenden Tabelle 1 entsprechen. 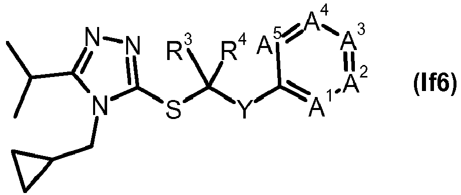 F7. Verbindungen F7-1 bis F7-798 der allgemeinen Formel (If7), worin R³, R⁴, Y, A¹, A², A³, A⁴, A⁵ den Definitionen (Nos 1 bis 798; entsprechend Verbindungen F7-1 bis F7-798) in der oben stehenden Tabelle 1 entsprechen. 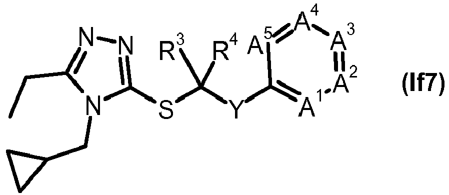 F8. Verbindungen F8-1 bis F8-798 der allgemeinen Formel (If8), worin R³, R⁴, Y, A¹, A², A³, A⁴, A⁵ den Definitionen (Nos 1 bis 798; entsprechend Verbindungen F8-1 bis F8-798) in der oben stehenden Tabelle 1 entsprechen. 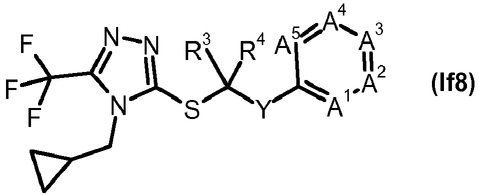 F9. Verbindungen F9-1 bis F9-798 der allgemeinen Formel (If9), worin R³, R⁴, Y, A¹, A², A³, A⁴, A⁵ den Definitionen (Nos 1 bis 798; entsprechend Verbindungen F9-1 bis F9-798) in der oben stehenden Tabelle 1 entsprechen. 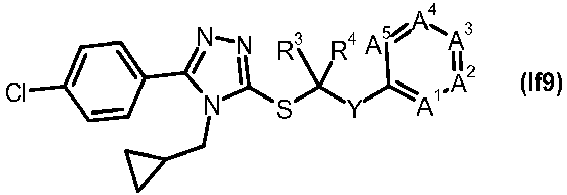 F10. Verbindungen F10-1 bis F10-798 der allgemeinen Formel (If10), worin R³, R⁴, Y, A¹, A², A³, A⁴, A⁵ den Definitionen (Nos 1 bis 798; entsprechend Verbindungen F10-1 bis F10-798) in der oben stehenden Tabelle 1 entsprechen. 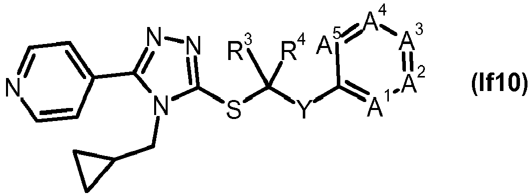 F11. Verbindungen F11-1 bis F11-798 der allgemeinen Formel (If11), worin R³, R⁴, Y, A¹, A², A³, A⁴, A⁵ den Definitionen (Nos 1 bis 798; entsprechend Verbindungen F11-1 bis F11-798) in der oben stehenden Tabelle 1 entsprechen. 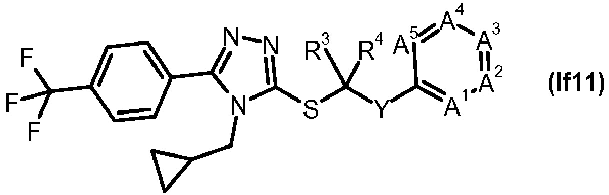 G1. Verbindungen G1-1 bis G1-798 der allgemeinen Formel (Ig1), worin R³, R⁴, Y, A¹, A², A³, A⁴, A⁵ den Definitionen (Nos 1 bis 798; entsprechend Verbindungen G1-1 bis G1-798) in der oben stehenden Tabelle 1 entsprechen. 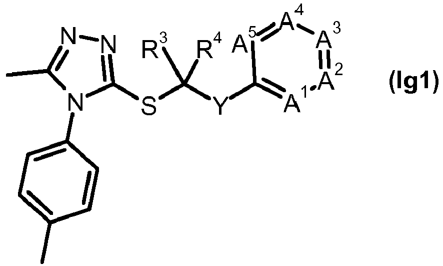 G2. Verbindungen G2-1 bis G2-798 der allgemeinen Formel (Ig2), worin R³, R⁴, Y, A¹, A², A³, A⁴, A⁵ den Definitionen (Nos 1 bis 798; entsprechend Verbindungen G2-1 bis G2-798) in der oben stehenden Tabelle 1 entsprechen. 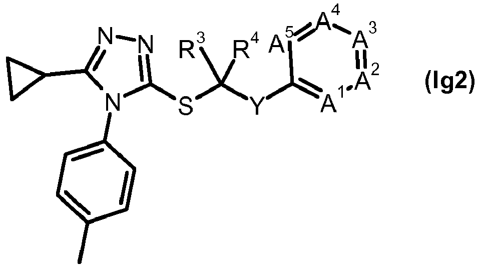 G3. Verbindungen G3-1 bis G3-798 der allgemeinen Formel (Ig3), worin R³, R⁴, Y, A¹, A², A³, A⁴, A⁵ den Definitionen (Nos 1 bis 798; entsprechend Verbindungen G3-1 bis G3-798) in der oben stehenden Tabelle 1 entsprechen. 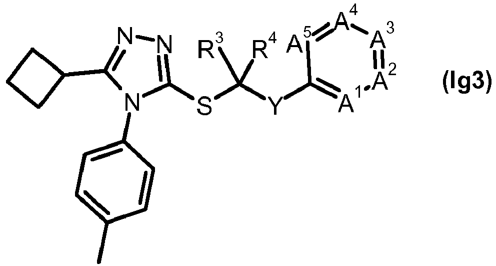 G4. Verbindungen G4-1 bis G4-798 der allgemeinen Formel (Ig4), worin R³, R⁴, Y, A¹, A², A³, A⁴, A⁵ den Definitionen (Nos 1 bis 798; entsprechend Verbindungen G4-1 bis G4-798) in der oben stehenden Tabelle 1 entsprechen. 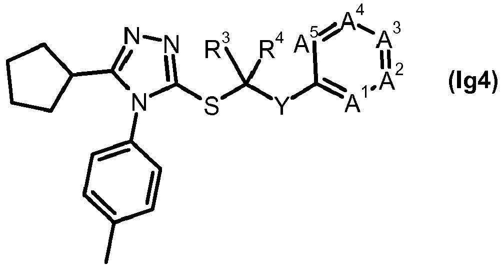 G5. Verbindungen G5-1 bis G5-798 der allgemeinen Formel (Ig5), worin R³, R⁴, Y, A¹, A², A³, A⁴, A⁵ den Definitionen (Nos 1 bis 798; entsprechend Verbindungen G5-1 bis G5-798) in der oben stehenden Tabelle 1 entsprechen. 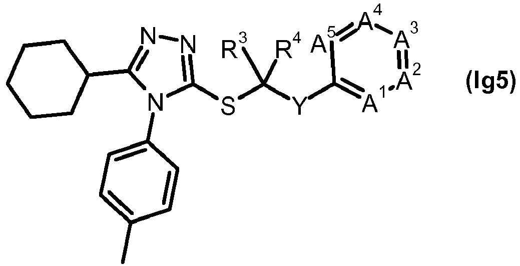 G6. Verbindungen G6-1 bis G6-798 der allgemeinen Formel (Ig6), worin R³, R⁴, Y, A¹, A², A³, A⁴, A⁵ den Definitionen (Nos 1 bis 798; entsprechend Verbindungen G6-1 bis G6-798) in der oben stehenden Tabelle 1 entsprechen. 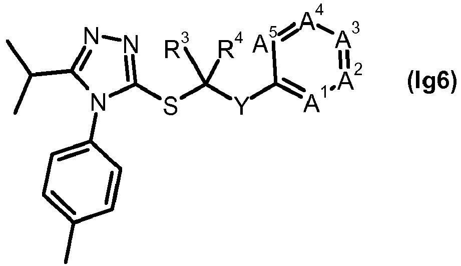 G7. Verbindungen G7-1 bis G7-798 der allgemeinen Formel (Ig7), worin R³, R⁴, Y, A¹, A², A³, A⁴, A⁵ den Definitionen (Nos 1 bis 798; entsprechend Verbindungen G7-1 bis G7-798) in der oben stehenden Tabelle 1 entsprechen. 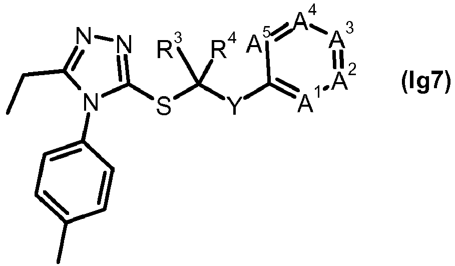 G8. Verbindungen G8-1 bis G8-798 der allgemeinen Formel (Ig8), worin R³, R⁴, Y, A¹, A², A³, A⁴, A⁵ den Definitionen (Nos 1 bis 798; entsprechend Verbindungen G8-1 bis G8-798) in der oben stehenden Tabelle 1 entsprechen. 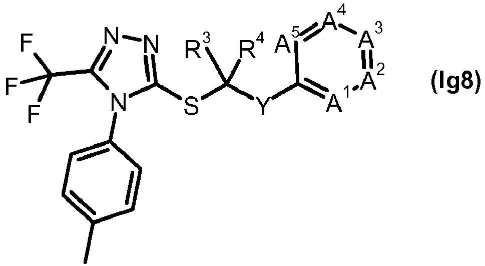 G9. Verbindungen G9-1 bis G9-798 der allgemeinen Formel (Ig9), worin R³, R⁴, Y, A¹, A², A³, A⁴, A⁵ den Definitionen (Nos 1 bis 798; entsprechend Verbindungen G9-1 bis G9-798) in der oben stehenden Tabelle 1 entsprechen. 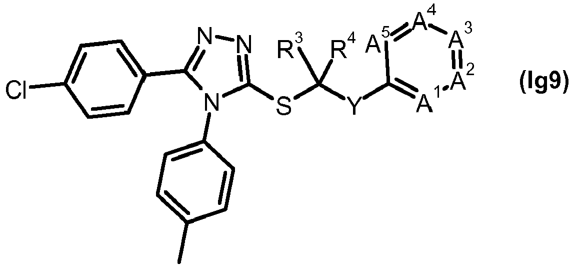 G10. Verbindungen G10-1 bis G10-798 der allgemeinen Formel (Ig10), worin R³, R⁴, Y, A¹, A², A³, A⁴, A⁵ den Definitionen (Nos 1 bis 798; entsprechend Verbindungen G10-1 bis G10-798) in der oben stehenden Tabelle 1 entsprechen. 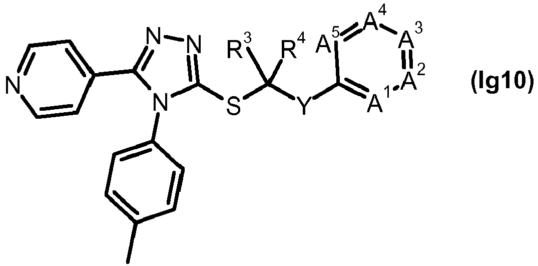 G11. Verbindungen G11-1 bis G11-798 der allgemeinen Formel (Ig11), worin R³, R⁴, Y, A¹, A², A³, A⁴, A⁵ den Definitionen (Nos 1 bis 798; entsprechend Verbindungen G11-1 bis G11-798) in der oben stehenden Tabelle 1 entsprechen. 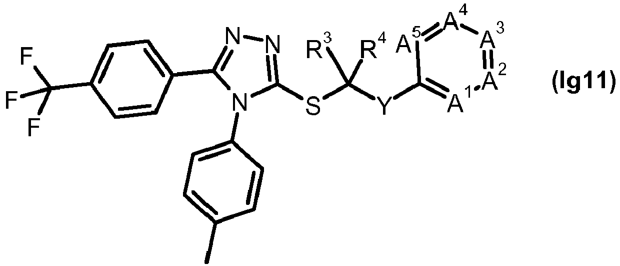 H1. Verbindungen H1-1 bis H1-798 der allgemeinen Formel (Ih1), worin R³, R⁴, Y, A¹, A², A³, A⁴, A⁵ den Definitionen (Nos 1 bis 798; entsprechend Verbindungen H1-1 bis H1-798) in der oben stehenden Tabelle 1 entsprechen. 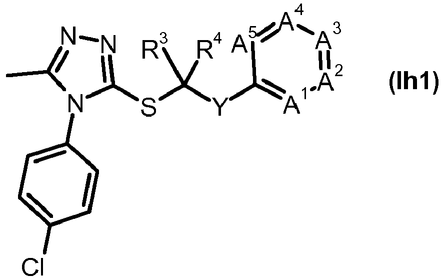 H2. Verbindungen H2-1 bis H2-798 der allgemeinen Formel (Ih2), worin R³, R⁴, Y, A¹, A², A³, A⁴, A⁵ den Definitionen (Nos 1 bis 798; entsprechend Verbindungen H2-1 bis H2-798) in der oben stehenden Tabelle 1 entsprechen. 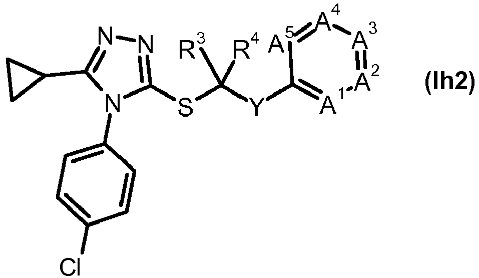 H3. Verbindungen H3-1 bis H3-798 der allgemeinen Formel (Ih3), worin R³, R⁴, Y, A¹, A², A³, A⁴, A⁵ den Definitionen (Nos 1 bis 798; entsprechend Verbindungen H3-1 bis H3-798) in der oben stehenden Tabelle 1 entsprechen. 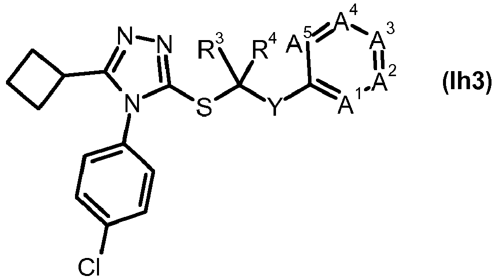 H4. Verbindungen H4-1 bis H4-798 der allgemeinen Formel (Ih4), worin R³, R⁴, Y, A¹, A², A³, A⁴, A⁵ den Definitionen (Nos 1 bis 798; entsprechend Verbindungen H4-1 bis H4-798) in der oben stehenden Tabelle 1 entsprechen. 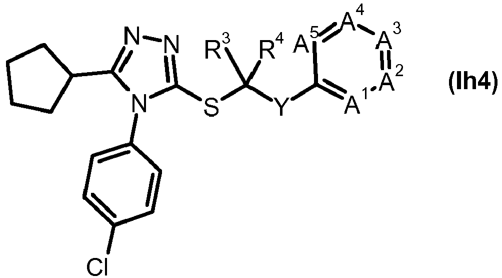 H5. Verbindungen H5-1 bis H5-798 der allgemeinen Formel (Ih5), worin R³, R⁴, Y, A¹, A², A³, A⁴, A⁵ den Definitionen (Nos 1 bis 798; entsprechend Verbindungen H5-1 bis H5-798) in der oben stehenden Tabelle 1 entsprechen. 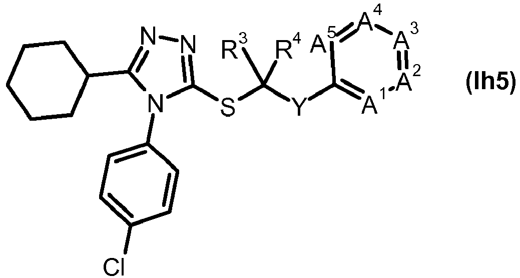 H6. Verbindungen H6-1 bis H6-798 der allgemeinen Formel (Ih6), worin R³, R⁴, Y, A¹, A², A³, A⁴, A⁵ den Definitionen (Nos 1 bis 798; entsprechend Verbindungen H6-1 bis H6-798) in der oben stehenden Tabelle 1 entsprechen. 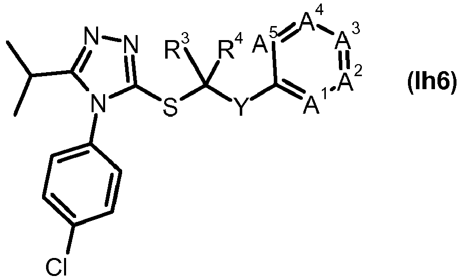 H7. Verbindungen H7-1 bis H7-798 der allgemeinen Formel (Ih7), worin R³, R⁴, Y, A¹, A², A³, A⁴, A⁵ den Definitionen (Nos 1 bis 798; entsprechend Verbindungen H7-1 bis H7-798) in der oben stehenden Tabelle 1 entsprechen. 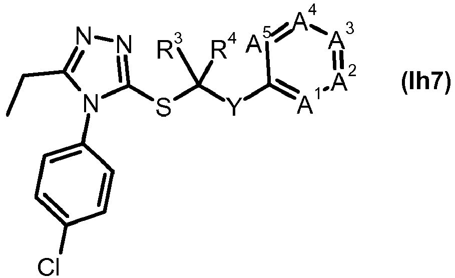 H8. Verbindungen H8-1 bis H8-798 der allgemeinen Formel (Ih8), worin R³, R⁴, Y, A¹, A², A³, A⁴, A⁵ den Definitionen (Nos 1 bis 798; entsprechend Verbindungen H8-1 bis H8-798) in der oben stehenden Tabelle 1 entsprechen. 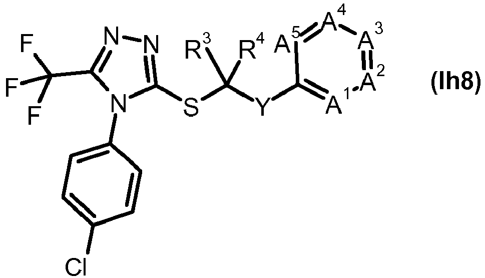 H9. Verbindungen H9-1 bis H9-798 der allgemeinen Formel (Ih9), worin R³, R⁴, Y, A¹, A², A³, A⁴, A⁵ den Definitionen (Nos 1 bis 798; entsprechend Verbindungen H9-1 bis H9-798) in der oben stehenden Tabelle 1 entsprechen. 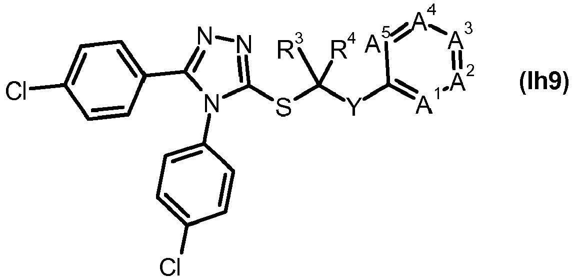 H10. Verbindungen H10-1 bis H10-798 der allgemeinen Formel (Ih10), worin R³, R⁴, Y, A¹, A², A³, A⁴, A⁵ den Definitionen (Nos 1 bis 798; entsprechend Verbindungen H10-1 bis H10-798) in der oben stehenden Tabelle 1 entsprechen. 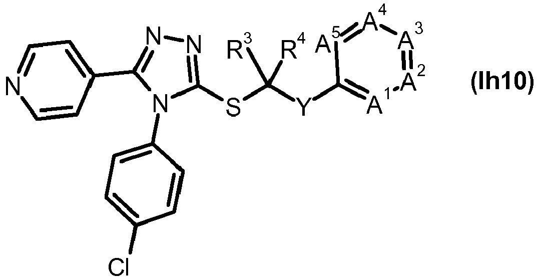 H11. Verbindungen H11-1 bis H11-798 der allgemeinen Formel (Ih11), worin R³, R⁴, Y, A¹, A², A³, A⁴, A⁵ den Definitionen (Nos 1 bis 798; entsprechend Verbindungen H11-1 bis H11-798) in der oben stehenden Tabelle 1 entsprechen. 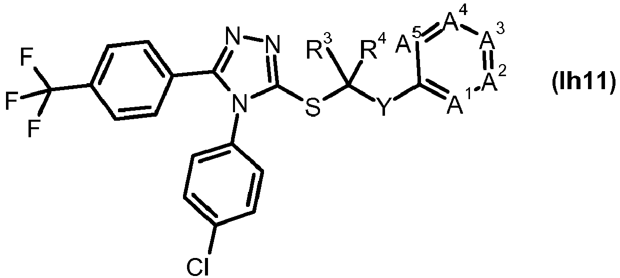 H12. Verbindungen H12-1 bis H12-798 der allgemeinen Formel (Ih12), worin R³, R⁴, Y, A¹, A², A³, A⁴, A⁵ den Definitionen (Nos 1 bis 798; entsprechend Verbindungen H12-1 bis H12-798) in der oben stehenden Tabelle 1 entsprechen. 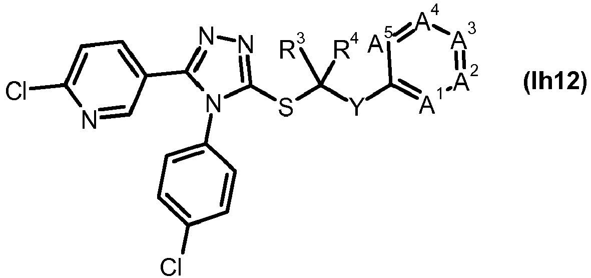 11. Verbindungen 11-1 bis I1-798 der allgemeinen Formel (Ii1), worin R³, R⁴, Y, A¹, A², A³, A⁴, A⁵ den Definitionen (Nos 1 bis 798; entsprechend Verbindungen 11-1 bis 11-798) in der oben stehenden Tabelle 1 entsprechen. 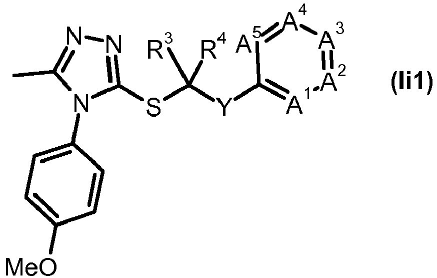 12. Verbindungen 12-1 bis 12-798 der allgemeinen Formel (Ii2), worin R³, R⁴, Y, A¹, A², A³, A⁴, A⁵ den Definitionen (Nos 1 bis 798; entsprechend Verbindungen 12-1 bis 12-798) in der oben stehenden Tabelle 1 entsprechen. 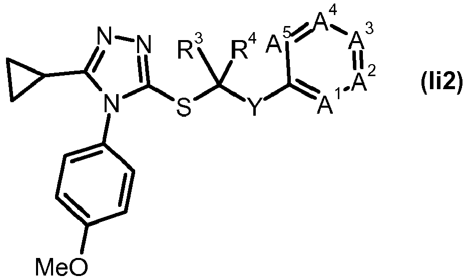 13. Verbindungen 13-1 bis 13-798 der allgemeinen Formel (Ii3), worin R³, R⁴, Y, A¹, A², A³, A⁴, A⁵ den Definitionen (Nos 1 bis 798; entsprechend Verbindungen 13-1 bis 13-798) in der oben stehenden Tabelle 1 entsprechen. 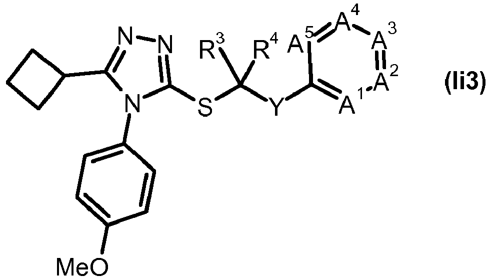 14. Verbindungen 14-1 bis 14-798 der allgemeinen Formel (Ii4), worin R³, R⁴, Y, A¹, A², A³, A⁴, A⁵ den Definitionen (Nos 1 bis 798; entsprechend Verbindungen 14-1 bis 14-798) in der oben stehenden Tabelle 1 entsprechen. 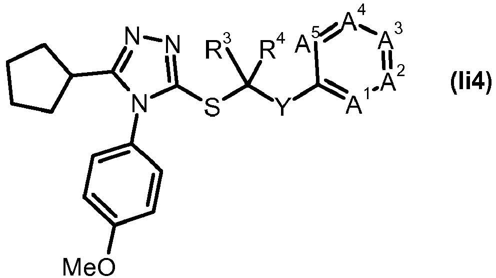 15. Verbindungen 15-1 bis 15-798 der allgemeinen Formel (Ii5), worin R³, R⁴, Y, A¹, A², A³, A⁴, A⁵ den Definitionen (Nos 1 bis 798; entsprechend Verbindungen 15-1 bis 15-798) in der oben stehenden Tabelle 1 entsprechen. 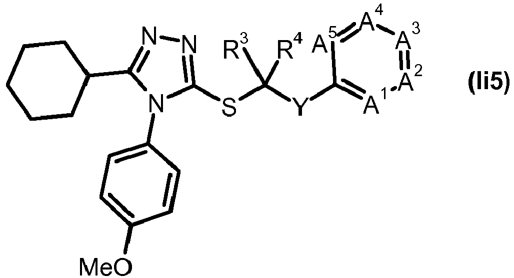 16. Verbindungen 16-1 bis 16-798 der allgemeinen Formel (Ii6), worin R³, R⁴, Y, A¹, A², A³, A⁴, A⁵ den Definitionen (Nos 1 bis 798; entsprechend Verbindungen 16-1 bis 16-798) in der oben stehenden Tabelle 1 entsprechen. 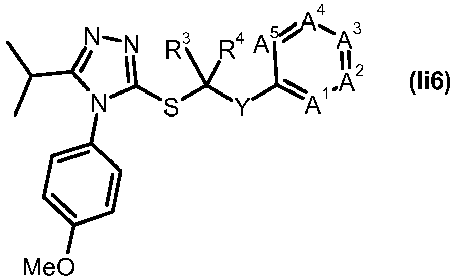 17. Verbindungen 17-1 bis 17-798 der allgemeinen Formel (Ii7), worin R³, R⁴, Y, A¹, A², A³, A⁴, A⁵ den Definitionen (Nos 1 bis 798; entsprechend Verbindungen 17-1 bis 17-798) in der oben stehenden Tabelle 1 entsprechen. 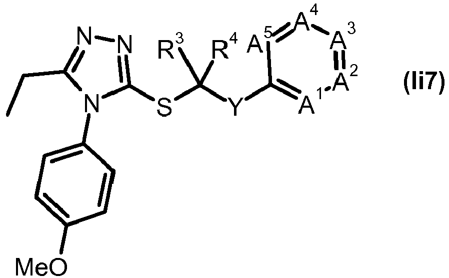 18. Verbindungen 18-1 bis 18-798 der allgemeinen Formel (Ii8), worin R³, R⁴, Y, A¹, A², A³, A⁴, A⁵ den Definitionen (Nos 1 bis 798; entsprechend Verbindungen 18-1 bis 18-798) in der oben stehenden Tabelle 1 entsprechen. 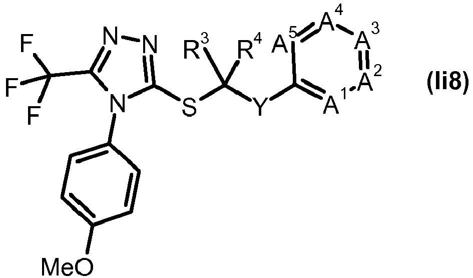 19. Verbindungen 19-1 bis 19-798 der allgemeinen Formel (Ii9), worin R³, R⁴, Y, A¹, A², A³, A⁴, A⁵ den Definitionen (Nos 1 bis 798; entsprechend Verbindungen 19-1 bis 19-798) in der oben stehenden Tabelle 1 entsprechen. 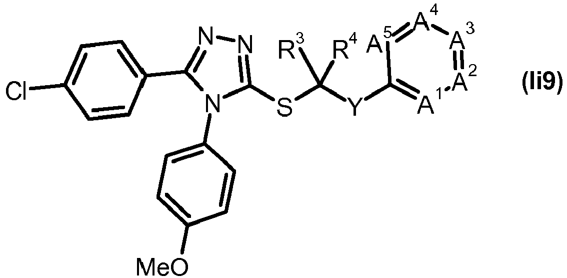 110. Verbindungen 110-1 bis I10-798 der allgemeinen Formel (Ii10), worin R³, R⁴, Y, A¹, A², A³, A⁴, A⁵ den Definitionen (Nos 1 bis 798; entsprechend Verbindungen 110-1 bis 110-798) in der oben stehenden Tabelle 1 entsprechen. 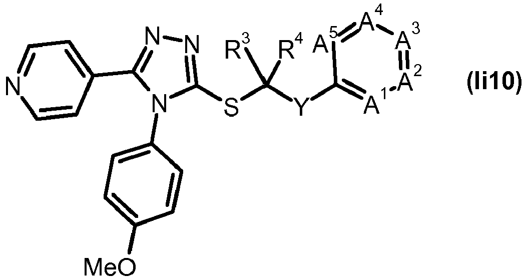 111. Verbindungen 111-1 bis I11-798 der allgemeinen Formel (Ii11), worin R³, R⁴, Y, A¹, A², A³, A⁴, A⁵ den Definitionen (Nos 1 bis 798; entsprechend Verbindungen 111-1 bis 111-798) in der oben stehenden Tabelle 1 entsprechen. 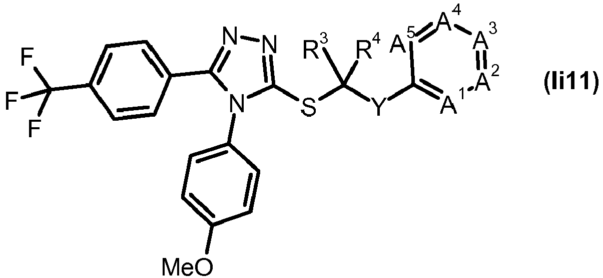 112. Verbindungen 112-1 bis I12-798 der allgemeinen Formel (Ii12),worin R³, R⁴, Y, A¹, A², A³, A⁴, A⁵ den Definitionen (Nos 1 bis 798; entsprechend Verbindungen 112-1 bis 112-798) in der oben stehenden Tabelle 1 entsprechen. 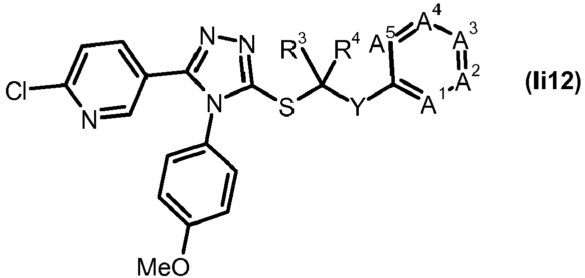 J1. Verbindungen J1-1 bis J1-798 der allgemeinen Formel (Ij1), worin R³, R⁴, Y, A¹, A², A³, A⁴, A⁵ den Definitionen (Nos 1 bis 798; entsprechend Verbindungen J1-1 bis J1-798) in der oben stehenden Tabelle 1 entsprechen. 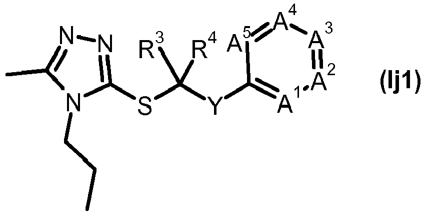 J2. Verbindungen J2-1 bis J2-798 der allgemeinen Formel (Ij2), worin R³, R⁴, Y, A¹, A², A³, A⁴, A⁵ den Definitionen (Nos 1 bis 798; entsprechend Verbindungen J2-1 bis J2-798) in der oben stehenden Tabelle 1 entsprechen. 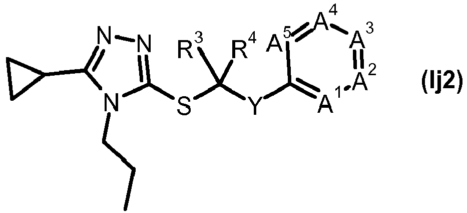 J3. Verbindungen J3-1 bis J3-798 der allgemeinen Formel (Ij3), worin R³, R⁴, Y, A¹, A², A³, A⁴, A⁵ den Definitionen (Nos 1 bis 798; entsprechend Verbindungen J3-1 bis J3-798) in der oben stehenden Tabelle 1 entsprechen. 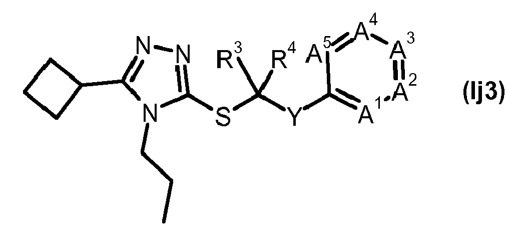 J4. Verbindungen J4-1 bis J4-798 der allgemeinen Formel (Ij4), worin R³, R⁴, Y, A¹, A², A³, A⁴, A⁵ den Definitionen (Nos 1 bis 798; entsprechend Verbindungen J4-1 bis J4-798) in der oben stehenden Tabelle 1 entsprechen. 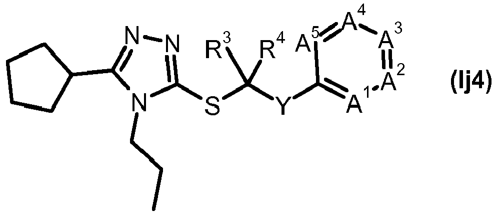 J5. Verbindungen J5-1 bis J5-798 der allgemeinen Formel (Ij5), worin R³, R⁴, Y, A¹, A², A³, A⁴, A⁵ den Definitionen (Nos 1 bis 798; entsprechend Verbindungen J5-1 bis J5-798) in der oben stehenden Tabelle 1 entsprechen. 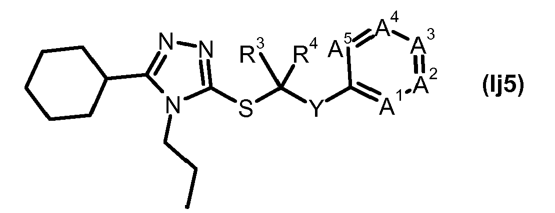 J6. Verbindungen J6-1 bis J6-798 der allgemeinen Formel (Ij6), worin R³, R⁴, Y, A¹, A², A³, A⁴, A⁵ den Definitionen (Nos 1 bis 798; entsprechend Verbindungen J6-1 bis J6-798) in der oben stehenden Tabelle 1 entsprechen. 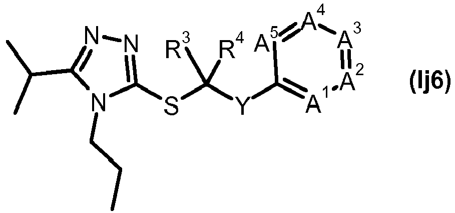 J7. Verbindungen J7-1 bis J7-798 der allgemeinen Formel (Ij7), worin R³, R⁴, Y, A¹, A², A³, A⁴, A⁵ den Definitionen (Nos 1 bis 798; entsprechend Verbindungen J7-1 bis J7-798) in der oben stehenden Tabelle 1 entsprechen. 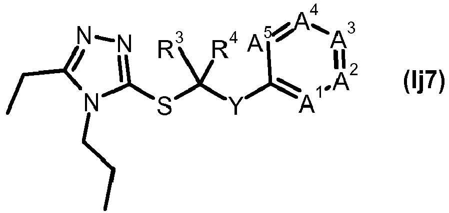 J8. Verbindungen J8-1 bis J8-798 der allgemeinen Formel (Ij8), worin R³, R⁴, Y, A¹, A², A³, A⁴, A⁵ den Definitionen (Nos 1 bis 798; entsprechend Verbindungen J8-1 bis J8-798) in der oben stehenden Tabelle 1 entsprechen. 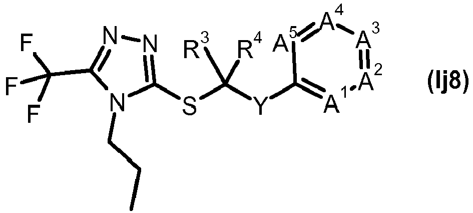 J9. Verbindungen J9-1 bis J9-798 der allgemeinen Formel (Ij9), worin R³, R⁴, Y, A¹, A², A³, A⁴, A⁵ den Definitionen (Nos 1 bis 798; entsprechend Verbindungen J9-1 bis J9-798) in der oben stehenden Tabelle 1 entsprechen. 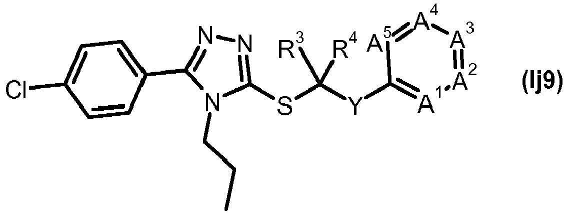 J10. Verbindungen J10-1 bis J10-798 der allgemeinen Formel (Ij10), worin R³, R⁴, Y, A¹, A², A³, A⁴, A⁵ den Definitionen (Nos 1 bis 798; entsprechend Verbindungen J10-1 bis J10-798) in der oben stehenden Tabelle 1 entsprechen. 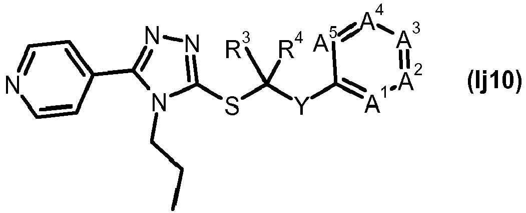 J11. Verbindungen J11-1 bis J11-798 der allgemeinen Formel (Ij11), worin R³, R⁴, Y, A¹, A², A³, A⁴, A⁵ den Definitionen (Nos 1 bis 798; entsprechend Verbindungen J11-1 bis J11-798) in der oben stehenden Tabelle 1 entsprechen. 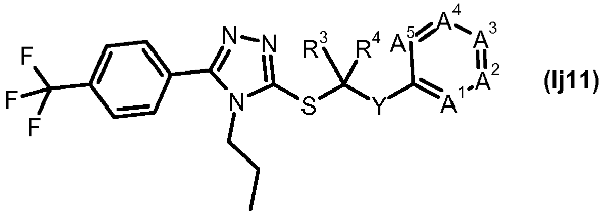 K1. Verbindungen K1-1 bis K1-798 der allgemeinen Formel (Ik1), worin R³, R⁴, Y, A¹, A², A³, A⁴, A⁵ den Definitionen (Nos 1 bis 798; entsprechend Verbindungen K1-1 bis K1-798) in der oben stehenden Tabelle 1 entsprechen. 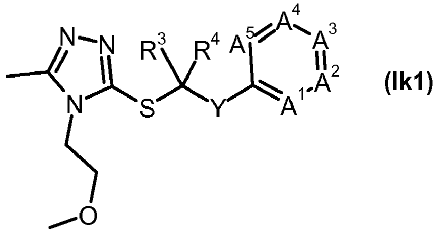 K2. Verbindungen K2-1 bis K2-798 der allgemeinen Formel (Ik2), worin R³, R⁴, Y, A¹, A², A³, A⁴, A⁵ den Definitionen (Nos 1 bis 798; entsprechend Verbindungen K2-1 bis K2-798) in der oben stehenden Tabelle 1 entsprechen. 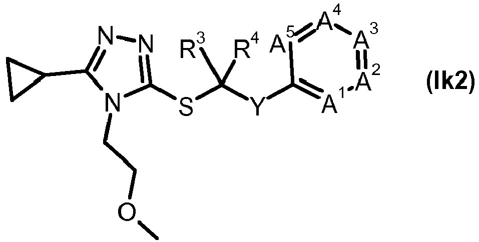 K3. Verbindungen K3-1 bis K3-798 der allgemeinen Formel (Ik3), worin R³, R⁴, Y, A¹, A², A³, A⁴, A⁵ den Definitionen (Nos 1 bis 798; entsprechend Verbindungen K3-1 bis K3-798) in der oben stehenden Tabelle 1 entsprechen. 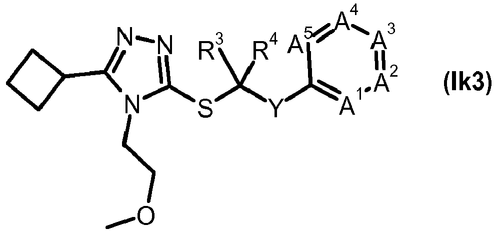 K4. Verbindungen K4-1 bis K4-798 der allgemeinen Formel (Ik4), worin R³, R⁴, Y, A¹, A², A³, A⁴, A⁵ den Definitionen (Nos 1 bis 798; entsprechend Verbindungen K4-1 bis K4-798) in der oben stehenden Tabelle 1 entsprechen. 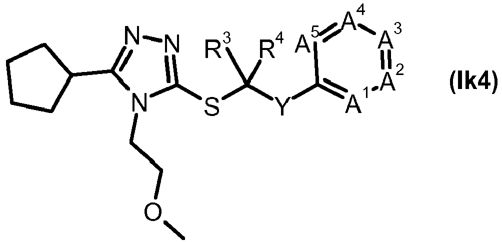 K5. Verbindungen K5-1 bis K5-798 der allgemeinen Formel (Ik5), worin R³, R⁴, Y, A¹, A², A³, A⁴, A⁵ den Definitionen (Nos 1 bis 798; entsprechend Verbindungen K5-1 bis K5-798) in der oben stehenden Tabelle 1 entsprechen. 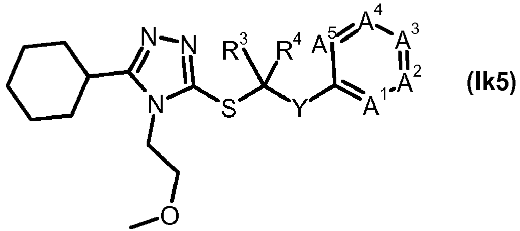 K6. Verbindungen K6-1 bis K6-798 der allgemeinen Formel (Ik6), worin R³, R⁴, Y, A¹, A², A³, A⁴, A⁵ den Definitionen (Nos 1 bis 798; entsprechend Verbindungen K6-1 bis K6-798) in der oben stehenden Tabelle 1 entsprechen. 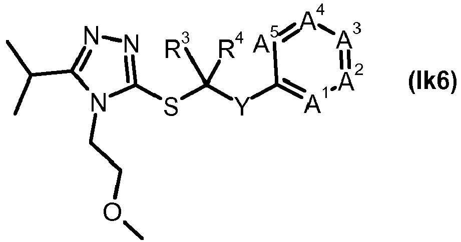 K7. Verbindungen K7-1 bis K7-798 der allgemeinen Formel (Ik7), worin R³, R⁴, Y, A¹, A², A³, A⁴, A⁵ den Definitionen (Nos 1 bis 798; entsprechend Verbindungen K7-1 bis K7-798) in der oben stehenden Tabelle 1 entsprechen. 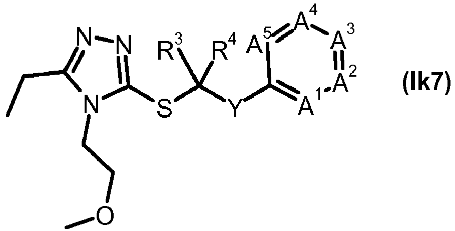 K8. Verbindungen K8-1 bis K8-798 der allgemeinen Formel (Ik8), worin R³, R⁴, Y, A¹, A², A³, A⁴, A⁵ den Definitionen (Nos 1 bis 798; entsprechend Verbindungen K8-1 bis K8-798) in der oben stehenden Tabelle 1 entsprechen. 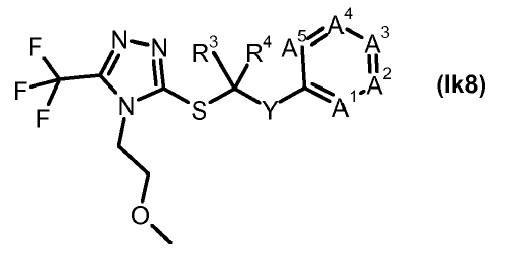 K9. Verbindungen K9-1 bis K9-798 der allgemeinen Formel (Ik9), worin R³, R⁴, Y, A¹, A², A³, A⁴, A⁵ den Definitionen (Nos 1 bis 798; entsprechend Verbindungen K9-1 bis K9-798) in der oben stehenden Tabelle 1 entsprechen. 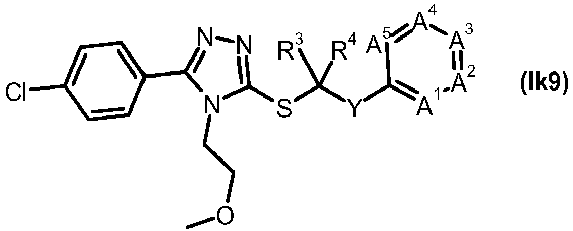 K10. Verbindungen K10-1 bis K10-798 der allgemeinen Formel (Ik10), worin R³, R⁴, Y, A¹, A², A³, A⁴, A⁵ den Definitionen (Nos 1 bis 798; entsprechend Verbindungen K10-1 bis K10-798) in der oben stehenden Tabelle 1 entsprechen. 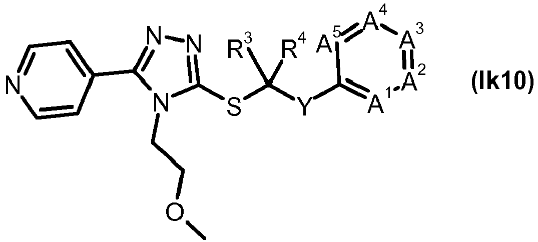 K11. Verbindungen K11-1 bis K11-798 der allgemeinen Formel (Ik11), worin R³, R⁴, Y, A¹, A², A³, A⁴, A⁵ den Definitionen (Nos 1 bis 798; entsprechend Verbindungen K11-1 bis K11-798) in der oben stehenden Tabelle 1 entsprechen. 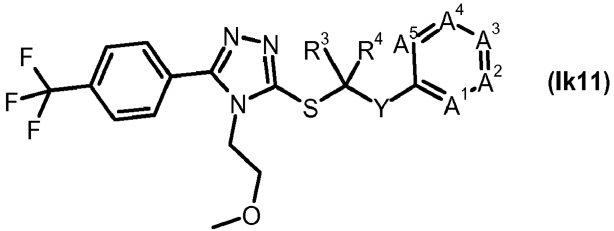 K12. Verbindungen K12-1 bis K12-798 der allgemeinen Formel (Ik11), worin R³, R⁴, Y, A¹, A², A³, A⁴, A⁵ den Definitionen (Nos 1 bis 798; entsprechend Verbindungen K12-1 bis K12-798) in der oben stehenden Tabelle 1 entsprechen. 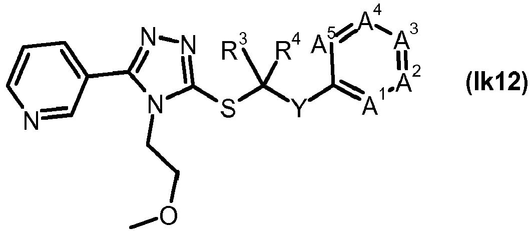 L1. Verbindungen L1-1 bis L1-798 der allgemeinen Formel (Il1), worin R³, R⁴, Y, A¹, A², A³, A⁴, A⁵ den Definitionen (Nos 1 bis 798; entsprechend Verbindungen L1-1 bis L1-798) in der oben stehenden Tabelle 1 entsprechen. 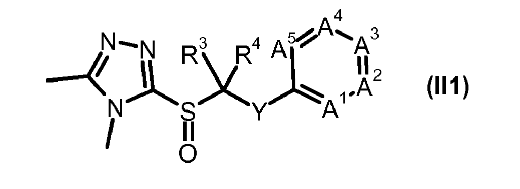 L2. Verbindungen L2-1 bis L2-798 der allgemeinen Formel (Il2), worin R³, R⁴, Y, A¹, A², A³, A⁴, A⁵ den Definitionen (Nos 1 bis 798; entsprechend Verbindungen L2-1 bis L2-798) in der oben stehenden Tabelle 1 entsprechen. 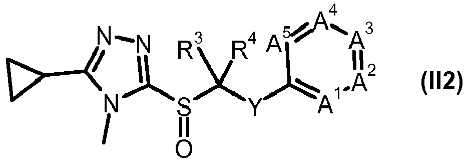 L3. Verbindungen L3-1 bis L3-798 der allgemeinen Formel (Il3), worin R³, R⁴, Y, A¹, A², A³, A⁴, A⁵ den Definitionen (Nos 1 bis 798; entsprechend Verbindungen L3-1 bis L3-798) in der oben stehenden Tabelle 1 entsprechen. 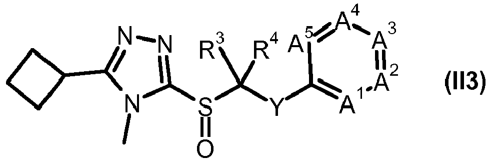 L4. Verbindungen L4-1 bis L4-798 der allgemeinen Formel (Il4), worin R³, R⁴, Y, A¹, A², A³, A⁴, A⁵ den Definitionen (Nos 1 bis 798; entsprechend Verbindungen L4-1 bis L4-798) in der oben stehenden Tabelle 1 entsprechen. 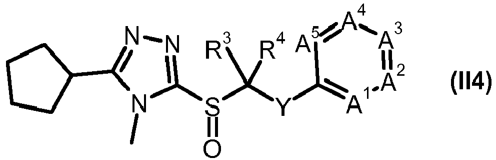 L5. Verbindungen L5-1 bis L5-798 der allgemeinen Formel (Il5), worin R³, R⁴, Y, A¹, A², A³, A⁴, A⁵ den Definitionen (Nos 1 bis 798; entsprechend Verbindungen L5-1 bis L5-798) in der oben stehenden Tabelle 1 entsprechen. 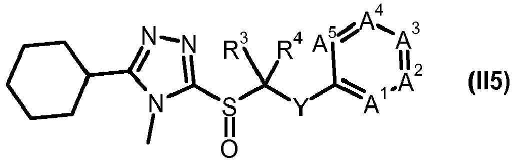 L6. Verbindungen L6-1 bis L6-798 der allgemeinen Formel (Il6), worin R³, R⁴, Y, A¹, A², A³, A⁴, A⁵ den Definitionen (Nos 1 bis 798; entsprechend Verbindungen L6-1 bis L6-798) in der oben stehenden Tabelle 1 entsprechen. 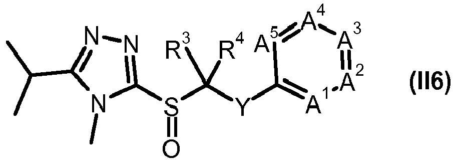 L7. Verbindungen L7-1 bis L7-798 der allgemeinen Formel (Il7), worin R³, R⁴, Y, A¹, A², A³, A⁴, A⁵ den Definitionen (Nos 1 bis 798; entsprechend Verbindungen L7-1 bis L7-798) in der oben stehenden Tabelle 1 entsprechen. 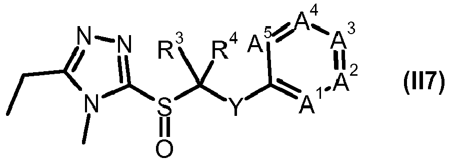 L8. Verbindungen L8-1 bis L8-798 der allgemeinen Formel (Il8), worin R³, R⁴, Y, A¹, A², A³, A⁴, A⁵ den Definitionen (Nos 1 bis 798; entsprechend Verbindungen L8-1 bis L8-798) in der oben stehenden Tabelle 1 entsprechen. 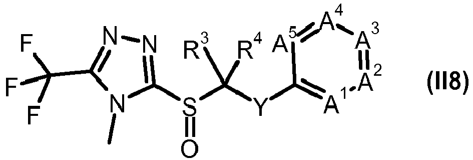 L9. Verbindungen L9-1 bis L9-798 der allgemeinen Formel (Il9), worin R³, R⁴, Y, A¹, A², A³, A⁴, A⁵ den Definitionen (Nos 1 bis 798; entsprechend Verbindungen L9-1 bis L9-798) in der oben stehenden Tabelle 1 entsprechen. 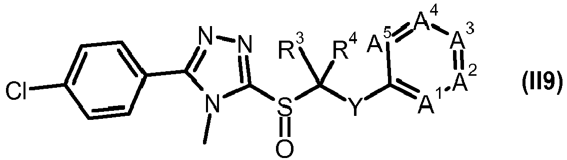 L10. Verbindungen L10-1 bis L10-798 der allgemeinen Formel (1110), worin R³, R⁴, Y, A¹, A², A³, A⁴, A⁵ den Definitionen (Nos 1 bis 798; entsprechend Verbindungen L10-1 bis L10-798) in der oben stehenden Tabelle 1 entsprechen. 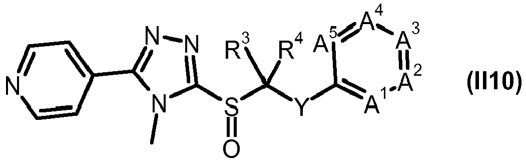 L11. Verbindungen L11-1 bis L11-798 der allgemeinen Formel (Il11), worin R³, R⁴, Y, A¹, A², A³, A⁴, A⁵ den Definitionen (Nos 1 bis 798; entsprechend Verbindungen L11-1 bis L11-798) in der oben stehenden Tabelle 1 entsprechen. 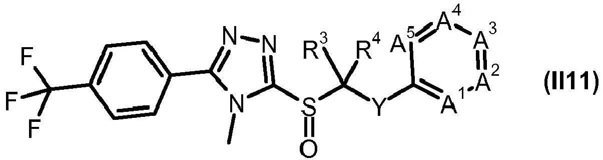 L12. Verbindungen L12-1 bis L12-798 der allgemeinen Formel (1112), worin R³, R⁴, Y, A¹, A², A³, A⁴, A⁵ den Definitionen (Nos 1 bis 798; entsprechend Verbindungen L12-1 bis L12-798) in der oben stehenden Tabelle 1 entsprechen. 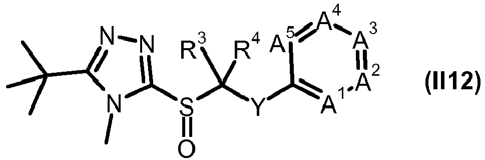 L13. Verbindungen L13-1 bis L13-798 der allgemeinen Formel (1113), worin R³, R⁴, Y, A¹, A², A³, A⁴, A⁵ den Definitionen (Nos 1 bis 798; entsprechend Verbindungen L13-1 bis L13-798) in der oben stehenden Tabelle 1 entsprechen. 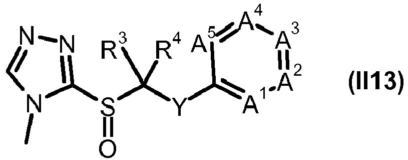 L14. Verbindungen L14-1 bis L14-798 der allgemeinen Formel (Il14), worin R³, R⁴, Y, A¹, A², A³, A⁴, A⁵ den Definitionen (Nos 1 bis 798; entsprechend Verbindungen L14-1 bis L14-798) in der oben stehenden Tabelle 1 entsprechen. 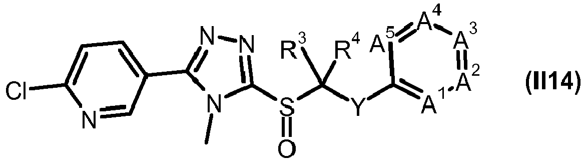 L15. Verbindungen L15-1 bis L15-798 der allgemeinen Formel (1115), worin R³, R⁴, Y, A¹, A², A³, A⁴, A⁵ den Definitionen (Nos 1 bis 798; entsprechend Verbindungen L15-1 bis L15-798) in der oben stehenden Tabelle 1 entsprechen. 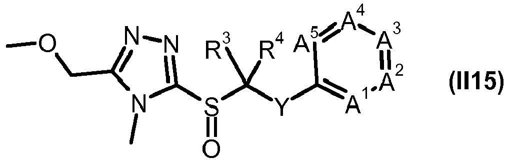 L16. Verbindungen L16-1 bis L16-798 der allgemeinen Formel (1116), worin R³, R⁴, Y, A¹, A², A³, A⁴, A⁵ den Definitionen (Nos 1 bis 798; entsprechend Verbindungen L16-1 bis L16-798) in der oben stehenden Tabelle 1 entsprechen. 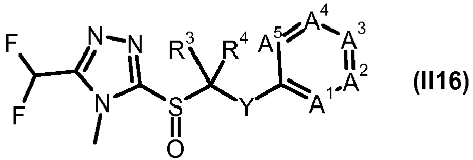 L17. Verbindungen L17-1 bis L17-798 der allgemeinen Formel (1117), worin R³, R⁴, Y, A¹, A², A³, A⁴, A⁵ den Definitionen (Nos 1 bis 798; entsprechend Verbindungen L17-1 bis L17-798) in der oben stehenden Tabelle 1 entsprechen. 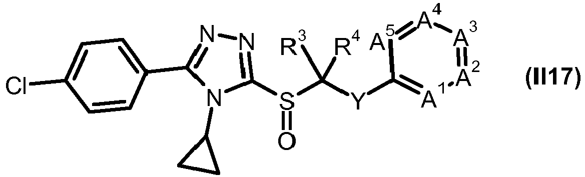 L18. Verbindungen L18-1 bis L18-798 der allgemeinen Formel (1118), worin R³, R⁴, Y, A¹, A², A³, A⁴, A⁵ den Definitionen (Nos 1 bis 798; entsprechend Verbindungen L18-1 bis L18-798) in der oben stehenden Tabelle 1 entsprechen. 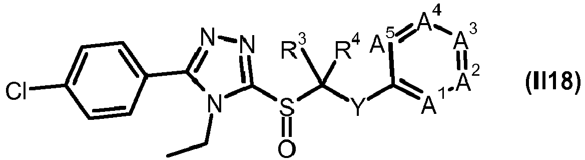 M1. Verbindungen M1-1 bis M1-798 der allgemeinen Formel (Im1), worin R³, R⁴, Y, A¹, A², A³, A⁴, A⁵ den Definitionen (Nos 1 bis 798; entsprechend Verbindungen M1-1 bis M1-798) in der oben stehenden Tabelle 1 entsprechen. 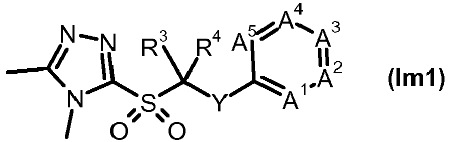 M2. Verbindungen M2-1 bis M2-798 der allgemeinen Formel (Im2), worin R³, R⁴, Y, A¹, A², A³, A⁴, A⁵ den Definitionen (Nos 1 bis 798; entsprechend Verbindungen M2-1 bis M2-798) in der oben stehenden Tabelle 1 entsprechen. 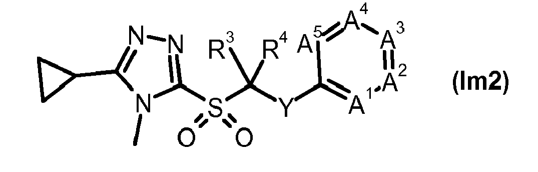 M3. Verbindungen M3-1 bis M3-798 der allgemeinen Formel (Im3), worin R³, R⁴, Y, A¹, A², A³, A⁴, A⁵ den Definitionen (Nos 1 bis 798; entsprechend Verbindungen M3-1 bis M3-798) in der oben stehenden Tabelle 1 entsprechen. 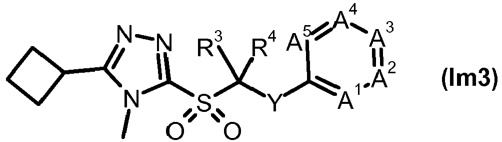 M4. Verbindungen M4-1 bis M4-798 der allgemeinen Formel (Im4), worin R³, R⁴, Y, A¹, A², A³, A⁴, A⁵ den Definitionen (Nos 1 bis 798; entsprechend Verbindungen M4-1 bis M4-798) in der oben stehenden Tabelle 1 entsprechen. 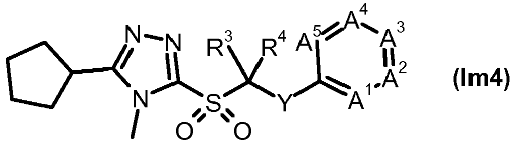 M5. Verbindungen M5-1 bis M5-798 der allgemeinen Formel (Im5), worin R³, R⁴, Y, A¹, A², A³, A⁴, A⁵ den Definitionen (Nos 1 bis 798; entsprechend Verbindungen M5-1 bis M5-798) in der oben stehenden Tabelle 1 entsprechen. 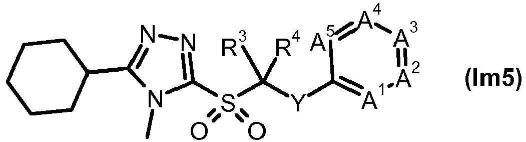 M6. Verbindungen M6-1 bis M6-798 der allgemeinen Formel (Im6), worin R³, R⁴, Y, A¹, A², A³, A⁴, A⁵ den Definitionen (Nos 1 bis 798; entsprechend Verbindungen M6-1 bis M6-798) in der oben stehenden Tabelle 1 entsprechen. 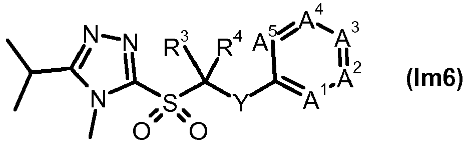 M7. Verbindungen M7-1 bis M7-798 der allgemeinen Formel (Im7), worin R³, R⁴, Y, A¹, A², A³, A⁴, A⁵ den Definitionen (Nos 1 bis 798; entsprechend Verbindungen M7-1 bis M7-798) in der oben stehenden Tabelle 1 entsprechen. 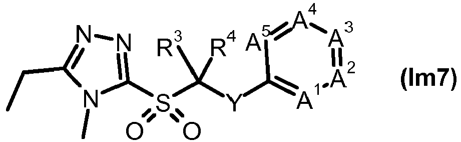 M8. Verbindungen M8-1 bis M8-798 der allgemeinen Formel (Im8), worin R³, R⁴, Y, A¹, A², A³, A⁴, A⁵ den Definitionen (Nos 1 bis 798; entsprechend Verbindungen M8-1 bis M8-798) in der oben stehenden Tabelle 1 entsprechen. 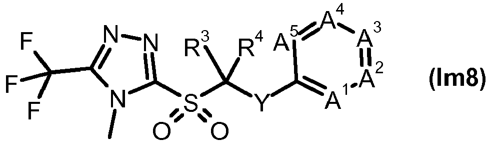 M9. Verbindungen M9-1 bis M9-798 der allgemeinen Formel (Im9), worin R³, R⁴, Y, A¹, A², A³, A⁴, A⁵ den Definitionen (Nos 1 bis 798; entsprechend Verbindungen M9-1 bis M9-798) in der oben stehenden Tabelle 1 entsprechen. 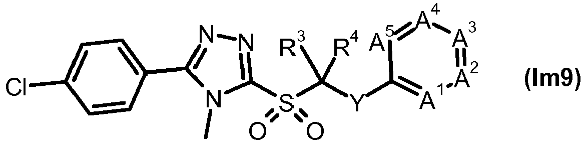 M10. Verbindungen M10-1 bis M10-798 der allgemeinen Formel (Im10), worin R³, R⁴, Y, A¹, A², A³, A⁴, A⁵ den Definitionen (Nos 1 bis 798; entsprechend Verbindungen M10-1 bis M10-798) in der oben stehenden Tabelle 1 entsprechen. 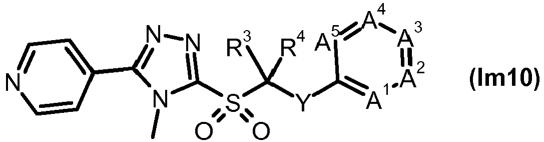 M11. Verbindungen M11-1 bis M11-798 der allgemeinen Formel (Im11), worin R³, R⁴, Y, A¹, A², A³, A⁴, A⁵ den Definitionen (Nos 1 bis 798; entsprechend Verbindungen M11-1 bis M11-798) in der oben stehenden Tabelle 1 entsprechen. 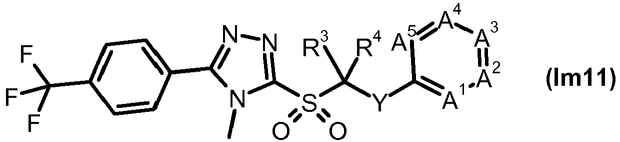 M12. Verbindungen M12-1 bis M12-798 der allgemeinen Formel (Im12), worin R³, R⁴, Y, A¹, A², A³, A⁴, A⁵ den Definitionen (Nos 1 bis 798; entsprechend Verbindungen M12-1 bis M12-798) in der oben stehenden Tabelle 1 entsprechen. 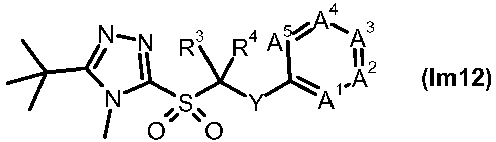 M13. Verbindungen M13-1 bis M13-798 der allgemeinen Formel (Im13), worin R³, R⁴, Y, A¹, A², A³, A⁴, A⁵ den Definitionen (Nos 1 bis 798; entsprechend Verbindungen M13-1 bis M13-798) in der oben stehenden Tabelle 1 entsprechen. 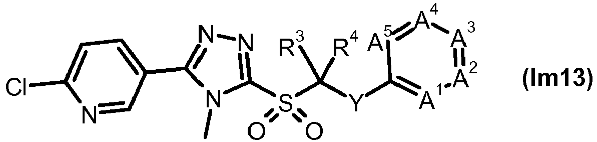 M14. Verbindungen M14-1 bis M14-798 der allgemeinen Formel (Im14), worin R³, R⁴, Y, A¹, A², A³, A⁴, A⁵ den Definitionen (Nos 1 bis 798; entsprechend Verbindungen M14-1 bis M14-798) in der oben stehenden Tabelle 1 entsprechen. 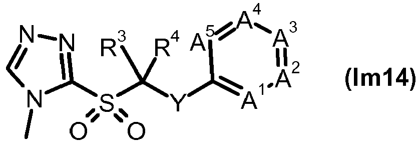 M15. Verbindungen M15-1 bis M15-798 der allgemeinen Formel (Im15), worin R³, R⁴, Y, A¹, A², A³, A⁴, A⁵ den Definitionen (Nos 1 bis 798; entsprechend Verbindungen M15-1 bis M15-798) in der oben stehenden Tabelle 1 entsprechen. 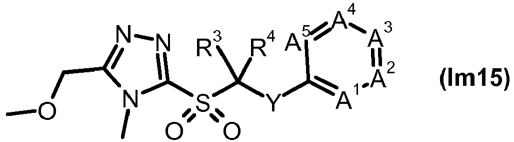 M16. Verbindungen M16-1 bis M16-798 der allgemeinen Formel (Im16), worin R³, R⁴, Y, A¹, A², A³, A⁴, A⁵ den Definitionen (Nos 1 bis 798; entsprechend Verbindungen M16-1 bis M16-798) in der oben stehenden Tabelle 1 entsprechen. 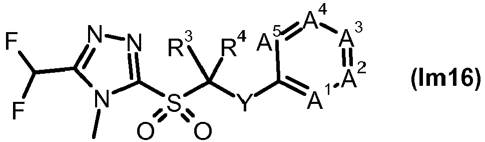 M17. Verbindungen M17-1 bis M17-798 der allgemeinen Formel (Im17), worin R³, R⁴, Y, A¹, A², A³, A⁴, A⁵ den Definitionen (Nos 1 bis 798; entsprechend Verbindungen M17-1 bis M17-798) in der oben stehenden Tabelle 1 entsprechen. 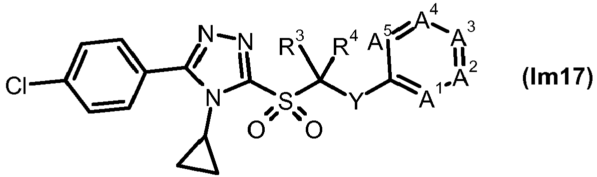 M18. Verbindungen M18-1 bis M18-798 der allgemeinen Formel (Im18), worin R³, R⁴, Y, A¹, A², A³, A⁴, A⁵ den Definitionen (Nos 1 bis 798; entsprechend Verbindungen M18-1 bis M18-798) in der oben stehenden Tabelle 1 entsprechen. 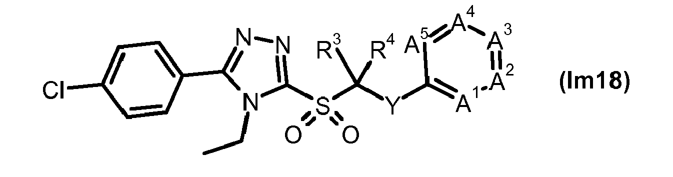 N1. Verbindungen N1-1 bis N1-798 der allgemeinen Formel (In1), worin R³, R⁴, Y, A¹, A², A³, A⁴, A⁵ den Definitionen (Nos 1 bis 798; entsprechend Verbindungen N1-1 bis N1-798) in der oben stehenden Tabelle 1 entsprechen. 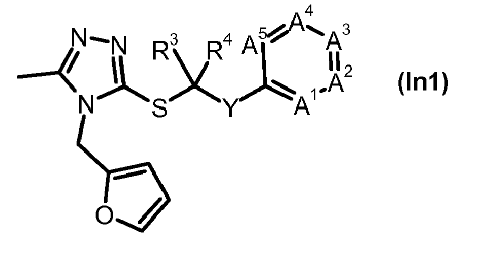 N2. Verbindungen N2-1 bis N2-798 der allgemeinen Formel (In2), worin R³, R⁴, Y, A¹, A², A³, A⁴, A⁵ den Definitionen (Nos 1 bis 798; entsprechend Verbindungen N2-1 bis N2-798) in der oben stehenden Tabelle 1 entsprechen. 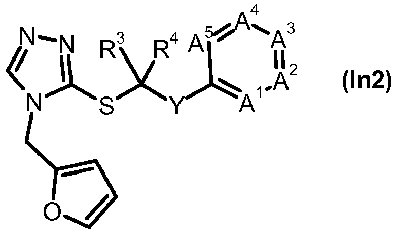 N3. Verbindungen N3-1 bis N3-798 der allgemeinen Formel (In3), worin R³, R⁴, Y, A¹, A², A³, A⁴, A⁵ den Definitionen (Nos 1 bis 798; entsprechend Verbindungen N3-1 bis N3-798) in der oben stehenden Tabelle 1 entsprechen. 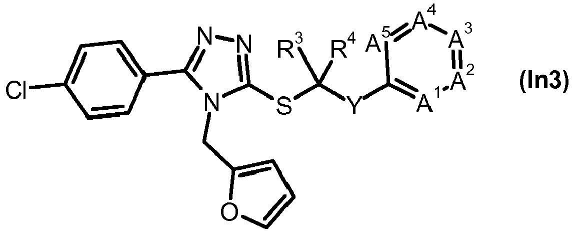 O1. Verbindungen O1-1 bis 01-798 der allgemeinen Formel (Io1), worin R³, R⁴, Y, A¹, A², A³, A⁴, A⁵ den Definitionen (Nos 1 bis 798; entsprechend Verbindungen O1-1 bis 01-798) in der oben stehenden Tabelle 1 entsprechen. 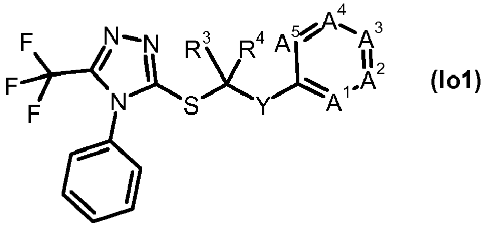 02. Verbindungen 02-1 bis 02-798 der allgemeinen Formel (Io2), worin R³, R⁴, Y, A¹, A², A³, A⁴, A⁵ den Definitionen (Nos 1 bis 798; entsprechend Verbindungen 02-1 bis 02-798) in der oben stehenden Tabelle 1 entsprechen. 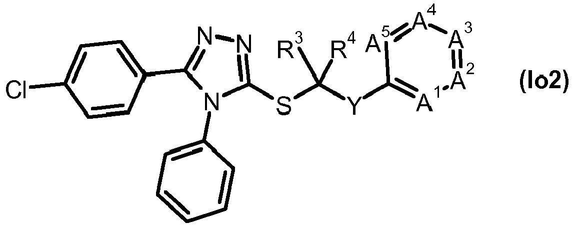 03. Verbindungen 03-1 bis 03-798 der allgemeinen Formel (Io3), worin R³, R⁴, Y, A¹, A², A³, A⁴, A⁵ den Definitionen (Nos 1 bis 798; entsprechend Verbindungen 03-1 bis 03-798) in der oben stehenden Tabelle 1 entsprechen. 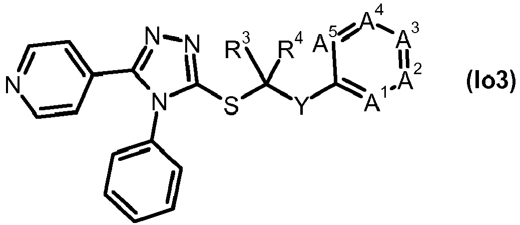 04. Verbindungen 04-1 bis 04-798 der allgemeinen Formel (Io4), worin R³, R⁴, Y, A¹, A², A³, A⁴, A⁵ den Definitionen (Nos 1 bis 798; entsprechend Verbindungen 04-1 bis 04-798) in der oben stehenden Tabelle 1 entsprechen. 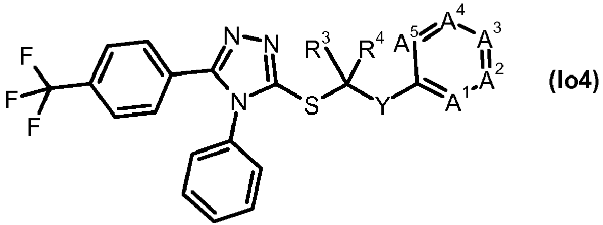 05. Verbindungen 05-1 bis 05-798 der allgemeinen Formel (Io5), worin R³, R⁴, Y, A¹, A², A³, A⁴, A⁵ den Definitionen (Nos 1 bis 798; entsprechend Verbindungen 05-1 bis 05-798) in der oben stehenden Tabelle 1 entsprechen. 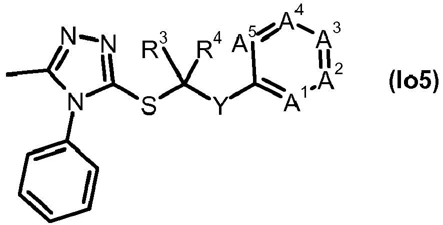 P1. Verbindungen P1-1 bis P1-798 der allgemeinen Formel (Ip1), worin R³, R⁴, Y, A¹, A², A³, A⁴, A⁵ den Definitionen (Nos 1 bis 798; entsprechend Verbindungen P1-1 bis P1-798) in der oben stehenden Tabelle 1 entsprechen. 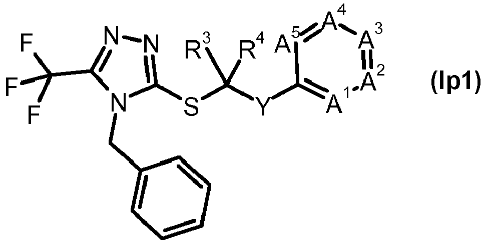 P2. Verbindungen P2-1 bis P2-798 der allgemeinen Formel (Ip2), worin R³, R⁴, Y, A¹, A², A³, A⁴, A⁵ den Definitionen (Nos 1 bis 798; entsprechend Verbindungen P2-1 bis P2-798) in der oben stehenden Tabelle 1 entsprechen. 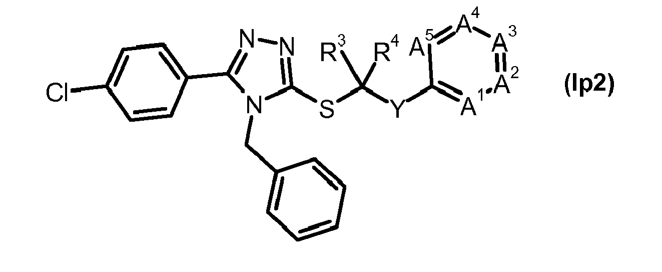 P3. Verbindungen P3-1 bis P3-798 der allgemeinen Formel (Ip3), worin R³, R⁴, Y, A¹, A², A³, A⁴, A⁵ den Definitionen (Nos 1 bis 798; entsprechend Verbindungen P3-1 bis P3-798) in der oben stehenden Tabelle 1 entsprechen. 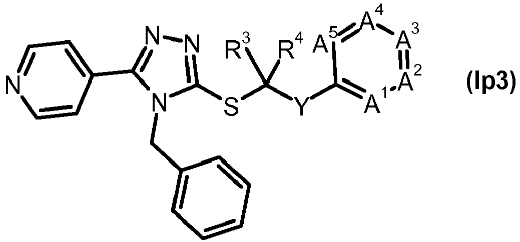 P4. Verbindungen P4-1 bis P4-798 der allgemeinen Formel (Ip4), worin R³, R⁴, Y, A¹, A², A³, A⁴, A⁵ den Definitionen (Nos 1 bis 798; entsprechend Verbindungen P4-1 bis P4-798) in der oben stehenden Tabelle 1 entsprechen. 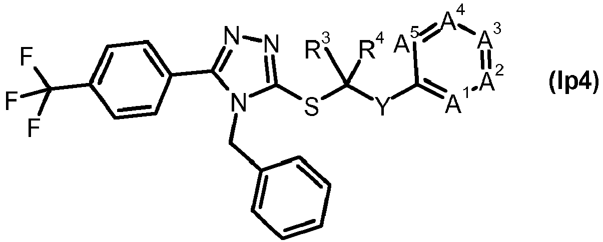 Q1. Verbindungen Q1-1 bis Q1-798 der allgemeinen Formel (Iq1), worin R³, R⁴, Y, A¹, A², A³, A⁴, A⁵ den Definitionen (Nos 1 bis 798; entsprechend Verbindungen Q1-1 bis Q1-798) in der oben stehenden Tabelle 1 entsprechen. 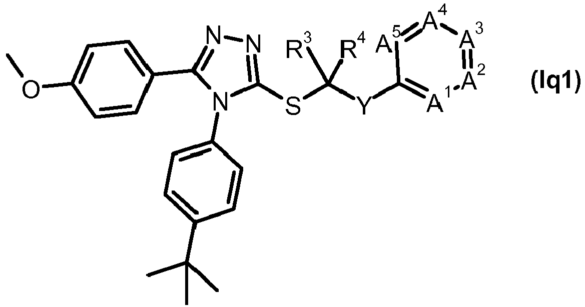 Q2. Verbindungen Q2-1 bis Q2-798 der allgemeinen Formel (Iq2), worin R³, R⁴, Y, A¹, A², A³, A⁴, A⁵ den Definitionen (Nos 1 bis 798; entsprechend Verbindungen Q2-1 bis Q2-798) in der oben stehenden Tabelle 1 entsprechen. 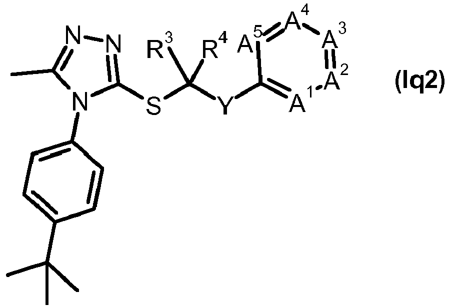 Q3. Verbindungen Q3-1 bis Q3-798 der allgemeinen Formel (Iq3), worin R³, R⁴, Y, A¹, A², A³, A⁴, A⁵ den Definitionen (Nos 1 bis 798; entsprechend Verbindungen Q3-1 bis Q3-798) in der oben stehenden Tabelle 1 entsprechen. 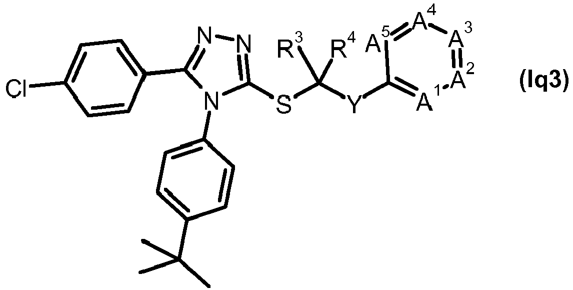 R1. Verbindungen R1-1 bis R1-798 der allgemeinen Formel (Ir1), worin R³, R⁴, Y, A¹, A², A³, A⁴, A⁵ den Definitionen (Nos 1 bis 798; entsprechend Verbindungen R1-1 bis R1-798) in der oben stehenden Tabelle 1 entsprechen. 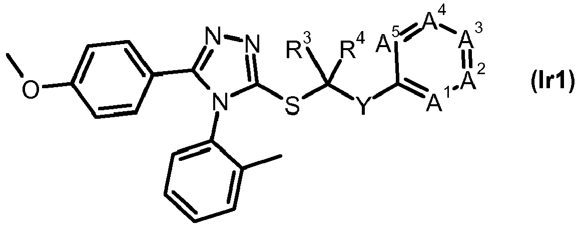 R2. Verbindungen R2-1 bis R2-798 der allgemeinen Formel (Ir2), worin R³, R⁴, Y, A¹, A², A³, A⁴, A⁵ den Definitionen (Nos 1 bis 798; entsprechend Verbindungen R2-1 bis R2-798) in der oben stehenden Tabelle 1 entsprechen. 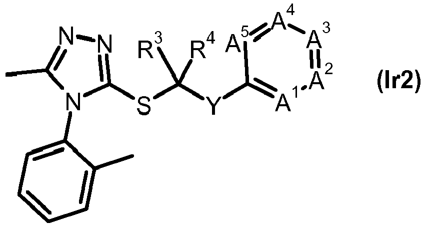 R3. Verbindungen R3-1 bis R3-798 der allgemeinen Formel (Ir3), worin R³, R⁴, Y, A¹, A², A³, A⁴, A⁵ den Definitionen (Nos 1 bis 798; entsprechend Verbindungen R3-1 bis R3-798) in der oben stehenden Tabelle 1 entsprechen. 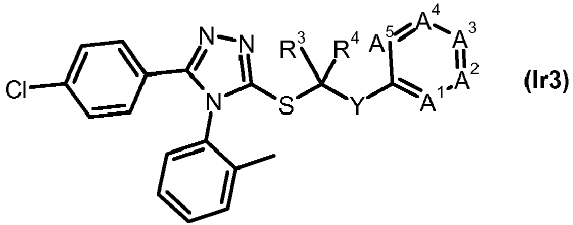 R4. Verbindungen R4-1 bis R4-798 der allgemeinen Formel (Ir4), worin R³, R⁴, Y, A¹, A², A³, A⁴, A⁵ den Definitionen (Nos 1 bis 798; entsprechend Verbindungen R4-1 bis R4-798) in der oben stehenden Tabelle 1 entsprechen. 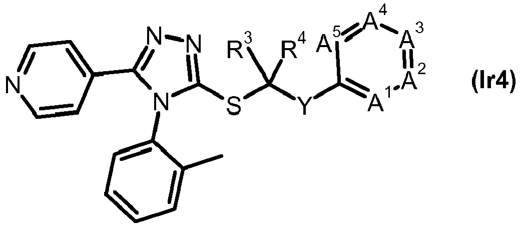 S1. Verbindungen S1-1 bis S1-798 der allgemeinen Formel (Is1), worin R³, R⁴, Y, A¹, A², A³, A⁴, A⁵ den Definitionen (Nos 1 bis 798; entsprechend Verbindungen S1-1 bis S1-798) in der oben stehenden Tabelle 1 entsprechen. 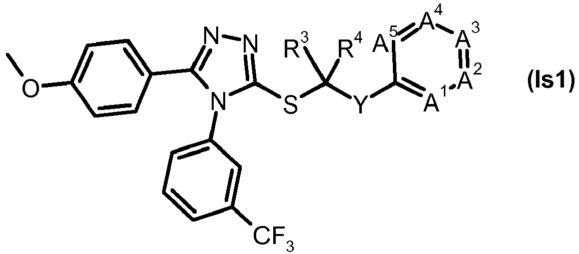 S2. Verbindungen S2-1 bis S2-798 der allgemeinen Formel (Is2), worin R³, R⁴, Y, A¹, A², A³, A⁴, A⁵ den Definitionen (Nos 1 bis 798; entsprechend Verbindungen S2-1 bis S2-798) in der oben stehenden Tabelle 1 entsprechen. 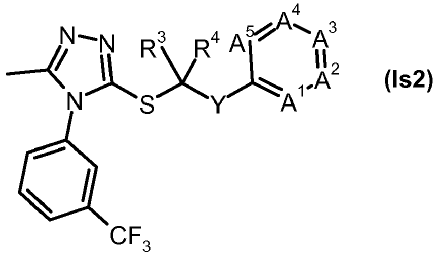 S3. Verbindungen S3-1 bis S3-798 der allgemeinen Formel (Is3), worin R³, R⁴, Y, A¹, A², A³, A⁴, A⁵ den Definitionen (Nos 1 bis 798; entsprechend Verbindungen S3-1 bis S3-798) in der oben stehenden Tabelle 1 entsprechen. 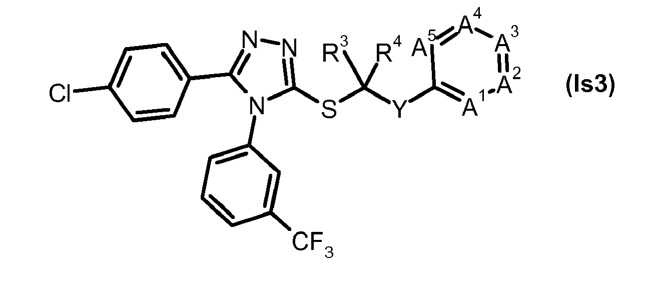 S4. Verbindungen S4-1 bis S4-798 der allgemeinen Formel (Is4), worin R³, R⁴, Y, A¹, A², A³, A⁴, A⁵ den Definitionen (Nos 1 bis 798; entsprechend Verbindungen S4-1 bis S4-798) in der oben stehenden Tabelle 1 entsprechen.

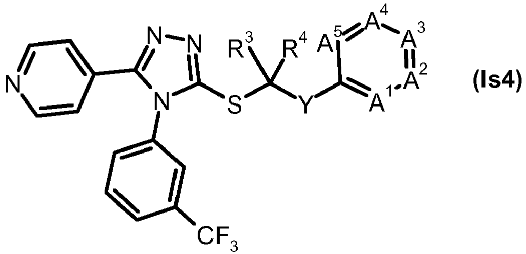

### Spektroskopische Daten ausgewählter Tabellenbeispiele:

Die nachfolgend aufgeführten spektroskopischen Daten ausgewählter Tabellenbeispiele wurden über klassische ¹H-NMR-Interpretation oder über NMR-Peak-Listenverfahren ausgewertet.

### a) klassische ¹H-NMR-Interpretation

### Beispiel No. A1-10:

¹H-NMR (400 MHz, CDCl₃ δ, ppm) 7.33 (s, 2H), 4.46 (s, 2H), 3.46 (s, 3H), 1.74-1.68 (m, 1 H), 1.15-1.11 (m, 2H), 1.09-1.04 (m, 2H)

### Beispiel No. A1-351:

¹H-NMR (400 MHz, CDCl₃ δ, ppm) 7.29-7.25 (m, 2H), 7.22-7.18 (m, 3H), 3.90-3.83 (m, 1 H), 3.50 (s, 3H), 3.17-3.12 (m, 1 H), 2.85-2.79 (m, 1 H), 1.73-1.68 (m, 1 H), 1.37 (d, 3H), 1.14-1.11 (m, 2H), 1.06-1.02 (m, 2H)

### Beispiel No. A6-351:

¹H-NMR (400 MHz, CDCl₃ δ, ppm) 7.59 (d, 2H), 7.48 (d, 2H), 7.28-7.18 (m, 5H), 4.11-4.04 (m, 1 H), 3.51 (s, 3H), 3.19-3.14 (m, 1 H), 2.95-2.89 (m, 1 H), 1.46 (d, 3H).

### Beispiel No. A6-462:

¹H-NMR (400 MHz, CDCl₃ δ, ppm) 7.60 (d, 2H), 7.50 (d, 2H), 7.15-7.10 (m, 1 H), 6.87-6.80 (m, 2H), 3.61 (s, 3H), 3.33 (t, 2H), 2.86 (t, 2H), 2.14-2.07 (m, 2H).

### Beispiel No. A10-351:

¹H-NMR (400 MHz, CDCl₃ δ, ppm) 7.59 (d, 1 H), 7.29-7.19 (m, 5H), 7.08 (m, 1 H), 6.57 (m, 1H), 4.02-3.96 (m, 1H), 3.71 (s, 3H), 3.19-3.14 (m, 1H), 2.91-2.85 (m, 1H), 1.41 (d, 3H).

### Beispiel No. A10-462:

¹H-NMR (400 MHz, CDCl₃ δ, ppm) 7.59 (d, 1 H), 7.15-7.09 (m, 1 H), 7.05 (m, 1 H), 6.86-6.80 (m, 2H), 6.57 (m, 1 H), 3.78 (s, 3H), 3.27 (t, 2H), 2.84 (t, 2H), 2.12-2.03 (m, 2H).

### Beispiel No. D17-99:

¹H-NMR (400 MHz, CDCl₃ δ, ppm) 8.11 (d, 1 H), 7.19 (d, 1 H), 4.52 (s, 2H), 2.88-2.82 (m, 1 H), 2.45 (s, 3H), 1.14-1.10 (m, 2H), 0.97-0.93 (m, 2H)

### Beispiel No. D17-462:

¹H-NMR (400 MHz, CDCl₃ δ, ppm) 7.15-7.09 (m, 1 H), 6.87-6.81 (m, 2H), 3.30 (t, 2H), 2.91 (m, 1 H), 2.83 (t, 2H), 2.47 (s, 3H), 2.11-2.06 (m, 2H), 1.17-1.12 (m, 2H), 1.03-0.98 (m, 2H)

### Beispiel No. A17-351:

¹H-NMR (400 MHz, CDCl₃ δ, ppm) 7.30-7.19 (m, 5H), 4.15-4.09 (m, 1H), 3.24-3.18 (m, 1 H), 2.88-2.79 (m, 2H), 2.47 (s, 3H), 1.41 (d, 3H), 1.12-1.08 (m, 2H), 0.98-0.94 (m, 2H)

### Beispiel No. N1-761:

¹H-NMR (400 MHz, d₆-DMSO δ, ppm) 7.75-7.63 (m, 5H), 7.61 (m, 1 H), 6.49-6.42 (m, 2H), 5.21 (s, 2H), 4.09 (s, 2H), 2.39 (s, 3H).

### Beispiel No. N2-761:

¹H-NMR (400 MHz, d₆-DMSO δ, ppm) 8.63 (s, 1 H), 7.78-7.66 (m, 5H), 7.63 (m, 1 H), 6.52-6.43 (m, 2H), 5.28 (s, 2H), 4.14 (s, 2H).

### b) NMR-Peak-Listenverfahren:

Die ¹H-NMR-Daten ausgewählter Beispiele werden in Form von ¹H-NMR-Peaklisten notiert. Zu jedem Signalpeak wird erst der δ-Wert in ppm und dann die Signalintensität in runden Klammern aufgeführt. Die δ-Wert - Signalintensitäts- Zahlenpaare von verschiedenen Signalpeaks werden durch Semikolons voneinander getrennt aufgelistet. Die Peakliste eines entsprechenden Beispieles hat daher die Form: δ₁ (Intensität₁⁾; δ₂ (Intensität₂);........; δᵢ (Intensitätᵢ⁾;......; δₙ (Intensitätₙ)
Die Intensität scharfer Signale korreliert mit der Höhe der Signale in einem gedruckten Beispiel eines NMR-Spektrums in cm und zeigt die wirklichen Verhältnisse der Signalintensitäten. Bei breiten Signalen können mehrere Peaks oder die Mitte des Signals und ihre relative Intensität im Vergleich zum intensivsten Signal im Spektrum gezeigt werden. Zur Kalibrierung der chemischen Verschiebung von ¹H-NMR-Spektren benutzten wir Tetramethylsilan und/oder die chemische Verschiebung des Lösungsmittels, besonders im Falle von Spektren, die in DMSO gemessen werden. Daher kann in NMR-Peaklisten der Tetramethylsilan-Peak vorkommen, muss es aber nicht. Die Listen der ¹H-NMR-Peaks sind ähnlich den klassischen ¹H-NMR-Ausdrucken und enthalten somit gewöhnlich alle Peaks, die bei einer klassischen NMR-Interpretation aufgeführt werden. Darüber hinaus können sie wie klassische ¹H-NMR-Ausdrucke Lösungsmittelsignale, Signale von Stereoisomeren der Zielverbindungen, die ebenfalls Gegenstand der Erfindung sind, und/oder Peaks von Verunreinigungen zeigen. Bei der Angabe von Verbindungssignalen im Delta-Bereich von Lösungsmitteln und/oder Wasser sind in unseren Listen von ¹H-NMR-Peaks die gewöhnlichen Lösungsmittelpeaks, zum Beispiel Peaks von DMSO in DMSO-d₆ und der Peak von Wasser, gezeigt, die gewöhnlich im Durchschnitt eine hohe Intensität aufweisen. Die Peaks von Stereoisomeren der Targetverbindungen und/oder Peaks von Verunreinigungen haben gewöhnlich im Durchschnitt eine geringere Intensität als die Peaks der Zielverbindungen (zum Beispiel mit einer Reinheit von >90%). Solche Stereoisomere und/oder Verunreinigungen können typisch für das jeweilige Herstellungsverfahren sein. Ihre Peaks können somit dabei helfen, die Reproduktion unseres Herstellungsverfahrens anhand von "Nebenprodukt-Fingerabdrücken" zu erkennen.

Einem Experten, der die Peaks der Zielverbindungen mit bekannten Verfahren (MestreC, ACD-Simulation, aber auch mit empirisch ausgewerteten Erwartungswerten) berechnet, kann je nach Bedarf die Peaks der Zielverbindungen isolieren, wobei gegebenenfalls zusätzliche Intensitätsfilter eingesetzt werden. Diese Isolierung wäre ähnlich dem betreffenden Peak-Picking bei der klassischen ¹H-NMR-Interpretation.

### Beispiel No. A1-13: ¹H-NMR (400 MHz, CDCl₃ δ, ppm)

7,264(11,0);7,247(1,0);7,233(1,1);7,230(0,5);7,225(1,2);7,211(1,2);6,973(1,4);6,951(2,4);6,930(1,1);5,300(0,6);4,274(4,6);3,303(16,0);1,689(0,9);1,686(0,9);1,676(0,5);1,668(0,6);1,656(0,9);1,635(0,6);1,085(1,0);1,079(1,3);1,071(1,2);1,068(0,9);1,066(1,5);1,058(0,6);1,035(0,8);1,027(0,9);1,026(1,1);1,025(1,2);1,021 (0,8);1,020(0,7);1,014(0,8);1,006(1,3);1,004(0,8);1,000(0,9);0,000(4,8)

### Beispiel No. A1-15: ¹H-NMR (400 MHz, CDCl₃ δ, ppm)

7,273(0,7);7,265(8,1);7,257(0,7);6,773(0,7);5,300(0,6);4,309(2,8);4,307(2,8);3,383(16,0);1,707(0,7);1,694(0,5);1,686(0,6);1,674(0,9);1,653(0,6);1,093(1,0);1,087(1,3);1,079(1,2);1,076(0,9);1,074(1,5);1,066(0,6);1,043(0,8);1,035(0,9);1,034(1,1);1,033(1,1);1,029(0,8);1,028(0,7);1,022(0,8);1,014(1,3);1,012(0,8);1,008(0,9);0,000(4,0)

### Beispiel No. A1-17: ¹H-NMR (400 MHz, CDCl₃ δ, ppm)

7,264(12,5);7,258(0,6);7,237(0,9);7,216(0,5);6,883(1,2);6,864(1,4);6,862(1,3);6,843(1,1);4,279(3,6);3,466(16,0);1,727(0,5);1,719(0,6);1,707(1,1);1,694(0,5);1,686(0,7);1,664(0,9);1,119(1,2);1,114(1,2);1,107(1,0);1,105(1,1);1,102(0,9);1,101(1,2);1,092(0,6);1,053(0,8);1,044(1,2);1,039(0,8);1,038(0,8);1,032(1,2);1,024(1,3);1,022(0,9);1,017(1,0);1,01 3(0,5);0,000(5,6)

### Beispiel No. A1-36: ¹H-NMR (600 MHz, CDCl₃ δ, ppm)

8,689(0,3);8,674(4,9);8,672(4,7);7,925(5,1);7,922(4,9);7,269(9,7);5,301(0,7);4,667(18,6);3,682(0,4);3,673(1,1);3,658(1,1);3,647(0,9);3,610(0,3);3,566(50,0);3,534(0,3);3,526(1,6);3,400(1,0);3,318(0,9);3,184(0,6);2,958(0,4);2,884(0,3);2,877(0,6);1,818(0,3);1,813(0,3);1,804(0,3);1,745(1,0);1,737(2,0);1,731(2,1);1,728(1,3);1,723(4,0);1,717(1,4);1,71 4(2,2);1,709(2,2);1,701(1,1);1,285(0,4);1,255(1,3);1,131 (0,3);1,123(1,9);1,117(2,5);1,1 14(5,1);1,111(5,2);1,108(3,2);1,106(4,4);1,104(4,4);1,102(5,1);1,096(2,5);1,082(0,8);1, 080(0,8);1,076(0,3);1,072(0,8);1,068(0,8);1,058(3,0);1,051(5,2);1,048(3,8);1,045(3,1);1,044(3,6);1,038(5,1);1,034(4,0);1,032(2,7);1,026(1,7);0,879(0,3);0,071(0,5);0,000(6,4)

### Beispiel No. A1-40: ¹H-NMR (400 MHz, CDCl₃ δ, ppm)

8,301(1,9);8,288(1,9);7,347(1,8);7,334(1,7);7,264(17,2);4,663(6,2);3,549(16,0);1,725(1,0);1,704(0,6);1,144(0,9);1,138(1,0);1,135(0,6);1,131(0,8);1,129(0,9);1,126(1,0);1,117(0,5);1,071(0,6);1,062(1,0);1,057(0,7);1,056(0,7);1,051(0,9);1,042(1,0);1,040(0,8);1,036(0,9);1,032(0,5);0,000(7,6)

### Beispiel No. A1-59: ¹H-NMR (400 MHz, CDCl₃ δ, ppm)

7,263(17,8);7,219(0,8);7,206(0,9);7,200(1,0);7,194(1,1);7,188(2,6);6,969(0,7);4,369(3,3);4,364(3,5);3,428(16,0);1,724(0,5);1,715(0,5);1,703(1,1);1,682(0,6);1,637(1,8);1,124(1,1);1,118(1,1);1,115(0,7);1,111(0,9);1,109(1,0);1,107(0,9);1,105(1,1);1,097(0,6);1,053(0,7);1,044(1,1);1,039(0,8);1,038(0,7);1,033(1,0);1,024(1,2);1,022(0,8);1,017(1,0);1,01 4(0,5);0,000(7,9)

### Beispiel No. A1-63: ¹H-NMR (400 MHz, CDCl₃ δ, ppm)

7,577(1,7);7,572(0,7);7,561 (0,7);7,556(2,5);7,455(2,2);7,454(1,9);7,450(0,7);7,439(0,5);7,434(1,6);7,265(0,6);7,261(41,9);4,372(4,8);3,365(16,0);1,676(0,5);1,664(0,8);1,643(0,6);1,569(5,6);1,090(0,8);1,085(0,8);1,084(1,0);1,076(1,8);1,073(0,8);1,071(1,0);1,064(0,6);1,048(1,2);1,041(0,8);1,040(1,0);1,039(0,9);1,035(0,7);1,034(0,7);1,032(0,6);1,02 8(0,8);1,020(1,4);1,018(0,8);1,014(0,9);0,008(0,6);0,000(20,4);-0,009(0,6)

### Beispiel No. A1-99: ¹H-NMR (400 MHz, CDCl₃ δ, ppm)

7,921 (1,7);7,901 (1,8);7,262(29,5);7,168(2,0);7,148(1,9);4,437(6,0);3,446(16,0);2,956(0,5);2,099(0,6);1,700(0,5);1,692(0,6);1,683(0,6);1,679(1,0);1,666(0,5);1,659(0,7);1,094(0,9);1,090(0,8);1,088(1,0);1,082(1,8);1,078(0,8);1,076(1,1);1,068(0,7);1,066(0,5);1,056(1,0);1,048(1,0);1,047(0,9);1,043(0,8);1,039(0,6);1,036(0,9);1,028(1,3);1,026(0,9);1,02 2(0,9);0,000(12,3)

### Beispiel No. A2-5: ¹H-NMR (400 MHz, d₆-DMSO δ, ppm)

7,628(4,8);7,623(4,9);7,366(2,2);7,361(1,9);7,345(5,0);7,340(5,0);7,316(7,0);7,296(2,8);5,753(0,9);4,289(16,0);3,602(1,5);3,600(1,5);3,581(2,3);3,579(2,3);3,560(1,6);3,558(1, 5);3,310(87,0);3,220(41,2);2,670(0,5);2,523(2,4);2,519(3,0);2,510(27,6);2,505(58,4);2,501(80,6);2,496(56,6);2,492(25,9);2,331(1,7);2,327(1,7);2,323(2,3);2,319(2,5);2,311(2,3);2,305(2,1);2,300(4,6);2,290(1,5);2,287(1,4);2,278(3,3);2,257(1,0);2,256(1,1);2,252(1,3);2,067(0,9);2,061(0,7);2,044(1,8);2,039(1,5);2,022(0,8);2,017(2,4);1,995(1,1);1,917(0,5);1,908(0,7);1,906(0,8);1,898(1,0);1,896(0,9);1,887(0,8);1,884(0,8);1,882(0,6);1,879 (0,7);1,877(0,8);1,874(0,6);1,871 (0,7);0,008(1,1);0,000(33,7);-0,009(1,1)

### Beispiel No. A2-63: ¹H-NMR (400 MHz, d₆-DMSO δ, ppm)

7,772(1,4);7,768(8,2);7,763(2,9);7,752(3,0);7,747(9,5);7,742(1,4);7,472(8,0);7,467(2,6);7,456(2,4);7,451(7,0);5,753(1,4);4,386(0,7);4,340(16,0);3,594(1,7);3,591(1,7);3,573(2,6);3,570(2,6);3,552(1,8);3,549(1,8);3,345(0,6);3,311(101,6);3,238(1,0);3,221(0,5);3,201(47,1);2,670(0,6);2,535(1,5);2,523(2,6);2,519(3,3);2,510(31,3);2,505(66,2);2,501(91,7);2,496(64,5);2,491(29,4);2,332(0,9);2,327(1,7);2,323(1,9);2,320(1,5);2,316(2,2);2,312(2,7);2,304(2,6);2,298(2,3);2,292(5,2);2,283(1,7);2,280(1,6);2,270(3,9);2,248(1,2);2,245(1,5);2,083(0,5);2,062(1,0);2,056(0,8);2,039(2,1);2,035(1,7);2,017(0,9);2,012(2,8);1,990(1,2);1,912(0,6);1,903(0,7);1,900(0,9);1,892(1,1);1,890(1,0);1,881(0,9);1,879(0,9);1,8 76(0,7);1,873(0,8);1,871 (0,9);1,869(0,7);1,865(0,8);1,852(0,5);0,008(0,9);0,000(28,6);-0,009(1,0)

### Beispiel No. A2-737: ¹H-NMR (400 MHz, d₆-DMSO δ, ppm)

10,114(2,4);7,849(1,1);7,833(1,3);7,826(2,2);7,811(2,3);7,804(1,3);7,788(1,1);7,351(1,4);7,344(1,5);7,329(1,5);7,322(2,0);7,316(1,6);7,301(1,4);7,294(1,4);7,093(1,0);7,089(1,1);7,086(1,0);7,082(0,9);7,070(1,5);7,068(1,6);7,049(1,0);7,046(1,0);7,042(0,9);7,038(0,8);5,753(3,7);4,090(0,6);4,028(16,0);3,645(1,7);3,643(1,7);3,624(2,6);3,622(2,7);3,603(1,8);3,601(1,8);3,582(0,5);3,538(0,6);3,414(41,7);3,361(0,5);3,310(117,4);3,291(0,6);2,674(0,5);2,670(0,8);2,665(0,6);2,523(3,4);2,518(4,3);2,510(41,1);2,505(87,3);2,501(121,2);2,496(85,9);2,491(39,4);2,466(0,5);2,350(1,7);2,347(1,6);2,343(2,3);2,339(2,9);2,331(3,1);2,327(3,1);2,319(5,7);2,310(1,8);2,307(1,7);2,297(4,0);2,275(1,3);2,272(1,6);2,113(1,3);2,093(0,5);2,072(1,2);2,066(0,8);2,049(2,2);2,044(1,8);2,027(0,9);2,022(2,9);2,000(1,3);1,916(0,6);1,905(0,9);1,897(1,2);1,894(1,1);1,886(0,9);1,883(1,0);1,880(0,8);1,876(0,9);1,873(0,7);1,869(0,8);1,867(0,8);1,856(0,6);0,008(1,6);0,000(49,9);-0,009(1,6)

### Beispiel No. A2-761: ¹H-NMR (400 MHz, d₆-DMSO δ, ppm)

7,749(3,7);7,727(10,2);7,702(11,1);7,680(4,0);4,033(0,7);4,012(16,0);3,626(1,8);3,608(2,7);3,605(2,7);3,587(1,9);3,566(0,6);3,522(0,7);3,401(44,2);3,312(59,6);3,168(0,6);2,674(1,6);2,670(2,1);2,665(1,6);2,604(1,0);2,523(9,9);2,518(12,6);2,510(125,0);2,505(263,9);2,500(363,6);2,496(259,4);2,491(121,3);2,449(1,2);2,332(3,1);2,327(3,9);2,322(3,6);2,297(4,5);2,275(4,0);2,249(1,7);2,082(0,6);2,072(3,6);2,061(1,2);2,038(2,0);2,033(1,7);2,011(2,8);1,989(1,2);1,902(0,6);1,891(0,9);1,883(1,2);1,871(0,9);1,856(0,9);1,844(0,6);0,008(3,2);0,000(101,9);-0,009(3,8)

### Beispiel No. A2-791: ¹H-NMR (400 MHz, d₆-DMSO δ, ppm)

7,548(0,6);7,365(1,0);7,359(0,6);7,353(1,1);7,347(0,6);7,342(1,2);7,307(0,6);7,261(36,0);7,097(0,7);6,959(1,5);6,821(0,7);4,447(3,7);3,420(0,8);3,418(0,8);3,399(0,5);3,397(0,5);3,095(16,0);2,488(0,6);2,486(0,6);2,483(0,5);2,480(1,0);2,458(0,7);2,385(0,5);2,379(0,5);2,376(0,7);2,355(0,6);2,087(0,7);1,584(3,9);0,000(13,6)

### Beispiel No. A4-1: ¹H-NMR (400 MHz, d₆-DMSO δ, ppm)

7,467(2,8);7,448(3,3);7,338(1,3);7,331(1,3);7,323(1,7);7,316(2,2);7,311(1,1);7,303(1,4);7,296(1,7);7,259(1,1);7,247(7,7);7,240(3,6);7,231(2,3);7,228(2,2);7,212(0,4);7,209(0,5);5,396(0,6);4,307(16,0);3,902(12,2);3,536(1,6);3,405(29,6);3,311(1,0);3,272(28,6);3,168(0,7);2,747(0,7);2,727(0,9);2,719(1,5);2,711(0,9);2,700(0,6);2,691(0,9);2,681(0,6);2,675(0,6);2,671(0,8);2,666(0,6);2,506(86,7);2,502(112,8);2,497(83,1);2,493(41,3);2,333(0,5);2,329(0,7);2,324(0,5);1,826(1,8);1,793(4,1);1,764(1,9);1,756(2,3);1,693(1,0);1,662(1,1);1,522(0,7);1,516(0,7);1,485(1,9);1,457(2,3);1,431(1,1);1,400(1,0);1,392(0,8);1,370(2,1);1,345(1,5);1,338(2,1);1,315(0,6);1,307(0,9);1,284(0,8);1,277(0,5);1,254(1,3);1, 233(0,7);1,224(0,9);0,008(0,5);0,000(13,0);-0,008(0,5)

### Beispiel No. A4-2: ¹H-NMR (400 MHz, d₆-DMSO δ, ppm)

7,333(0,4);7,328(0,5);7,320(5,8);7,317(7,2);7,313(2,8);7,308(4,4);7,306(4,2);7,304(4,7);7,290(4,7);7,287(4,0);7,283(1,8);7,234(0,3);7,227(1,9);7,223(1,8);7,220(1,5);7,213(2,0);7,210(1,4);7,206(1,2);7,201(1,1);4,252(16,0);3,902(13,7);3,466(0,3);3,431(0,4);3,389(2,2);3,359(9,1);3,291(35,2);3,168(0,5);2,746(0,4);2,739(0,8);2,730(0,5);2,719(1,0);2,710(1,7);2,702(1,0);2,691(0,6);2,682(1,1);2,671(0,9);2,666(0,5);2,541(0,4);2,524(2,1);2,5 11(39,6);2,506(77,7);2,502(101,6);2,497(73,5);2,493(35,2);2,333(0,5);2,328(0,6);2,324 (0,4);1,833(1,7);1,799(2,6);1,784(1,8);1,776(1,3);1,761(1,6);1,753(2,1);1,691(0,9);1,661(1,0);1,523(0,7);1,516(0,7);1,491(1,9);1,485(1,8);1,457(2,1);1,431(1,1);1,401(0,9);1,394(0,6);1,377(1,3);1,371(2,0);1,347(1,4);1,340(2,0);1,332(1,2);1,316(0,6);1,308(0,9);1,302(0,6);1,283(0,8);1,276(0,5);1,259(0,8);1,253(1,2);1,245(0,8);1,234(0,6);1,223(0,9);1,214(0,5);0,008(0,9);0,000(26,9);-0,009(0,8)

### Beispiel No. A4-3: ¹H-NMR (400 MHz, d₆-DMSO δ, ppm)

7,354(0,7);7,348(5,7);7,343(2,1);7,332(2,8);7,327(11,2);7,321(1,7);7,286(1,6);7,280(10,0);7,275(2,5);7,264(1,9);7,259(5,1);7,252(0,5);4,255(16,0);3,903(6,5);3,492(1,4);3,482(0,4);3,479(0,6);3,445(0,4);3,431(1,6);3,361(26,7);3,308(37,7);3,295(1,5);3,258(0,4);3,168(0,6);2,751(0,4);2,743(0,8);2,735(0,5);2,723(0,9);2,715(1,6);2,706(1,0);2,695(0,6);2,686(1,0);2,676(0,9);2,671(0,8);2,666(0,6);2,524(2,6);2,519(4,1);2,511(45,8);2,506(90,5);2,502(118,2);2,497(85,0);2,493(40,0);2,333(0,6);2,329(0,7);2,324(0,5);1,831(1,6);1,826(1,7);1,791(3,7);1,760(1,8);1,753(2,2);1,745(1,6);1,691(1,0);1,662(1,0);1,515(0,7);1,508(0,7);1,483(1,8);1,477(1,8);1,450(2,2);1,423(1,2);1,403(1,0);1,395(0,8);1,372(2,1);1,348(1,6);1,341(2,2);1,317(0,7);1,310(0,9);1,304(0,6);1,283(0,8);1,276(0,5);1,253(1,2);1,246(0,7);1,231(0,6);1,223(0,9);0,008(1,7);0,000(48,2);-0,009(1,4)

### Beispiel No. A4-5: ¹H-NMR (400 MHz, d₆-DMSO δ, ppm)

7,626(4,8);7,621(4,9);7,355(1,8);7,350(1,6);7,334(4,9);7,329(4,9);7,310(7,4);7,289(2,7);4,293(15,5);3,902(16,0);3,526(0,4);3,515(0,4);3,431(1,6);3,384(30,6);3,341(35,6);3,169(1,0);2,766(0,4);2,758(0,7);2,751(0,5);2,738(0,9);2,730(1,5);2,722(0,9);2,711(0,5);2,702(0,9);2,693(0,5);2,676(0,6);2,671(0,8);2,666(0,5);2,524(2,3);2,520(3,7);2,511(43,6);2,507(86,8);2,502(114,2);2,497(81,9);2,493(38,5);2,333(0,5);2,329(0,7);2,324(0,5);1,828(1,6);1,795(3,5);1,764(1,6);1,756(2,0);1,749(1,4);1,694(0,9);1,664(0,9);1,520(0,6);1,512(0,6);1,487(1,7);1,482(1,7);1,455(2,1);1,428(1,1);1,406(0,9);1,399(0,6);1,375(1,8);1,352(1,3);1,344(1,9);1,338(1,1);1,320(0,6);1,313(0,8);1,286(0,8);1,278(0,5);1,263(0,7);1,256(1,2);1,248(0,7);1,234(0,7);1,225(0,8);0,008(0,7);0,000(22,5);-0,009(0,6)

### Beispiel No. A4-7: ¹H-NMR (400 MHz, d₆-DMSO δ, ppm)

7,477(4,1);7,475(4,1);7,456(7,5);7,369(3,3);7,351(2,6);7,347(2,3);7,329(1,8);4,326(11,1);3,902(16,0);3,499(0,4);3,411(10,1);3,389(3,9);3,365(25,3);3,168(0,7);2,785(0,5);2,7 65(0,6);2,757(1,1);2,748(0,6);2,737(0,4);2,728(0,6);2,676(0,4);2,671(0,5);2,666(0,4);2, 524(1,6);2,520(2,6);2,511(30,2);2,507(60,3);2,502(79,3);2,497(56,7);2,493(26,5);2,333(0,4);2,329(0,5);2,324(0,4);1,848(1,1);1,813(1,8);1,801(1,2);1,792(0,8);1,777(1,1);1,769(1,3);1,762(1,0);1,700(0,6);1,670(0,6);1,552(0,4);1,545(0,4);1,520(1,2);1,514(1,2);1,489(1,3);1,485(1,3);1,460(0,7);1,414(0,5);1,390(0,8);1,384(1,2);1,376(0,7);1,360(0,9);1,353(1,3);1,346(0,8);1,328(0,4);1,322(0,6);1,297(0,6);1,290(0,3);1,275(0,4);1,267(0,8);1 ,259(0,5);1,237(0,7);0,008(0,7);0,000(22,4);-0,009(0,6)

### Beispiel No. A4-59: ¹H-NMR (400 MHz, d₆-DMSO δ, ppm)

7,411(1,0);7,396(1,0);7,391(2,7);7,376(2,7);7,370(2,1);7,355(2,2);7,332(3,5);7,312(1,6);7,221(1,5);7,218(1,5);7,200(1,4);7,197(2,6);7,194(1,6);7,177(1,2);7,173(1,1);4,238(8,4);4,234(8,4);3,903(16,0);3,547(0,8);3,476(4,8);3,389(1,5);3,372(33,7);3,168(0,8);2,792(0,4);2,784(0,7);2,776(0,4);2,764(0,8);2,756(1,5);2,748(0,8);2,736(0,5);2,728(0,8);2,719(0,4);2,675(0,5);2,671(0,7);2,666(0,5);2,524(1,9);2,519(3,1);2,511(39,1);2,506(78,9);2,502(104,5);2,497(75,4);2,493(35,7);2,333(0,5);2,328(0,7);2,324(0,5);1,840(1,5);1,807(3,0);1,789(1,2);1,774(1,5);1,766(1,9);1,698(0,8);1,669(0,9);1,541(0,6);1,534(0,6);1,509(1,7);1,503(1,6);1,474(1,9);1,449(1,0);1,414(0,7);1,383(1,7);1,377(1,1);1,359(1,2);1,352(1,8);1,345(1,0);1,328(0,5);1,321(0,8);1,315(0,5);1,295(0,7);1,288(0,4);1,273(0,6);1,265(1,1);1,258(0,7);1,235(1,0);0,008(1,0);0,000(33,4);-0,007(0,4);-0,009(1,0)

### Beispiel No. A4-82: ¹H-NMR (400 MHz, d₆-DMSO δ, ppm)

7,623(1,5);7,605(2,3);7,576(4,5);7,562(2,8);7,539(2,5);7,519(2,3);7,499(0,7);4,348(14,7);3,902(16,0);3,389(1,0);3,347(28,9);3,294(2,2);3,285(35,5);3,168(0,7);2,721(0,7);2,713(0,5);2,701(0,9);2,693(1,5);2,685(0,9);2,675(0,9);2,671(1,1);2,666(1,3);2,656(0,5);2,524(2,3);2,519(3,8);2,511(46,0);2,506(91,6);2,502(120,4);2,497(86,3);2,493(40,5);2,333(0,6);2,329(0,8);2,324(0,6);1,815(1,7);1,782(4,0);1,754(1,6);1,746(2,0);1,739(1,4);1,688(0,9);1,658(0,9);1,505(0,7);1,499(0,7);1,468(1,8);1,441(2,2);1,414(1,1);1,404(0,8);1,395(0,9);1,387(0,7);1,364(1,8);1,340(1,4);1,332(1,9);1,309(0,6);1,301(0,9);1,276(0,8);1,270(0,5);1,254(0,7);1,246(1,2);1,239(0,8);1,216(0,8);0,008(1,1);0,000(32,3);-0,009(0,9)

### Beispiel No. A4-83: ¹H-NMR (400 MHz, d₆-DMSO δ, ppm)

7,651(5,8);7,631(7,4);7,484(6,9);7,464(5,5);4,348(16,0);3,903(16,0);3,328(91,4);3,290(43,7);2,721(1,0);2,713(0,7);2,701(1,1);2,693(2,0);2,684(1,3);2,671 (1,4);2,666(1,6);2,65 6(0,6);2,524(3,0);2,511(57,1);2,507(111,2);2,502(144,1);2,497(104,8);2,493(50,8);2,333(0,7);2,329(0,9);2,324(0,6);1,806(2,2);1,776(5,8);1,751(2,2);1,744(2,7);1,686(1,2);1,656(1,3);1,505(0,9);1,498(0,9);1,468(2,5);1,440(2,7);1,414(1,3);1,404(1,2);1,394(1,1);1,386(0,8);1,363(2,3);1,339(1,8);1,332(2,4);1,308(0,8);1,301(1,2);1,278(1,1);1,271(0,7);1,256(0,9);1,248(1,6);1,241(1,0);1,225(0,7);1,218(1,1);1,188(0,3);0,008(1,3);0,000(36,0) ;-0,008(1,1)

### Beispiel No. A6-1: ¹H-NMR (400 MHz, d₆-DMSO δ, ppm)

7,711(1,0);7,706(0,4);7,694(0,5);7,689(1,8);7,633(1,8);7,628(0,5);7,616(0,4);7,611(1,0);7,339(0,8);7,323(0,4);7,318(1,6);7,269(1,4);7,264(0,4);7,248(0,8);4,349(2,3);3,902(1,1);3,413(5,8);3,329(14,8);2,524(0,5);2,511(9,0);2,506(17,5);2,502(22,8);2,497(16,5);2,493(7,9);1,248(16,0);1,198(0,5);1,126(0,9);0,000(8,9)

### Beispiel No. A6-2: ¹H-NMR (400 MHz, d₆-DMSO δ, ppm)

7,732(0,3);7,726(2,8);7,721(1,0);7,709(1,3);7,704(4,9);7,698(0,7);7,647(0,7);7,641(4,9);7,636(1,2);7,624(1,0);7,619(2,8);7,420(1,7);7,344(1,5);7,338(6,6);7,334(5,0);7,326(0,7);4,392(7,0);3,902(6,1);3,474(16,0);3,355(0,4);3,330(126,5);3,312(0,5);2,671(0,3);2,525(0,9);2,520(1,5);2,511(18,8);2,507(37,6);2,502(49,5);2,498(35,5);2,493(16,7);0,008(0,4);0,000(11,2)

### Beispiel No. A6-3: ¹H-NMR (400 MHz, d₆-DMSO δ, ppm)

7,729(2,8);7,724(1,0);7,713(1,3);7,708(4,7);7,702(0,7);7,645(0,6);7,639(4,7);7,634(1,2);7,623(1,0);7,618(2,8);7,612(0,3);7,410(0,6);7,402(0,4);7,394(0,6);7,387(7,0);7,384(4,1);7,381(7,5);7,374(0,6);7,366(0,4);7,361(0,6);7,359(0,7);4,392(7,4);3,903(2,8);3,497(16,0);3,331(112,3);2,671(0,3);2,525(1,0);2,520(1,7);2,511(20,1);2,507(39,5);2,502(51,6);2,498(37,2);2,493(17,6);0,008(0,4);0,000(10,8)

### Beispiel No. A6-5: ¹H-NMR (400 MHz, d₆-DMSO δ, ppm)

7,740(0,4);7,734(2,9);7,728(1,0);7,717(1,3);7,712(4,9);7,706(0,7);7,658(2,5);7,653(2,7);7,644(5,0);7,639(1,3);7,628(1,0);7,623(2,9);7,480(1,8);7,459(3,0);7,401(1,9);7,396(1,8);7,380(1,1);7,375(1,1);4,427(6,8);3,903(2,6);3,523(16,0);3,325(62,6);2,671(0,3);2,524(1,1);2,511(20,8);2,507(40,9);2,502(53,3);2,497(38,6);2,493(18,4);2,329(0,3);0,008(0,6) ;0,000(16,6);-0,009(0,5)

### Beispiel No. A6-7: ¹H-NMR (400 MHz, d₆-DMSO δ, ppm)

7,746(0,4);7,740(2,9);7,734(1,0);7,723(1,3);7,718(4,9);7,712(0,6);7,661(0,7);7,655(4,9);7,650(1,2);7,639(1,0);7,634(2,8);7,512(2,8);7,511(2,8);7,491(5,0);7,393(2,0);7,374(1,7);7,371(1,5);7,352(1,1);4,475(7,2);3,902(3,9);3,542(16,0);3,505(0,3);3,343(135,2);3,302(0,4);3,169(2,0);2,672(0,4);2,525(1,0);2,520(1,6);2,512(21,2);2,507(42,2);2,503(55,3);2,498(39,9);2,494(18,9);2,330(0,4);1,242(0,9);0,000(2,0)

### Beispiel No. A6-10: ¹H-NMR (400 MHz, CDCl₃ δ, ppm)

7,600(2,3);7,599(1,6);7,595(0,8);7,584(1,1);7,579(3,7);7,573(0,5);7,521(0,6);7,519(0,5);7,515(3,8);7,510(1,0);7,499(0,8);7,493(2,3);7,357(7,6);7,267(0,6);7,266(0,6);7,265(0,8 );7,264(1,0);7,260(51,0);7,255(0,5);4,615(6,4);3,521(16,0);0,008(0,6);0,000(21,6);-0,009(0,6)

### Beispiel No. A6-15: ¹H-NMR (400 MHz, CDCl₃ δ, ppm)

7,566(2,1);7,565(1,4);7,561(0,8);7,550(1,0);7,544(3,7);7,539(0,6);7,502(0,6);7,497(3,7);7,491(1,0);7,480(0,8);7,476(1,3);7,475(2,1);7,403(0,6);7,387(0,6);7,260(35,3);6,818(0,7);6,816(0,8);6,795(1,2);4,451(2,8);4,449(2,9);3,448(16,0);1,582(1,2);0,000(13,2)

### Beispiel No. A6-17: ¹H-NMR (400 MHz, CDCl₃ δ, ppm)

7,592(1,2);7,591(0,8);7,575(0,5);7,570(1,8);7,504(1,8);7,498(0,5);7,483(0,8);7,482(1,2);7,260(20,9);6,909(0,6);6,891(0,7);6,889(0,6);6,870(0,5);5,298(16,0);4,430(1,7);3,515(7,8);1,557(3,4);0,000(8,4)

### Beispiel No. A6-21: ¹H-NMR (400 MHz, CDCl₃ δ, ppm)

8,580(0,5);8,578(0,6);8,575(0,5);8,570(0,5);8,567(0,6);8,565(0,6);7,635(0,9);7,631(0,9);7,616(0,6);7,612(0,6);7,570(2,2);7,569(1,5);7,565(0,9);7,554(1,1);7,548(3,7);7,543(0,6);7,496(0,6);7,490(3,7);7,485(1,1);7,473(0,8);7,469(1,5);7,468(2,3);7,463(0,8);7,460(0,9);7,441 (0,7);7,261(32,4);4,621(5,6);3,497(16,0);0,000(12,0);-0,003(0,6)

### Beispiel No. A6-36: ¹H-NMR (400 MHz, CDCl₃ δ, ppm)

8,700(0,9);8,698(0,9);7,955(0,9);7,951(0,9);7,607(2,3);7,606(1,5);7,602(0,8);7,590(1,0);7,585(3,5);7,579(0,5);7,519(0,5);7,516(0,6);7,511(3,5);7,505(1,0);7,494(0,8);7,490(1,5 );7,489(2,4);7,268(0,6);7,267(0,6);7,2662(0,7);7,2655(0,9);7,260(81,5);4,825(3,7);3,746(0,6);3,625(16,0);1,565(2,5);0,008(1,0);0,004(0,6);0,002(1,4);0,000(30,4);-0,003(1,3);-0,009(0,8)

### Beispiel No. A6-40: ¹H-NMR (400 MHz, CDCl₃ δ, ppm)

8,325(2,1);8,312(2,1);7,612(2,5);7,607(0,9);7,596(1,1);7,590(3,7);7,585(0,5);7,519(0,7);7,515(0,6);7,509(3,8);7,504(1,1);7,493(0,9);7,487(2,5);7,371(1,9);7,358(1,8);7,260(105,0);7,210(0,7);6,996(0,6);4,811(6,5);3,604(16,0);1,640(0,7);1,284(0,8);1,256(2,0);0,008(1,2);0,000(43,6);-0,009(1,2)

### Beispiel No. A6-59: ¹H-NMR (400 MHz, d₆-DMSO δ, ppm)

7,739(0,3);7,733(2,7);7,728(1,0);7,716(1,3);7,711(4,8);7,705(0,7);7,660(0,7);7,654(4,8);7,649(1,2);7,637(1,0);7,632(2,7);7,436(0,4);7,421(0,4);7,416(1,2);7,401(1,1);7,395(1,0);7,381(1,1);7,369(1,3);7,367(1,8);7,349(0,6);7,346(0,6);7,267(0,7);7,264(0,7);7,247(0,6);7,244(1,2);7,239(0,7);7,224(0,5);7,220(0,5);4,384(3,9);4,380(3,9);3,903(3,2);3,545(16,0);3,329(41,5);3,169(1,0);2,525(0,9);2,520(1,4);2,511(18,4);2,507(36,9);2,502(48,5); 2,497(35,1);2,493(16,7);0,008(0,4);0,000(11,4);-0,009(0,3)

### Beispiel No. A6-61: ¹H-NMR (400 MHz, CDCl₃ δ, ppm)

7,654(0,8);7,651(0,8);7,641(0,7);7,636(1,1);7,631(0,9);7,621(1,0);7,619(1,0);7,581(2,3);7,580(1,7);7,575(0,8);7,564(1,1);7,559(3,8);7,553(0,6);7,548(0,6);7,544(0,6);7,529(1,1);7,525(0,9);7,509(0,6);7,506(0,6);7,502(0,6);7,496(3,8);7,491(1,0);7,479(0,8);7,474(2,3);7,402(0,7);7,399(0,7);7,383(1,0);7,380(1,1);7,260(39,5);5,298(0,6);4,564(5,8);3,528( 16,0);1,578(1,8);0,000(15,0)

### Beispiel No. A6-62: ¹H-NMR (400 MHz, CDCl₃ δ, ppm)

7,715(0,7);7,711(1,4);7,708(0,9);7,686(0,5);7,683(0,7);7,666(0,6);7,663(0,8);7,659(0,5);7,579(0,6);7,576(1,0);7,572(2,5);7,566(0,9);7,560(0,8);7,555(1,7);7,553(1,1);7,550(4,0);7,544(0,7);7,505(0,6);7,499(4,0);7,494(1,0);7,483(0,8);7,478(2,2);7,437(0,9);7,436(0,9);7,418(1,5);7,398(0,6);7,263(13,2);4,508(5,4);3,461(16,0);0,000(4,8)

### Beispiel No. A6-63: ¹H-NMR (400 MHz, CDCl₃ δ, ppm)

7,610(1,6);7,605(0,7);7,594(0,9);7,589(3,1);7,585(0,6);7,559(1,9);7,558(1,3);7,554(0,8);7,547(0,6);7,543(3,5);7,537(4,3);7,532(0,8);7,527(0,6);7,522(1,5);7,504(0,7);7,499(3,9);7,493(1,0);7,482(0,7);7,478(1,3);7,477(1,9);7,263(15,3);4,512(5,2);3,446(16,0);0,000(5,4)

### Beispiel No. A6-82: ¹H-NMR (400 MHz, d₆-DMSO δ, ppm)

7,713(2,9);7,708(1,5);7,696(4,3);7,691(7,3);7,686(2,5);7,637(6,1);7,632(2,0);7,621(2,8);7,616(4,1);7,576(1,1);7,556(1,4);7,537(0,5);4,482(7,0);3,902(6,0);3,507(0,5);3,488(0,6);3,468(16,0);3,373(0,4);3,332(172,4);3,288(0,3);2,676(0,3);2,671(0,4);2,511(30,4);2,507(53,7);2,502(65,8);2,498(47,8);2,493(23,7);2,334(0,3);2,329(0,4);0,000(8,7);-0,008(0,4)

### Beispiel No. A6-83: ¹H-NMR (400 MHz, d₆-DMSO δ, ppm)

7,725(2,8);7,720(1,0);7,708(1,3);7,703(5,2);7,697(2,3);7,677(2,8);7,643(0,7);7,637(4,8);7,631(1,3);7,615(5,0);7,596(1,6);4,494(5,2);3,903(2,8);3,508(16,0);3,334(162,1);2,672(0,4);2,525(1,1);2,520(1,8);2,512(20,9);2,507(41,4);2,503(54,5);2,498(39,5);2,493(18,8);2,329(0,3);0,008(0,6);0,000(18,6);-0,009(0,5)

### Beispiel No. A6-99: ¹H-NMR (400 MHz, CDCl₃ δ, ppm)

7,518(1,2);7,259(213,3);7,209(1,3);6,995(1,2);3,696(0,6);1,532(16,0);0,008(2,6);0,000(84,6);-0,009(2,4);-0,050(0,7)

### Beispiel No. A6-136: ¹H-NMR (400 MHz, d₆-DMSO δ, ppm)

7,722(0,7);7,716(5,6);7,711(2,0);7,699(2,6);7,694(10,1);7,688(1,4);7,643(1,4);7,637(9,8);7,632(2,5);7,620(2,0);7,615(5,6);7,609(0,6);7,358(1,3);7,352(2,0);7,347(0,9);7,339(3,7);7,336(4,9);7,333(7,5);7,329(4,2);7,324(1,0);7,313(6,1);7,308(1,7);7,299(1,5);7,294(2,8);7,291(2,2);7,286(2,7);7,280(1,1);7,269(1,9);7,260(0,4);7,257(0,4);7,253(0,4);4,381(16,0);3,903(3,1);3,435(34,0);3,398(0,4);3,336(379,6);2,676(0,5);2,672(0,7);2,667(0,6);2,525(2,2);2,520(3,5);2,511(43,2);2,507(86,6);2,502(114,7);2,498(83,6);2,493(40,1);2,334(0,5);2,329(0,7);2,325(0,5);0,008(0,4);0,000(11,3);-0,009(0,3)

### Beispiel No. A6-143: ¹H-NMR (400 MHz, d₆-DMSO δ, ppm)

7,725(0,3);7,719(2,7);7,714(1,0);7,703(1,3);7,698(4,8);7,692(0,7);7,646(0,7);7,641(4,9);7,635(1,2);7,624(1,0);7,619(2,7);7,497(1,1);7,493(1,2);7,477(1,3);7,474(1,4);7,422(0,9);7,418(1,0);7,404(1,3);7,399(1,3);7,356(0,6);7,351(0,6);7,337(1,3);7,332(1,1);7,317(1,0);7,313(0,8);7,298(1,1);7,294(1,1);7,279(1,4);7,275(1,3);7,260(0,5);7,257(0,4);4,440(7,2);3,902(2,8);3,456(16,0);3,334(139,7);2,672(0,3);2,525(1,0);2,520(1,6);2,512(19,3);2, 507(38,2);2,502(50,0);2,498(36,0);2,493(17,0);0,008(0,6);0,000(16,7);-0,009(0,5)

### Beispiel No. A6-159: ¹H-NMR (400 MHz, CDCl₃ δ, ppm)

7,518(1,2);7,516(0,8);7,511(0,6);7,502(0,9);7,496(4,7);7,492(1,1);7,485(1,1);7,481(4,6);7,475(0,8);7,466(0,6);7,461(0,8);7,459(1,2);7,276(1,2);7,271(0,6);7,261(25,9);7,255(1,5);7,246(0,5);7,241(1,3);6,989(1,5);6,967(2,6);6,946(1,3);5,298(0,7);4,833(0,9);4,815(0,9);3,251(16,0);2,043(0,6);1,825(5,9);1,807(5,8);1,613(0,7);0,000(8,9)

### Beispiel No. A6-603: ¹H-NMR (400 MHz, CDCl₃ δ, ppm)

8,016(1,5);7,525(0,7);7,480(0,7);7,267(10,9);4,830(1,0);3,933(2,9);3,339(2,8);2,956(16,0);2,884(13,9);2,882(13,5);1,669(3,2);0,000(4,7)

### Beispiel No. A6-728: ¹H-NMR (400 MHz, CDCl₃ δ, ppm)

10,597(1,6);7,764(3,3);7,606(3,2);7,585(5,9);7,543(5,9);7,522(3,3);7,435(1,7);7,414(2,0);7,260(81,3);7,225(1,4);7,204(2,7);7,184(1,5);7,064(2,0);7,045(1,6);6,996(0,5);3,995( 9,6);3,619(16,0);1,576(15,2);0,000(28,4)

### Beispiel No. A6-737: ¹H-NMR (400 MHz, CDCl₃ δ, ppm)

10,427(1,3);8,235(0,6);8,212(1,2);8,197(1,1);8,175(0,7);7,607(3,2);7,586(5,1);7,527(5,3);7,505(3,0);7,311(0,7);7,260(110,5);6,996(0,6);6,845(1,8);6,832(2,0);6,825(1,6);6,81 2(0,9);4,056(9,5);3,615(16,0);1,552(25,3);0,000(37,9)

### Beispiel No. A6-742: ¹H-NMR (400 MHz, CDCl₃ δ, ppm)

9,938(1,7);7,609(3,7);7,588(5,5);7,529(5,9);7,512(3,5);7,316(0,7);7,264(51,4);7,261(57,0);7,196(1,1);7,176(1,5);7,160(1,0);6,940(2,4);6,920(4,1);6,899(2,0);4,085(9,8);3,646( 16,0);1,613(7,3);0,003(17,9);0,000(19,9)

### Beispiel No. A6-748: ¹H-NMR (400 MHz, CDCl₃ δ, ppm)

10,750(1,8);8,008(3,2);7,717(1,8);7,697(2,0);7,605(3,4);7,584(6,2);7,545(6,1);7,523(3,3);7,421(1,1);7,401(2,4);7,381(1,7);7,343(2,8);7,323(2,0);7,260(74,9);4,020(10,2);3,62 6(16,0);1,581(17,7);0,000(28,1)

### Beispiel No. A6-749: ¹H-NMR (400 MHz, d₆-DMSO δ, ppm)

10,690(2,3);7,791(2,2);7,769(3,6);7,735(3,3);7,714(5,3);7,700(3,8);7,679(2,5);7,635(5,0);7,614(3,2);4,187(7,4);3,637(16,0);3,315(113,0);2,670(1,3);2,505(169,7);2,501(231,0);2,496(189,5);2,437(0,8);2,328(1,3);0,000(61,3)

### Beispiel No. A6-768: ¹H-NMR (400 MHz, CDCl₃ δ, ppm)

8,297(0,8);8,294(0,8);8,284(0,8);8,282(0,7);8,180(0,7);8,158(0,7);7,711(0,6);7,614(2,8);7,609(1,0);7,598(1,3);7,592(4,5);7,587(0,6);7,578(0,6);7,547(0,5);7,519(4,5);7,514(4,7);7,509(1,3);7,498(1,0);7,493(3,0);7,293(0,8);7,291(0,7);7,290(0,7);7,288(0,5);7,287(0,5);7,286(0,5);7,285(0,5);7,284(0,6);7,283(0,8);7,2824(0,8);7,2816(0,8);7,281(0,9);7,280(1,0);7,279(1,0);7,2784(1,1);7,2777(1,1);7,277(1,2);7,276(1,3);7,275(1,3);7,2744(1,5);7,2737(1,7);7,273(1,9);7,272(2,1);7,271(2,1);7,2704(2,5);7,2697(3,0);7,269(3,0);7,267(4,5);7,2664(5,3);7,2656(6,3);7,260(725,6);7,252(2,5);7,2503(1,1);7,2495(1,0);7,249(1,0);7,247(0,5);7,056(0,6);7,043(0,6);7,025(0,5);6,996(4,2);5,299(1,3);4,108(6,5);3,919(1,1);3,652(2,1);3,625(16,0);1,576(11,5);1,254(2,0);0,146(0,7);0,014(0,5);0,013(0,6);0,012(0,7);0,011(0,7);0,010(1,0);0,008(7,7);0,007(2,2);0,006(2,2);0,005(2,7);0,004(3,7);0,0 00(271,4);-0,006(2,5);-0,007(2,0);-0,009(7,5);-0,011(0,9);-0,150(0,8)

### Beispiel No. A6-791: ¹H-NMR (400 MHz, CDCl₃ δ, ppm)

7,567(0,6);7,565(0,5);7,552(0,6);7,547(1,9);7,546(1,3);7,542(0,8);7,531(1,0);7,525(4,0);7,520(0,7);7,495(0,7);7,490(4,0);7,484(1,0);7,473(0,7);7,468(1,8);7,407(0,9);7,403(1,2);7,398(2,9);7,390(1,2);7,384(0,8);7,375(1,1);7,262(13,2);7,119(0,8);6,982(1,7);6,844(0,8);5,297(2,6);4,576(4,2);3,361(16,0);0,000(4,7)

### Beispiel No. A6-793: ¹H-NMR (400 MHz, CDCl₃ δ, ppm)

7,535(1,5);7,534(1,0);7,530(0,6);7,519(1,0);7,513(3,5);7,508(0,7);7,491(0,7);7,486(3,5);7,480(0,9);7,469(0,6);7,465(1,1);7,464(1,6);7,442(16,0);7,261(13,9);6,761(0,9);6,620( 1,9);6,479(0,9);4,464(4,0);3,354(14,5);0,000(5,3)

### Beispiel No. A7-13: ¹H-NMR (400 MHz, CDCl₃ δ, ppm)

7,596(1,5);7,591(0,6);7,583(1,6);7,579(0,7);7,578(0,7);7,574(1,8);7,566(0,7);7,561(1,7);7,332(1,1);7,319(1,1);7,311(1,2);7,310(1,1);7,297(1,2);7,2673(0,5);7,2665(0,6);7,261(56,6);7,220(1,7);7,215(0,5);7,203(0,6);7,199(2,4);7,198(2,2);7,193(0,6);7,182(0,5);7,177(1,5);7,007(1,4);6,985(2,5);6,963(1,2);4,410(4,8);3,361(16,0);1,564(10,1);0,008(0,8);0 ,000(25,4);-0,009(0,7)

### Beispiel No. A7-15: ¹H-NMR (400 MHz, CDCl₃ δ, ppm)

7,611 (1,4);7,606(0,6);7,598(1,5);7,594(0,7);7,593(0,7);7,589(1,7);7,582(0,6);7,576(1,6);7,519(0,9);7,397(0,6);7,381(0,6);7,273(0,5);7,272(0,6);7,271(0,7);7,270(0,7);7,2693(0,8);7,2686(0,9);7,267(1,2);7,260(150,3);7,227(0,6);7,224(1,7);7,219(0,5);7,207(0,6);7,203(2,4);7,181(1,4);6,996(0,9);6,820(0,6);6,818(0,7);6,797(1,2);4,445(2,9);3,506(1,1);3,436(16,0);1,552(0,5);1,551(0,6);1,550(0,8);1,549(1,2);1,545(55,9);1,540(0,9);1,5394(0, 6);1,5386(0,5);0,008(2,0);0,006(0,7);0,000(74,0);-0,006(0,6);-0,007(0,6);-0,009(2,1)

### Beispiel No. A7-17: ¹H-NMR (400 MHz, CDCl₃ δ, ppm)

7,638(1,6);7,633(0,6);7,625(1,6);7,621(0,7);7,620(0,7);7,616(1,7);7,608(0,7);7,603(1,7);7,519(0,5);7,285(0,5);7,280(0,6);7,271(0,5);7,269(0,9);7,268(0,9);7,267(1,0);7,266(1,2);7,261(93,0);7,243(0,6);7,231(1,8);7,226(0,6);7,214(0,6);7,210(2,5);7,205(0,6);7,193(0,5);7,188(1,6);6,997(0,5);6,912(1,2);6,894(1,4);6,892(1,3);6,873(1,1);4,426(3,5);3,506(16,0);1,551(27,6);0,008(1,4);0,006(0,5);0,000(44,6);-0,009(1,2)

### Beispiel No. A7-19: ¹H-NMR (400 MHz, CDCl₃ δ, ppm)

7,615(1,5);7,610(0,6);7,602(1,5);7,599(0,6);7,597(0,6);7,593(1,6);7,586(0,6);7,580(1,6);7,267(0,6);7,266(0,7);7,265(0,9);7,264(1,2);7,261(48,0);7,228(1,6);7,206(2,2);7,205(2,1);7,201(0,5);7,184(1,4);6,930(0,8);6,928(0,6);6,925(1,0);6,922(0,5);6,913(0,5);6,910(0,9);6,905(0,8);6,725(0,8);4,430(4,9);3,438(16,0);1,558(14,5);0,008(0,7);0,000(23,1);-0,009(0,6)

### Beispiel No. A7-59: ¹H-NMR (400 MHz, CDCl₃ δ, ppm)

7,635(1,5);7,629(0,6);7,621(1,6);7,618(0,7);7,616(0,7);7,612(1,7);7,605(0,6);7,599(1,7);7,262(23,1);7,247(0,8);7,233(1,1);7,230(1,9);7,227(1,2);7,225(0,7);7,222(1,3);7,216(3, 1);7,209(2,5);7,208(2,4);7,204(0,6);7,201(0,6);7,187(1,5);7,021(0,5);6,998(0,9);6,992(0,5);4,510(3,4);4,505(3,6);3,469(16,0);1,606(3,6);0,000(9,8)

### Beispiel No. A7-61: ¹H-NMR (400 MHz, CDCl₃ δ, ppm)

7,655(0,7);7,652(0,7);7,635(1,7);7,634(1,5);7,628(1,7);7,622(0,7);7,615(2,4);7,611(1,0);7,610(0,8);7,606(1,8);7,598(0,7);7,593(1,7);7,550(0,6);7,546(0,6);7,531(1,0);7,527(0,9);7,511(0,5);7,508(0,5);7,404(0,7);7,401(0,7);7,385(1,0);7,382(1,1);7,263(15,6);7,222(1,7);7,216(0,5);7,205(0,5);7,200(2,4);7,199(2,3);7,195(0,6);7,178(1,5);4,558(5,5);3,519(16,0);1,621 (1,5);0,000(6,8)

### Beispiel No. A7-63: ¹H-NMR (400 MHz, CDCl₃ δ, ppm)

7,676(0,6);7,655(0,8);7,612(2,0);7,611(2,6);7,608(0,9);7,606(0,7);7,598(1,8);7,597(1,6);7,591(3,6);7,589(2,2);7,581(0,7);7,576(1,6);7,548(0,5);7,544(2,8);7,539(0,8);7,527(0,6);7,523(1,6);7,519(0,9);7,518(0,8);7,498(0,5);7,263(17,2);7,229(1,6);7,212(0,5);7,207(2,3);7,206(2,2);7,202(0,5);7,185(1,5);4,605(1,5);4,513(5,1);3,439(16,0);0,000(7,8)

### Beispiel No. A7-103: ¹H-NMR (400 MHz, CDCl₃ δ, ppm)

7,590(1,5);7,584(0,6);7,577(1,5);7,573(0,6);7,571(0,6);7,567(1,7);7,560(0,6);7,554(1,7);7,519(0,7);7,270(0,6);7,2694(0,7);7,2686(0,8);7,268(0,9);7,267(1,0);7,265(1,5);7,260(121,0);7,236(2,1);7,231(0,7);7,220(0,9);7,214(2,6);7,212(2,4);7,207(0,7);7,195(0,5);7,191(2,4);7,190(2,3);7,186(0,5);7,169(1,5);6,996(0,7);6,831(2,6);6,826(0,8);6,815(0,7);6,809(2,3);4,370(5,2);3,785(14,5);3,315(16,0);1,551(30,4);0,008(1,6);0,000(54,2);-0,009(1,4)

### Beispiel No. A7-159: ¹H-NMR (400 MHz, CDCl₃ δ, ppm)

7,559(1,5);7,554(0,6);7,546(1,6);7,543(0,7);7,541(0,7);7,537(1,8);7,530(0,7);7,524(1,7);7,274(1,2);7,268(0,7);7,261(30,4);7,255(0,7);7,252(1,4);7,244(0,5);7,239(1,3);7,210(1,7);7,193(0,6);7,189(2,4);7,183(0,5);7,166(1,5);6,992(1,5);6,970(2,6);6,948(1,3);4,821(0,9);4,804(0,9);3,233(16,0);1,825(5,8);1,808(5,7);1,584(2,9);1,284(0,7);1,255(0,8);0,000 (13,1)

### Beispiel No. A7-791: ¹H-NMR (400 MHz, CDCl₃ δ, ppm)

7,591(1,5);7,585(0,7);7,578(1,8);7,574(0,8);7,572(0,9);7,568(2,1);7,561(1,0);7,555(1,9);7,407(0,7);7,400(3,9);7,392(1,6);7,387(0,9);7,377(0,6);7,262(20,3);7,217(1,6);7,200(0,5);7,196(2,3);7,195(2,2);7,191(0,5);7,174(1,5);7,123(0,7);6,985(1,5);6,847(0,8);4,570(3,9);3,345(16,0);1,606(2,4);0,000(9,1)

### Beispiel No. A7-792: ¹H-NMR (400 MHz, CDCl₃ δ, ppm)

7,589(1,4);7,583(0,6);7,575(1,4);7,572(0,7);7,566(1,6);7,559(0,6);7,553(1,5);7,519(0,8);7,455(1,5);7,422(0,9);7,411(1,0);7,392(0,7);7,260(140,4);7,214(1,7);7,211(0,7);7,208(0,5);7,197(0,6);7,193(2,4);7,170(1,5);6,996(0,8);6,741(0,8);6,601(1,5);6,459(0,7);4,456(5,0);3,329(16,0);1,549(40,3);0,008(1,9);0,000(62,2);-0,009(1,6)

### Beispiel No. A7-793: ¹H-NMR (400 MHz, CDCl₃ δ, ppm)

7,580(1,5);7,575(0,6);7,567(1,6);7,563(0,7);7,562(0,6);7,558(1,7);7,550(0,7);7,545(1,7);7,443(14,9);7,261(51,0);7,214(1,7);7,209(0,5);7,198(0,6);7,193(2,4);7,192(2,2);7,188(0,5);7,171(1,5);6,765(1,0);6,624(2,0);6,483(0,9);4,461(4,3);3,339(16,0);1,565(10,6);0,008(0,7);0,000(22,5);-0,009(0,6)

### Beispiel No. A9-1: ¹H-NMR (400 MHz, d₆-DMSO δ, ppm)

7,800(1,5);7,798(1,6);7,788(1,7);7,785(1,6);7,595(1,7);7,593(1,7);7,586(1,8);7,583(1,7);7,491(1,1);7,488(1,1);7,472(1,4);7,469(1,4);7,376(0,9);7,371(1,0);7,357(1,2);7,353(1,6);7,345(0,7);7,331(1,4);7,326(1,0);7,311(0,9);7,306(0,7);7,279(1,1);7,276(1,1);7,260(2,7);7,250(1,7);7,247(1,7);7,242(0,6);7,238(1,8);4,401(7,5);3,902(2,0);3,554(16,0);3,330(104,8);3,169(0,6);2,525(1,0);2,511(17,9);2,507(35,2);2,502(46,2);2,497(33,8);2,493(16 ,3);0,008(0,5);0,000(14,7);-0,009(0,5)

### Beispiel No. A9-2: ¹H-NMR (400 MHz, d₆-DMSO δ, ppm)

7,798(1,5);7,795(1,6);7,785(1,7);7,782(1,6);7,601(1,7);7,598(1,7);7,592(1,8);7,589(1,7);7,405(1,9);7,341(1,0);7,339(1,3);7,333(1,0);7,328(3,4);7,325(3,6);7,319(0,8);7,314(0,5);7,310(1,1);7,306(1,0);7,297(0,9);7,292(0,4);7,261(1,7);7,252(1,7);7,249(1,7);7,239(1,6);4,360(6,9);3,902(2,5);3,580(16,0);3,382(0,4);3,376(0,5);3,342(173,5);2,525(0,9);2,520(1,4);2,512(16,6);2,507(33,1);2,503(43,6);2,498(31,5);2,494(15,0)

### Beispiel No. A9-3: ¹H-NMR (400 MHz, d₆-DMSO δ, ppm)

7,797(1,1);7,795(1,1);7,785(1,1);7,782(1,1);7,604(1,2);7,601(1,2);7,595(1,3);7,592(1,2);7,364(16,0);7,261(1,2);7,252(1,1);7,249(1,2);7,240(1,1);4,358(5,8);3,903(1,5);3,595(11,1);3,329(35,3);2,524(0,6);2,520(0,9);2,511(10,9);2,507(21,6);2,502(28,4);2,497(20,6);2,493(9,8);0,000(7,2)

### Beispiel No. A9-5: ¹H-NMR (400 MHz, d₆-DMSO δ, ppm)

7,805(1,5);7,803(1,6);7,793(1,7);7,790(1,6);7,653(2,1);7,648(2,1);7,619(1,7);7,616(1,7);7,609(1,8);7,607(1,7);7,434(1,4);7,413(3,1);7,385(2,0);7,379(1,9);7,364(0,9);7,359(0,9);7,267(1,7);7,257(1,7);7,254(1,7);7,245(1,6);4,389(6,9);3,903(6,3);3,622(16,0);3,324(40,4);2,671(0,3);2,524(1,0);2,519(1,7);2,511(20,0);2,506(39,4);2,502(51,7);2,497(37,4);2,493(17,8);2,329(0,3);0,008(0,5);0,000(14,3);-0,009(0,4)

### Beispiel No. A9-7: ¹H-NMR (400 MHz, d₆-DMSO δ, ppm)

7,820(1,6);7,817(1,7);7,807(1,7);7,805(1,7);7,643(1,7);7,641(1,7);7,634(1,9);7,631(1,7);7,501(2,9);7,482(5,0);7,386(1,9);7,368(1,6);7,364(1,4);7,346(1,1);7,276(1,7);7,267(1,7);7,263(1,7);7,254(1,6);4,435(7,5);3,903(3,6);3,647(16,0);3,328(58,8);3,169(0,5);2,524(0,9);2,520(1,5);2,511(18,6);2,506(37,0);2,502(48,9);2,497(35,8);2,493(17,4);0,000(6,0)

### Beispiel No. A9-13: ¹H-NMR (400 MHz, d₆-DMSO δ, ppm)

7,505(1,3);7,502(1,4);7,492(1,4);7,489(1,4);7,416(1,4);7,413(1,4);7,407(1,6);7,404(1,5);7,310(1,1);7,297(1,1);7,288(1,3);7,275(1,2);7,262(14,0);7,173(1,5);7,163(1,4);7,160(1, 4);7,151(1,3);6,994(1,4);6,972(2,6);6,951(1,2);4,379(5,1);3,468(16,0);1,617(2,0);0,000(6,5)

### Beispiel No. A9-15: ¹H-NMR (400 MHz, d₆-DMSO δ, ppm)

7,510(1,3);7,507(1,5);7,497(1,4);7,494(1,5);7,433(1,5);7,431(1,5);7,424(1,6);7,421(1,5);7,363(0,6);7,347(0,6);7,266(0,6);7,265(0,8);7,261(32,7);7,178(1,6);7,169(1,5);7,165(1, 5);7,156(1,4);6,791(0,6);6,780(0,5);4,415(2,7);4,413(2,7);3,541(16,0);1,577(9,6);0,000(15,0);-0,003(0,8)

### Beispiel No. A9-17: ¹H-NMR (400 MHz, CDCl₃ δ, ppm)

7,520(1,7);7,517(1,5);7,507(1,4);7,505(1,6);7,472(1,5);7,469(1,4);7,463(1,6);7,460(1,4);7,277(0,6);7,276(0,7);7,273(0,6);7,272(0,8);7,2713(0,8);7,2705(0,8);7,270(0,8);7,269(0,8);7,268(0,9);7,2673(1,0);7,2665(1,2);7,266(1,5);7,265(1,9);7,264(2,7);7,261(115,3);7,257(2,5);7,256(2,1);7,255(1,7);7,254(0,6);7,253(0,5);7,234(0,5);7,188(1,6);7,179(1,5);7,175(1,5);7,166(1,4);6,997(0,7);6,904(1,1);6,885(1,2);6,883(1,1);6,865(1,0);4,393(3,2);3,619(16,0);1,552(52,0);0,008(1,6);0,0064(0,5);0,0056(0,6);0,005(0,7);0,004(0,9);0,003(1,4);0,002(2,2);0,000(53,7);-0,005(0,8);-0,006(0,5);-0,008(1,4)

### Beispiel No. A9-19: ¹H-NMR (400 MHz, CDCl₃ δ, ppm)

7,518(1,5);7,515(2,5);7,502(2,6);7,441(2,4);7,432(2,7);7,295(1,1);7,263(140,0);7,260(157,3);7,233(0,6);7,182(1,5);7,175(1,3);7,172(2,3);7,160(1,4);6,996(0,9);6,928(2,0);6,912(2,0);6,740(0,6);6,717(1,2);6,696(0,6);4,415(8,6);3,569(14,7);3,567(16,0);1,580(0,6);1,548(63,7);1,546(69,7);0,011 (2,3);0,008(2,9);0,003(63,4);0,000(69,0)

### Beispiel No. A9-59: ¹H-NMR (400 MHz, CDCl₃ δ, ppm)

7,818(1,5);7,815(1,6);7,805(1,6);7,803(1,6);7,637(1,7);7,635(1,7);7,628(1,8);7,625(1,7);7,428(0,4);7,413(0,4);7,407(1,2);7,392(1,1);7,387(1,0);7,373(1,1);7,359(1,8);7,342(0,6);7,339(0,5);7,275(1,7);7,266(1,7);7,262(1,7);7,253(1,8);7,247(0,7);7,230(0,6);7,227(1,2);7,223(0,7);7,207(0,5);7,203(0,5);4,338(4,0);4,334(4,0);3,903(2,4);3,650(16,0);3,335(132,9);2,525(1,0);2,520(1,6);2,512(18,3);2,507(36,1);2,502(47,3);2,498(34,2);2,493(16 ,2);0,000(3,7)

### Beispiel No. A9-63: ¹H-NMR (400 MHz, CDCl₃ δ, ppm)

7,662(0,8);7,659(0,8);7,643(0,9);7,640(0,9);7,597(0,6);7,579(0,9);7,577(0,9);7,521(0,7);7,518(0,6);7,510(1,3);7,507(1,4);7,502(1,1);7,498(1,9);7,495(1,5);7,483(0,6);7,442(1,0);7,439(0,9);7,433(1,1);7,430(1,0);7,394(0,7);7,391(0,7);7,375(1,1);7,372(1,1);7,263(21,4);7,177(1,5);7,167(1,4);7,164(1,4);7,155(1,3);5,300(1,4);4,765(0,6);4,556(4,5);3,601( 16,0);1,610(2,5);0,000(8,6)

### Beispiel No. A9-82: ¹H-NMR (400 MHz, d₆-DMSO δ, ppm)

7,794(1,6);7,792(1,6);7,782(1,7);7,779(1,6);7,669(2,3);7,649(1,0);7,636(0,6);7,616(1,0);7,587(1,8);7,584(1,8);7,577(1,9);7,575(1,7);7,564(0,9);7,546(1,0);7,527(0,4);7,256(1,8 );7,246(1,7);7,243(1,7);7,234(1,6);4,451(6,0);3,902(2,3);3,604(0,7);3,563(16,0);3,337(137,0);2,525(1,0);2,520(1,6);2,512(18,3);2,507(36,4);2,503(48,0);2,498(34,8);2,493(16, 5);0,000(2,6)

### Beispiel No. A9-83: ¹H-NMR (400 MHz, d₆-DMSO δ, ppm)

7,805(1,5);7,803(1,6);7,793(1,7);7,790(1,6);7,654(2,0);7,649(2,1);7,619(1,7);7,616(1,7);7,609(1,9);7,607(1,7);7,434(1,3);7,413(3,0);7,385(2,0);7,380(1,9);7,364(0,9);7,359(0,9);7,267(1,8);7,258(1,7);7,254(1,7);7,245(1,6);4,389(6,6);3,903(1,8);3,622(16,0);3,603(0,4);3,328(148,4);2,676(0,3);2,671(0,5);2,666(0,3);2,524(1,4);2,520(2,3);2,511(27,6);2,507(55,0);2,502(72,6);2,497(52,6);2,493(25,0);2,333(0,3);2,329(0,5);2,324(0,3);0,008(0, 6);0,000(17,1);-0,009(0,5)

### Beispiel No. A9-103: ¹H-NMR (400 MHz, CDCl₃ δ, ppm)

7,498(1,3);7,495(1,4);7,485(1,4);7,483(1,5);7,408(1,4);7,405(1,4);7,399(1,6);7,396(1,5);7,261(25,8);7,215(2,1);7,209(0,7);7,198(0,7);7,193(2,4);7,167(1,6);7,158(1,5);7,154(1,5);7,145(1,4);6,819(2,6);6,813(0,8);6,802(0,7);6,797(2,3);4,339(5,2);3,776(14,4);3,422(16,0);1,593(3,3);0,000(11,8)

### Beispiel No. A9-143: ¹H-NMR (400 MHz, d₆-DMSO δ, ppm)

7,795(0,5);7,793(0,6);7,783(0,6);7,780(0,6);7,570(0,6);7,568(0,6);7,561(0,7);7,558(0,6);7,323(0,9);7,318(0,3);7,307(0,4);7,302(1,5);7,256(0,6);7,247(0,6);7,243(0,7);7,236(1,5);7,220(0,3);7,215(0,8);4,313(2,4);3,902(1,0);3,504(5,8);3,339(57,3);2,525(0,4);2,520(0,6);2,512(7,1);2,507(14,2);2,502(18,7);2,498(13,5);2,493(6,4);1,242(16,0);1,169(0,4);0,000(2,2)

### Beispiel No. A9-159: ¹H-NMR (400 MHz, CDCl₃ δ, ppm)

7,502(1,4);7,499(1,5);7,489(1,5);7,486(1,6);7,394(1,5);7,391(1,5);7,385(1,6);7,382(1,5);7,262(21,9);7,253(1,1);7,239(1,2);7,236(0,5);7,231(1,3);7,218(1,2);7,166(1,6);7,156(1,5);7,153(1,5);7,144(1,4);6,980(1,5);6,959(2,5);6,937(1,2);5,300(1,0);4,779(0,9);4,761(0,9);3,348(16,0);1,807(5,8);1,789(5,8);1,605(4,0);0,000(9,8)

### Beispiel No. A9-726: ¹H-NMR (400 MHz, CDCl₃ δ, ppm)

9,865(0,9);8,280(1,4);8,260(1,4);7,534(1,8);7,531(1,7);7,521(2,1);7,519(1,8);7,467(2,0);7,464(1,8);7,457(2,3);7,455(1,8);7,355(1,5);7,352(1,4);7,335(1,8);7,332(1,6);7,261(30,4);7,245(1,9);7,225(1,0);7,222(0,8);7,196(1,6);7,187(2,0);7,183(1,8);7,174(1,4);7,054(1,0);7,050(0,9);7,034(1,5);7,032(1,4);7,015(0,8);7,012(0,7);5,299(2,9);4,139(9,5);3,704( 16,0);2,044(0,7);1,599(3,4);0,000(11,0)

### Beispiel No. A9-728: ¹H-NMR (400 MHz, CDCl₃ δ, ppm)

11,094(1,3);7,762(3,5);7,740(4,1);7,593(4,5);7,588(2,1);7,582(2,6);7,579(2,6);7,570(4,6);7,566(2,7);7,493(2,2);7,490(2,0);7,484(2,5);7,481 (1,9);7,261(63,3);7,232(1,8);7,222(2,2);7,219(1,9);7,210(1,5);3,983(9,1);3,732(16,0);1,568(17,8);0,000(22,3)

### Beispiel A9 737: 1 H NMR(400,0 MHz, CDCl3): □=

10,365(1,1);8,173(1,0);8,157(1,0);8,136(0,5);7,548(1,9);7,546(1,7);7,536(2,1);7,533(1,8);7,487(2,1);7,485(1,9);7,478(2,4);7,260(73,5);7,207(1,7);7,198(2,2);7,194(1,9);7,185(1,4);6,860(1,6);6,840(2,4);6,834(1,8);6,820(1,0);6,813(1,1);5,299(1,6);4,042(9,5);3,716(16,0);1,572(8,7);0,000(27,0)

### Beispiel No. A9-761: ¹H-NMR (400 MHz, CDCl₃ δ, ppm)

11,096(1,3);7,762(3,5);7,740(4,2);7,593(4,5);7,582(2,7);7,579(2,8);7,571(4,4);7,566(2,7);7,493(2,2);7,490(2,0);7,483(2,4);7,481(1,8);7,261(80,4);7,232(1,9);7,222(2,3);7,219( 1,9);7,210(1,5);3,980(9,0);3,732(16,0);1,557(26,7);0,000(27,8)

### Beispiel No. A9-791: ¹H-NMR (400 MHz, CDCl₃ δ, ppm)

7,561 (0,6);7,506(1,4);7,504(1,5);7,494(1,5);7,491(1,6);7,412(1,5);7,409(1,4);7,403(1,6);7,400(1,5);7,381(1,1);7,376(2,9);7,369(5,1);7,262(16,3);7,171(1,6);7,162(1,5);7,158(1,5);7,149(1,4);7,126(0,8);6,988(1,6);6,850(0,8);5,299(1,0);4,547(4,1);3,456(16,0);1,618(2,4);0,000(7,2)

### Beispiel No. A9-792: ¹H-NMR (400 MHz, CDCl₃ δ, ppm)

7,501(1,4);7,498(1,5);7,488(1,5);7,485(1,5);7,452(1,3);7,431(1,0);7,412(0,8);7,405(1,7);7,403(1,5);7,396(2,0);7,393(2,3);7,375(0,7);7,263(10,3);7,167(1,6);7,157(1,5);7,154(1, 5);7,145(1,3);6,735(0,7);6,594(1,5);6,453(0,7);5,298(6,3);4,432(5,3);3,446(16,0);1,662( 0,8);0,000(4,6)

### Beispiel No. A9-793: ¹H-NMR (400 MHz, CDCl₃ δ, ppm)

7,505(1,3);7,503(1,4);7,493(1,4);7,490(1,4);7,429(7,3);7,406(1,6);7,403(1,5);7,396(1,6);7,394(1,4);7,261(30,8);7,171(1,5);7,162(1,4);7,158(1,4);7,149(1,3);6,755(0,9);6,613(1, 7);6,472(0,8);5,299(12,6);4,437(4,0);3,455(16,0);1,571(4,6);0,000(15,0)

### Beispiel No. A10-3: ¹H-NMR (400 MHz, CDCl₃ δ, ppm)

7,576(1,5);7,574(1,6);7,572(1,6);7,570(1,5);7,566(0,6);7,564(0,6);7,561(0,6);7,559(0,6);7,519(0,6);7,270(0,8);7,268(1,0);7,260(106,2);7,050(1,5);7,048(1,5);7,042(1,8);7,040(1,8);7,033(0,6);7,031(0,6);6,996(0,6);6,572(1,5);6,567(1,5);6,565(0,8);6,563(1,6);6,560(0,8);6,558(1,5);6,556(0,7);6,552(0,6);4,491 (2,3);4,377(6,9);3,570(16,0);3,517(6,4);1,551(19,0);0,008(1,3);0,005(0,6);0,000(38,9);-0,009(1,1)

### Beispiel No. A10-5: ¹H-NMR (400 MHz, CDCl₃ δ, ppm)

7,577(1,5);7,575(1,6);7,573(1,6);7,571(1,5);7,405(1,6);7,400(1,7);7,379(1,4);7,358(1,7);7,260(56,7);7,144(1,1);7,138(1,1);7,123(1,0);7,118(0,9);7,058(1,2);7,056(1,2);7,049(1,3);7,047(1,2);6,573(1,5);6,568(1,5);6,564(1,4);6,560(1,4);4,491(5,8);3,595(16,0);1,571(0,7);0,008(0,6);0,000(22,2);-0,009(0,6)

### Beispiel No. A10-7: ¹H-NMR (400 MHz, CDCl₃ δ, ppm)

7,590(1,5);7,588(1,6);7,586(1,6);7,584(1,5);7,324(1,8);7,323(1,8);7,322(1,9);7,303(3,1);7,302(3,1);7,262(14,7);7,195(1,4);7,177(1,1);7,174(1,0);7,155(0,8);7,091(1,5);7,089(1,5);7,082(1,6);7,080(1,6);6,583(1,5);6,579(1,5);6,575(1,5);6,570(1,5);5,298(0,8);4,603(6,0);3,641(16,0);1,627(1,1);0,000(5,7)

### Beispiel No. A10-10: ¹H-NMR (400 MHz, CDCl₃ δ, ppm)

7,602(1,5);7,600(1,5);7,598(1,5);7,596(1,5);7,344(7,1);7,264(0,6);7,261(28,1);7,113(1,2);7,111(1,2);7,104(1,2);7,103(1,2);6,592(1,5);6,588(1,5);6,583(1,4);6,579(1,4);4,562(6 ,1);3,704(16,0);2,044(0,5);0,000(12,3)

### Beispiel No. A10-13: ¹H-NMR (400 MHz, CDCl₃ δ, ppm)

7,575(1,5);7,573(1,5);7,570(1,6);7,568(1,5);7,308(1,0);7,295(1,1);7,292(0,5);7,286(1,2);7,273(1,2);7,263(12,7);7,049(1,4);7,047(1,4);7,040(1,5);7,039(1,5);6,990(1,4);6,968(2,5);6,946(1,2);6,570(1,5);6,566(1,5);6,562(1,4);6,557(1,4);4,377(4,6);3,555(16,0);1,645(0,8);0,000(5,5)

### Beispiel No. A10-15: ¹H-NMR (400 MHz, CDCl₃ δ, ppm)

7,577(2,6);7,575(2,6);7,372(0,6);7,351(1,2);7,335(1,2);7,313(0,7);7,262(21,5);7,058(2,1);7,050(2,2);6,839(0,6);6,833(0,8);6,810(1,2);6,792(1,2);6,786(1,2);6,773(1,2);6,750(0,6);6,574(1,7);6,570(1,9);6,566(1,8);6,561 (1,6);4,406(6,4);3,617(16,0);1,593(5,8);0,000 (8,9)

### Beispiel No. A10-17: ¹H-NMR (400 MHz, CDCl₃ δ, ppm)

7,592(1,5);7,590(1,6);7,587(1,6);7,585(1,5);7,271(0,5);7,266(0,8);7,262(17,1);7,250(0,9);7,229(0,5);7,090(1,5);7,088(1,5);7,081(1,5);7,079(1,5);6,899(1,2);6,881(1,3);6,878(1,2);6,860(1,0);6,583(1,5);6,579(1,6);6,575(1,5);6,570(1,5);5,300(0,7);4,379(3,4);3,695(16,0);1,616(2,0);0,000(7,6)

### Beispiel No. A10-19: ¹H-NMR (400 MHz, CDCl₃ δ, ppm)

7,582(1,5);7,580(1,6);7,578(1,6);7,576(1,5);7,262(17,7);7,065(1,5);7,063(1,5);7,056(1,5);7,054(1,5);6,928(0,9);6,922(1,1);6,920(0,6);6,911(0,6);6,908(1,0);6,903(0,9);6,716(0,5);6,710(0,9);6,576(1,5);6,572(1,5);6,568(1,5);6,563(1,4);5,300(2,7);4,408(5,5);3,648(16,0);1,604(1,6);0,000(8,0)

### Beispiel No. A10-21: ¹H-NMR (400 MHz, CDCl₃ δ, ppm)

8,575(0,9);8,564(0,9);7,575(2,2);7,573(2,3);7,570(2,3);7,568(2,3);7,518(1,5);7,272(1,1);7,260(245,5);7,049(2,0);7,047(2,0);7,040(2,1);7,038(2,1);6,996(1,3);6,568(2,1);6,564( 2,1);6,559(2,1);6,555(2,0);4,639(3,1);3,678(16,0);3,665(1,0);0,008(2,7);0,000(96,3);-0,009(2,8)

### Beispiel No. A10-36: ¹H-NMR (400 MHz, CDCl₃ δ, ppm)

8,688(0,8);8,686(0,9);8,683(0,9);8,681(0,8);7,941(1,0);7,938(0,9);7,597(1,5);7,595(1,5);7,592(1,6);7,590(1,5);7,261(37,3);7,083(1,5);7,081(1,5);7,075(1,5);7,073(1,5);6,585(1, 5);6,581 (1,5);6,576(1,4);6,572(1,5);4,759(3,8);3,788(16,0);1,568(3,3);0,000(14,5)

### Beispiel No. A10-40: ¹H-NMR (400 MHz, CDCl₃ δ, ppm)

8,308(1,8);8,295(1,9);7,592(1,5);7,590(1,6);7,588(1,5);7,586(1,4);7,519(0,6);7,355(1,7);7,342(1,7);7,273(0,5);7,269(1,0);7,260(94,2);7,256(1,4);7,255(1,0);7,254(0,9);7,253(0,7);7,2524(0,6);7,2516(0,6);7,080(1,3);7,079(1,2);7,072(1,3);7,070(1,2);6,996(0,5);6,582(1,5);6,577(1,5);6,573(1,4);6,568(1,4);4,750(6,1);3,770(16,0);2,044(0,7);1,555(4,4);0, 008(1,2);0,000(42,2);-0,009(1,4)

### Beispiel No. A10-59: ¹H-NMR (400 MHz, CDCl₃ δ, ppm)

7,591 (1,5);7,589(1,6);7,586(1,6);7,585(1,5);7,262(21,8);7,233(0,8);7,219(0,9);7,213(1,1);7,210(1,3);7,203(2,7);7,091(1,5);7,089(1,5);7,082(1,5);7,080(1,5);6,983(0,7);6,584(1,5);6,579(1,5);6,575(1,5);6,570(1,4);5,300(0,6);4,471(3,4);4,466(3,5);3,667(16,0);1,600(2,5);0,000(9,8)

### Beispiel No. A10-61: ¹H-NMR (400 MHz, CDCl₃ δ, ppm)

7,664(0,6);7,661(0,7);7,645(0,8);7,642(0,8);7,578(2,0);7,577(1,7);7,574(1,6);7,572(1,6);7,562(0,9);7,560(0,9);7,510(0,6);7,507(0,6);7,491(1,0);7,488(0,9);7,472(0,5);7,390(0,6);7,386(0,7);7,371(1,0);7,367(1,0);7,262(28,8);7,061(1,5);7,059(1,5);7,052(1,5);7,050(1,5);6,573(1,5);6,568(1,5);6,564(1,5);6,559(1,4);4,559(5,4);3,662(16,0);1,585(2,9);0,000 (11,7)

### Beispiel No. A10-62: ¹H-NMR (400 MHz, CDCl₃ δ, ppm)

7,706(0,9);7,703(1,5);7,699(0,9);7,644(0,7);7,625(0,9);7,621(0,6);7,579(1,7);7,577(1,8);7,575(1,7);7,573(1,6);7,567(0,6);7,564(0,9);7,560(0,5);7,548(0,8);7,544(1,1);7,541(0,6);7,415(1,0);7,396(1,6);7,377(0,7);7,261(28,2);7,064(1,4);7,062(1,4);7,055(1,4);7,053(1,4);6,575(1,5);6,570(1,6);6,566(1,5);6,561 (1,4);4,468(6,0);3,632(16,0);0,000(10,7)

### Beispiel No. A10-63: ¹H-NMR (400 MHz, CDCl₃ δ, ppm)

7,593(1,8);7,588(0,7);7,581(1,5);7,579(1,6);7,576(2,3);7,574(1,9);7,571(2,9);7,568(0,5);7,500(2,6);7,495(0,7);7,484(0,6);7,479(1,6);7,262(17,9);7,058(1,4);7,056(1,4);7,050(1,5);7,048(1,4);6,576(1,5);6,572(1,4);6,568(1,4);6,563(1,4);5,300(6,2);4,462(5,3);3,602(16,0);1,599(1,3);0,000(8,4)

### Beispiel No. A10-99: ¹H-NMR (400 MHz, CDCl₃ δ, ppm)

7,969(1,6);7,949(1,7);7,582(1,4);7,580(1,5);7,578(1,5);7,576(1,5);7,262(22,1);7,187(1,9);7,167(1,8);7,051(1,3);7,049(1,3);7,042(1,4);7,040(1,3);6,576(1,5);6,571(1,5);6,567(1,5);6,562(1,4);4,522(5,4);3,664(16,0);1,591(0,5);0,000(9,5)

### Beispiel No. A10-103: ¹H-NMR (400 MHz, CDCl₃ δ, ppm)

7,569(1,4);7,567(1,5);7,564(1,5);7,562(1,5);7,262(17,3);7,224(1,9);7,219(0,6);7,208(0,6);7,202(2,2);7,040(1,4);7,038(1,4);7,032(1,5);7,030(1,5);6,818(2,4);6,813(0,7);6,801(0,7);6,796(2,1);6,566(1,5);6,562(1,5);6,557(1,4);6,553(1,4);5,299(2,0);4,347(4,9);3,775(13,8);3,523(16,0);1,616(0,9);0,000(8,7)

### Beispiel No. A10-159: ¹H-NMR (400 MHz, CDCl₃ δ, ppm)

7,568(1,5);7,566(1,6);7,563(1,6);7,561(1,6);7,261(48,8);7,249(1,2);7,246(0,5);7,241(1,3);7,228(1,2);7,041(1,5);7,039(1,5);7,033(1,6);7,031(1,5);6,979(1,4);6,957(2,4);6,936(1,2);6,565(1,6);6,560(1,5);6,556(1,5);6,552(1,4);4,785(0,9);4,767(0,9);3,450(16,0);1,792(5,7);1,774(5,7);1,566(4,7);0,008(0,7);0,000(21,8);-0,009(0,6)

### Beispiel No. A10-603: ¹H-NMR (400 MHz, CDCl₃ δ, ppm)

8,006(0,7);8,003(0,7);7,987(0,8);7,983(0,8);7,557(1,4);7,555(1,6);7,553(1,6);7,551(1,5);7,464(0,6);7,449(0,9);7,446(1,0);7,415(0,5);7,412(0,6);7,397(1,0);7,393(1,0);7,378(0,6);7,374(0,5);7,356(0,7);7,352(0,7);7,337(0,9);7,333(0,9);7,260(45,4);7,032(1,0);7,030(1,0);7,023(1,0);7,021(1,0);6,557(1,5);6,553(1,4);6,549(1,4);6,544(1,4);4,805(5,6);3,935( 16,0);3,521 (15,0);1,567(0,6);0,008(0,5);0,000(18,0)

### Beispiel No. A10-726: ¹H-NMR (400 MHz, CDCl₃ δ, ppm)

9,875(0,9);8,286(1,4);8,265(1,4);7,602(2,6);7,600(2,9);7,597(2,6);7,596(2,1);7,353(1,6);7,350(1,4);7,333(1,8);7,330(1,6);7,261(43,9);7,243(1,9);7,222(1,1);7,081 (2,1);7,080(1, 9);7,073(2,3);7,050(1,0);7,047(0,9);7,031(1,6);7,012(0,8);7,008(0,7);6,589(1,9);6,585(2,2);6,581(2,1);6,576(1,6);5,299(0,6);4,132(9,6);3,779(16,0);1,578(6,1);0,000(16,1)

### Beispiel No. A10-728: ¹H-NMR (400 MHz, CDCl₃ δ, ppm)

10,568(1,7);7,760(3,6);7,624(4,3);7,425(2,0);7,405(2,3);7,261(37,0);7,259(36,1);7,219(1,5);7,200(2,7);7,179(1,4);7,104(3,0);7,096(3,0);7,057(2,5);7,037(1,8);6,610(2,9);3,976(10,1);3,793(16,0);3,791(15,7);1,633(5,8);1,263(0,6);0,000(13,0);-0,002(12,7)

### Beispiel No. A10-737: ¹H-NMR (400 MHz, CDCI₃ δ, ppm)

10,359(1,2);8,182(1,1);8,166(1,1);8,145(0,6);7,611(3,2);7,261(73,2);7,120(2,3);7,111(2,4);6,858(1,6);6,837(2,4);6,819(1,1);6,811(1,1);6,602(2,1);6,597(2,4);6,593(2,2);6,589( 1,7);4,044(9,8);3,792(16,0);1,611(4,8);0,000(27,4)

### Beispiel No. A10-742: ¹H-NMR (400 MHz, CDCI₃ δ, ppm)

9,921(0,9);7,618(2,5);7,617(2,8);7,614(2,6);7,520(0,5);7,261(103,8);7,186(0,6);7,170(1,1);7,149(0,9);7,101(2,1),7,099(2,0),7,093(2,3),7,091(2,0);6,997(0,6);6,933(1,8);6,913( 2,8);6,893(1,4);6,603(1,9);6,599(2,1);6,594(2,1);6,590(1,7);4,066(8,9);3,822(16,0);1,60 5(5,3);0,000(36,3)

### Beispiel No. A10-748: ¹H-NMR (400 MHz, CDCI₃ δ, ppm)

10,702(1,2);8,008(2,6);7,701(1,4);7,681(1,5);7,628(3,3);7,625(2,9);7,419(0,8);7,398(1,9);7,378(1,2);7,340(2,0);7,321(1,2);7,261(59,7);7,107(2,4);7,098(2,5);6,619(2,1);6,614( 2,3);6,610(2,3);6,606(1,7);3,989(9,3);3,799(16,0);1,569(13,7);0,000(21,1)

### Beispiel No. A10-761: ¹H-NMR (400 MHz, CDCI₃ δ, ppm)

11,080(1,5);7,752(3,5);7,730(4,5);7,636(3,2);7,633(3,0);7,589(4,5);7,568(3,4);7,261(45,4);7,111(2,3);7,109(2,2);7,102(2,5);6,627(2,0);6,623(2,4);6,619(2,3);6,614(1,8);3,976( 9,5);3,803(16,0);1,576(10,0);0,000(16,7)

### Beispiel No. A10-791: ¹H-NMR (400 MHz, CDCI₃ δ, ppm)

7,573(1,6);7,571(1,7);7,568(1,9);7,566(1,9);7,557(0,6);7,385(0,5);7,378(4,0);7,373(1,2);7,370(2,4);7,368(1,2);7,261(31,9);7,128(0,7);7,052(1,5);7,050(1,5);7,044(1,5);7,042(1, 5);6,990(1,5);6,852(0,8);6,571(1,5);6,566(1,6);6,562(1,5);6,558(1,5);4,549(3,9);3,551(1 6,0);1,578(4,6);0,000(13,2)

### Beispiel No. A10-792: ¹H-NMR (400 MHz, CDCI₃ δ, ppm)

7,570(1,5);7,568(1,6);7,566(1,6);7,564(1,6);7,449(1,4);7,432(0,8);7,409(0,7);7,393(0,8);7,373(0,6);7,262(21,8);7,046(1,5);7,044(1,5);7,037(1,6);7,035(1,6);6,731(0,7);6,590(1,4);6,568(1,6);6,563(1,5);6,559(1,5);6,554(1,5);6,449(0,7);4,435(5,0);3,535(16,0);1,601(2,3);0,000(9,4)

### Beispiel No. A10-793: ¹H-NMR (400 MHz, CDCI₃ δ, ppm)

7,573(1,5);7,571(1,6);7,568(1,6);7,566(1,5);7,428(14,7);7,261(24,5);7,045(1,5);7,043(1,5);7,037(1,6);7,035(1,5);6,751(1,0);6,610(2,0);6,570(1,5);6,565(1,5);6,561(1,5);6,556(1,4);6,468(0,9);5,299(1,7);4,440(4,3);3,553(16,0);1,593(3,2);0,000(10,2)

### Beispiel No. A11-1: ¹H-NMR (400 MHz, d₆-DMSO δ, ppm)

8,777(1,9);8,762(1,9);8,542(0,3);8,524(0,3);7,730(2,7);7,726(1,6);7,718(1,7);7,714(2,6);7,511(0,5);7,509(0,5);7,501(1,2);7,498(1,2);7,489(0,3);7,481(1,2);7,478(1,2);7,447(0,9);7,443(0,9);7,429(1,1);7,424(1,1);7,359(0,5);7,355(0,6);7,341(1,2);7,336(1,0);7,321(0,9);7,316(0,8);7,303(1,0);7,299(1,1);7,285(1,2);7,281(1,2);7,266(0,4);7,263(0,4);6,039(0,6);4,585(0,8);4,473(6,4);3,903(16,0);3,745(1,6);3,548(13,4);3,389(0,7);3,329(36,7);3,168(0,6);2,671(0,4);2,524(1,8);2,511(28,8);2,506(55,2);2,502(71,4);2,497(51,8);2,493(25,1);2,333(0,3);2,329(0,4);0,008(0,6);0,000(17,0);-0,009(0,6)

### Beispiel No. A11-2: ¹H-NMR (400 MHz, d₆-DMSO δ, ppm)

8,774(2,8);8,770(1,7);8,763(1,7);8,759(2,9);7,731(3,7);7,727(2,1);7,720(2,1);7,716(3,5);7,447(1,5);7,444(1,8);7,359(0,4);7,353(0,5);7,346(5,6);7,343(6,6);7,340(2,3);7,332(0,4);7,329(0,4);4,425(7,0);3,903(1,2);3,565(16,0);3,329(81,0);2,524(0,9);2,520(1,5);2,511(17,9);2,507(35,6);2,502(47,0);2,497(34,2);2,493(16,3);0,008(0,4);0,000(11,8);-0,009(0,4)

### Beispiel No. A11-3: ¹H-NMR (400 MHz, d₆-DMSO δ, ppm)

8,773(2,9);8,769(1,8);8,762(1,8);8,758(3,0);7,735(3,7);7,731(2,2);7,724(2,1);7,720(3,6);7,422(1,2);7,416(0,6);7,407(0,9);7,401(5,4);7,390(1,4);7,386(5,8);7,380(1,0);7,371(0,6 );7,365(1,3);4,424(7,2);3,903(1,2);3,584(16,0);3,373(0,7);3,341(190,6);3,300(0,4);2,672(0,3);2,525(1,1);2,520(1,7);2,512(19,5);2,508(38,6);2,503(50,8);2,498(36,9);2,494(17, 6);0,000(3,4)

### Beispiel No. A11-5: ¹H-NMR (400 MHz, d₆-DMSO δ, ppm)

9,198(0,4);9,180(0,4);8,779(2,9);8,775(1,8);8,768(1,8);8,764(3,0);8,533(0,4);8,515(0,4);7,836(0,3);7,740(3,6);7,736(2,1);7,729(2,1);7,725(3,5);7,676(0,4);7,671(0,5);7,663(2,6);7,657(2,6);7,599(0,4);7,594(0,4);7,584(0,5);7,574(0,3);7,554(0,4);7,500(1,9);7,480(2,9);7,406(1,8);7,401(1,8);7,386(1,2);7,380(1,2);6,021(0,7);4,563(0,9);4,459(7,1);3,903(14,2);3,765(1,9);3,608(16,0);3,326(88,5);2,676(0,4);2,671(0,5);2,667(0,3);2,524(1,4);2,511(29,5);2,507(58,7);2,502(77,3);2,497(56,6);2,493(27,6);2,333(0,4);2,329(0,5);2,324(0,3);0,008(0,5);0,000(14,4);-0,009(0,4)

### Beispiel No. A11-6: ¹H-NMR (400 MHz, d₆-DMSO δ, ppm)

8,782(2,7);8,778(1,7);8,771(1,7);8,767(2,7);7,737(3,5);7,733(2,0);7,726(2,0);7,722(3,3);7,532(3,3);7,525(2,5);7,512(3,0);7,423(1,7);7,417(1,5);7,402(1,2);7,395(1,1);4,443(6,9);3,903(7,4);3,588(16,0);3,327(70,7);3,306(0,4);2,671(0,4);2,524(1,3);2,511(25,5);2,507(49,5);2,502(64,3);2,497(46,6);2,493(22,2);2,329(0,4);0,008(0,3);0,000(9,5)

### Beispiel No. A11-7: ¹H-NMR (400 MHz, d₆-DMSO δ, ppm)

8,797(1,6);8,784(1,7);7,758(2,7);7,747(1,9);7,743(2,6);7,517(3,4);7,497(5,6);7,399(2,0);7,380(1,7);7,377(1,4);7,359(1,1);4,570(0,4);4,508(8,2);3,903(9,6);3,633(16,0);3,625(1,1);3,340(21,8);3,169(2,6);2,676(0,3);2,671(0,4);2,542(0,4);2,525(1,6);2,511(29,7);2,507(57,0);2,502(74,1);2,498(55,0);2,493(27,5);2,334(0,4);2,329(0,5);2,325(0,4);2,202(0,6 );0,008(0,4);0,000(10,2)

### Beispiel No. A11-8: ¹H-NMR (400 MHz, d₆-DMSO δ, ppm)

8,804(2,5);8,800(1,6);8,793(1,7);8,789(2,6);7,800(2,9);7,796(1,8);7,789(1,8);7,785(2,8);7,671(2,1);7,666(2,2);7,600(2,3);7,579(2,8);7,415(1,3);7,410(1,3);7,395(1,1);7,389(1,0);4,437(6,2);3,903(7,0);3,618(16,0);3,598(1,3);3,544(8,6);3,438(0,4);3,169(0,9);2,671(0,4);2,525(1,3);2,520(2,0);2,511(24,5);2,507(48,6);2,502(64,2);2,498(47,0);2,493(22,6); 2,329(0,4);0,000(8,8)

### Beispiel No. A11-59: ¹H-NMR (400 MHz, d₆-DMSO δ, ppm)

8,789(2,9);8,785(1,9);8,778(1,9);8,774(3,1);7,744(3,6);7,740(2,2);7,733(2,1);7,729(3,6);7,442(0,4);7,427(0,4);7,421(1,2);7,407(1,1);7,401(1,0);7,387(1,1);7,373(1,9);7,355(0,7);7,352(0,6);7,274(0,7);7,270(0,7);7,250(1,2);7,246(0,7);7,230(0,5);7,226(0,5);4,416(4,2);4,412(4,3);3,903(1,3);3,631(16,0);3,374(0,3);3,336(137,5);2,672(0,3);2,525(1,0);2,512(19,3);2,507(38,5);2,503(51,0);2,498(37,7);2,493(18,5);0,000(7,2)

### Beispiel No. A11-76: ¹H-NMR (400 MHz, d₆-DMSO δ, ppm)

8,807(2,5);8,803(1,6);8,795(1,6);8,791(2,6);7,776(3,0);7,772(1,8);7,764(1,8);7,760(2,9);7,100(1,0);7,081(1,6);7,016(1,0);6,997(0,7);6,953(1,6);4,354(6,7);3,902(6,4);3,539(10,0);3,476(16,0);3,169(1,0);2,671(0,3);2,542(0,4);2,525(1,0);2,520(1,6);2,511(20,0);2,507(40,0);2,502(52,9);2,498(38,6);2,493(18,5);2,330(8,1);2,168(7,6);0,000(6,1)

### Beispiel No. A11-82: ¹H-NMR (400 MHz, d₆-DMSO δ, ppm)

8,771(3,1);8,767(1,9);8,760(1,9);8,756(3,2);7,720(4,3);7,716(4,3);7,709(3,2);7,705(3,9);7,697(1,1);7,642(0,6);7,622(1,1);7,579(0,8);7,560(1,1);7,540(0,4);4,513(6,2);3,903(1,7);3,593(0,6);3,556(16,0);3,375(0,5);3,335(159,9);2,672(0,4);2,525(1,2);2,520(1,9);2,512(23,6);2,507(47,0);2,502(62,1);2,498(45,2);2,493(21,6);2,329(0,4);0,000(7,8)

### Beispiel No. A11-83: ¹H-NMR (400 MHz, d₆-DMSO δ, ppm)

8,771(3,0);8,767(1,8);8,760(1,9);8,756(3,1);7,730(3,7);7,726(2,1);7,719(2,1);7,714(3,6);7,702(1,7);7,681(2,9);7,631(2,7);7,610(1,5);4,525(5,4);3,903(1,3);3,593(16,0);3,357(0,9);3,335(153,6);2,672(0,3);2,525(1,0);2,520(1,6);2,512(20,7);2,507(41,4);2,503(54,8);2,498(40,0);2,493(19,3);2,329(0,4);0,000(7,6)

### Beispiel No. A11-143: ¹H-NMR (400 MHz, d₆-DMSO δ, ppm)

8,768(0,9);8,764(0,6);8,757(0,6);8,753(0,9);7,720(1,3);7,715(0,8);7,708(0,8);7,704(1,3);7,343(0,7);7,327(0,4);7,322(1,6);7,285(1,5);7,280(0,4);7,264(0,7);4,383(2,3);3,902(0,6);3,508(5,8);3,339(73,2);2,525(0,4);2,520(0,7);2,512(8,0);2,507(16,0);2,503(21,1);2,498(15,3);2,493(7,3);1,246(16,0);1,197(0,3);0,000(1,5)

### Beispiel No. A11-726: ¹H-NMR (400 MHz, d₆-DMSO δ, ppm)

9,946(1,2);8,781 (4,4);8,777(2,5);8,770(2,6);8,766(4,6);7,775(0,9);7,771(0,9);7,759(4,8);7,755(3,4);7,748(2,8);7,743(4,5);7,504(1,1);7,501(1,2);7,484(1,4);7,481(1,3);7,353(0,7);7,349(0,7);7,334(1,1);7,331(1,1);7,314(0,9);7,310(0,8);7,217(0,7);7,213(0,7);7,197(0,9);7,194(0,9);5,755(8,0);4,225(4,1);3,727(16,0);3,665(0,9);3,318(183,8);2,670(0,6);2,524(1,8);2,519(2,7);2,510(34,7);2,506(74,2);2,501(102,6);2,496(71,5);2,492(31,6);2,328 (0,6);0,008(0,7);0,000(22,8);-0,009(0,7)

### Beispiel No. A11-728: ¹H-NMR (400 MHz, d₆-DMSO δ, ppm)

10,530(0,5);8,772(3,9);8,768(2,2);8,761(2,3);8,757(4,0);7,781(1,0);7,776(1,9);7,771(1,1);7,745(4,0);7,741(2,3);7,734(2,3);7,730(4,0);7,434(0,5);7,431(0,7);7,429(0,6);7,426(0,6);7,413(1,0);7,410(1,1);7,408(1,1);7,405(1,0);7,370(1,3);7,350(2,1);7,330(1,0);7,146(0,8);7,143(1,0);7,141(0,9);7,138(0,9);7,126(0,7);7,124(0,8);7,121(0,8);7,119(0,7);4,187(6,4);3,715(16,0);3,349(0,5);3,318(144,4);3,268(0,7);2,670(0,6);2,524(1,9);2,519(2,8);2,510(33,4);2,506(71,1);2,501(98,5);2,496(68,7);2,492(30,3);2,328(0,6);0,008(0,8);0,000(26,1);-0,009(0,8)

### Beispiel No. A11-737: ¹H-NMR (400 MHz, d₆-DMSO δ, ppm)

8,778(4,1);8,774(2,4);8,767(2,4);8,763(4,4);7,834(0,6);7,818(0,6);7,756(4,3);7,752(2,4);7,745(2,4);7,741(4,2);7,313(0,6);7,057(0,5);5,755(0,5);4,192(4,7);3,719(16,0);3,319(56,6);2,670(0,6);2,524(1,6);2,519(2,4);2,510(31,8);2,506(68,5);2,501(95,6);2,496(67,1);2,492(29,9);2,328(0,6);2,085(0,7);0,008(0,7);0,000(24,6);-0,009(0,7)

### Beispiel No. A11-742: ¹H-NMR (400 MHz, d₆-DMSO δ, ppm)

8,781(4,3);8,777(2,4);8,770(2,6);8,766(4,4);7,759(4,4);7,754(2,6);7,748(2,5);7,743(4,4);7,337(0,6);7,165(1,4);7,145(2,1);7,124(1,0);4,197(3,7);3,722(16,0);3,318(112,5);2,670(0,6);2,524(1,9);2,519(3,0);2,510(35,9);2,506(76,1);2,501(104,6);2,496(73,1);2,492(32,5);2,328(0,6);0,008(0,8);0,000(26,9);-0,009(0,8)

### Beispiel No. A11-748: ¹H-NMR (400 MHz, d₆-DMSO δ, ppm)

8,770(3,9);8,766(2,2);8,759(2,3);8,755(4,1);8,057(1,3);7,759(0,7);7,742(4,7);7,738(3,0);7,731(2,4);7,727(4,0);7,587(0,5);7,568(1,0);7,548(0,6);7,433(0,8);7,414(0,6);4,210(6,0);3,716(16,0);3,319(83,5);2,670(0,6);2,524(2,1);2,519(3,2);2,510(36,1);2,506(76,2);2,5 01(104,8);2,497(73,2);2,492(32,3);2,328(0,6);2,086(0,9);0,008(0,8);0,000(24,8);-0,009(0,7)

### Beispiel No. A11-761: ¹H-NMR (400 MHz, d₆-DMSO δ, ppm)

10,780(1,0);8,771(3,9);8,767(2,3);8,760(2,3);8,756(4,1);7,804(1,6);7,803(1,1);7,799(0,7);7,787(1,0);7,782(5,2);7,778(1,1);7,766(1,2);7,762(5,0);7,756(1,0);7,742(4,9);7,739(2,5);7,738(2,7);7,731(2,3);7,727(4,0);4,231(6,3);3,712(16,0);3,352(0,5);3,319(122,1);3,268(0,5);2,524(1,3);2,519(1,9);2,510(23,8);2,506(50,7);2,501(70,2);2,497(49,1);2,492(2 1,7);2,073(0,6);0,000(11,0)

### Beispiel No. A14-1: ¹H-NMR (400 MHz, d₆-DMSO δ, ppm)

7,470(0,4);7,468(0,4);7,449(0,6);7,321(0,4);7,315(0,4);7,237(0,6);7,234(0,6);7,222(0,8);7,217(1,0);4,293(3,2);3,903(1,9);3,715(0,5);3,366(6,4);3,330(28,1);2,520(0,5);2,511(6,5);2,507(12,8);2,502(16,8);2,497(12,2);2,493(5,9);1,363(1,2);1,322(16,0);0,000(1,6)

### Beispiel No. A14-2: ¹H-NMR (400 MHz, d₆-DMSO δ, ppm)

7,326(1,0);7,323(0,9);7,318(0,6);7,313(1,2);7,311(0,8);7,291(0,4);7,287(0,7);7,285(0,5);7,214(0,4);4,258(2,7);3,903(2,0);3,422(8,2);2,524(0,3);2,520(0,5);2,511(6,2);2,506(12, 2);2,502(15,9);2,497(11,4);2,493(5,4);1,335(16,0);0,000(3,9)

### Beispiel No. A14-3: ¹H-NMR (400 MHz, d₆-DMSO δ, ppm)

7,353(1,0);7,348(0,4);7,337(0,5);7,331(1,7);7,267(1,5);7,262(0,4);7,250(0,3);7,245(0,9);4,254(2,7);3,902(2,3);3,414(6,4);3,353(13,2);2,525(0,4);2,520(0,6);2,511(7,1);2,507(1 3,9);2,502(18,3);2,498(13,3);2,493(6,4);1,328(16,0);0,000(2,1)

### Beispiel No. A14-5: ¹H-NMR (400 MHz, d₆-DMSO δ, ppm)

7,630(0,9);7,625(0,9);7,357(0,4);7,351(0,4);7,336(0,7);7,331(0,7);7,280(1,1);7,259(0,7);4,288(2,8);3,902(0,6);3,443(6,5);3,355(85,8);2,526(0,4);2,513(7,9);2,508(15,6);2,504( 20,6);2,499(15,0);2,495(7,2);1,330(16,0);0,000(0,9)

### Beispiel No. A14-6: ¹H-NMR (400 MHz, d₆-DMSO δ, ppm)

7,503(0,8);7,482(1,2);7,400(0,6);7,394(0,7);7,379(0,4);7,372(0,5);7,290(1,0);7,284(0,9);4,264(3,0);3,903(2,3);3,714(0,4);3,436(6,3);3,330(23,8);2,525(0,4);2,511(7,7);2,507(1 5,0);2,502(19,7);2,498(14,4);2,493(7,1);1,359(1,1);1,335(16,0);0,000(2,5)

### Beispiel No. A14-7: ¹H-NMR (400 MHz, d₆-DMSO δ, ppm)

7,481(1,0);7,480(1,0);7,460(1,8);7,373(0,8);7,355(0,6);7,351(0,5);7,333(0,4);4,327(2,9);3,902(0,8);3,675(0,5);3,488(6,4);3,356(89,5);2,526(0,5);2,521(0,7);2,512(8,6);2,508(1 7,0);2,503(22,5);2,499(16,4);2,494(7,8);1,354(16,0);1,342(0,4);1,247(1,3);0,000(0,4).

### Beispiel No. A14-8: ¹H-NMR (400 MHz, d₆-DMSO δ, ppm)

7,567(0,9);7,546(1,1);7,492(0,8);7,486(0,9);7,283(0,5);7,278(0,5);7,262(0,5);7,257(0,4);4,265(2,7);3,902(2,3);3,690(0,4);3,468(6,3);3,364(16,9);2,525(0,4);2,520(0,7);2,511(8, 9);2,507(17,5);2,502(23,1);2,498(16,9);2,493(8,1);1,351(1,1);1,341(1,3);1,334(16,0);0,000(2,2)

### Beispiel No. A14-59: ¹H-NMR (400 MHz, d₆-DMSO δ, ppm)

7,393(0,5);7,378(0,5);7,373(0,4);7,358(0,4);7,336(0,6);7,201(0,5);4,235(1,6);4,231(1,6);3,903(0,9);3,666(0,4);3,493(6,3);3,386(5,0);2,524(0,4);2,519(0,6);2,511(7,7);2,506(15,4);2,502(20,2);2,497(14,8);2,493(7,2);1,347(16,0);1,273(1,0);0,000(2,5)

### Beispiel No. A14-76: ¹H-NMR (400 MHz, d₆-DMSO δ, ppm)

7,064(0,6);7,044(0,7);6,991(0,5);6,775(0,7);5,262(0,9);4,155(2,8);3,902(2,7);3,695(2,3);3,329(50,4);3,288(6,3);2,524(0,5);2,511(9,5);2,506(18,7);2,502(24,6);2,497(18,1);2,49 3(8,8);2,322(1,3);2,254(3,4);2,200(1,2);2,155(3,2);1,347(5,8);1,313(16,0);1,280(0,4);0, 000(2,4)

### Beispiel No. A14-82: ¹H-NMR (400 MHz, d₆-DMSO δ, ppm)

7,607(0,4);7,583(0,8);7,560(0,5);7,544(0,5);7,525(0,4);4,354(2,6);3,903(1,1);3,429(6,4);3,393(0,5);3,360(17,4);2,525(0,4);2,520(0,6);2,511(7,3);2,507(14,6);2,502(19,3);2,498 (14,1);2,493(6,8);1,342(0,5);1,317(16,0);0,000(3,2)

### Beispiel No. A14-83: ¹H-NMR (400 MHz, d₆-DMSO δ, ppm)

7,658(0,8);7,638(0,9);7,472(0,9);7,452(0,7);4,351(2,2);3,903(1,1);3,434(0,4);3,394(8,8);3,169(1,9);2,525(0,4);2,511(7,8);2,507(15,4);2,502(20,2);2,498(14,7);2,493(7,1);1,316 (16,0);0,000(5,3)

### Beispiel No. A14-136: ¹H-NMR (400 MHz, d₆-DMSO δ, ppm)

7,288(0,7);7,284(0,4);7,278(0,5);7,275(0,6);7,271(1,5);7,266(0,7);7,228(0,9);7,222(0,7);7,208(0,5);7,204(0,4);4,249(2,9);3,902(2,4);3,690(0,8);3,663(0,4);3,611(0,6);3,455(2,5);3,364(6,1);2,524(0,4);2,519(0,6);2,511(7,3);2,506(14,6);2,502(19,3);2,497(14,0);2,493(6,7);1,351(2,1);1,341(1,6);1,328(16,0);1,321(1,6);0,000(3,3)

### Beispiel No. A14-681: ¹H-NMR (400 MHz, d₆-DMSO δ, ppm)

8,073(0,7);8,055(0,7);7,263(18,2);7,239(0,6);7,080(0,5);7,052(0,6);4,716(1,6);4,708(1,7);3,707(5,9);3,412(1,3);3,388(1,3);2,520(3,8);1,580(0,6);1,449(16,0);1,426(0,7);0,000( 7,9);-0,008(0,6)

### Beispiel No. A15-1: ¹H-NMR (400 MHz, d₆-DMSO δ, ppm)

7,498(2,0);7,495(2,1);7,478(2,6);7,475(2,7);7,412(1,7);7,407(1,9);7,393(2,3);7,389(2,7);7,367(1,2);7,362(1,2);7,348(2,6);7,343(2,0);7,328(1,8);7,323(1,4);7,301(2,1);7,297(2,1);7,282(2,6);7,279(2,5);7,264(0,9);7,260(0,9);4,487(15,3);3,902(9,6);3,519(15,9);3,518(16,0);3,330(174,7);3,295(0,3);3,175(0,7);3,162(0,7);2,676(0,4);2,671(0,5);2,667(0,4);2,525(1,7);2,520(2,7);2,511(32,1);2,507(63,5);2,502(83,5);2,498(61,1);2,493(29,5);2,334 (0,4);2,329(0,5);2,324(0,4);0,008(0,4);0,000(12,1);-0,009(0,4)

### Beispiel No. A15-2: ¹H-NMR (400 MHz, d₆-DMSO δ, ppm)

7,422(3,6);7,357(1,1);7,354(2,1);7,349(1,5);7,342(7,6);7,339(8,6);7,334(3,1);7,330(3,0);7,321(1,5);7,316(0,5);7,306(0,3);4,444(14,6);3,903(4,4);3,543(15,7);3,542(16,0);3,376(0,3);3,331(229,9);2,676(0,4);2,671(0,5);2,667(0,4);2,525(1,6);2,520(2,7);2,511(32,5);2,507(64,3);2,502(84,6);2,498(61,7);2,493(29,8);2,334(0,4);2,329(0,5);2,325(0,4);0,000( 9,3)

### Beispiel No. A15-3: ¹H-NMR (400 MHz, d₆-DMSO δ, ppm)

7,379(16,0);4,444(7,0);3,903(1,5);3,551(6,2);3,549(6,1);3,327(53,5);2,525(0,6);2,520(1,0);2,511(12,4);2,507(24,6);2,502(32,3);2,497(23,5);2,493(11,3);0,008(0,4);0,000(12,7);-0,009(0,4)

### Beispiel No. A15-5: ¹H-NMR (400 MHz, d₆-DMSO δ, ppm)

7,666(4,4);7,661(4,5);7,474(3,1);7,453(5,7);7,408(3,7);7,402(3,4);7,387(2,0);7,382(1,9);4,477(14,5);3,903(12,1);3,581(16,0);3,580(16,0);3,328(183,6);3,175(0,7);3,162(0,7);2,676(0,4);2,671(0,6);2,667(0,4);2,542(0,4);2,525(1,9);2,520(3,1);2,511(35,4);2,507(69,7);2,502(91,5);2,498(67,0);2,493(32,6);2,334(0,4);2,329(0,6);2,324(0,4);0,008(0,5);0,00 0(14,6);-0,009(0,5)

### Beispiel No. A15-7: ¹H-NMR (400 MHz, d₆-DMSO δ, ppm)

7,518(5,0);7,516(5,1);7,497(9,3);7,405(3,9);7,387(3,1);7,384(2,8);7,365(2,1);4,517(16,0);3,903(2,8);3,603(16,0);3,601(16,0);3,387(0,6);3,379(0,7);3,337(406,4);3,307(1,1);3,291(0,4);3,282(0,4);3,274(0,4);3,175(0,4);3,162(0,3);2,676(0,5);2,672(0,7);2,667(0,5);2,525(2,3);2,520(3,6);2,512(43,6);2,507(86,8);2,503(114,4);2,498(83,5);2,493(40,3);2,334(0,5);2,329(0,7);2,325(0,5);0,008(0,9);0,000(28,5);-0,009(0,9)

### Beispiel No. A15-15: ¹H-NMR (400 MHz, CDCI₃ δ, ppm)

7,425(0,8);7,409(0,9);7,404(1,4);7,388(1,3);7,384(0,8);7,382(0,6);7,366(0,5);7,261(32,3);6,851(0,8);6,845(1,1);6,829(0,9);6,822(3,3);6,815(0,6);6,801(3,5);6,798(1,0);6,794(0,9);6,782(0,8);6,780(0,7);6,773(0,5);4,490(6,8);4,488(6,9);3,538(15,7);3,536(16,0);1,570(1,5);0,070(1,0);0,000(12,9)

### Beispiel No. A15-17: ¹H-NMR (400 MHz, CDCI₃ δ, ppm)

7,518(9,7);7,318(1,4);7,309(2,4);7,302(2,0);7,296(1,8);7,291(2,1);7,288(2,0);7,280(5,1);7,259(1781,7);7,251(4,2);7,250(4,0);7,248(2,5);7,247(1,7);7,244(2,0);7,231(1,6);7,209(2,0);7,169(1,1);6,995(9,1);6,918(2,9);6,899(3,3);6,879(2,4);4,482(8,1);3,582(15,7);3,580(16,0);2,004(1,0);1,530(456,7);0,146(2,1);0,008(19,7);0,000(709,3);-0,009(19,6);-0,150(1,8)

### Beispiel No. A15-21: ¹H-NMR (400 MHz, d₆-DMSO δ, ppm)

8,514(1,4);8,512(1,6);8,510(1,6);8,507(1,5);8,502(1,4);8,499(1,6);8,497(1,6);8,495(1,4);7,816(1,1);7,811(1,1);7,797(2,2);7,792(2,2);7,778(1,3);7,773(1,3);7,475(2,5);7,455(2,2);7,345(1,2);7,343(1,2);7,333(1,2);7,330(1,3);7,327(1,2);7,324(1,1);7,314(1,1);7,312(1,1);4,556(15,1);3,584(15,6);3,582(16,0);3,491(1,4);2,523(1,1);2,519(1,7);2,510(20,3);2,505(43,2);2,501(60,1);2,496(42,5);2,492(19,3);0,008(1,0);0,000(30,7);-0,009(0,9)

### Beispiel No. A15-36: ¹H-NMR (400 MHz, CDCI₃ δ, ppm)

8,695(2,4);8,693(2,4);7,962(2,6);7,958(2,6);7,519(0,7);7,260(134,4);7,252(0,5);6,996(0,7);4,865(9,6);3,696(15,8);3,694(16,0);1,542(22,7);1,256(0,6);0,008(1,5);0,000(53,4);-0,009(1,5)

### Beispiel No. A15-59: ¹H-NMR (400 MHz, d₆-DMSO δ, ppm)

7,446(0,9);7,431(0,9);7,426(2,4);7,411(2,4);7,405(2,0);7,391(2,2);7,373(3,3);7,354(1,3);7,265(1,4);7,262(1,4);7,244(1,3);7,241(2,4);7,237(1,4);7,221(1,1);7,217(1,0);4,427(8,7);4,423(8,6);3,903(3,6);3,601(16,0);3,600(15,8);3,322(50,9);3,175(0,3);2,675(0,4);2,671(0,5);2,666(0,4);2,524(1,7);2,519(2,7);2,511(30,6);2,506(60,3);2,502(78,9);2,497(57,0);2,493(27,2);2,333(0,4);2,329(0,5);2,324(0,4);0,008(1,2);0,000(33,7);-0,009(1,1

### Beispiel No. A15-61: ¹H-NMR (400 MHz, CDCl₃ δ, ppm)

7,682(1,7);7,679(1,8);7,663(1,8);7,660(1,9);7,623(1,4);7,621(1,5);7,603(2,3);7,602(2,4);7,539(1,4);7,536(1,4);7,520(2,5);7,517(2,4);7,501(1,3);7,497(1,2);7,421(1,6);7,418(1,6);7,402(2,5);7,399(2,5);7,383(1,1);7,380(1,0);7,263(26,9);4,765(1,1);4,642(14,2);3,572(15,6);3,570(16,0);1,582(3,4);0,000(9,9)

### Beispiel No. A15-62: ¹H-NMR (400 MHz, CDCI₃ δ, ppm)

7,727(1,4);7,725(1,5);7,722(2,7);7,718(1,9);7,717(1,7);7,672(1,0);7,671(1,0);7,669(1,4);7,668(1,3);7,666(0,9);7,665(1,0);7,653(1,2);7,651(1,1);7,650(1,7);7,648(1,6);7,647(1,1);7,645(1,2);7,594(1,1);7,591(1,6);7,587(1,1);7,575(1,5);7,572(2,1);7,571(2,1);7,568(1,3);7,445(1,9);7,444(1,9);7,425(3,0);7,424(3,0);7,406(1,3);7,405(1,2);7,262(38,3);4,590(0,5);4,541(11,7);3,563(15,6);3,562(16,0);2,100(0,7);1,568(0,8);0,002(0,7);0,000(14,5);-0,003(0,8)

### Beispiel No. A15-63: ¹H-NMR (400 MHz, CDCl₃ δ, ppm)

7,623(0,6);7,619(3,9);7,614(1,7);7,602(2,0);7,597(6,9);7,594(1,4);7,535(6,1);7,530(1,9);7,519(2,4);7,514(3,7);7,271(0,6);7,270(0,7);7,269(0,7);7,267(1,0);7,260(188,4);6,996(1,0);4,547(12,3);3,546(15,3);3,545(16,0);1,540(51,8);0,008(1,9);0,000(64,7);-0,009(2,1)

### Beispiel No. A15-82: ¹H-NMR (400 MHz, d₆-DMSO δ, ppm)

7,702(1,6);7,683(2,0);7,653(4,5);7,632(2,1);7,581(1,8);7,562(2,2);7,543(0,8);4,540(0,6);4,525(12,9);3,903(3,5);3,549(0,7);3,516(16,0);3,324(70,6);2,676(0,4);2,671(0,5);2,667(0,4);2,524(1,8);2,511(33,0);2,507(62,8);2,502(80,8);2,498(59,0);2,493(29,0);2,333(0,4);2,329(0,5);2,324(0,4);0,008(0,9);0,000(21,1);-0,009(0,7)

### Beispiel No. A15-83: ¹H-NMR (400 MHz, d₆-DMSO δ, ppm)

7,695(3,3);7,674(5,0);7,599(4,6);7,579(3,0);4,540(10,7);3,903(4,4);3,549(16,0);3,548(15,8);3,324(94,9);2,676(0,4);2,671(0,6);2,667(0,4);2,541(0,3);2,525(1,9);2,520(3,0);2,511(35,8);2,507(70,9);2,502(92,8);2,497(66,9);2,493(31,8);2,333(0,4);2,329(0,6);2,324(0,4);0,008(0,9);0,000(28,0);-0,009(0,8)

### Beispiel No. A15-159: ¹H-NMR (400 MHz, CDCl₃ δ, ppm)

7,264(3,7);7,260(77,5);7,254(0,9);7,251(2,9);7,249(1,3);7,247(1,4);7,243(3,3);7,235(1,2);7,230(3,2);7,000(3,6);6,996(0,8);6,995(1,1);6,983(1,1);6,978(5,9);6,973(1,1);6,962(1,0);6,957(3,0);4,936(0,7);4,919(2,2);4,901(2,2);4,883(0,7);3,372(15,3);3,371(16,0);1,825(15,8);1,807(15,8);1,550(12,7);0,008(0,9);0,000(28,8);-0,009(0,7)

### Beispiel No. A15-603: ¹H-NMR (400 MHz, CDCI₃ δ, ppm)

8,030(0,7);8,026(0,7);8,010(0,8);8,007(0,8);7,536(0,6);7,533(0,6);7,518(1,3);7,514(0,9);7,450(0,5);7,435(1,0);7,431(1,0);7,416(0,6);7,412(0,6);7,386(0,7);7,382(0,7);7,367(0,9);7,363(0,9);7,260(102,3);6,996(0,6);4,872(5,5);3,938(16,0);3,456(6,2);3,455(6,3);1,536(26,5);0,008(1,2);0,000(39,4);-0,009(1,1)

### Beispiel No. A15-681: ¹H-NMR (400 MHz, CDCI₃ δ, ppm)

8,069(2,6);8,051(2,6);7,521(0,5);7,262(96,1);7,238(2,9);7,111(2,2);7,082(2,2);6,998(0,6);4,842(7,1);4,835(7,3);3,763(14,1);3,433(1,7);3,409(5,2);3,385(5,4);3,361(2,0);2,534( 15,6);1,554(16,0);0,000(40,7);-0,024(1,2)

### Beispiel No. A15-726: ¹H-NMR (400 MHz, CDCI₃ δ, ppm)

9,480(1,1);8,300(1,7);8,280(1,8);7,367(2,1);7,364(2,0);7,347(2,3);7,344(2,2);7,261(56,3);7,234(1,4);7,069(1,3);7,065(1,3);7,049(2,0);7,030(0,9);7,027(0,9);5,299(1,3);4,164(1 4,0);3,692(16,0);1,552(15,1);0,000(20,9)

### Beispiel No. A15-728: ¹H-NMR (400 MHz, CDCI₃ δ, ppm)

9,982(1,5);7,725(3,4);7,519(0,6);7,363(1,8);7,343(2,4);7,260(107,4);7,238(2,3);7,217(3,0);7,197(1,6);7,122(0,5);7,084(2,2);7,064(1,8);6,997(0,7);5,300(0,8);4,005(11,5);3,701 (16,0);3,609(3,1);1,562(20,2);0,000(40,0)

### Beispiel No. A15-737: ¹H-NMR (400 MHz, CDCI₃ δ, ppm)

10,115(1,3);7,965(3,0);7,652(1,6);7,633(1,8);7,519(1,0);7,437(1,0);7,417(2,3);7,397(1,5);7,365(2,3);7,345(1,3);7,310(1,4);7,260(164,9);7,209(0,6);7,148(0,6);6,996(0,9);4,02 6(13,3);3,707(16,0);1,547(33,8);1,266(1,3);0,898(0,6);0,882(1,4);0,864(0,6);0,049(0,5); 0,000(61,7)

### Beispiel No. A15-742: ¹H-NMR (400 MHz, CDCI₃ δ, ppm)

9,287(1,1);7,261(71,3);7,215(0,8);7,210(0,8);7,194(1,4);7,177(0,9);6,947(2,4);6,927(3,9);6,906(1,9);5,300(6,6);4,097(13,5);3,723(16,0);1,562(8,6);0,000(26,4)

### Beispiel No. A15-748: ¹H-NMR (400 MHz, CDCI₃ δ, ppm)

9,805(1,3);8,203(0,6);8,182(1,3);8,166(1,2);8,145(0,7);7,261(58,5);6,870(2,3);6,849(3,8);6,828(1,6);5,300(1,0);4,073(12,9);3,697(16,0);1,553(15,4);0,000(21,6)

### Beispiel No. A15-761: ¹H-NMR (400 MHz, CDCl₃ δ, ppm)

10,467(1,5);7,707(4,3);7,685(6,2);7,605(6,3);7,583(3,8);7,261(86,1);4,013(13,1);3,712(16,0);1,554(25,7);0,000(30,0)

### Beispiel No. A15-791: ¹H-NMR (400 MHz, CDCI₃ δ, ppm)

7,556(1,0);7,547(1,5);7,537(1,0);7,535(1,1);7,424(0,7);7,421(0,6);7,416(2,0);7,408(9,2);7,400(3,3);7,394(1,9);7,384(1,9);7,261(26,2);7,080(1,9);6,943(3,9);6,805(2,0);4,629(1 0,2);3,477(15,6);3,475(16,0);1,572(3,9);0,000(9,9)

### Beispiel No. A15-793: ¹H-NMR (400 MHz, d₆-DMSO δ, ppm)

7,446(16,0);7,261(22,9);6,758(1,8);6,617(3,3);6,476(1,5);4,514(7,8);3,484(12,3);3,483(12,5);1,577(2,5);0,000(8,4)

### Beispiel No. A16-1: ¹H-NMR (400 MHz, d₆-DMSO δ, ppm)

7,479(1,1);7,473(0,4);7,459(1,6);7,456(0,8);7,453(0,5);7,342(0,6);7,337(0,8);7,319(1,9);7,302(2,5);7,265(1,1);7,262(1,1);7,246(1,3);7,241(0,5);7,228(0,4);7,225(0,4);4,529(8,7);4,518(0,5);4,373(7,1);3,902(6,0);3,708(0,6);3,526(0,8);3,405(0,6);3,343(15,9);3,328(75,4);3,309(0,5);3,288(1,1);3,232(16,0);2,524(1,0);2,511(19,3);2,507(37,9);2,502(49,7); 2,497(36,5);2,493(17,6);0,000(5,7)

### Beispiel No. A16-6: ¹H-NMR (400 MHz, d₆-DMSO δ, ppm)

7,511(1,7);7,490(2,6);7,447(1,7);7,440(2,2);7,408(1,6);7,401(1,2);7,386(1,1);7,380(0,9);4,543(8,2);4,357(6,4);3,903(4,6);3,411(14,7);3,335(59,2);3,240(16,0);3,168(0,4);2,525 (0,8);2,520(1,3);2,511(15,8);2,507(31,1);2,502(40,8);2,498(29,7);2,493(14,3);0,000(3,4)

### Beispiel No. A16-7: ¹H-NMR (400 MHz, d₆-DMSO δ, ppm)

7,487(4,8);7,468(8,7);7,380(3,2);7,362(2,7);7,358(2,2);7,340(1,7);5,443(0,3);4,566(16,0);4,544(0,9);4,452(0,4);4,423(0,6);4,410(13,7);3,903(10,8);3,800(0,4);3,501(0,7);3,487(0,6);3,436(29,3);3,427(1,9);3,328(59,6);3,280(0,8);3,259(31,4);3,245(1,9);3,219(0,8);3,209(0,4);3,175(0,4);3,169(0,7);2,676(0,4);2,671(0,6);2,667(0,4);2,524(2,0);2,511(37,5);2,507(72,4);2,502(94,2);2,498(69,9);2,493(34,8);2,333(0,4);2,329(0,6);2,324(0,4);2,145(1,0);0,008(0,4);0,000(12,4);-0,009(0,4)

### Beispiel No. A16-8: ¹H-NMR (400 MHz, d₆-DMSO δ, ppm)

7,592(1,9);7,587(1,9);7,567(2,0);7,546(2,4);7,320(1,2);7,314(1,1);7,299(1,0);7,294(1,0);4,532(8,5);4,335(6,3);3,903(4,3);3,418(14,8);3,398(0,4);3,332(67,8);3,230(16,0);3,168 (0,4);2,524(0,9);2,511 (17,4); 2,507(34,6); 2,502(45,7); 2,497(33,4); 2,493(16,2); 0,000(3,8)

### Beispiel No. A16-37: ¹H-NMR (400 MHz, d₆-DMSO δ, ppm)

7,361 (1,3);7,355(0,6);7,345(1,0);7,339(5,0);7,335(1,0);7,326(1,0);7,322(4,4);7,316(0,8);7,306(0,5);7,300(1,2);4,526(8,5);4,320(6,5);3,903(5,0);3,497(0,4);3,386(0,4);3,375(15,2);3,328(66,6);3,277(0,6);3,228(16,0);2,524(0,9);2,520(1,4);2,511(16,9);2,506(33,5);2,502(44,1);2,497(32,2);2,493(15,5);0,000(5,2)

### Beispiel No. A16-59: ¹H-NMR (400 MHz, d₆-DMSO δ, ppm)

7,420(0,4);7,404(0,5);7,399(1,2);7,384(1,2);7,379(1,0);7,364(1,1);7,348(1,9);7,330(0,7);7,225(0,8);7,222(0,7);7,202(1,2);7,198(0,7);7,182(0,6);7,178(0,5);4,559(9,1);4,437(0,6);4,301(4,4);4,297(4,4);3,902(5,8);3,778(0,3);3,491(1,0);3,428(15,1);3,324(56,9);3,244(16,0);3,231(1,2);2,671(0,4);2,510(24,6);2,506(46,6);2,502(59,9);2,497(43,9);2,493(21, 7);2,328(0,4);0,008(0,5);0,000(12,8);-0,009(0,4)

### Beispiel No. A16-71: ¹H-NMR (400 MHz, d₆-DMSO δ, ppm)

7,190(2,5);7,186(1,3);7,182(2,6);7,174(1,6);7,088(0,4);7,079(2,9);7,071(2,7);7,064(0,8);5,671(0,6);5,009(0,9);4,519(8,6);4,502(0,4);4,481(0,8);4,431(0,8);4,296(7,8);3,902(5,3);3,676(1,6);3,513(0,6);3,435(1,3);3,375(2,4);3,337(60,6);3,283(14,8);3,279(2,8);3,225(16,0);3,168(0,5);2,524(0,9);2,519(1,5);2,511(18,6);2,506(37,0);2,502(48,6);2,497(35,1);2,493(16,6);2,360(1,2);2,338(12,5);2,329(0,5);2,324(0,4);2,318(1,4);0,000(4,1)

### Beispiel No. A16-76: ¹H-NMR (400 MHz, d₆-DMSO δ, ppm)

7,230(0,4);7,075(1,0);7,056(1,5);6,999(1,1);6,982(0,6);6,979(0,6);6,873(1,4);5,278(0,4);4,522(8,2);4,501(0,7);4,444(0,4);4,244(6,2);3,902(5,5);3,669(0,4);3,513(1,2);3,385(0,6);3,330(88,2);3,309(0,4);3,277(14,9);3,253(0,7);3,233(16,0);2,524(0,9);2,511(16,7);2,507(32,8);2,502(43,0);2,497(31,5);2,493(15,2);2,394(0,6);2,333(0,5);2,329(0,3);2,311(0,6);2,283(7,4);2,270(0,8);2,263(0,4);2,254(0,6);2,235(0,4);2,207(0,6);2,170(6,8);1,271(0 ,3);1,254(0,7);1,235(0,4);0,000(5,4)

### Beispiel No. A16-81: ¹H-NMR (400 MHz, d₆-DMSO δ, ppm)

7,752(0,8);7,732(1,0);7,608(0,8);7,589(0,6);7,539(0,6);7,520(0,8);7,501(0,3);7,481(1,0);7,462(0,8);4,547(8,4);4,458(3,3);3,903(5,7);3,372(15,3);3,341(109,8);3,250(16,0);3,169(0,6);2,525(0,9);2,520(1,4);2,512(18,2);2,507(36,5);2,502(48,4);2,498(35,3);2,493(16,9);0,000(3,3)

### Beispiel No. A16-82: ¹H-NMR (400 MHz, d₆-DMSO δ, ppm)

7,672(1,4);7,623(0,8);7,605(1,4);7,548(0,9);7,529(1,1);7,509(0,4);4,518(8,5);4,426(5,9);3,903(4,5);3,393(0,5);3,373(16,3);3,344(140,8);3,280(0,4);3,218(16,0);3,169(0,5);2,52 5(1,0);2,512(18,0);2,507(34,9);2,503(45,3);2,498(32,7);2,494(15,4);0,000(1,4)

### Beispiel No. A17-5: ¹H-NMR (400 MHz, d₆-DMSO δ, ppm)

7,655(2,9);7,649(3,0);7,477(1,4);7,438(1,9);7,417(4,2);7,388(2,8);7,383(2,6);7,367(1,2);7,362(1,2);7,348(3,4);7,220(1,6);4,441(9,9);3,903(7,6);3,537(16,0);3,331(150,6);2,671(0,4);2,525(1,4);2,520(2,3);2,511(24,7);2,507(48,6);2,502(63,9);2,498(46,6);2,493(22,4);2,329(0,4);0,000(5,9)

### Beispiel No. A17-6: ¹H-NMR (400 MHz, CDCI₃ δ, ppm)

7,445(2,5);7,439(2,7);7,334(2,3);7,313(3,4);7,268(0,6);7,267(0,7);7,2664(0,9);7,2656(1,1);7,261(76,0);7,235(2,1);7,229(2,0);7,214(1,4);7,207(1,4);7,005(1,7);6,876(3,7);6,746 (1,8);4,539(10,7);3,555(16,0);1,552(29,6);0,008(1,0);0,000(34,6);-0,009(1,0)

### Beispiel No. A17-59: ¹H-NMR (400 MHz, CDCI₃ δ, ppm)

7,519(1,0);7,277(0,8);7,2743(0,6);7,2736(0,6);7,273(0,7);7,272(0,7);7,271(0,7);7,2704(0,8);7,2695(0,9);7,268(1,4);7,267(1,6);7,2663(1,9);7,2655(2,3);7,261(178,2);7,253(0,6);7,252(0,6);7,242(1,6);7,236(1,7);7,224(3,6);7,220(3,5);7,204(0,7);7,199(0,6);7,025(1,8);7,021(1,0);7,017(1,0);7,001(0,8);6,997(1,8);6,993(0,9);6,980(0,7);6,975(0,7);6,896(4,0);6,766(2,0);4,547(5,9);4,542(6,2);3,587(16,0);1,547(67,8);0,008(2,4);0,006(1,0);0,00 5(1,2);0,000(75,2);-0,007(0,6);-0,009(2,1)

### Beispiel No. A18-1: ¹H-NMR (400 MHz, d₆-DMSO δ, ppm)

8,708(0,9);8,698(0,9);8,141(1,0);8,121(1,3);8,017(0,8);8,012(0,8);7,997(1,2);7,993(1,2);7,978(0,7);7,974(0,7);7,536(0,6);7,533(0,7);7,524(0,6);7,521(0,7);7,517(0,7);7,514(0,6 );7,505(0,6);7,502(0,6);7,493(1,0);7,490(1,1);7,473(1,3);7,470(1,3);7,423(0,9);7,418(1,0);7,404(1,2);7,400(1,3);7,349(0,6);7,344(0,6);7,330(1,2);7,326(1,0);7,311(0,9);7,306(0,7);7,284(1,0);7,280(1,0);7,265(1,3);7,261(1,3);7,246(0,5);7,243(0,4);4,468(7,1);3,903(5,0);3,785(16,0);3,328(76,1);2,525(0,8);2,520(1,3);2,511(15,5);2,507(31,1);2,502(41,1) ;2,498(29,9);2,493(14,3);0,000(8,3)

### Beispiel No. A18-2: ¹H-NMR (400 MHz, d₆-DMSO δ, ppm)

8,710(0,8);8,699(0,9);8,133(0,9);8,113(1,3);8,015(0,8);8,011(0,8);7,996(1,2);7,991(1,2);7,976(0,7);7,972(0,6);7,534(0,6);7,531(0,6);7,522(0,6);7,519(0,7);7,515(0,7);7,512(0,6);7,503(0,6);7,500(0,5);7,445(1,6);7,333(8,0);7,330(6,0);4,425(7,0);3,903(4,9);3,815(16,0);3,331(106,4);2,525(0,9);2,520(1,4);2,512(16,4);2,507(32,4);2,503(42,4);2,498(30,5);2,493(14,5);0,000(2,8)

### Beispiel No. A18-3: ¹H-NMR (400 MHz, d₆-DMSO δ, ppm)

8,710(0,7);8,699(0,7);8,132(0,7);8,112(1,0);8,014(0,8);8,010(0,7);7,995(1,2);7,990(1,1);7,975(0,6);7,971(0,5);7,532(0,5);7,519(0,6);7,515(0,6);7,502(0,5);7,411(1,2);7,405(0,6);7,395(1,0);7,389(5,1);7,379(1,5);7,375(5,5);7,369(0,9);7,359(0,6);7,353(1,2);4,422(6,9);3,903(4,9);3,826(16,0);3,815(0,4);3,331(84,5);2,525(0,9);2,512(17,3);2,507(33,8);2, 503(43,8);2,498(31,6);2,493(14,9);0,000(7,5)

### Beispiel No. A18-5: ¹H-NMR (400 MHz, d₆-DMSO δ, ppm)

8,716(1,1);8,705(1,1);8,138(1,2);8,118(1,6);8,019(0,9);8,015(0,9);7,999(1,4);7,995(1,3);7,980(0,7);7,976(0,7);7,657(2,4);7,651(2,4);7,540(0,8);7,537(0,8);7,528(0,8);7,525(0,9);7,521(0,8);7,518(0,8);7,509(0,7);7,506(0,7);7,474(1,9);7,453(2,9);7,389(1,8);7,384(1,7);7,368(1,1);7,363(1,1);4,455(7,4);3,903(5,9);3,840(16,0);3,324(60,3);2,671(0,3);2,524(1,1);2,511(20,8);2,507(40,4);2,502(52,8);2,498(38,6);2,493(18,8);2,329(0,4);0,008(0, 4);0,000(10,7);-0,009(0,4)

### Beispiel No. A18-7: ¹H-NMR (400 MHz, d₆-DMSO δ, ppm)

8,730(0,8);8,719(0,8);8,163(0,8);8,143(1,0);8,030(0,7);8,026(0,7);8,011(1,2);8,007(1,1);7,992(0,6);7,987(0,6);7,552(0,6);7,539(0,6);7,535(0,6);7,522(0,5);7,504(2,8);7,484(4,9);7,391(1,9);7,373(1,6);7,369(1,4);7,351(1,0);4,493(7,6);3,903(6,3);3,848(16,0);3,333(1 34,9);2,525(1,1);2,512(18,8);2,507(37,1);2,503(48,6);2,498(35,0);2,494(16,6);0,000(4, 0)

### Beispiel No. A18-15: ¹H-NMR (400 MHz, CDCl₃ δ, ppm)

8,630(0,5);8,628(0,6);8,618(0,6);8,616(0,5);8,293(0,6);8,290(1,0);8,287(0,6);8,273(0,7);8,270(1,1);8,267(0,7);7,840(0,7);7,836(0,7);7,821(0,9);7,820(0,9);7,817(0,9);7,816(0,8);7,801(0,7);7,797(0,7);7,446(0,6);7,430(0,6);7,345(0,7);7,342(0,7);7,333(0,7);7,330(0,7);7,326(0,7);7,323(0,6);7,314(0,6);7,311(0,6);7,261(29,6);6,810(0,6);6,785(0,9);4,478( 2,8);4,476(2,8);3,895(16,0);0,000(11,2)

### Beispiel No. A18-17: ¹H-NMR (400 MHz, CDCl₃ δ, ppm)

8,642(0,6);8,640(0,6);8,638(0,6);8,632(0,5);8,630(0,6);8,628(0,6);8,318(0,6);8,315(1,1);8,313(0,7);8,298(0,7);8,295(1,2);8,293(0,7);7,843(0,7);7,839(0,7);7,824(1,0);7,819(1,0);7,804(0,7);7,800(0,7);7,350(0,7);7,347(0,7);7,338(0,7);7,335(0,7);7,331(0,7);7,328(0,6);7,319(0,6);7,316(0,6);7,270(0,6);7,265(7,9);7,249(1,0);7,228(0,6);6,903(1,4);6,884(1,5);6,882(1,5);6,864(1,2);5,298(2,2);4,463(3,9);3,947(16,0);0,000(2,9)

### Beispiel No. A18-21: ¹H-NMR (400 MHz, CDCI₃ δ, ppm)

8,628(0,6);8,626(0,7);8,624(0,7);8,621(0,7);8,616(0,6);8,614(0,7);8,611(0,7);8,609(0,7);8,585(0,5);8,583(0,6);8,580(0,6);8,578(0,6);8,573(0,5);8,570(0,6);8,568(0,6);8,566(0,5);8,281(0,7);8,278(1,1);8,275(0,7);8,261(0,8);8,258(1,2);8,255(0,8);7,831(0,7);7,826(0,7);7,812(1,0);7,811(0,9);7,807(0,9);7,806(0,9);7,792(0,7);7,787(0,7);7,622(0,9);7,617(0,9);7,603(0,6);7,598(0,6);7,489(0,6);7,486(1,0);7,484(0,7);7,467(0,8);7,336(0,7);7,333(0,7);7,324(0,7);7,321(0,8);7,317(0,7);7,314(0,7);7,305(0,7);7,302(0,7);7,266(0,5);7,262(23,6);7,202(0,5);7,199(0,5);7,190(0,5);7,187(0,5);4,646(5,9);3,932(16,0);1,626(1,4);0, 000(9,4)

### Beispiel No. A18-36: ¹H-NMR (400 MHz, CDCI₃ δ, ppm)

8,701(1,1);8,698(1,1);8,648(0,6);8,637(0,6);8,300(0,6);8,297(1,1);8,295(0,7);8,280(0,7);8,277(1,2);8,274(0,7);7,946(1,2);7,942(1,2);7,845(0,7);7,840(0,7);7,825(1,0);7,821(1,0);7,806(0,7);7,801(0,7);7,356(0,7);7,353(0,7);7,344(0,7);7,341(0,7);7,337(0,7);7,334(0,6);7,325(0,6);7,322(0,6);7,263(14,2);4,831(4,5);4,032(16,0);0,000(5,5)

### Beispiel No. A18-59: ¹H-NMR (400 MHz, d₆-DMSO δ, ppm)

8,728(0,7);8,718(0,7);8,157(0,7);8,137(0,9);8,028(0,7);8,024(0,7);8,009(1,1);8,005(1,0);7,990(0,6);7,985(0,6);7,550(0,5);7,537(0,5);7,533(0,5);7,521(0,4);7,430(0,4);7,415(0,4);7,409(1,2);7,394(1,1);7,389(1,0);7,375(1,1);7,365(1,2);7,362(1,8);7,344(0,6);7,341(0,5);7,248(0,7);7,245(0,6);7,228(0,6);7,224(1,1);7,220(0,7);7,205(0,5);7,201(0,5);4,393(3,8);4,389(3,8);3,903(6,0);3,857(16,0);3,332(110,6);2,525(0,8);2,520(1,3);2,512(16,0);2, 507(31,8);2,503(41,9);2,498(30,0);2,493(14,0);0,000(3,2)

### Beispiel No. A18-61: ¹H-NMR (400 MHz, CDCI₃ δ, ppm)

8,629(0,6);8,627(0,6);8,624(0,5);8,619(0,5);8,616(0,6);8,614(0,6);8,612(0,5);8,285(0,6);8,283(1,1);8,280(0,7);8,265(0,7);8,263(1,2);8,260(0,7);7,838(0,7);7,834(0,7);7,819(0,9);7,815(0,9);7,799(0,7);7,795(0,7);7,670(1,0);7,667(1,3);7,647(1,9);7,516(0,5);7,513(0,5);7,497(1,0);7,494(0,9);7,474(0,5);7,386(0,7);7,383(0,6);7,367(1,0);7,364(1,1);7,345(1,0);7,342(0,8);7,333(0,7);7,330(0,7);7,326(0,7);7,323(0,6);7,314(0,6);7,311(0,7);7,261( 24,1);4,636(5,7);3,918(16,0);0,000(9,3)

### Beispiel No. A18-62: ¹H-NMR (400 MHz, CDCl₃ δ, ppm)

8,632(0,5);8,629(0,6);8,627(0,7);8,625(0,6);8,619(0,6);8,617(0,7);8,615(0,7);8,613(0,6);8,280(0,7);8,277(1,1);8,275(0,7);8,260(0,7);8,257(1,2);8,255(0,8);7,841(0,7);7,836(0,7);7,822(1,0);7,821(0,9);7,817(1,0);7,802(0,7);7,797(0,7);7,737(0,6);7,736(0,7);7,732(1,2);7,729(0,9);7,727(0,8);7,702(0,5);7,699(0,7);7,698(0,6);7,683(0,6);7,680(0,7);7,678(0,7);7,562(0,7);7,546(0,6);7,542(0,9);7,539(0,6);7,425(0,8);7,405(1,4);7,386(0,6);7,347(0,7);7,344(0,7);7,335(0,7);7,332(0,7);7,328(0,7);7,325(0,7);7,316(0,7);7,313(0,7);7,263(13,7);4,519(5,2);3,905(16,0);1,619(1,2);0,000(5,3)

### Beispiel No. A18-63: ¹H-NMR (400 MHz, CDCI₃ δ, ppm)

8,632(0,6);8,629(0,7);8,627(0,7);8,625(0,6);8,620(0,6);8,617(0,7);8,615(0,7);8,613(0,6);8,279(0,7);8,276(1,2);8,274(0,7);8,259(0,8);8,256(1,3);8,254(0,8);7,842(0,7);7,837(0,7);7,823(1,0);7,818(1,0);7,803(0,7);7,798(0,7);7,600(1,4);7,595(0,6);7,584(0,9);7,579(3,6);7,576(0,8);7,550(3,2);7,545(0,8);7,533(0,5);7,529(1,2);7,350(0,7);7,347(0,8);7,338(0,7);7,335(0,8);7,331(0,7);7,328(0,7);7,319(0,7);7,316(0,7);7,261(27,5);5,298(1,1);4,521 (5,7);3,887(16,0);0,000(10,5)

### Beispiel No. A18-82: ¹H-NMR (400 MHz, d₆-DMSO δ, ppm)

8,702(1,0);8,691(1,0);8,126(1,2);8,106(1,6);8,012(0,9);8,008(0,9);7,993(1,4);7,989(1,3);7,973(0,7);7,969(0,7);7,701(0,9);7,684(2,9);7,633(0,7);7,613(1,2);7,567(0,9);7,547(1,2);7,530(1,1);7,527(1,2);7,518(0,8);7,515(0,8);7,511(0,8);7,508(0,7);7,499(0,7);7,496(0,7);4,508(6,7);3,903(6,0);3,835(0,6);3,786(16,0);3,332(138,0);2,672(0,3);2,525(1,0);2,512(19,7);2,507(39,3);2,503(51,8);2,498(37,7);2,494(18,2);2,329(0,3);0,000(3,9)

### Beispiel No. A18-83: ¹H-NMR (400 MHz, d₆-DMSO δ, ppm)

8,705(1,0);8,695(1,0);8,126(1,1);8,106(1,6);8,012(0,9);8,008(0,9);7,993(1,3);7,988(1,3);7,973(0,7);7,969(0,7);7,689(1,7);7,669(3,0);7,617(2,7);7,597(1,6);7,532(0,7);7,529(0,8);7,520(0,8);7,517(0,8);7,513(0,8);7,511(0,7);7,501(0,7);7,498(0,7);4,523(5,6);3,903(6,5);3,835(16,0);3,326(58,0);2,525(0,9);2,511(18,7);2,507(36,9);2,502(48,3);2,498(35,0); 2,493(16,9);0,008(0,4);0,000(12,9);-0,009(0,4)

### Beispiel No. A18-136: ¹H-NMR (400 MHz, d₆-DMSO δ, ppm)

8,704(0,6);8,693(0,6);8,136(0,6);8,116(0,8);8,013(0,7);8,008(0,7);7,993(1,1);7,989(1,0);7,974(0,6);7,970(0,5);7,529(0,5);7,516(0,5);7,512(0,5);7,499(0,4);7,366(0,9);7,362(1,3);7,357(0,5);7,345(2,1);7,342(2,2);7,336(0,4);7,326(0,9);7,322(1,1);7,316(0,5);7,311(0,5);7,305(2,7);7,301(0,9);7,291(0,7);7,286(1,4);7,282(0,9);7,278(1,3);7,274(0,7);7,269(0,4);7,261(1,0);4,414(7,0);3,903(4,5);3,780(16,0);3,335(94,6);2,525(0,7);2,520(1,1);2,512(14,3);2,507(28,6);2,502(37,7);2,498(27,2);2,493(12,9);0,000(2,9)

### Beispiel No. A18-143: ¹H-NMR (400 MHz, d₆-DMSO δ, ppm)

8,684(0,3);8,133(0,4);8,113(0,5);7,993(0,5);7,989(0,5);7,327(0,7);7,311(0,4);7,306(1,7);7,301(0,3);7,276(1,6);7,270(0,4);7,255(0,6);4,383(2,4);3,903(2,3);3,758(5,9);3,343(8,9);2,524(0,4);2,520(0,7);2,511(7,2);2,507(14,2);2,502(18,7);2,497(13,5);2,493(6,4);1,252(0,5);1,240(16,0);1,152(0,8);0,000(5,2)

### Beispiel No. A18-793: ¹H-NMR (400 MHz, CDCI₃ δ, ppm)

8,624(0,6);8,622(0,6);8,620(0,5);8,614(0,5);8,612(0,6);8,610(0,6);8,608(0,5);8,288(0,6);8,285(1,0);8,282(0,7);8,267(0,7);8,265(1,1);8,262(0,7);7,837(0,7);7,833(0,7);7,818(0,9);7,817(0,8);7,814(0,9);7,813(0,8);7,798(0,7);7,794(0,7);7,504(0,9);7,484(1,7);7,450(1,6);7,430(0,7);7,342(0,7);7,339(0,7);7,329(0,7);7,326(0,7);7,323(0,7);7,320(0,7);7,310(0 ,7);7,307(0,6);7,264(0,6);7,261(22,0);6,750(0,6);6,609(1,2);6,468(0,6);4,518(3,3);3,868 (16,0);0,000(8,5)

### Beispiel No. A19-1: ¹H-NMR (400 MHz, d₆-DMSO δ, ppm)

9,320(2,1);9,316(2,0);8,784(0,7);8,778(1,4);8,775(1,4);8,768(3,1);8,761(1,3);7,498(1,0);7,495(1,1);7,478(1,3);7,475(1,3);7,451(0,9);7,447(1,0);7,433(1,2);7,428(1,2);7,354(0,6);7,350(0,6);7,336(1,3);7,331(1,1);7,316(0,9);7,311(0,7);7,293(1,0);7,290(1,0);7,274(1,3);7,271(1,3);7,256(0,5);7,252(0,4);4,502(7,1);3,903(5,5);3,762(16,0);3,324(46,5);2,525(0,9);2,520(1,4);2,511(16,5);2,507(32,3);2,502(41,8);2,498(29,9);2,493(14,0);0,008(0, 4);0,000(12,1);-0,009(0,4)

### Beispiel No. A19-2: ¹H-NMR (400 MHz, d₆-DMSO δ, ppm)

9,313(2,2);9,310(2,2);8,784(0,8);8,778(1,4);8,775(1,4);8,765(3,1);8,758(1,5);7,469(1,6);7,466(1,8);7,358(0,7);7,354(0,7);7,347(1,7);7,342(4,2);7,339(5,2);7,335(1,8);7,328(0,6);7,325(0,7);4,458(7,4);3,903(5,2);3,788(16,0);3,324(44,7);2,525(0,8);2,520(1,3);2,511(16,5);2,507(33,1);2,502(43,8);2,498(32,0);2,493(15,4);0,008(0,4);0,000(11,5);-0,009(0,4)

### Beispiel No. A19-3: ¹H-NMR (400 MHz, d₆-DMSO δ, ppm)

9,310(2,6);9,307(2,5);8,783(1,0);8,776(1,9);8,773(1,8);8,763(3,6);8,757(1,7);7,426(1,7);7,420(0,7);7,410(1,1);7,404(5,0);7,386(1,0);7,381(5,5);7,375(1,2);7,365(0,8);7,359(1,8);4,453(7,4);3,903(5,3);3,796(16,0);3,325(55,8);2,525(0,8);2,511(18,1);2,507(35,7);2,502(46,8);2,498(34,4);2,493(16,9);0,008(0,4);0,000(10,6);-0,009(0,4)

### Beispiel No. A19-5: ¹H-NMR (400 MHz, d₆-DMSO δ, ppm)

9,317(2,6);9,313(2,6);8,791(1,1);8,787(1,1);8,785(2,1);8,781(2,1);8,772(3,7);8,765(1,8);7,662(2,3);7,657(2,4);7,499(1,9);7,478(2,7);7,397(1,7);7,392(1,6);7,377(1,2);7,371(1,1);4,488(6,8);3,903(2,2);3,812(16,0);3,325(53,2);2,525(0,9);2,520(1,4);2,511(18,0);2,507(35,8);2,502(47,2);2,498(34,3);2,493(16,5);0,008(0,5);0,000(14,3);-0,009(0,5)

### Beispiel No. A19-7: ¹H-NMR (400 MHz, d₆-DMSO δ, ppm)

9,338(2,9);9,334(2,9);8,808(1,2);8,801(2,4);8,798(2,3);8,788(3,9);8,782(1,9);7,512(3,2);7,492(5,4);7,398(2,0);7,380(1,7);7,377(1,5);7,358(1,1);4,530(8,2);3,903(8,3);3,825(16, 0);3,324(57,2);2,671(0,3);2,511(23,7);2,507(44,4);2,502(57,0);2,498(42,2);2,493(21,2); 2,329(0,4);0,008(0,6);0,000(12,4);-0,009(0,5)

### Beispiel No. A19-59: ¹H-NMR (400 MHz, d₆-DMSO δ, ppm)

9,332(2,3);9,329(2,3);8,806(0,8);8,799(1,5);8,796(1,5);8,786(3,2);8,780(1,6);7,437(0,4);7,422(0,4);7,416(1,2);7,402(1,1);7,396(1,0);7,382(1,1);7,369(1,9);7,352(0,6);7,348(0,6);7,258(0,7);7,254(0,7);7,237(0,7);7,234(1,2);7,230(0,7);7,214(0,5);7,210(0,5);4,432(4,1);4,428(4,2);3,903(6,1);3,830(16,0);3,326(30,8);2,525(0,8);2,520(1,3);2,511(17,0);2,507(34,3);2,502(45,3);2,498(33,4);2,493(16,4);0,008(0,4);0,000(12,5);-0,009(0,4)

### Beispiel No. A19-82: ¹H-NMR (400 MHz, d₆-DMSO δ, ppm)

9,306(2,8);9,302(2,7);8,777(1,0);8,773(1,0);8,771(2,3);8,767(2,5);8,762(4,3);8,755(1,6);7,715(1,2);7,709(1,6);7,704(1,7);7,637(0,7);7,618(1,1);7,574(0,9);7,554(1,1);7,534(0,4);4,539(6,3);3,903(2,4);3,805(0,7);3,761(16,0);3,365(0,4);3,333(122,1);3,169(0,9);2,672(0,3);2,525(1,0);2,520(1,6);2,512(19,9);2,507(39,7);2,503(52,4);2,498(38,0);2,494(18, 1);2,330(0,3);0,008(0,4);0,000(12,8);-0,009(0,4)

### Beispiel No. A19-83: ¹H-NMR (400 MHz, d₆-DMSO δ, ppm)

9,306(2,5);9,302(2,5);8,779(1,0);8,775(0,9);8,772(2,0);8,769(2,1);8,762(3,9);8,755(1,6);7,695(1,4);7,674(2,7);7,633(2,4);7,612(1,3);4,553(4,8);3,903(5,8);3,805(16,0);3,325(49,7);2,525(0,8);2,520(1,3);2,512(17,0);2,507(34,1);2,502(45,0);2,498(32,4);2,493(15,2);0,008(0,5);0,000(14,1);-0,009(0,4)

### Beispiel No. A19-136: ¹H-NMR (400 MHz, d₆-DMSO δ, ppm)

9,314(2,4);9,311(2,4);8,778(0,9);8,774(0,9);8,771(1,9);8,768(1,9);8,761(3,6);8,754(1,5);7,383(1,0);7,378(1,4);7,373(0,5);7,362(2,1);7,359(2,0);7,332(0,8);7,327(1,0);7,322(0,4);7,316(0,5);7,310(2,6);7,306(0,9);7,296(0,8);7,292(1,4);7,286(0,9);7,282(1,4);7,278(0,7);7,272(0,4);7,265(1,0);4,446(6,7);3,903(4,4);3,755(16,0);3,324(35,8);2,524(0,7);2,520(1,1);2,511(13,4);2,507(26,6);2,502(35,0);2,497(25,3);2,493(11,9);0,008(0,4);0,000(11,0)

### Beispiel No. A19-143: ¹H-NMR (400 MHz, d₆-DMSO δ, ppm)

9,314(1,0);9,312(0,9);8,759(1,9);8,753(0,4);7,334(0,6);7,318(0,4);7,312(1,9);7,291(1,8);7,286(0,4);7,270(0,6);4,414(2,6);3,903(4,0);3,733(5,8);3,325(22,6);2,524(0,4);2,511(7, 9);2,507(15,0);2,502(19,3);2,498(14,0);2,493(6,8);1,241(16,0);1,166(0,8);0,000(4,3)

### Beispiel No. A20-681: ¹H-NMR (400 MHz, d₆-DMSO δ, ppm)

8,904(1,5);8,900(1,6);8,764(1,1);8,760(1,1);8,752(1,2);8,748(1,2);8,088(1,7);8,071(1,7);8,043(0,8);8,039(1,1);8,033(0,9);8,023(0,9);8,019(1,2);8,014(0,9);7,521(0,5);7,493(0,9);7,491(0,9);7,480(1,0);7,478(0,9);7,473(1,0);7,471(0,9);7,461(0,9);7,459(0,9);7,262(95,8);7,238(2,6);7,112(1,4);7,083(1,4);6,998(0,6);5,302(0,7);4,830(4,3);4,822(4,5);3,743(16,0);3,436(1,1);3,412(3,4);3,388(3,5);3,364(1,3);2,534(9,8);1,581(2,6);0,008(1,7);0,00 0(41,0);-0,008(3,0);-0,025(1,2)

### Beispiel No. A21-1: ¹H-NMR (400 MHz, d₆-DMSO δ, ppm)

8,734(1,9);8,729(1,9);8,728(1,9);8,199(1,5);8,193(1,4);8,178(1,6);8,172(1,6);7,749(2,0);7,747(2,2);7,728(1,9);7,726(2,0);7,501(1,3);7,498(1,3);7,482(1,5);7,479(1,6);7,457(1,0);7,452(1,1);7,439(1,4);7,434(1,4);7,359(0,6);7,354(0,7);7,340(1,5);7,336(1,3);7,321(1,1);7,316(1,0);7,307(1,2);7,303(1,3);7,289(1,4);7,285(1,3);7,270(0,5);7,267(0,4);4,470(7,6);3,903(11,7);3,625(0,4);3,512(16,0);3,444(0,6);3,324(54,1);2,675(0,4);2,671(0,5);2,666(0,4);2,524(1,7);2,511(30,4);2,506(58,6);2,502(75,8);2,497(55,1);2,493(26,6);2,333(0,4);2,328(0,5);0,008(0,8);0,000(19,2);-0,009(0,6)

### Beispiel No. A21-2: ¹H-NMR (400 MHz, d₆-DMSO δ, ppm)

8,738(1,7);8,737(1,9);8,732(1,8);8,731(1,8);8,202(1,6);8,196(1,5);8,181(1,8);8,175(1,7);7,749(2,1);7,747(2,1);7,728(2,0);7,727(1,9);7,450(2,0);7,364(0,5);7,361(0,9);7,358(0,7);7,348(5,2);7,346(5,1);7,340(1,9);7,333(0,5);7,331(0,6);7,328(0,5);4,420(7,1);3,903(1,4);3,524(16,0);3,327(105,4);2,671(0,4);2,524(1,3);2,511(21,9);2,507(43,0);2,502(56,6);2,497(41,3);2,493(19,9);2,329(0,4);0,008(0,5);0,000(14,7);-0,009(0,5)

### Beispiel No. A21-3: ¹H-NMR (400 MHz, d₆-DMSO δ, ppm)

8,741(1,7);8,739(1,8);8,734(1,8);8,733(1,7);8,205(1,6);8,199(1,5);8,184(1,8);8,178(1,7);7,748(2,1);7,746(2,1);7,727(1,9);7,725(1,9);7,429(0,4);7,424(1,3);7,418(0,6);7,408(1,1 );7,402(5,4);7,398(1,4);7,392(1,5);7,388(5,9);7,382(1,0);7,370(1,3);7,368(1,1);7,366(1, 4);4,417(6,8);4,364(0,4);3,903(8,1);3,539(16,0);3,471(0,7);3,358(0,3);3,328(117,4);3,174(0,4);3,163(0,5);2,671(0,4);2,524(1,3);2,520(2,0);2,511(24,3);2,507(48,3);2,502(63,7 );2,497(46,5);2,493(22,4);2,329(0,4);0,000(9,3)

### Beispiel No. A21-5: ¹H-NMR (400 MHz, d₆-DMSO δ, ppm)

8,745(1,8);8,743(1,9);8,738(1,9);8,737(1,8);8,210(1,7);8,204(1,6);8,189(1,8);8,183(1,8);7,753(2,1);7,751(2,1);7,732(2,0);7,731(1,9);7,664(2,4);7,658(2,4);7,501(1,9);7,480(2,8);7,409(1,8);7,403(1,7);7,388(1,2);7,382(1,1);4,452(6,6);3,903(6,8);3,564(16,0);3,332(166,1);3,300(0,3);2,671(0,4);2,525(1,2);2,520(2,0);2,511(24,0);2,507(47,6);2,502(62,7); 2,498(45,7);2,493(21,8);2,329(0,4);0,000(4,5)

### Beispiel No. A21-6: ¹H-NMR (400 MHz, d₆-DMSO δ, ppm)

8,742(1,8);8,740(1,8);8,736(1,9);8,734(1,7);8,208(1,6);8,201(1,5);8,187(1,7);8,181(1,7);7,758(2,1);7,756(2,1);7,737(1,9);7,735(1,9);7,541(2,3);7,535(4,5);7,513(3,1);7,424(1,8);7,417(1,6);7,402(1,2);7,396(1,1);4,440(6,7);3,903(6,7);3,549(16,0);3,327(92,7);3,175(0,5);3,162(0,4);2,671(0,4);2,525(1,2);2,520(1,9);2,511(21,5);2,507(42,4);2,502(55,6);2, 497(40,6);2,493(19,5);2,329(0,3);0,000(6,3)

### Beispiel No. A21-7: ¹H-NMR (400 MHz, d₆-DMSO δ, ppm)

8,758(1,9);8,756(2,0);8,751(2,1);8,750(1,9);8,225(1,5);8,219(1,5);8,204(1,7);8,198(1,6);7,762(2,1);7,761(2,1);7,741(2,0);7,740(1,9);7,518(3,1);7,498(5,2);7,398(1,9);7,380(1,7);7,377(1,4);7,358(1,1);4,509(7,5);3,903(7,8);3,602(16,0);3,588(0,6);3,335(37,0);3,168(1,0);2,671(0,4);2,541(0,4);2,524(1,6);2,511(27,5);2,507(52,8);2,502(68,6);2,498(50,6); 2,493(25,1);2,329(0,4);2,211(0,4);0,008(0,3);0,000(9,6)

### Beispiel No. A21-59: ¹H-NMR (400 MHz, d₆-DMSO δ, ppm)

8,749(1,7);8,747(1,9);8,743(1,9);8,741(1,8);8,215(1,6);8,209(1,6);8,194(1,8);8,188(1,8);7,760(2,1);7,759(2,1);7,740(2,0);7,738(2,0);7,443(0,4);7,428(0,4);7,422(1,2);7,408(1,1);7,402(1,0);7,388(1,2);7,374(1,9);7,357(0,6);7,354(0,6);7,279(0,7);7,276(0,7);7,259(0,7);7,255(1,2);7,251(0,8);7,236(0,5);7,232(0,5);4,419(4,1);4,416(4,2);3,903(1,1);3,596(16,0);3,350(0,5);3,327(113,7);2,671(0,4);2,525(1,2);2,520(2,0);2,511(21,7);2,507(42,9); 2,502(56,6);2,497(41,4);2,493(20,0);2,329(0,4);0,008(0,5);0,000(13,6);-0,009(0,4)

### Beispiel No. A21-71: ¹H-NMR (400 MHz, d₆-DMSO δ, ppm)

8,721 (1,8);8,719(1,8);8,715(1,9);8,713(1,7);8,184(1,6);8,178(1,5);8,163(1,7);8,157(1,7);7,747(2,0);7,745(2,1);7,726(1,9);7,724(1,9);7,210(4,5);7,204(2,1);7,199(1,1);7,196(2,1);7,190(1,9);7,179(0,6);7,128(0,7);7,121(0,5);7,114(0,7);7,107(0,7);7,094(0,4);4,399(7,6);3,902(6,5);3,453(16,0);3,376(0,3);3,333(94,5);3,169(0,6);2,671(0,4);2,541(0,5);2,524(1,3);2,520(2,1);2,511(24,1);2,507(47,4);2,502(62,1);2,497(45,1);2,493(21,6);2,388(1 1,3);2,355(0,5);2,333(0,3);2,329(0,5);2,323(0,6);0,000(6,7)

### Beispiel No. A21-76: ¹H-NMR (400 MHz, d₆-DMSO δ, ppm)

8,720(3,2);8,719(3,5);8,714(3,5);8,712(3,4);8,183(3,0);8,177(2,9);8,162(3,3);8,156(3,3);7,753(3,8);7,752(3,8);7,732(3,5);7,731(3,5);7,100(2,0);7,081(3,2);7,016(2,1);6,997(1,5);6,972(3,3);4,345(12,8);3,903(11,7);3,437(29,6);3,371(0,5);3,358(1,2);3,333(286,3);3,304(0,8);3,169(0,9);2,676(0,5);2,671(0,7);2,667(0,5);2,542(0,5);2,525(1,8);2,520(3,1);2,511(39,8);2,507(79,5);2,502(105,2);2,498(76,9);2,493(37,1);2,331(16,0);2,313(0,4);2, 176(15,0);0,000(7,8)

### Beispiel No. A21-81: ¹H-NMR (400 MHz, d₆-DMSO δ, ppm)

8,755(1,8);8,754(1,8);8,749(1,9);8,748(1,7);8,219(1,6);8,212(1,5);8,198(1,7);8,192(1,7);7,774(1,0);7,756(3,2);7,755(3,2);7,736(1,9);7,734(1,8);7,670(0,3);7,651(1,0);7,633(0,9);7,607(1,4);7,589(0,6);7,558(0,6);7,538(0,9);7,520(0,4);4,553(3,9);3,903(5,2);3,538(16,0);3,330(89,9);2,525(0,8);2,520(1,4);2,512(17,6);2,507(34,8);2,502(45,7);2,498(33,4); 2,493(16,0);0,000(5,4)

### Beispiel No. A21-82: ¹H-NMR (400 MHz, d₆-DMSO δ, ppm)

8,726(2,1);8,720(2,0);8,719(2,1);8,191(1,6);8,185(1,6);8,170(1,7);8,164(1,7);7,746(2,5);7,725(4,5);7,700(1,4);7,643(0,8);7,623(1,4);7,580(1,2);7,561(1,5);7,542(0,6);4,509(7,2);3,903(1,0);3,549(0,8);3,538(0,4);3,519(16,0);3,327(99,0);3,299(0,4);3,175(1,0);3,162(1,0);2,671(0,4);2,511(24,0);2,507(45,6);2,502(59,4);2,498(44,7);2,493(22,9);2,329(0,4) ;0,008(0,6);0,000(13,1);-0,008(0,6)

### Beispiel No. A21-83: ¹H-NMR (400 MHz, d₆-DMSO δ, ppm)

8,735(1,9);8,730(1,9);8,202(1,6);8,195(1,5);8,181(1,7);8,175(1,7);7,746(2,2);7,725(2,0);7,724(1,9);7,704(1,7);7,683(3,1);7,633(2,9);7,612(1,6);4,518(5,6);3,903(1,8);3,549(16, 0);3,329(124,4);2,671(0,4);2,525(1,3);2,511(23,2);2,507(45,7);2,502(59,9);2,498(43,5); 2,493(20,9);2,329(0,4);0,008(0,5);0,000(14,3);-0,009(0,4)

### Beispiel No. A21-136: ¹H-NMR (400 MHz, d₆-DMSO δ, ppm)

8,732(1,7);8,730(1,8);8,726(1,8);8,724(1,7);8,194(1,6);8,188(1,5);8,174(1,7);8,167(1,7);7,745(2,1);7,743(2,0);7,724(1,9);7,722(1,9);7,381(1,0);7,376(1,4);7,371(0,5);7,360(2,4);7,356(2,3);7,351(0,4);7,341(1,1);7,337(1,3);7,331(0,5);7,325(0,6);7,320(2,8);7,315(1,0);7,305(0,8);7,301(1,3);7,294(0,8);7,289(1,4);7,285(0,7);7,280(0,4);7,272(1,1);4,411(7,1);3,902(1,3);3,492(16,0);3,336(158,5);3,312(0,7);2,525(1,0);2,520(1,7);2,512(18,8);2, 507(37,0);2,502(48,4);2,498(35,0);2,493(16,6);0,000(5,8)

### Beispiel No. A21-143: ¹H-NMR (400 MHz, d₆-DMSO δ, ppm)

8,723(0,7);8,722(0,7);8,717(0,7);8,716(0,7);8,194(0,6);8,187(0,6);8,173(0,6);8,166(0,6);7,745(0,8);7,744(0,8);7,724(0,7);7,723(0,7);7,347(0,7);7,331(0,4);7,326(1,7);7,291(1,5);7,286(0,4);7,270(0,7);4,378(2,3);3,902(0,7);3,469(5,6);3,450(0,5);3,338(72,4);2,525(0,4);2,512(8,6);2,507(17,1);2,503(22,5);2,498(16,4);2,493(7,9);1,248(16,0);1,210(1,2);1, 143(0,7);0,000(5,5)

### Beispiel No. A22-1: ¹H-NMR (400 MHz, d₆-DMSO δ, ppm)

7,689(0,8);7,687(0,9);7,668(2,0);7,645(0,9);7,638(0,9);7,629(1,2);7,622(1,2);7,618(0,4);7,609(0,6);7,602(0,7);7,553(0,5);7,550(0,4);7,534(1,6);7,531(1,6);7,521(2,2);7,518(2,0);7,515(3,0);7,502(0,5);7,494(1,2);7,491(0,8);7,474(1,6);7,471(1,0);7,356(0,8);7,352(1,6);7,348(0,7);7,333(3,3);7,328(0,7);7,314(1,2);7,309(0,6);7,293(1,3);7,290(1,3);7,276(0,7);7,272(1,2);7,256(0,4);7,253(0,4);4,427(7,5);3,902(7,5);3,389(0,4);3,335(99,8);3,169(0,3);3,153(16,0);2,525(0,9);2,520(1,5);2,511(18,9);2,507(37,5);2,502(49,1);2,498(35,6);2,493(17,0);0,000(5,3)

### Beispiel No. A22-2: ¹H-NMR (400 MHz, d₆-DMSO δ, ppm)

7,689(0,9);7,671(1,4);7,669(2,4);7,667(1,3);7,645(0,9);7,636(0,9);7,631(1,1);7,622(1,2);7,616(0,5);7,612(0,6);7,602(0,7);7,536(1,8);7,533(2,1);7,530(2,2);7,522(3,1);7,520(2,9);7,395(1,0);7,390(2,0);7,349(1,1);7,341(1,1);7,334(3,8);7,330(2,1);7,322(0,7);7,317(0,4);7,311(1,1);7,307(1,0);7,303(0,8);7,300(0,7);7,296(0,5);7,291(0,5);7,289(0,5);7,284(0 ,4);4,373(7,2);3,902(7,0);3,328(61,7);3,195(16,0);2,524(1,0);2,519(1,5);2,511(18,6);2,507(37,1);2,502(48,9);2,497(35,4);2,493(16,9);0,008(0,4);0,000(12,0);-0,009(0,4)

### Beispiel No. A22-3: ¹H-NMR (400 MHz, d₆-DMSO δ, ppm)

7,690(1,1);7,670(2,5);7,643(0,9);7,635(0,9);7,630(1,1);7,621(1,3);7,614(0,5);7,611(0,7);7,601(0,7);7,533(2,0);7,529(2,8);7,519(3,3);7,517(3,2);7,382(1,0);7,376(0,6);7,367(1,0);7,360(7,4);7,351(6,6);7,345(0,9);7,336(0,6);7,329(1,0);4,367(8,0);3,903(7,8);3,389(0,4);3,333(42,0);3,195(0,7);3,185(16,0);3,168(0,4);2,671(0,4);2,524(1,2);2,511(22,8);2,506(45,1);2,502(59,2);2,497(43,3);2,493(21,1);2,329(0,4);0,008(0,5);0,000(14,9);-0,009(0,5)

### Beispiel No. A22-5: ¹H-NMR (400 MHz, d₆-DMSO δ, ppm)

7,696(0,9);7,694(1,0);7,675(2,3);7,657(1,7);7,654(2,6);7,651(1,9);7,642(1,0);7,633(1,2);7,626(1,3);7,621(0,5);7,613(0,7);7,606(0,8);7,555(0,5);7,552(0,4);7,536(1,6);7,533(1,7);7,525(2,2);7,518(3,2);7,506(0,5);7,382(7,0);7,379(5,4);4,413(7,8);3,902(10,1);3,389(0,6);3,343(107,8);3,212(16,0);3,169(0,5);2,671(0,4);2,525(1,0);2,520(1,7);2,511(23,9);2,507(48,1);2,502(63,6);2,498(47,0);2,493(23,3);2,334(0,4);2,329(0,5);2,325(0,3);0,000( 7,0)

### Beispiel No. A22-7: ¹H-NMR (400 MHz, d₆-DMSO δ, ppm)

7,706(1,1);7,703(1,2);7,686(2,3);7,683(2,3);7,659(1,2);7,654(1,2);7,641(1,6);7,636(1,6);7,621(0,9);7,616(0,9);7,568(0,9);7,565(0,8);7,549(1,9);7,546(2,0);7,531(1,5);7,528(1,5);7,521(2,5);7,516(2,4);7,511(3,9);7,509(3,9);7,502(1,2);7,497(1,0);7,490(6,4);7,390(2,5);7,371(2,2);7,368(1,9);7,350(1,5);4,479(9,4);3,902(16,0);3,594(0,3);3,389(0,4);3,333(163,0);3,256(20,6);2,676(0,3);2,672(0,4);2,667(0,3);2,525(1,5);2,520(2,6);2,512(27,8); 2,507(53,9);2,502(69,8);2,498(50,3);2,493(23,9);2,329(0,4);0,000(8,7)

### Beispiel No. A22-59: ¹H-NMR (400 MHz, d₆-DMSO δ, ppm)

7,703(0,8);7,700(0,9);7,682(1,8);7,680(1,8);7,656(1,0);7,652(1,0);7,639(1,3);7,634(1,3);7,619(0,7);7,614(0,7);7,564(0,7);7,560(0,7);7,545(1,5);7,541(1,5);7,527(1,1);7,524(1,1);7,513(1,9);7,509(1,7);7,494(0,8);7,490(0,6);7,430(0,4);7,415(0,4);7,409(1,2);7,395(1,1);7,389(1,1);7,375(1,3);7,369(1,4);7,365(2,2);7,349(0,6);7,345(0,6);7,255(0,8);7,252(0,7);7,235(0,7);7,231(1,3);7,227(0,7);7,212(0,6);7,208(0,5);4,373(4,3);4,369(4,3);3,902( 9,8);3,389(0,6);3,383(0,4);3,342(104,4);3,313(0,5);3,246(16,0);3,169(0,3);2,671(0,4);2,525(1,3);2,511(22,0);2,507(42,9);2,502(55,9);2,498(40,3);2,493(19,1);2,329(0,4);0,000 (5,7)

### Beispiel No. A22-82: ¹H-NMR (400 MHz, d₆-DMSO δ, ppm)

7,719(1,7);7,687(0,9);7,684(1,0);7,665(2,2);7,656(0,9);7,642(2,1);7,636(2,6);7,625(2,1);7,620(2,4);7,605(0,7);7,599(0,7);7,572(1,2);7,551(1,5);7,547(0,8);7,531(1,9);7,528(1,6);7,514(3,3);7,511(2,1);7,509(2,1);7,495(0,6);4,479(6,8);3,903(7,5);3,367(0,4);3,334(171,1);3,305(0,4);3,212(16,0);3,182(0,7);3,180(0,7);2,672(0,4);2,525(1,2);2,520(1,8);2,512(22,9);2,507(45,5);2,502(59,8);2,498(43,4);2,493(20,8);2,329(0,4);0,000(5,3)

### Beispiel No. A22-83: ¹H-NMR (400 MHz, d₆-DMSO δ, ppm)

7,686(3,6);7,665(5,8);7,639(0,9);7,631(0,9);7,625(1,1);7,617(1,3);7,610(0,5);7,606(0,7);7,597(0,7);7,562(3,3);7,542(2,7);7,523(2,3);7,519(2,8);7,511(3,8);4,463(7,2);3,903(6,1);3,332(156,3);3,180(16,0);2,671(0,4);2,507(48,9);2,502(64,2);2,498(48,5);2,329(0,4);0,000(6,1)

### Beispiel No. A22-136: ¹H-NMR (400 MHz, d₆-DMSO δ, ppm)

7,684(1,0);7,665(2,3);7,641(0,9);7,634(0,9);7,626(1,0);7,619(1,2);7,613(0,4);7,607(0,6);7,599(0,7);7,551(0,3);7,532(1,8);7,529(1,8);7,524(2,3);7,516(3,2);7,515(2,9);7,505(0,3);7,315(3,6);7,304(11,9);7,296(1,3);7,286(1,2);7,279(0,8);7,275(0,7);7,264(0,7);4,362(8,8);3,902(5,6);3,389(0,5);3,348(102,0);3,309(0,5);3,133(16,0);2,672(0,3);2,524(1,2);2,511(21,4);2,507(39,7);2,502(50,1);2,498(36,2);2,494(17,4);0,000(4,1)

### Beispiel No.A22-143: ¹H-NMR (400 MHz, d₆-DMSO δ, ppm)

7,684(0,4);7,667(0,5);7,665(0,8);7,663(0,5);7,623(0,4);7,615(0,4);7,525(0,6);7,522(0,6);7,517(0,7);7,510(1,1);7,508(1,0);7,334(0,9);7,330(0,3);7,318(0,5);7,314(1,4);7,222(1,3);7,217(0,4);7,201(0,8);4,319(2,2);3,902(4,2);3,341(23,7);3,084(5,4);2,524(0,4);2,520(0,6);2,511(7,8);2,507(15,7);2,502(20,7);2,497(15,0);2,493(7,1);1,267(0,8);1,263(0,4);1,2 55(0,9);1,246(16,0);0,000(4,1)

### Beispiel No. A23-13: ¹H-NMR (400 MHz, CDCl₃ δ, ppm)

7,3941(1,6);7,3937(1,6);7,389(1,6);7,318(1,0);7,304(1,1);7,301(0,5);7,296(1,2);7,282(1,2);7,262(17,2);6,993(1,4);6,972(2,4);6,950(1,2);6,414(1,5);6,413(1,4);6,4084(1,4);6,40 76(1,4);4,383(4,7);3,300(16,0);2,475(10,3);1,612(1,4);0,000(7,6)

### Beispiel No. A23-15: ¹H-NMR (400 MHz, CDCI₃ δ, ppm)

7,399(1,9);7,394(1,7);7,379(0,7);7,363(0,7);7,263(16,0);6,812(0,5);6,810(0,6);6,782(0,7);6,780(0,6);6,4304(1,5);6,4298(1,5);6,4254(1,5);6,4247(1,5);5,300(1,6);4,417(2,9);4, 415(2,9);3,373(16,0);2,483(10,5);1,622(0,8);0,000(6,7)

### Beispiel No. A23-17: ¹H-NMR (400 MHz, CDCl₃ δ, ppm)

7,4064(1,6);7,4059(1,6);7,401(1,6);7,268(0,6);7,265(0,6);7,262(29,2);7,252(0,9);7,231(0,5);6,899(1,2);6,880(1,3);6,878(1,2);6,859(1,0);6,456(1,4);6,455(1,5);6,451(1,5);6,450 (1,4);5,300(0,6);4,392(3,2);3,436(16,0);2,489(10,2);1,589(3,6);0,000(12,5)

### Beispiel No. A23-59: ¹H-NMR (400 MHz, CDCl₃ δ, ppm)

7,405(1,7);7,400(1,8);7,264(13,2);7,234(0,8);7,221(0,9);7,215(1,0);7,209(1,2);7,203(2,7);7,002(0,5);6,983(0,8);6,977(0,5);6,450(1,5);6,449(1,5);6,445(1,5);6,444(1,5);5,300(3 ,8);4,478(3,4);4,473(3,6);3,400(16,0);2,490(10,7);1,652(1,0);0,000(5,4)

### Beispiel No. A23-63: ¹H-NMR (400 MHz, CDCI₃ δ, ppm)

7,602(1,6);7,597(0,7);7,586(0,8);7,580(3,0);7,577(0,6);7,529(2,6);7,523(0,7);7,512(0,5);7,507(1,4);7,402(1,6);7,398(1,6);7,262(33,9);6,426(1,5);6,4212(1,5);6,4206(1,4);5,300 (1,2);4,479(5,0);3,371(16,0);2,483(10,2);1,575(4,4);0,000(14,5)

### Beispiel No. A25-1: ¹H-NMR (400 MHz, d₆-DMSO δ, ppm)

7,608(3,6);7,602(1,3);7,591(1,5);7,585(3,8);7,578(0,5);7,495(1,2);7,492(1,2);7,476(1,5);7,473(1,4);7,393(0,9);7,389(1,0);7,375(1,3);7,370(1,5);7,355(0,6);7,350(0,6);7,336(1,4);7,331(1,1);7,317(1,0);7,312(0,7);7,292(1,2);7,289(1,1);7,273(1,4);7,270(1,3);7,255(0,5);7,252(0,4);7,121(0,5);7,114(3,8);7,109(1,4);7,097(1,2);7,092(3,4);4,468(0,3);4,412(7,2);3,903(6,7);3,831(16,0);3,466(1,0);3,409(14,9);3,389(1,3);3,360(79,4);3,169(0,3);2,672(0,4);2,525(1,2);2,511(22,7);2,507(43,2);2,502(55,2);2,498(40,4);2,493(19,8);2,329( 0,4);0,000(3,7)

### Beispiel No. A25-2: ¹H-NMR (400 MHz, d₆-DMSO δ, ppm)

7,613(3,6);7,608(1,2);7,596(1,4);7,591(4,0);7,584(0,5);7,398(2,3);7,349(0,7);7,348(0,7);7,343(0,9);7,334(5,4);7,325(2,3);7,322(1,7);7,316(0,8);7,306(0,3);7,119(0,5);7,113(3,9);7,107(1,3);7,090(3,5);7,083(0,4);4,363(7,6);3,903(6,4);3,830(16,0);3,429(15,1);3,326(55,6);2,671(0,3);2,506(42,6);2,502(53,5);2,497(38,9);2,493(19,1);2,328(0,3);0,008(0,5) ;0,000(11,5);-0,008(0,5)

### Beispiel No. A25-3: ¹H-NMR (400 MHz, d₆-DMSO δ, ppm)

7,623(0,3);7,616(2,5);7,611(0,9);7,599(0,9);7,594(2,8);7,587(0,3);7,374(16,0);7,118(0,4);7,111(2,7);7,106(0,9);7,094(0,8);7,089(2,5);4,364(6,0);3,902(3,7);3,830(11,6);3,454(10,7);3,326(59,7);2,511(14,7);2,506(27,6);2,502(35,7);2,497(26,2);2,493(12,9);0,008(0,4);0,000(7,9)

### Beispiel No. A25-5: ¹H-NMR (400 MHz, d₆-DMSO δ, ppm)

7,655(2,1);7,650(2,1);7,629(0,4);7,621(3,4);7,616(1,0);7,604(1,1);7,599(3,7);7,592(0,4);7,453(1,5);7,432(2,9);7,395(1,9);7,389(1,8);7,374(0,9);7,369(0,9);7,123(0,4);7,116(3,6);7,110(1,0);7,099(1,0);7,093(3,3);4,400(6,1);3,902(7,6);3,832(16,0);3,480(14,8);3,389(0,4);3,332(73,9);2,525(1,0);2,520(1,5);2,511(18,3);2,507(36,5);2,502(48,1);2,497(34,6) ;2,493(16,3);0,008(0,4);0,000(11,6);-0,009(0,4)

### Beispiel No. A25-7: ¹H-NMR (400 MHz, d₆-DMSO δ, ppm)

7,637(0,3);7,629(3,4);7,624(1,0);7,613(1,1);7,607(3,7);7,600(0,4);7,510(2,6);7,508(2,7);7,489(4,6);7,390(1,9);7,371(1,6);7,368(1,4);7,350(1,1);7,135(0,4);7,128(3,6);7,122(1,0);7,111(1,0);7,105(3,3);7,098(0,4);4,447(6,5);3,903(11,3);3,838(16,0);3,804(0,4);3,582(0,3);3,513(0,5);3,497(14,8);3,378(30,7);3,169(0,4);2,671(0,4);2,525(1,0);2,520(1,5);2,511(20,2);2,507(40,7);2,502(53,8);2,498(38,7);2,493(18,3);2,329(0,4);0,008(0,4);0,000( 12,0);-0,009(0,4)

### Beispiel No. A25-59: ¹H-NMR (400 MHz, d₆-DMSO δ, ppm)

7,623(3,6);7,618(1,3);7,606(1,6);7,601(3,9);7,594(0,6);7,433(0,4);7,418(0,5);7,413(1,2);7,398(1,2);7,392(1,1);7,378(1,2);7,364(2,0);7,347(0,7);7,344(0,6);7,262(0,8);7,259(0,7 );7,238(1,3);7,234(0,8);7,219(0,6);7,215(0,5);7,127(3,8);7,122(1,3);7,109(1,5);7,105(3, 5);7,097(0,5);4,354(4,7);4,350(4,4);3,902(6,6);3,837(16,0);3,503(14,7);3,389(1,3);3,355(81,1);2,671(0,4);2,511(26,7);2,507(48,1);2,502(59,6);2,498(44,0);2,493(22,8);2,329( 0,4);0,000(4,5)

### Beispiel No. A25-82: ¹H-NMR (400 MHz, d₆-DMSO δ, ppm)

7,672(1,8);7,668(1,8);7,637(0,6);7,618(1,1);7,606(0,5);7,599(3,5);7,594(1,1);7,588(0,4);7,582(1,2);7,577(3,9);7,573(1,2);7,552(1,1);7,532(0,4);7,115(0,4);7,108(3,7);7,103(1,1);7,091(1,1);7,086(3,3);7,079(0,4);4,454(5,8);3,903(5,9);3,828(16,0);3,463(0,6);3,423(14,7);3,325(52,3);2,671(0,3);2,524(1,2);2,511(21,2);2,506(40,8);2,502(52,8);2,497(38,2);2,493(18,3);2,329(0,3);0,008(0,6);0,000(15,1);-0,009(0,5)

### Beispiel No. A25-83: ¹H-NMR (400 MHz, d₆-DMSO δ, ppm)

7,695(1,8);7,674(2,7);7,619(0,4);7,611(3,5);7,606(1,6);7,600(2,7);7,595(1,9);7,589(4,0);7,580(1,8);7,115(0,4);7,108(3,7);7,103(1,1);7,091(1,0);7,086(3,3);4,466(5,2);3,902(5,9);3,829(16,0);3,464(15,0);3,340(104,6);2,671(0,3);2,525(1,0);2,511(20,4);2,507(40,3);2,502(52,8);2,498(38,1);2,493(18,0);2,329(0,3);0,000(4,1)

### Beispiel No. A25-143: ¹H-NMR (400 MHz, d₆-DMSO δ, ppm)

7,595(1,3);7,590(0,4);7,579(0,4);7,573(1,4);7,337(0,9);7,332(0,3);7,321(0,4);7,316(1,5);7,252(1,4);7,247(0,4);7,231(0,8);7,102(1,4);7,097(0,4);7,085(0,4);7,080(1,3);4,318(2,2);3,902(2,5);3,828(6,0);3,364(5,6);3,326(23,7);2,524(0,4);2,519(0,7);2,511(7,5);2,506(14,9);2,502(19,7);2,497(14,3);2,493(6,8);1,251(16,0);1,196(0,7);0,000(5,2)

### Beispiel No. A26-1: ¹H-NMR (400 MHz, CDCl₃ δ, ppm)

7,712(2,2);7,707(2,2);7,589(1,8);7,568(2,4);7,448(1,6);7,443(1,6);7,427(1,3);7,422(1,2);7,410(0,8);7,406(0,9);7,390(1,1);7,387(1,1);7,352(0,8);7,348(0,8);7,333(0,9);7,329(1,0);7,262(18,5);7,244(1,0);7,239(0,9);7,224(0,7);7,220(0,6);7,175(0,8);7,172(0,8);7,156(1,1);7,153(1,1);5,299(11,6);4,529(6,4);3,359(16,0);1,615(1,7);0,000(5,9)

### Beispiel No. A26-2: ¹H-NMR (400 MHz, CDCl₃ δ, ppm)

7,731(2,1);7,726(2,2);7,598(1,8);7,578(2,5);7,466(1,7);7,461(1,6);7,445(1,2);7,440(1,2);7,306(1,3);7,303(1,1);7,266(1,3);7,261(28,5);7,254(1,4);7,250(1,1);7,247(0,7);7,242(0, 7);7,239(2,4);7,237(3,4);7,233(1,4);7,227(0,9);7,225(1,1);7,223(1,0);5,299(6,0);4,402(6 ,9);3,386(16,0);1,582(4,1);0,000(9,8)

### Beispiel No. A26-3: ¹H-NMR (400 MHz, CDCl₃ δ, ppm)

7,725(2,2);7,720(2,2);7,599(1,8);7,578(2,5);7,458(1,7);7,453(1,5);7,437(1,3);7,432(1,2);7,309(0,9);7,302(0,6);7,294(1,2);7,287(5,6);7,282(2,8);7,279(5,7);7,272(1,5);7,261(42, 4);4,420(7,1);3,410(16,0);1,569(6,1);0,008(0,7);0,000(14,0)

### Beispiel No. A26-5: ¹H-NMR (400 MHz, CDCl₃ δ, ppm)

7,727(2,1);7,722(2,1);7,599(1,8);7,578(2,4);7,463(1,7);7,457(1,6);7,442(1,3);7,436(1,6);7,435(1,8);7,419(1,9);7,413(4,1);7,261(32,9);7,171(1,2);7,165(1,0);7,150(1,0);7,145(1, 0);5,299(3,8);4,537(6,5);3,446(16,0);1,572(5,4);0,000(11,4)

### Beispiel No. A26-7: ¹H-NMR (400 MHz, CDCl₃ δ, ppm)

7,760(2,3);7,755(2,3);7,610(1,9);7,589(2,7);7,499(1,7);7,494(1,6);7,479(1,2);7,473(1,1);7,342(2,4);7,322(4,1);7,261(32,4);7,218(1,7);7,200(1,4);7,197(1,3);7,178(0,9);5,300(3, 1);4,649(7,6);3,468(16,0);1,578(2,6);0,000(12,0)

### Beispiel No. A26-13: ¹H-NMR (400 MHz, CDCl₃ δ, ppm)

7,731(2,0);7,726(2,1);7,597(1,8);7,576(2,5);7,460(1,7);7,455(1,6);7,439(1,2);7,434(1,2);7,342(1,1);7,329(1,2);7,320(1,3);7,312(0,6);7,307(1,2);7,262(20,4);7,010(1,5);6,988(2, 7);6,966(1,3);5,299(14,2);4,428(5,3);3,409(16,0);1,600(2,0);0,000(6,9)

### Beispiel No. A26-15: ¹H-NMR (400 MHz, CDCl₃ δ, ppm)

7,744(1,9);7,739(2,0);7,602(1,7);7,581(2,4);7,476(1,7);7,470(1,6);7,455(1,2);7,450(1,2);7,416(0,6);7,400(0,6);7,261(35,0);6,822(1,3);6,801(1,5);5,300(9,3);4,463(3,0);4,461(3, 1);3,477(16,0);1,572(4,2);0,000(12,3)

### Beispiel No. A26-17: ¹H-NMR (400 MHz, CDCl₃ δ, ppm)

7,764(2,2);7,759(2,3);7,609(1,8);7,588(2,7);7,504(1,7);7,499(1,7);7,483(1,2);7,478(1,2);7,291(0,5);7,270(1,2);7,263(17,9);7,254(0,5);7,249(0,6);6,915(1,5);6,897(1,7);6,895(1, 6);6,876(1,3);5,300(4,3);4,438(4,0);3,539(16,0);1,617(0,9);0,000(6,2)

### Beispiel No. A26-59: ¹H-NMR (400 MHz, CDCl₃ δ, ppm)

7,761(2,2);7,755(2,3);7,608(1,9);7,587(2,7);7,500(1,7);7,495(1,6);7,480(1,2);7,475(1,1);7,263(15,0);7,253(1,0);7,239(1,0);7,233(1,1);7,225(1,3);7,220(2,5);7,025(0,6);7,021(0,6);7,005(0,5);7,002(0,9);6,996(0,6);5,300(2,8);4,524(4,0);4,520(4,1);3,505(16,0);1,620(0,9);0,000(5,4)

### Beispiel No. A26-61: ¹H-NMR (400 MHz, CDCl₃ δ, ppm)

7,758(2,1);7,753(2,1);7,656(0,8);7,653(0,8);7,646(0,7);7,645(0,8);7,638(0,9);7,634(1,0);7,627(1,1);7,625(1,1);7,601(1,8);7,580(2,5);7,556(0,6);7,553(0,6);7,537(1,1);7,534(1,0);7,518(0,6);7,514(0,5);7,492(1,7);7,487(1,6);7,471(1,2);7,466(1,2);7,409(0,7);7,406(0,7);7,390(1,1);7,387(1,1);7,262(20,4);5,300(2,3);4,568(6,2);3,558(16,0);1,609(1,3);0,00 0(7,1)

### Beispiel No. A26-63: ¹H-NMR (400 MHz, CDCl₃ δ, ppm)

7,737(2,0);7,732(2,1);7,616(1,7);7,611(0,7);7,604(1,9);7,600(1,0);7,594(3,4);7,591(0,7);7,583(2,4);7,551(3,0);7,546(0,8);7,535(0,6);7,530(1,5);7,468(1,6);7,463(1,6);7,448(1,3 );7,442(1,2);7,263(20,3);5,300(4,9);4,525(5,5);3,478(16,0);1,601(2,6);0,000(7,1)

### Beispiel No. A26-103: ¹H-NMR (400 MHz, CDCl₃ δ, ppm)

7,705(2,0);7,700(2,0);7,589(1,7);7,568(2,4);7,457(1,7);7,451(1,6);7,436(1,3);7,431(1,3);7,262(13,7);7,230(2,3);7,225(0,7);7,214(0,8);7,208(2,5);6,831(2,8);6,826(0,8);6,815(0, 8);6,809(2,5);4,374(5,6);3,788(15,2);3,340(16,0);0,000(5,0)

### Beispiel No. A26-159: ¹H-NMR (400 MHz, CDCl₃ δ, ppm)

7,701 (2,3);7,696(2,3);7,588(2,0);7,567(2,5);7,423(1,3);7,418(1,2);7,403(1,0);7,397(1,0);7,286(1,4);7,281(0,6);7,273(1,6);7,263(19,6);7,257(0,7);7,251(1,6);6,997(1,8);6,991(0,5);6,980(0,6);6,975(3,0);6,970(0,6);6,953(1,5);5,299(1,1);4,858(1,0);4,841(1,1);3,288(16,0);1,827(6,2);1,809(6,1);0,000(6,7)

### Beispiel No. A26-726: ¹H-NMR (400 MHz, CDCl₃ δ, ppm)

9,826(0,5);8,315(0,8);8,311(0,8);8,294(0,9);8,290(0,8);7,761(2,3);7,756(2,4);7,622(2,0);7,601(2,7);7,519(1,4);7,497(1,5);7,492(1,5);7,477(1,2);7,471(1,1);7,362(1,2);7,359(1,3 );7,342(1,3);7,339(1,3);7,260(239,2);7,234(0,8);7,230(0,7);7,060(0,8);7,056(0,8);7,040( 0,9);7,037(0,9);7,022(0,5);7,018(0,5);6,996(1,4);4,164(7,1);3,625(16,0);1,553(11,6);0,0 08(2,6);0,000(87,8);-0,009(2,5)

### Beispiel No. A26-728: ¹H-NMR (400 MHz, CDCl₃ δ, ppm)

10,486(0,6);7,778(2,2);7,773(2,3);7,760(1,0);7,755(1,9);7,750(1,0);7,647(1,9);7,626(2,6);7,519(0,6);7,510(1,7);7,505(1,6);7,489(1,3);7,484(1,2);7,426(0,6);7,423(0,7);7,421(0,7);7,418(0,6);7,405(0,8);7,403(0,8);7,400(0,8);7,398(0,8);7,261(106,7);7,230(1,0);7,209(2,2);7,189(1,1);7,072(0,8);7,070(0,9);7,067(0,9);7,065(0,8);7,052(0,6);7,050(0,7);7,047(0,7);7,045(0,6);6,996(0,6);3,997(7,5);3,637(16,0);1,564(15,1);0,008(1,3);0,000(38,2 );-0,009(1,0)

### Beispiel No. A26-748: ¹H-NMR (400 MHz, CDCl₃ δ, ppm)

10,642(0,7);8,000(1,5);7,778(2,4);7,773(2,5);7,708(0,7);7,690(0,8);7,651(2,3);7,630(3,0);7,519(2,4);7,512(1,5);7,507(1,4);7,491(1,1);7,486(1,1);7,427(0,6);7,407(1,3);7,387(0,9);7,374(0,9);7,349(1,1);7,330(0,7);7,310(0,5);7,292(0,6);7,282(0,6);7,281(0,6);7,2794(0,7);7,2786(0,7);7,278(0,7);7,276(0,9);7,2754(0,9);7,2746(1,1);7,273(1,4);7,272(1,5);7,271(1,7);7,2674(3,9);7,2666(4,5);7,260(407,4);7,251(1,7);7,250(1,3);7,249(1,2);7,246(0,8);7,236(0,5);7,209(0,6);7,148(0,9);6,996(2,3);4,024(5,8);3,644(16,0);1,556(18,9);0,146(0,5);0,008(4,6);0,000(149,2);-0,009(4,2)

### Beispiel No. A26-791: ¹H-NMR (400 MHz, CDCl₃ δ, ppm)

7,721(2,0);7,716(2,0);7,596(1,8);7,575(2,7);7,568(0,6);7,565(0,6);7,458(1,6);7,452(1,6);7,437(1,4);7,432(1,3);7,415(1,3);7,407(3,0);7,398(1,1);7,392(1,0);7,383(1,2);7,261(25,6);7,114(0,8);6,977(1,7);6,839(0,8);5,299(3,3);4,589(4,3);3,390(16,0);1,596(1,6);0,000(9,2)

### Beispiel No. A26-793: ¹H-NMR (400 MHz, CDCl₃ δ, ppm)

7,715(1,8);7,710(1,7);7,593(1,5);7,572(2,1);7,448(16,0);7,443(1,9);7,438(1,5);7,422(1,2);7,417(1,1);7,2693(0,5);7,2685(0,6);7,260(60,7);6,766(0,9);6,624(1,9);6,483(0,9);4,4 78(4,2);3,383(14,5);1,556(9,5);0,008(0,7);0,000(22,3);-0,009(0,6)

### Beispiel No. B6-1: ¹H-NMR (400 MHz, CDCl₃ δ, ppm)

7,528(0,5);7,523(3,4);7,522(2,5);7,519(2,1);7,517(1,7);7,507(2,4);7,501(11,3);7,497(2,7);7,488(2,7);7,484(11,4);7,478(2,2);7,468(1,5);7,464(2,3);7,462(3,5);7,431(1,9);7,427(1,9);7,413(2,3);7,408(2,3);7,402(2,1);7,399(2,3);7,383(2,4);7,379(2,6);7,293(0,8);7,282(0,5);7,281(0,6);7,2803(0,6);7,2795(0,6);7,279(0,7);7,278(0,8);7,277(0,8);7,276(0,9);7,2754(0,9);7,2747(1,1);7,274(1,1);7,273(1,2);7,2723(1,3);7,2715(1,4);7,271(1,6);7,270(1,8);7,269(2,1);7,268(2,3);7,2674(2,7);7,2667(3,2);7,260(263,3);7,253(1,0);7,252(0,9);7,2513(0,7);7,2505(0,7);7,248(1,4);7,243(1,4);7,229(2,5);7,225(2,3);7,210(2,3);7,205(1,7);7,183(2,0);7,179(2,1);7,164(2,8);7,161(2,8);7,146(1,0);7,142(1,0);6,996(1,5);5,299(1,7);4,598(16,0);3,832(1,9);3,814(6,2);3,796(6,3);3,778(1,9);1,555(15,9);1,179(6,7);1,161(15,9);1,143(6,5);0,008(3,0);0,006(1,3);0,0054(1,4);0,0046(1,7);0,000(90,5);-0,006(0,8);-0,007(0,7);-0,009(2,5)

### Beispiel No. B6-2: ¹H-NMR (400 MHz, CDCl₃ δ, ppm)

7,543(0,6);7,538(4,1);7,537(2,8);7,533(1,8);7,522(2,8);7,519(2,3);7,516(11,0);7,512(2,2);7,497(2,2);7,493(10,9);7,487(2,5);7,476(1,7);7,472(2,7);7,471(4,1);7,466(0,5);7,344(3,2);7,339(2,2);7,280(1,2);7,276(1,2);7,273(1,6);7,272(1,5);7,2684(2,5);7,2677(2,7);7,260(199,6);7,252(3,7);7,249(5,5);7,245(9,5);7,243(6,4);7,240(2,1);7,239(1,9);7,229(1,1);7,227(1,4);6,996(1,1);5,299(0,8);4,460(15,9);3,846(1,9);3,828(6,3);3,810(6,3);3,792(1, 9);1,560(10,1);1,211(6,8);1,193(16,0);1,175(6,6);0,008(2,4);0,000(71,9);-0,009(1,8)

### Beispiel No. B6-3: ¹H-NMR (400 MHz, CDCl₃ δ, ppm)

7,534(0,5);7,530(3,4);7,528(2,4);7,524(1,6);7,520(1,0);7,514(2,5);7,508(11,4);7,504(2,7);7,496(2,7);7,491(11,6);7,485(2,4);7,475(1,5);7,471(2,3);7,469(3,4);7,333(3,5);7,328(1,5);7,317(2,1);7,311(8,5);7,306(1,4);7,286(1,8);7,281(10,0);7,275(2,8);7,272(1,0);7,2713(1,0);7,2705(1,0);7,270(1,1);7,269(1,2);7,264(4,5);7,261(113,7);7,254(0,9);6,997(0,6);4,468(15,1);3,855(1,9);3,837(6,2);3,819(6,3);3,801(1,9);1,585(2,3);1,216(6,7);1,198(1 6,0);1,179(6,7);0,008(1,3);0,006(0,6);0,005(0,7);0,000(40,6);-0,009(1,1)

### Beispiel No. B6-5: ¹H-NMR (400 MHz, CDCl₃ δ, ppm)

7,533(0,6);7,529(3,4);7,528(2,3);7,523(1,6);7,520(1,0);7,513(2,4);7,507(11,9);7,503(2,8);7,495(2,7);7,491(11,7);7,485(2,3);7,476(4,7);7,471(2,4);7,469(3,3);7,465(0,6);7,455( 4,7);7,413(4,4);7,408(4,5);7,274(0,6);7,269(1,2);7,261(113,7);7,171(3,1);7,166(3,0);7,1 51(2,7);7,145(2,6);6,997(0,7);5,299(3,8);4,580(16,0);3,874(1,9);3,855(6,2);3,837(6,2);3,819(1,9);1,572(5,0);1,222(6,7);1,204(15,8);1,186(6,5);0,008(1,3);0,000(41,5);-0,009(1,1)

### Beispiel No. B6-7: ¹H-NMR (400 MHz, CDCl₃ δ, ppm)

7,571(0,6);7,566(4,8);7,561(1,9);7,550(2,6);7,544(9,5);7,539(1,6);7,509(1,7);7,504(9,8);7,498(2,5);7,487(1,9);7,483(3,4);7,482(4,8);7,476(0,6);7,343(5,5);7,324(8,7);7,262(69,1);7,210(3,8);7,192(3,0);7,189(2,8);7,170(2,2);5,299(6,0);4,752(16,0);3,919(1,7);3,901(5,5);3,883(5,5);3,864(1,7);1,605(1,3);1,244(6,1);1,226(14,2);1,207(5,9);0,008(0,8);0,00 0(24,3);-0,009(0,7)

### Beispiel No. B6-13: ¹H-NMR (400 MHz, CDCl₃ δ, ppm)

7,537(0,6);7,532(3,7);7,531(2,6);7,527(1,7);7,519(2,5);7,516(2,7);7,511(11,3);7,506(2,6);7,495(2,4);7,491(11,3);7,485(2,4);7,475(1,6);7,471(2,4);7,469(3,7);7,367(2,8);7,362(1,2);7,354(3,0);7,345(3,4);7,338(1,3);7,332(3,2);7,310(0,5);7,284(0,7);7,2833(0,7);7,2825(0,7);7,281(0,8);7,280(0,8);7,2793(0,9);7,2786(0,9);7,277(1,1);7,2754(1,3);7,2746(1,4);7,274(1,5);7,273(1,6);7,272(1,7);7,2713(1,9);7,2706(2,2);7,270(2,4);7,269(2,7);7,268(3,2);7,2673(3,6);7,2665(4,3);7,266(5,1);7,260(370,9);7,254(2,2);7,253(1,8);7,252(1,3);7,251(1,1);7,2504(1,0);7,2496(0,7);7,248(0,8);7,246(0,5);7,210(0,9);7,010(3,8);7,005(1,2);6,996(2,7);6,994(1,4);6,988(6,8);6,983(1,2);6,972(1,1);6,967(3,3);4,478(13,1);3,853(1,9);3,835(6,3);3,817(6,4);3,799(2,0);1,550(17,5);1,213(6,9);1,195(16,0);1,177(6,6);0,069(0,8);0,008(4,2);0,000(137,6);-0,009(3,8)

### Beispiel No. B6-15: ¹H-NMR (400 MHz, CDCl₃ δ, ppm)

7,544(0,7);7,539(4,1);7,538(2,9);7,534(1,8);7,523(2,7);7,517(11,2);7,513(2,2);7,498(2,3);7,493(11,2);7,488(2,5);7,477(1,7);7,473(2,8);7,472(4,1);7,467(1,4);7,451(1,1);7,446(1,6);7,430(1,6);7,407(0,6);7,261(83,8);6,849(0,9);6,843(1,2);6,827(1,1);6,820(4,3);6,813(0,7);6,799(4,1);6,795(1,3);6,780(0,9);6,778(0,9);6,774(0,5);6,772(0,6);4,506(8,7);3,894(1,9);3,876(6,4);3,858(6,4);3,840(2,0);1,593(2,1);1,235(7,0);1,217(16,0);1,199(6,7);0 ,008(1,0);0,000(30,0);-0,009(0,8)

### Beispiel No. B6-17: ¹H-NMR (400 MHz, CDCl₃ δ, ppm)

7,569(1,0);7,563(5,2);7,558(2,9);7,547(3,2);7,541(11,5);7,536(3,0);7,520(0,6);7,506(2,2);7,501(11,1);7,496(3,9);7,485(2,2);7,479(5,5);7,304(0,8);7,288(1,6);7,283(1,8);7,261(61,2);7,251(1,7);7,246(1,7);7,229(0,8);6,931(0,7);6,922(3,9);6,902(5,0);6,883(3,4);6,874(0,6);5,299(3,2);4,531 (12,5);3,958(2,2);3,940(6,8);3,922(6,9);3,904(2,2);1,604(2,2);1, 261(7,4);1,243(16,0);1,225(7,1);0,008(1,1);0,000(22,1)

### Beispiel No. B6-59: ¹H-NMR (400 MHz, CDCl₃ δ, ppm)

7,569(0,7);7,564(5,2);7,558(2,0);7,547(2,9);7,542(10,7);7,537(1,7);7,520(0,6);7,507(1,9);7,502(10,7);7,497(2,7);7,485(2,0);7,480(5,1);7,475(0,6);7,268(2,0);7,261(97,1);7,248(2,1);7,235(2,7);7,228(4,5);7,222(3,1);7,220(7,1);7,207(1,0);7,033(1,4);7,028(1,3);7,014(1,2);7,010(2,0);7,002(1,4);6,997(0,9);6,995(0,9);6,986(1,1);5,299(2,6);4,624(9,7);4,620(10,0);3,939(1,9);3,921(6,3);3,903(6,4);3,885(1,9);1,584(2,2);1,251(6,9);1,233(16,0 );1,215(6,7);0,008(1,2);0,000(34,5);-0,009(0,9)

### Beispiel No. B6-61: ¹H-NMR (400 MHz, CDCl₃ δ, ppm)

7,683(2,2);7,682(2,2);7,671(2,2);7,667(3,2);7,665(2,9);7,662(2,8);7,651(2,4);7,649(2,5);7,549(0,8);7,544(6,1);7,542(4,1);7,539(2,2);7,528(3,4);7,522(13,8);7,517(2,3);7,506(1,8);7,502(1,8);7,497(2,2);7,493(11,0);7,487(2,6);7,476(1,9);7,472(3,4);7,471(4,7);7,465(0,6);7,400(1,9);7,397(1,9);7,381(3,1);7,378(2,9);7,362(1,2);7,359(1,2);7,274(1,3);7,261(242,2);7,210(0,7);7,148(0,6);6,997(1,3);5,300(3,1);4,645(16,0);3,942(1,9);3,924(6,2);3,906(6,2);3,888(1,9);2,007(0,6);1,559(30,7);1,240(6,8);1,222(15,9);1,204(6,6);0,008(2,6);0,000(75,9);-0,009(2,0)

### Beispiel No. B6-63: ¹H-NMR (400 MHz, CDCl₃ δ, ppm)

7,618(0,7);7,615(4,0);7,610(1,7);7,599(2,5);7,593(9,0);7,590(1,9);7,558(8,0);7,553(2,1);7,542(1,6);7,537(4,0);7,533(3,7);7,531(2,4);7,526(1,6);7,520(1,5);7,516(2,4);7,511(12,1);7,507(3,0);7,500(3,0);7,496(12,0);7,490(2,1);7,480(1,4);7,476(2,1);7,474(3,1);7,280(0,6);7,261(195,1);6,997(1,1);5,299(1,1);4,552(14,6);3,884(1,8);3,866(6,2);3,848(6,3);3,830(1,9);1,561(9,2);1,242(6,8);1,224(16,0);1,206(6,6);0,008(2,3);0,000(67,9);-0,009(1,9)

### Beispiel No. B6-103: ¹H-NMR (400 MHz, CDCl₃ δ, ppm)

7,531(1,4);7,530(1,0);7,526(0,6);7,519(0,6);7,515(0,8);7,509(4,4);7,505(1,3);7,491(0,5);7,486(4,6);7,480(1,6);7,470(0,6);7,464(2,0);7,295(0,6);7,286(1,3);7,260(120,6);7,247(2,4);7,243(1,7);7,240(1,7);7,218(0,7);7,214(1,1);7,211(3,3);7,109(0,8);6,996(0,7);6,840(2,8);6,835(1,1);6,824(0,6);6,818(2,8);4,452(5,8);3,833(0,6);3,815(2,3);3,797(2,3);3,786(16,0);3,737(0,5);1,553(2,6);1,202(2,5);1,184(6,2);1,166(2,7);0,008(0,8);0,000(42,6);-0,008(2,1);-0,018(0,6);-0,050(1,2)

### Beispiel No. B6-159: ¹H-NMR (400 MHz, CDCl₃ δ, ppm)

7,519(1,2);7,506(1,0);7,504(0,9);7,498(0,8);7,491(1,1);7,484(16,0);7,481(10,7);7,479(15,9);7,472(0,8);7,465(0,7);7,459(0,8);7,457(0,9);7,330(2,8);7,325(1,2);7,317(3,0);7,309(3,5);7,301(1,4);7,295(3,3);7,287(0,6);7,278(0,6);7,276(0,8);7,274(0,9);7,273(1,1);7,272(1,3);7,271(1,4);7,270(1,6);7,269(1,7);7,260(193,6);7,253(0,5);6,999(3,6);6,993(1,1);6,982(1,2);6,977(6,2);6,972(1,1);6,961(1,0);6,955(3,0);4,983(0,7);4,966(2,2);4,948(2,3);4,931(0,7);3,768(1,1);3,763(0,9);3,750(3,1);3,745(2,9);3,731(3,0);3,727(3,1);3,713(0,9);3,709(1,2);1,837(13,9);1,819(13,6);1,558(4,1);1,140(6,0);1,122(14,2);1,104(5,9);0,008 (2,3);0,000(72,2);-0,009(1,9)

### Beispiel No. B6-791: ¹H-NMR (400 MHz, CDCl₃ δ, ppm)

7,579(1,4);7,563(1,8);7,557(1,5);7,537(0,6);7,533(3,7);7,531(2,7);7,527(1,7);7,520(1,1);7,517(2,7);7,511(11,8);7,507(2,7);7,496(3,8);7,491(12,2);7,485(3,1);7,475(2,9);7,471(2,8);7,469(3,8);7,465(0,6);7,429(0,6);7,426(0,7);7,412(1,8);7,410(1,9);7,408(1,7);7,401(2,0);7,395(3,8);7,389(1,2);7,382(1,6);7,379(1,5);7,261(99,1);7,140(2,1);7,003(4,4);6,997(0,7);6,865(2,2);4,647(11,3);3,851(1,9);3,833(6,3);3,815(6,4);3,797(2,0);1,582(3,2);1 ,203(6,9);1,185(16,0);1,167(6,8);0,008(1,2);0,000(36,3);-0,009(1,1)

### Beispiel No. B6-793: ¹H-NMR (400 MHz, CDCl₃ δ, ppm)

7,523(2,8);7,521(2,2);7,516(1,4);7,507(2,2);7,501(13,0);7,497(3,5);7,491(4,8);7,487(13,9);7,481(2,5);7,468(9,2);7,458(7,7);7,436(1,7);7,261(111,8);6,997(0,6);6,761(2,1);6,620(4,4);6,479(2,3);5,299(0,6);4,529(11,7);3,843(1,9);3,825(6,4);3,806(6,5);3,788(2,0);1,578(4,0);1,202(7,0);1,184(16,0);1,165(6,9);0,008(1,2);0,000(38,9);-0,009(1,2)

### Beispiel No. B17-681: ¹H-NMR (400 MHz, CDCl₃ δ, ppm)

8,056(1,7);8,038(1,7);7,520(0,6);7,268(0,5);7,261(96,9);7,085(1,2);7,055(1,2);6,997(0,6);4,748(5,0);4,741(5,1);3,997(1,0);3,978(3,4);3,960(3,4);3,942(1,0);3,426(1,3);3,402(4,0);3,378(4,1);3,355(1,4);2,521(9,3);2,445(16,0);1,373(3,5);1,354(8,0);1,336(3,5);0,008(1,2);0,000(42,2);-0,009(1,2)

### Beispiel No. C6-1: ¹H-NMR (400 MHz, CDCl₃ δ, ppm)

7,503(1,1);7,498(1,1);7,487(2,7);7,486(2,4);7,482(1,4);7,480(1,5);7,471(1,3);7,466(5,5);7,461(1,0);7,436(1,0);7,431(5,5);7,425(1,3);7,414(0,9);7,409(2,5);7,403(1,3);7,399(1,4);7,383(1,2);7,379(1,5);7,261(85,4);7,249(0,7);7,245(0,7);7,231(1,5);7,226(1,5);7,212(1,3);7,206(1,1);7,203(1,3);7,199(1,3);7,184(1,5);7,181(1,4);7,166(0,5);4,688(8,6);4,401(1,0);4,383(1,4);4,366(1,0);1,373(16,0);1,356(15,7);0,008(1,1);0,000(32,7);-0,009(0,9)

### Beispiel No. C6-3: ¹H-NMR (400 MHz, CDCl₃ δ, ppm)

7,492(2,5);7,490(1,8);7,486(1,0);7,475(1,5);7,470(5,6);7,465(1,1);7,442(1,1);7,437(5,6);7,432(1,5);7,421(1,1);7,417(1,7);7,415(2,6);7,380(2,5);7,374(0,9);7,363(1,1);7,358(4,0);7,352(0,6);7,303(0,7);7,297(4,8);7,291(1,4);7,280(1,1);7,275(2,9);7,269(0,8);7,268(0,7);7,261(57,8);4,553(7,7);4,413(1,1);4,395(1,5);4,378(1,1);1,613(0,8);1,412(16,2);1,39 4(16,0);0,008(0,6);0,000(20,1);-0,009(0,6)

### Beispiel No. C6-5: ¹H-NMR (400 MHz, CDCl₃ δ, ppm)

7,530(2,3);7,520(0,6);7,509(2,6);7,492(2,6);7,486(1,1);7,475(1,5);7,470(5,8);7,465(1,1);7,438(1,0);7,433(5,6);7,427(1,6);7,416(1,3);7,412(4,2);7,411(3,6);7,407(3,0);7,261(87,5);7,187(1,7);7,181(1,6);7,166(1,5);7,161(1,5);4,652(8,6);4,407(1,1);4,389(1,5);4,372(1,1);1,602(1,1);1,401(16,2);1,384(16,0);0,008(1,1);0,000(33,0);-0,009(1,1)

### Beispiel No. C6-7: ¹H-NMR (400 MHz, CDCl₃ δ, ppm)

7,502(2,4);7,500(1,7);7,496(1,2);7,486(1,9);7,480(11,3);7,477(3,2);7,471(3,1);7,468(11,2);7,461(1,8);7,452(1,2);7,447(1,8);7,446(2,4);7,353(5,6);7,334(8,7);7,262(58,4);7,214(3,4);7,195(3,0);7,192(2,7);7,174(2,0);5,300(0,8);4,890(16,0);4,483(0,7);4,465(1,8);4,448(2,4);4,430(1,8);4,413(0,7);1,645(1,0);1,442(26,8);1,424(26,5);0,008(0,7);0,000(22,2 );-0,009(0,6)

### Beispiel No. C6-13: ¹H-NMR (400 MHz, CDCl₃ δ, ppm)

7,491(2,5);7,490(1,7);7,486(1,0);7,475(1,4);7,469(5,5);7,464(1,0);7,442(1,0);7,437(5,5);7,432(1,4);7,421(1,1);7,415(2,9);7,413(1,8);7,408(0,7);7,400(1,6);7,391(1,8);7,383(0,7);7,378(1,7);7,268(0,5);7,267(0,6);7,266(0,9);7,261(58,4);7,256(0,6);7,025(2,0);7,019(0,6);7,008(0,7);7,003(3,7);6,997(0,9);6,987(0,6);6,981(1,8);5,299(0,9);4,561(6,6);4,413(1,0);4,396(1,4);4,378(1,1);3,490(2,8);2,006(6,5);1,610(0,6);1,410(16,1);1,392(16,0);1,3 44(0,5);1,328(0,5);0,008(0,6);0,000(19,6);-0,008(0,6)

### Beispiel No. C6-15: ¹H-NMR (400 MHz, CDCl₃ δ, ppm)

7,514(0,5);7,497(0,8);7,492(3,1);7,490(2,0);7,486(1,2);7,475(1,9);7,470(5,8);7,465(1,3);7,455(0,5);7,442(1,1);7,437(5,6);7,431(1,5);7,420(1,1);7,416(1,8);7,415(2,6);7,272(0,5);7,271(0,5);7,270(0,6);7,269(0,6);7,268(0,7);7,2674(0,8);7,2666(0,9);7,266(1,0);7,265(1,3);7,261(50,4);6,845(0,7);6,830(1,1);6,825(1,1);6,820(0,7);6,811(1,1);6,804(1,0);6,798(0,6);6,792(0,6);6,790(0,5);4,576(4,4);4,418(1,0);4,400(1,4);4,383(1,1);1,415(16,3);1, 397(16,0);1,344(0,6);1,328(0,5);0,008(0,6);0,000(19,4);-0,009(0,6)

### Beispiel No. C6-17: ¹H-NMR (400 MHz, CDCl₃ δ, ppm)

7,520(1,0);7,504(1,0);7,500(4,6);7,498(3,3);7,494(2,4);7,483(3,4);7,478(16,0);7,473(4,2);7,466(3,9);7,462(15,4);7,456(3,2);7,446(2,1);7,441(3,0);7,440(4,6);7,436(0,8);7,310(1,2);7,294(2,3);7,289(2,1);7,278(2,0);7,273(4,4);7,268(3,3);7,261(148,4);7,252(2,7);7,236(0,9);6,997(0,8);6,949(0,6);6,945(0,8);6,936(4,7);6,928(0,8);6,918(5,3);6,916(4,8);6,897(4,0);6,888(0,6);4,655(12,7);4,488(1,0);4,470(2,7);4,453(3,6);4,435(2,7);4,418(1,0); 1,630(2,5);1,455(40,7);1,438(39,8);1,347(1,1);1,330(1,1);1,294(0,5);0,008(1,9);0,000(5 3,6);-0,009(1,7)

### Beispiel No. C6-59: ¹H-NMR (400 MHz, CDCl₃ δ, ppm)

7,521 (0,5);7,500(4,0);7,498(2,8);7,494(1,9);7,484(3,0);7,478(16,0);7,474(3,9);7,467(4,0);7,463(15,6);7,458(2,8);7,448(1,9);7,443(2,9);7,442(4,0);7,437(0,8);7,274(1,2);7,272(0,7);7,262(87,2);7,254(3,0);7,241(4,1);7,237(7,2);7,236(5,7);7,232(4,3);7,227(7,4);7,217(1,3);7,212(0,6);7,047(1,8);7,042(1,8);7,029(1,5);7,024(2,6);7,014(1,9);7,011(1,3);7,001(1,4);6,998(0,7);5,300(2,8);4,755(12,5);4,751(12,6);4,486(1,0);4,468(2,6);4,451(3,5); 4,433(2,6);4,416(1,0);1,653(2,2);1,447(39,0);1,429(38,5);1,345(1,3);1,328(1,3);0,008(1,1);0,000(31,1);-0,009(0,8)

### Beispiel No. C6-61: ¹H-NMR (400 MHz, CDCl₃ δ, ppm)

7,729(2,3);7,711(2,7);7,710(2,7);7,680(2,2);7,677(2,3);7,661(2,5);7,658(2,6);7,549(1,6);7,545(1,6);7,529(3,1);7,526(3,0);7,520(1,5);7,510(1,8);7,507(1,7);7,496(0,7);7,490(5,2);7,489(3,6);7,485(2,1);7,474(2,9);7,469(11,6);7,464(2,2);7,441(2,1);7,436(11,3);7,430(2,9);7,419(2,1);7,415(3,5);7,414(5,3);7,409(0,7);7,400(2,0);7,397(2,0);7,381(3,1);7,378(3,2);7,362(1,4);7,359(1,4);7,261(244,6);6,997(1,4);5,300(2,8);4,734(16,0);4,449(0,8);4,432(2,1);4,414(3,0);4,397(2,2);4,379(0,8);1,581(6,2);1,422(32,9);1,405(32,4);0,008(3,0);0,000(93,2);-0,009(2,5)

### Beispiel No. C6-63: ¹H-NMR (400 MHz, CDCl₃ δ, ppm)

7,625(3,1);7,623(2,3);7,620(1,5);7,609(2,5);7,603(11,5);7,586(10,3);7,581(2,1);7,570(1,3);7,565(2,8);7,521(0,5);7,501(0,7);7,496(5,1);7,490(2,0);7,479(2,8);7,474(11,0);7,469(1,9);7,438(1,8);7,433(10,6);7,428(2,9);7,417(2,1);7,411(5,3);7,406(0,7);7,262(83,9);5,300(3,2);4,617(16,0);4,437(0,8);4,420(2,0);4,402(2,8);4,385(2,1);4,367(0,8);1,628(2,5);1,421(31,0);1,404(30,6);1,259(0,6);0,008(1,0);0,000(30,3);-0,009(0,9)

### Beispiel No. C6-159: ¹H-NMR (400 MHz, CDCl₃ δ, ppm)

7,520(1,8);7,492(0,9);7,487(5,3);7,482(2,0);7,470(2,7);7,465(10,8);7,460(1,7);7,429(1,9);7,423(10,7);7,418(2,9);7,413(3,7);7,407(3,1);7,401(6,4);7,391(4,0);7,383(1,5);7,378(3,7);7,261(300,1);7,211(0,6);7,030(0,5);7,022(4,3);7,016(1,3);7,005(1,5);7,000(7,8);6,997(2,8);6,983(1,3);6,978(3,8);5,220(0,6);5,202(2,1);5,184(2,1);5,166(0,7);4,419(0,7);4,401(1,9);4,384(2,6);4,366(2,0);4,349(0,7);1,852(16,0);1,834(16,0);1,640(1,2);1,514(0,6);1,495(1,0);1,479(1,0);1,394(12,7);1,377(12,6);1,358(0,7);1,342(0,7);1,319(13,3);1,302(13,1);1,294(1,3);1,278(1,1);1,255(1,0);0,008(3,5);0,000(117,2);-0,009(3,3)

### Beispiel No. C6-726: ¹H-NMR (400 MHz, CDCl₃ δ, ppm)

10,098(1,1);8,329(1,8);8,325(1,8);8,308(1,8);8,305(1,8);7,519(1,5);7,513(4,0);7,508(1,6);7,497(2,3);7,491(9,0);7,486(1,5);7,462(1,6);7,457(8,8);7,452(2,2);7,441(1,6);7,435(4,0);7,356(2,2);7,353(2,4);7,336(2,6);7,333(2,7);7,273(2,1);7,269(2,9);7,260(219,8);7,234(1,3);7,230(1,2);7,210(0,6);7,051(1,6);7,047(1,7);7,031(1,8);7,029(1,8);7,013(1,2);7,009(1,2);6,996(1,2);4,495(0,6);4,478(1,6);4,460(2,2);4,443(1,6);4,425(0,6);4,194(16,0);1,562(8,6);1,526(24,9);1,508(24,5);0,008(2,6);0,000(76,5);-0,009(1,9)

### Beispiel No. C6-728: ¹H-NMR (400 MHz, CDCl₃ δ, ppm)

10,770(1,6);7,774(2,6);7,769(4,8);7,764(2,5);7,545(0,7);7,540(5,1);7,534(2,0);7,523(2,7);7,518(10,9);7,513(1,7);7,483(1,9);7,478(10,4);7,472(2,8);7,461(2,1);7,456(6,6);7,451(2,1);7,436(1,9);7,434(2,0);7,431(2,1);7,428(1,8);7,310(0,6);7,296(0,6);7,260(399,1);7,226(2,5);7,206(4,9);7,186(2,7);7,064(2,2);7,061(2,3);7,059(2,2);7,056(2,1);7,044(1,7);7,041(1,7);7,039(1,8);7,036(1,7);6,996(2,2);4,525(0,7);4,508(1,9);4,490(2,6);4,473(2,0);4,455(0,8);4,021 (16,0);1,556(22,0);1,535(28,7);1,518(27,8);0,008(4,9);0,000(136,0);-0,009(3,6)

### Beispiel No. C6-737: ¹H-NMR (400 MHz, CDCl₃ δ, ppm)

10,612(1,2);8,264(0,7);8,249(0,8);8,241(1,4);8,226(1,4);8,219(0,9);8,204(0,9);7,522(3,7);7,519(3,2);7,516(1,7);7,506(2,2);7,500(9,8);7,495(1,9);7,478(1,9);7,474(9,7);7,468(2,2);7,457(1,5);7,452(3,8);7,312(0,9);7,286(0,6);7,260(348,8);7,212(0,8);6,996(2,0);6,864(0,9);6,857(1,2);6,852(1,9);6,846(1,9);6,836(1,2);6,831(2,6);6,826(1,7);6,810(1,3);6,803(0,8);4,521(0,6);4,503(1,7);4,485(2,3);4,468(1,7);4,450(0,6);4,089(16,0);1,552(30,1);1,534(26,6);1,516(25,9);0,008(4,1);0,000(125,1);-0,009(3,5)

### Beispiel No. C6-742: ¹H-NMR (400 MHz, CDCl₃ δ, ppm)

9,993(1,2);7,529(0,5);7,524(3,9);7,519(1,8);7,508(2,4);7,502(10,0);7,498(1,8);7,480(1,9);7,475(9,9);7,469(2,3);7,459(1,6);7,453(3,9);7,261(120,4);7,211(0,6);7,204(0,5);7,189(0,9);7,183(0,8);7,174(0,5);7,168(1,8);7,162(0,7);7,153(0,8);7,147(1,1);7,131(0,6);6,997(0,7);6,941(0,6);6,934(3,4);6,924(0,5);6,920(0,7);6,914(4,4);6,894(2,4);5,299(1,6);4,535(0,6);4,517(1,7);4,500(2,4);4,482(1,7);4,465(0,6);4,135(16,0);1,616(2,9);1,550(26,4);1,533(26,0);0,008(1,4);0,000(41,7);-0,009(1,1)

### Beispiel No. C6-748: ¹H-NMR (400 MHz, CDCl₃ δ, ppm)

10,918(1,5);8,021(2,9);7,732(1,5);7,711(1,6);7,547(0,6);7,542(5,0);7,536(1,9);7,525(2,5);7,520(10,7);7,515(1,7);7,482(1,6);7,477(9,8);7,472(2,5);7,461(1,9);7,455(4,8);7,450(0,6);7,420(1,0);7,401(2,5);7,381(1,6);7,374(0,6);7,340(2,2);7,320(1,4);7,260(238,6);6,996(1,3);4,533(0,6);4,516(1,7);4,498(2,4);4,481(1,8);4,463(0,7);4,057(16,0);1,615(5,3);1,542(26,7);1,524(26,5);0,008(2,4);0,000(81,0);-0,009(2,4)

### Beispiel No. C6-761: ¹H-NMR (400 MHz, CDCl₃ δ, ppm)

11,302(1,7);7,772(0,8);7,767(6,1);7,762(2,1);7,750(2,3);7,745(8,1);7,739(1,1);7,598(1,2);7,592(7,9);7,587(2,3);7,575(2,0);7,570(6,1);7,565(0,8);7,553(0,7);7,548(5,4);7,543(2,0);7,532(2,6);7,526(9,9);7,521(1,9);7,480(1,6);7,474(9,7);7,469(2,6);7,458(2,0);7,452(5,3);7,447(0,6);7,261(138,4);6,997(0,8);4,538(0,6);4,521(1,7);4,503(2,4);4,486(1,8);4,468(0,6);4,034(16,0);1,613(5,8);1,543(26,3);1,526(26,0);0,008(1,4);0,000(46,4);-0,009(1,3)

### Beispiel No. C6-791: ¹H-NMR (400 MHz, CDCl₃ δ, ppm)

7,595(0,8);7,577(1,0);7,554(0,9);7,535(1,1);7,493(2,5);7,491(1,8);7,487(1,1);7,476(1,5);7,471(5,5);7,466(1,2);7,448(0,6);7,443(1,3);7,438(5,9);7,433(2,5);7,422(1,2);7,417(3,0);7,410(1,2);7,405(1,0);7,389(0,9);7,261(53,4);7,179(1,0);7,041(2,1);6,903(1,1);4,724(5,7);4,412(1,0);4,395(1,4);4,377(1,0);1,397(16,0);1,379(15,7);1,346(0,7);1,330(0,7);0,00 8(0,8);0,000(18,9);-0,008(0,6)

### Beispiel No. C6-793: ¹H-NMR (400 MHz, CDCl₃ δ, ppm)

7,536(1,7);7,516(3,2);7,491(2,4);7,486(1,1);7,474(4,3);7,469(7,0);7,464(1,2);7,454(1,6);7,440(1,1);7,435(5,9);7,430(1,4);7,419(1,0);7,414(2,6);7,261(56,2);6,768(1,1);6,627(2,2);6,486(1,1);4,616(6,3);4,411(1,1);4,394(1,5);4,376(1,1);1,606(0,6);1,405(16,2);1,387(16,0);0,008(0,7);0,000(19,9);-0,009(0,6)

### Beispiel No. C18-13: ¹H-NMR (400 MHz, CDCl₃ δ, ppm)

8,523(4,6);8,521(4,8);8,517(4,9);8,515(4,7);7,843(4,8);7,837(4,6);7,822(5,4);7,816(5,2);7,521(0,7);7,501(5,9);7,499(5,9);7,481(5,3);7,479(5,2);7,421(3,8);7,416(1,6);7,408(4,0);7,399(4,3);7,392(1,7);7,386(4,2);7,270(0,9);7,262(115,8);7,038(0,6);7,030(5,0);7,025(1,5);7,014(1,6);7,009(9,0);7,003(1,6);6,998(0,9);6,992(1,4);6,987(4,4);5,300(4,9);4,573(16,0);4,411(1,0);4,394(2,6);4,376(3,6);4,359(2,6);4,341(1,0);1,584(3,5);1,443(40,1);1,425(39,5);1,256(0,6);0,008(1,5);0,006(0,6);0,0054(0,6);0,0046(0,8);0,000(48,0);-0,009(1,4)

### Beispiel No. C18-15: ¹H-NMR (400 MHz, CDCl₃ δ, ppm)

8,523(5,8);8,521(6,1);8,517(6,0);8,515(5,8);7,843(5,9);7,837(5,8);7,823(6,6);7,817(6,5);7,526(1,5);7,510(1,7);7,503(8,4);7,501(7,5);7,489(2,9);7,482(7,8);7,481(7,3);7,466(1,3 );7,264(61,3);6,857(1,3);6,851(2,1);6,844(0,8);6,839(2,0);6,838(2,4);6,832(2,6);6,830(2,7);6,826(2,2);6,819(3,3);6,812(1,9);6,810(2,0);6,804(2,0);6,800(2,0);6,798(1,6);6,792(0,9);5,300(16,0);4,590(13,0);4,589(12,9);4,416(1,2);4,398(3,2);4,381(4,5);4,363(3,3);4,346(1,2);1,636(1,8);1,450(49,9);1,432(49,1);0,008(0,8);0,000(25,2);-0,009(0,7)

### Beispiel No. C18-17: ¹H-NMR (400 MHz, CDCl₃ δ, ppm)

8,542(6,0);8,541(6,4);8,536(6,4);8,534(6,0);7,868(6,6);7,862(6,2);7,848(7,2);7,841(7,1);7,522(0,7);7,508(7,9);7,507(7,9);7,488(7,0);7,486(6,8);7,319(1,0);7,303(2,1);7,298(1,8);7,287(1,3);7,281(4,1);7,276(1,6);7,274(0,7);7,273(0,7);7,272(0,7);7,2714(0,8);7,2707(1,0);7,270(1,0);7,269(1,1);7,268(1,4);7,263(104,9);7,256(0,7);7,244(1,1);6,999(0,6);6,954(0,6);6,950(0,9);6,941(5,8);6,933(0,7);6,929(0,9);6,923(6,4);6,921(5,9);6,914(1,1);6,910(0,7);6,902(5,0);6,893(0,7);6,890(0,5);5,300(6,4);4,667(16,0);4,466(1,3);4,449(3,4);4,431(4,8);4,414(3,5);4,396(1,3);1,621(0,5);1,595(5,0);1,480(53,7);1,463(52,9);1,256(0,6);0,008(1,4);0,005(0,6);0,004(0,8);0,000(46,8);-0,005(0,7);-0,009(1,3)

### Beispiel No. C18-19: ¹H-NMR (400 MHz, CDCl₃ δ, ppm)

8,531(4,0);8,529(4,3);8,525(4,4);8,523(4,2);7,852(4,3);7,846(4,1);7,831(4,7);7,825(4,7);7,508(5,2);7,506(5,3);7,487(4,7);7,485(4,7);7,262(76,4);7,007(0,6);7,001(0,5);6,996(2,7);6,990(3,3);6,987(1,9);6,979(1,8);6,976(3,2);6,970(2,8);6,959(0,6);6,758(0,8);6,752(1,4);6,746(0,7);6,735(1,5);6,730(2,8);6,724(1,3);6,713(0,8);6,707(1,4);6,702(0,7);5,300(6,6);4,567(16,0);4,429(0,8);4,411(2,3);4,394(3,2);4,376(2,4);4,359(0,9);1,582(12,6);1,4 71(35,9);1,453(35,4);0,008(1,0);0,000(33,7);-0,009(0,9)

### Beispiel No. C18-59: ¹H-NMR (400 MHz, CDCl₃ δ, ppm)

8,546(5,9);8,544(6,2);8,540(6,3);8,538(6,0);7,871(6,0);7,865(6,0);7,850(6,7);7,844(6,7);7,521(1,2);7,510(7,3);7,508(7,5);7,489(6,7);7,487(6,7);7,283(1,3);7,262(198,7);7,250(5,0);7,244(11,9);7,238(5,2);7,235(11,9);7,223(1,8);7,218(0,5);7,053(2,2);7,048(2,2);7,042(0,6);7,034(1,9);7,030(3,2);7,021(2,3);7,016(1,5);7,007(1,8);6,998(1,2);5,300(8,4);4,770(15,2);4,765(16,0);4,465(1,2);4,448(3,3);4,430(4,6);4,413(3,4);4,395(1,2);1,575(24, 9);1,474(50,6);1,456(49,9);1,354(0,8);1,338(0,8);1,256(0,6);0,008(2,3);0,000(78,1);-0,009(2,1)

### Beispiel No. C18-61: ¹H-NMR (400 MHz, CDCl₃ δ, ppm)

8,520(4,0);8,518(4,3);8,514(4,3);8,512(4,1);7,842(4,2);7,835(4,1);7,821(4,8);7,815(4,6);7,734(2,2);7,732(2,2);7,731(1,9);7,716(2,3);7,715(2,8);7,713(2,7);7,686(2,1);7,683(2,3);7,667(2,4);7,664(2,5);7,558(1,6);7,555(1,7);7,539(3,1);7,535(3,0);7,520(1,9);7,516(1,7);7,501 (5,2);7,499(5,3);7,481(4,7);7,479(4,7);7,410(2,0);7,407(2,1);7,391(3,2);7,388(3,2);7,372(1,4);7,368(1,4);7,271(0,5);7,270(0,6);7,269(0,7);7,268(0,8);7,2673(1,1);7,2665(1,4);7,262(90,0);6,998(0,5);5,300(8,9);4,740(16,0);4,431(0,8);4,413(2,2);4,396(3,0);4,378(2,2);4,361(0,9);2,045(0,8);1,580(7,3);1,456(34,1);1,439(33,6);1,259(0,9);0,008(1,1);0,000(41,5);-0,009(1,1)

### Beispiel No. C18-63: ¹H-NMR (400 MHz, CDCl₃ δ, ppm)

8,522(2,5);8,520(2,7);8,516(2,7);8,514(2,6);7,840(2,7);7,833(2,6);7,819(3,0);7,813(2,9);7,633(1,8);7,631(1,3);7,627(0,9);7,617(1,5);7,611(8,1);7,599(7,3);7,593(1,3);7,583(0,8);7,577(1,6);7,507(3,3);7,505(3,4);7,486(2,9);7,484(3,0);7,265(28,1);5,301(16,0);4,630(10,9);4,419(0,5);4,401(1,4);4,384(2,0);4,366(1,5);4,349(0,6);2,045(0,7);1,620(3,1);1,46 2(22,4);1,444(22,2);1,259(0,8);0,000(12,3)

### Beispiel No. C18-159: ¹H-NMR (400 MHz, CDCl₃ δ, ppm)

8,501(4,0);8,499(4,1);8,495(4,2);8,493(4,0);7,821(4,0);7,814(4,0);7,800(4,5);7,794(4,5);7,491(4,9);7,489(5,0);7,470(4,5);7,468(4,5);7,413(3,3);7,408(1,3);7,400(3,5);7,396(1,6);7,392(3,8);7,384(1,4);7,378(3,6);7,270(0,5);7,269(0,6);7,268(0,7);7,267(1,0);7,263(54,7);7,024(4,2);7,019(1,2);7,010(0,6);7,008(1,3);7,003(7,5);6,997(1,3);6,986(1,2);6,981(3,7);5,300(12,6);5,206(0,8);5,189(2,6);5,171(2,6);5,153(0,8);4,392(0,8);4,374(2,1);4,357(2,9);4,339(2,2);4,322(0,8);1,857(16,0);1,840(15,9);1,609(8,0);1,416(12,9);1,399(12,7);1,349(13,4);1,337(1,1);1,331(13,2);1,256(0,6);0,008(0,7);0,000(23,2);-0,009(0,6)

### Beispiel No. C18-791: ¹H-NMR (400 MHz, CDCl₃ δ, ppm)

8,521 (5,9);8,519(6,2);8,515(6,3);8,513(6,0);7,844(6,2);7,838(5,9);7,824(6,9);7,817(6,8);7,592(2,2);7,575(2,8);7,562(2,4);7,543(3,0);7,521(0,7);7,503(7,4);7,501(7,5);7,483(6,7);7,481(6,8);7,457(1,0);7,454(1,1);7,439(2,6);7,435(2,4);7,421(2,2);7,419(2,1);7,415(3,1);7,410(2,6);7,395(2,5);7,377(0,9);7,272(0,5);7,271(0,6);7,270(0,7);7,2694(0,9);7,2686(1,0);7,268(1,2);7,267(1,5);7,262(109,5);7,212(0,5);7,165(3,2);7,027(6,6);6,998(0,6);6 ,889(3,3);5,300(7,3);4,736(16,0);4,409(1,2);4,392(3,2);4,374(4,5);4,357(3,3);4,339(1,2);1,592(7,1);1,427(50,2);1,409(49,7);0,008(1,4);0,000(46,9);-0,009(1,3)

### Beispiel No. C18-792: ¹H-NMR (400 MHz, CDCl₃ δ, ppm)

8,515(1,9);8,513(2,0);8,509(2,0);8,507(1,9);7,836(1,9);7,830(1,8);7,816(2,2);7,810(2,1);7,545(0,8);7,533(1,5);7,531(1,5);7,529(1,4);7,499(2,4);7,497(2,4);7,478(2,1);7,476(2,1);7,431(3,0);7,428(3,7);7,421(0,8);7,415(1,2);7,263(22,8);6,765(1,1);6,624(2,3);6,483(1,1);5,300(2,6);4,619(7,5);4,381(1,1);4,364(1,5);4,346(1,1);1,619(1,4);1,411 (16,2);1,394 (16,0);0,000(9,3)

### Beispiel No. C18-793: ¹H-NMR (400 MHz, CDCl₃ δ, ppm)

8,521(5,9);8,519(6,3);8,515(6,2);8,513(6,0);7,840(6,5);7,834(6,2);7,820(7,3);7,814(6,8);7,544(4,2);7,523(8,1);7,501(7,8);7,500(7,8);7,481(13,4);7,479(13,9);7,459(3,9);7,274(0,6);7,2733(0,7);7,2725(0,7);7,272(0,8);7,271(0,9);7,270(1,0);7,2693(1,1);7,2685(1,2);7,268(1,4);7,267(1,8);7,266(2,3);7,265(3,2);7,262(127,0);7,258(2,5);7,257(1,6);7,2563(1,1);7,2555(0,7);6,998(0,8);6,769(3,0);6,628(6,1);6,487(3,1);5,300(11,9);4,626(16,0);4,409(1,3);4,391(3,4);4,374(4,7);4,356(3,5);4,339(1,3);2,335(0,5);1,588(15,0);1,438(52,7);1,429(2,6);1,421(52,0);1,412(1,7);1,354(1,6);1,337(1,6);1,334(0,5);1,285(0,6);1,256(1,0);0,008(1,7);0,007(0,5);0,006(0,6);0,005(0,7);0,004(0,9);0,002(2,3);0,000(54,3);-0,005(0,8);-0,006(0,6);-0,009(1,4)

### Beispiel No. D1-4: ¹H-NMR (400 MHz, CDCl₃ δ, ppm)

7,563(2,2);7,559(2,3);7,543(2,4);7,540(2,5);7,380(2,4);7,376(2,4);7,360(2,9);7,356(2,8);7,264(17,8);7,128(3,0);7,108(4,5);7,088(2,4);4,599(16,0);2,881(0,6);2,871(1,2);2,864(1,4);2,854(2,2);2,847(0,7);2,844(1,3);2,836(1,2);2,827(0,6);1,963(0,6);1,951(1,2);1,943(1,2);1,938(0,7);1,930(2,5);1,922(0,8);1,917(1,3);1,909(1,3);1,897(0,7);1,155(0,9);1,143(2,9);1,137(3,4);1,131(2,8);1,128(3,1);1,125(4,3);1,121(3,1);1,115(2,9);1,107(2,3);1,103(2,4);1,101(1,9);1,098(1,6);1,090(1,3);1,088(1,3);1,085(0,8);1,073(0,7);1,068(0,6);1,052(0,9);1,049(1,9);1,046(1,5);1,040(3,6);1,038(3,3);1,034(4,7);1,028(4,5);1,024(3,2);1,022(3,8);1,020(4,3);1,013(3,8);1,005(0,7);1,002(1,2);0,000(6,4)

### Beispiel No. D1-5: ¹H-NMR (400 MHz, CDCl₃ δ, ppm)

7,603(4,2);7,583(4,6);7,519(0,9);7,388(4,6);7,382(4,7);7,260(169,8);7,164(3,1);7,158(2,9);7,143(2,8);7,138(2,7);6,996(0,9);4,532(16,0);2,898(0,5);2,888(1,2);2,880(1,3);2,870(2,1);2,861(1,3);2,853(1,2);2,843(0,6);1,967(0,6);1,955(1,3);1,947(1,3);1,942(0,8);1,934(2,7);1,926(0,8);1,922(1,3);1,913(1,4);1,901(0,7);1,568(0,8);1,169(0,6);1,157(2,0);1,151(2,2);1,145(2,6);1,135(1,8);1,127(3,2);1,122(1,8);1,118(1,1);1,113(2,4);1,109(2,4);1,107(2,0);1,104(1,6);1,095(1,4);1,090(0,7);1,078(0,7);1,075(0,8);1,058(2,0);1,050(3,3);1,043(4,7);1,040(4,0);1,038(4,0);1,033(3,6);1,028(5,1);1,022(2,7);1,020(2,3);1,010(1,3); 0,008(2,0);0,000(64,6);-0,009(1,7)

### Beispiel No. D1-15: ¹H-NMR (400 MHz, CDCl₃ δ, ppm)

7,573(1,7);7,556(1,9);7,552(3,4);7,536(3,3);7,529(1,9);7,519(1,8);7,513(1,6);7,260(278,6);7,2543(1,5);7,2535(1,0);7,253(0,8);7,252(0,7);7,251(0,6);6,996(1,5);6,826(1,6);6,820(2,7);6,815(1,1);6,810(2,4);6,808(2,5);6,804(2,7);6,798(3,4);6,795(3,7);6,790(4,4);6,783(2,1);6,778(2,1);6,771(3,3);6,762(1,2);4,457(16,0);2,922(1,1);2,912(2,2);2,905(2,5);2,895(3,9);2,889(1,4);2,885(2,4);2,878(2,3);2,868(1,1);1,980(1,2);1,967(2,5);1,959(2,5);1,954(1,5);1,946(5,2);1,938(1,6);1,934(2,6);1,926(2,8);1,913(1,4);1,185(3,6);1,179(3,8);1,173(3,9);1,154(2,0);1,143(1,9);1,135(5,4);1,129(3,6);1,121(4,6);1,117(4,9);1,115(3,8);1,112(3,3);1,102(3,5);1,091(1,8);1,083(1,4);1,073(2,5);1,064(7,7);1,056(8,9);1,054(8, 2);1,047(7,9);1,042(10,0);1,037(6,4);1,031(2,9);1,024(1,9);0,008(3,3);0,000(105,8);-0,009(2,8)

### Beispiel No. D1-17: ¹H-NMR (400 MHz, CDCl₃ δ, ppm)

7,520(0,7);7,286(1,1);7,270(2,8);7,261(133,2);7,254(1,9);7,249(4,3);7,244(1,4);7,233(1,8);7,228(2,3);7,212(1,3);6,997(0,7);6,925(0,6);6,921(0,8);6,912(5,7);6,904(0,8);6,900(1,0);6,893(6,4);6,891(5,9);6,885(1,1);6,880(0,8);6,872(5,0);6,863(0,7);6,860(0,5);4,529(16,0);2,949(1,0);2,939(1,8);2,932(2,0);2,930(1,7);2,922(3,8);2,916(1,4);2,912(2,0);2,905(1,9);2,895(1,1);1,997(1,1);1,984(2,3);1,976(2,4);1,971(1,4);1,963(4,9);1,955(1,5);1,951(2,4);1,943(2,7);1,930(1,3);1,199(1,1);1,187(3,7);1,181(4,0);1,175(3,8);1,169(3,9);1,159(1,7);1,153(0,9);1,151(0,9);1,135(2,9);1,131(4,8);1,129(3,4);1,125(3,4);1,122(3,9);1,120(3,4);1,118(3,7);1,114(4,9);1,111(3,7);1,108(4,3);1,106(4,0);1,103(3,2);1,102(3,7);1,098(3,9);1,096(3,8);1,093(3,7);1,089(5,7);1,087(7,4);1,084(5,5);1,083(6,3);1,080(3,8);1,077(5,2);1,074(2,7);1,071(2,9);1,062(5,4);1,056(4,6);1,051(3,1);1,041(5,1);1,035(4, 4);1,023(1,7);0,008(1,6);0,006(0,5);0,005(0,7);0,000(51,0);-0,005(0,8);-0,006(0,7);-0,007(0,6);-0,009(1,6)

### Beispiel No. D1-22: ¹H-NMR (400 MHz, CDCl₃ δ, ppm)

8,666(2,2);8,508(1,5);8,497(1,5);7,865(1,5);7,846(1,5);7,263(76,9);7,251(1,6);7,243(1,5);7,231(1,3);4,457(16,0);2,910(0,7);2,901(1,5);2,893(1,7);2,883(2,7);2,877(0,9);2,873(1,7);2,866(1,6);2,856(0,8);1,968(0,8);1,955(1,7);1,947(1,7);1,942(1,0);1,935(3,5);1,926(1,1);1,922(1,7);1,914(1,8);1,901(0,9);1,154(1,4);1,150(0,9);1,148(1,0);1,145(1,8);1,142(4,2);1,135(5,1);1,130(6,3);1,127(4,6);1,123(5,3);1,114(4,6);1,111(2,7);1,108(2,1);1,100(1,5);1,098(1,7);1,090(0,9);1,085(1,0);1,078(1,0);1,063(1,1);1,058(1,8);1,054(2,5);1,050(3,4);1,045(6,9);1,040(5,4);1,036(5,3);1,034(5,1);1,031(2,3);1,025(5,6);1,018(3,7);1,016(2,5);1,006(1,4);0,008(0,8);0,000(27,9);-0,009(0,9)

### Beispiel No. D1-43: ¹H-NMR (400 MHz, CDCl₃ δ, ppm)

7,431(0,7);7,425(6,1);7,420(2,1);7,409(2,6);7,404(9,1);7,398(1,1);7,320(1,1);7,315(7,9);7,309(2,2);7,298(1,9);7,293(5,3);7,287(0,6);7,261(40,9);4,399(16,0);2,890(0,7);2,880(1,4);2,872(1,6);2,863(2,5);2,857(0,8);2,853(1,5);2,845(1,5);2,836(0,8);1,965(0,7);1,952(1,4);1,944(1,5);1,939(0,8);1,931(3,1);1,923(0,9);1,919(1,5);1,911(1,7);1,898(0,8);1,652(1,0);1,151(1,2);1,142(1,6);1,139(3,6);1,133(4,2);1,129(2,1);1,126(3,3);1,124(3,7);1,120(4,1);1,115(3,3);1,112(3,9);1,109(2,6);1,100(2,6);1,097(2,8);1,094(2,3);1,091(1,9);1,085(1,9);1,082(1,7);1,074(1,2);1,064(1,1);1,048(4,2);1,039(6,2);1,033(5,0);1,030(4,9);1,027(4,7);1,025(4,0);1,021(3,3);1,019(4,2);1,012(3,6);1,010(2,0);1,007(1,0);1,005(0,8);1,000(1,4);0,000(17,7);-0,009(0,6)

### Beispiel No. D1-61: ¹H-NMR (400 MHz, CDCl₃ δ, ppm)

7,780(2,2);7,779(2,2);7,761(2,6);7,759(2,5);7,650(2,1);7,647(2,2);7,631(2,4);7,628(2,5);7,519(1,4);7,516(1,4);7,500(2,8);7,496(2,7);7,480(1,6);7,477(1,5);7,369(1,8);7,366(1,8);7,350(2,9);7,347(2,9);7,331(1,2);7,328(1,2);7,267(16,0);4,612(16,0);2,936(0,6);2,926(1,3);2,918(1,5);2,908(2,5);2,899(1,5);2,891(1,4);2,881(0,7);1,974(0,6);1,961(1,3);1,953(1,4);1,949(0,8);1,941(2,8);1,932(0,9);1,928(1,4);1,920(1,5);1,907(0,7);1,168(0,6);1,166(0,7);1,159(1,2);1,155(1,4);1,147(5,7);1,141(4,1);1,135(5,3);1,132(5,0);1,128(5,4);1,119(2,0);1,116(1,5);1,105(0,5);1,095(1,2);1,079(0,6);1,065(1,4);1,056(4,1);1,052(2,9);1,047(6,3);1,041(4,7);1,038(3,2);1,035(3,3);1,026(3,7);1,020(2,9);1,008(1,1);0,000(5,8)

### Beispiel No. D1-63: ¹H-NMR (400 MHz, CDCl₃ δ, ppm)

7,576(16,0);7,262(30,6);5,299(0,5);4,478(10,4);2,912(0,7);2,904(0,8);2,894(1,3);2,885(0,8);2,877(0,7);1,955(0,7);1,947(0,7);1,935(1,5);1,922(0,7);1,914(0,8);1,154(1,0);1,150(1,5);1,144(2,0);1,140(1,7);1,137(2,5);1,136(2,5);1,131(2,3);1,127(0,8);1,123(2,0);1,1194(1,3);1,1185(1,4);1,116(1,2);1,113(0,9);1,105(0,6);1,104(0,7);1,084(0,6);1,061(0,9);1,057(0,7);1,055(1,0);1,052(1,8);1,047(2,4);1,043(2,1);1,041 (2,3);1,038(1,9);1,034(2,3); 1,032(2,9);1,029(1,2);1,025(1,8);1,013(0,8);0,000(11,7)

### Beispiel No. D1-81: ¹H-NMR (400 MHz, CDCl₃ δ, ppm)

7,767(4,0);7,748(4,5);7,653(3,9);7,634(4,4);7,481(1,9);7,463(4,1);7,444(2,4);7,387(2,8);7,367(4,1);7,348(1,7);7,264(45,0);4,668(15,9);4,666(16,0);3,489(15,8);2,887(1,3);2,878(2,8);2,870(3,1);2,860(4,7);2,854(1,5);2,850(3,0);2,843(2,8);2,833(1,4);1,983(1,4);1,970(2,9);1,962(2,9);1,957(1,8);1,950(6,0);1,941(1,9);1,937(3,1);1,929(3,2);1,916(1,7);1,180(2,3);1,168(6,8);1,162(7,3);1,155(6,0);1,152(5,1);1,149(6,8);1,140(3,2);1,132(1,4);1,131(1,4);1,122(1,9);1,113(6,2);1,107(4,6);1,099(5,2);1,095(5,6);1,093(4,3);1,090(3,6);1,083(3,5);1,081(3,5);1,072(2,0);1,065(3,9);1,062(2,3);1,056(7,6);1,049(6,6);1,047(7,9);1,045(5,5);1,038(8,6);1,035(13,2);1,029(12,0);1,023(7,3);1,020(3,4);1,017(3,3);1,013( 2,1);1,005(1,4);0,008(0,5);0,000(16,7)

### Beispiel No. D1-91: ¹H-NMR (400 MHz, CDCl₃ δ, ppm)

7,836(1,9);7,817(3,9);7,635(2,8);7,614(0,6);7,519(2,7);7,514(1,1);7,493(4,0);7,479(2,5);7,474(2,3);7,458(0,7);7,452(0,7);7,434(1,5);7,414(1,3);7,375(0,6);7,293(0,7);7,286(0,5);7,285(0,6);7,283(0,6);7,2823(0,5);7,2815(0,7);7,281(0,7);7,280(0,7);7,279(0,8);7,2784(0,8);7,2776(0,8);7,277(1,0);7,276(1,1);7,275(1,0);7,2744(1,1);7,2736(1,3);7,273(1,5);7,272(1,8);7,271(1,9);7,2704(2,1);7,2696(2,2);7,269(2,6);7,268(3,0);7,267(3,7);7,2664(4,4);7,2656(5,1);7,265(6,2);7,264(7,8);7,263(11,0);7,262(16,5);7,260(451,8);7,258(12,0);7,257(6,7);7,256(4,7);7,255(3,3);7,254(2,7);7,2533(2,1);7,2525(1,8);7,252(1,6);7,251(1,5);7,250(1,3);7,2494(1,0);7,2486(0,9);7,248(0,7);7,247(0,8);7,246(0,7);7,2454(0,7);7,2446(0,6);7,210(2,2);6,996(2,5);4,796(1,8);4,616(16,0);4,601(10,9);2,942(0,5);2,900(1,2);2,892(1,2);2,882(2,2);2,873(1,4);2,869(1,5);2,865(1,4);2,861(1,4);2,852(2,4);2,842(1,5);2,834(1,4);2,824(0,7);1,966(0,8);1,954(1,6);1,945(1,6);1,941(1,0);1,933(3,4);1,93 1 (3,1);1,920(1,7);1,912(1,7);1,910(1,7);1,900(0,8);1,556(15,8);1,259(0,6);1,164(1,3);1, 152(3,2);1,146(3,9);1,142(4,7);1,140(4,4);1,135(5,4);1,133(5,4);1,130(5,2);1,123(6,3);1,117(4,5);1,114(4,5);1,108(3,8);1,103(2,7);1,100(3,6);1,096(1,9);1,092(2,9);1,090(3,1);1,078(1,2);1,074(1,0);1,070(1,4);1,054(4,5);1,045(8,2);1,038(8,5);1,036(7,3);1,033(7,8);1,029(5,5);1,024(8,3);1,018(5,2);1,006(2,3);0,010(0,5);0,008(5,2);0,0064(1,1);0,0056(1,1);0,005(1,3);0,004(1,8);0,003(3,2);0,0023(5,9);0,0015(8,7);0,000(183,2);-0,003(9,6);-0,0035(6,6);-0,0043(4,3);-0,005(3,3);-0,006(2,8);-0,007(2,4);-0,0077(2,5);-0,0084(6,1);-0,011(1,5);-0,0115(1,3);-0,0123(1,1);-0,013(1,0);-0,014(0,9);-0,015(0,9);-0,0155(0,8);-0,0163(0,7);-0,017(0,7);-0,018(0,7);-0,019(0,7);-0,020(0,6);-0,021 (0,6);-0,022(0,5);-0,024(0,5);-0,050(1,1);-0,149(0,5)

### Beispiel No. D1-99: ¹H-NMR (400 MHz, CDCl₃ δ, ppm)

8,127(4,7);8,107(4,9);7,264(25,9);7,185(5,2);7,165(5,0);4,494(16,0);2,946(0,6);2,937(1,2);2,929(1,4);2,919(2,4);2,910(1,4);2,902(1,3);2,892(0,6);1,971(0,6);1,958(1,2);1,950(1,3);1,945(0,7);1,938(2,6);1,930(0,8);1,925(1,3);1,917(1,4);1,905(0,7);1,174(0,6);1,172(0,6);1,161(1,3);1,159(1,7);1,154(3,0);1,153(2,9);1,150(1,9);1,144(2,3);1,140(5,0);1,135(4,5);1,127(2,7);1,124(3,1);1,122(3,8);1,112(1,4);1,107(0,6);1,101(0,7);1,096(0,6);1,085(0,6);1,068(1,2);1,067(1,5);1,064(1,9);1,058(2,9);1,055(5,4);1,049(5,2);1,044(4,5);1,040(2,0);1,034(4,0);1,028(2,6);1,025(1,8);1,016(1,0);0,000(10,1)

### Beispiel No. D1-186: ¹H-NMR (400 MHz, CDCl₃ δ, ppm)

8,475(3,8);8,468(3,8);7,769(2,6);7,763(2,6);7,748(2,8);7,742(2,7);7,519(1,7);7,260(301,7);7,235(3,9);6,996(1,7);5,089(0,6);5,071(1,9);5,053(2,0);5,035(0,7);2,859(0,8);2,851(1,2);2,841(1,6);2,832(1,1);2,824(0,9);1,951(1,1);1,942(1,1);1,930(2,1);1,917(1,2);1,909(1,2);1,897(0,7);1,809(16,0);1,791(16,0);1,587(0,8);1,189(2,0);1,151(2,3);1,147(3,1);1,128(3,0);1,109(0,7);1,100(0,6);1,072(2,0);1,063(2,2);1,054(2,4);1,041(2,2);1,036(2,5);1,026(2,0);1,014(2,5);1,005(2,2);0,985(0,5);0,157(0,6);0,008(3,4);0,000(114,4);-0,009(3,4)

### Beispiel No. D1-681: ¹H-NMR (400 MHz, CDCl₃ δ, ppm)

8,067(1,7);8,055(1,7);7,261(50,0);7,072(1,4);7,053(1,4);4,762(3,7);4,758(3,7);3,416(0,9);3,400(2,7);3,384(2,8);3,368(1,0);3,059(0,5);3,054(0,6);3,047(0,8);3,041(0,5);3,036(0,5);2,515(10,1);1,967(0,5);1,961(0,5);1,953(1,0);1,945(0,5);1,939(0,5);1,567(2,2);1,199(1,4);1,187(1,5);1,178(0,9);1,167(0,4);1,163(0,7);1,156(1,8);1,151(1,4);1,148(1,4);1,14 1(0,5);1,127(1,2);1,122(1,3);1,044(0,6);1,038(1,3);1,034(1,2);1,024(1,4);1,020(1,2);1,012(0,4);0,005(0,6);0,000(14,0);-0,006(0,5)

### Beispiel No. D1-726: ¹H-NMR (400 MHz, CDCl₃ δ, ppm)

9,951(0,8);8,262(1,5);8,258(1,5);8,241(1,6);8,238(1,6);7,519(2,2);7,330(2,0);7,327(2,1);7,310(1,7);7,306(2,4);7,288(0,6);7,260(419,3);7,246(1,1);7,242(1,0);7,224(1,5);7,210(1,7);7,206(1,0);7,203(0,9);7,031(1,5);7,027(1,5);7,011(1,6);7,008(1,6);6,996(2,4);6,992(1,2);6,988(1,1);4,069(16,0);3,046(0,9);3,038(1,1);3,028(1,6);3,019(1,1);3,011(1,0);1,989(1,0);1,981(1,0);1,976(0,5);1,969(2,0);1,960(0,7);1,956(1,0);1,948(1,1);1,935(0,5);1,546(18,9);1,199(2,1);1,194(1,3);1,185(1,9);1,182(2,0);1,179(1,8);1,168(1,7);1,161(0,9);1,156(2,3),1,151(2,7),1,143(3,0),1,137(3,7),1,133(2,7),1,129(2,7),1,126(2,4),1,121(2,2);1,105(0,7);1,102(0,8);1,086(1,4);1,077(2,3);1,072(1,7);1,066(2,0);1,057(2,4);1,051(1,9 );1,047(0,9);1,038(0,7);0,008(4,7);0,000(156,0);-0,009(4,2)

### Beispiel No. D1-728: ¹H-NMR (400 MHz, CDCl₃ δ, ppm)

10,606(0,8);7,721 (1,8);7,716(3,5);7,711(1,9);7,387(1,1);7,385(1,2);7,382(1,2);7,380(1,1);7,367(1,4);7,364(1,5);7,362(1,5);7,359(1,4);7,260(86,5);7,203(1,9);7,183(3,6);7,163(1,9);7,041(1,6);7,039(1,8);7,036(1,7);7,034(1,7);7,021(1,3);7,019(1,3);7,016(1,4);7,014(1,2);5,298(1,0);3,906(16,0);3,052(1,0);3,044(1,0);3,035(1,7);3,028(0,5);3,025(1,0);3,017(1,0);2,044(0,7);2,013(0,9);2,005(1,0);1,998(0,5);1,995(0,7);1,993(1,7);1,984(0,6);1,980(0,9);1,972(1,1);1,959(0,5);1,616(2,4);1,259(0,5);1,222(0,6);1,218(1,1);1,214(2,0);1,208(1,3);1,200(1,7);1,199(1,6);1,196(1,9);1,194(1,5);1,190(1,5);1,187(0,6);1,183(1,1);1,181(1,5);1,176(2,2);1,170(2,9);1,162(2,9);1,158(2,8);1,149(1,4);1,145(1,0);1,143(1,2);1,140(0,8);1,135(2,0);1,131(2,4);1,126(2,7);1,120(3,9);1,113(1,9);1,110(1,2);1,106(1,8);1,102(1,1);1,099(2,8);1,092(1,8);1,084(0,6);1,079(0,7);0,008(0,9);0,000(33,3);-0,009(0,9)

### Beispiel No. D1-749: ¹H-NMR (400 MHz, d₆-DMSO δ, ppm)

10,702(3,1);7,786(3,5);7,765(5,5);7,693(5,6);7,671(3,6);4,176(16,0);3,359(0,5);3,346(0,6);3,342(0,5);3,310(194,2);3,219(0,6);3,209(1,3);3,201(1,6);3,191(2,7);3,182(1,4);3,174(1,2);3,164(0,6);2,674(0,8);2,670(1,2);2,665(0,8);2,523(3,4);2,518(5,0);2,510(64,0);2,505(137,2);2,501(191,4);2,496(132,8);2,491(58,3);2,332(0,8);2,327(1,2);2,323(0,8);2,083(0,6);2,071(1,3);2,062(1,3);2,058(0,9);2,050(2,7);2,042(0,7);2,037(1,5);2,029(1,4);2, 017(0,7);1,236(0,6);1,168(0,7);1,151(2,5);1,149(2,8);1,135(2,9);1,130(2,4);1,118(1,3);1,097(0,5);1,065(1,4);1,055(3,4);1,048(3,1);1,046(3,1);1,041(2,1);1,036(1,6);1,026(0,8);1,017(1,3);1,006(3,0);1,000(4,2);0,997(2,0);0,991(2,2);0,985(2,9);0,979(3,8);0,970(1,7);0,900(1,9);0,892(4,1);0,888(2,8);0,885(3,4);0,879(4,1);0,873(3,4);0,862(1,2);0,000 (8,2)

### Beispiel No. D1-761: ¹H-NMR (400 MHz, CDCl₃ δ, ppm)

11,112(1,1);7,710(0,6);7,705(4,8);7,700(1,7);7,688(1,9);7,682(6,9);7,677(1,0);7,576(0,9);7,571(6,7);7,565(1,9);7,553(1,6);7,548(4,7);7,543(0,6);7,520(0,8);7,261(138,1);6,997(0,7);3,909(16,0);3,063(1,0);3,056(1,1);3,046(1,8);3,036(1,1);3,028(1,0);2,020(0,9);2,013(1,1);2,005(1,2);2,000(1,8);1,992(0,6);1,987(0,9);1,979(1,1);1,967(0,6);1,573(24,8);1,233(0,8);1,230(1,2);1,226(2,2);1,221(1,3);1,217(0,8);1,213(1,8);1,209(2,0);1,207(1,6);1,203(1,2);1,195(0,9);1,194(1,1);1,188(0,7);1,174(2,4);1,167(2,5);1,161(3,7);1,157(2,2);1,155(2,6);1,147(3,1);1,137(3,2);1,133(4,3);1,128(3,3);1,123(2,4);1,120(3,7);1,113(3, 3);1,106(2,1);1,092(0,9);0,008(1,6);0,000(52,1);-0,009(1,4)

### Beispiel No. D1-791: ¹H-NMR (400 MHz, CDCl₃ δ, ppm)

7,576(2,3);7,558(4,9);7,556(4,8);7,537(2,9);7,519(1,3);7,419(1,0);7,403(2,5);7,382(3,6);7,378(3,1);7,364(2,5);7,344(0,9);7,260(238,2);7,193(3,1);7,054(6,1);6,996(1,3);6,916(3,1);4,582(16,0);2,859(1,0);2,849(2,0);2,841(2,3);2,831(3,6);2,826(1,2);2,822(2,2);2,814(2,1);2,804(1,0);1,964(0,9);1,951(2,0);1,943(2,1);1,938(1,3);1,930(4,4);1,922(1,3);1,918(2,1);1,909(2,3);1,897(1,1);1,559(31,1);1,155(1,8);1,146(2,4);1,143(5,2);1,137(5,3);1,133(3,2);1,131(4,8);1,128(5,0);1,124(5,4);1,118(1,9);1,116(3,0);1,113(2,9);1,109(4,5);1,107(3,6);1,103(3,5);1,095(3,8);1,091(4,6);1,089(3,7);1,086(2,9);1,079(2,7);1,077(2,4);1,068(1,6);1,058(1,3);1,051(2,9);1,042(8,0);1,035(7,2);1,032(7,3);1,030(7,3);1,025(5,9);1,021(8,7);1,020(8,9);1,015(5,8);1,013(3,5);1,003(2,1);0,008(3,1);0,000(91,3);-0,009(2,7)

### Beispiel No. D2-2: ¹H-NMR (400 MHz, CDCl₃ δ, ppm)

7,519(1,0);7,407(3,2);7,406(3,2);7,404(2,9);7,402(2,0);7,336(1,1);7,332(1,1);7,328(1,1);7,322(1,9);7,319(1,5);7,314(1,7);7,310(1,6);7,272(0,6);7,271(0,7);7,2703(0,7);7,2695(0,8);7,269(0,9);7,2663(1,7);7,2655(2,1);7,260(190,3);7,257(2,7);7,256(1,8);7,255(1,3);7,254(1,1);7,2533(0,8);7,2525(0,8);7,252(0,8);7,251(0,7);7,250(0,9);7,249(0,8);7,245(0 ,7);7,237(8,7);7,234(8,2);7,230(2,6);7,225(2,7);7,223(3,1);7,221(3,1);7,210(1,1);6,996(1,0);4,439(16,0);3,652(1,2);3,633(1,8);3,631(1,9);3,611(1,2);2,736(0,6);2,726(1,2);2,718(1,3);2,709(2,5);2,699(1,4);2,691(1,3);2,681(0,6);2,580(0,5);2,557(1,5);2,551(1,3);2,534(1,9);2,528(2,5);2,511(1,5);2,505(2,1);2,488(0,5);2,482(0,7);2,417(0,7);2,411(0,9);2,408(0,8);2,396(1,5);2,390(1,6);2,387(2,1);2,381(1,1);2,379(1,1);2,375(1,3);2,372(1,0);2,366(2,1);2,364(1,3);2,358(1,2);2,351(0,6);2,346(0,6);2,343(0,6);2,337(0,5);2,130(0,6);2,124(0,7);2,107(1,0);2,102(1,1);2,080(1,9);2,058(0,9);2,043(0,6);2,040(0,6);2,035(0,6);2,020(1,0);2,017(1,1);2,006(0,6);1,997(0,6);1,992(0,6);1,989(0,6);1,569(1,0);1,075(0,6);1,073(0,7);1,061(2,5);1,058(2,6);1,055(3,1);1,052(1,6);1,043(3,4);1,040(2,8);1,038(2,4);1,034(1,6);1,025(1,0);1,023(1,1);0,920(1,2);0,910(2,3);0,907(2,5);0,905(2,1);0,902(3,9);0,897(2,6);0,895(2,1);0,892(2,7);0,879(0,8);0,008(2,1);0,0064(0,5);0,0055(0,5);0,00 5(0,7);0,004(0,9);0,002(3,0);0,000(77,4);-0,004(1,6);-0,005(1,1);-0,006(0,9);-0,007(0,8);-0,009(2,5)

### Beispiel No. D2-4: ¹H-NMR (400 MHz, CDCl₃ δ, ppm)

7,595(2,2);7,591(2,2);7,576(2,3);7,572(2,4);7,382(2,4);7,378(2,3);7,361(2,8);7,358(2,6);7,264(16,6);7,136(2,9);7,116(4,5);7,097(2,3);4,615(16,0);3,643(1,1);3,641(1,1);3,622(1,8);3,620(1,7);3,600(1,2);3,598(1,2);3,492(0,7);2,722(0,5);2,712(1,1);2,704(1,3);2,695(2,3);2,685(1,3);2,677(1,2);2,667(0,6);2,540(1,5);2,534(1,3);2,518(2,0);2,511(2,4);2,494(1,6);2,488(2,1);2,471(0,5);2,465(0,8);2,409(0,7);2,403(0,8);2,400(0,8);2,394(0,6);2,388(1,4);2,382(1,6);2,379(2,0);2,373(1,1);2,370(1,0);2,367(1,2);2,363(1,0);2,361(1,0);2,358(1,9);2,355(1,2);2,349(1,1);2,343(0,5);2,337(0,6);2,334(0,6);2,124(0,6);2,119(0,5);2,102(1,0);2,097(1,1);2,080(0,5);2,074(1,7);2,053(0,9);2,035(0,5);2,032(0,6);2,012(1,0);2,009(1,0);2,004(0,6);2,001(0,5);1,989(0,6);1,986(0,6);1,984(0,6);1,982(0,6);1,072(0,7);1,070(0,7);1,057(2,4);1,054(2,6);1,052(3,1);1,048(1,5);1,039(3,2);1,037(2,7);1,035(2,4);1,031(1,4);1,021(0,9);1,020(0,9);0,907(1,1);0,898(2,3);0,894(2,6);0,892(2,1);0,889(3, 4);0,885(2,5);0,882(1,9);0,879(2,3);0,867(0,7);0,865(0,5);0,000(6,5)

### Beispiel No. D2-5: ¹H-NMR (400 MHz, CDCl₃ δ, ppm)

7,635(4,3);7,614(4,6);7,519(0,9);7,386(4,7);7,381(5,0);7,271(0,6);7,269(0,8);7,260(159,4);7,169(3,3);7,164(3,0);7,149(3,0);7,143(2,8);6,996(0,9);5,298(1,2);4,545(16,0);3,639(1,2);3,620(1,8);3,617(1,9);3,598(1,2);3,596(1,3);2,733(0,6);2,723(1,3);2,715(1,4);2,705(2,6);2,695(1,4);2,688(1,3);2,678(0,7);2,559(0,6);2,536(1,6);2,530(1,3);2,514(2,0);2,5 12(1,9);2,506(2,7);2,490(1,6);2,484(2,3);2,467(0,6);2,461(0,8);2,409(0,6);2,403(0,9);2,400(0,8);2,394(0,6);2,388(1,5);2,382(1,6);2,379(2,1);2,373(1,1);2,370(1,1);2,367(1,3);2,364(1,0);2,361(1,0);2,358(2,0);2,355(1,3);2,349(1,1);2,343(0,6);2,337(0,6);2,334(0,6);2,328(0,5);2,124(0,7);2,119(0,6);2,102(1,0);2,097(1,1);2,074(1,8);2,053(0,9);2,035(0,6);2,033(0,6);2,019(0,5);2,012(1,1);2,010(1,0);2,005(0,6);1,999(0,5);1,990(0,6);1,987(0,6);1,985(0,7);1,982(0,6);1,562(22,7);1,072(0,8);1,069(0,7);1,057(2,6);1,054(2,7);1,052(3,3);1,048(1,7);1,039(3,5);1,037(3,0);1,035(2,5);1,030(1,6);1,021(1,0);1,019(1,1);0,909(1,0);0,907(1,2);0,897(2,4);0,894(2,7);0,891(2,3);0,888(3,7);0,884(2,6);0,882(2,2);0,879(2,7);0,876(1,2);0,866(0,8);0,864(0,7);0,008(1,8);0,006(0,6);0,0054(0,7);0,0045(0,8);0,000(61,8);-0,006(0,6);-0,007(0,6);-0,009(1,8)

### Beispiel No. D2-6: ¹H-NMR (400 MHz, CDCl₃ δ, ppm)

7,609(4,1);7,603(4,1);7,308(3,8);7,286(5,5);7,266(0,5);7,262(39,2);7,196(3,4);7,190(3,2);7,175(2,3);7,168(2,2);4,547(16,0);3,653(1,0);3,651(1,1);3,632(1,7);3,630(1,8);3,611(1,2);3,609(1,2);2,726(0,6);2,716(1,2);2,708(1,3);2,698(2,6);2,689(1,4);2,681(1,3);2,671(0,6);2,580(0,6);2,556(1,6);2,550(1,2);2,534(1,9);2,533(1,9);2,527(2,6);2,510(1,5);2,505(2,2);2,488(0,6);2,482(0,8);2,418(0,6);2,412(0,8);2,409(0,7);2,403(0,6);2,397(1,4);2,391(1,5);2,388(2,0);2,386(0,9);2,382(1,0);2,380(1,1);2,376(1,2);2,373(0,9);2,370(0,9);2,367(1,9);2,365(1,2);2,359(1,1);2,352(0,6);2,347(0,6);2,343(0,6);2,338(0,5);2,130(0,6);2,125(0,6);2,108(1,0);2,104(0,9);2,102(1,0);2,082(0,8);2,080(1,8);2,078(0,8);2,059(0,8);2,056(0,6);2,044(0,5);2,042(0,5);2,035(0,7);2,021(1,0);2,019(1,0);2,013(0,5);1,998(0,6);1,996(0,6);1,994(0,6);1,991(0,6);1,074(0,7);1,072(0,7);1,059(2,5);1,056(2,5);1,054(3,0);1,050(1,6);1,041(3,3);1,039(2,7);1,037(2,3);1,036(2,2);1,032(1,5);1,023(1,0);1,021(1,1);0,919(0,9);0,917(1,2);0,907(2,2);0,904(2,4);0,902(2,0);0,899(3,6);0,894(2,4);0,892(2,0);0,889(2,6);0,886(1,1);0,884(0,8);0,877(0,8);0,874(0,6);0,000(17,5);-0,009(0,5)

### Beispiel No. D2-7: ¹H-NMR (400 MHz, CDCl₃ δ, ppm)

7,328(5,3);7,3082(8,4);7,3076(8,6);7,263(36,6);7,190(3,7);7,172(3,1);7,169(2,8);7,150(2,2);4,774(16,0);3,677(1,0);3,657(1,7);3,655(1,7);3,636(1,1);3,634(1,1);2,711(0,5);2,701(1,2);2,694(1,3);2,692(0,9);2,684(2,2);2,677(0,6);2,674(1,3);2,666(1,2);2,656(0,6);2,602(0,6);2,579(1,6);2,573(1,2);2,557(1,9);2,555(1,8);2,549(2,5);2,533(1,5);2,527(2,2);2,510(0,5);2,504(0,8);2,428(0,6);2,422(0,8);2,419(0,7);2,406(1,3);2,401(1,5);2,398(1,9);2 ,395(0,9);2,392(1,0);2,389(1,1);2,386(1,1);2,382(0,9);2,380(0,9);2,377(1,9);2,374(1,2); 2,368(1,1);2,362(0,6);2,356(0,6);2,353(0,6);2,347(0,5);2,138(0,6);2,133(0,6);2,116(0,9);2,112(0,8);2,110(1,0);2,091(0,8);2,088(1,7);2,086(0,7);2,067(0,8);2,051(0,5);2,048(0,5 );2,028(1,0);2,025(1,0);2,020(0,5);2,005(0,6);2,002(0,5);2,000(0,6);1,998(0,6);1,672(1,6);1,051 (0,6);1,041(0,9);1,038(1,4);1,033(2,5);1,032(2,0);1,028(1,6);1,024(0,9);1,020(2,1);1,018(1,9);1,016(2,2);1,014(1,9);1,011(1,5);1,003(1,0);1,001(1,2);0,994(0,5);0,983(0,7);0,981(0,6);0,965(0,6);0,957(1,0);0,955(1,3);0,947(2,4);0,944(2,4);0,942(2,1);0,941(2,1);0,937(2,7);0,934(2,6);0,932(2,3);0,928(1,3);0,924(1,3);0,914(0,7);0,912(0,5);0,00 0(15,7)

### Beispiel No. D2-17: ¹H-NMR (400 MHz, CDCl₃ δ, ppm)

7,520(1,0);7,285(1,1);7,2734(0,5);7,2726(0,5);7,272(0,6);7,271(0,8);7,270(1,1);7,269(2,8);7,268(3,0);7,267(2,4);7,266(2,3);7,2654(2,8);7,2645(4,0);7,261(178,2);7,257(2,8);7,2564(2,0);7,2556(1,6);7,255(1,3);7,254(1,2);7,253(1,5);7,2524(1,9);7,2517(1,5);7,251(1,1);7,250(1,1);7,247(4,2);7,245(0,8);7,242(1,5);7,231(1,8);7,226(2,4);7,211(2,0);6,997(1,0);6,924(0,6);6,920(0,8);6,911(5,7);6,903(0,7);6,899(0,9);6,892(6,3);6,890(5,7);6,883(1,0);6,879(0,7);6,871(5,0);6,862(0,7);6,858(0,5);4,542(16,0);3,695(0,6);3,693(0,6);3,671(2,0);3,652(3,2);3,650(3,1);3,631(2,1);3,629(2,1);3,610(0,7);3,607(0,7);2,779(1,0);2,769(2,3);2,762(2,4);2,752(4,5);2,744(1,4);2,742(2,5);2,734(2,4);2,724(1,2);2,592(1,0);2,586(0,7);2,569(2,9);2,563(2,3);2,546(3,5);2,545(3,4);2,539(4,8);2,522(2,9);2,517(4,1);2,500(1,0);2,494(1,5);2,490(0,5);2,424(1,1);2,418(1,5);2,416(1,4);2,409(1,0);2,403(2,5);2,398(2,8);2,395(3,6);2,392(1,7);2,389(1,8);2,386(2,0);2,382(2,2);2,379(1,7);2,376(1,7);2,374(3,6);2,371(2,2);2,365(2,0);2,359(1,1);2,353(1,1);2,350(1,1);2,344(1,0);2,157(0,7);2,134(1,1);2,129(1,1);2,112(1,8);2,107(1,8);2,087(1,5);2,085(3,3);2,063(1,4);2,055(0,6);2,046(1,0);2,043(1,0);2,040(0,9);2,037(0,6);2,034(0,7);2,030(0,8);2,023(1,8);2,020(1,8);2,014(1,0);2,012(0,9);2,009(0,9);2,006(0,9);2,000(1,1);1,997(1,0);1,995(1,1);1,993(1,1);1,988(0,6);1,588(14,1);1,073(1,1);1,071(1,1);1,059(3,2);1,055(4,2);1,054(5,0);1,049(2,9);1,041(4,6);1,038(3,9);1,036(4,0);1,034(3,7);1,031(2,8);1,023(1,9);1,021(2,2);1,000(0,7);0,997(0,7);0,986(0,8);0,983(0,8);0,958(1,7);0,956(2,2);0,948(4,2);0,946(3,8);0,944(4,1);0,943(4,1);0,941(3,7);0,938(5,9);0,935(4,0);0,933(4,1);0,932(3,6);0,928(2,9);0,927(2,7);0,915(1,3);0,913(1,0);0,008(2,2);0,006(0,7);0,0054(0,8);0,0046(0,9);0,004(1,2);0,000(79,1);-0,003(2,8);-0,004(1,8);-0,0045(1,1);-0,0053(0,8);-0,006(0,6);-0,007(0,6);-0,009(2,3)

### Beispiel No. D2-36: ¹H-NMR (400 MHz, CDCl₃ δ, ppm)

8,904(4,1);8,902(4,8);8,899(4,7);8,897(3,8);8,515(4,8);8,511(4,6);4,750(16,0);3,747(0,5);3,728(1,9);3,726(2,0);3,707(3,0);3,705(3,1);3,686(2,1);3,683(2,1);3,664(0,5);3,311(126,9);3,261(0,9);3,016(0,7);3,006(1,6);2,998(1,8);2,988(3,3);2,979(2,0);2,971(1,7);2,961(0,8);2,674(0,8);2,670(1,1);2,665(0,8);2,523(2,3);2,519(3,4);2,510(61,7);2,505(137,2); 2,501(193,0);2,496(135,0);2,491(59,9);2,455(1,2);2,451 (1,4);2,446(1,0);2,357(3,9);2,341(5,9);2,335(10,4);2,328(2,1);2,319(10,5);2,314(8,0);2,298(6,2);2,099(0,6);2,077(1,5);2,073(1,0);2,054(1,8);2,050(2,5);2,033(1,3);2,027(2,2);2,005(1,6);1,908(1,2);1,893(1,7);1,891(1,7);1,877(1,4);1,866(1,4);1,863(1,4);1,850(0,8);1,235(0,5);1,082(1,0);1,068(3,3);1,062(4,4);1,050(4,3);1,044(3,6);1,031(1,6);0,938(1,7);0,927(4,4);0,920(4,9);0,917(3,9);0,911(3,4);0,899(1,2);0,008(3,8);0,0064(1,0);0,0056(1,1);0,005(1,4);0,004(1,9);0,00 3(3,1);0,002(5,2);0,000(126,0);-0,004(2,4);-0,005(1,7);-0,006(1,4);-0,007(1,2);-0,009(3,6);-0,0106(0,7);-0,0114(0,5);-0,050(0,8)

### Beispiel No. D2-38: ¹H-NMR (400 MHz, CDCl₃ δ, ppm)

11,069(1,0);8,451(0,6);8,441(0,6);8,070(0,6);7,524(0,5);7,265(91,6);4,762(3,5);3,697(1,1);3,676(3,8);3,654(5,7);3,633(3,9);3,613(1,0);2,849(2,4);2,576(0,9);2,570(0,7);2,553(1,2);2,539(2,7);2,524(1,0);2,426(6,5);2,411(11,4);2,405(14,9);2,389(16,0);2,368(8,4);2,178(1,5);2,156(3,4);2,150(2,4);2,133(4,3);2,128(5,5);2,111(2,9);2,105(6,4);2,088(1,2);2,083(4,2);2,060(1,5);2,032(1,2);2,017(3,1);2,002(4,0);2,000(4,0);1,986(3,3);1,974(2,6);1,971(2,8);1,957(1,5);1,942(0,5);1,203(1,6);1,184(6,9);1,167(8,3);1,153(5,2);1,124(8,7);1,092(1,9);1,005(0,9);1,000(1,1);0,995(0,9);0,008(1,1);0,000(31,1);-0,009(0,9)

### Beispiel No. D2-40: ¹H-NMR (400 MHz, CDCl₃ δ, ppm)

8,348(5,3);8,335(5,4);7,351(4,8);7,338(4,6);7,269(0,5);7,268(0,7);7,267(0,9);7,264(39,3);4,863(16,0);3,679(1,1);3,677(1,1);3,658(1,7);3,655(1,7);3,637(1,2);3,634(1,2);2,870(0,6);2,860(1,2);2,852(1,3);2,851(1,0);2,842(2,4);2,835(0,8);2,833(1,4);2,825(1,3);2,815(0,6);2,588(0,6);2,565(1,5);2,559(1,2);2,543(1,9);2,541(1,8);2,535(2,6);2,519(1,5);2,513(2,2);2,496(0,6);2,490(0,8);2,427(0,7);2,421(0,8);2,418(0,8);2,412(0,6);2,406(1,4);2,400(1,5);2,397(2,0);2,394(0,9);2,391(1,0);2,388(1,1);2,385(1,2);2,382(0,9);2,379(0,9);2,376(1,9);2,374(1,2);2,368(1,1);2,361(0,6);2,355(0,6);2,352(0,6);2,347(0,5);2,134(0,6);2,129(0,6);2,125(0,7);2,111(1,0);2,108(0,9);2,106(1,1);2,096(1,0);2,086(0,8);2,084(1,8); 2,062(0,8);2,043(0,6);2,040(0,8);2,020(1,0);2,017(1,0);2,011(0,5);1,997(0,6);1,994(0,6) ;1,992(0,6);1,989(0,6);1,127(0,6);1,125(0,6);1,113(1,9);1,109(2,3);1,108(2,7);1,103(1,6);1,095(2,6);1,092(2,2);1,090(2,2);1,089(2,0);1,086(1,5);1,077(1,0);1,075(1,2);1,037(0,7);1,008(0,9);1,006(1,2);0,998(2,2);0,996(2,1);0,995(2,2);0,993(2,2);0,992(2,0);0,988(3,3);0,985(2,2);0,984(2,2);0,982(2,0);0,979(1,7);0,974(0,7);0,966(0,7);0,964(0,6);0,000( 16,6)

### Beispiel No. D2-61: ¹H-NMR (400 MHz, CDCl₃ δ, ppm)

7,815(2,2);7,814(2,2);7,795(2,5);7,794(2,5);7,652(2,0);7,649(2,1);7,632(2,3);7,629(2,4);7,528(1,4);7,525(1,4);7,509(2,8);7,505(2,7);7,489(1,6);7,486(1,5);7,372(1,8);7,369(1,8);7,353(2,9);7,350(2,9);7,334(1,2);7,331(1,2);7,267(17,8);4,630(16,0);3,652(1,2);3,650(1,3);3,631(1,9);3,629(2,0);3,609(1,3);3,607(1,3);2,780(0,6);2,770(1,3);2,762(1,4);2,753(2,5);2,743(1,5);2,735(1,3);2,725(0,6);2,568(0,6);2,544(1,7);2,538(1,4);2,522(2,2);2,515(2,7);2,498(1,7);2,492(2,4);2,475(0,6);2,469(0,8);2,413(0,7);2,407(0,9);2,404(0,9);2,398(0,7);2,392(1,6);2,386(1,7);2,383(2,2);2,377(1,2);2,375(1,2);2,371(1,3);2,368(1,1);2,365(1,1);2,362(2,1);2,360(1,3);2,354(1,2);2,347(0,6);2,341(0,6);2,338(0,6);2,333(0,6);2,128(0,7);2,123(0,6);2,105(1,1);2,100(1,2);2,083(0,6);2,078(1,9);2,056(0,9);2,036(0,6);2,033(0,9);2,020(0,5);2,013(1,1);2,010(1,1);2,005(0,6);2,002(0,6);1,999(0,5);1,996(0,5);1,990(0,6);1,987(0,6);1,985(0,7);1,982(0,7);1,100(0,7);1,098(0,8);1,085(2,6);1,082(2,8);1,080(3,5);1,077(1,7);1,068(3,4);1,065(3,1);1,063(2,7);1,059(1,5);1,050(1,0);1,048(1,0);0,927(1,2);0,917(2,6);0,914(2,9);0,911(2,3);0,908(3,6);0,904(2,8);0,902(2,2);0,899(2 ,5);0,886(0,8);0,884(0,6);0,000(6,6)

### Beispiel No. D2-63: ¹H-NMR (400 MHz, CDCl₃ δ, ppm)

7,585(16,0);7,519(0,6);7,260(109,2);6,996(0,6);4,495(5,9);2,739(0,7);2,507(0,7);2,485(0,6);2,382(0,5);2,361(0,5);1,545(9,5);1,069(0,6);1,066(0,7);1,064(0,8);1,051(0,9);1,049(0,8);1,046(0,6);0,904(0,6);0,900(0,7);0,898(0,6);0,895(0,9);0,890(0,7);0,888(0,5);0,885(0,7);0,008(1,3);0,005(0,6);0,004(0,8);0,000(40,0);-0,009(1,2)

### Beispiel No. D2-81: ¹H-NMR (400 MHz, CDCl₃ δ, ppm)

7,794(4,0);7,775(4,5);7,653(3,9);7,633(4,5);7,486(1,9);7,469(4,2);7,450(2,5);7,388(2,8);7,368(4,1);7,349(1,7);7,266(33,1);4,687(15,9);4,685(16,0);3,685(0,7);3,683(0,7);3,664(2,5);3,662(2,6);3,642(4,1);3,640(4,1);3,621(2,8);3,619(2,8);3,600(0,8);3,597(0,8);3,492(2,0);2,731(1,3);2,721(2,7);2,713(3,1);2,704(5,4);2,694(3,1);2,686(2,8);2,676(1,4);2,5 87(1,2);2,582(0,8);2,564(3,5);2,558(2,9);2,542(4,6);2,535(5,7);2,518(3,6);2,512(5,0);2,495(1,2);2,489(1,8);2,486(0,7);2,425(1,5);2,418(1,8);2,416(1,8);2,409(1,4);2,403(3,2);2,397(3,6);2,395(4,6);2,389(2,5);2,386(2,4);2,382(2,6);2,379(2,2);2,376(2,3);2,374(4,4); 2,371 (2,9);2,365(2,5);2,359(1,2);2,353(1,3);2,350(1,4);2,344(1,2);2,158(0,8);2,136(1,5);2,131(1,3);2,114(2,3);2,108(2,5);2,091(1,2);2,086(4,0);2,069(0,7);2,065(2,1);2,058(0,9);2,055(0,9);2,049(1,4);2,046(1,4);2,041(1,3);2,037(1,1);2,033(1,3);2,026(2,5);2,023(2,4);2,018(1,5);2,015(1,4);2,012(1,3);2,009(1,3);2,003(1,5);2,000(1,5);1,998(1,6);1,996(1,5);1,991(0,9);1,987(0,7);1,982(0,5);1,975(0,7);1,973(0,7);1,064(1,5);1,062(1,5);1,049(5,5);1,046(5,8);1,044(7,0);1,040(3,5);1,031(7,3);1,029(6,2);1,027(5,5);1,022(3,3);1,013(2,1);1,012(2,2);0,972(0,5);0,948(0,5);0,938(0,5);0,908(2,1);0,906(2,5);0,897(5,2);0,894(5,8);0,891(4,8);0,888(8,0);0,884(5,6);0,882(4,5);0,878(5,5);0,876(2,4);0,866(1,6);0,8 64(1,3);0,000(12,1)

### Beispiel No. D2-83: ¹H-NMR (400 MHz, CDCl₃ δ, ppm)

7,587(1,6);7,566(11,7);7,558(12,9);7,552(1,7);7,537(1,7);7,261(69,6);4,510(16,0);3,645(1,6);3,626(2,4);3,624(2,5);3,603(1,7);3,583(0,5);3,581(0,5);2,749(0,8);2,739(1,6);2,731(1,8);2,721(3,3);2,711(1,9);2,704(1,7);2,694(0,8);2,568(0,7);2,544(2,1);2,539(1,7);2,522(2,6);2,515(3,5);2,498(2,1);2,493(3,0);2,476(0,7);2,470(1,1);2,413(0,9);2,407(1,1);2,404(1,1);2,397(0,8);2,391(2,0);2,386(2,2);2,383(2,8);2,377(1,5);2,374(1,5);2,371(1,7);2,367(1,4);2,365(1,4);2,362(2,7);2,359(1,7);2,353(1,5);2,347(0,8);2,341(0,8);2,338(0,8);2,332(0,7);2,128(0,9);2,123(0,8);2,106(1,3);2,100(1,5);2,078(2,4);2,056(1,1);2,038(0,7);2,036(0,8);2,033(0,7);2,022(0,7);2,015(1,4);2,013(1,4);2,008(0,8);2,004(0,7);2,002(0,7);1,999(0,7);1,993(0,8);1,990(0,8);1,988(0,9);1,985(0,9);1,076(0,9);1,074(0,9);1,061(3,3);1,058(3,5);1,056(4,3);1,052(2,2);1,043(4,5);1,041(3,8);1,039(3,4);1,035(2,11);1,026(1,3);1,024(1,4);0,917(1,2);0,915(1,5);0,906(3,1);0,903(3,5);0,900(3,0);0,897(4,9);0,893 (3,5);0,890(2,9);0,888(3,5);0,885(1,6);0,875(1,1);0,873(0,9);0,008(0,9);0,000(29,1);-0,009(0,9)

### Beispiel No. D2-91: ¹H-NMR (400 MHz, CDCl₃ δ, ppm)

7,853(2,6);7,848(2,5);7,519(0,9);7,514(1,1);7,493(4,0);7,480(2,6);7,475(2,3);7,458(0,7);7,454(0,7);7,269(0,6);7,268(0,9);7,267(1,0);7,260(139,5);7,256(1,5);7,2553(1,1);7,2545(0,8);7,254(0,6);7,211(0,9);6,996(0,7);4,816(0,6);4,635(16,0);3,647(1,1);3,627(1,8);3,625(1,8);3,604(1,2);2,733(0,5);2,724(1,2);2,716(1,3);2,706(2,6);2,696(1,4);2,688(1,3);2 ,679(0,6);2,573(0,6);2,550(1,6);2,544(1,3);2,527(1,9);2,520(2,6);2,503(1,6);2,498(2,2);2,481(0,6);2,475(0,8);2,414(0,7);2,408(0,9);2,405(0,9);2,399(0,7);2,393(1,5);2,387(1,6);2,384(2,1);2,381(1,0);2,378(1,1);2,375(1,2);2,372(1,3);2,369(1,0);2,366(1,0);2,363(2,0);2,360(1,3);2,354(1,2);2,348(0,6);2,342(0,6);2,339(0,6);2,333(0,5);2,127(0,6);2,122(0,6);2,104(1,0);2,099(1,1);2,079(0,8);2,077(1,8);2,055(0,8);2,041(0,6);2,038(0,6);2,032(0,7);2,025(0,5);2,018(1,0);2,015(1,0);2,009(0,6);2,006(0,6);1,995(0,6);1,992(0,6);1,990(0,6);1,987(0,6); 1,572(4,0);1,076(0,7);1,074(0,7);1,061(2,4);1,058(2,5);1,056(3,1);1,052(1,6);1,044(3,4);1,041(2,9);1,039(2,4);1,035(1,6);1,026(1,0);1,024(1,2);0,913(0,9);0,911(1,1);0,901(2,2);0,898(2,5);0,896(2,1);0,892(3,5);0,888(2,5);0,886(2,0);0,883(2,6);0,880(1,1);0,870(0,8);0,868(0,7);0,008(1,5);0,004(0,7);0,000(58,9);-0,005(0,9);-0,006(0,7);-0,007(0,6);-0,009(1,8)

### Beispiel No. D2-94: ¹H-NMR (400 MHz, CDCl₃ δ, ppm)

8,444(3,5);8,438(3,5);7,877(2,5);7,871(2,5);7,857(2,7);7,850(2,6);7,265(30,9);7,255(4,2);7,235(3,8);4,439(16,0);3,648(1,4);3,629(2,2);3,627(2,1);3,607(1,5);3,491(0,7);2,788(0,6);2,778(1,4);2,770(1,6);2,760(2,7);2,751(1,6);2,743(1,4);2,733(0,7);2,566(0,6);2,543(1,8);2,537(1,5);2,520(2,4);2,513(2,9);2,497(1,9);2,491(2,6);2,474(0,6);2,468(0,9);2,417(0,8);2,411(1,0);2,408(1,0);2,402(0,8);2,396(1,7);2,390(1,9);2,387(2,4);2,381(1,3);2,378(1,3);2,375(1,4);2,372(1,2);2,366(2,3);2,363(1,5);2,357(1,3);2,351(0,7);2,345(0,7);2,342(0,7);2,336(0,6);2,131(0,8);2,125(0,7);2,108(1,2);2,103(1,3);2,081(2,0);2,059(1,0);2,040(0,7);2,037(0,8);2,024(0,6);2,017(1,2);2,015(1,2);2,009(0,7);2,006(0,7);2,003(0,6);2,001(0,6);1,995(0,7);1,992(0,7);1,990(0,8);1,987(0,7);1,095(0,8);1,093(0,8);1,080(2,9);1,077(3,2);1,075(3,8);1,072(1,8);1,063(3,8);1,060(3,4);1,058(3,0);1,054(1,7);1,045(1,1);1,043(1,1);0,924(1,1);0,922(1,3);0,913(2,8);0,909(3,2);0,907(2,7); 0,904(3,9); 0,900(3, 1);0,897(2,5);0,895(2,8);0,882(0,9);0,880(0,7);0,000(11,1)

### Beispiel No. D2-99: ¹H-NMR (400 MHz, CDCl₃ δ, ppm)

8,175(5,1);8,155(5,4);7,264(38,6);7,196(5,9);7,176(5,6);4,508(16,0);3,643(1,1);3,641(1,1);3,622(1,8);3,619(1,8);3,600(1,2);3,598(1,2);2,790(0,6);2,780(1,3);2,772(1,4);2,771(1,0);2,762(2,6);2,753(1,4);2,745(1,3);2,735(0,6);2,547(0,6);2,524(1,5);2,518(1,2);2,502(1,9);2,500(1,8);2,494(2,6);2,478(1,6);2,472(2,3);2,455(0,6);2,449(0,8);2,414(0,6);2,408(0,9);2,405(0,8);2,399(0,6);2,392(1,5);2,387(1,6);2,384(2,0);2,381(0,9);2,378(1,0);2,375(1,1);2,372(1,2);2,368(0,9);2,366(0,9);2,363(1,9);2,360(1,1);2,354(1,1);2,348(0,6);2, 342(0,5);2,339(0,6);2,130(0,7);2,124(0,6);2,107(1,0);2,103(0,9);2,102(1,1);2,100(0,7);2,082(0,8);2,079(1,8);2,077(0,7);2,058(0,8);2,055(0,5);2,035(0,9);2,032(0,6);2,012(1,0);2,009(1,0);2,007(0,5);2,004(0,5);1,998(0,5);1,989(0,6);1,986(0,5);1,984(0,6);1,982(0,6);1,629(1,5);1,102(0,7);1,100(0,7);1,088(2,3);1,085(2,5);1,083(3,1);1,079(1,6);1,070(3,2);1,068(2,8);1,0653(2,4);1,0645(2,3);1,061(1,5);1,052(1,0);1,050(1,1);0,927(0,9);0,925(1,1);0,915(2,3);0,912(2,5);0,910(2,1);0,907(3,2);0,902(2,4);0,900(2,0);0,897(2,4);0,895(1,1);0,893(0,8);0,885(0,8);0,883(0,6);0,008(0,5);0,002(0,6);0,000(16,7)

### Beispiel No. D2-186: ¹H-NMR (400 MHz, CDCl₃ δ, ppm)

8,486(4,1);8,480(4,1);7,795(2,4);7,789(2,4);7,774(2,7);7,768(2,6);7,519(2,0);7,293(0,5);7,260(368,3);7,244(4,4);7,210(0,9);6,996(2,0);5,149(0,5);5,131(1,5);5,113(1,5);5,095(0,5);3,656(1,3);3,634(2,0);3,613(1,3);2,717(1,1);2,708(1,4);2,699(1,1);2,550(1,4);2,526(1,0);2,417(0,9);2,407(1,4);2,396(1,7);2,387(2,1);2,376(1,9);2,367(1,6);2,357(1,3);2,347(0,7);2,134(0,8);2,130(0,7);2,109(1,4);2,085(1,9);2,064(1,3);2,040(1,1);2,033(1,2);2,005(1,2);1,824(16,0);1,806(15,9);1,592(0,6);1,100(2,8);1,082(2,8);0,938(0,6);0,913(2,0);0,904(2,0);0,888(2,1);0,878(2,0);0,854(0,7);0,157(0,9);0,008(4,2);0,000(134,5);-0,009(4,1);-0,150(0,5)

### Beispiel No. D2-681: ¹H-NMR (400 MHz, CDCl₃ δ, ppm)

8,085(2,1);8,067(2,2);7,262(62,9);7,238(2,2);7,083(1,8);7,054(1,9);4,785(5,2);4,778(5,5);3,435(1,3);3,411(4,0);3,387(4,2);3,363(1,5);3,183(1,1);3,166(1,5);3,149(1,2);2,987(0,7);2,980(0,9);2,970(1,4);2,960(0,9);2,953(0,8);2,518(12,5);1,578(2,9);1,382(15,8);1,365(16,0);1,196(2,1);1,178(2,1);1,165(1,0);1,107(0,9);1,095(2,1);1,089(2,3);1,066(0,7);0, 008(1,3);0,000(27,0);-0,025(0,9)

### Beispiel No. D2-791: ¹H-NMR (400 MHz, CDCl₃ δ, ppm)

7,570(2,8);7,555(3,3);7,519(1,4);7,421(1,0);7,407(2,6);7,388(2,2);7,383(3,2);7,379(2,6);7,364(2,5);7,360(2,6);7,344(0,8);7,310(0,8);7,260(248,2);7,210(2,6);7,072(6,4);6,996(1,3);6,934(3,2);4,597(16,0);3,663(0,5);3,642(1,9);3,623(3,0);3,621(3,0);3,602(2,0);3,580(0,7);3,578(0,6);2,698(1,0);2,688(2,1);2,680(2,3);2,670(4,2);2,661(2,3);2,653(2,1);2,643(1,1);2,565(1,0);2,560(0,6);2,542(2,6);2,536(2,1);2,520(3,3);2,518(3,2);2,512(4,4);2,496(2,7);2,490(3,8);2,473(1,0);2,467(1,3);2,411(1,1);2,405(1,4);2,402(1,3);2,390(2,4);2,384(2,7);2,381(3,4);2,375(1,8);2,372(1,9);2,369(2,0);2,366(1,6);2,363(1,6);2,360(3,2); 2,357(2,1);2,351(1,8);2,345(1,0);2,339(0,9);2,336(1,0);2,330(0,8);2,149(0,6);2,127(1,1);2,122(1,0);2,105(1,6);2,099(1,7);2,077(2,9);2,056(1,4);2,048(0,5);2,039(0,9);2,036(1,0);2,032(0,8);2,022(0,8);2,016(1,7);2,013(1,7);2,008(0,9);2,004(0,9);2,002(0,9);1,999(0,8);1,993(1,0);1,990(0,9);1,988(1,1);1,985(1,0);1,981(0,5);1,563(31,2);1,284(0,6);1,257(0,6);1,059(1,2);1,057(1,2);1,045(4,3);1,042(4,3);1,040(5,1);1,036(2,7);1,027(5,7);1,024(4,5);1,022(3,9);1,018(2,5);1,009(1,6);1,007(1,8);0,905(1,6);0,903(2,0);0,894(3,8);0,890(4,2);0,888(3,6);0,885(6,2);0,880(4,1);0,878(3,4);0,875(4,3);0,873(1,8);0,863(1,3);0,861(1,0);0,008(2,9);0,000(95,7);-0,009(2,7)

### Beispiel No. D2-793: ¹H-NMR (400 MHz, CDCl₃ δ, ppm)

7,542(4,8);7,521(7,5);7,451(7,0);7,430(4,4);7,2703(0,6);7,2695(0,6);7,266(1,2);7,261(116,2);7,2573(1,9);7,2565(1,4);7,256(1,0);7,255(0,6);7,254(0,5);7,253(0,5);6,997(0,6);6,755(3,0);6,613(6,2);6,472(3,1);4,610(0,6);4,500(16,0);3,670(0,6);3,668(0,5);3,646(1,9);3,627(3,0);3,625(3,0);3,606(2,0);3,604(2,0);3,584(0,6);3,582(0,6);2,733(0,9);2,723(2,0);2,715(2,2);2,705(4,0);2,696(2,3);2,688(2,1);2,678(1,0);2,572(0,9);2,566(0,6);2,548(2,5);2,543(2,1);2,526(3,2);2,519(4,2);2,502(2,6);2,497(3,7);2,480(1,0);2,474(1,4);2,413(1,1);2,407(1,4);2,404(1,3);2,398(1,0);2,392(2,4);2,386(2,6);2,383(3,4);2,380(1,7);2,377(1,9);2,374(1,9);2,371(2,1);2,368(1,7);2,365(1,7);2,362(3,4);2,359(2,1);2,353(1,9);2,347(1,0);2,341(1,0);2,338(1,1);2,333(1,0);2,322(0,7);2,150(0,6);2,128(1,1);2,122(1,0);2,105(1,7);2,100(2,0);2,083(0,9);2,080(1,5);2,078(3,1);2,056(1,4);2,048(0,6);2,046(0,6);2,039(1,0);2,037(1,4);2,033(0,9);2,030(0,7);2,028(0,7);2,023(0,9);2,016(1,8);2,014(1,7);2,008(1,0);2,005(1,0);2,003(0,9);2,000(0,9);1,994(1,0);1,991(1,0);1,989(1,1);1,986(1,1);1,982(0,6);1,256(0,8);1,069(1,1);1,067(1,1);1,055(4,2);1,052(4,3);1,050(5,2);1,046(2,7);1,037(5,7);1,035(4,7);1,032(4,2);1,028(2,6);1,019(1,8);1,017(1,9);0,914(1,5);0,912(2,0);0,903(4,0);0,900(4,3);0,897(3,7);0,894(6,2);0,890(4,3);0,888(3,5);0,885(4,5);0,882(2,0);0,872(1,4);0,870(1,2);0,008(1,3);0,000(50,8);-0,004(0,9);-0,005(0,7);-0,006(0,5);-0,009(1,6)

### Beispiel No. D6-1: ¹H-NMR (400 MHz, CDCl₃ δ, ppm)

7,715(6,9);7,694(7,5);7,642(2,5);7,638(2,3);7,624(3,0);7,619(2,6);7,519(1,3);7,467(8,2);7,445(6,3);7,412(2,6);7,409(2,4);7,393(3,0);7,390(2,9);7,260(213,0);7,243(4,8);7,221(3,9);7,218(3,7);7,210(1,7);7,203(3,3);7,199(2,6);7,185(1,1);6,996(1,2);4,682(16,0);3,03 4(1,2);3,026(1,7);3,017(2,4);3,008(1,6);2,999(1,3);1,570(3,6);1,063(1,0);1,046(4,7);1,029(5,0);1,012(1,3);0,696(1,2);0,678(4,7);0,675(4,6);0,671(4,7);0,653(1,1);0,000(79,8)

### Beispiel No. D6-3: ¹H-NMR (400 MHz, CDCl₃ δ, ppm)

8,405(0,5);8,370(0,5);8,337(0,5);8,327(0,6);8,309(1,0);8,271(0,6);8,230(0,7);8,067(0,6);7,716(7,5);7,711(2,5);7,699(2,6);7,694(9,5);7,688(1,4);7,519(5,4);7,475(1,4);7,469(9,4);7,464(2,9);7,453(2,7);7,448(8,0);7,442(1,5);7,426(5,6);7,421(2,1);7,410(2,5);7,404(7,9);7,371(0,9);7,360(1,7);7,324(1,2);7,312(1,2);7,308(2,9);7,301(10,0);7,296(4,4);7,285(4,1);7,280(8,4);7,269(8,2);7,260(911,5);7,240(1,5);7,228(1,5);7,210(3,5);7,205(0,7);7,189(0,9);7,147(1,2);6,996(5,2);6,358(0,6);6,324(0,7);6,209(0,8);6,191(0,5);6,144(0,6);6,100(0,6);4,527(16,0);3,080(0,7);3,070(1,3);3,063(1,5);3,053(2,8);3,044(1,6);3,036(1,3);3,026(0,7);1,542(64,2);1,284(0,6);1,067(1,0);1,049(4,3);1,035(3,9);1,028(2,0);1,016(0,9);0,704(1,2);0,694(2,4);0,690(3,2);0,687(3,2);0,684(3,2);0,680(3,5);0,662(1,0);0,146(1,1);0,100(0,7);0,065(0,5);0,038(0,6);0,025(0,6);0,008(10,0);0,000(340,9);-0,009(10,8);-0,025(0,7);-0,033(0,8);-0,050(1,6);-0,150(1,1)

### Beispiel No. D6-5: ¹H-NMR (400 MHz, CDCl₃ δ, ppm)

7,714(7,0);7,709(2,4);7,697(2,5);7,692(8,5);7,665(4,4);7,644(4,7);7,519(3,4);7,468(8,6);7,463(2,5);7,451(2,3);7,446(7,1);7,417(5,2);7,412(5,3);7,292(1,0);7,260(647,5);7,225(0,8);7,210(1,5);7,195(3,1);7,190(2,9);7,175(3,0);7,169(2,8);6,996(3,5);4,638(16,0);3,079(1,3);3,071(1,5);3,061(2,3);3,052(1,5);3,044(1,1);1,544(36,6);1,077(0,9);1,058(3,7);1,043(3,6);1,025(1,0);0,702(1,0);0,692(2,3);0,685(3,1);0,678(3,3);0,660(0,8);0,146(0,8);0 ,008(7,8);0,000(223,9);-0,009(6,1);-0,050(0,5);-0,149(0,7)

### Beispiel No. D6-7: ¹H-NMR (400 MHz, CDCl₃ δ, ppm)

7,738(7,3);7,720(8,6);7,519(2,7);7,478(8,5);7,460(7,3);7,263(443,7);7,260(444,7);7,214(2,0);7,054(2,2);7,034(3,1);7,000(2,7);4,759(16,0);3,082(2,8);1,548(115,9);1,259(1,2); 1,052(6,6);1,034(6,7);0,727(7,1);0,145(1,0);0,003(157,8);0,000(158,2);-0,147(1,0)

### Beispiel No. D6-13: ¹H-NMR (400 MHz, CDCl₃ δ, ppm)

7,725(1,2);7,719(8,5);7,714(2,8);7,702(2,8);7,697(10,1);7,691(1,2);7,519(3,6);7,470(10,9);7,462(4,4);7,453(3,3);7,448(12,2);7,440(4,6);7,432(1,8);7,427(4,0);7,309(1,3);7,260 (646,1);7,226(1,0);7,210(2,5);7,147(2,4);7,031(5,0);7,026(1,4);7,009(9,1);7,004(1,5);6, 996(4,0);6,993(1,5);6,987(4,5);4,539(16,0);3,078(0,7);3,069(1,5);3,061(1,7);3,051(2,9);3,042(1,7);3,034(1,5);3,024(0,8);1,550(22,4);1,065(1,1);1,050(4,1);1,048(4,4);1,033(4,2);1,016(1,1);0,706(1,4);0,696(2,8);0,692(3,6);0,689(3,7);0,686(3,5);0,682(3,8);0,664(1,0);0,146(0,8);0,049(0,5);0,008(7,9);0,000(216,8);-0,009(5,5);-0,051(0,8);-0,114(0,7);-0,150(0,7)

### Beispiel No. D6-15: ¹H-NMR (400 MHz, CDCl₃ δ, ppm)

7,726(8,6);7,705(9,4);7,632(1,3);7,612(2,7);7,596(2,7);7,573(1,1);7,519(1,4);7,472(10,2);7,451(8,0);7,260(239,2);7,211(0,7);6,996(1,3);6,850(2,2);6,840(2,4);6,825(4,9);6,803(3,4);4,567(16,0);3,098(1,7);3,090(2,3);3,081(2,9);3,072(2,2);1,582(9,4);1,081(1,3);1,063(6,3);1,047(6,6);1,030(1,6);0,697(6,6);0,691 (6,3);0,000(84,0);-0,149(0,5)

### Beispiel No. D6-17: ¹H-NMR (400 MHz, CDCl₃ δ, ppm)

7,740(7,9);7,719(8,8);7,519(3,1);7,479(9,5);7,457(7,6);7,317(1,6);7,260(524,3);7,210(1,7);6,996(3,1);6,943(4,5);6,925(7,2);6,904(3,9);4,657(16,0);3,107(2,7);1,556(26,0);1,25 7(0,7);1,060(6,1);1,043(6,3);0,732(6,4);0,147(0,8);0,000(189,5);-0,149(1,1)

### Beispiel No. D6-59: ¹H-NMR (400 MHz, CDCl₃ δ, ppm)

7,740(8,5);7,719(9,2);7,519(1,7);7,480(9,9);7,458(7,6);7,316(0,6);7,260(278,4);7,242(8,7);7,227(1,6);7,210(1,4);7,055(2,0);7,033(2,8);7,023(2,1);7,009(1,2);6,996(1,7);4,761(16,0);3,102(1,6);3,094(2,1);3,084(2,9);3,076(2,1);1,569(10,0);1,069(1,4);1,052(6,1);1,035(6,3);1,018(1,6);0,751 (1,7);0,735(6,2);0,726(6,0);0,000(103,6);-0,051 (0,5);-0,149(0,6)

### Beispiel No. D6-61: ¹H-NMR (400 MHz, CDCl₃ δ, ppm)

7,719(4,2);7,697(5,2);7,622(16,0);7,519(5,4);7,473(5,7);7,452(4,4);7,260(979,1);6,996(5,2);4,590(10,8);1,542(77,6);1,074(3,3);1,059(3,4);0,690(3,4);0,000(334,8)

### Beispiel No. D6-63: ¹H-NMR (400 MHz, CDCl₃ δ, ppm)

8,321(0,6);8,185(1,0);8,175(0,5);8,153(0,6);8,075(0,5);8,062(0,6);7,717(6,5);7,712(1,8);7,700(2,8);7,695(7,1);7,689(0,8);7,644(1,0);7,622(16,0);7,619(14,3);7,611(0,6);7,597(1,1);7,519(1,3);7,478(1,5);7,472(7,8);7,467(1,8);7,455(2,5);7,450(5,6);7,356(0,6);7,312(1,8);7,306(1,1);7,293(0,9);7,260(227,6);7,176(0,5);7,162(0,7);6,996(1,2);6,440(0,5);6, 422(0,5);6,408(0,6);6,197(0,7);6,188(0,6);4,588(15,1);3,117(0,6);3,108(1,1);3,100(1,3);3,090(2,1);3,081(1,2);3,073(1,0);1,553(14,3);1,090(0,9);1,073(3,2);1,071(3,1);1,056(3,4);1,039(0,7);0,715(0,9);0,705(2,5);0,700(3,3);0,698(2,9);0,691(2,7);0,673(0,8);0,008(4,0);0,000(82,3);-0,009(2,1)

### Beispiel No. D6-159: ¹H-NMR (400 MHz, CDCl₃ δ, ppm)

7,691 (8,2);7,670(9,6);7,519(4,2);7,461(10,2);7,439(10,5);7,431(6,6);7,410(4,8);7,260(724,4);7,209(1,9);7,031(5,0);7,010(8,7);6,996(5,5);6,988(4,4);5,153(3,6);5,135(3,8);5,119(1,5);2,917(3,1);1,866(16,0);1,849(15,4);1,545(131,9);1,258(1,2);1,001(4,4);0,662(2,9);0,600(2,7);0,146(1,5);0,000(263,8);-0,149(1,6)

### Beispiel No. D6-726: ¹H-NMR (400 MHz, CDCl₃ δ, ppm)

9,923(2,5);8,324(3,2);8,304(3,1);7,734(6,9);7,713(7,8);7,519(3,4);7,490(8,2);7,470(6,6);7,347(3,6);7,327(4,0);7,260(570,4);7,226(2,5);7,210(2,7);7,045(2,0);7,026(3,2);6,996(3,4);5,299(2,0);4,168(16,0);3,203(2,3);1,551(89,8);1,129(4,9);1,114(5,1);0,787(5,1);0,000(192,6)

### Beispiel No. D6-728: ¹H-NMR (400 MHz, CDCl₃ δ, ppm)

10,508(3,0);7,753(7,0);7,744(8,0);7,723(7,9);7,681(0,5);7,516(8,5);7,495(6,6);7,421(2,9);7,401(3,4);7,260(120,7);7,218(2,6);7,197(4,6);7,177(2,4);7,146(0,6);7,055(3,3);7,035(2,7);6,997(0,7);4,196(1,3);4,018(16,0);3,217(1,9);3,209(2,5);3,201(1,9);1,622(9,3);1,144(5,3);1,127(5,3);0,792(5,6);0,000(41,8)

### Beispiel No. D6-737: ¹H-NMR (400 MHz, CDCl₃ δ, ppm)

10,359(2,7);8,246(1,2);8,233(1,5);8,223(2,2);8,208(2,3);8,186(1,0);7,750(6,9);7,729(7,6);7,499(8,1);7,477(6,3);7,261(118,4);7,208(0,5);6,996(1,1);6,842(3,4);6,822(3,9);6,802(1,4);5,299(6,9);4,463(1,3);4,217(1,2);4,073(16,0);3,219(1,9);3,210(2,5);3,202(1,8);1,593(11,2);1,258(0,8);1,158(1,2);1,142(5,2);1,125(5,3);1,108(1,4);0,797(5,4);0,000 (42,1)

### Beispiel No. D6-742: ¹H-NMR (400 MHz, CDCl₃ δ, ppm)

9,831(2,7);7,752(7,0);7,731(7,7);7,519(2,0);7,503(8,4);7,482(6,5);7,260(296,5);7,164(2,4);6,996(1,9);6,928(3,8);6,908(6,3);6,887(3,3);5,300(1,0);4,497(1,3);4,109(16,0);3,238 (2,5);2,007(1,3);1,569(29,1);1,159(5,2);1,143(5,2);0,812(5,5);0,000(100,8)

### Beispiel No. D6-748: ¹H-NMR (400 MHz, CDCl₃ δ, ppm)

10,648(2,6);7,999(4,5);7,745(6,9);7,723(8,0);7,701(2,4);7,680(2,6);7,517(8,6);7,496(6,6);7,413(1,5);7,393(3,2);7,373(2,2);7,333(3,5);7,314(2,3);7,260(123,9);6,996(0,7);4,219(0,6);4,039(16,0);3,232(1,2);3,225(1,7);3,216(2,4);3,207(1,7);3,198(1,3);2,006(0,6);1,619(10,0);1,167(1,0);1,149(4,8);1,132(4,9);1,115(1,3);0,815(1,3);0,798(4,8);0,791(4,8); 0,000(42,3)

### Beispiel No. D6-761: ¹H-NMR (400 MHz, CDCl₃ δ, ppm)

10,998(4,0);7,740(13,3);7,719(16,0);7,585(8,8);7,566(6,8);7,523(9,4);7,505(7,0);7,263(172,9);7,261(176,5);6,999(1,1);4,011(15,9);3,218(2,7);2,009(0,9);1,554(59,7);1,154(6, 1);1,136(6,2);0,793(6,8);0,003(59,5);0,000(60,7)

### Beispiel No. D6-791: ¹H-NMR (400 MHz, CDCl₃ δ, ppm)

7,715(8,1);7,694(9,0);7,627(3,3);7,608(4,3);7,598(3,6);7,579(3,8);7,519(1,1);7,472(9,8);7,451(8,4);7,438(4,1);7,414(4,3);7,394(3,4);7,376(1,2);7,315(1,1);7,260(155,4);7,214(2,8);7,076(4,6);6,996(0,9);6,938(2,3);4,821(0,5);4,733(1,7);4,702(16,0);3,043(2,1);3,034(2,8);3,025(2,1);1,589(8,6);1,259(0,9);1,064(1,5);1,048(6,3);1,031(6,5);1,014(1,6);0,8 82(0,5);0,683(6,4);0,000(56,4)

### Beispiel No. D12-38: ¹H-NMR (400 MHz, CDCl₃ δ, ppm)

8,417(0,8);8,415(0,9);8,405(0,9);8,402(0,9);7,493(0,8);7,492(0,8);7,474(0,9);7,473(0,9);7,267(13,8);7,150(0,9);7,138(0,9);7,131(0,8);7,119(0,8);4,706(7,2);3,201(1,0);3,184(1,4);3,167(1,0);2,921(0,6);2,913(0,6);2,903(1,1);2,893(0,6);2,886(0,6);2,452(9,0);1,959(1,0);1,400(16,2);1,383(16,0);1,164(0,8);1,160(1,4);1,155(0,8);1,147(1,2);1,142(1,2);1,137(0,8);1,129(0,5);1,127(0,6);1,069(0,6);1,061(1,2);1,058(1,3);1,051(1,5);1,048(1,2);1,046(1,2);1,042(0,8);1,039(0,8);0,000(5,1)

### Beispiel No. D12-61: ¹H-NMR (400 MHz, CDCl₃ δ, ppm)

7,803(1,1);7,802(1,1);7,784(1,3);7,783(1,3);7,653(1,0);7,650(1,1);7,634(1,2);7,631(1,2);7,526(0,7);7,522(0,7);7,507(1,4);7,503(1,3);7,487(0,8);7,484(0,7);7,373(0,9);7,370(0,9);7,354(1,4);7,351(1,4);7,335(0,6);7,332(0,6);7,266(10,8);4,627(7,9);3,177(1,0);3,160(1,3);3,143(1,0);2,834(0,6);2,826(0,7);2,816(1,2);2,807(0,7);2,799(0,6);1,387(16,0);1,370(15,7);1,145(1,3);1,142(1,4);1,140(1,7);1,137(0,8);1,128(1,7);1,125(1,5);1,123(1,3);1,1 19(0,8);1,108(0,5);1,001(0,6);0,991(1,2);0,988(1,4);0,982(1,8);0,978(1,3);0,973(1,3);0, 000(3,9)

### Beispiel No. D12-81: ¹H-NMR (400 MHz, CDCl₃ δ, ppm)

7,785(1,1);7,766(1,2);7,654(1,0);7,634(1,2);7,484(0,5);7,466(1,1);7,447(0,7);7,388(0,7);7,369(1,1);7,267(5,8);4,681(4,2);4,680(4,2);3,186(1,1);3,169(1,5);3,151(1,1);2,778(0,7);2,770(0,7);2,760(1,3);2,750(0,8);2,743(0,7);1,402(16,3);1,385(16,0);1,106(1,4);1,101(1,8);1,097(0,9);1,088(1,8);1,085(1,5);1,079(0,8);1,070(0,6);1,069(0,6);0,979(0,7);0,969(1,4);0,966(1,5);0,960(2,0);0,956(1,5);0,950(1,3);0,000(2,1)

### Beispiel No. D12-94: ¹H-NMR (400 MHz, CDCl₃ δ, ppm)

8,444(1,5);8,439(1,5);7,875(1,1);7,869(1,1);7,854(1,2);7,848(1,2);7,265(15,0);7,254(1,8);7,253(1,8);7,233(1,6);4,437(6,9);3,175(0,9);3,157(1,3);3,140(1,0);2,852(0,6);2,844(0,6);2,835(1,2);2,825(0,7);2,817(0,6);1,391(16,0);1,374(15,7);1,140(1,2);1,137(1,3);1,135(1,6);1,132(0,8);1,123(1,6);1,120(1,4);1,118(1,3);1,114(0,7);0,997(0,5);0,987(1,1);0,984(1,3);0,981(1,1);0,978(1,7);0,974(1,3);0,969(1,2);0,000(5,6)

### Beispiel No. D12-186: ¹H-NMR (400 MHz, CDCl₃ δ, ppm)

8,481(3,8);8,475(3,7);7,769(2,5);7,763(2,4);7,749(2,6);7,742(2,6);7,519(1,1);7,260(207,4);7,250(4,5);7,229(3,8);6,996(1,2);5,099(0,6);5,081(2,0);5,063(2,0);5,046(0,7);3,182(0,6);3,164(1,5);3,147(2,1);3,130(1,6);3,113(0,6);2,753(0,9);2,745(1,1);2,736(1,8);2,726(1,2);2,718(0,9);1,821(16,0);1,803(15,8);1,394(12,5);1,376(12,5);1,367(12,6);1,350(12,1);1,135(2,5);1,130(3,1);1,118(2,6);1,112(3,0);0,988(0,7);0,982(0,6);0,965(2,1);0,959(1,3);0,955(2,0);0,942(1,2);0,938(2,2);0,933(1,3);0,928(2,1);0,906(0,6);0,008(2,4);0,000(78,1);-0,009(2,3)

### Beispiel No. D12-681: ¹H-NMR (400 MHz, CDCl₃ δ, ppm)

8,082(2,7);8,064(2,7);7,263(67,3);7,240(2,0);7,086(2,2);7,058(2,3);5,302(1,1);4,784(6,8);4,777(7,1);3,661(1,0);3,639(1,6);3,619(1,2);3,434(1,7);3,410(5,2);3,387(5,5);3,363(2,0);2,913(0,9);2,905(1,1);2,895(1,8);2,886(1,2);2,878(1,1);2,868(0,6);2,533(1,6);2,520(16,0);2,511(3,3);2,504(3,1);2,487(1,8);2,481(2,2);2,464(0,6);2,458(0,8);2,411(0,6);2,405(0,8);2,403(0,8);2,390(1,4);2,382(1,9);2,376(1,3);2,373(1,3);2,369(1,3);2,360(1,9);2,352(1,2);2,339(0,7);2,331(0,6);2,122(0,6);2,100(0,9);2,095(1,0);2,072(1,4);2,050(0,8);2,024(0,5);2,001(0,9);1,998(0,9);1,993(0,7);1,973(0,7);1,593(1,6);1,153(0,6);1,140(1,9);1,135(2,7);1,122(2,6);1,120(2,6);1,103(1,2);1,029(1,0);1,016(2,5);1,011(3,2);1,006(2,6), 1,001 (2,2);0,988(0,9);0,000(28,8);-0,008(2,2);-0,023(0,9)

### Beispiel No. D13-4: ¹H-NMR (400 MHz, CDCl₃ δ, ppm)

7,568(2,1);7,564(2,3);7,549(2,3);7,545(2,4);7,384(2,4);7,380(2,4);7,364(2,8);7,360(2,7);7,266(13,0);7,134(2,9);7,114(4,5);7,095(2,3);4,618(16,0);3,490(0,7);2,824(2,2);2,805(7,0);2,800(0,9);2,789(1,7);2,786(7,3);2,782(1,9);2,772(2,5);2,767(2,7);2,763(1,5);2,755(1,2);2,745(0,6);1,396(7,7);1,377(15,7);1,358(7,3);1,116(0,6);1,114(0,7);1,101(2,4);1,096(3,1);1,092(1,6);1,083(3,2);1,081(2,8);1,079(2,6);1,075(1,5);1,065(1,0);1,064(1,0);0, 960(1,1);0,951(2,3);0,947(2,6);0,942(3,5);0,937(2,6);0,932(2,5);0,919(0,7);0,000(4,6)

### Beispiel No. D13-6: ¹H-NMR (400 MHz, CDCl₃ δ, ppm)

7,596(3,9);7,590(4,0);7,310(3,6);7,289(5,1);7,267(11,6);7,198(2,9);7,192(2,8);7,177(2,0);7,171(1,9);4,551(14,9);2,838(2,2);2,819(6,9);2,810(0,8);2,801(8,0);2,792(1,4);2,782(4,5);2,772(1,3);2,765(1,2);2,755(0,6);1,409(7,7);1,391(16,0);1,372(7,3);1,122(0,6);1,120(0,6);1,108(2,3);1,104(2,4);1,103(2,9);1,098(1,5);1,090(3,0);1,087(2,5);1,085(2,3);1,081(1,4);1,072(0,9);1,070(0,9);0,977(0,9);0,975(1,1);0,966(2,1);0,963(2,4);0,961(2,0);0, 957(3,4);0,953(2,3);0,947(2,3);0,935(0,6);0,933(0,5);0,000(4,2)

### Beispiel No. D13-61: ¹H-NMR (400 MHz, CDCl₃ δ, ppm)

7,789(1,9);7,788(1,9);7,770(2,2);7,768(2,1);7,653(1,7);7,650(1,8);7,634(2,0);7,631(2,1);7,527(1,2);7,523(1,2);7,507(2,4);7,504(2,3);7,488(1,4);7,485(1,3);7,375(1,5);7,372(1,5);7,355(2,4);7,353(2,4);7,336(1,1);7,333(1,0);7,269(12,1);4,632(13,6);2,858(0,5);2,848(1,1);2,840(1,3);2,830(4,4);2,821(1,4);2,812(7,7);2,803(0,8);2,793(7,2);2,774(2,4);1,401(7,8);1,383(16,0);1,364(7,4);1,144(0,6);1,142(0,6);1,129(2,3);1,126(2,4);1,124(2,9);1,1 20(1,4);1,112(3,0);1,109(2,6);1,107(2,3);1,103(1,4);1,094(0,9);1,092(0,9);0,982(0,9);0,980(1,0);0,970(2,1);0,967(2,4);0,965(2,0);0,962(3,2);0,957(2,3);0,955(1,8);0,952(2,3);0 ,949(1,0);0,939(0,7);0,937(0,5);0,000(4,4)

### Beispiel No. D13-81: ¹H-NMR (400 MHz, CDCl₃ δ, ppm)

7,768(1,6);7,749(1,8);7,656(1,6);7,637(1,8);7,486(0,8);7,469(1,7);7,450(1,0);7,391(1,1);7,372(1,7);7,353(0,7);7,268(10,5);4,686(6,5);4,684(6,6);2,848(2,1);2,829(6,9);2,810(7,3);2,799(1,2);2,791(3,5);2,781(2,2);2,771(1,3);2,763(1,1);2,754(0,6);1,413(7,7);1,394(16,0);1,376(7,4);1,108(0,6);1,106(0,6);1,094(2,3);1,090(2,3);1,088(2,8);1,084(1,5);1,076(3,0);1,073(2,5);1,071(2,3);1,067(1,4);1,058(0,9);1,056(0,9);0,963(0,9);0,961(1,0);0,952(2,0);0,948(2,3);0,946(2,0);0,943(3,4);0,938(2,2);0,933(2,3);0,930(1,0);0,920(0,6);0,918(0,5);0,000(3,9)

### Beispiel No. D13-94: ¹H-NMR (400 MHz, CDCl₃ δ, ppm)

8,443(2,6);8,438(2,6);8,437(2,5);7,859(2,0);7,853(2,0);7,838(2,1);7,832(2,1);7,267(21,4);7,257(3,1);7,256(3,1);7,236(2,9);7,235(2,9);4,444(12,5);2,866(0,5);2,857(1,1);2,849(1,2);2,839(2,3);2,833(2,3);2,829(1,4);2,821(1,3);2,815(6,8);2,796(6,9);2,777(2,3);1,404(7,8);1,385(16,0);1,366(7,4);1,141(0,6);1,139(0,6);1,126(2,3);1,123(2,4);1,121(2,9);1,117(1,4);1,108(3,0);1,106(2,6);1,104(2,2);1,100(1,4);1,091(0,9);1,089(0,9);0,979(0,8);0,977(1,0);0,968(2,1);0,964(2,4);0,962(1,9);0,959(3,1);0,955(2,3);0,952(1,8);0,949(2,3);0,947(1,0);0,937(0,7);0,935(0,5);0,000(8,1)

### Beispiel No. D13-186: ¹H-NMR (400 MHz, CDCl₃ δ, ppm)

8,488(4,0);8,481(4,0);7,782(2,8);7,776(2,5);7,761(2,9);7,755(2,9);7,519(2,4);7,309(0,7);7,266(9,5);7,260(443,2);7,247(4,8);7,209(0,5);6,996(2,5);5,135(0,7);5,117(2,2);5,099(2,2);5,081(0,7);2,891(0,9);2,872(2,5);2,853(2,5);2,836(1,0);2,811(1,0);2,801(1,4);1,828(16,0);1,810(15,9);1,599(0,7);1,417(6,3);1,398(12,2);1,379(6,0);1,154(2,8);1,137(2,9);1,002(0,7);0,976(2,0);0,967(1,9);0,952(1,9);0,942(1,8);0,921(0,6);0,157(0,9);0,146(0,5);0,008(4,8);0,000(165,9);-0,009(5,0);-0,150(0,5)

### Beispiel No. D17-4: ¹H-NMR (400 MHz, CDCl₃ δ, ppm)

7,539(1,1);7,536(1,2);7,520(1,2);7,516(1,3);7,389(1,3);7,385(1,2);7,369(1,5);7,365(1,4);7,264(10,7);7,137(1,5);7,117(2,4);7,098(1,2);4,624(8,5);2,815(0,6);2,807(0,7);2,798(1, 2);2,788(0,7);2,780(0,6);2,455(16,0);1,108(1,3);1,105(1,4);1,103(1,7);1,099(0,8);1,090(1,7);1,088(1,4);1,086(1,3);1,082(0,7);0,953(0,6);0,943(1,2);0,940(1,4);0,938(1,1);0,934 (1,8);0,930(1,3);0,925(1,2);0,000(3,9)

### Beispiel No. D17-6: ¹H-NMR (400 MHz, CDCl₃ δ, ppm)

7,588(2,1);7,582(2,2);7,313(1,9);7,292(2,8);7,267(6,8);7,202(1,6);7,196(1,5);7,181(1,1);7,174(1,0);4,557(8,1);2,828(0,6);2,820(0,7);2,810(1,2);2,801(0,7);2,793(0,6);2,467(16,0);1,114(1,3);1,111(1,3);1,109(1,6);1,105(0,8);1,096(1,7);1,094(1,4);1,092(1,3);1,088(0,8);0,970(0,6);0,961(1,2);0,958(1,3);0,955(1,1);0,952(1,8);0,948(1,3);0,942(1,3);0,940(0,5);0,000(2,5)

### Beispiel No. D17-10: ¹H-NMR (400 MHz, CDCl₃ δ, ppm)

7,357(9,0);7,326(0,5);7,263(16,8);4,748(8,0);2,956(0,6);2,884(0,6);2,883(0,6);2,879(0,6);2,871(0,6);2,862(1,1);2,852(0,6);2,844(0,6);2,491(16,0);1,661(0,6);1,119(0,9);1,116(1,1);1,114(1,3);1,110(0,8);1,101(1,2);1,099(1,1);1,097(1,1);1,095(1,0);1,092(0,7);1,082(0,6);1,012(0,6);1,004(1,1);1,002(1,0);1,001(1,1);0,999(1,1);0,998(1,0);0,994(1,6);0,991(1,0);0,989(1,1);0,988(1,0);0,985(0,8);0,000(7,0)

### Beispiel No. D17-11: ¹H-NMR (400 MHz, CDCl₃ δ, ppm)

7,478(0,7);7,474(0,8);7,263(14,3);7,259(0,6);7,077(0,9);7,072(0,7);7,069(0,6);7,061(0,9);7,058(1,1);7,047(0,8);7,042(0,7);4,515(3,3);4,513(3,3);2,808(0,5);2,800(0,6);2,790(1,1);2,781(0,6);2,773(0,5);2,459(16,0);1,096(1,1);1,093(1,1);1,091(1,3);1,087(0,7);1,078(1,5);1,076(1,2);1,074(1,0);1,072(0,9);1,069(0,7);0,957(0,5);0,948(0,9);0,9444(1,0);0,9438(1,0);0,942(0,9);0,939(1,6);0,935(1,0);0,934(1,0);0,932(0,8);0,929(1,2);0,000(6,0)

### Beispiel No. D17-12: ¹H-NMR (400 MHz, CDCl₃ δ, ppm)

7,274(0,8);7,263(13,0);7,261(0,9);7,260(1,0);7,259(1,0);7,254(0,6);7,239(0,6);7,199(0,6);7,196(0,9);7,195(0,9);7,194(0,7);7,193(0,7);7,177(0,5);7,176(0,6);7,148(0,5);7,124(0,5);4,470(5,6);2,838(0,5);2,830(0,6);2,820(1,1);2,811(0,6);2,803(0,5);2,466(16,0);1,113(1,1);1,110(1,1);1,108(1,3);1,104(0,7);1,095(1,5);1,093(1,2);1,091(1,0);1,090(0,9);1,086(0,7);0,970(0,5);0,960(0,9);0,9571(1,0);0,9565(1,0);0,955(0,9);0,951(1,6);0,948(1,0);0,947(1,0);0,945(0,9);0,942(1,2);0,000(6,0)

### Beispiel No. D17-13: ¹H-NMR (400 MHz, CDCl₃ δ, ppm)

7,404(1,2);7,391(1,2);7,385(0,6);7,382(1,3);7,374(0,5);7,369(1,3);7,263(16,1);7,008(1,5);6,986(2,8);6,964(1,4);4,452(4,9);2,822(0,5);2,814(0,6);2,805(1,1);2,795(0,6);2,787(0,5);2,461(16,0);1,103(1,1);1,100(1,1);1,098(1,3);1,094(0,7);1,085(1,5);1,083(1,2);1,080(1,0);1,079(0,9);1,076(0,7);0,959(0,5);0,949(0,9);0,946(1,0);0,944(0,9);0,940(1,6);0,937(1,0);0,936(1,0);0,934(0,9);0,931(1,1);0,000(7,0)

### Beispiel No. D17-15: ¹H-NMR (400 MHz, CDCl₃ δ, ppm)

7,530(0,8);7,514(0,8);7,262(23,6);6,826(0,6);6,818(0,6);6,816(0,5);6,811(0,5);6,804(0,8);6,801(0,9);6,797(1,0);6,778(0,9);4,476(3,7);2,845(0,6);2,837(0,6);2,828(1,2);2,818(0,7);2,810(0,6);2,465(16,0);1,113(1,2);1,110(1,3);1,108(1,5);1,104(0,8);1,096(1,7);1,093(1,4);1,091(1,2);1,087(0,8);1,076(0,5);0,965(0,6);0,956(1,1);0,953(1,2);0,950(1,0);0,947(1,8);0,942(1,1);0,940(1,0);0,937(1,3);0,935(0,5);0,000(10,4)

### Beispiel No. D17-22: ¹H-NMR (400 MHz, CDCl₃ δ, ppm)

8,422(1,8);8,418(1,8);7,705(1,3);7,699(1,2);7,684(1,4);7,678(1,3);7,520(0,8);7,261(152,2);7,196(1,9);7,175(1,8);6,997(0,8);4,407(7,9);2,978(0,6);2,971(0,6);2,961(0,9);2,951(0,6);2,943(0,5);2,872(0,7);2,863(0,9);2,854(0,6);2,590(16,0);2,492(10,8);1,135(2,0);1,117(2,4);1,114(2,5);1,099(1,6);1,096(1,6);1,093(1,6);1,081(1,0);1,066(0,6);1,059(0,8);1,048(1,9);1,042(1,5);1,036(1,6);0,979(0,6);0,965(1,5);0,960(1,8);0,956(1,5);0,008(1,7);0,000(56,7);-0,009(1,6)

### Beispiel No. D17-36: ¹H-NMR (400 MHz, CDCl₃ δ, ppm)

8,723(1,1);8,720(1,1);7,945(1,2);7,941(1,2);7,267(0,6);7,266(0,7);7,262(44,9);4,876(4,5);2,977(0,5);2,969(0,6);2,959(1,1);2,949(0,6);2,941(0,6);2,493(16,0);1,183(1,1);1,179(1,1);1,177(1,3);1,173(0,8);1,165(1,4);1,162(1,2);1,160(1,1);1,159(1,0);1,156(0,7);1,145(0,5);1,064(0,6);1,056(1,0);1,054(1,0);1,051(1,1);1,049(1,0);1,046(1,8);1,042(1,0);1,041(1,1);1,040(0,9);1,036(1,0);0,008(0,6);0,000(20,3);-0,009(0,5)

### Beispiel No. D17-38: ¹H-NMR (400 MHz, d₆-DMSO δ, ppm)

8,349(2,1);8,346(2,1);8,337(2,1);8,334(2,1);7,630(1,8);7,628(2,0);7,626(2,0);7,611(1,9);7,609(2,3);7,607(2,2);7,257(2,4);7,245(2,4);7,238(2,1);7,226(2,0);4,565(16,0);3,320(77,4);3,296(10,3);3,076(0,6);3,066(1,3);3,058(1,4);3,048(2,5);3,039(1,5);3,031(1,3);3,02 1(0,6);2,670(0,6);2,541(0,5);2,524(1,6);2,519(2,3);2,511(34,7);2,506(76,1);2,501(106,0);2,497(73,9);2,492(32,7);2,384(1,1);2,372(44,8);2,370(24,4);2,328(0,7);1,087(0,7);1,069(2,5);1,067(3,0);1,063(2,0);1,054(2,9);1,048(2,4);1,036(1,3);1,015(0,9);0,999(0,6);0,986(1,5);0,976(3,8);0,972(2,3);0,969(3,1);0,966(3,3);0,962(2,1);0,957(1,5);0,947(0,8);0,008(0,7);0,000(25,0);-0,009(0,7)

### Beispiel No. D17-40: ¹H-NMR (400 MHz, CDCl₃ δ, ppm)

8,353(1,2);8,340(1,2);7,359(1,1);7,346(1,1);7,261(50,4);7,256(0,5);4,869(4,0);2,940(0,6);2,484(9,1);1,561(16,0);1,164(0,5);1,159(0,7);1,146(0,7);1,144(0,6);1,142(0,6);1,047(0,6);1,042(0,6);1,037(0,9);1,033(0,6);0,008(0,6);0,000(20,8);-0,009(0,6)

### Beispiel No. D17-61: ¹H-NMR (400 MHz, CDCl₃ δ, ppm)

7,760(1,1);7,759(1,1);7,740(1,3);7,739(1,3);7,655(1,0);7,652(1,1);7,636(1,1);7,633(1,2);7,530(0,7);7,527(0,7);7,511(1,3);7,507(1,3);7,492(0,7);7,488(0,7);7,379(0,8);7,376(0,9);7,360(1,4);7,357(1,4);7,341(0,6);7,338(0,6);7,267(8,2);4,633(7,5);2,872(0,6);2,864(0,7);2,854(1,2);2,845(0,7);2,837(0,6);2,462(16,0);1,136(1,3);1,133(1,5);1,131(1,7);1,127(0,9);1,118(1,7);1,116(1,6);1,114(1,4);1,110(0,8);1,100(0,5);1,098(0,5);0,974(0,6);0,964(1,3);0,961(1,4);0,959(1,3);0,956(1,8);0,951(1,4);0,949(1,2);0,946(1,3);0,000(3,0)

### Beispiel No. D17-73: ¹H-NMR (400 MHz, CDCl₃ δ, ppm)

7,298(1,7);7,294(0,6);7,282(0,7);7,278(2,2);7,262(11,4);7,126(1,8);7,106(1,4);4,449(5,1);2,805(0,5);2,797(0,6);2,788(1,1);2,778(0,6);2,770(0,5);2,459(16,0);2,327(6,7);1,085(1,2);1,082(1,1);1,080(1,3);1,076(0,7);1,068(1,5);1,065(1,1);1,063(1,0);1,062(0,9);1,058(0,7);0,958(0,5);0,949(0,9);0,948(0,9);0,946(1,0);0,945(1,0);0,943(0,9);0,940(1,8);0,936(1,0);0,935(1,0);0,933(0,9);0,930(1,1);0,000(5,3)

### Beispiel No. D17-81: ¹H-NMR (400 MHz, CDCl₃ δ, ppm)

7,741(0,8);7,722(1,0);7,660(0,8);7,640(0,9);7,473(0,9);7,454(0,5);7,395(0,6);7,376(0,8);7,267(7,0);4,685(3,4);4,683(3,4);2,824(0,6);2,816(0,6);2,806(1,2);2,797(0,7);2,789(0,6);2,476(16,0);1,100(1,2);1,097(1,3);1,095(1,5);1,091(0,8);1,083(1,6);1,080(1,4);1,078(1,2);1,074(0,7);0,954(0,6);0,945(1,1);0,941(1,2);0,939(1,0);0,936(1,7);0,932(1,2);0,929(1,0);0,926(1,2);0,000(2,7)

### Beispiel No. D17-82: ¹H-NMR (400 MHz, CDCl₃ δ, ppm)

7,656(1,1);7,655(1,1);7,652(0,9);7,647(0,7);7,628(0,7);7,626(0,7);7,558(0,8);7,514(0,7);7,442(0,6);7,423(0,9);7,263(16,6);4,519(5,7);2,818(0,6);2,810(0,6);2,800(1,1);2,790(0,6);2,783(0,6);2,461(16,0);1,112(1,1);1,109(1,2);1,107(1,4);1,103(0,7);1,094(1,5);1,092(1,3);1,090(1,0);1,089(1,0);1,086(0,7);0,960(0,5);0,951(1,0);0,947(1,1);0,945(0,9);0,942(1,5);0,937(1,1);0,935(0,9);0,932(1,1);0,000(6,9)

### Beispiel No. D17-86: ¹H-NMR (400 MHz, CDCl₃ δ, ppm)

7,842(1,2);7,841(1,1);7,839(1,1);7,838(1,1);7,499(1,8);7,486(1,1);7,481(1,1);7,264(13,9);4,637(7,1);2,813(0,6);2,805(0,6);2,795(1,1);2,785(0,6);2,778(0,6);2,464(16,0);1,114(1,1);1,111(1,2);1,109(1,5);1,105(0,8);1,096(1,6);1,094(1,3);1,092(1,2);1,087(0,7);0,963(0,6);0,954(1,0);0,950(1,1);0,948(1,0);0,945(1,6);0,941(1,1);0,940(1,1);0,938(0,9);0,93 5(1,2);0,000(6,3)

### Beispiel No. D17-94: ¹H-NMR (400 MHz, CDCl₃ δ, ppm)

8,441(1,7);8,435(1,6);7,837(1,2);7,831(1,2);7,817(1,3);7,810(1,3);7,261(50,9);7,242(1,8);4,449(7,8);2,882(0,6);2,874(0,7);2,864(1,2);2,855(0,7);2,847(0,6);2,482(16,0);1,140(1,3);1,137(1,5);1,135(1,9);1,132(0,9);1,122(1,8);1,120(1,7);1,118(1,5);1,114(0,8);1,105(0,5);1,103(0,6);0,978(0,6);0,969(1,3);0,965(1,5);0,963(1,3);0,960(1,9);0,955(1,5);0,951(1,3);0,008(0,6);0,000(18,2);-0,009(0,6)

### Beispiel No. D17-99: ¹H-NMR (400 MHz, CDCl₃ δ, ppm)

8,106(2,0);8,087(2,1);7,261(36,6);7,193(2,3);7,173(2,2);4,521(7,1);2,868(0,5);2,860(0,6);2,850(1,1);2,840(0,6);2,832(0,5);2,448(16,0);1,578(9,3);1,136(1,0);1,133(1,1);1,131(1,4);1,127(0,7);1,118(1,4);1,116(1,3);1,114(1,1);1,110(0,7);0,959(1,0);0,955(1,1);0,953(1,0);0,950(1,4);0,945(1,1);0,943(0,9);0,940(1,0);0,000(13,2)

### Beispiel No. D17-108: ¹H-NMR (400 MHz, CDCl₃ δ, ppm)

7,351(0,8);7,348(1,5);7,344(0,8);7,340(1,3);7,339(1,4);7,320(1,6);7,301(0,6);7,269(1,1);7,268(1,1);7,266(1,2);7,262(25,4);7,129(0,6);4,477(6,2);2,816(0,5);2,808(0,6);2,798(1,1);2,789(0,6);2,781(0,6);2,463(16,0);1,110(1,1);1,107(1,2);1,105(1,4);1,101(0,7);1,092(1,5);1,090(1,3);1,088(1,1);1,083(0,7);0,955(0,5);0,945(1,0);0,942(1,1);0,939(0,9);0,936(1,5);0,932(1,1);0,930(0,9);0,927(1,1);0,000(10,9)

### Beispiel No. D17-122: ¹H-NMR (400 MHz, CDCl₃ δ, ppm)

8,115(1,2);8,094(1,3);8,083(0,8);8,062(0,9);7,809(0,7);7,806(0,8);7,788(0,8);7,785(0,9);7,730(0,6);7,727(0,6);7,713(0,8);7,709(1,2);7,706(0,6);7,692(0,7);7,688(0,8);7,685(2,0);7,664(1,8);7,545(0,7);7,542(0,8);7,528(0,7);7,525(1,2);7,522(0,7);7,508(0,6);7,505(0,5);7,262(29,5);4,841(8,3);2,907(0,5);2,899(0,6);2,889(1,1);2,880(0,6);2,872(0,6);2,468(16,0);1,131(1,1);1,128(1,1);1,126(1,3);1,121(0,7);1,113(1,3);1,110(1,1);1,108(1,0);1,107(0,9);1,104(0,7);1,093(0,5);1,014(0,6);1,006(1,0);1,002(1,0);1,000(0,9);0,996(1,7);0,993(1,0);0,992(1,0);0,990(0,9);0,986(1,0);0,000(10,3)

### Beispiel No. D17-130: ¹H-NMR (400 MHz, CDCl₃ δ, ppm)

8,137(0,7);8,135(0,8);8,117(0,8);8,114(0,8);7,883(0,7);7,881(0,7);7,863(0,9);7,859(0,8);7,814(0,9);7,793(1,0);7,561(1,0);7,557(1,8);7,554(1,1);7,540(1,8);7,536(1,7);7,529(0,9);7,525(1,0);7,508(1,0);7,505(0,8);7,412(1,2);7,394(1,0);7,391(1,1);7,374(0,9);7,261(13,4);4,964(6,1);2,642(0,5);2,635(0,6);2,625(1,0);2,615(0,6);2,607(0,5);2,455(16,0);2,445(0,7);0,971(0,6);0,967(1,2);0,965(0,9);0,962(0,7);0,954(1,0);0,952(0,9);0,950(1,0);0,948(0,9);0,944(0,7);0,935(0,6);0,888(0,6);0,880(1,1);0,877(1,0);0,875(1,0);0,871(1,3);0,867(1,2);0,865(1,0);0,861(0,6);0,857(0,6);0,000(6,0)

### Beispiel No. D17-139: ¹H-NMR (400 MHz, CDCl₃ δ, ppm)

7,263(20,0);7,088(4,1);6,840(4,1);5,948(12,5);4,525(8,2);2,856(0,5);2,848(0,6);2,838(1,1);2,828(0,6);2,820(0,6);2,464(16,0);1,112(1,2);1,109(1,2);1,107(1,4);1,103(0,7);1,095(1,6);1,092(1,2);1,090(1,1);1,089(1,0);1,086(0,7);0,976(0,5);0,967(1,0);0,964(1,1);0,961(0,9);0,958(1,7);0,954(1,1);0,953(1,1);0,951(0,9);0,948(1,2);0,000(9,0)

### Beispiel No. D17-143: ¹H-NMR (400 MHz, CDCl₃ δ, ppm)

7,330(5,2);7,262(5,9);4,462(2,8);2,461(5,0);1,304(16,0);0,940(0,6);0,000(2,6)

### Beispiel No. D17-159: ¹H-NMR (400 MHz, CDCl₃ δ, ppm)

7,387(1,3);7,382(0,5);7,373(1,4);7,370(0,6);7,365(1,5);7,357(0,5);7,352(1,4);7,263(15,8);7,006(1,6);6,989(0,5);6,984(2,9);6,979(0,5);6,962(1,4);5,036(1,0);5,019(1,0);2,684(0,5);2,676(0,6);2,667(1,1);2,657(0,6);2,649(0,5);2,443(16,0);1,804(7,0);1,786(6,9);1,080(0,7);1,078(0,8);1,075(1,3);1,072(1,4);1,069(0,6);1,065(0,6);1,063(0,7);1,060(0,8);1,05 7(1,3);1,055(1,4);1,048(0,6);0,917(1,0);0,914(0,6);0,907(1,1);0,905(0,6);0,883(0,5);0,879(0,9);0,873(0,5);0,871(0,5);0,869(0,8);0,000(7,0)

### Beispiel No. D17-186: ¹H-NMR (400 MHz, CDCl₃ δ, ppm)

8,476(1,6);8,469(1,7);7,7633(1,2);7,7627(1,1);7,757(1,1);7,743(1,2);7,742(1,3);7,7362(1,2);7,7357(1,2);7,265(16,6);7,261(2,0);7,240(1,6);7,239(1,6);5,086(1,3);5,068(1,3);2,783(0,6);2,775(0,7);2,765(1,2);2,755(0,7);2,747(0,6);2,442(16,0);1,814(7,4);1,796(7,3);1,117(1,2);1,116(1,0);1,113(1,0);1,111(1,6);1,108(0,9);1,107(0,9);1,099(1,2);1,095(1,0);1,093(1,5);1,091(0,9);1,089(0,8);0,933(0,9);0,931(1,1);0,928(0,6);0,924(0,9);0,921(1,0) ;0,909(0,6);0,907(0,8);0,905(0,7);0,903(0,6);0,899(0,7);0,897(0,8);0,895(0,7);0,000(6,2)

### Beispiel No. D17-681: ¹H-NMR (400 MHz, CDCl₃ δ, ppm)

8,067(0,7);8,055(0,7);7,260(50,0);7,084(0,9);7,065(0,6);4,791(1,8);4,786(1,7);3,416(0,4);3,400(1,3);3,384(1,3);3,368(0,4);2,988(0,4);2,521(4,4);2,473(4,3);1,559(1,6);1,187(0,7);1,178(0,7);1,067(0,7);0,000(14,0);-0,006(0,5)

### Beispiel No. D18-13: ¹H-NMR (400 MHz, CDCl₃ δ, ppm)

7,386(2,5);7,380(1,0);7,372(2,6);7,364(2,9);7,356(1,1);7,350(2,8);7,292(0,6);7,285(4,8);7,280(1,7);7,269(2,2);7,264(9,2);7,262(36,8);7,175(0,8);7,169(5,2);7,164(1,6);7,153(1,3);7,147(3,7);6,988(3,3);6,982(1,0);6,971(1,1);6,966(6,0);6,961(1,1);6,950(1,0);6,944(2,9);5,299(16,0);4,446(10,5);4,168(9,2);2,476(1,1);2,469(1,1);2,467(0,8);2,459(1,9);2,453(0,6);2,449(1,1);2,441(1,1);2,431(0,5);1,634(3,2);1,256(0,7);0,991(0,7);0,987(1,2);0,983(2,2);0,981(1,8);0,977(1,5);0,968(1,8);0,965(2,0);0,963(1,7);0,960(1,3);0,951(1,5);0,939(0,6);0,931(0,5);0,915(1,1);0,912(1,2);0,905(2,0);0,902(2,5);0,900(2,1);0,895(2,3);0,890(2,3);0,886(1,2);0,882(0,8);0,880(1,0);0,872(0,5);0,000(16,2)

### Beispiel No. D18-15: ¹H-NMR (400 MHz, CDCl₃ δ, ppm)

7,531(1,3);7,515(1,4);7,510(2,4);7,494(2,5);7,488(1,2);7,472(1,2);7,293(1,0);7,286(8,1);7,281(2,9);7,278(0,5);7,277(0,5);7,276(0,6);7,275(0,6);7,2743(0,7);7,2735(0,7);7,270(3,6);7,265(14,1);7,262(52,7);7,259(2,8);7,182(1,3);7,176(9,1);7,171(2,7);7,160(2,2);7,156(5,2);7,155(6,2);7,149(0,7);6,818(1,2);6,812(1,8);6,803(0,6);6,796(2,9);6,792(2,9);6,787(1,8);6,782(0,9);6,777(2,8);6,771(2,7);6,765(1,6);6,759(1,6);6,757(1,3);6,752(0,6);6 ,750(0,8);5,299(11,1);4,470(11,6);4,469(11,6);4,166(16,0);2,514(0,8);2,504(1,8);2,497(1,9);2,495(1,4);2,487(3,3);2,480(1,0);2,477(1,9);2,469(1,8);2,459(0,9);1,635(4,0);1,334(0,8);1,285(1,2);1,256(2,1);1,014(0,8);1,012(0,9);1,003(1,4);0,999(2,2);0,995(4,0);0,993(3,1);0,989(2,4);0,986(1,4);0,981(3,2);0,980(3,2);0,977(3,5);0,975(2,9);0,972(2,3);0,964(1,6);0,962(1,9);0,959(0,9);0,947(1,0);0,943(0,8);0,926(1,1);0,921(1,5);0,920(2,0);0,912(3,6);0,909(4,2);0,907(3,5);0,902(4,0);0,899(4,1);0,897(3,8);0,893(2,1);0,887(1,8);0,879(1,2);0,877(0,8);0,008(0,8);0,000(24,8);-0,009(0,7)

### Beispiel No. D18-17: ¹H-NMR (400 MHz, CDCl₃ δ, ppm)

7,521(0,7);7,304(1,0);7,297(8,3);7,292(3,1);7,281(3,7);7,276(13,9);7,270(2,5);7,267(1,7);7,266(2,0);7,262(121,7);7,255(2,2);7,244(1,1);7,239(3,6);7,234(1,2);7,223(1,7);7,218(2,2);7,201(1,9);7,194(9,6);7,189(2,8);7,178(2,3);7,173(6,4);7,166(0,7);6,998(0,7);6,895(0,5);6,890(0,7);6,882(5,1);6,873(0,7);6,870(0,9);6,863(5,7);6,861(5,2);6,854(0,9);6,850(0,6);6,842(4,5);6,833(0,6);5,300(5,7);4,530(13,8);4,196(16,0);2,494(0,8);2,483(1,5);2,477(1,6);2,474(1,4);2,466(3,4);2,460(1,2);2,455(1,6);2,449(1,6);2,439(0,9);1,593(14,2);1,333(0,6);1,285(0,8);1,256(1,1);1,003(0,5);0,986(2,1);0,983(4,0);0,980(2,9);0,977(3,0);0,975(3,1);0,972(2,6);0,971(3,0);0,968(2,3);0,966(4,0);0,962(3,1);0,959(4,4);0,954(5,1);0,951(3,3);0,948(3,2);0,942(7,0);0,939(6,0);0,936(3,0);0,932(4,0);0,930(1,8);0,922(0,7);0,008(1,7);0,000(54,8);-0,009(1,5)

### Beispiel No. D18-19: ¹H-NMR (400 MHz, CDCl₃ δ, ppm)

7,295(0,7);7,289(6,4);7,284(2,3);7,273(3,0);7,267(10,4);7,261(86,9);7,182(1,0);7,176(7,2);7,170(2,1);7,159(1,8);7,155(4,1);7,154(5,0);7,148(0,6);6,986(0,6);6,980(0,5);6,975(2,7);6,972(2,0);6,969(3,3);6,966(1,9);6,957(1,8);6,955(3,2);6,949(2,7);6,938(0,6);6,732(0,8);6,726(1,4);6,720(0,7);6,710(1,5);6,704(2,7);6,698(1,3);6,687(0,8);6,681(1,4);6,676(0,7);5,300(0,7);4,447(16,0);4,175(12,4);2,554(0,7);2,544(1,4);2,536(1,5);2,534(1,1);2,526(2,7);2,520(0,8);2,516(1,6);2,509(1,5);2,499(0,7);1,587(9,6);1,256(0,9);1,031(0,7);1,029(0,7);1,019(1,2);1,016(1,7);1,012(3,1);1,007(1,9);1,003(1,1);0,998(2,5);0,997(2,4);0,994(2,7);0,992(2,2);0,989(1,8);0,981(1,2);0,979(1,4);0,972(0,6);0,961(0,8);0,959(0,7);0,943(0,7);0,935(1,1);0,933(1,5);0,925(2,8);0,922(3,1);0,920(2,7);0,915(3,1);0,912(3,1);0,910(2,7);0,906(1,6);0,902(1,5);0,892(0,8);0,890(0,6);0,008(1,2);0,000(37,4);-0,009(1,1)

### Beispiel No. D18-59: ¹H-NMR (400 MHz, CDCl₃ δ, ppm)

7,305(1,1);7,299(7,0);7,294(2,7);7,282(3,7);7,277(11,1);7,271(2,5);7,263(37,7);7,235(1,1);7,221(1,0);7,215(3,2);7,203(9,9);7,195(4,5);7,186(7,0);7,182(13,1);7,166(1,5);7,162(0,9);6,977(1,8);6,973(1,8);6,954(2,8);6,948(1,8);6,937(1,3);6,931(1,4);5,300(10,0);4,629(12,6);4,625(12,6);4,198(16,0);2,462(0,7);2,450(1,4);2,445(1,5);2,442(1,3);2,434(2,9);2,428(1,2);2,423(1,5);2,417(1,4);2,407(0,8);1,658(3,2);1,256(0,9);0,979(3,8);0,976(3,3);0,972(4,4);0,967(3,2);0,961(4,0);0,955(7,9);0,951(7,3);0,948(4,4);0,944(6,7);0,941(6,2);0,934(3,5);0,923(0,6);0,008(0,7);0,000(15,5);-0,008(0,6)

### Beispiel No. D18-61: ¹H-NMR (400 MHz, CDCl₃ δ, ppm)

7,743(2,2);7,741(2,2);7,723(2,6);7,722(2,6);7,651(2,1);7,648(2,2);7,632(2,4);7,629(2,5);7,520(0,7);7,508(1,5);7,504(1,5);7,489(3,1);7,485(2,9);7,469(1,8);7,466(1,7);7,375(2,0);7,372(2,0);7,356(3,2);7,352(3,2);7,336(1,4);7,333(1,3);7,292(0,8);7,285(6,2);7,280(2,3);7,269(3,2);7,261(126,7);7,182(1,0);7,175(6,9);7,170(2,0);7,159(1,7);7,154(4,6);7,148(0,5);6,997(0,7);5,300(0,6);4,639(16,0);4,163(11,6);2,537(0,6);2,527(1,3);2,520(1,4);2,510(2,6);2,500(1,5);2,492(1,3);2,482(0,7);1,607(2,7);1,256(0,6);1,039(0,6);1,037(0,7);1,024(1,8);1,019(3,0);1,015(1,7);1,006(2,6);1,002(2,5);1,000(2,1);0,997(1,6);0,989(1,1);0,987(1,2);0,928(1,3);0,920(2,5);0,917(2,6);0,910(3,2);0,907(2,4);0,905(2,5);0,901(1,6);0,898(1,6);0,887(0,7);0,885(0,6);0,008(1,4);0,005(0,6);0,000(46,6);-0,009(1,4)

### Beispiel No. D18-63: ¹H-NMR (400 MHz, CDCl₃ δ, ppm)

7,593(2,3);7,590(1,5);7,587(1,1);7,577(1,9);7,571(12,8);7,562(11,3);7,556(1,5);7,546(0,9);7,543(1,2);7,541(1,8);7,298(0,6);7,292(5,8);7,287(2,1);7,276(2,6);7,270(9,0);7,262(82,3);7,182(0,9);7,176(6,4);7,171(1,9);7,160(1,6);7,155(4,5);7,149(0,5);5,300(4,2);4,502(16,0);4,161(11,0);2,535(0,6);2,525(1,3);2,518(1,3);2,516(1,0);2,508(2,5);2,501(0,8);2,498(1,4);2,490(1,3);2,481(0,6);2,045(0,8);1,585(11,5);1,284(0,6);1,259(1,0);1,256(1,0);1,029(0,6);1,027(0,6);1,014(1,6);1,009(2,8);1,005(1,6);0,996(2,4);0,992(2,4);0,990(2,1);0,987(1,5);0,979(1,0);0,977(1,2);0,921(0,9);0,919(1,3);0,911(2,4);0,909(2,4);0,907(2,4);0,901(3,0);0,898(2,3);0,896(2,4);0,892(1,6);0,889(1,6);0,879(0,8);0,877(0,6);0,008(1 ,0);0,000(36,2);-0,009(1,1)

### Beispiel No. D18-103: ¹H-NMR (400 MHz, CDCl₃ δ, ppm)

7,305(2,3);7,299(0,8);7,288(0,9);7,283(4,6);7,278(0,9);7,267(1,1);7,265(0,8);7,262(17,2);7,165(2,4);7,160(0,7);7,149(0,6);7,1444(1,4);7,1435(1,7);6,818(2,9);6,813(0,8);6,802(0,8);6,796(2,6);5,298(4,4);4,424(5,6);4,169(4,2);3,782(16,0);2,415(0,8);1,653(1,2);0,963(0,6);0,960(1,0);0,958(0,8);0,954(0,7);0,946(1,0);0,942(1,0);0,940(1,1);0,937(0,7);0,928(0,7);0,905(0,6);0,898(1,2);0,895(1,3);0,893(1,1);0,889(1,0);0,885(0,8);0,883(1,0); 0,879(0,7);0,000(6,6)

### Beispiel No. D18-159: ¹H-NMR (400 MHz, CDCl₃ δ, ppm)

7,519(1,8);7,343(3,4);7,338(1,3);7,330(3,6);7,322(3,9);7,313(1,5);7,308(3,9);7,300(0,7);7,287(1,0);7,285(0,7);7,281(6,9);7,277(1,7);7,275(2,8);7,2734(1,4);7,2726(1,4);7,272(1,5);7,271(1,7);7,270(1,8);7,2693(2,0);7,2686(2,4);7,268(2,7);7,267(3,1);7,266(3,9);7,2653(5,4);7,2645(7,5);7,264(9,2);7,260(325,2);7,255(3,3);7,254(2,4);7,253(2,3);7,2524(1,9);7,2516(1,3);7,251(1,1);7,250(1,0);7,249(0,9);7,2483(0,7);7,2476(0,7);7,210(0,6);7,129(0,9);7,123(6,4);7,118(2,0);7,107(1,7);7,101(4,9);6,996(1,8);6,948(4,1);6,942(1,2);6,931(1,3);6,926(7,5);6,921(1,3);6,910(1,2);6,904(3,7);5,017(0,8);4,999(2,5);4,981(2,6);4,964(0,8);4,186(0,6);4,146(5,2);4,137(5,3);4,098(0,6);2,307(0,6);2,297(1,2);2,289(1,3);2,279(2,1);2,269(1,3);2,262(1,3);2,252(0,7);1,797(16,0);1,779(15,8);1,555(39,4);1,333(1,1);1,284(1,7);1,256(2,6);0,974(1,0);0,971(0,9);0,961(1,3);0,957(2,2);0,955(2,1);0,950(1,4);0,948(1,4);0,943(1,6);0,940(2,3);0,937(1,7);0,930(1,7);0,923(1,3);0,917(1,1);0,902(1,7);0,897(0,8);0,891(1,3);0,886(0,8);0,878(1,2);0,870(1,3);0,868(2,4);0,864(1,3);0,861(1,5);0,858(1,8);0,854(1,3);0,845(1,5);0,840(1,7);0,835(1,5);0,831(2,2);0,828(1,2);0,818(1,0);0,805(0,6);0,799(0,5);0,069(10,9);0,008(3,9);0,000(130,8);-0,009(3,4)

### Beispiel No. E1-4: ¹H-NMR (400 MHz, CDCl₃ δ, ppm)

7,390(0,7);7,386(1,4);7,381(1,6);7,377(0,8);7,371(0,8);7,367(1,7);7,361(1,9);7,357(0,8);7,263(12,2);7,110(1,4);7,091(1,7);7,071(1,1);4,585(7,6);4,475(0,7);4,472(0,7);2,592(0,7);2,585(0,6);2,567(1,0);2,560(1,0);2,542(0,7);2,535(0,9);2,462(16,0);2,353(0,9);2,347(1,0);2,343(0,5);2,340(0,6);2,333(0,6);2,327(0,6);2,323(0,9);2,317(0,7);1,872(0,5);1,798 (0,7);1,680(0,8);0,000(4,4)

### Beispiel No. E1-6: ¹H-NMR (400 MHz, CDCl₃ δ, ppm)

7,428(1,7);7,422(1,8);7,316(1,6);7,295(2,3);7,264(10,2);7,196(1,4);7,190(1,3);7,175(1,0);7,169(0,9);4,517(6,9);4,477(0,6);4,474(0,6);2,615(0,7);2,608(0,6);2,590(0,9);2,583(0,9);2,565(0,7);2,558(0,8);2,481(16,0);2,364(0,8);2,358(0,9);2,351(0,6);2,344(0,5);2,338(0,6);2,334(0,8);2,328(0,7);1,800(0,7);1,709(0,9);0,000(4,0)

### Beispiel No. E1-61: ¹H-NMR (400 MHz, CDCl₃ δ, ppm)

7,657(0,8);7,654(0,8);7,641(0,9);7,639(2,3);7,635(1,0);7,622(1,1);7,620(1,1);7,512(0,6);7,509(0,6);7,493(1,1);7,490(0,9);7,470(0,6);7,374(0,7);7,372(0,6);7,355(1,1);7,352(1,2);7,265(10,7);4,599(6,4);4,530(0,6);4,527(0,6);2,618(0,7);2,611(0,6);2,593(0,9);2,586(0,9);2,568(0,7);2,561(0,9);2,470(16,0);2,398(0,9);2,392(1,0);2,388(0,5);2,385(0,6);2,378(0,6);2,372(0,6);2,368(0,8);2,362(0,6);1,819(0,7);1,702(1,2);0,000(4,0)

### Beispiel No. E1-81: ¹H-NMR (400 MHz, CDCl₃ δ, ppm)

7,661(0,7);7,642(0,8);7,601(0,7);7,582(0,8);7,452(0,7);7,369(0,7);7,266(7,4);4,644(2,9);4,642(2,9);4,500(0,6);4,498(0,6);2,600(0,7);2,594(0,6);2,576(0,9);2,569(0,9);2,551(0,7);2,544(0,8);2,488(16,0);2,344(0,8);2,338(0,9);2,331(0,6);2,324(0,6);2,318(0,6);2,314(0,8);2,308(0,6);1,784(1,3);1,778(0,8);0,000(2,7)

### Beispiel No. E1-94: ¹H-NMR (400 MHz, CDCl₃ δ, ppm)

8,398(1,2);8,397(1,2);8,392(1,2);7,774(0,9);7,768(0,9);7,754(1,0);7,747(1,0);7,266(10,5);7,253(1,5);7,252(1,4);7,232(1,3);7,231(1,3);4,478(0,6);4,476(0,6);4,441(5,9);2,625(0,7);2,618(0,7);2,600(0,8);2,593(0,9);2,575(0,7);2,568(0,8);2,458(16,0);2,397(0,8);2,391(1,0);2,385(0,6);2,377(0,6);2,371(0,6);2,367(0,8);2,361(0,6);1,826(0,7);1,709(1,1);0,00 0(4,1)

### Beispiel No. E1-99: ¹H-NMR (400 MHz, CDCl₃ δ, ppm)

7,991(2,1);7,971(2,2);7,267(8,5);7,180(2,4);7,160(2,3);4,517(7,4);4,477(0,7);4,474(0,7);2,624(0,7);2,617(0,6);2,599(0,9);2,592(1,0);2,575(0,7);2,568(0,9);2,449(16,0);2,412(0,9);2,406(1,0);2,402(0,6);2,399(0,7);2,392(0,6);2,388(0,5);2,386(0,7);2,382(0,9);2,376(0,7);1,905(0,5);1,903(0,5);1,832(0,7);1,716(0,8);0,000(3,2)

### Beispiel No. E1-681: ¹H-NMR (400 MHz, CDCl₃ δ, ppm)

8,060(0,9);8,048(0,9);7,261(50,0);7,084(0,3);7,079(0,7);7,060(0,7);4,783(2,1);4,778(2,1);4,632(0,4);3,416(0,5);3,400(1,6);3,384(1,6);3,368(0,5);2,773(0,4);2,768(0,4);2,756(0,6);2,752(0,6);2,740(0,4);2,735(0,5);2,520(5,5);2,512(0,5);2,508(0,6);2,498(0,4);2,492(0,5);2,488(0,4);2,474(5,5);1,959(0,3);1,877(0,4);1,567(1,1);0,005(0,6);0,000(14,2);- 0,006(0,5)

### Beispiel No. F9-3: ¹H-NMR (400 MHz, CDCl₃ δ, ppm)

7,532(0,5);7,527(3,3);7,526(2,4);7,522(1,9);7,511(2,4);7,505(12,5);7,501(3,3);7,493(2,9);7,489(12,7);7,483(2,8);7,473(1,6);7,469(2,4);7,467(3,5);7,463(0,6);7,323(3,4);7,318(1,4);7,307(2,3);7,302(10,0);7,297(2,0);7,284(2,2);7,279(11,7);7,273(2,7);7,269(0,8);7,261(58,7);7,257(5,3);7,252(0,7);5,298(3,5);4,589(1,6);4,464(16,0);3,679(7,3);3,662(7,3);3,647(0,8);3,630(0,8);0,874(0,7);0,871(0,7);0,866(0,7);0,862(0,6);0,854(1,4);0,846(0,6);0,842(0,8);0,837(0,8);0,834(1,0);0,822(0,5);0,448(1,2);0,435(3,2);0,433(3,9);0,430(2,1);0,420(1,7);0,415(3,6);0,413(3,1);0,411(1,9);0,401(1,7);0,383(0,5);0,106(1,4);0,093(4,5);0,081(3,7);0,078(4,5);0,066(1,3);0,008(0,7);0,000(21,7);-0,009(0,6)

### Beispiel No. F9-5: ¹H-NMR (400 MHz, CDCl₃ δ, ppm)

7,530(0,5);7,525(3,6);7,524(2,5);7,520(2,0);7,509(2,4);7,503(12,0);7,499(2,9);7,491(2,8);7,486(12,2);7,481(2,4);7,470(1,6);7,466(2,4);7,464(3,7);7,457(4,3);7,437(4,9);7,410(4,9);7,404(5,1);7,261(75,9);7,168(3,4);7,162(3,3);7,147(2,9);7,142(2,9);5,298(2,5);4,570(16,0);3,694(7,1);3,676(7,2);0,876(0,7);0,874(0,7);0,868(0,7);0,864(0,6);0,856(1,4);0,848(0,6);0,844(0,7);0,839(0,7);0,836(0,9);0,442(1,1);0,429(2,9);0,427(3,8);0,423(2,0);0,414(1,6);0,409(3,4);0,407(2,9);0,404(1,8);0,394(1,3);0,112(1,4);0,100(4,1);0,098(3,3);0,090(1,7);0,088(3,1);0,085(4,0);0,073(0,9);0,008(0,9);0,000(29,0);-0,009(0,8)

### Beispiel No. F9-7: ¹H-NMR (400 MHz, CDCl₃ δ, ppm)

7,570(0,6);7,565(4,9);7,564(3,4);7,559(1,9);7,548(2,6);7,543(9,6);7,538(1,6);7,520(0,5);7,505(1,6);7,500(9,9);7,495(2,5);7,483(1,9);7,478(5,1);7,473(0,6);7,341(5,4);7,322(9,0);7,261(84,1);7,211(4,0);7,192(3,1);7,189(2,9);7,171(2,3);5,299(0,8);4,735(16,0);3,718(6,4);3,701(6,4);1,643(0,5);0,917(0,7);0,914(0,6);0,909(0,6);0,897(1,3);0,889(0,5);0,885(0,7);0,879(0,6);0,877(0,8);0,449(1,0);0,436(2,7);0,433(3,4);0,430(1,9);0,421(1,4);0,41 6(3,1);0,413(2,7);0,411(1,6);0,401(1,2);0,126(1,3);0,114(3,8);0,112(3,0);0,104(1,6);0,101(2,8);0,099(3,6);0,087(0,8);0,008(0,9);0,000(31,6);-0,009(0,9)

### Beispiel No. F9-15: ¹H-NMR (400 MHz, CDCl₃ δ, ppm)

7,561 (1,2);7,556(7,4);7,555(5,4);7,550(3,0);7,539(4,4);7,534(16,0);7,529(2,8);7,504(3,1);7,499(16,0);7,493(3,9);7,483(3,0);7,478(5,3);7,477(8,3);7,472(1,1);7,459(1,6);7,455(2,6);7,439(2,7);7,432(1,3);7,416(1,2);7,267(24,6);6,849(1,4);6,843(2,0);6,832(0,7);6,827(3,4);6,821(3,4);6,818(1,9);6,806(3,3);6,801(3,2);6,796(1,7);6,788(1,6);6,786(1,4);6,782(0,7);6,780(0,9);4,521(12,7);4,520(12,8);3,742(10,4);3,724(10,4);0,917(0,5);0,905(1,1);0,902(1,0);0,897(1,0);0,893(0,9);0,885(2,0);0,877(0,9);0,873(1,1);0,868(1,0);0,865(1,3);0,855(0,5);0,853(0,7);0,465(1,8);0,452(4,6);0,450(5,6);0,447(3,1);0,437(2,5);0,432(5,1);0,430(4,5);0,428(2,7);0,417(2,0);0,129(2,1);0,116(6,3);0,114(5,1);0,107(2,7);0,104 (4,8);0,101(5,9);0,089(1,4);0,008(0,8);0,000(23,3);-0,009(0,7)

### Beispiel No. F9-17: ¹H-NMR (400 MHz, CDCl₃ δ, ppm)

7,570(1,1);7,565(7,6);7,559(3,0);7,548(4,1);7,543(15,4);7,537(2,5);7,520(0,8);7,504(2,6);7,499(16,0);7,494(4,0);7,483(3,1);7,477(8,0);7,472(0,9);7,463(0,7);7,304(1,0);7,288(2,1);7,283(1,8);7,276(0,6);7,275(0,6);7,272(1,7);7,270(1,4);7,267(5,1);7,265(3,2);7,261(122,1);7,2554(1,1);7,2545(0,9);7,254(0,9);7,2512(1,8);7,2506(1,8);7,246(2,3);7,230(1,1);6,997(0,7);6,933(0,5);6,929(0,8);6,921(5,4);6,912(0,7);6,909(0,9);6,902(6,0);6,900(5,6);6,893(1,0);6,889(0,7);6,881(4,7);6,872(0,6);4,523(14,3);3,779(10,1);3,761(10,3);0,945(0,5);0,932(1,1);0,930(1,0);0,924(1,0);0,920(0,8);0,912(2,1);0,904(0,9);0,900(1,1);0,895(1,1);0,892(1,3);0,882(0,5);0,880(0,7);0,875(0,5);0,465(1,7);0,452(4,5);0,449(5,7);0,446(3,1);0,437(2,4);0,432(5,2);0,429(4,5);0,427(2,7);0,417(2,1);0,139(2,1);0,127(6,3);0,117(2,6);0,114(4,7);0,112(6,0);0,100(1,4);0,008(1,3);0,005(0,6);0,000(46,6);-0,006(0,6);-0,007(0,5);-0,009(1,5)

### Beispiel No. F9-21: ¹H-NMR (400 MHz, CDCl₃ δ, ppm)

8,591(1,4);8,588(1,6);8,586(1,7);8,584(1,5);8,578(1,5);8,576(1,7);8,574(1,6);8,572(1,4);7,653(1,3);7,648(1,3);7,633(2,7);7,629(2,6);7,614(1,7);7,610(1,7);7,544(0,7);7,538(4,8);7,537(3,3);7,533(1,9);7,522(2,9);7,517(10,6);7,512(1,9);7,488(2,0);7,483(10,7);7,478(2,7);7,467(3,6);7,463(5,1);7,461(6,4);7,456(0,7);7,445(2,2);7,262(72,2);7,214(1,4);7,211(1,4);7,201(1,3);7,199(1,4);7,195(1,4);7,192(1,2);7,183(1,2);7,180(1,2);4,664(16,0);3, 760(7,1);3,743(7,1);1,615(3,6);0,942(0,7);0,939(0,7);0,934(0,7);0,930(0,5);0,922(1,4);0,914(0,6);0,909(0,7);0,904(0,7);0,901(0,8);0,452(1,1);0,439(2,9);0,436(3,6);0,433(2,0);0,424(1,6);0,418(3,3);0,416(2,9);0,414(1,7);0,404(1,3);0,138(1,4);0,126(4,1);0,113(3,1);0,111(3,9);0,098(0,9);0,008(0,8);0,000(26,4);-0,009(0,8)

### Beispiel No. F9-36: ¹H-NMR (400 MHz, CDCl₃ δ, ppm)

8,722(4,1);8,720(4,0);7,956(4,4);7,952(4,3);7,578(1,0);7,573(8,1);7,567(3,0);7,556(4,0);7,551(14,9);7,545(2,3);7,520(0,6);7,506(2,4);7,501(15,0);7,496(3,9);7,484(3,0);7,479(8,1);7,474(0,9);7,271(0,6);7,261(96,5);6,997(0,5);5,299(2,5);4,897(16,0);3,867(9,7);3,850(9,8);1,620(1,2);1,015(1,0);1,012(0,9);1,007(1,0);1,003(0,8);0,995(2,0);0,987(0,8);0,982(1,0);0,977(1,0);0,975(1,2);0,962(0,6);0,923(1,0);0,511(1,6);0,498(4,2);0,496(5,2);0,492(2,8);0,483(2,3);0,478(4,8);0,475(4,2);0,473(2,4);0,463(1,9);0,194(1,9);0,181(5,9);0,172(2,5);0,169(4,5);0,166(5,6);0,154(1,3);0,008(1,0);0,000(36,6);-0,009(1,1)

### Beispiel No. F9-61: ¹H-NMR (400 MHz, CDCl₃ δ, ppm)

7,677(2,2);7,675(2,3);7,674(2,1);7,663(2,3);7,659(5,3);7,656(2,9);7,644(2,4);7,641(2,6);7,554(0,9);7,549(7,0);7,543(2,8);7,532(3,3);7,527(13,7);7,522(2,4);7,510(1,7);7,507(1,8);7,494(2,0);7,489(11,0);7,484(2,9);7,473(2,0);7,469(3,6);7,467(5,6);7,462(0,7);7,401(1,9);7,398(2,0);7,382(3,0);7,379(2,9);7,362(1,2);7,359(1,4);7,271(0,5);7,270(0,6);7,269(0,8);7,265(36,1);5,300(2,6);4,629(16,0);3,777(7,3);3,760(7,3);2,088(0,9);1,665(1,4);0,902(0,7);0,900(0,7);0,894(0,7);0,890(0,6);0,882(1,4);0,874(0,6);0,870(0,8);0,865(0,7);0,862(0,9);0,453(1,2);0,440(3,1);0,438(4,0);0,435(2,2);0,425(1,7);0,420(3,5);0,418(3,1);0,405(1,3);0,133(1,5);0,120(4,3);0,108(3,2);0,106(4,1);0,093(0,9);0,000(12,2)

### Beispiel No. F9-62: ¹H-NMR (400 MHz, CDCl₃ δ, ppm)

7,724(2,3);7,720(4,4);7,717(3,1);7,702(1,7);7,699(2,3);7,695(1,3);7,683(1,9);7,680(2,5);7,676(1,6);7,580(1,6);7,577(2,5);7,574(1,6);7,561(2,2);7,558(3,4);7,554(2,2);7,548(4,9);7,542(1,9);7,531(3,2);7,526(12,1);7,521(2,6);7,501(2,1);7,496(12,6);7,490(2,8);7,479(1,9);7,474(5,2);7,469(0,6);7,442(2,8);7,422(4,5);7,403(1,9);7,262(77,5);5,299(4,8);4,549(16,0);3,729(7,8);3,712(7,9);0,917(0,8);0,914(0,8);0,909(0,8);0,905(0,7);0,897(1,6);0,889(0,7);0,885(0,9);0,880(0,9);0,877(1,0);0,865(0,5);0,486(1,3);0,473(3,6);0,471(4,5);0,468(2,5);0,458(1,9);0,453(4,1);0,451(3,6);0,438(1,6);0,137(1,6);0,124(5,0);0,112(3,8);0,110(4,8);0,097(1,1);0,008(0,8);0,000(28,7);-0,009(0,9)

### Beispiel No. F9-63: ¹H-NMR (400 MHz, CDCl₃ δ, ppm)

7,508(0,8);7,504(3,9);7,503(2,8);7,499(1,6);7,488(2,3);7,483(8,0);7,479(1,7);7,443(7,1);7,438(2,0);7,427(1,9);7,422(6,6);7,417(1,8);7,406(2,3);7,400(10,2);7,396(2,4);7,391(0,6);7,387(2,5);7,382(10,2);7,377(2,0);7,366(1,4);7,362(2,2);7,361(3,2);7,159(16,0);4,437(12,4);3,602(6,1);3,584(6,1);2,847(0,6);2,774(0,5);2,773(0,5);1,645(3,2);0,791(0,6);0,789(0,6);0,783(0,6);0,771(1,2);0,759(0,6);0,754(0,6);0,751(0,7);0,359(1,0);0,346(2,6);0,344(3,3);0,341(1,7);0,331(1,4);0,326(2,9);0,324(2,5);0,321(1,5);0,311(1,1);0,012(1,2);0,000(3,6);-0,002(2,9);-0,010(1,5);-0,013(2,7);-0,015(3,4);-0,027(0,8);-0,110(2,7)

### Beispiel No. F9-159: ¹H-NMR (400 MHz, CDCl₃ δ, ppm)

7,471(16,0);7,312(0,9);7,298(0,9);7,290(1,0);7,277(1,0);7,262(14,4);6,998(1,2);6,976(1,9);6,954(0,9);5,298(0,7);4,940(0,7);4,923(0,7);3,577(0,8);3,560(1,5);3,543(0,8);1,827(4,2);1,809(4,1);1,613(0,7);0,393(0,9);0,390(0,9);0,388(0,8);0,373(0,8);0,369(0,9);0,030(0,6);0,018(0,5);0,000(5,8)

### Beispiel No. F9-603: ¹H-NMR (400 MHz, CDCl₃ δ, ppm)

7,999(0,8);7,996(0,8);7,980(0,8);7,976(0,8);7,576(0,7);7,573(0,7);7,557(0,9);7,554(0,9);7,522(1,7);7,521(1,2);7,517(0,7);7,506(1,0);7,500(3,9);7,495(0,7);7,476(0,7);7,471(3,9);7,465(0,9);7,454(0,7);7,450(1,2);7,449(2,1);7,445(0,7);7,430(1,0);7,426(1,0);7,411(0,6);7,407(0,6);7,364(0,7);7,360(0,7);7,345(0,9);7,341(0,9);7,262(16,7);5,298(3,5);4,875(5,2);3,937(16,0);3,637(2,4);3,620(2,4);1,621(1,3);0,370(1,0);0,367(1,3);0,365(0,7);0,355(0,5);0,350(1,2);0,347(1,0);0,345(0,6);0,043(1,4);0,041(1,1);0,033(0,6);0,031(1,1);0,028(1,4);0,000(6,7)

### Beispiel No. F9-791: ¹H-NMR (400 MHz, CDCl₃ δ, ppm)

7,581(1,9);7,566(2,5);7,559(2,1);7,547(0,5);7,532(1,1);7,528(5,2);7,526(3,8);7,522(2,5);7,520(1,8);7,512(3,6);7,506(15,6);7,502(3,9);7,492(4,1);7,487(16,0);7,482(4,7);7,475(2,2);7,471(2,9);7,467(4,2);7,465(6,5);7,461(3,0);7,426(1,0);7,413(2,8);7,405(3,6);7,397(7,3);7,387(2,5);7,382(2,0);7,368(0,6);7,363(0,5);7,283(0,8);7,282(0,8);7,281(0,8);7,280(0,8);7,279(0,8);7,277(1,1);7,2754(1,2);7,2746(1,2);7,273(1,4);7,272(1,4);7,2714(1,7);7,2706(1,9);7,270(2,1);7,269(2,3);7,2674(3,0);7,2666(3,6);7,266(4,2);7,262(164,4);7,134(2,8);6,996(5,8);6,859(2,9);5,300(4,1);4,633(14,5);3,662(9,5);3,645(9,6);2,096(0,6);1 ,584(48,2);0,880(0,5);0,868(1,0);0,865(0,9);0,859(1,0);0,856(0,8);0,848(1,8);0,840(0,8);0,835(1,0);0,830(0,9);0,828(1,2);0,815(0,6);0,810(0,5);0,435(1,6);0,422(4,0);0,420(5,1);0,417(2,8);0,407(2,2);0,402(4,6);0,400(4,0);0,387(1,8);0,097(1,9);0,085(5,6);0,073(4,2);0,070(5,3);0,058(1,2);0,008(1,2);0,000(36,4);-0,009(1,1)

### Beispiel No. F9-793: ¹H-NMR (400 MHz, CDCl₃ δ, ppm)

7,520(0,8);7,512(1,5);7,510(1,2);7,505(1,1);7,496(1,4);7,489(10,4);7,481(10,8);7,475(1,6);7,466(1,1);7,461(1,8);7,454(16,0);7,431(0,5);7,261(107,9);7,254(0,5);6,998(0,6);6,763(1,6);6,623(3,5);6,482(1,9);5,300(1,5);4,513(8,4);3,651(5,2);3,634(5,2);1,573(65,6);0,846(0,6);0,843(0,5);0,838(0,5);0,826(1,0);0,813(0,5);0,809(0,5);0,806(0,6);0,432(0,9);0,419(2,2);0,416(2,6);0,413(1,5);0,404(1,2);0,399(2,4);0,396(2,2);0,384(0,9);0,088(1,0);0,075(3,0);0,061(2,9);0,048(0,7);0,008(1,1);0,000(30,6);-0,009(0,9)

### Beispiel No. H12-1: ¹H-NMR (400 MHz, d₆-DMSO δ, ppm)

8,402(4,0);8,400(4,3);8,396(4,3);8,394(4,1);7,756(3,4);7,750(3,2);7,735(4,3);7,729(4,2);7,631(0,9);7,623(8,4);7,618(2,8);7,607(3,0);7,601(10,8);7,594(1,5);7,590(5,5);7,588(5,3);7,569(4,2);7,567(4,2);7,545(2,4);7,540(1,9);7,528(3,0);7,522(2,9);7,469(2,4);7,464(2,8);7,452(2,0);7,450(2,4);7,446(3,6);7,440(1,4);7,433(10,7);7,428(3,0);7,416(2,7);7,411(8,5);7,404(0,8);7,356(1,0);7,351(1,3);7,337(3,2);7,332(3,1);7,323(3,3);7,320(3,9);7,317(3,9);7,313(2,6);7,305(3,1);7,301(2,6);7,286(1,0);7,282(0,7);4,501(16,0);3,903(8,3);3,434(0,6);3,414(0,4);3,400(0,6);3,393(0,7);3,335(594,6);3,306(1,3);3,283(0,4);3,174(0,7);3,164(0,6);2,681(0,4);2,676(0,9);2,672(1,2);2,667(0,8);2,663(0,4);2,542(1,5);2,525(3,9);2,520(6,2);2,512(68,0);2,507(134,4);2,503(177,0);2,498(128,7);2,493(61,4);2,338(0,4);2,334(0,8);2,329(1,1);2,325(0,8);2,320(0,3);0,008(0,6);0,000(16,3);-0,009(0,5)

### Beispiel No. H12-2: ¹H-NMR (400 MHz, d₆-DMSO δ, ppm)

8,395(4,1);8,394(4,2);8,389(4,3);8,388(4,0);7,751(3,3);7,745(3,1);7,731(4,2);7,724(4,1);7,637(0,9);7,630(8,3);7,624(2,7);7,613(3,0);7,608(10,3);7,600(1,1);7,587(5,3);7,585(5,0);7,566(4,2);7,564(4,0);7,459(4,0);7,457(4,5);7,442(1,2);7,435(10,3);7,429(2,9);7,418(2,7);7,413(8,2);7,405(0,9);7,353(1,5);7,349(1,3);7,337(16,0);7,333(5,9);7,326(1,1);7,321(1,2);4,428(15,0);3,903(7,3);3,434(0,3);3,332(437,7);3,169(1,0);2,681(0,4);2,676(0,8);2,671(1,1);2,667(0,8);2,662(0,4);2,542(1,0);2,525(3,5);2,511(64,9);2,507(128,1);2,502( 168,5);2,498(122,9);2,493(59,2);2,338(0,4);2,334(0,8);2,329(1,1);2,325(0,8);2,320(0,4);0,008(1,1);0,000(30,7);-0,009(1,0)

### Beispiel No. H12-3: ¹H-NMR (400 MHz, d₆-DMSO δ, ppm)

8,397(4,6);8,395(4,8);8,391(4,8);8,389(4,5);7,753(3,8);7,746(3,6);7,732(4,8);7,725(4,7);7,640(1,0);7,632(9,2);7,627(3,0);7,616(3,4);7,610(12,0);7,603(1,4);7,586(6,0);7,584(5,8);7,565(4,8);7,563(4,6);7,462(1,4);7,455(11,9);7,449(3,3);7,438(3,2);7,433(9,9);7,427(5,2);7,422(2,1);7,411(3,0);7,405(12,6);7,400(2,3);7,385(2,6);7,379(14,0);7,374(3,1);7,363(2,1);7,358(5,0);7,353(0,6);4,429(16,0);3,903(5,6);3,417(0,4);3,401(0,5);3,336(546,8);3,175(0,6);3,162(0,6);2,681(0,4);2,676(0,8);2,672(1,1);2,667(0,8);2,663(0,4);2,542(0,7);2,525(3,6);2,520(5,9);2,512(64,5);2,507(126,7);2,503(166,2);2,498(120,7);2,494(57,6);2,339(0,3);2,334(0,8);2,330(1,0);2,325(0,7);0,008(0,5);0,000(14,4);-0,009(0,4)

### Beispiel No. H12-5: ¹H-NMR (400 MHz, d₆-DMSO δ, ppm)

8,401(4,8);8,399(5,0);8,394(5,0);8,393(4,7);8,312(0,4);7,755(4,0);7,749(3,8);7,735(5,1);7,728(5,1);7,637(1,3);7,629(13,0);7,623(8,0);7,613(3,6);7,607(12,4);7,600(1,6);7,591(6,3);7,589(6,3);7,583(5,6);7,570(5,1);7,568(5,1);7,562(7,0);7,468(1,5);7,461(12,1);7,456(3,3);7,444(3,2);7,439(9,3);7,432(0,9);7,419(4,5);7,413(4,2);7,398(3,5);7,393(3,4);4,469(16,0);3,903(10,2);3,535(0,3);3,508(0,4);3,352(974,9);3,267(0,4);3,176(1,4);3,163(1,3);2,682(0,5);2,678(1,0);2,673(1,3);2,668(0,9);2,664(0,4);2,543(0,8);2,526(4,8);2,521(7,8);2,513(81,4);2,508(159,3);2,504(208,3);2,499(150,5);2,495(71,4);2,340(0,5);2,335(1,0);2,331(1,3);2,326(0,9);2,322(0,4);0,000(3,2)

### Beispiel No. H12-7: ¹H-NMR (400 MHz, d₆-DMSO δ, ppm)

8,420(4,1);8,419(4,1);8,414(4,3);8,413(3,9);7,783(3,3);7,777(3,1);7,762(4,1);7,756(4,0);7,626(0,9);7,619(7,8);7,614(2,8);7,607(5,7);7,605(5,6);7,602(3,5);7,597(10,6);7,589(1,5);7,586(4,3);7,584(4,1);7,490(6,5);7,488(6,6);7,483(1,8);7,476(11,0);7,469(12,6);7,459(2,8);7,454(7,7);7,447(0,8);7,382(4,6);7,364(3,7);7,360(3,3);7,342(2,4);4,534(16,0);4,515(0,4);4,115(0,3);4,102(0,3);3,903(7,4);3,503(0,3);3,435(0,8);3,416(1,1);3,349(679,5);3,275(0,4);3,176(1,7);3,163(1,6);2,682(0,4);2,678(0,8);2,673(1,1);2,668(0,8);2,664(0,4);2,543(0,7);2,526(3,6);2,513(65,2);2,508(127,1);2,504(165,9);2,499(120,4);2,495(57,5);2,340(0,4);2,335(0,8);2,331(1,0);2,326(0,7);2,322(0,3);0,008(0,3);0,000(9,7)

### Beispiel No. H12-59: ¹H-NMR (400 MHz, d₆-DMSO δ, ppm)

8,411(4,0);8,410(4,5);8,406(4,2);8,404(4,3);7,773(3,2);7,767(3,1);7,752(4,1);7,746(4,1);7,632(0,9);7,624(8,0);7,619(2,7);7,608(3,2);7,602(16,0);7,595(1,5);7,582(4,2);7,580(4,3);7,471(1,2);7,464(10,7);7,458(3,0);7,447(2,7);7,442(8,3);7,432(1,3);7,417(1,2);7,411(2,9);7,396(2,9);7,391(2,3);7,376(2,3);7,351(4,2);7,332(2,0);7,263(1,8);7,261(1,7);7,240(3,1);7,237(2,0);7,219(1,4);7,216(1,4);4,443(9,6);4,440(9,8);3,903(6,0);3,431(0,4);3,420(0,4);3,409(0,5);3,338(650,6);3,279(0,3);3,275(0,3);3,176(0,7);3,162(0,7);2,676(0,9);2,672(1,2);2,667(0,9);2,663(0,4);2,525(3,7);2,512(69,3);2,507(137,3);2,503(181,0);2,498(132,6);2,494(64,3);2,339(0,4);2,334(0,8);2,330(1,1);2,325(0,8);2,321(0,4);0,008(0,5);0,000(15,2);-0,009(0,4)

### Beispiel No. H12-82: ¹H-NMR (400 MHz, d₆-DMSO δ, ppm)

8,392(0,4);8,384(4,9);8,383(5,2);8,378(5,1);8,377(4,9);8,315(0,3);7,747(5,0);7,743(7,1);7,736(4,0);7,728(0,5);7,722(5,2);7,715(5,0);7,703(2,4);7,684(3,1);7,673(0,6);7,641(2,0);7,624(3,8);7,617(12,0);7,612(3,7);7,605(1,5);7,601(3,7);7,595(12,7);7,585(6,9);7,584(6,8);7,571(3,1);7,564(5,4);7,563(5,3);7,552(3,8);7,532(1,4);7,460(0,6);7,455(0,4);7,438(0,5);7,415(1,4);7,408(12,5);7,402(3,5);7,391(3,3);7,386(10,1);7,378(0,9);4,512(16,0);3,903(9,0);3,508(0,3);3,459(0,3);3,435(0,6);3,423(0,5);3,411(0,6);3,337(790,4);3,268(0,4);3,171(0,4);2,681(0,6);2,676(1,2);2,672(1,6);2,667(1,1);2,663(0,5);2,542(1,5);2,525(5,1);2,512(92,1);2,507(181,6);2,503(238,2);2,498(173,0);2,494(82,9);2,339(0,5);2,334(1,1);2,330(1,5);2,325(1,0);2,321(0,4);1,235(0,4);0,008(0,8);0,000(22,5);-0,009(0,7)

### Beispiel No. H12-83: ¹H-NMR (400 MHz, d₆-DMSO δ, ppm)

8,394(5,6);8,393(5,9);8,388(5,9);8,386(5,7);8,314(0,4);7,749(4,4);7,743(4,3);7,728(5,7);7,722(5,6);7,693(5,3);7,672(10,5);7,632(10,4);7,626(13,9);7,621(4,4);7,610(8,3);7,605(15,3);7,597(1,8);7,585(7,2);7,584(7,2);7,564(5,7);7,563(5,7);7,467(1,7);7,460(14,5);7,455(4,0);7,443(3,6);7,438(11,2);7,431(1,1);4,520(16,0);3,903(8,3);3,435(0,5);3,427(0,5);3,412(0,6);3,336(757,1);3,175(0,7);3,162(0,7);2,681(0,6);2,676(1,2);2,672(1,5);2,667(1,1);2,663(0,6);2,542(1,1);2,525(5,4);2,512(92,4);2,507(181,3);2,503(237,5);2,498(173,6);2,494(83,9);2,339(0,5);2,334(1,1);2,330(1,5);2,325(1,0);2,321(0,5);1,235(0,4);0,008(0,8);0,000(21,3);-0,009(0,7)

### Beispiel No. H12-136: ¹H-NMR (400 MHz, d₆-DMSO δ, ppm)

8,397(4,1);8,395(4,4);8,391(4,3);8,389(4,1);7,755(3,5);7,749(3,3);7,734(4,4);7,728(4,3);7,631(0,9);7,623(8,2);7,618(2,7);7,607(3,0);7,601(10,4);7,594(1,3);7,586(5,2);7,584(5,2);7,565(4,2);7,563(4,1);7,428(1,2);7,421(10,3);7,415(2,9);7,404(2,8);7,399(8,3);7,391(0,8);7,378(2,6);7,373(3,3);7,368(1,4);7,357(5,7);7,354(5,7);7,348(0,9);7,333(2,4);7,329(2,7);7,323(1,2);7,312(7,0);7,308(2,5);7,293(3,7);7,287(2,3);7,283(3,1);7,279(1,8);7,273(1,0);7,266(2,6);7,257(0,5);7,248(0,7);7,245(0,3);4,436(16,0);3,902(7,5);3,434(0,3);3,421(0,3);3,340(558,5);3,269(0,4);2,681(0,4);2,677(0,7);2,672(1,0);2,667(0,7);2,663(0,3);2,542(0,8);2,525(3,5);2,512(61,9);2,507(120,9);2,503(158,0);2,498(114,5);2,494(54,8);2,338(0,4);2,334(0,7);2,330(1,0);2,325(0,7);2,320(0,3);0,008(0,5);0,000(14,1);0,009(0,4)

### Beispiel No. H12-143: ¹H-NMR (400 MHz, d₆-DMSO δ, ppm)

8,394(0,6);8,392(0,6);8,387(0,6);8,386(0,6);7,755(0,5);7,749(0,5);7,735(0,7);7,728(0,6);7,613(1,2);7,608(0,4);7,597(0,5);7,591(1,7);7,588(1,0);7,587(0,9);7,567(0,7);7,566(0,7);7,405(1,5);7,399(0,5);7,388(0,4);7,383(1,3);7,339(0,7);7,323(0,4);7,318(1,7);7,313(0,3);7,284(1,5);7,279(0,4);7,263(0,7);4,400(2,0);3,902(3,1);3,338(134,5);2,525(0,8);2,520(1,3);2,512(14,8);2,507(29,3);2,503(38,5);2,498(28,0);2,493(13,4);1,252(16,0);1,228( 0,6);0,000(2,8)

### Beispiel No. I1-726: ¹H-NMR (400 MHz, d₆-DMSO δ, ppm)

10,065(1,6);8,315(1,8);8,294(1,8);7,373(1,9);7,353(2,1);7,262(18,8);7,245(2,4);7,224(1,3);7,183(3,8);7,161(4,8);7,040(5,4);7,034(3,6);7,018(4,0);5,299(3,9);4,034(9,9);3,877(16,0);2,301(15,6);1,682(1,1);0,000(6,6)

### Beispiel No. 11-728: ¹H-NMR (400 MHz, CDCl₃ δ, ppm)

10,697(1,8);7,790(3,0);7,519(2,6);7,468(1,8);7,449(2,1);7,260(446,2);7,218(3,4);7,190(5,0);7,168(5,5);7,147(2,0);7,061(5,6);7,039(4,0);6,996(2,7);4,197(0,9);3,966(6,7);3,888(16,0);2,330(15,3);1,594(14,7);0,145(1,0);0,000(165,4);-0,112(0,9);-0,150(1,1)

### Beispiel No. 11-737: ¹H-NMR (400 MHz, CDCl₃ δ, ppm)

10,546(1,9);8,253(0,7);8,234(1,3);8,215(1,3);7,520(0,7);7,264(107,3);7,260(120,2);7,185(4,1);7,165(4,8);7,049(5,2);7,030(3,7);6,996(0,7);6,873(1,4);6,865(1,5);6,847(3,0);6,826(1,8);3,955(9,6);3,883(16,0);2,319(15,3);1,598(7,9);0,003(38,9);0,000(43,9)

### Beispiel No. 11-742: ¹H-NMR (400 MHz, CDCl₃ δ, ppm)

9,980(1,9);7,261(64,6);7,197(4,3);7,175(6,0);7,151(1,2);7,058(5,1);7,036(3,8);6,996(0,6);6,943(2,4);6,923(3,9);6,902(2,0);3,979(9,6);3,934(0,6);3,888(16,0);2,313(15,4);2,007(1,0);1,635(3,3);0,000(23,9)

### Beispiel No. 11-748: ¹H-NMR (400 MHz, CDCl₃ δ, ppm)

10,840(2,0);8,020(3,0);7,741(1,7);7,719(1,7);7,519(0,9);7,432(1,1);7,412(2,2);7,392(1,5);7,347(2,4);7,327(1,7);7,260(145,2);7,210(1,1);7,187(4,1);7,165(5,1);7,056(5,2);7,033(3,7);6,996(0,9);3,926(9,5);3,886(16,0);2,326(15,7);1,629(8,1);0,000(49,7)

### Beispiel No. I1-761: ¹H-NMR (400 MHz, d₆-DMSO δ, ppm)

11,203(2,3);7,778(4,0);7,757(4,9);7,602(4,7);7,581(3,8);7,519(1,7);7,260(264,6);7,211(1,6);7,185(4,2);7,163(5,2);7,061(5,1);7,038(3,7);6,996(1,6);4,111(0,7);3,941(8,5);3,888(16,0);2,331(15,4);2,045(2,3);1,605(12,5);1,259(2,1);0,881(0,6);0,145(0,6);0,000(99,2);-0,149(0,6)

### Beispiel No. I11-1: ¹H-NMR (400 MHz, d₆-DMSO δ, ppm)

7,768(2,4);7,747(3,0);7,599(2,8);7,579(2,3);7,564(1,2);7,559(0,9);7,547(1,4);7,541(1,4);7,477(1,2);7,471(1,3);7,460(0,9);7,457(1,1);7,453(1,6);7,358(0,4);7,352(0,6);7,339(1,5);7,334(1,5);7,326(1,5);7,321(2,3);7,315(1,2);7,308(1,5);7,304(1,5);7,297(3,9);7,291(1,4);7,286(0,5);7,280(1,3);7,274(4,9);7,266(0,5);7,067(0,5);7,059(4,5);7,054(1,3);7,042(1,2);7,037(3,8);7,028(0,3);4,508(7,6);3,903(2,1);3,822(0,3);3,803(16,0);3,353(0,4);3,327(168,6);2,676(0,4);2,671(0,6);2,666(0,4);2,541(0,3);2,524(1,8);2,511(33,1);2,507(65,8);2,502(87,0);2,497(63,7);2,493(30,7);2,333(0,4);2,329(0,5);2,324(0,4);0,008(0,7);0,000(19,8);-0,009(0,6)

### Beispiel No. 111-2: ¹H-NMR (400 MHz, d₆-DMSO δ, ppm)

7,765(2,3);7,744(2,8);7,595(2,7);7,575(2,2);7,459(1,7);7,456(2,1);7,356(0,8);7,353(0,7);7,345(2,5);7,342(6,4);7,340(6,2);7,335(2,1);7,329(0,6);7,325(0,8);7,322(0,5);7,288(3,7);7,282(1,2);7,271(1,2);7,265(4,8);7,257(0,4);7,072(0,4);7,064(4,4);7,058(1,2);7,047(1,1);7,041(3,7);4,421(6,8);3,903(5,1);3,807(16,0);3,336(241,0);3,169(0,5);2,676(0,4);2,672(0,5);2,667(0,4);2,525(1,3);2,520(2,1);2,512(28,4);2,507(57,1);2,503(76,1);2,498(55,8);2,493(27,0);2,334(0,4);2,329(0,5);2,325(0,3);0,000(7,5)

### Beispiel No. 111-3: ¹H-NMR (400 MHz, d₆-DMSO δ, ppm)

7,764(2,5);7,744(3,1);7,596(2,6);7,575(2,5);7,552(0,4);7,461(0,6);7,439(0,9);7,434(2,1);7,429(0,8);7,418(1,2);7,412(5,1);7,407(0,8);7,388(0,9);7,383(5,7);7,377(1,2);7,367(0,9);7,361(2,2);7,320(0,3);7,312(3,8);7,306(1,1);7,295(1,2);7,289(4,6);7,281(0,4);7,117(0,7);7,094(0,6);7,076(0,4);7,068(4,4);7,062(1,2);7,051(1,1);7,045(3,6);7,037(0,3);4,967(0,4);4,423(6,5);3,903(4,7);3,822(2,5);3,807(16,0);3,333(207,3);3,169(0,4);2,676(0,4);2,671(0,5);2,667(0,4);2,525(1,5);2,520(2,4);2,512(31,4);2,507(63,0);2,502(83,1);2,498(60,4);2,493(28,8);2,334(0,4);2,329(0,5);2,325(0,4);0,008(0,8);0,000(24,9);-0,009(0,7)

### Beispiel No. 111-5: ¹H-NMR (400 MHz, d₆-DMSO δ, ppm)

7,770(2,3);7,749(2,9);7,637(2,7);7,632(2,7);7,603(3,1);7,598(2,8);7,582(3,6);7,578(2,4);7,425(1,8);7,419(1,7);7,404(1,5);7,398(1,4);7,329(0,4);7,320(3,8);7,315(1,2);7,304(1,3);7,298(4,6);7,290(0,4);7,073(0,5);7,065(4,4);7,059(1,2);7,048(1,1);7,042(3,7);4,475(6,5);3,903(3,3);3,830(0,3);3,808(16,0);3,393(0,4);3,374(0,8);3,334(364,5);3,299(0,6);3,175(0,4);3,162(0,4);2,676(0,6);2,672(0,8);2,667(0,6);2,525(2,8);2,520(4,5);2,512(48,0);2,507(94,2);2,502(123,5);2,498(89,5);2,493(42,5);2,334(0,6);2,329(0,8);2,325(0,5);0,008(0,5);0,000(14,2);-0,009(0,4)

### Beispiel No. 111-7: ¹H-NMR (400 MHz, d₆-DMSO δ, ppm)

7,784(2,3);7,763(3,1);7,619(2,7);7,599(2,2);7,498(3,0);7,496(3,2);7,477(5,6);7,439(0,3);7,385(2,2);7,367(1,8);7,363(1,6);7,345(1,4);7,334(3,9);7,328(1,2);7,317(1,3);7,311(4,7);7,303(0,4);7,117(0,3);7,063(0,4);7,054(4,4);7,049(1,3);7,037(1,1);7,032(3,8);7,024(0,3);4,554(7,5);3,903(7,2);3,822(1,2);3,798(16,0);3,377(0,4);3,335(258,3);3,288(0,4);3,169(1,1);2,676(0,5);2,671(0,7);2,667(0,5);2,542(0,7);2,525(2,0);2,520(3,4);2,511(42,6);2 ,507(85,2);2,502(112,7);2,498(82,2);2,493(39,6);2,334(0,5);2,329(0,7);2,325(0,5);0,008(0,5);0,000(14,1);-0,009(0,4)

### Beispiel No. 111-82: ¹H-NMR (400 MHz, d₆-DMSO δ, ppm)

7,763(2,4);7,742(4,3);7,709(0,9);7,689(1,1);7,641(0,8);7,622(1,2);7,585(2,6);7,573(1,5);7,564(2,2);7,554(1,6);7,534(0,5);7,256(3,6);7,250(1,1);7,239(1,2);7,233(4,6);7,225(0,4);7,059(0,5);7,051(4,4);7,045(1,2);7,034(1,1);7,028(3,6);4,505(5,9);3,903(5,6);3,822(0,8);3,802(16,0);3,330(109,1);3,169(0,4);2,676(0,4);2,671(0,6);2,667(0,4);2,525(1,5);2,520(2,5);2,511(33,2);2,507(66,5);2,502(87,6);2,498(63,5);2,493(30,3);2,334(0,4);2,329(0,5);2,324(0,4);0,008(0,5);0,000(17,1);-0,009(0,5)

### Beispiel No. 111-83: ¹H-NMR (400 MHz, d₆-DMSO δ, ppm)

7,764(2,4);7,743(3,0);7,698(1,7);7,677(3,5);7,640(3,2);7,620(1,6);7,593(2,7);7,573(2,4);7,326(0,3);7,318(3,8);7,312(1,2);7,301(1,3);7,295(4,7);7,287(0,5);7,072(0,4);7,064(4,4);7,058(1,3);7,047(1,1);7,041(3,7);7,033(0,3);4,515(5,2);3,903(2,5);3,822(1,1);3,807(16,0);3,355(0,4);3,326(189,9);2,676(0,5);2,671(0,7);2,666(0,5);2,524(2,2);2,520(3,6);2,511(42,0);2,507(83,5);2,502(110,3);2,497(80,5);2,493(38,7);2,333(0,5);2,329(0,7);2,324(0,5);0,008(1,1);0,000(32,3);-0,009(1,1)

### Beispiel No. I11-137: ¹H-NMR (400 MHz, d₆-DMSO δ, ppm)

7,781(2,3);7,760(2,9);7,612(2,7);7,592(2,3);7,434(0,5);7,419(0,5);7,413(1,3);7,398(1,3);7,393(1,1);7,378(1,1);7,358(2,0);7,340(0,8);7,332(0,4);7,323(3,7);7,318(1,1);7,306(1,2);7,301(4,4);7,292(0,4);7,268(0,8);7,266(0,8);7,245(1,4);7,241(0,8);7,225(0,6);7,221(0,6);7,069(0,4);7,060(4,4);7,055(1,2);7,043(1,1);7,038(3,7);7,029(0,3);4,450(4,4);4,447(4,5);3,903(1,5);3,802(16,0);3,328(69,8);2,525(0,9);2,520(1,6);2,512(19,5);2,507(38,6);2,503(50,9);2,498(37,2);2,494(18,0);2,329(0,3);0,008(0,5);0,000(14,8);-0,009(0,5)

### Beispiel No. I11-143: ¹H-NMR (400 MHz, d₆-DMSO δ, ppm)

7,766(0,8);7,745(1,0);7,597(0,9);7,576(0,8);7,342(0,7);7,326(0,4);7,321(1,8);7,295(1,7);7,289(0,5);7,274(1,8);7,269(0,5);7,258(0,4);7,252(1,6);7,051(1,5);7,045(0,4);7,034(0,5);7,028(1,2);4,395(2,1);3,903(1,2);3,801(5,3);3,796(0,8);3,330(67,1);2,524(0,9);2,511(14,9);2,507(29,5);2,502(38,9);2,497(28,4);2,493(13,7);1,253(16,0);1,227(1,7);0,000(8,0)

### Beispiel No. 112-1: ¹H-NMR (400 MHz, d₆-DMSO δ, ppm)

8,377(1,9);8,376(2,1);8,371(2,0);8,370(2,0);7,784(1,6);7,778(1,6);7,763(2,0);7,757(2,0);7,581(2,4);7,580(2,5);7,569(1,2);7,560(2,4);7,559(2,3);7,552(1,3);7,546(1,3);7,476(1,1);7,471(1,2);7,460(0,8);7,457(1,0);7,453(1,6);7,357(0,4);7,352(0,6);7,339(1,5);7,333(1,5);7,327(1,8);7,320(5,1);7,314(2,3);7,309(1,6);7,304(1,7);7,303(1,7);7,297(4,8);7,290(0,7);7,286(0,5);7,074(0,4);7,066(4,4);7,060(1,3);7,049(1,1);7,043(3,8);7,035(0,3);4,511(7,3);3,903(6,7);3,806(16,0);3,370(0,7);3,338(303,7);3,294(0,6);3,169(0,3);2,676(0,4);2,672(0,5);2,667(0,4);2,542(0,4);2,525(1,6);2,520(2,6);2,512(32,5);2,507(65,0);2,503(85,9);2,498(62,6);2,493(30,1);2,334(0,4);2,329(0,6);2,325(0,4);0,000(6,0)

### Beispiel No. 112-2: ¹H-NMR (400 MHz, d₆-DMSO δ, ppm)

7,587(3,3);7,567(3,7);7,175(3,6);7,154(3,3);6,776(6,2);5,955(3,1);3,902(3,0);3,889(14,6);3,857(16,0);3,327(99,5);3,175(0,3);2,671(0,4);2,524(1,2);2,511(22,1);2,507(43,6);2,502(57,1);2,497(41,5);2,493(19,9);2,329(0,4);0,008(0,5);0,000(14,9);-0,009(0,5)

### Beispiel No. 112-3: ¹H-NMR (400 MHz, d₆-DMSO δ, ppm)

8,372(1,9);8,371(2,1);8,366(2,0);8,365(2,0);7,779(1,6);7,773(1,5);7,758(1,9);7,752(1,9);7,577(2,4);7,576(2,4);7,556(2,0);7,555(2,0);7,434(2,1);7,429(0,8);7,418(1,3);7,413(5,1);7,408(0,8);7,387(1,0);7,382(5,7);7,377(1,3);7,366(1,0);7,361(2,3);7,338(0,4);7,329(3,8);7,324(1,2);7,313(1,3);7,307(4,7);7,299(0,4);7,081(0,5);7,072(4,4);7,067(1,2);7,055(1,2);7,050(3,7);4,422(6,6);3,903(4,1);3,810(16,0);3,392(0,3);3,335(236,0);3,305(0,4);3,169(0,4);2,676(0,4);2,672(0,5);2,667(0,4);2,525(1,8);2,512(30,2);2,507(58,9);2,502(76,7);2,498(55,4);2,493(26,2);2,334(0,3);2,329(0,5);2,325(0,3);0,008(0,5);0,000(13,0);-0,009(0,4)

### Beispiel No. 112-5: ¹H-NMR (400 MHz, d₆-DMSO δ, ppm)

8,377(1,9);8,375(2,0);8,371(2,0);8,369(1,9);7,780(1,6);7,774(1,5);7,759(2,0);7,753(1,9);7,637(2,6);7,632(2,7);7,605(2,3);7,583(3,7);7,561(2,0);7,560(1,9);7,425(1,8);7,419(1,7);7,404(1,5);7,399(1,4);7,348(0,4);7,339(3,9);7,334(1,2);7,323(1,3);7,317(4,6);7,309(0,4);7,079(0,4);7,070(4,4);7,065(1,2);7,053(1,2);7,048(3,7);4,478(6,5);3,903(3,4);3,810(16,0);3,332(378,5);3,175(0,7);3,162(0,7);2,676(0,6);2,671(0,8);2,667(0,6);2,525(2,6);2,520(4,2);2,511(47,0);2,507(92,7);2,502(122,0);2,498(88,4);2,493(42,0);2,334(0,6);2,329(0,8);2,325(0,6);0,008(0,5);0,000(14,4);-0,009(0,4)

### Beispiel No. 112-59: ¹H-NMR (400 MHz, d₆-DMSO δ, ppm)

8,386(2,0);8,385(2,0);8,380(2,1);8,379(1,9);7,800(1,6);7,794(1,6);7,779(2,0);7,773(1,9);7,593(2,5);7,592(2,4);7,573(2,1);7,571(2,0);7,435(0,5);7,420(0,5);7,415(1,3);7,400(1,3);7,394(1,1);7,380(1,1);7,360(2,0);7,353(0,5);7,345(4,2);7,339(1,9);7,328(1,3);7,322(4,6);7,314(0,4);7,271(0,8);7,268(0,8);7,247(1,4);7,243(0,9);7,227(0,6);7,223(0,6);7,075(0,4);7,067(4,4);7,061(1,2);7,050(1,1);7,045(3,8);7,036(0,3);4,464(4,4);4,460(4,4);3,903(3,5);3,805(16,0);3,375(0,5);3,335(309,1);3,310(1,1);2,676(0,5);2,672(0,6);2,667(0,4);2,542(0,4);2,525(1,9);2,520(3,1);2,512(36,5);2,507(72,3);2,503(95,3);2,498(69,5);2,493(33,4);2,334(0,4);2,329(0,6);2,325(0,4);0,008(0,4);0,000(10,5);-0,009(0,3)

### Beispiel No. 112-82: ¹H-NMR (400 MHz, d₆-DMSO δ, ppm)

7,221(1,1);6,884(3,3);6,637(6,3);5,859(0,8);3,902(3,2);3,890(3,9);3,886(8,5);3,785(16,0);3,702(10,1);3,329(25,8);3,169(1,2);2,524(0,8);2,511(14,8);2,506(29,1);2,502(38,1);2,497(27,8);2,493(13,4);0,008(0,4);0,000(12,2);-0,009(0,4)

### Beispiel No. 112-83: ¹H-NMR (400 MHz, d₆-DMSO δ, ppm)

8,370(1,9);8,368(2,0);8,364(2,0);8,362(1,9);7,777(1,6);7,770(1,5);7,756(2,0);7,749(2,0);7,697(1,6);7,676(3,5);7,641(3,2);7,620(1,5);7,577(2,4);7,575(2,4);7,556(2,0);7,554(1,9);7,342(0,3);7,334(3,8);7,328(1,1);7,317(1,2);7,311(4,6);7,303(0,4);7,077(0,4);7,069(4,4);7,063(1,2);7,052(1,1);7,047(3,7);4,515(5,1);3,903(5,0);3,810(16,0);3,781(0,8);3,338(263,1);3,298(0,4);3,169(0,4);2,676(0,4);2,672(0,5);2,667(0,4);2,542(0,4);2,525(1,8);2,520(2,8);2,512(31,9);2,507(63,2);2,503(83,2);2,498(60,3);2,494(28,7);2,334(0,4);2,330(0,5);2,325(0,4);0,008(0,4);0,000(11,7);-0,009(0,3)

### Beispiel No. 112-143: ¹H-NMR (400 MHz, d₆-DMSO δ, ppm)

8,369(0,7);8,364(0,7);8,363(0,7);7,784(0,5);7,777(0,5);7,763(0,6);7,756(0,6);7,579(0,8);7,557(0,7);7,341(0,6);7,325(0,4);7,320(1,8);7,295(1,8);7,290(1,6);7,285(0,5);7,274(1,0);7,268(1,6);7,056(1,5);7,051(0,4);7,039(0,4);7,034(1,2);4,394(2,2);3,903(1,4);3,804(5,4);3,340(98,6);2,525(0,5);2,512(10,4);2,507(20,5);2,503(26,8);2,498(19,5);2,494(9,4);1,252(16,0);1,229(0,6);0,000(3,1)

### Beispiel No. J9-1: ¹H-NMR (400 MHz, CDCl₃ δ, ppm)

7,519(1,3);7,504(1,2);7,502(1,0);7,496(0,9);7,489(1,1);7,481(15,8);7,479(8,7);7,477(16,0);7,469(1,1);7,462(0,8);7,456(1,0);7,454(1,2);7,427(1,9);7,423(1,9);7,408(2,3);7,404(4,2);7,400(2,3);7,384(2,4);7,381(2,4);7,260(214,0);7,250(1,4);7,245(1,4);7,235(0,6);7,231(2,5);7,227(2,0);7,212(1,7);7,207(1,6);7,182(2,0);7,178(2,1);7,163(2,8);7,159(2,7);7,144(1,0);7,140(1,2);6,996(1,3);4,590(15,8);3,719(3,5);3,703(2,2);3,700(3,7);3,696(1,9);3,680(3,6);1,560(6,9);1,532(2,0);1,513(2,9);1,498(1,1);1,494(2,9);1,475(1,8);0,749(6,9);0,730(15,0);0,712(6,2);0,008(2,3);0,006(0,7);0,000(78,4);-0,009(2,2)

### Beispiel No. J9-3: ¹H-NMR (400 MHz, CDCl₃ δ, ppm)

7,521(3,1);7,519(1,9);7,515(1,4);7,505(2,1);7,499(13,3);7,495(3,6);7,491(3,4);7,487(13,5);7,481(2,0);7,472(1,4);7,467(2,4);7,465(3,6);7,462(0,5);7,450(1,1);7,445(1,7);7,429(1,6);7,425(1,0);7,406(0,6);7,262(53,8);6,849(0,9);6,843(1,3);6,827(1,1);6,820(3,7);6,812(0,7);6,799(4,1);6,792(1,1);6,780(0,9);6,777(0,9);6,773(0,6);6,771(0,6);4,502(8,4);4,501(8,5);3,787(3,7);3,772(2,3);3,768(3,9);3,764(2,0);3,749(3,8);1,642(0,9);1,608(0,6);1,590(1,9);1,571(3,0);1,567(1,2);1,556(1,2);1,551(3,1);1,537(0,5);1,533(1,9);1,514(0,5);0,785(7,4);0,766(16,0);0,748(6,7);0,008(0,6);0,000(20,7);-0,009(0,6)

### Beispiel No. J9-5: ¹H-NMR (400 MHz, CDCl₃ δ, ppm)

7,520(0,6);7,511(1,1);7,503(0,8);7,488(16,0);7,484(15,9);7,477(1,3);7,469(4,4);7,464(1,2);7,462(1,2);7,448(4,2);7,413(4,0);7,408(4,0);7,261(88,7);7,168(2,5);7,163(2,4);7,147(2,3);7,142(2,1);6,997(0,5);4,573(14,5);3,766(3,2);3,746(3,8);3,727(3,3);1,568(5,1);1,549(3,4);1,530(3,1);1,511(1,8);0,771(5,9);0,753(12,1);0,734(5,3);0,008(1,5);0,000(31,7); -0,009(1,2)

### Beispiel No. J9-7: ¹H-NMR (400 MHz, CDCl₃ δ, ppm)

7,551(0,5);7,547(3,9);7,545(2,7);7,541(1,6);7,530(2,4);7,525(10,1);7,520(2,3);7,503(1,8);7,498(10,0);7,493(2,4);7,482(1,6);7,478(2,6);7,476(4,0);7,345(5,2);7,325(8,5);7,261(80,5);7,213(3,7);7,195(3,0);7,192(2,7);7,173(2,1);5,299(0,8);4,749(16,0);3,793(3,2);3,778(2,0);3,774(3,4);3,770(1,8);3,755(3,2);1,606(2,0);1,591(3,5);1,588(4,2);1,573(1,3);1,568(2,8);1,549(1,7);0,787(6,3);0,769(13,8);0,750(5,8);0,008(0,9);0,000(30,2);-0,009(0,8)

### Beispiel No. J9-13: ¹H-NMR (400 MHz, CDCl₃ δ, ppm)

7,514(1,8);7,511(1,4);7,507(1,1);7,498(1,6);7,491(15,7);7,487(6,1);7,484(15,7);7,477(1,4);7,469(1,1);7,464(1,4);7,462(1,7);7,367(3,2);7,361(1,3);7,353(3,4);7,345(3,7);7,337(1,4);7,331(3,5);7,262(64,6);7,011(4,1);7,006(1,2);6,997(0,9);6,994(1,4);6,989(7,6);6,984(1,3);6,973(1,2);6,967(3,6);5,299(1,8);4,474(14,0);3,745(3,8);3,729(2,4);3,726(4,0);3,722(2,1);3,706(3,8);1,638(1,1);1,589(0,5);1,571(1,9);1,552(3,1);1,537(1,3);1,533(3,1);1,514(1,9);0,777(7,3);0,759(16,0);0,740(6,7);0,008(0,7);0,000(21,6);-0,009(0,6)

### Beispiel No. J9-15: ¹H-NMR (400 MHz, CDCl₃ δ, ppm)

7,511(1,1);7,509(1,0);7,504(0,9);7,496(1,2);7,489(16,0);7,486(10,0);7,484(15,6);7,477(1,1);7,470(0,7);7,464(0,9);7,462(1,0);7,331(3,3);7,326(1,3);7,315(2,0);7,310(8,2);7,305(1,4);7,286(1,8);7,281(9,7);7,275(2,4);7,262(51,5);5,299(3,3);4,463(14,1);3,748(3,2);3,732(2,1);3,729(3,4);3,725(1,8);3,710(3,3);1,647(1,2);1,568(1,6);1,549(2,6);1,534(1,1);1,530(2,7);1,511(1,7);0,776(6,4);0,758(13,7);0,739(5,7);0,008(0,6);0,000(16,8)

### Beispiel No. J9-17: ¹H-NMR (400 MHz, CDCl₃ δ, ppm)

7,549(0,6);7,545(4,8);7,543(3,1);7,539(1,9);7,528(2,8);7,523(11,3);7,518(2,2);7,501(2,2);7,496(11,2);7,490(2,7);7,480(1,9);7,476(3,0);7,474(4,7);7,469(0,6);7,306(0,6);7,289(1,3);7,284(1,1);7,273(0,9);7,268(3,0);7,262(66,2);7,252(1,1);7,247(1,4);7,231(0,6);6,932(0,5);6,923(3,5);6,911(0,6);6,905(3,8);6,902(3,5);6,896(0,6);6,884(3,0);4,529(9,6);3,846(3,6);3,830(2,3);3,826(3,8);3,822(2,0);3,807(3,7);1,639(0,7);1,620(3,6);1,605(1,5);1,601(3,1);1,597(1,3);1,586(1,2);1,582(3,1);1,579(1,2);1,568(0,5);1,563(1,9);0,802(7,3);0,783(16,0);0,765(6,7);0,008(0,7);0,000(23,5);-0,009(0,6)

### Beispiel No. J9-59: ¹H-NMR (400 MHz, CDCl₃ δ, ppm)

7,549(0,6);7,545(4,8);7,543(3,2);7,539(2,0);7,528(2,9);7,523(11,2);7,518(2,3);7,501(2,2);7,497(11,2);7,491(2,8);7,480(1,9);7,476(3,0);7,475(4,7);7,470(0,5);7,270(1,2);7,269(0,7);7,268(0,8);7,267(0,9);7,261(95,7);7,250(2,2);7,237(2,8);7,231(3,6);7,229(4,2);7,224(3,2);7,221(7,9);7,208(1,0);7,033(1,4);7,028(1,4);7,014(1,2);7,010(2,0);7,002(1,4);6,997(0,8);6,995(1,0);6,987(1,1);4,621(9,5);4,617(10,1);3,821(3,6);3,806(2,3);3,802(3,8);3,798(2,0);3,797(1,9);3,782(3,7);1,629(0,5);1,610(2,0);1,592(6,1);1,577(1,5);1,572(3,2); 1,569(1,3);1,558(0,6);1,553(1,9);0,794(7,2);0,775(16,0);0,756(6,6);0,008(1,1);0,000(36 ,9);-0,009(1,0)

### Beispiel No. J9-61: ¹H-NMR (400 MHz, CDCl₃ δ, ppm)

7,683(2,0);7,681(2,1);7,668(2,1);7,665(5,9);7,662(2,6);7,649(2,3);7,647(2,4);7,542(1,6);7,539(1,4);7,532(0,6);7,527(4,0);7,526(2,9);7,523(3,3);7,520(3,4);7,511(2,5);7,505(12,2);7,501(3,5);7,491(2,5);7,486(11,9);7,481(2,4);7,470(1,6);7,466(2,5);7,465(3,9);7,399(1,9);7,396(1,9);7,380(3,0);7,377(2,7);7,362(0,6);7,361(1,1);7,358(1,3);7,261(96,3);6,997(0,5);4,641(15,7);3,838(3,6);3,822(2,3);3,819(3,8);3,815(2,0);3,800(3,6);1,608(1,2);1,596(3,4);1,590(3,4);1,571(3,1);1,556(1,3);1,552(3,1);1,533(1,9);0,783(7,3);0,765(16,0);0,746(6,6);0,008(1,0);0,000(34,1);-0,009(1,0)

### Beispiel No. J9-63: ¹H-NMR (400 MHz, CDCl₃ δ, ppm)

7,614(3,5),7,609(1,6),7,598(2,2),7,593(7,6),7,589(1,9),7,556(6,8),7,55l(2,0),7,539(1,4);7,535(3,2);7,519(1,5);7,516(1,0);7,513(1,0);7,508(1,0);7,501(1,1);7,493(15,6);7,490(16,0);7,482(0,8);7,475(0,6);7,469(0,7);7,467(0,8);7,311(0,6);7,295(0,8);7,260(206,5);6,996(1,2);4,548(12,2);3,776(3,0);3,761(2,0);3,757(3,2);3,753(1,9);3,738(3,0);1,612(0,5);1,593(1,8);1,574(3,4);1,556(9,6);1,536(1,9);0,792(5,9);0,773(12,6);0,755(5,3);0,008(2,8) ;0,000(75,5);-0,009(2,2)

### Beispiel No. J9-159: ¹H-NMR (400 MHz, CDCl₃ δ, ppm)

7,466(16,0);7,331(0,9);7,318(1,0);7,309(1,1);7,296(1,0);7,261(20,7);7,001(1,2);6,980(2,1);6,958(1,0);4,966(0,7);4,949(0,8);3,655(0,7);3,653(0,7);3,634(1,3);3,616(0,7);3,614(0,7);1,832(4,5);1,815(4,5);1,483(0,6);1,464(0,7);1,445(0,6);0,740(2,1);0,722(4,5);0,703(1,9);0,000(7,6)

### Beispiel No. J9-726: ¹H-NMR (400 MHz, CDCl₃ δ, ppm)

9,966(1,1);8,304(1,7);8,300(1,7);8,283(1,7);8,280(1,8);7,543(2,1);7,541(1,6);7,536(1,1);7,527(1,7);7,521(11,5);7,517(3,4);7,513(3,1);7,510(11,6);7,504(1,6);7,494(1,0);7,490(1,5);7,488(2,1);7,359(2,2);7,356(2,4);7,339(2,5);7,335(2,7);7,273(1,9);7,268(2,5);7,261(186,6);7,251(2,2);7,234(1,2);7,230(1,1);7,058(1,5);7,054(1,6);7,038(1,8);7,034(1,8);7,019(1,2);7,015(1,1);6,997(1,1);5,300(0,9);4,165(16,0);3,895(2,9);3,879(2,0);3,876(3,1); 3,857(2,9);2,007(0,8);1,742(1,5);1,723(2,5);1,704(2,5);1,685(1,6);1,666(0,6);1,609(3,2);0,880(6,0);0,862(12,9);0,843(5,4);0,008(2,1);0,000(64,5);-0,009(1,7)

### Beispiel No. J9-728: ¹H-NMR (400 MHz, CDCl₃ δ, ppm)

10,694(1,3);7,776(2,5);7,771(4,7);7,766(2,4);7,562(1,3);7,560(1,1);7,554(1,0);7,539(15,7);7,537(9,0);7,535(16,0);7,527(1,1);7,519(3,2);7,514(1,1);7,512(1,2);7,454(1,4);7,451(1,7);7,449(1,5);7,446(1,5);7,433(1,8);7,431(1,9);7,428(2,0);7,426(1,7);7,374(1,0);7,260(439,6);7,229(2,7);7,209(4,8);7,188(2,6);7,069(2,0);7,066(2,2);7,064(2,1);7,061(2,1);7,049(1,6);7,046(1,7);7,044(1,7);7,041(1,5);6,996(2,5);3,977(14,9);3,908(3,2);3,893(2,1);3,889(3,4);3,870(3,2);2,045(1,0);1,747(1,6);1,728(2,5);1,709(2,6);1,690(1,6);1,555(51,5);1,259(0,8);0,894(6,4);0,875(14,1);0,857(5,8);0,008(4,9);0,000(152,8);-0,009(4,0);-0,050(0,5)

### Beispiel No. J9-737: ¹H-NMR (400 MHz, CDCl₃ δ, ppm)

10,511(1,3);8,242(0,8);8,227(0,9);8,218(1,5);8,203(1,4);8,196(1,0);8,181(0,8);7,559(3,4);7,557(2,3);7,553(1,5);7,543(2,3);7,537(11,0);7,532(2,5);7,523(2,4);7,519(12,1);7,513(2,3);7,502(1,5);7,498(2,3);7,496(3,4);7,289(0,6);7,261(482,8);7,252(1,4);7,211(1,1);6,997(2,7);6,865(1,2);6,861(1,3);6,855(1,7);6,847(1,9);6,840(1,7);6,834(2,7);6,827(2,0);6,813(1,3);6,807(0,8);4,047(16,0);3,903(3,1);3,884(3,4);3,864(3,3);2,045(0,5);1,748(1,6);1,729(2,6);1,709(2,6);1,691(1,6);1,549(84,4);0,891(6,3);0,873(13,9);0,854(5,8);0,008(5,0);0,000(169,7);-0,009(4,6)

### Beispiel No. J9-742: ¹H-NMR (400 MHz, CDCl₃ δ, ppm)

9,966(1,4);7,562(3,4);7,556(1,5);7,545(2,3);7,540(11,7);7,535(2,7);7,526(2,7);7,522(11,8);7,520(4,3);7,516(2,4);7,506(1,5);7,502(2,4);7,500(3,4);7,261(441,6);7,228(0,6);7,210(1,2);7,196(0,9);7,191(0,8);7,175(1,9);7,161(1,1);7,154(1,1);7,139(0,6);6,997(2,5);6,946(0,7);6,939(3,5);6,919(4,8);6,899(2,6);4,077(16,0);3,935(3,3);3,916(3,6);3,897(3,4);2,045(0,6);1,755(1,7);1,736(2,7);1,717(2,8);1,698(1,8);1,552(63,1);1,259(0,5);0,892(6,8) ;0,874(14,8);0,855(6,2);0,008(4,6);0,000(149,1);-0,009(4,5)

### Beispiel No. J9-748: ¹H-NMR (400 MHz, CDCl₃ δ, ppm)

10,838(1,3);8,018(2,4);7,731(1,2);7,709(1,3);7,563(0,9);7,555(0,8);7,540(15,0);7,536(16,0);7,519(3,8);7,514(0,8);7,424(0,8);7,405(2,1);7,385(1,4);7,345(1,7);7,326(1,2);7,288(0,7);7,276(1,8);7,275(1,9);7,2733(2,3);7,2725(2,4);7,272(2,7);7,271(2,9);7,270(3,1);7,2693(3,7);7,2685(4,4);7,268(5,0);7,267(5,9);7,266(7,5);7,265(9,2);7,260(636,3);7,254(3,9);7,253(3,0);7,2523(2,5);7,2515(2,0);7,251(1,8);7,250(1,6);7,249(1,4);7,2483(1,2);7,2475(0,9);7,247(0,9);7,246(0,8);7,245(0,7);7,244(0,6);7,243(0,6);7,242(0,6);7,227(0,7);7,210(1,4);6,996(3,6);3,995(10,6);3,914(2,6);3,895(3,0);3,875(2,7);2,045(0,7);1,752(1,4);1,733(2,2);1,714(2,3);1,695(1,4);1,548(89,4);0,898(5,6);0,879(12,2);0,860(5,1);0,14 6(0,7);0,008(7,1);0,006(3,0);0,005(3,4);0,000(223,6);-0,007(1,7);-0,009(5,7);-0,150(0,7)

### Beispiel No. J9-761: ¹H-NMR (400 MHz, CDCl₃ δ, ppm)

7,777(1,8);7,772(0,6);7,760(0,7);7,755(2,3);7,597(2,3);7,592(0,7);7,580(0,6);7,575(1,8);7,541(16,0);7,520(0,7);7,261(117,1);6,997(0,7);4,221(1,2);4,003(4,0);3,924(0,9);3,904(1,0);3,885(0,9);1,735(0,7);1,715(0,7);1,600(3,1);0,900(1,8);0,881(4,0);0,863(1,6);0,008(1,3);0,000(40,3);-0,009(1,1)

### Beispiel No. J9-791: ¹H-NMR (400 MHz, CDCl₃ δ, ppm)

7,583(1,3);7,567(1,7);7,561(1,4);7,514(1,8);7,512(1,4);7,507(1,1);7,499(1,6);7,492(15,8);7,489(5,8);7,485(16,0);7,478(2,1);7,469(2,8);7,465(1,6);7,462(1,8);7,424(0,6);7,411(1,9);7,409(1,7);7,406(1,7);7,403(2,6);7,395(5,6);7,385(1,8);7,380(1,5);7,262(49,8);7,143(2,2);7,005(4,4);6,867(2,2);5,298(0,8);4,639(10,8);3,736(3,6);3,720(2,2);3,717(3,8);3,713(2,0);3,697(3,7);1,676(0,5);1,556(1,8);1,538(2,9);1,534(1,1);1,523(1,2);1,518(3,0);1,504(0,5);1,499(1,9);0,768(7,1);0,749(15,4);0,731(6,5);0,000(18,0);-0,009(0,5)

### Beispiel No. K8-1: ¹H-NMR (400 MHz, d₆-DMSO δ, ppm)

7,505(0,9);7,502(1,0);7,486(1,2);7,482(1,2);7,459(0,8);7,454(0,9);7,440(1,1);7,436(1,1);7,365(0,5);7,361(0,5);7,347(1,2);7,342(1,0);7,327(0,9);7,322(0,7);7,310(1,0);7,306(1,0);7,291(1,2);7,288(1,1);7,273(0,4);7,269(0,4);4,549(6,7);4,155(1,2);4,142(2,3);4,129(1,3);3,902(2,3);3,511(1,4);3,497(2,6);3,484(1,3);3,326(70,9);3,156(16,0);2,524(0,9);2,520(1,3);2,511(16,2);2,507(32,3);2,502(42,4);2,497(30,7);2,493(14,6);0,000(9,5)

### Beispiel No. K8-2: ¹H-NMR (400 MHz, d₆-DMSO δ, ppm)

7,452(1,7);7,346(7,1);7,343(6,5);4,485(7,1);4,162(1,3);4,149(2,6);4,136(1,4);3,902(1,8);3,518(1,6);3,505(2,9);3,491(1,5);3,325(63,0);3,166(16,0);2,524(1,0);2,511(17,6);2,506 (34,4);2,502(45,1);2,497(33,0);2,493(16,1);0,008(0,4);0,000(11,2);-0,009(0,4)

### Beispiel No. K8-5: ¹H-NMR (400 MHz, d₆-DMSO δ, ppm)

7,672(2,1);7,667(2,1);7,495(1,6);7,475(2,5);7,411(1,6);7,406(1,5);7,390(1,0);7,385(1,0);4,531(6,4);4,188(1,2);4,175(2,3);4,162(1,3);3,902(2,4);3,523(1,4);3,510(2,6);3,497(1,3);3,326(79,8);3,164(16,0);2,525(1,0);2,520(1,6);2,511(18,9);2,507(37,4);2,502(49,1);2,497(35,7);2,493(17,1);0,008(0,5);0,000(13,6);-0,009(0,4)

### Beispiel No. K8-7: ¹H-NMR (400 MHz, d₆-DMSO δ, ppm)

7,531(2,6);7,510(4,4);7,414(1,7);7,395(1,5);7,392(1,3);7,373(1,0);4,620(7,1);4,242(1,2);4,229(2,3);4,216(1,3);3,903(2,2);3,555(1,4);3,542(2,6);3,529(1,3);3,326(70,3);3,181(16,0);2,524(1,1);2,511(18,7);2,507(36,3);2,502(47,1);2,497(34,0);2,493(16,2);0,008(0,4);0,000(10,2)

### Beispiel No. K8-59: ¹H-NMR (400 MHz, d₆-DMSO δ, ppm)

7,454(0,4);7,439(0,3);7,433(1,1);7,419(1,0);7,413(0,9);7,399(1,0);7,386(1,7);7,369(0,5);7,366(0,5);7,281(0,6);7,278(0,6);7,261(0,6);7,258(1,1);7,254(0,6);7,238(0,5);7,234(0,5);4,514(3,8);4,510(3,8);4,230(1,2);4,217(2,2);4,204(1,2);3,902(2,4);3,544(1,4);3,531(2,5);3,518(1,3);3,326(64,1);3,174(16,0);2,524(0,8);2,520(1,4);2,511(17,2);2,507(34,1);2,502(44,8);2,497(32,4);2,493(15,5);0,000(8,7)

### Beispiel No. K8-82: ¹H-NMR (400 MHz, d₆-DMSO δ, ppm)

7,713(0,7);7,695(2,4);7,647(0,6);7,628(0,9);7,582(0,7);7,563(0,9);4,568(5,6);4,142(1,2);4,129(2,2);4,115(1,2);3,903(2,7);3,498(1,4);3,485(2,5);3,472(1,3);3,326(81,6);3,148(16,0);2,525(0,9);2,520(1,5);2,511(18,4);2,507(36,8);2,502(48,6);2,497(35,4);2,493(16,9);0,008(0,3);0,000(10,9);-0,009(0,3)

### Beispiel No. K8-83: ¹H-NMR (400 MHz, d₆-DMSO δ, ppm)

7,699(1,7);7,679(2,7);7,615(2,5);7,595(1,5);4,574(5,2);4,163(1,3);4,150(2,5);4,137(1,4);3,903(1,4);3,510(1,6);3,497(2,8);3,484(1,5);3,335(170,8);3,301(0,3);3,151(16,0);2,672 (0,4);2,525(1,3);2,520(1,9);2,512(21,4);2,507(42,3);2,503(55,9);2,498(41,2);2,494(20,2);2,329(0,4);0,000(6,3)

### Beispiel No. K8-143: ¹H-NMR (400 MHz, d₆-DMSO δ, ppm)

7,343(0,8);7,327(0,4);7,322(1,7);7,279(1,5);7,274(0,4);7,263(0,3);7,258(0,8);4,441(2,6);4,106(0,5);4,093(1,0);4,079(0,6);3,903(0,7);3,494(0,6);3,481(1,1);3,467(0,6);3,326(32,8);3,153(0,3);3,146(6,4);2,524(0,5);2,511(9,0);2,506(17,5);2,502(23,0);2,497(16,9);2,493(8,3);1,250(16,0);1,217(0,7);1,161(0,4);0,000(6,1)

### Beispiel No. K12-1: ¹H-NMR (400 MHz, d₆-DMSO δ, ppm)

8,843(1,4);8,839(1,4);8,745(1,0);8,741(1,0);8,733(1,0);8,729(1,0);8,119(0,7);8,114(1,0);8,109(0,7);8,099(0,8);8,094(1,1);8,090(0,7);7,600(0,8);7,598(0,8);7,588(0,8);7,586(0,8);7,580(0,8);7,578(0,8);7,568(0,8);7,566(0,7);7,514(1,0);7,510(1,2);7,495(1,2);7,491(1,4);7,484(1,0);7,479(0,9);7,466(1,3);7,461(1,2);7,370(0,5);7,365(0,6);7,352(1,3);7,347(1,1);7,333(1,1);7,327(1,0);7,324(1,2);7,320(1,2);7,306(1,3);7,302(1,2);7,287(0,4);7,284(0,4);4,526(6,9);4,069(1,3);4,056(2,5);4,043(1,4);3,902(1,5);3,416(1,8);3,402(3,2);3,389(2,0);3,344(212,2);3,295(0,4);3,032(16,0);2,672(0,4);2,525(1,1);2,512(21,4);2,508(42,1);2,503(55,3);2,498(40,3);2,494(19,4);2,330(0,4);0,000(1,6)

### Beispiel No. K12-2: ¹H-NMR (400 MHz, d₆-DMSO δ, ppm)

8,847(1,4);8,843(1,4);8,742(1,0);8,738(1,0);8,730(1,0);8,726(1,0);8,124(0,7);8,119(1,0);8,114(0,7);8,104(0,8);8,098(1,0);8,094(0,7);7,599(0,8);7,597(0,8);7,587(0,8);7,585(0,8);7,579(0,8);7,577(0,8);7,567(0,8);7,565(0,7);7,463(1,8);7,374(1,0);7,371(0,7);7,363(2,1);7,361(4,5);7,355(2,1);7,350(1,4);7,345(0,5);7,342(0,8);7,338(0,5);4,462(6,5);4,076(1,3);4,063(2,4);4,050(1,4);3,902(1,6);3,423(1,7);3,410(2,9);3,397(1,7);3,345(219,4);3,294(0,4);3,043(16,0);2,672(0,3);2,526(1,0);2,521(1,6);2,512(20,0);2,508(39,7);2,503(52,2);2,499(38,1);2,494(18,3);2,330(0,3);0,000(0,8)

### Beispiel No. K12-3: ¹H-NMR (400 MHz, d₆-DMSO δ, ppm)

8,847(1,4);8,843(1,5);8,741(1,1);8,737(1,1);8,729(1,1);8,725(1,1);8,124(0,7);8,120(0,9);8,114(0,7);8,104(0,8);8,099(1,0);8,095(0,7);7,597(0,8);7,595(0,8);7,585(0,8);7,583(0,8);7,577(0,8);7,575(0,8);7,565(0,8);7,563(0,7);7,435(1,0);7,428(0,5);7,419(0,8);7,413(5,0);7,404(1,4);7,400(5,5);7,394(0,9);7,384(0,5);7,378(1,1);4,456(6,2);4,082(1,2);4,069(2 ,3);4,056(1,4);3,903(1,3);3,415(1,6);3,402(2,8);3,389(1,6);3,338(153,0);3,038(16,0);2,672(0,3);2,525(0,9);2,512(19,4);2,507(38,6);2,503(50,8);2,498(37,0);2,494(17,8);0,000( 6,5)

### Beispiel No. K12-5: ¹H-NMR (400 MHz, d₆-DMSO δ, ppm)

8,848(1,4);8,844(1,4);8,747(1,0);8,743(1,1);8,735(1,1);8,731(1,0);8,126(0,7);8,121(1,0);8,116(0,7);8,106(0,8);8,101(1,0);8,096(0,7);7,678(2,2);7,673(2,3);7,602(0,9);7,600(0,8);7,590(0,8);7,588(0,8);7,582(0,8);7,580(0,8);7,570(0,8);7,568(0,7);7,514(1,7);7,493(2,6);7,423(1,7);7,418(1,6);7,403(1,1);7,397(1,0);4,505(6,1);4,109(1,3);4,096(2,3);4,083(1,4);3,903(1,9);3,423(1,7);3,410(2,8);3,397(1,7);3,344(233,0);3,301(0,4);3,040(16,0);2,672(0,4);2,526(1,0);2,521(1,8);2,512(22,4);2,508(44,7);2,503(58,9);2,498(42,9);2,494(20,7);2,330(0,4);0,000(4,3)

### Beispiel No. K12-7: ¹H-NMR (400 MHz, d₆-DMSO δ, ppm)

8,861(1,4);8,857(1,4);8,763(1,0);8,759(1,1);8,751(1,1);8,746(1,0);8,140(0,7);8,135(1,0);8,130(0,7);8,120(0,8);8,114(1,0);8,110(0,7);7,618(0,8);7,616(0,8);7,605(0,8);7,604(0,8);7,598(0,8);7,596(0,8);7,586(0,8);7,584(0,8);7,538(2,8);7,518(4,6);7,413(1,8);7,394(1,5);7,391(1,4);7,373(1,0);4,589(6,7);4,155(1,2);4,142(2,3);4,129(1,3);3,903(1,9);3,457(1,6);3,444(2,8);3,431(1,4);3,333(165,7);3,299(0,3);3,058(16,0);2,671(0,4);2,525(1,2);2,520(1,9);2,511(22,9);2,507(45,5);2,502(60,0);2,498(43,7);2,493(21,0);2,329(0,4);0,000(7,8)

### Beispiel No. K12-59: ¹H-NMR (400 MHz, d₆-DMSO δ, ppm)

8,854(1,3);8,850(1,3);8,759(1,0);8,755(1,0);8,747(1,0);8,743(1,0);8,133(0,7);8,128(0,9);8,123(0,7);8,113(0,8);8,109(1,0);8,103(0,7);7,614(0,8);7,612(0,8);7,602(0,8);7,600(0,8);7,594(0,8);7,593(0,7);7,582(0,7);7,580(0,7);7,457(0,3);7,437(1,0);7,422(0,9);7,416(0,9);7,403(1,1);7,397(1,2);7,394(2,0);7,377(0,5);7,373(0,5);7,299(0,7);7,296(0,6);7,279(0,6);7,275(1,1);7,271(0,6);7,256(0,5);7,252(0,4);4,488(3,7);4,484(3,7);4,153(1,2);4,140(2,3);4,126(1,3);3,903(1,4);3,448(1,5);3,435(2,7);3,421(1,4);3,331(101,7);3,053(16,0);2,671(0,3);2,525(0,9);2,520(1,5);2,511(19,6);2,507(39,3);2,502(52,0);2,498(37,9);2,493(18,2);2,329(0,3);0,008(0,3);0,000(10,5)

### Beispiel No. K12-82: ¹H-NMR (400 MHz, d₆-DMSO δ, ppm)

8,834(1,4);8,830(1,4);8,740(1,0);8,736(1,1);8,728(1,1);8,724(1,1);8,110(0,7);8,106(1,0);8,100(0,7);8,090(0,8);8,085(1,1);8,081(0,7);7,741(1,6);7,713(1,0);7,652(0,6);7,633(1,1);7,594(1,7);7,584(0,9);7,582(0,9);7,575(2,0);7,564(0,8);7,563(0,8);7,555(0,5);4,552(5,9);4,077(1,4);4,064(2,4);4,051(1,4);3,902(1,7);3,406(1,8);3,393(3,2);3,380(2,1);3,341(231,8);3,025(16,0);2,672(0,4);2,525(1,2);2,512(22,6);2,508(44,9);2,503(59,3);2,498(43,4);2,494(21,0);2,330(0,4);0,000(8,7)

### Beispiel No. K12-83: ¹H-NMR (400 MHz, d₆-DMSO δ, ppm)

8,844(1,4);8,840(1,4);8,740(1,1);8,736(1,1);8,727(1,1);8,723(1,1);8,119(0,7);8,115(1,0);8,110(0,7);8,100(0,8);8,095(1,0);8,090(0,7);7,715(1,5);7,695(2,6);7,641(2,4);7,620(1,4);7,594(0,9);7,592(0,8);7,582(0,8);7,580(0,8);7,574(0,8);7,572(0,8);7,562(0,8);7,560(0,7);4,555(4,8);4,091(1,3);4,078(2,3);4,065(1,4);3,903(1,5);3,417(1,6);3,404(2,7);3,391(1,4);3,328(78,2);3,028(16,0);2,671(0,3);2,524(1,2);2,520(1,9);2,511(20,3);2,507(39,9);2,502(52,2);2,497(37,9);2,493(18,1);0,008(0,5);0,000(15,0);-0,009(0,5)

### Beispiel No. K12-136: ¹H-NMR (400 MHz, d₆-DMSO δ, ppm)

8,843(1,3);8,839(1,3);8,740(0,9);8,736(1,0);8,728(1,0);8,724(0,9);8,118(0,7);8,114(0,9);8,109(0,7);8,099(0,8);8,094(0,9);8,093(1,0);8,089(0,7);7,596(0,8);7,594(0,8);7,584(0,8);7,582(0,8);7,576(0,8);7,574(0,7);7,564(0,7);7,562(0,7);7,398(0,9);7,394(1,3);7,389(0,4);7,377(2,2);7,374(2,0);7,369(0,3);7,354(0,9);7,350(1,2);7,345(0,4);7,333(2,6);7,328(0,9);7,318(0,7);7,314(1,2);7,302(0,7);7,298(1,2);7,294(0,6);7,288(0,4);7,281(1,0);4,456(6,2);4,048(1,2);4,035(2,3);4,021(1,3);3,902(1,3);3,413(1,5);3,399(2,7);3,386(1,4);3,334(112,4);3,034(16,0);2,525(0,8);2,520(1,4);2,511(16,6);2,507(32,9);2,502(43,4);2,498(31,4);2,493(14,8);0,000(5,3)

### Beispiel No. K12-143: ¹H-NMR (400 MHz, d₆-DMSO δ, ppm)

8,836(0,6);8,832(0,6);8,740(0,4);8,736(0,4);8,727(0,4);8,723(0,4);8,112(0,4);8,092(0,4);7,595(0,4);7,594(0,3);7,583(0,3);7,581(0,3);7,576(0,3);7,360(0,7);7,344(0,5);7,339(1,7);7,309(1,6);7,304(0,4);7,288(0,6);4,420(2,4);4,026(0,5);4,013(0,9);4,000(0,5);3,902(0,8);3,411(0,7);3,398(1,3);3,385(0,9);3,347(88,9);3,028(6,4);2,526(0,4);2,521(0,7);2,512(8,6);2,508(16,8);2,503(22,0);2,499(16,0);2,494(7,7);1,254(16,0);1,225(0,4);0,000(0,5)

### Beispiel No. L8-1: ¹H-NMR (400 MHz, d₆-DMSO δ, ppm)

7,538(2,2);7,527(0,6);7,518(2,9);7,514(2,4);7,456(1,1);7,450(2,2);7,443(1,8);7,439(1,2);7,434(3,5);7,429(4,0);7,425(2,7);7,417(2,5);7,412(0,7);7,392(2,4);7,388(2,4);7,383(0,4);7,375(1,4);7,371(2,3);7,355(0,8);7,352(0,7);4,943(1,5);4,911(6,6);4,894(6,6);4,861(1,5);3,902(8,7);3,736(16,0);3,735(16,0);3,337(342,7);3,282(0,4);2,676(0,5);2,672(0,6);2,667(0,5);2,525(2,2);2,511(39,6);2,507(77,4);2,502(101,0);2,498(73,5);2,493(35,4);2,334(0,5);2,329(0,6);2,325(0,5);0,000(6,2)

### Beispiel No. L8-5: ¹H-NMR (400 MHz, d₆-DMSO δ, ppm)

7,723(3,4);7,719(4,2);7,518(0,4);7,497(7,3);7,493(12,3);7,474(0,4);4,947(1,2);4,915(7,3);4,904(7,4);4,872(1,2);3,903(10,9);3,837(15,9);3,835(16,0);3,385(0,3);3,332(319,6);3,292(0,4);3,288(0,4);3,175(0,4);3,162(0,4);2,676(0,5);2,671(0,7);2,667(0,5);2,541(0,4);2,524(2,2);2,511(42,5);2,507(83,5);2,502(109,4);2,498(79,6);2,493(38,2);2,333(0,5);2,329(0,7);2,324(0,5);0,008(0,3);0,000(9,6)

### Beispiel No. L8-6: ¹H-NMR (400 MHz, d₆-DMSO δ, ppm)

7,577(2,9);7,555(9,0);7,551(6,1);7,528(5,0);7,522(3,0);7,507(1,8);7,500(1,5);4,937(0,8);4,905(7,6);4,899(7,7);4,866(0,8);3,902(2,9);3,825(15,9);3,823(16,0);3,370(0,5);3,330(289,9);3,175(0,3);2,676(0,5);2,671(0,7);2,667(0,5);2,524(2,4);2,511(42,9);2,507(85,1);2,502(112,4);2,497(82,2);2,493(39,7);2,333(0,5);2,329(0,7);2,324(0,5);0,008(0,9);0,00 0(26,3);-0,009(0,8)

### Beispiel No. L8-7: ¹H-NMR (400 MHz, d₆-DMSO δ, ppm)

7,585(5,2);7,583(5,2);7,564(9,9);7,481(3,9);7,463(3,0);7,459(2,7);7,441(2,0);5,233(3,8);5,200(4,8);5,000(4,8);4,967(3,7);3,939(16,0);3,938(15,6);3,903(11,5);3,381(0,4);3,369(0,7);3,330(288,8);3,175(0,4);3,162(0,4);2,676(0,6);2,671(0,7);2,667(0,5);2,541(0,5);2,524(2,5);2,511(45,8);2,507(90,1);2,502(118,0);2,497(86,1);2,493(41,3);2,333(0,6);2,329(0,7);2,324(0,5);0,008(0,4);0,000(11,0);-0,009(0,3)

### Beispiel No. L8-8: ¹H-NMR (400 MHz, d₆-DMSO δ, ppm)

7,668(4,6);7,648(5,1);7,541(4,5);7,536(4,5);7,299(2,6);7,294(2,5);7,278(2,3);7,273(2,2);4,823(0,9);4,791(6,5);4,783(6,5);4,751(0,8);3,902(2,2);3,772(16,0);3,328(206,6);2,676 (0,5);2,671(0,7);2,667(0,5);2,524(2,4);2,511(42,3);2,507(82,3);2,502(107,5);2,497(78,2);2,493(37,5);2,333(0,5);2,329(0,7);2,324(0,5);0,008(0,7);0,000(17,6);-0,009(0,5)

### Beispiel No. L8-59: ¹H-NMR (400 MHz, d₆-DMSO δ, ppm)

7,534(0,9);7,518(0,9);7,513(2,4);7,498(2,4);7,492(1,8);7,477(1,9);7,447(3,4);7,427(1,7);7,342(1,5);7,339(1,4);7,318(2,6);7,315(1,6);7,298(1,2);7,294(1,1);5,037(1,7);5,034(1,7);5,004(2,9);5,000(2,9);4,911(2,8);4,907(2,7);4,878(1,7);4,874(1,7);3,902(2,8);3,876(15,9);3,874(16,0);3,326(220,0);3,297(0,3);3,175(0,4);3,162(0,4);2,675(0,5);2,671(0,7);2,666(0,5);2,524(2,5);2,519(3,9);2,511(43,8);2,506(86,7);2,502(114,1);2,497(82,7);2,493( 39,3);2,333(0,5);2,328(0,7);2,324(0,5);0,008(0,9);0,000(26,1);-0,009(0,8)

### Beispiel No. L10-1: ¹H-NMR (400 MHz, d₆-DMSO δ, ppm)

8,842(2,2);8,839(1,5);8,831(1,6);8,827(2,2);7,806(3,4);7,802(2,0);7,795(2,1);7,791(3,3);7,552(1,1);7,549(1,2);7,533(1,5);7,529(1,6);7,490(0,9);7,485(1,0);7,472(1,3);7,467(1,5);7,447(0,6);7,442(0,7);7,428(1,4);7,423(1,1);7,409(1,0);7,404(0,8);7,390(1,2);7,386(1,2);7,371(1,4);7,368(1,3);7,353(0,5);7,349(0,4);4,975(0,9);4,943(2,9);4,919(2,9);4,887(0,9);3,903(8,0);3,816(16,0);3,711(0,4);3,704(0,4);3,407(114,5);3,324(0,4);3,169(1,9);2,676(0,3);2,672(0,5);2,667(0,3);2,542(0,7);2,525(1,4);2,512(28,8);2,507(57,0);2,503(75,2);2,498(55,0);2,494(26,5);2,334(0,3);2,330(0,5);2,325(0,3);0,000(2,8)

### Beispiel No. L10-5: ¹H-NMR (400 MHz, d₆-DMSO δ, ppm)

8,421(0,4);8,414(3,8);8,409(1,3);8,401(1,4);8,396(4,0);8,390(0,4);7,835(0,5);7,828(4,1);7,823(1,4);7,815(1,4);7,810(3,8);7,804(0,4);7,725(2,7);7,720(2,6);7,535(1,3);7,514(3,6);7,500(0,4);7,495(2,5);7,489(2,2);7,474(0,9);7,469(0,9);4,962(0,5);4,941(0,4);4,930(3,5);4,921(3,4);4,889(0,5);3,903(3,9);3,894(16,0);3,882(1,3);3,349(103,5);3,312(0,6);3,168(2,3);2,676(0,4);2,671(0,5);2,667(0,4);2,541(0,7);2,525(1,7);2,511(33,4);2,507(65,9); 2,502(86,6);2,498(63,1);2,493(30,3);2,333(0,4);2,329(0,6);2,324(0,4);0,008(0,4);0,000(12,2);-0,009(0,4)

### Beispiel No. L12-1: ¹H-NMR (400 MHz, d₆-DMSO δ, ppm)

7,514(0,4);7,511(0,4);7,494(0,7);7,407(0,4);7,401(0,5);7,387(0,3);7,381(0,6);7,366(0,9);7,361(0,5);7,355(0,7);7,352(0,6);7,338(0,4);7,336(0,4);4,874(0,4);4,842(1,2);4,811(1,2 );4,779(0,4);3,902(2,3);3,695(6,1);3,362(37,4);3,169(0,6);2,511(9,9);2,507(18,6);2,502( 23,8);2,498(17,4);2,493(8,4);1,410(0,6);1,390(16,0);1,276(0,4);0,000(1,1)

### Beispiel No. L12-5: ¹H-NMR (400 MHz, d₆-DMSO δ, ppm)

7,693(0,8);7,688(0,9);7,459(0,9);7,454(0,9);7,436(1,3);7,416(0,4);4,845(1,2);4,830(1,2) ;3,903(0,9);3,781(6,1);3,325(54,4);2,524(0,8);2,519(1,2);2,511(13,3);2,506(26,3);2,502 (34,6);2,497(25,2);2,492(12,1);1,398(16,0);0,000(8,0)

### Beispiel No. L12-6: ¹H-NMR (400 MHz, d₆-DMSO δ, ppm)

7,550(0,5);7,527(1,0);7,492(0,5);7,486(1,0);7,475(0,8);7,469(1,5);4,832(2,6);3,903(1,4) ;3,790(6,2);3,372(25,0);3,168(0,9);2,525(0,4);2,520(0,6);2,511(8,0);2,507(15,9);2,502( 20,9);2,498(15,1);2,493(7,2);1,401(16,0);0,000(1,2)

### Beispiel No. L12-7: ¹H-NMR (400 MHz, d₆-DMSO δ, ppm)

7,553(1,0);7,551(1,0);7,531(1,9);7,451(0,8);7,432(0,6);7,429(0,5);7,410(0,4);5,085(0,6) ;5,053(1,0);4,971(1,0);4,938(0,6);3,933(6,3);3,902(2,6);3,340(70,3);2,525(0,5);2,520(0, 8);2,512(9,4);2,507(18,7);2,503(24,5);2,498(17,8);2,493(8,5);1,417(16,0);0,000(1,3)

### Beispiel No. L12-8: ¹H-NMR (400 MHz, d₆-DMSO δ, ppm)

7,643(0,9);7,623(1,0);7,485(0,9);7,481(0,9);7,268(0,5);7,263(0,5);7,248(0,5);7,243(0,4) ;4,729(1,2);4,720(1,2);3,902(2,9);3,732(6,1);3,343(87,7);3,169(0,3);2,525(0,5);2,512(9, 3);2,507(18,3);2,503(24,0);2,498(17,5);2,494(8,5);1,391(16,0);0,000(1,0)

### Beispiel No. L12-59: ¹H-NMR (400 MHz, d₆-DMSO δ, ppm)

7,479(0,4);7,464(0,5);7,459(0,3);7,444(0,4);7,414(0,7);7,395(0,3);7,280(0,5);4,913(0,5) ;4,909(0,5);4,837(0,5);4,834(0,5);3,902(1,5);3,869(6,2);3,352(42,9);3,168(0,6);2,525(0, 5);2,520(0,8);2,511(9,6);2,507(19,2);2,502(25,3);2,497(18,4);2,493(8,8);1,411(16,0);0, 000(1,0)

### Beispiel No. L12-76: ¹H-NMR (400 MHz, d₆-DMSO δ, ppm)

7,109(0,4);7,090(0,9);7,068(0,5);7,065(0,5);6,870(0,7);4,715(0,5);4,683(1,0);4,626(1,0) ;4,594(0,5);3,902(2,8);3,562(6,3);3,363(37,1);3,169(0,5);2,525(0,5);2,520(0,7);2,511(8, 8);2,507(17,4);2,502(23,0);2,498(16,8);2,493(8,1);2,192(3,4);2,184(3,5);1,373(16,0);1,276(0,8);0,000(1,3)

### Beispiel No. L12-81: ¹H-NMR (400 MHz, d₆-DMSO δ, ppm)

7,833(0,4);7,814(0,5);7,704(0,4);7,619(0,4);7,515(0,5);7,496(0,4);4,886(0,6);4,857(0,6);3,902(1,4);3,817(6,3);3,340(19,0);2,524(0,4);2,519(0,7);2,511(8,2);2,507(16,2);2,502(21,3);2,497(15,4);2,493(7,3);1,414(16,0);0,000(8,2)

### Beispiel No. L12-83: ¹H-NMR (400 MHz, d₆-DMSO δ, ppm)

7,737(0,8);7,716(0,9);7,468(0,9);7,448(0,8);4,800(2,1);3,902(1,1);3,618(6,3);3,327(31,3);2,524(0,4);2,519(0,7);2,511(8,4);2,507(16,7);2,502(22,0);2,497(16,1);2,493(7,8);1,373(16,0);0,000(8,2)

### Beispiel No. L14-1: ¹H-NMR (400 MHz, d₆-DMSO δ, ppm)

8,786(2,0);8,782(2,0);8,780(2,0);8,262(1,6);8,256(1,5);8,241(1,8);8,235(1,7);7,801(2,2);7,800(2,2);7,780(2,0);7,779(2,0);7,554(1,2);7,551(1,3);7,535(1,6);7,531(1,6);7,493(1,0);7,488(1,1);7,474(1,4);7,470(1,5);7,445(0,6);7,440(0,7);7,426(1,5);7,421(1,2);7,406(1,1);7,401(0,8);7,389(1,2);7,386(1,2);7,371(1,4);7,367(1,3);7,352(0,5);7,349(0,4);4,970(1,0);4,938(3,0);4,913(3,0);4,881(1,0);3,903(1,5);3,799(16,0);3,331(113,5);2,671(0,4);2,5 24(1,1);2,511(22,0);2,507(43,1);2,502(56,5);2,497(41,4);2,493(20,2);2,329(0,3);0,008(0,3);0,000(9,6)

### Beispiel No. L14-5: ¹H-NMR (400 MHz, d₆-DMSO δ, ppm)

8,798(1,9);8,797(2,0);8,792(2,0);8,790(1,9);8,274(1,7);8,268(1,6);8,253(1,9);8,247(1,9);7,804(2,2);7,803(2,1);7,784(2,0);7,782(2,0);7,730(2,4);7,725(2,4);7,537(1,2);7,516(3,4);7,498(2,4);7,493(2,1);7,478(0,8);7,473(0,8);4,966(0,4);4,934(3,2);4,927(3,2);4,895(0,4);3,903(7,7);3,853(16,0);3,371(1,0);3,341(235,1);2,672(0,4);2,525(1,3);2,521(2,2);2,512(25,0);2,507(49,4);2,503(64,6);2,498(46,6);2,494(21,8);2,330(0,4);0,000(2,4)

### Beispiel No. L14-7: ¹H-NMR (400 MHz, d₆-DMSO δ, ppm)

8,813(1,9);8,812(2,0);8,807(2,0);8,806(1,9);8,292(1,7);8,286(1,6);8,271(1,8);8,265(1,8);7,809(2,2);7,807(2,1);7,788(2,0);7,786(2,0);7,587(2,8);7,585(2,9);7,566(5,2);7,476(2,0);7,457(1,6);7,454(1,4);7,435(1,1);5,252(1,8);5,220(2,2);4,987(2,2);4,955(1,8);3,960(16 ,0);3,903(9,1);3,327(123,2);3,174(0,4);3,162(0,3);2,676(0,3);2,671(0,5);2,666(0,3);2,524(1,5);2,520(2,3);2,511(27,5);2,506(54,7);2,502(72,2);2,497(52,7);2,493(25,3);2,333(0,3);2,329(0,5);0,000(10,2)

### Beispiel No. L14-59: ¹H-NMR (400 MHz, d₆-DMSO δ, ppm)

8,802(1,8);8,800(1,9);8,795(1,9);8,794(1,8);8,277(1,7);8,271(1,6);8,256(1,8);8,250(1,8);7,906(0,4);7,903(0,7);7,898(0,5);7,894(0,4);7,887(0,4);7,809(2,2);7,807(2,2);7,788(2,0);7,786(2,0);7,569(0,5);7,549(0,8);7,531(0,5);7,529(0,5);7,515(0,4);7,510(1,2);7,495(1,2);7,490(0,9);7,475(1,0);7,453(1,8);7,435(0,8);7,357(0,7);7,354(0,7);7,333(1,3);7,330(0,8);7,313(0,6);7,310(0,5);5,094(1,0);5,091(1,0);5,061(1,3);5,058(1,3);4,876(1,2);4,872(1,2);4,843(0,9);4,839(0,9);3,903(3,1);3,896(16,0);3,330(143,9);3,299(0,4);2,676(0,4);2,671(0,5);2,667(0,3);2,541(0,4);2,524(1,6);2,520(2,4);2,511(28,7);2,507(57,5);2,502(76,1);2,497(55,5);2,493(26,6);2,333(0,3);2,329(0,5);2,324(0,3);0,000(9,7)

### Beispiel No. L15-1: ¹H-NMR (400 MHz, d₆-DMSO δ, ppm)

7,519(1,0);7,516(0,8);7,499(1,7);7,427(0,6);7,422(0,7);7,409(0,9);7,404(1,8);7,398(0,8);7,385(2,4);7,355(1,2);7,351(1,2);7,335(1,2);7,331(0,5);7,318(0,4);7,315(0,4);4,910(1,0);4,878(2,8);4,847(2,8);4,815(1,0);4,676(0,5);4,643(4,5);4,637(4,5);4,605(0,4);3,903(5,4);3,653(16,0);3,335(109,2);3,286(17,8);2,525(1,0);2,520(1,6);2,511(18,7);2,507(36,9); 2,502(48,5);2,498(35,2);2,493(16,8);0,000(4,4)

### Beispiel No. L15-3: ¹H-NMR (400 MHz, d₆-DMSO δ, ppm)

7,429(0,3);7,422(3,0);7,418(1,0);7,406(1,1);7,401(4,0);7,395(0,5);7,276(0,5);7,270(3,7);7,265(1,0);7,253(1,0);7,249(2,8);4,763(0,6);4,731(2,9);4,719(2,9);4,687(0,6);4,628(4,8);4,624(4,7);3,902(5,1);3,594(16,0);3,329(93,0);3,270(18,2);2,524(1,0);2,511(18,2);2,506(35,7);2,502(46,5);2,497(33,7);2,493(16,1);0,000(6,0)

### Beispiel No. L15-5: ¹H-NMR (400 MHz, d₆-DMSO δ, ppm)

7,692(1,8);7,689(2,0);7,476(0,4);7,455(3,0);7,450(5,3);7,429(0,3);4,908(0,7);4,876(3,3);4,862(3,3);4,830(0,7);4,650(4,8);4,646(4,9);3,903(6,6);3,713(16,0);3,334(80,1);3,291(18,5);3,168(0,6);2,671(0,4);2,541(0,3);2,524(1,1);2,511(21,7);2,506(43,0);2,502(56,9);2,497(41,6);2,493(20,0);2,329(0,4);0,000(7,8)

### Beispiel No. L15-6: ¹H-NMR (400 MHz, d₆-DMSO δ, ppm)

7,556(1,7);7,550(2,1);7,544(2,5);7,534(3,4);7,502(2,1);7,496(1,7);7,481(0,9);7,475(0,8);4,902(0,4);4,870(3,5);4,863(3,5);4,831(0,4);4,690(0,7);4,658(4,1);4,648(4,1);4,615(0,7);3,903(6,2);3,728(16,0);3,327(83,6);3,294(18,6);2,671(0,3);2,524(1,0);2,519(1,6);2,511(20,3);2,506(40,3);2,502(53,1);2,497(38,7);2,493(18,6);2,329(0,3);0,000(7,9)

### Beispiel No. L15-8: ¹H-NMR (400 MHz, d₆-DMSO δ, ppm)

7,636(2,6);7,616(2,9);7,566(2,4);7,561(2,4);7,272(1,4);7,267(1,3);7,251(1,2);7,246(1,2);4,795(0,4);4,763(3,5);4,757(3,5);4,725(0,4);4,674(0,5);4,642(4,6);4,636(4,5);4,603(0,5);3,903(5,6);3,670(16,0);3,353(0,4);3,328(102,9);3,277(18,0);2,671(0,4);2,524(1,1);2,511(21,2);2,507(41,0);2,502(53,3);2,497(38,9);2,493(18,8);2,329(0,3);0,000(6,7)

### Beispiel No. L15-59: ¹H-NMR (400 MHz, d₆-DMSO δ, ppm)

7,506(0,4);7,490(0,5);7,485(1,1);7,470(1,2);7,465(0,9);7,450(0,9);7,421(1,7);7,402(0,8);7,301(0,7);7,298(0,7);7,278(1,2);7,257(0,6);7,254(0,5);4,968(0,8);4,964(0,7);4,935(1,4);4,931(1,4);4,869(1,4);4,866(1,4);4,836(0,8);4,833(0,8);4,705(1,0);4,672(4,0);4,655(4,0);4,622(1,0);3,903(4,7);3,778(16,0);3,328(90,2);3,309(0,5);3,298(18,0);2,524(0,8);2,519(1,4);2,511(17,1);2,506(33,9);2,502(44,6);2,497(32,4);2,493(15,5);0,000(5,9)

### Beispiel No. L15-76: ¹H-NMR (400 MHz, d₆-DMSO δ, ppm)

7,117(0,9);7,097(2,1);7,073(1,3);7,069(1,3);7,053(0,5);7,049(0,6);6,877(1,7);4,687(3,6);4,682(3,5);4,619(6,3);4,299(0,5);3,902(2,7);3,513(16,0);3,336(43,2);3,281(18,6);3,257(0,9);3,168(0,4);3,123(0,8);2,524(0,8);2,519(1,3);2,511(17,3);2,506(34,5);2,502(45,6);2,497(33,1);2,493(15,8);2,224(8,4);2,193(8,1);0,008(0,6);0,000(17,6);-0,009(0,5)

### Beispiel No. L15-81: ¹H-NMR (400 MHz, d₆-DMSO δ, ppm)

7,839(0,9);7,820(1,1);7,724(0,4);7,706(1,0);7,687(0,7);7,643(0,7);7,624(0,9);7,605(0,4);7,543(1,1);7,524(0,9);4,935(0,4);4,901(1,5);4,881(1,4);4,845(0,4);4,666(8,6);3,902(2,9);3,748(16,0);3,328(59,3);3,303(18,3);2,671(0,3);2,524(1,0);2,520(1,5);2,511(19,5);2,506(39,0);2,502(51,4);2,497(37,5);2,493(18,1);2,329(0,3);0,008(0,4);0,000(12,9);-0,009(0,4)

### Beispiel No. L15-82: ¹H-NMR (400 MHz, d₆-DMSO δ, ppm)

7,737(0,7);7,719(0,9);7,636(1,6);7,614(0,5);7,595(1,3);7,576(1,1);7,567(1,5);7,547(0,5);4,881(0,5);4,850(2,8);4,838(2,8);4,806(0,5);4,653(0,5);4,621(4,3);4,614(4,3);4,582(0,5);3,903(2,9);3,748(0,4);3,593(16,0);3,325(32,1);3,303(0,6);3,266(18,4);3,257(0,3);2,671(0,3);2,524(1,1);2,519(1,7);2,511(20,9);2,506(41,4);2,502(54,2);2,497(39,4);2,493(18,8);2,328(0,3);0,008(0,8);0,000(23,7);-0,009(0,7)

### Beispiel No. L15-83: ¹H-NMR (400 MHz, d₆-DMSO δ, ppm)

7,731(2,3);7,711(2,8);7,494(2,6);7,474(2,3);4,875(0,5);4,843(2,8);4,832(3,0);4,801(0,5);4,625(5,3);4,622(5,1);3,902(2,6);3,588(16,0);3,577(0,9);3,326(75,0);3,316(5,3);3,264(17,8);3,258(1,0);3,253(1,0);2,511(21,7);2,506(40,1);2,502(51,7);2,497(39,0);2,493(21,5);2,329(0,3);0,008(0,7);0,000(13,2);-0,009(0,9)

### Beispiel No. L16-1: ¹H-NMR (400 MHz, d₆-DMSO δ, ppm)

7,598(1,4);7,526(1,6);7,520(0,6);7,507(2,6);7,503(1,3);7,469(3,2);7,444(0,8);7,439(1,0);7,426(1,9);7,421(3,0);7,403(3,9);7,374(1,7);7,371(1,7);7,355(1,9);7,349(0,7);7,341(1,7);7,338(0,8);7,334(0,6);4,937(1,2);4,905(4,3);4,883(4,4);4,851(1,3);3,903(8,4);3,724(16,0);3,369(0,4);3,332(186,8);3,300(0,6);2,686(0,5);2,676(0,4);2,671(0,5);2,667(0,4);2,660(0,3);2,541(0,4);2,524(1,6);2,511(31,2);2,507(61,3);2,502(80,7);2,497(59,3);2,493(28,8);2,333(0,4);2,329(0,5);2,324(0,4);0,000(5,8)

### Beispiel No. L16-5: ¹H-NMR (400 MHz, d₆-DMSO δ, ppm)

7,705(2,4);7,704(2,4);7,702(2,9);7,607(1,4);7,500(0,4);7,479(8,1);7,475(8,8);7,455(0,3);7,351(1,7);4,939(1,0);4,907(5,0);4,895(5,0);4,863(0,9);3,903(9,1);3,808(16,0);3,374(0,4);3,332(217,7);3,305(0,5);2,676(0,4);2,671(0,5);2,667(0,4);2,542(0,5);2,525(1,7);2,520(2,7);2,511(32,2);2,507(63,8);2,502(84,1);2,498(61,2);2,493(29,2);2,334(0,4);2,329(0,5);2,324(0,4);0,000(6,5)

### Beispiel No. L16-59: ¹H-NMR (400 MHz, d₆-DMSO δ, ppm)

7,624(1,5);7,522(0,6);7,507(0,7);7,501(1,8);7,496(3,5);7,486(1,7);7,481(1,3);7,466(1,3);7,433(2,4);7,413(1,3);7,367(1,7);7,322(1,0);7,320(1,0);7,299(1,8);7,278(0,9);7,275(0,8);5,015(1,1);5,011(1,1);4,982(2,0);4,978(2,1);4,907(2,0);4,903(2,0);4,874(1,1);4,870(1,1);3,903(8,4);3,857(16,0);3,370(0,3);3,331(186,7);2,676(0,4);2,671(0,5);2,667(0,4);2,5 41(0,4);2,524(1,7);2,511(30,6);2,507(59,7);2,502(78,0);2,497(56,7);2,493(27,1);2,333(0,4);2,329(0,5);2,324(0,4);0,000(8,9)

### Beispiel No. M8-1: ¹H-NMR (400 MHz, d₆-DMSO δ, ppm)

7,543(1,5);7,539(1,6);7,523(3,2);7,520(3,1);7,513(1,7);7,509(1,9);7,500(1,7);7,495(3,6);7,491(3,5);7,481(3,7);7,476(1,7);7,462(2,0);7,457(1,2);7,448(2,6);7,444(2,6);7,430(2,4);7,426(2,4);7,411(0,8);7,407(0,7);5,219(15,5);3,903(2,5);3,740(16,0);3,739(16,0);3,361(0,4);3,327(235,9);3,300(0,4);3,175(0,5);3,162(0,5);2,675(0,5);2,671(0,7);2,666(0,5);2,524(2,2);2,519(3,4);2,511(41,3);2,506(82,7);2,502(109,7);2,497(80,1);2,493(38,5);2,3 33(0,5);2,328(0,7);2,324(0,5);0,008(0,7);0,000(22,7);-0,009(0,7)

### Beispiel No. M8-6: ¹H-NMR (400 MHz, d₆-DMSO δ, ppm)

7,599(0,3);7,584(5,1);7,580(6,9);7,576(14,4);5,237(15,1);3,902(4,6);3,853(16,0);3,852(16,0);3,323(96,5);2,675(0,5);2,671(0,7);2,666(0,5);2,524(2,1);2,511(41,3);2,506(81,8); 2,502(107,4);2,497(78,3);2,492(37,7);2,333(0,5);2,328(0,7);2,324(0,5);0,008(1,4);0,000(42,9);-0,009(1,4)

### Beispiel No. M8-7: ¹H-NMR (400 MHz, d₆-DMSO δ, ppm)

7,611(4,4);7,608(4,7);7,589(9,7);7,564(0,4);7,526(4,2);7,508(3,0);7,504(2,5);7,486(1,9);5,316(15,6);3,939(0,6);3,903(14,8);3,894(16,0);3,892(15,7);3,326(196,3);2,675(0,6);2,671(0,8);2,666(0,6);2,524(2,7);2,519(4,3);2,511(48,6);2,506(95,0);2,502(124,0);2,497(90,2);2,493(43,2);2,333(0,6);2,328(0,8);2,324(0,5);0,008(0,6);0,000(17,9);-0,009(0,5)

### Beispiel No. M8-8: ¹H-NMR (400 MHz, d₆-DMSO δ, ppm)

7,720(4,6);7,700(5,1);7,591(4,3);7,586(4,4);7,355(2,5);7,350(2,4);7,334(2,2);7,329(2,1);5,172(12,6);3,902(12,7);3,826(16,0);3,381(0,6);3,334(375,8);3,297(0,7);3,175(0,4);3,162(0,4);2,676(0,5);2,671(0,7);2,667(0,5);2,525(2,4);2,511(41,8);2,507(81,8);2,502(108,0);2,498(80,1);2,493(39,7);2,333(0,5);2,329(0,7);2,325(0,5);0,008(0,3);0,000(9,5);-0,009(0,3)

### Beispiel No. M8-59: ¹H-NMR (400 MHz, d₆-DMSO δ, ppm)

7,584(1,0);7,569(1,1);7,563(2,3);7,548(2,4);7,543(1,7);7,527(1,6);7,455(3,3);7,434(2,3);7,385(1,5);7,382(1,4);7,361(2,6);7,340(1,2);7,338(1,1);5,220(8,4);5,216(8,4);3,902(13, 3);3,887(15,9);3,885(16,0);3,386(0,5);3,377(0,5);3,334(367,1);3,295(0,5);2,676(0,5);2,671(0,7);2,667(0,5);2,542(0,6);2,525(2,1);2,520(3,4);2,511(43,0);2,507(85,8);2,502(113,4);2,498(82,6);2,493(39,5);2,334(0,5);2,329(0,7);2,324(0,5);0,000(7,0)

### Beispiel No. M10-7: ¹H-NMR (400 MHz, d₆-DMSO δ, ppm)

8,438(0,4);8,432(3,7);8,427(1,3);8,419(1,4);8,414(4,0);8,407(0,4);7,832(0,5);7,826(3,9);7,821(1,3);7,813(1,3);7,808(3,7);7,801(0,4);7,600(2,4);7,598(2,6);7,579(5,1);7,512(2,2);7,494(1,7);7,490(1,4);7,472(1,1);5,269(7,0);3,903(10,4);3,832(16,0);3,329(168,8);3,174(0,4);3,162(0,4);2,676(0,4);2,671(0,5);2,667(0,4);2,524(1,5);2,520(2,5);2,511(30,9);2,507(61,3);2,502(80,8);2,497(58,9);2,493(28,2);2,333(0,4);2,329(0,5);2,324(0,4);0,008( 0,4);0,000(11,3)

### Beispiel No. M10-8: ¹H-NMR (400 MHz, d₆-DMSO δ, ppm)

8,436(0,4);8,429(3,9);8,424(1,4);8,416(1,4);8,411(4,2);8,405(0,4);7,813(0,5);7,807(4,1);7,802(1,4);7,794(1,4);7,788(3,9);7,782(0,4);7,706(2,7);7,685(3,1);7,635(2,5);7,630(2,5);7,374(1,4);7,369(1,4);7,353(1,3);7,348(1,2);5,149(6,0);3,903(4,3);3,795(16,0);3,329(174,4);2,676(0,4);2,671(0,5);2,667(0,4);2,524(1,6);2,520(2,6);2,511(30,0);2,507(59,8);2,502(79,0);2,497(57,7);2,493(27,8);2,333(0,4);2,329(0,5);2,324(0,4);0,008(0,5);0,000(14,5);-0,009(0,4)

### Beispiel No. M10-76: ¹H-NMR (400 MHz, d₆-DMSO δ, ppm)

8,428(0,4);8,421(3,8);8,416(1,3);8,408(1,4);8,403(4,0);8,397(0,4);7,761(0,5);7,754(4,0);7,749(1,4);7,741(1,4);7,736(3,8);7,730(0,4);7,171(1,0);7,152(2,3);7,128(1,4);7,125(1,4);7,109(0,6);7,105(0,6);6,851(1,9);4,991(6,5);3,903(2,6);3,511(16,0);3,347(90,9);3,312(0,4);3,168(0,7);2,676(0,3);2,671(0,5);2,666(0,3);2,541(0,3);2,524(1,4);2,520(2,2);2,511(26,8);2,506(53,6);2,502(71,1);2,497(51,9);2,493(25,0);2,333(0,3);2,329(0,5);2,324(0,4);2,284(9,0);2,169(8,6);0,008(0,4);0,000(13,7);-0,009(0,4)

### Beispiel No. M10-81: ¹H-NMR (400 MHz, d₆-DMSO δ, ppm)

8,430(0,4);8,424(3,8);8,419(1,4);8,411(1,5);8,406(4,0);8,399(0,4);7,796(0,8);7,782(1,2);7,776(4,7);7,762(1,4);7,757(3,8);7,751(0,4);7,687(0,4);7,673(5,2);7,653(1,1);5,237(6,3 );3,903(10,5);3,771(0,9);3,692(16,0);3,344(218,8);3,304(0,6);3,168(1,2);2,676(0,5);2,6 72(0,6);2,667(0,5);2,542(0,9);2,525(2,0);2,512(37,6);2,507(74,2);2,502(97,5);2,498(71,2);2,493(34,3);2,334(0,4);2,329(0,6);2,325(0,4);0,000(7,1)

### Beispiel No. M10-82: ¹H-NMR (400 MHz, d₆-DMSO δ, ppm)

8,439(0,4);8,432(3,7);8,427(1,3);8,419(1,4);8,414(3,9);8,408(0,4);7,869(1,1);7,849(1,3);7,826(0,5);7,820(4,0);7,815(1,4);7,807(1,4);7,802(3,8);7,796(0,8);7,778(1,1);7,759(0,9);7,706(0,8);7,688(1,1);7,668(1,8);7,649(1,0);5,223(4,7);3,903(2,5);3,806(16,0);3,332(186,5);3,311(0,7);2,676(0,4);2,671(0,5);2,667(0,4);2,525(1,8);2,520(2,9);2,511(31,7);2,507(62,3);2,502(81,8);2,497(59,4);2,493(28,3);2,333(0,4);2,329(0,5);2,324(0,4);0,008(0,5);0,000(15,1);-0,009(0,5)

### Beispiel No. M12-1: ¹H-NMR (400 MHz, d₆-DMSO δ, ppm)

7,486(0,7);7,484(0,6);7,482(0,5);7,473(0,3);7,467(0,3);7,458(0,4);7,452(0,6);7,432(0,5);7,428(0,8);7,426(0,8);7,419(0,8);7,415(0,6);7,403(0,3);7,399(0,4);5,076(3,0);3,902(2,5);3,562(6,2);3,349(63,4);3,169(0,4);2,525(0,4);2,520(0,6);2,512(7,8);2,507(15,6);2,503(20,6);2,498(15,1);2,493(7,2);1,396(16,0);0,000(0,8)

### Beispiel No. M12-3: ¹H-NMR (400 MHz, d₆-DMSO δ, ppm)

7,464(1,3);7,459(0,4);7,448(0,5);7,443(1,6);7,239(1,4);7,234(0,4);7,222(0,4);7,217(1,2);5,004(2,5);3,902(1,0);3,567(6,2);3,330(45,4);2,525(0,4);2,520(0,6);2,511(7,1);2,507(14,0);2,502(18,3);2,497(13,2);2,493(6,2);1,381(16,0);0,000(7,1)

### Beispiel No. M12-5: ¹H-NMR (400 MHz, d₆-DMSO δ, ppm)

7,695(1,0);7,690(1,1);7,547(0,4);7,542(0,4);7,527(0,8);7,521(0,8);7,483(1,3);7,463(0,6);5,105(2,7);3,902(2,6);3,711(6,3);3,331(39,6);2,525(0,4);2,511(8,2);2,507(16,2);2,502( 21,3);2,498(15,6);2,493(7,5);1,410(16,0);1,399(1,0);0,000(2,7)

### Beispiel No. M12-6: ¹H-NMR (400 MHz, d₆-DMSO δ, ppm)

7,540(1,5);7,537(3,1);7,522(0,9);7,520(0,9);7,517(0,5);5,109(2,8);3,902(2,2);3,714(6,3);3,340(77,9);2,525(0,4);2,520(0,7);2,512(8,3);2,507(16,5);2,503(21,6);2,498(15,6);2,494(7,4);1,412(16,0);0,000(0,9)

### Beispiel No. M12-7: ¹H-NMR (400 MHz, d₆-DMSO δ, ppm)

7,579(0,8);7,576(0,9);7,558(1,9);7,501(0,8);7,483(0,6);7,478(0,5);7,460(0,4);5,172(2,9);3,902(3,3);3,747(6,2);3,337(56,8);3,169(0,9);2,525(0,5);2,520(0,8);2,512(10,1);2,507(20,0);2,503(26,3);2,498(19,2);2,493(9,3);1,424(16,0);0,000(2,2)

### Beispiel No. M12-8: ¹H-NMR (400 MHz, d₆-DMSO δ, ppm)

7,694(1,0);7,673(1,1);7,480(0,9);7,475(0,9);7,275(0,5);7,270(0,5);7,255(0,5);7,249(0,5);5,064(2,5);3,903(2,3);3,681(6,3);3,332(64,0);2,525(0,5);2,520(0,8);2,511(8,6);2,507(16,8);2,502(21,8);2,498(15,7);2,493(7,4);1,395(16,0);0,000(2,0)

### Beispiel No. M12-59: ¹H-NMR (400 MHz, d₆-DMSO δ, ppm)

7,536(0,5);7,521(0,5);7,415(0,6);7,395(0,5);7,333(0,5);5,059(1,6);5,056(1,6);3,902(3,3);3,742(6,3);3,338(70,3);3,168(0,4);2,525(0,5);2,520(0,8);2,512(9,1);2,507(17,9);2,502(23,6);2,498(17,2);2,493(8,2);1,421(16,0);0,000(1,6)

### Beispiel No. M12-76: ¹H-NMR (400 MHz, d₆-DMSO δ, ppm)

7,121(2,3);6,829(0,9);4,902(2,9);3,902(0,5);3,405(6,1);3,328(41,4);2,524(0,5);2,511(8,4);2,506(16,4);2,502(21,4);2,497(15,7);2,493(7,6);2,191(3,6);2,147(3,7);1,371(16,0);0,000(5,2)

### Beispiel No. M13-1: ¹H-NMR (400 MHz, d₆-DMSO δ, ppm)

8,767(1,9);8,766(1,9);8,761(2,0);8,760(1,8);8,244(1,7);8,238(1,6);8,223(1,8);8,217(1,8);7,816(2,2);7,814(2,1);7,795(2,0);7,794(2,0);7,548(1,0);7,543(1,1);7,528(1,5);7,524(1,7);7,519(1,0);7,514(0,9);7,501(1,4);7,496(1,6);7,484(0,6);7,479(0,7);7,466(1,6);7,461(1,1);7,447(1,2);7,441(1,8);7,436(1,3);7,422(1,3);7,418(1,2);7,403(0,4);7,400(0,4);5,179(7,0);3,902(6,8);3,662(16,0);3,387(0,4);3,381(0,4);3,340(251,8);3,303(0,5);2,672(0,4);2,5 25(1,2);2,520(1,9);2,512(24,8);2,507(49,2);2,503(64,8);2,498(47,2);2,494(22,6);2,329(0,4);0,000(2,0)

### Beispiel No. M13-3: ¹H-NMR (400 MHz, d₆-DMSO δ, ppm)

8,741(1,8);8,739(1,8);8,734(1,9);8,733(1,7);8,205(1,6);8,199(1,5);8,184(1,7);8,178(1,7);7,748(2,1);7,746(2,0);7,727(1,9);7,725(1,8);7,424(1,3);7,418(0,6);7,408(1,0);7,402(5,5);7,392(1,5);7,388(6,1);7,382(1,0);7,372(0,7);7,366(1,3);4,417(7,1);3,903(1,5);3,539(16 ,0);3,358(0,4);3,330(102,7);2,525(1,0);2,520(1,7);2,511(19,4);2,507(38,2);2,502(50,2);2,498(36,6);2,493(17,6);0,008(0,4);0,000(12,7);-0,009(0,4)

### Beispiel No. M13-5: ¹H-NMR (400 MHz, d₆-DMSO δ, ppm)

8,785(2,1);8,780(2,2);8,266(1,7);8,260(1,6);8,245(1,8);8,239(1,8);7,823(2,4);7,821(2,4);7,802(2,2);7,800(2,1);7,732(1,9);7,729(2,9);7,727(1,8);7,549(6,3);7,546(6,9);5,195(7,4);3,903(2,2);3,765(16,0);3,327(137,0);2,675(0,4);2,671(0,5);2,666(0,4);2,524(2,0);2,511(33,1);2,506(64,1);2,502(83,3);2,497(60,9);2,493(29,5);2,333(0,4);2,329(0,5);2,324(0,4);0,008(0,6);0,000(16,4);-0,009(0,6)

### Beispiel No. M13-7: ¹H-NMR (400 MHz, d₆-DMSO δ, ppm)

8,797(1,9);8,795(1,9);8,791(2,0);8,789(1,8);8,277(1,7);8,271(1,6);8,256(1,8);8,250(1,8);7,824(2,3);7,822(2,1);7,803(2,1);7,802(2,0);7,605(2,5);7,602(2,6);7,583(5,2);7,513(2,2);7,495(1,6);7,491(1,4);7,473(1,1);5,277(7,1);3,903(8,1);3,794(16,0);3,338(225,6);3,169(0,6);2,672(0,4);2,525(1,3);2,520(2,1);2,512(26,8);2,507(53,4);2,503(70,4);2,498(51,1);2,493(24,4);2,334(0,3);2,329(0,5);0,000(3,4)

### Beispiel No. M13-8: ¹H-NMR (400 MHz, d₆-DMSO δ, ppm)

8,777(2,0);8,775(2,1);8,771(2,1);8,769(2,0);8,257(1,7);8,251(1,6);8,237(1,8);8,230(1,8);7,821(2,3);7,819(2,3);7,800(2,1);7,798(2,1);7,712(2,7);7,691(3,1);7,644(2,5);7,639(2,6);7,375(1,5);7,370(1,4);7,355(1,3);7,349(1,3);5,160(6,4);3,903(2,6);3,751(16,0);3,328(146,0);2,676(0,4);2,671(0,5);2,667(0,4);2,524(2,0);2,511(32,0);2,507(61,9);2,502(80,8);2,497(59,6);2,493(29,3);2,333(0,4);2,329(0,5);2,324(0,4);0,008(0,8);0,000(20,2);-0,009(0,6)

### Beispiel No. M13-59: ¹H-NMR (400 MHz, d₆-DMSO δ, ppm)

8,787(1,8);8,786(2,0);8,781(1,9);8,780(1,9);8,266(1,7);8,260(1,6);8,245(1,8);8,239(1,8);7,825(2,1);7,824(2,2);7,804(2,0);7,803(2,0);7,574(0,5);7,559(0,5);7,553(1,2);7,538(1,2);7,533(0,9);7,517(0,8);7,449(1,8);7,429(1,2);7,392(0,8);7,390(0,8);7,368(1,4);7,348(0,6);7,345(0,6);5,166(4,2);5,163(4,2);3,903(4,1);3,788(16,0);3,332(181,0);3,304(1,3);2,671(0,4);2,525(1,2);2,511(23,2);2,507(46,5);2,502(61,5);2,498(44,7);2,493(21,4);2,329(0,4);0,008(0,3);0,000(10,9);-0,009(0,3)

### Beispiel No. M13-71: ¹H-NMR (400 MHz, d₆-DMSO δ, ppm)

8,737(1,9);8,736(2,0);8,731(2,0);8,730(1,9);8,211(1,7);8,204(1,6);8,190(1,9);8,184(1,9);7,811(2,2);7,809(2,2);7,790(2,0);7,788(2,1);7,333(0,4);7,317(1,0);7,314(1,0);7,300(1,4);7,297(1,5);7,287(1,7);7,272(0,6);7,213(0,5);7,208(0,5);7,194(1,0);7,190(1,0);7,177(0,6);7,173(0,6);7,132(1,5);7,114(0,9);5,067(6,8);3,902(1,7);3,503(16,0);3,403(0,5);3,329(132,3);2,671(0,4);2,524(1,3);2,519(2,2);2,511(24,6);2,506(48,6);2,502(63,9);2,497(46,6);2,493(22,3);2,340(10,5);2,328(0,7);2,299(0,3);0,008(0,4);0,000(11,9);-0,009(0,4)

### Beispiel No. M13-76: ¹H-NMR (400 MHz, d₆-DMSO δ, ppm)

8,735(1,9);8,734(2,1);8,729(2,1);8,727(2,0);8,208(1,7);8,201(1,7);8,187(1,9);8,181(1,9);7,816(2,3);7,815(2,3);7,795(2,1);7,794(2,1);7,174(1,0);7,154(2,4);7,129(1,4);7,126(1,4);7,107(0,6);6,879(2,0);5,001(6,9);3,902(1,6);3,490(16,0);3,370(0,3);3,329(208,7);2,676(0,4);2,671(0,5);2,666(0,4);2,524(1,6);2,519(2,6);2,511(28,8);2,506(57,1);2,502(75,2);2,497(54,6);2,493(26,0);2,333(0,4);2,329(0,5);2,324(0,3);2,288(9,2);2,176(8,8);0,008(0,4);0,000(11,3);-0,009(0,3)

### Beispiel No. M15-3: ¹H-NMR (400 MHz, d₆-DMSO δ, ppm)

7,463(0,4);7,456(3,2);7,451(1,0);7,440(1,1);7,435(4,1);7,429(0,5);7,274(0,5);7,268(3,6);7,263(1,0);7,251(1,0);7,246(2,8);5,049(6,2);4,642(9,0);3,903(5,5);3,671(0,3);3,527(16,0);3,386(0,5);3,328(89,3);3,269(18,5);3,257(0,3);3,253(0,5);3,188(0,4);2,524(1,0);2,520(1,6);2,511(19,2);2,506(38,2);2,502(50,3);2,497(36,4);2,493(17,2);0,000(7,6)

### Beispiel No. M15-5: ¹H-NMR (400 MHz, d₆-DMSO δ, ppm)

7,686(2,3);7,681(2,4);7,537(0,9);7,532(0,8);7,516(2,1);7,511(2,1);7,488(3,3);7,467(1,3);5,143(6,8);4,675(8,9);3,902(7,2);3,646(16,0);3,369(0,3);3,330(168,6);3,311(1,1);3,302(19,2);2,676(0,3);2,671(0,4);2,666(0,3);2,524(1,4);2,511(27,4);2,507(53,3);2,502(69,6);2,497(50,6);2,493(24,2);2,329(0,4);0,000(7,3)

### Beispiel No. M15-6: ¹H-NMR (400 MHz, d₆-DMSO δ, ppm)

7,559(3,5);7,554(2,3);7,540(3,6);7,535(6,7);7,530(1,2);5,150(7,0);4,678(8,7);3,902(5,8);3,665(16,0);3,382(0,6);3,342(210,7);3,304(19,0);2,672(0,4);2,525(1,2);2,520(1,8);2,512(21,1);2,507(41,7);2,503(54,7);2,498(39,7);2,494(18,8);2,330(0,3);0,000(1,6)

### Beispiel No. M15-7: ¹H-NMR (400 MHz, d₆-DMSO δ, ppm)

7,574(2,0);7,570(2,2);7,552(4,8);7,502(2,2);7,484(1,5);7,479(1,2);7,461(0,9);5,212(7,4);4,695(9,0);3,903(5,7);3,688(16,0);3,379(0,4);3,336(169,8);3,316(18,8);3,174(0,3);2,671(0,3);2,525(1,0);2,520(1,7);2,511(19,7);2,507(39,0);2,502(51,5);2,498(37,7);2,493(18,2);0,000(2,6)

### Beispiel No. M15-8: ¹H-NMR (400 MHz, d₆-DMSO δ, ppm)

7,679(2,6);7,658(2,9);7,552(2,3);7,547(2,4);7,276(1,4);7,271(1,3);7,255(1,2);7,250(1,2);5,107(6,6);4,660(9,1);3,903(6,7);3,636(16,0);3,326(94,0);3,280(18,3);2,671(0,4);2,524(1,2);2,511(22,2);2,506(43,8);2,502(57,7);2,497(42,5);2,493(20,8);2,329(0,4);0,000 (8,1)

### Beispiel No. M15-59: ¹H-NMR (400 MHz, d₆-DMSO δ, ppm)

7,558(0,5);7,542(0,5);7,537(1,1);7,522(1,1);7,516(0,8);7,501(0,7);7,415(1,6);7,394(1,1);7,357(0,3);7,342(0,8);7,340(0,8);7,319(1,2);7,298(0,6);7,295(0,5);5,777(0,5);5,149(0,9);5,103(3,8);5,100(3,8);4,983(0,4);4,979(0,4);4,689(8,8);4,433(0,5);4,430(0,5);4,259(1,0);3,903(7,7);3,778(1,8);3,675(16,0);3,462(2,2);3,428(0,4);3,337(83,1);3,309(18,6);3,298(0,4);3,291(0,4);3,244(0,5);3,214(2,1);3,167(2,1);2,671(0,4);2,524(1,3);2,520(2,0);2,511(24,7);2,506(49,0);2,502(64,4);2,497(46,7);2,493(22,1);2,329(0,4);0,000(8,9)

### Beispiel No. M15-71: ¹H-NMR (400 MHz, d₆-DMSO δ, ppm)

7,325(0,6);7,322(0,7);7,306(1,7);7,303(1,8);7,288(1,5);7,285(1,5);7,254(2,2);7,236(1,1);7,173(0,8);7,170(0,8);7,154(1,7);7,136(0,9);7,133(0,9);7,048(2,0);7,046(2,1);7,029(1,5);5,006(11,5);4,631(15,2);3,902(8,2);3,382(0,3);3,362(25,6);3,331(222,4);3,302(0,5);3,283(0,4);3,272(30,0);3,175(0,4);3,162(0,4);2,676(0,4);2,671(0,5);2,666(0,4);2,524(1,5);2,519(2,4);2,511(30,4);2,507(60,4);2,502(79,8);2,497(58,3);2,493(28,1);2,333(0,4);2,329(0,5);2,324(0,4);2,250(16,0);0,000(7,1)

### Beispiel No. M16-5: ¹H-NMR (400 MHz, d₆-DMSO δ, ppm)

7,712(3,2);7,707(3,3);7,639(1,4);7,558(1,1);7,553(0,9);7,537(3,4);7,532(3,5);7,518(5,1);7,511(3,7);7,497(1,5);7,384(1,7);5,209(10,1);3,902(1,9);3,800(16,0);3,329(206,8);2,676(0,4);2,671(0,5);2,666(0,4);2,524(1,6);2,519(2,6);2,511(31,2);2,506(62,2);2,502(82,2); 2,497(59,8);2,493(28,7);2,333(0,4);2,329(0,5);2,324(0,4);0,008(0,5);0,000(15,5);-0,009(0,5)

### Beispiel No. M16-59: ¹H-NMR (400 MHz, d₆-DMSO δ, ppm)

7,657(1,5);7,572(0,7);7,556(0,8);7,551(1,7);7,536(1,9);7,529(4,1);7,515(1,1);7,433(2,3);7,412(1,7);7,401(1,8);7,365(1,1);7,362(1,0);7,341(1,9);7,320(0,9);7,318(0,8);5,180(5,9);5,177(5,9);3,902(1,8);3,827(16,0);3,328(180,4);2,676(0,4);2,671(0,5);2,666(0,4);2,524(1,7);2,519(2,8);2,511(30,1);2,506(59,4);2,502(78,0);2,497(56,5);2,493(26,8);2,333(0, 4);2,329(0,5);2,324(0,4);0,008(0,5);0,000(14,9);-0,009(0,4)

### Beispiel No. M16-144: ¹H-NMR (400 MHz, d₆-DMSO δ, ppm)

7,626(1,5);7,521(0,9);7,519(0,9);7,498(4,6);7,487(1,1);7,482(1,9);7,475(1,2);7,471(1,0);7,466(2,7);7,461(3,0);7,457(1,9);7,449(1,6);7,444(0,4);7,429(1,8);7,425(1,7);7,420(0,4);7,413(1,0);7,407(1,6);7,393(0,6);7,389(0,5);7,371(1,7);5,188(10,7);3,902(1,8);3,674(16,0);3,329(178,5);2,675(0,4);2,671(0,6);2,667(0,4);2,524(1,6);2,511(32,0);2,506(63,4);2,502(83,6);2,497(61,1);2,493(29,7);2,333(0,4);2,329(0,5);2,324(0,4);0,008(0,6);0,000(17,2);-0,009(0,5)

### Beispiel No. Q1-1: ¹H-NMR (400 MHz, d₆-DMSO δ, ppm)

7,516(1,3);7,510(0,7);7,505(0,4);7,499(0,5);7,494(1,6);7,487(0,6);7,455(0,4);7,451(0,5);7,436(0,4);7,432(0,6);7,329(0,5);7,324(0,5);7,310(0,7);7,304(0,8);7,288(1,6);7,283(0,4);7,271(0,5);7,266(1,5);7,196(1,5);7,191(0,4);7,179(0,4);7,174(1,3);6,903(1,5);6,898(0,4);6,886(0,4);6,881(1,3);4,443(2,5);3,902(3,3);3,733(6,4);3,346(81,1);3,169(0,4);2,525(0,6);2,520(0,9);2,512(10,6);2,507(20,9);2,503(27,3);2,498(19,6);2,494(9,3);1,329(0,8);1,299(16,0);1,245(0,8);0,000(0,9)

### Beispiel No. Q1-2: ¹H-NMR (400 MHz, d₆-DMSO δ, ppm)

7,525(1,3);7,520(0,4);7,508(0,4);7,503(1,5);7,425(0,8);7,336(0,4);7,331(0,3);7,325(1,9);7,322(2,0);7,318(0,9);7,314(0,8);7,307(0,4);7,304(0,3);7,285(1,3);7,280(0,4);7,268(0,4);7,262(1,5);7,194(1,5);7,189(0,4);7,177(0,4);7,172(1,3);6,901(1,5);6,895(0,4);6,883(0,4);6,878(1,3);4,368(2,4);3,903(6,1);3,731(6,4);3,395(2,5);3,389(2,3);2,524(0,6);2,519(0,9);2,511(11,0);2,506(21,9);2,502(28,8);2,497(20,9);2,493(10,0);1,332(2,0);1,302(16,0);1,245(2,0);0,000(8,0)

### Beispiel No. Q1-3: ¹H-NMR (400 MHz, d₆-DMSO δ, ppm)

8,308(3,7);6,833(6,2);3,994(8,5);3,902(2,1);3,807(16,0);3,719(10,5);3,576(0,5);3,572(0,5);3,328(77,5);3,175(0,3);2,524(0,9);2,511(16,0);2,507(31,1);2,502(40,5);2,497(29,4); 2,493(14,0);0,000(8,4)

### Beispiel No. Q1-7: ¹H-NMR (400 MHz, d₆-DMSO δ, ppm)

7,502(1,2);7,497(0,4);7,485(0,4);7,480(1,5);7,467(0,9);7,465(1,0);7,446(1,8);7,413(0,3);7,366(0,8);7,348(0,6);7,344(0,7);7,326(0,5);7,306(1,3);7,301(0,4);7,289(0,4);7,284(1,5);7,256(0,4);7,231(1,5);7,226(0,4);7,215(0,4);7,209(1,2);6,917(1,4);6,912(0,4);6,900(0,4);6,895(1,3);4,464(2,4);4,248(0,4);3,903(3,7);3,741(6,1);3,343(204,6);3,168(1,1);2,676(0,5);2,671(0,6);2,667(0,4);2,542(0,5);2,525(2,0);2,520(3,1);2,511(38,0);2,507(75,7);2,502(99,9);2,498(73,1);2,493(35,4);2,334(0,5);2,329(0,6);2,324(0,5);1,327(2,9);1,296(16,0);1,248(2,9);0,008(0,4);0,000(13,3);-0,009(0,4)

### Beispiel No. Q1-59: ¹H-NMR (400 MHz, d₆-DMSO δ, ppm)

7,513(1,3);7,508(0,4);7,496(0,5);7,491(1,5);7,397(0,5);7,382(0,5);7,377(0,4);7,362(0,4);7,332(0,7);7,312(0,4);7,299(1,3);7,293(0,4);7,281(0,5);7,276(1,5);7,223(1,7);7,219(0,9);7,206(0,5);7,201(1,3);7,195(0,4);6,914(1,5);6,908(0,5);6,896(0,4);6,891(1,3);4,366(1,6);4,363(1,6);3,903(3,4);3,739(6,3);3,346(88,9);3,169(0,4);2,525(0,6);2,512(11,4);2,507(22,2);2,503(29,1);2,498(21,3);2,494(10,4);1,299(16,0);0,000(0,6)

### Beispiel No. Q1-82: ¹H-NMR (400 MHz, d₆-DMSO δ, ppm)

7,713(0,6);7,660(0,4);7,640(0,7);7,618(0,4);7,557(0,4);7,538(0,5);7,506(1,3);7,501(0,4);7,490(0,4);7,485(1,5);7,271(1,3);7,266(0,4);7,254(0,4);7,249(1,5);7,147(1,5);7,142(0,4);7,130(0,4);7,125(1,3);6,896(1,5);6,891(0,4);6,879(0,4);6,874(1,3);4,452(2,1);3,903(1,1);3,729(6,4);3,331(57,5);2,525(0,6);2,520(1,0);2,511(12,1);2,507(24,1);2,502(31,9);2,498(23,2);2,493(11,1);1,322(0,5);1,295(16,0);1,241(0,5);0,000(6,8)

### Beispiel No. Q1-83: ¹H-NMR (400 MHz, d₆-DMSO δ, ppm)

7,679(0,7);7,659(1,2);7,604(1,1);7,583(0,6);7,521(1,3);7,516(0,4);7,505(0,5);7,500(1,5);7,283(1,3);7,278(0,4);7,266(0,5);7,261(1,5);7,220(1,5);7,215(0,5);7,204(0,5);7,199(1,3);6,899(1,5);6,894(0,4);6,882(0,4);6,877(1,3);4,464(1,9);3,903(1,3);3,730(6,3);3,327(45 ,3);2,524(0,8);2,511(13,4);2,506(26,4);2,502(34,7);2,497(25,4);2,493(12,4);1,326(0,9);1,300(16,0);1,239(0,9);0,000(9,2)

### Beispiel No. Q1-143: ¹H-NMR (400 MHz, d₆-DMSO δ, ppm)

7,515(1,0);7,499(0,3);7,494(1,1);7,326(0,7);7,305(1,4);7,288(1,2);7,283(0,4);7,271(0,4);7,265(1,4);7,259(1,3);7,254(0,4);7,246(0,3);7,242(0,5);7,238(0,7);7,192(1,2);7,187(0,4);7,176(0,3);7,171(1,2);6,902(1,1);6,897(0,4);6,880(1,0);4,342(1,7);4,179(0,4);3,903(2,1);3,733(5,0);3,341(40,1);3,168(1,6);2,524(0,9);2,520(1,4);2,511(17,6);2,506(35,4);2,502(47,0);2,497(34,2);2,493(16,4);1,325(2,9);1,297(12,6);1,290(2,3);1,251(16,0);1,244( 3,4);1,224(2,1);0,000(9,9)

Weiterer Gegenstand der vorliegenden Erfindung ist die Verwendung mindestens einer erfindungsgemäßen Verbindung, ausgewählt aus der Gruppe, bestehend aus substituierten Thio-1,2,4-triazolen der allgemeinen Formel (I), sowie von beliebigen Mischungen dieser erfindungsgemäßen substituierten Thio-1,2,4-triazole der allgemeinen Formel (I) mit weiteren agrochemischen Wirkstoffen wie beispielsweise Fungizide, Insektizide, Herbizide, Pflanzenwachstumsregulatoren oder Safener, zur Steigerung der Widerstandsfähigkeit von Pflanzen gegenüber abiotischen Stressfaktoren, bevorzugt Trockenstress, sowie zur Stärkung des Pflanzenwachstums und/oder zur Erhöhung des Pflanzenertrags.

Weiterer Gegenstand der vorliegenden Erfindung ist die Verwendung einer Sprühlösung zur Behandlung von Pflanzen, enthaltend eine zur Steigerung der Widerstandsfähigkeit von Pflanzen gegenüber abiotischen Stressfaktoren wirksame Menge von mindestens einer Verbindung, ausgewählt aus der Gruppe, bestehend aus den erfindungsgemäß substituierten Thio-1,2,4-triazolen, der allgemeinen Formel (I). Zu den dabei relativierbaren abiotischen Stressbedingungen können zum Beispiel Hitze, Dürre, Kälte- und Trockenstress (Stress verursacht durch Trockenheit und/oder Wassermangel), osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen zählen.

In einer Ausführungsform kann beispielsweise vorgesehen sein, dass die erfindungsgemäß zu verwendenden substituierten Thio-1,2,4-triazole der allgemeinen Formel (I), durch eine Sprühapplikation auf entsprechend zu behandelnde Pflanzen oder Pflanzenteile aufgebracht werden. Die erfindungsgemäß vorgesehene Verwendung der Verbindungen der allgemeinen Formel (I) oder deren Salze erfolgt vorzugsweise mit einer Dosierung zwischen 0,00005 und 3 kg/ha, besonders bevorzugt zwischen 0,0001 und 2 kg/ha, insbesondere bevorzugt zwischen 0,0005 und 1 kg/ha, im Speziellen bevorzugt zwischen 0,001 und 0,25 kg/ha.

Unter der Bezeichnung Resistenz bzw. Widerstandsfähigkeit gegenüber abiotischem Stress werden im Rahmen der vorliegenden Erfindung verschiedenartige Vorteile für Pflanzen verstanden. Solche vorteilhaften Eigenschaften äußern sich beispielsweise in den nachfolgend genannten verbesserten Pflanzencharakteristika: verbessertes Wurzelwachstum hinsichtlich Oberfläche und Tiefe, vermehrte Ausläuferbildung oder Bestockung, stärkere und produktivere Ausläufer und Bestockungstriebe, Verbesserung des Sprosswachstums, erhöhte Standfestigkeit, vergrößerte Sprossbasisdurchmesser, vergrößerte Blattfläche, höhere Erträge an Nähr- und Inhaltsstoffen, wie z.B. Kohlenhydrate, Fette, Öle, Proteine, Vitamine, Mineralstoffe, ätherische Öle, Farbstoffe, Fasern, bessere Faserqualität, früheres Blühen, gesteigerte Blütenanzahl, reduzierter Gehalt an toxischen Produkten wie Mycotoxine, reduzierter Gehalt an Rückständen oder unvorteilhaften Bestandteilen jeglicher Art oder bessere Verdaulichkeit, verbesserte Lagerstabilität des Erntegutes, verbesserter Toleranz gegenüber unvorteilhaften Temperaturen, verbesserter Toleranz gegenüber Dürre und Trockenheit, wie auch Sauerstoffmangel durch Wasserüberschuss, verbesserte Toleranz gegenüber erhöhten Salzgehalten in Böden und Wasser, gesteigerte Toleranz gegenüber Ozonstress, verbesserte Verträglichkeit gegenüber Herbiziden und anderen Pflanzenbehandlungsmitteln, verbesserte Wasseraufnahme und Photosyntheseleistung, vorteilhafte Pflanzeneigenschaften, wie beispielsweise Beschleunigung der Reifung, gleichmäßigere Abreife, größere Anziehungskraft für Nützlinge, verbesserte Bestäubung oder andere Vorteile, die einem Fachmann durchaus bekannt sind.

Insbesondere zeigt die erfindungsgemäße Verwendung einer oder mehrerer Verbindungen der allgemeinen Formel (I) in der Sprühapplikation auf Pflanzen und Pflanzenteilen die beschriebenen Vorteile. Die kombinierte Verwendung von erfindungsgemäßen substituierten Thio-1,2,4-triazolen der allgemeinen Formel (I) mit gentechnisch veränderten Sorten in Bezug auf erhöhte abiotische Stresstoleranz ist darüber hinaus ebenfalls möglich.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Im Rahmen der vorliegenden Erfindung wird unter einem guten Effekt auf die Widerstandsfähigkeit gegenüber abiotischem Stress nicht beschränkend
- mindestens ein um im Allgemeinen 3 %, insbesondere größer als 5 % besonders bevorzugt größer als 10 % verbessertes Auflaufen,
- mindestens einen im Allgemeinen 3 %, insbesondere größer als 5 % besonders bevorzugt größer als 10 % gesteigerten Ertrag,
- mindestens eine um im Allgemeinen 3 %, insbesondere größer als 5 % besonders bevorzugt größer als 10 % verbesserte Wurzelentwicklung,
- mindestens eine um im Allgemeinen 3 %, insbesondere größer als 5 % besonders bevorzugt größer als 10 % ansteigende Sprossgröße,
- mindestens eine um im Allgemeinen 3 %, insbesondere größer als 5 % besonders bevorzugt größer als 10 % vergrößerte Blattfläche,
- mindestens eine um im Allgemeinen 3 %, insbesondere größer als 5 % besonders bevorzugt größer als 10 % verbesserte Photosyntheseleistung und/oder
- mindestens eine um im Allgemeinen 3 %, insbesondere größer als 5 % besonders bevorzugt größer als 10 % verbesserte Blütenausbildung
verstanden, wobei die Effekte einzeln oder aber in beliebiger Kombination von zwei oder mehreren Effekten auftreten können.

Weiterer Gegenstand der vorliegenden Erfindung ist eine Sprühlösung zur Behandlung von Pflanzen, enthaltend eine zur Steigerung der Widerstandsfähigkeit von Pflanzen gegenüber abiotischen Stressfaktoren wirksame Menge von mindestens einer Verbindung aus der Gruppe der erfindungsgemäß substituierten Thio-1,2,4-triazole der allgemeinen Formel (I). Die Sprühlösung kann andere übliche Bestandteile aufweisen, wie Lösungsmittel, Formulierhilfsstoffe, insbesondere Wasser, enthalten. Weitere Bestandteile können unter anderem agrochemische Wirkstoffe sein, welche unten noch weiter beschrieben werden.

Weiterer Gegenstand der vorliegenden Erfindung ist die Verwendung von entsprechenden Sprühlösungen zur Steigerung der Widerstandsfähigkeit von Pflanzen gegenüber abiotischen Stressfaktoren. Die nachfolgenden Ausführungen gelten sowohl für die erfindungsgemäße Verwendung einer oder mehrerer Verbindungen der allgemeinen Formel (I) an sich als auch für die entsprechenden Sprühlösungen.

Erfindunsgemäß wurde darüber hinaus gefunden, dass die erfindungsgemäße Anwendung einer oder mehrerer Verbindungen der allgemeinen Formel (I) in Kombination mit mindestens einem Düngemittel wie weiter unten stehend definiert auf Pflanzen oder in deren Umgebung möglich ist.

Düngemittel, die erfindungsgemäß zusammen mit den oben näher erläuterten Verbindungen der allgemeinen Formel (I) verwendet werden können, sind im Allgemeinen organische und anorganische Stickstoff-haltige Verbindungen wie beispielsweise Harnstoffe, Harnstoff-Formaldehyd-Kondensationsprodukte, Aminosäuren, Ammoniumsalze und -nitrate, Kaliumsalze (bevorzugt Chloride, Sulfate, Nitrate), Phosphorsäuresalze und/oder Salze von Phosphoriger Säure (bevorzugt Kaliumsalze und Ammoniumsalze). Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Calcium enthalten, Ammonsulfatsalpeter (Allgemeine Formel (NH₄)₂SO₄ NH₄NO₃), Ammonphosphat und Ammonsulfat. Diese Düngemittel sind dem Fachmann allgemein bekannt, siehe auch beispielsweise Ullmann's Encyclopedia of Industrial Chemistry, 5. Edition, Vol. A 10, Seiten 323 bis 431, Verlagsgesellschaft, Weinheim, 1987.

Die Düngemittel können auch Salze aus Mikronährstoffen (bevorzugt Calcium, Schwefel, Bor, Mangan, Magnesium, Eisen, Bor, Kupfer, Zink, Molybdän und Kobalt) und Phytohormonen (z. B. Vitamin B1 und Indol-(III)essigsäure) oder Gemische davon enthalten. Erfindungsgemäß eingesetzte Düngemittel können auch weitere Salze wie Monoammoniumphosphat (MAP), Diammoniumphosphat (DAP), Kaliumsulfat, Kaliumchlorid, Magnesiumsulfat enthalten. Geeignete Mengen für die sekundären Nährstoffe oder Spurenelemente sind Mengen von 0,5 bis 5 Gew.-%, bezogen auf das gesamte Düngemittel. Weitere mögliche Inhaltsstoffe sind Pflanzenschutzmittel, wie beispielsweise Fungizide, Insektizide, Herbizide, Pflanzenwachstumsregulatoren oder Safener, oder Gemische davon. Hierzu folgen weiter unten weitergehende Ausführungen.

Die Düngemittel können beispielsweise in Form von Pulvern, Granulaten, Prills oder Kompaktaten eingesetzt werden. Die Düngemittel können jedoch auch in flüssiger Form, gelöst in einem wässrigen Medium, eingesetzt werden. In diesem Fall kann auch verdünnter wässriger Ammoniak als Stickstoffdüngemittel eingesetzt werden. Weitere mögliche Inhaltsstoffe für Düngemittel sind beispielsweise in Ullmann's Encyclopedia of Industrial Chemistry, 5. Auflage, 1987, Band A 10, Seiten 363 bis 401, DE-A 41 28 828, DE-A 19 05 834 und DE-A 196 31 764 beschrieben. Die allgemeine Zusammensetzung der Düngemittel, bei welchen es sich im Rahmen der vorliegenden Erfindung um Einzelnährstoff- und/oder Mehrnährstoffdünger handeln kann, beispielsweise aus Stickstoff, Kalium oder Phosphor, kann innerhalb eines breiten Bereichs variieren. Im Allgemeinen ist ein Gehalt von 1 bis 30 Gew.-% Stickstoff (bevorzugt 5 bis 20 Gew.-%), von 1 bis 20 Gew.-% Kalium (bevorzugt 3 bis 15 Gew.-%) und ein Gehalt von 1 bis 20 Gew.-% Phosphor (bevorzugt 3 bis 10 Gew.-%) vorteilhaft. Der Gehalt von Mikroelementen ist üblicherweise im ppm-Bereich, bevorzugt im Bereich von von 1 bis 1000 ppm.

Im Rahmen der vorliegenden Erfindung können das Düngemittel sowie eine oder mehrere Verbindungen der allgemeinen Formel (I) zeitgleich verabreicht werden. Es ist jedoch auch möglich, zunächst das Düngemittel und dann eine oder mehrere Verbindungen der allgemeinen Formel (I) oder zunächst eine oder mehrere Verbindungen der allgemeinen Formel (I) und dann das Düngemittel anzuwenden. Bei nicht zeitgleicher Anwendung einer oder mehrerer Verbindungen der allgemeinen Formel (I) und des Düngemittels erfolgt im Rahmen der vorliegenden Erfindung jedoch die Anwendung in funktionellem Zusammenhang, insbesondere innerhalb eines Zeitraums von im Allgemeinen 24 Stunden, bevorzugt 18 Stunden, besonders bevorzugt 12 Stunden, speziell 6 Stunden, noch spezieller 4 Stunden, noch weiter spezieller innerhalb 2 Stunden. In ganz besonderen Ausführungsformen der vorliegenden Erfindung erfolgt die Anwendung einer oder mehrerer Verbindungen der Formel (I) und des Düngemittels in einem zeitlichen Rahmen von weniger als 1 Stunden, vorzugsweise weniger als 30 Minuten, besonders bevorzugt weniger als 15 Minuten.

Bevorzugt ist die erfindungsgemäße Verwendung von Verbindungen der allgemeinen Formel (I) auf Pflanzen aus der Gruppe der Nutzpflanzen, Zierpflanzen, Rasenarten, allgemein genutzte Bäume, die in öffentlichen und privaten Bereichen als Zierpflanzen Verwendungen finden, und Forstbestand. Der Forstbestand umfasst Bäume für die Herstellung von Holz, Zellstoff, Papier und Produkten die aus Teilen der Bäume hergestellt werden. Der Begriff Nutzpflanzen, wie hier verwendet, bezeichnet Kulturpflanzen, die als Pflanzen für die Gewinnung von Nahrungsmitteln, Futtermitteln, Treibstoffe oder für technische Zwecke eingesetzt werden.

Zu den Nutzpflanzen zählen z. B. folgende Pflanzenarten: Triticale, Durum (Hartweizen), Turf, Reben, Getreide, beispielsweise Weizen, Gerste, Roggen, Hafer, Reis, Mais und Hirse; Rüben, beispielsweise Zuckerrüben und Futterrüben; Früchte, beispielsweise Kernobst, Steinobst und Beerenobst, beispielsweise Äpfel, Birnen, Pflaumen, Pfirsiche, Mandeln, Kirschen und Beeren, z. B. Erdbeeren, Himbeeren, Brombeeren; Hülsenfrüchte, beispielsweise Bohnen, Linsen, Erbsen und Sojabohnen; Ölkulturen, beispielsweise Raps, Senf, Mohn, Oliven, Sonnenblumen, Kokos, Castorölpflanzen, Kakaobohnen und Erdnüsse; Gurkengewächse, beispielsweise Kürbis, Gurken und Melonen; Fasergewächse, beispielsweise Baumwolle, Flachs, Hanf und Jute; Citrusfrüchte, beispielsweise Orangen, Zitronen, Pampelmusen und Mandarinen; Gemüsesorten, beispielsweise Spinat, (Kopf)-Salat, Spargel, Kohlarten, Möhren, Zwiebeln, Tomaten, Kartoffeln und Paprika; Lorbeergewächse, beispielsweise Avocado, Cinnamomum, Kampfer, oder ebenso Pflanzen wie Tabak, Nüsse, Kaffee, Aubergine, Zuckerrohr, Tee, Pfeffer, Weinreben, Hopfen, Bananen, Naturkautschukgewächse sowie Zierpflanzen, beispielsweise Blumen, Sträucher, Laubbäume und Nadelbäume wie Koniferen. Diese Aufzählung stellt keine Limitierung dar.

Als besonders geeignete Zielkulturen für die Anwendung des erfindungsgemäßen Verfahrens sind folgende Pflanzen anzusehen: Hafer, Roggen, Triticale, Durum, Baumwolle, Aubergine, Turf, Kernobst, Steinobst, Beerenobst, Mais, Weizen, Gerste, Gurke, Tabak, Reben, Reis, Getreide, Birne, Pfeffer, Bohnen, Sojabohnen, Raps, Tomate, Paprika, Melonen, Kohl, Kartoffel und Apfel.

Als Bäume, die entsprechend dem erfindungsgemäßen Verfahren verbessert werden können, seien beispielhaft genannt: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

Als bevorzugte Bäume, die entsprechend dem erfindungsgemäßen Verfahren verbessert werden können, können genannt werden: Aus der Baumart Aesculus: A. hippocastanum, A. pariflora, A. carnea; aus der Baumart Platanus: P. aceriflora, P. occidentalis, P. racemosa; aus der Baumart Picea: P. abies; aus der Baumart Pinus: P. radiate, P. ponderosa, P. contorta, P. sylvestre, P. elliottii, P. montecola, P. albicaulis, P. resinosa, P. palustris, P. taeda, P. flexilis, P. jeffregi, P. baksiana, P. strobes; aus der Baumart Eucalyptus: E. grandis, E. globulus, E. camadentis, E. nitens, E. obliqua, E. regnans, E. pilularus.

Als besonders bevorzugte Bäume, die entsprechend dem erfindungsgemäßen Verfahren verbessert werden können, können genannt werden: Aus der Baumart Pinus: P. radiate, P. ponderosa, P. contorta, P. sylvestre, P. strobes; aus der Baumart Eucalyptus: E. grandis, E. globulus und E. camadentis.

Als besonders bevorzugte Bäume, die entsprechend dem erfindungsgemäßen Verfahren verbessert werden können, können genannt werden: Rosskastanie, Platanengewächs, Linde und Ahornbaum.

Die vorliegende Erfindung kann auch an beliebigen Rasenarten ("turfgrasses") durchgeführt werden, einschließlich "cool season turfgrasses" und "warm season turfgrasses". Beispiele für Rasenarten für die kalte Jahreszeit sind Blaugräser ("blue grasses"; Poa spp.), wie "Kentucky bluegrass" (Poa pratensis L.), "rough bluegrass" (Poa trivialis L.), "Canada bluegrass" (Poa compressa L.), "annual bluegrass" (Poa annua L.), "upland bluegrass" (Poa glaucantha Gaudin), "wood bluegrass" (Poa nemoralis L.) und "bulbous bluegrass" (Poa bulbosa L.); Straussgräser ("Bentgrass", Agrostis spp.), wie "creeping bentgrass" (Agrostis palustris Huds.), "colonial bentgrass" (Agrostis tenuis Sibth.), "velvet bentgrass" (Agrostis canina L.), "South German Mixed Bentgrass" (Agrostis spp. einschließlich Agrostis tenius Sibth., Agrostis canina L., und Agrostis palustris Huds.), und "redtop" (Agrostis alba L.);
Schwingel ("Fescues", Festucu spp.), wie "red fescue" (Festuca rubra L. spp. rubra), "creeping fescue" (Festuca rubra L.), "chewings fescue" (Festuca rubra commutata Gaud.), "sheep fescue" (Festuca ovina L.), "hard fescue" (Festuca longifolia Thuill.), "hair fescue" (Festucu capillata Lam.), "tall fescue" (Festuca arundinacea Schreb.) und "meadow fescue" (Festuca elanor L.);
Lolch ("ryegrasses", Lolium spp.), wie "annual ryegrass" (Lolium multiflorum Lam.), "perennial ryegrass" (Lolium perenne L.) und "italian ryegrass" (Lolium multiflorum Lam.);
und Weizengräser ("wheatgrasses", Agropyron spp..), wie "fairway wheatgrass" (Agropyron cristatum (L.) Gaertn.), "crested wheatgrass" (Agropyron desertorum (Fisch.) Schult.) und "western wheatgrass" (Agropyron smithii Rydb.).

Beispiele für weitere "cool season turfgrasses" sind "beachgrass" (Ammophila breviligulata Fern.), "smooth bromegrass" (Bromus inermis Leyss.), Schilf ("cattails") wie "Timothy" (Phleum pratense L.), "sand cattail" (Phleum subulatum L.), "orchardgrass" (Dactylis glomerata L.), "weeping alkaligrass" (Puccinellia distans (L.) ParI.) und "crested dog's-tail" (Cynosurus cristatus L.).

Beispiele für "warm season turfgrasses" sind "Bermudagrass" (Cynodon spp. L. C. Rich), "zoysiagrass" (Zoysia spp. Willd.), "St. Augustine grass" (Stenotaphrum secundatum Walt Kuntze), "centipedegrass" (Eremochloa ophiuroides Munro Hack.), "carpetgrass" (Axonopus affinis Chase), "Bahia grass" (Paspalum notatum Flugge), "Kikuyugrass" (Pennisetum clandestinum Hochst. ex Chiov.), "buffalo grass" (Buchloe dactyloids (Nutt.) Engelm.), "Blue gramma" (Bouteloua gracilis (H.B.K.) Lag. ex Griffiths), "seashore paspalum" (Paspalum vaginatum Swartz) und "sideoats grama" (Bouteloua curtipendula (Michx. Torr.). "Cool season turfgrasses" sind für die erfindungsgemäße Verwendung im Allgemeinen bevorzugt. Besonders bevorzugt sind Blaugras, Straussgras und "redtop", Schwingel und Lolch. Straussgras ist insbesondere bevorzugt.

Besonders bevorzugt werden mit den Verbindungen der allgemeinen Formel (I) Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Das erfindungsgemäße Behandlungsverfahren kann somit auch für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, dass es ein interessierendes Protein oder Polypeptid exprimiert oder dasses ein anderes Gen, das in der Pflanze vorliegt bzw. andere Gene, die in der Pflanze vorliegen, herunterreguliert oder abschaltet (zum Beispiel mittels Antisense-Technologie, Co-suppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Pflanzen und Pflanzensorten, die vorzugsweise mit den Verbindungen der allgemeinen Formel (I) behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls mit den Verbindungen der allgemeinen Formel (I) behandelt werden können, sind solche Pflanzen, die gegen einen oder mehrere abiotische Stressfaktoren resistent sind. Zu den abiotischen Stressbedingungen können zum Beispiel Hitze, Dürre, Kälte- und Trockenstress" osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls mit den Verbindungen der allgemeinen Formel (I) behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die ebenfalls mit den Verbindungen der allgemeinen Formel (I) behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Stressfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 92/005251, WO 95/009910, WO 98/27806, WO 05/002324, WO 06/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 91/002069).

Pflanzen oder Pflanzensorten (die mit Methoden der Pflanzenbiotechnologie, wie der Gentechnik, erhalten werden), die ebenfalls mit den Verbindungen der allgemeinen Formel (I) behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium Salmonella typhimurium (Comai et al., Science (1983), 221, 370-371), das CP4-Gen des Bakteriums Agrobacterium sp. (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 01/66704) kodieren. Es kann sich auch um eine mutierte EPSPS handeln, wie sie zum Beispiel in EP-A 0837944, WO 00/066746, WO 00/066747 oder WO 02/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 02/036782, WO 03/092360, WO 05/012515 und WO 07/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 01/024615 oder WO 03/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 96/038567, WO 99/024585 und WO 99/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 96/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber ALS-Inhibitoren, insbesondere gegenüber Imidazolinonen, Sulfonylharnstoffen und/oder Sulfamoylcarbonyltriazolinonen tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 97/41218, für die Zuckerrübe in US 5,773,702 und WO 99/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten wurden), die ebenfalls mit den Verbindungen der allgemeinen Formel (I) behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfasst im vorliegenden Zusammenhang jegliche Pflanze, die mindestens ein Transgen enthält, das eine Kodiersequenz umfasst, die für folgendes kodiert:
1) ein insektizides Kristallprotein aus Bacillus thuringiensis oder einen insektiziden Teil davon, wie die insektiziden Kristallproteine, die von Crickmore et al., Microbiology and Molecular Biology Reviews (1998), 62, 807-813, zusammengestellt wurden, von Crickmore et al. (2005) in der Bacillus thuringiensis-Toxinnomenklatur aktualisiert (online bei: http://www.lifesci.sussex.ac.uk/Home/Neil_Crickmore/Bt/), oder insektizide Teile davon, z.B. Proteine der Cry-Proteinklassen Cry1Ab, Cry1Ac, Cry1 F, Cry2Ab, Cry3Ae oder Cry3Bb oder insektizide Teile davon; oder
2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder
3) ein insektizides Hybridprotein, das Teile von zwei unterschiedlichen insektiziden Kristallproteinen aus Bacillus thuringiensis umfasst, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden, wie das Protein Cry3Bb1 in Mais-Events MON863 oder MON88017 oder das Protein Cry3A im Mais-Event MIR 604; oder
5) ein insektizides sezerniertes Protein aus Bacillus thuringiensis oder Bacillus cereus oder einen insektiziden Teil davon, wie die vegetativ wirkenden insektentoxischen Proteine (vegetative insecticidal proteins, VIP), die unter folgendem Link angeführt sind, z. B. Proteine der Proteinklasse VIP3Aa: http://www.iifesci.sussex.ac.uk/Home/NeiL_Crickmore/Bt/vip.html oder
6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 94/21795); oder
7) ein insektizides Hybridprotein, das Teile von verschiedenen sezernierten Proteinen von Bacillus thuringiensis oder Bacillus cereus umfasst, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfasst, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls mit den Verbindungen der allgemeinen Formel (I) behandelt werden können, sind gegenüber abiotischen Stressfaktoren tolerant. Solche Pflanzen können durch genetische Transformation oder durch Selektion von Pflanzen, die eine Mutation enthalten, die solch eine Stressresistenz verleiht, erhalten werden. Zu besonders nützlichen Pflanzen mit Stresstoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06109836.5 beschrieben ist.
b. Pflanzen, die ein stresstoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
c. Pflanzen, die ein stresstoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotid-adenyltransferase, Nicotinamidadenindinukleotidsynthetase oder Nicotinamidphosphoribosyl-transferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls mit den Verbindungen der allgemeinen Formel (I) behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemisch-physikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 95/004826, EP 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 95/26407, WO 96/34968, WO 98/20145, WO 99/12950, WO 99/66050, WO 99/53072, US 6,734,341, WO 2000/11192, WO 98/22604, WO 98/32326, WO 2001/98509, WO 2001/98509, WO 2005/002359, US 5,824,790, US 6,013,861, WO 94/004693, WO 94/009144, WO 94/11520, WO 95/35026 bzw. WO 97/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 96/001904, WO 96/021023, WO 98/039460 und WO 99/024593 beschrieben ist, Pflanzen, die alpha-1,4-Glucane produzieren, wie dies in WO 95/031553, US 2002/031826, US 6,284,479, US 5,712,107, WO 97/047806, WO 97/047807, WO 97/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.
3) Transgene Pflanzen, die Hyaluronan produzieren, wie dies zum Beispiel in WO 06/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls mit den Verbindungen der allgemeinen Formel (I) behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 98/000549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 2001/017333 beschrieben ist;
d) Pflanzen wie Baumwollpflanzen mit einer erhöhten Expression der Saccharosesynthase, wie dies in WO 02/45485 beschrieben ist;
e) Pflanzen wie Baumwollpflanzen bei denen der Zeitpunkt der Durchlasssteuerung der Plasmodesmen an der Basis der Faserzelle verändert ist, z. B. durch Herunterregulieren der faserselektiven β-1,3-Glucanase, wie dies in WO 2005/017157 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls mit den Verbindungen der allgemeinen Formel (I) behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die mit den Verbindungen der allgemeinen Formel (I) behandelt werden können, sind Pflanzen, die Transformations-Events, oder eine Kombination von Transformations-Events, enthalten und die zum Beispiel in den Dateien von verschiedenen nationalen oder regionalen Behörden angeführt sind.

Besonders nützliche transgene Pflanzen, die mit den Verbindungen der allgemeinen Formel (I) behandelt werden können, sind beispielhaft Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), BiteGard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Die erfindungsgemäß zu verwendenden Verbindungen der Formel (I) können in übliche Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen. Im Rahmen der vorliegenden Erfindung ist es insbesondere bevorzugt, wenn die Verbindungen der allgemeinen Formel (I) in der Form einer Sprühformulieruing verwendet werden.

Die vorliegende Erfindung betrifft daher darüber hinaus auch eine Sprühformulierung zur Steigerung der Widerstandsfähigkeit von Pflanzen gegenüber abiotischem Stress. Im Folgenden wird eine Sprühformulierung näher beschrieben:
Die Formulierungen zur Sprühapplikation werden in bekannter Weise hergestellt, z.B. durch Vermischen der erfindungsgemäß zu verwendenden Verbindungen der allgmeinen Formel (I) mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Weitere übliche Zusatzstoffe, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser, können gegebenenfalls auch verwendet werden. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Als Netzmittel, die in den erfindungsgemäß verwendbaren Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid-Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Formulierungen enthalten sein können, kommen alle üblichen in Beizmitteln einsetzbaren Bindemittel in Frage.

Vorzugsweise genannt seien Polyvinylpyrrolidon, Polyvinylacetat, Polyvinylalkohol und Tylose. Als Gibberelline, die in den erfindungsgemäß verwendbaren Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Weitere Additive können Duftstoffe, mineralische oder vegetabilische gegebenenfalls modifizierte Öle, Wachse und Nährstoffe (auch Spurennährstoffe), wie Salze von Eisen, Mangan, Bor, Kupfer, Kobalt, Molybdän und Zink sein. Weiterhin enthalten sein können Stabilisatoren wie Kältestabilisatoren, Oxidationsschutzmittel, Lichtschutzmittel oder andere die chemische und / oder physikalische Stabilität verbessernde Mittel.

Die Formulierungen enthalten im Allgemeinen zwischen 0,01 und 98 Gew.-%, vorzugsweise zwischen 0,5 und 90 %, der Verbindung der allgemeinen Formel (I).

Die Verbindungen der allgemeinen Formel (I) können in handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Ferner lässt sich die beschriebene positive Wirkung der Verbindungen der Formel (I) auf die pflanzeneigenen Abwehrkräfte durch eine zusätzliche Behandlung mit insektziden, fungiziden oder bakteriziden Wirkstoffen unterstützen.

Bevorzugte Zeitpunkte für die Applikation der erfindungsgemäß zu verwendenden Verbindungen der allgemeinen Formel (I) oder deren Salze zur Steigerung der Resistenz gegenüber abiotischem Stress sind Boden-, Stamm- und/oder Blattbehandlungen mit den zugelassenen Aufwandmengen.

Die Wirkstoffe der allgemeinen Formel (I) oder deren Salze können im Allgemeinen darüber hinaus in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, Bakteriziden, wachstumsregulierenden Stoffen, die Pflanzenreife beeinflussenden Stoffen, Safenern oder Herbiziden vorliegen.

Die Erfindung soll durch die nachfolgenden biologischen Beispiele veranschaulicht werden, ohne sie jedoch darauf einzuschränken.

### Biologische Beispiele:

### In vivo-Analysen - Teil A:

Samen von mono- bzw. dikotylen Kulturpflanzen wurden in Plastiktöpfen in sandigem Lehmboden ausgesät, mit Erde oder Sand abgedeckt und im Gewächshaus unter guten Wachstumsbedingungen angezogen. Die Behandlung der Versuchspflanzen erfolgte im frühen Laubblattstadium (BBCH10 - BBCH13). Zur Gewährleistung einer uniformen Wasserversorgung vor Stressbeginn wurden die bepflanzten Töpfe vor Substanzapplikation durch Anstaubewässerung mit Wasser versorgt.

### Die in Form von benetzbaren Pulvern (WP) formulierten erfindungsgemässen Verbindungen wurden als wässrige Suspension mit einer Wasseraufwandmenge von umgerechnet 600 I/ha unter Zusatz von 0,2% Netzmittel (z.B. Agrotin) auf die grünen Pflanzenteile gesprüht. Unmittelbar nach Substanzapplikation erfolgte die Stressbehandlung der Pflanzen.

Der Trockenstress wurde durch langsames Abtrocknen unter folgenden Bedingungen induziert:
"Tag": 14 Stunden beleuchtet bei ~ 26-30°C
"Nacht": 10 Stunden ohne Beleuchtung bei ~ 18-20°C.

Die Dauer der jeweiligen Stressphasen richtete sich hauptsächlich nach dem Zustand der gestressten Kontrollpflanzen. Sie wurde (durch Wiederbewässerung und Transfer in ein Gewächshaus mit guten Wachstumsbedingungen) beendet, sobald irreversible Schäden an den gestressten Kontrollpflanzen zu beobachten waren.

Nach Beendigung der Stressphase folgte eine ca. 4-7 tägige Erholungsphase, während der die Pflanzen abermals unter guten Wachstumsbedingungen im Gewächshaus gehalten wurden. Die Dauer der Erholungsphase richtete sich hauptsächlich danach, wann die Versuchspflanzen einen Zustand erreicht hatten, der eine visuelle Bonitur potenzieller Effekte ermöglichte, und war daher variabel.

Wenn dieser Zeitpunkt erreicht war, wurde das Erscheinungsbild der mit Testsubstanzen behandelten Pflanzen im Vergleich zu den gestressten Kontrollpflanzen nach folgenden Kategorien erfasst:

| | |
|---|---|
| 0 | kein Effekt |
| + | leicht positiver Effekt |
| ++ | deutlich positiver Effekt |
| +++ | stark positiver Effekt |

Um auszuschliessen, dass die beobachteten Effekte von der ggf. fungiziden oder insektiziden Wirkung der Testverbindungen beeinflusst wurden, wurde zudem darauf geachtet, dass die Versuche ohne Pilzinfektion oder Insektenbefall abliefen.

In jedem Versuch wurden pro Kultur und Dosierung Pflanzen in 3 Töpfen behandelt und separat ausgewertet. Die in den unten stehenden Tabellen A-1 bis A-3 angegebenen Werte für die erhaltenen Effekte stellen Mittelwerte aus den erhaltenen Bonituren dar.

Wirkungen ausgewählter Verbindungen der allgemeinen Formel (I) unter Trockenstress:

**Tabelle A-1**

| No. | Substanz | Dosierung | Einheit | Effekt (BRSNS) |
|---|---|---|---|---|
| 1 | A1-63 | 250 | g/ha | +++ |
| 2 | A4-5 | 25 | g/ha | ++ |
| 3 | A6-1 | 25 | g/ha | +++ |
| 4 | A6-3 | 25 | g/ha | +++ |
| 5 | A6-728 | 25 | g/ha | + |
| 6 | A9-2 | 25 | g/ha | +++ |
| 7 | A9-3 | 25 | g/ha | +++ |
| 8 | A9-59 | 25 | g/ha | +++ |
| 9 | A9-63 | 250 | g/ha | ++ |
| 10 | A9-82 | 250 | g/ha | +++ |
| 11 | A9-143 | 25 | g/ha | +++ |
| 12 | A10-13 | 250 | g/ha | + |
| 13 | A10-15 | 250 | g/ha | +++ |
| 14 | A10-63 | 250 | g/ha | +++ |
| 15 | A10-791 | 250 | g/ha | ++ |
| 16 | A15-1 | 25 | g/ha | +++ |
| 17 | A15-59 | 25 | g/ha | +++ |
| 18 | A15-737 | 25 | g/ha | ++ |
| 19 | A15-761 | 250 | g/ha | + |
| 20 | A18-1 | 250 | g/ha | +++ |
| 21 | A19-2 | 25 | g/ha | +++ |
| 22 | A20-761 | 250 | g/ha | + |
| 23 | A21-136 | 25 | g/ha | +++ |
| 24 | A21-143 | 25 | g/ha | +++ |
| 25 | A22-82 | 25 | g/ha | +++ |
| 26 | A22-83 | 25 | g/ha | +++ |
| 27 | A23-17 | 250 | g/ha | + |
| 28 | A23-63 | 250 | g/ha | ++ |
| 29 | A24-83 | 25 | g/ha | +++ |
| 30 | A26-61 | 250 | g/ha | ++ |
| 31 | A26-103 | 25 | g/ha | + |
| 32 | B6-1 | 250 | g/ha | + |
| 33 | B6-3 | 250 | g/ha | + |
| 34 | B6-63 | 250 | g/ha | +++ |
| 35 | C6-13 | 25 | g/ha | ++ |
| 36 | C6-726 | 25 | g/ha | + |
| 37 | C18-791 | 250 | g/ha | ++ |
| 38 | D6-15 | 250 | g/ha | + |
| 39 | D11-1 | 250 | g/ha | + |
| 40 | D17-73 | 250 | g/ha | +++ |
| 41 | D17-159 | 250 | g/ha | +++ |
| 42 | D18-61 | 25 | g/ha | + |
| 43 | H12-3 | 25 | g/ha | +++ |
| 44 | I1-728 | 250 | g/ha | + |
| 45 | I11-1 | 25 | g/ha | +++ |
| 46 | I11-3 | 25 | g/ha | +++ |
| 47 | I11-83 | 25 | g/ha | ++ |
| 48 | J9-7 | 25 | g/ha | + |
| 49 | J9-728 | 25 | g/ha | + |
| 50 | K8-2 | 250 | g/ha | ++ |
| 51 | K12-5 | 25 | g/ha | +++ |
| 52 | K12-82 | 250 | g/ha | +++ |
| 53 | K12-143 | 250 | g/ha | +++ |
| 54 | L8-1 | 25 | g/ha | +++ |
| 55 | L8-5 | 25 | g/ha | ++ |
| 56 | L12-1 | 25 | g/ha | +++ |
| 57 | L12-71 | 250 | g/ha | ++ |
| 58 | M8-1 | 25 | g/ha | +++ |
| 59 | M8-5 | 25 | g/ha | +++ |
| 60 | M12-5 | 25 | g/ha | +++ |
| 61 | M14-71 | 25 | g/ha | +++ |
| 62 | M14-76 | 25 | g/ha | +++ |
| 63 | M14-81 | 25 | g/ha | ++ |
| 64 | N2-729 | 25 | g/ha | + |
| 65 | N2-761 | 25 | g/ha | +++ |
| 66 | P3-5 | 250 | g/ha | + |
| 67 | R4-1 | 250 | g/ha | + |
| 68 | R4-5 | 250 | g/ha | + |
| 69 | R4-59 | 25 | g/ha | + |

**Tabelle A-2**

| No. | Substanz | Dosierung | Einheit | Effekt (TRZAS) |
|---|---|---|---|---|
| 1 | A1-63 | 250 | g/ha | +++ |
| 2 | A4-5 | 25 | g/ha | +++ |
| 3 | A6-1 | 25 | g/ha | + |
| 4 | A6-3 | 250 | g/ha | +++ |
| 5 | A6-728 | 25 | g/ha | +++ |
| 6 | A6-761 | 25 | g/ha | +++ |
| 7 | A9-2 | 25 | g/ha | +++ |
| 8 | A9-3 | 25 | g/ha | + |
| 9 | A9-59 | 25 | g/ha | +++ |
| 10 | A9-82 | 250 | g/ha | ++ |
| 11 | A9-143 | 25 | g/ha | ++ |
| 12 | A10-15 | 250 | g/ha | +++ |
| 13 | A10-791 | 250 | g/ha | +++ |
| 14 | A15-1 | 25 | g/ha | +++ |
| 15 | A15-59 | 25 | g/ha | ++ |
| 16 | A15-761 | 25 | g/ha | + |
| 17 | A18-1 | 250 | g/ha | ++ |
| 18 | A19-2 | 25 | g/ha | +++ |
| 19 | A21-136 | 25 | g/ha | ++ |
| 20 | A21-143 | 25 | g/ha | +++ |
| 21 | A22-82 | 25 | g/ha | +++ |
| 22 | A22-83 | 25 | g/ha | ++ |
| 23 | A23-17 | 250 | g/ha | +++ |
| 24 | A24-83 | 250 | g/ha | + |
| 25 | A26-61 | 250 | g/ha | ++ |
| 26 | A26-726 | 25 | g/ha | +++ |
| 27 | B6-1 | 25 | g/ha | +++ |
| 28 | B6-3 | 250 | g/ha | ++ |
| 29 | B6-793 | 25 | g/ha | +++ |
| 30 | B11-1 | 250 | g/ha | ++ |
| 31 | B17-761 | 25 | g/ha | ++ |
| 32 | C6-15 | 25 | g/ha | + |
| 33 | D6-13 | 25 | g/ha | ++ |
| 34 | D6-726 | 250 | g/ha | ++ |
| 35 | D6-15 | 250 | g/ha | ++ |
| 36 | D11-1 | 250 | g/ha | + |
| 37 | D17-73 | 250 | g/ha | + |
| 38 | G1-726 | 25 | g/ha | +++ |
| 39 | G1-728 | 25 | g/ha | + |
| 40 | H12-3 | 25 | g/ha | +++ |
| 41 | I11-1 | 25 | g/ha | +++ |
| 42 | I11-3 | 25 | g/ha | ++ |
| 43 | J9-7 | 250 | g/ha | + |
| 44 | K8-2 | 250 | g/ha | +++ |
| 45 | K12-5 | 25 | g/ha | + |
| 46 | K12-82 | 250 | g/ha | + |
| 47 | K12-143 | 250 | g/ha | +++ |
| 48 | P3-143 | 250 | g/ha | ++ |
| 49 | R4-1 | 250 | g/ha | ++ |
| 50 | R4-5 | 25 | g/ha | ++ |
| 51 | R4-59 | 25 | g/ha | + |

**Tabelle A-3**

| No. | Substanz | Dosierung | Einheit | Effekt (ZEAMX) |
|---|---|---|---|---|
| 1 | A1-63 | 250 | g/ha | +++ |
| 2 | A6-1 | 25 | g/ha | + |
| 3 | A6-3 | 250 | g/ha | +++ |
| 4 | A6-761 | 25 | g/ha | + |
| 5 | A9-2 | 25 | g/ha | + |
| 6 | A9-3 | 250 | g/ha | ++ |
| 7 | A9-59 | 25 | g/ha | +++ |
| 8 | A9-63 | 250 | g/ha | + |
| 9 | A9-82 | 250 | g/ha | ++ |
| 10 | A9-143 | 25 | g/ha | + |
| 11 | A9-728 | 250 | g/ha | +++ |
| 12 | A9-792 | 25 | g/ha | +++ |
| 13 | A10-15 | 250 | g/ha | +++ |
| 14 | A10-63 | 25 | g/ha | +++ |
| 15 | A10-791 | 250 | g/ha | +++ |
| 16 | A15-1 | 250 | g/ha | ++ |
| 17 | A15-59 | 25 | g/ha | +++ |
| 18 | A15-737 | 25 | g/ha | +++ |
| 19 | A15-761 | 250 | g/ha | + |
| 20 | A18-1 | 250 | g/ha | +++ |
| 21 | A19-2 | 25 | g/ha | +++ |
| 22 | A21-136 | 25 | g/ha | +++ |
| 23 | A21-143 | 25 | g/ha | ++ |
| 24 | A22-82 | 25 | g/ha | +++ |
| 25 | A22-83 | 25 | g/ha | ++ |
| 26 | A26-103 | 25 | g/ha | +++ |
| 27 | B6-3 | 250 | g/ha | +++ |
| 28 | B6-63 | 250 | g/ha | +++ |
| 29 | B6-793 | 25 | g/ha | + |
| 30 | B11-1 | 250 | g/ha | +++ |
| 31 | B17-761 | 25 | g/ha | +++ |
| 32 | C6-13 | 25 | g/ha | +++ |
| 33 | C6-761 | 25 | g/ha | + |
| 34 | C18-791 | 250 | g/ha | + |
| 35 | D6-13 | 25 | g/ha | +++ |
| 36 | D6-726 | 250 | g/ha | +++ |
| 37 | D6-748 | 250 | g/ha | +++ |
| 38 | D17-73 | 250 | g/ha | +++ |
| 39 | D17-159 | 250 | g/ha | +++ |
| 40 | G1-726 | 250 | g/ha | +++ |
| 41 | G1-728 | 25 | g/ha | ++ |
| 42 | G10-5 | 25 | g/ha | ++ |
| 43 | G10-143 | 250 | g/ha | +++ |
| 44 | H12-3 | 25 | g/ha | ++ |
| 45 | I11-1 | 25 | g/ha | + |
| 46 | I11-3 | 25 | g/ha | + |
| 47 | I11-83 | 25 | g/ha | + |
| 48 | J9-728 | 250 | g/ha | + |
| 50 | K12-82 | 25 | g/ha | +++ |
| 51 | K12-143 | 25 | g/ha | +++ |
| 52 | L8-1 | 25 | g/ha | + |
| 53 | L8-5 | 25 | g/ha | +++ |
| 54 | L12-1 | 25 | g/ha | ++ |
| 55 | M8-1 | 25 | g/ha | ++ |
| 56 | M14-71 | 25 | g/ha | +++ |
| 57 | M14-76 | 25 | g/ha | ++ |
| 58 | M14-81 | 250 | g/ha | +++ |
| 59 | P3-143 | 250 | g/ha | +++ |
| 60 | R4-1 | 250 | g/ha | + |
| 61 | R4-5 | 25 | g/ha | +++ |
| 62 | R4-59 | 25 | g/ha | ++ |

### In vivo-Analysen - Teil B:

Samen von mono- bzw. dikotylen Kulturpflanzen wurden in Plastiktöpfen in sandigem Lehmboden ausgesät, mit Erde oder Sand abgedeckt und im Gewächshaus unter guten Wachstumsbedingungen angezogen. Die Behandlung der Versuchspflanzen erfolgte im frühen Laubblattstadium (BBCH10 - BBCH13). Zur Gewährleistung einer uniformen Wasserversorgung vor Stressbeginn wurden die bepflanzten Töpfe vor Substanzapplikation durch Anstaubewässerung mit Wasser versorgt.

Die in Form von benetzbaren Pulvern (WP) formulierten erfindungsgemässen Verbindungen wurden als wässrige Suspension mit einer Wasseraufwandmenge von umgerechnet 600 I/ha unter Zusatz von 0,2% Netzmittel (z.B. Agrotin) auf die grünen Pflanzenteile gesprüht. Unmittelbar nach Substanzapplikation erfolgte die Stressbehandlung der Pflanzen.

Der Trockenstress wurde durch langsames Abtrocknen unter folgenden Bedingungen induziert:
"Tag": 14 Stunden beleuchtet bei ~ 26-30°C
"Nacht": 10 Stunden ohne Beleuchtung bei ~ 18-20°C.

Die Dauer der jeweiligen Stressphasen richtete sich hauptsächlich nach dem Zustand der gestressten Kontrollpflanzen. Sie wurde (durch Wiederbewässerung und Transfer in ein Gewächshaus mit guten Wachstumsbedingungen) beendet, sobald irreversible Schäden an den gestressten Kontrollpflanzen zu beobachten waren.

Nach Beendigung der Stressphase folgte eine ca. 4-7 tägige Erholungsphase, während der die Pflanzen abermals unter guten Wachstumsbedingungen im Gewächshaus gehalten wurden. Die Dauer der Erholungsphase richtete sich hauptsächlich danach, wann die Versuchspflanzen einen Zustand erreicht hatten, der eine visuelle Bonitur potenzieller Effekte ermöglichte, und ist daher variabel.

Wenn dieser Zeitpunkt erreicht war, wurde das Erscheinungsbild der mit Testsubstanzen behandelten Pflanzen im Vergleich zu den gestressten Kontrollpflanzen nach folgenden Kategorien erfasst:

| | |
|---|---|
| 0 | kein positiver Effekt |
| + | leicht positiver Effekt |
| ++ | deutlich positiver Effekt |
| +++ | stark positiver Effekt |

Pro Substanz und Dosierung wurden jeweils 2-3 Töpfe behandelt und ausgewertet. Die jeweiligen Wirkungsbereiche sind in unten stehenden Tabellen B-1 und B-2 angegeben.

**Tabelle B-1**

| No. | Substanz | Dosierung | Einheit | Effekt (BRSNS) |
|---|---|---|---|---|
| 1 | A6-737 | 250 | g/ha | ++ |
| 2 | C6-7 | 2,5 | g/ha | + |
| 3 | D1-761 | 250 | g/ha | + |
| 4 | D6-7 | 2,5 | g/ha | ++ |

**Tabelle B-2**

| No. | Substanz | Dosierung | Einheit | Effekt (TRZAS) |
|---|---|---|---|---|
| 1 | A2-791 | 250 | g/ha | + |
| 2 | D6-7 | 250 | g/ha | +++ |

### In vivo-Analysen - Teil C:

Samen von mono- bzw. dikotylen Kulturpflanzen wurden in Plastik- oder Holzfasertöpfen in sandigem Lehmboden ausgesät, mit Erde oder Sand abgedeckt und im Gewächshaus unter guten Wachstumsbedingungen angezogen. Die Behandlung der Versuchspflanzen erfolgte im frühen Laubblattstadium (BBCH10-BBCH13). Zur Gewährleistung einer uniformen Wasserversorgung vor Stressbeginn wurden die bepflanzten Töpfe vor Substanzapplikation durch Anstaubewässerung mit Wasser versorgt.

Die erfindungsgemässen Verbindungen wurden zunächst als benetzbare Pulver (WP) formuliert oder in einem Lösungsmittelgemisch gelöst. Die weitere Verdünnung erfolgte mit Wasser unter Zusatz von 0,2% Netzmittel (z.B. Agrotin). Die fertige Spritzbrühe wurde mit einer Wasseraufwandmenge von umgerechnet 600 I/ha auf die grünen Pflanzenteile gesprüht. Unmittelbar nach Substanzapplikation erfolgte die Stressbehandlung der Pflanzen. Die Holzfasertöpfe wurden dazu in Plastikeinsätze transferiert, um anschliessendes, zu schnelles Abtrocknen zu verhindern.

Der Trockenstress wurde durch langsames Abtrocknen unter folgenden Bedingungen induziert:
"Tag": 14 Stunden beleuchtet bei ~ 26-30°C
"Nacht": 10 Stunden ohne Beleuchtung bei ~ 18-20°C.

Die Dauer der jeweiligen Stressphasen richtete sich hauptsächlich nach dem Zustand der gestressten Kontrollpflanzen. Sie wurde (durch Wiederbewässerung und Transfer in ein Gewächshaus mit guten Wachstumsbedingungen) beendet, sobald irreversible Schäden an den gestressten Kontrollpflanzen zu beobachten waren. Nach Beendigung der Stressphase folgte eine ca. 4-7 tägige Erholungsphase, während der die Pflanzen abermals unter guten Wachstumsbedingungen im Gewächshaus gehalten wurden. Die Dauer der Erholungsphase richtete sich hauptsächlich danach, wann die Versuchspflanzen einen Zustand erreicht hatten, der eine visuelle Bonitur potenzieller Effekte ermöglichte, und war daher variabel.

Wenn dieser Zeitpunkt erreicht war, wurde das Erscheinungsbild der mit Testsubstanzen behandelten Pflanzen im Vergleich zu den gestressten Kontrollpflanzen nach folgenden Kategorien erfasst:

| | |
|---|---|
| 0 | kein positiver Effekt |
| + | leicht positiver Effekt |
| ++ | deutlich positiver Effekt |
| +++ | stark positiver Effekt |

Pro Substanz und Dosierung wurden jeweils 3-4 Töpfe behandelt und ausgewertet. Die jeweiligen Wirkungsbereiche sind in unten stehenden Tabellen C-1 und C-2 angegeben.

**Tabelle C-1**

| No. | Substanz | Dosierung | Einheit | Effekt (BRSNS) |
|---|---|---|---|---|
| 1 | A14-681 | 250 | g/ha | + |
| 2 | A15-681 | 25 | g/ha | + |
| 3 | A20-681 | 250 | g/ha | + |
| 4 | B17-681 | 250 | g/ha | + |
| 5 | D1-22 | 250 | g/ha | +++ |
| 6 | D1-61 | 250 | g/ha | ++ |
| 7 | D1-81 | 250 | g/ha | + |
| 8 | D1-94 | 250 | g/ha | +++ |
| 9 | D1-99 | 250 | g/ha | + |
| 10 | D1-137 | 250 | g/ha | + |
| 11 | D2-1 | 25 | g/ha | + |
| 12 | D2-38 | 25 | g/ha | ++ |
| 13 | D2-61 | 25 | g/ha | ++ |
| 14 | D2-186 | 25 | g/ha | ++ |
| 15 | D12-1 | 250 | g/ha | +++ |
| 16 | D12-4 | 250 | g/ha | ++ |
| 17 | D12-5 | 25 | g/ha | + |
| 18 | D12-6 | 250 | g/ha | + |
| 19 | D12-11 | 250 | g/ha | ++ |
| 20 | D12-16 | 250 | g/ha | + |
| 21 | D12-38 | 25 | g/ha | + |
| 22 | D12-59 | 250 | g/ha | + |
| 23 | D12-61 | 25 | g/ha | + |
| 24 | D12-81 | 250 | g/ha | ++ |
| 25 | D12-94 | 250 | g/ha | + |
| 26 | D12-137 | 250 | g/ha | + |
| 27 | D13-4 | 250 | g/ha | ++ |
| 28 | D13-6 | 250 | g/ha | ++ |
| 29 | D13-38 | 25 | g/ha | ++ |
| 30 | D13-61 | 250 | g/ha | ++ |
| 31 | D13-81 | 250 | g/ha | ++ |
| 32 | D13-94 | 250 | g/ha | + |
| 33 | D17-81 | 25 | g/ha | + |
| 34 | D17-681 | 250 | g/ha | + |
| 35 | E1-6 | 250 | g/ha | ++ |
| 36 | E1-59 | 25 | g/ha | + |
| 37 | E1-681 | 250 | g/ha | + |
| 38 | F9-5 | 25 | g/ha | + |

**Tabelle C-2**

| No. | Substanz | Dosierung | Einheit | Effekt (TRZAS) |
|---|---|---|---|---|
| 1 | A1-63 | 25 | g/ha | + |
| 2 | A2-791 | 250 | g/ha | + |
| 3 | A18-17 | 25 | g/ha | + |
| 4 | A6-36 | 250 | g/ha | + |
| 5 | A6-61 | 250 | g/ha | + |
| 6 | D1-4 | 250 | g/ha | + |
| 7 | D1-13 | 25 | g/ha | + |
| 8 | D1-81 | 25 | g/ha | + |
| 9 | D1-99 | 250 | g/ha | + |
| 10 | D1-137 | 25 | g/ha | + |
| 11 | D1-681 | 250 | g/ha | + |
| 12 | D2-94 | 25 | g/ha | + |
| 13 | D6-7 | 250 | g/ha | +++ |
| 14 | D12-5 | 25 | g/ha | + |
| 15 | D12-16 | 25 | g/ha | + |
| 16 | D12-38 | 250 | g/ha | + |
| 17 | D12-59 | 250 | g/ha | + |
| 18 | D13-81 | 250 | g/ha | + |
| 19 | D13-94 | 250 | g/ha | + |
| 20 | F9-5 | 250 | g/ha | + |
| 21 | F9-793 | 250 | g/ha | + |

In den zuvor genannten Tabellen bedeuten:

| | | |
|---|---|---|
| BRSNS | = | *Brassica napus* |
| TRZAS | = | *Triticum aestivum* |
| ZEAMX | = | *Zea mays* |

### In-vitro Analysen

Effekte des Phytohormons Abscisinsäure (ABA) auf das Verhalten von Pflanzen unter abiotischem Stress und der Wirkmechanismus von ABA sind in der Literatur beschrieben (vgl. Abrams et al, WO97/23441, Park et al. Science, 2009, 324, 1068; Grill et al. Science, 2009, 324, 1064; Tanokura et al. Biophysics, 2011, 7, 123; Schroeder et al. Plant J. 2010, 61, 290). Daher kann man mit Hilfe eines geeigneten in vitro-Testsystems eine Korrelation zwischen der Wirkung von ABA und der Stressantwort einer Pflanze unter abiotischem Stress ableiten. Unter Wassermangel (Trockenstress) bilden Pflanzen das Phytohormon Abscisinsäure (ABA). Dieses bindet mit einem Co-Regulator (Regulatory Component of ABA-Receptor = RCAR nach Grill et al. Science, 2009, 324, 1064 oder PYR/PYL nach Cutler et al. Science, 2009, 324, 1068) an eine Phosphatase (z.B. ABI1, eine Typ 2C Proteinphosphatase, auch als PP2C abgekürzt) und hemmt diese in ihrer Aktivität. In der Folge wird eine "downstream" Kinase (z.B. SnRK2) nicht mehr dephosphoryliert. Diese somit aktive Kinase schaltet über Phosphorylierung von Transkriptionsfaktoren (z.B. AREB/ABF, vgl. Yoshida et al Plant J. 2010, 61, 672) ein genetisches Schutzprogramm zur Erhöhung der Trockenstresstoleranz an.

In dem im Folgenden beschriebenen Assay wird die Hemmung der Phosphatase ABI1 über den Co-Regulator RCAR11/PYR1 aus *Arabidopsis thaliana* genutzt. Für die Aktivitätsbestimmung wurde die Dephosphorylierung von 4-Methylumbelliferylphosphat (MUP) bei 460nm gemessen. Der in vitro Assay wurde in Greiner 384-well PS-Mikroplatten F-well durchgeführt unter Verwendung von zwei Kontrollen, a) 0.5 % Dimethylsulfoxid (DMSO) sowie b) 5 µM Abscisinsäure (ABA). Der hier beschriebene Assay wurde im Allgemeinen mit Substratkonzentrationen der entsprechenden chemischen Testsubstanzen in einem Konzentrationsbereich von 0.1 µM bis 100 µM in einer Lösung aus DMSO und Wasser durchgeführt. Die so erhaltene Substanzlösung wurde gegebenenfalls mit Esterase aus Schweineleber (EC 3.1.1.1) 3 h lang bei Raumtemperatur gerührt und 30 Min lang bei 4000rpm zentrifugiert. In jede Kavität der Mikroplatte wurde ein Gesamtvolumen von 45 µL gegeben, das sich wie folgt zusammensetzte:
1) 5µL Substanzlösung, d.h. a) DMSO 5% oder b) Abscisinsäurelösung oder c) die entsprechende Beispielverbindung der allgemeinen Formel (I) gelöst in 5% DMSO.
2) 20µL Enzympuffermix, der sich aus a) 40 Vol% Enzympuffer (10 mL enthalten zu gleichen Volumenanteilen 500 mM Tris-HCl pH8, 500 mM NaCl, 3.33 mM MnCl₂, 40 mM Dithiothreitol (DTT)), b) 4 Vol% ABI1-Verdünnung (Proteinstammlösung wurde so verdünnt, dass nach Zugabe eine Endkonzentration im Assay von 0.15 µg ABI1/well entsteht), c) 4 Vol% RCAR11-Verdünnung (Enzymstock wurde so verdünnt, dass bei Zugabe der Verdünnung in den Enzympuffermix eine Endkonzentration im Assay von 0.30 µg Enzym/well entsteht), d) 5 Vol% Tween20 (1%), e) 47 Vol% H₂O bi-dest zusammensetzt.
3) 20µL Substratmix, der sich aus a) 10 Vol% 500 mM Tris-HCl pH8, b) 10 Vol% 500 mM NaCl, c) 10 Vol% 3.33 mM MnCl₂, d) 5 Vol% 25 mM MUP, 5 Vol% Tween20 (1%), 60 Vol% H₂O bi-dest zusammensetzt

Enzympuffermix und Substratmix wurden 5 Minuten vor der Zugabe angesetzt und auf eine Temperatur von 35 °C erwärmt. Nach vollständigem Pipettieren aller Lösungen und vollständiger Durchmischung wurde die Platte 20 Minuten lang bei 35 °C inkubiert. Abschließend erfolgte eine relative Fluoreszenzmessung bei 35 °C mit einem Mikroplatten-Lesegerät "POLARstar Optima" der Firma BMG Labtech unter Verwendung eines Anregungsfilters 340/10 nm und einem Emmissionsfilter von 460 nm. Die Wirkstärke der Verbindungen der allgemeinen Formel (I) wird in der nachfolgenden Tabelle unter Verwendung von Abscisinsäure (5mM) als Vergleichssubstanz (No.7) nach folgender Einteilung angegeben: ++++ (Inhibition ≥ 90 %), +++ (90 % > Inhibition > 70%), ++ (70 % > Inhibition ≥ 50%), + (50 % > Inhibition > 30%).

Effekte ausgewählter Verbindungen der allgemeinen Formel (I) im oben beschriebenen in vitro-Assay bei einer Konzentration von 5mM der betreffenden Substanz der allgemeinen Formel (I) in einer Lösung aus DMSO und Wasser, gemäß nachstender Tabelle D-1:

**Tabelle D-1**

| No. | Substanz | ABI1 Inhibition |
|---|---|---|
| 1 | A2-761 | +++ |
| 2 | N1-761 | +++ |
| 3 | N2-727 | ++ |
| 4 | N2-728 | ++ |
| 5 | N2-729 | +++ |
| 6 | N2-761 | ++++ |
| 7 | Abscisinsäure | ++++ |

## Patentansprüche

1. Verwendung substituierter Thio-1,2,4-triazole der allgemeinen Formel (I) oder deren Salze 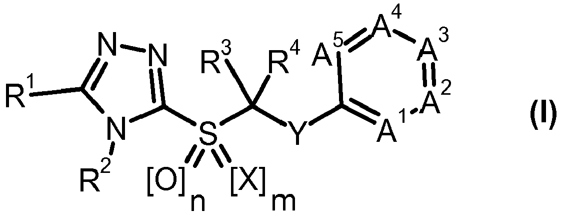 zur Steigerung der Stresstoleranz in Pflanzen gegenüber abiotischem Stress, sowie zur Steigerung des Pflanzenwachstums und/oder zur Erhöhung des Pflanzenertrags
wobei
R¹ für Wasserstoff, (C₁-C₈)-Alkyl, Cyano-(C₁-C₈)-Alkyl, Nitro-(C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alky, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₃-C₈)-Cycloalkyloxy-(C₁-C₈)-alkyl, COR²³, Hydroxycarbonyl, (C₁-C₈)-Alkoxycarbonyl, (C₂-C₈)-Alkenyloxycarbonyl, (C₂-C₈)-Alkinyloxycarbonyl, Aryl-(C₁-C₈)-alkoxycarbonyl, Heteroaryl-(C₁-C₈)-alkoxycarbonyl, Heteroaryloxycarbonyl, Aryloxycarbonyl, Heterocyclyloxycarbonyl, (C₃-C₈)-Cycloalkyl-(C₁-C₈)-alkoxycarbonyl, Heterocyclyl-(C₁-C₈)-alkoxycarbonyl, CONR²¹R²², SO₂R²⁴, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(CC₁-C₈)-alkyl, (C₁-C₈)-Alkylcarbonyl-(C₁-C₈)-alkyl, Arylcarbonyl-(C₁-C₈)-alkyl, Heteroarylcarbonyl-(C₁-C₈)-alkyl, Aryloxy-(C₁-C₈)-alkyl, Heteroaryloxy-(C₁-C₈)-alkyl steht,
R² für (C₁-C₈)-Alkyl, Cyano-(C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, (C₃-C₁₀)-Halocycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₂-C₈)-Alkenyloxy-(C₁-C₈)-alkyl, (C₂-C₈)-Alkinyloxy-(C₁-C₈)-alkyl, Nitro-(C₁-C₈)-Alkyl, Aryloxy-(C₁-C₈)-alkyl, Aryl-(C₁-C₈)-alkoxy-(C₁-C₈)-alkyl, Heteroaryloxy-(C₁-C₈)-alkyl, Heteroaryl-(C₁-C₈)-alkoxy-(C₁-C₈)-alkyl, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(CC₁-C₈)-alkoxycarbonyl-(C₁-C₈)-alkyl, (C₁-C₈)-Alkylcarbonyl-(C₁-C₈)-alkyl, (C₃-C₈)-Cycloalkylcarbonyl-(C₁-C₈)-alkyl, Arylcarbonyl-(C₁-C₈)-alkyl, Heteroarylcarbonyl-(C₁-C₈)-alkyl, Heterocyclylcarbonyl-(C₁-C₈)-alkyl, (C₃-C₈)-Cycloalkyl-(C₃-C₈)-Cycloalkyl steht,
R³ und R⁴ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³, CONR²¹R²², Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₈)-Alkoxy-(C₁-C₈)-haloalkyl, (C₁-C₈)-Haloalkoxy-(C₁-C₈)-haloalkyl, (C₁-C₈)-Haloalkoxy-(C₁-C₈)-alkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkylcarbonyl-(C₁-C₈)-alkyl, COOR²³, CONR²¹R²², COR²³,-C=NOR²³, R²¹R²²N-(C₁-C₈)-alkyl, R²³OOC-(C₁-C₈)-alkyl, Aryl-(C₁-C₈)-alkinyl, Heteroaryl-(C₁-C₈)-alkinyl, Heterocyclyl-(C₁-C₈)-alkinyl, Tris-[(C₁-C₈)-alkyl]silyl-(C₂-C₈)-alkinyl, Bis-[(C₁-C₈)-alkyl](aryl)silyl-(C₂-C₈)-alkinyl, Bis-aryl[(C₁-C₈)-alkyl]silyl-(C₂-C₈)-alkinyl, (C₃-C₈)-Cycloalkyl-(C₂-C₈)-alkinyl, Aryl-(C₂-C₈)-alkenyl, Heteroaryl-(C₂-C₈)-alkenyl, Heterocyclyl-(C₂-C₈)-alkenyl, (C₃-C₈)-Cycloalkyl-(C₂-C₈)-alkenyl, (C₁-C₈)-Alkoxy-(C₁-C₈)-alkoxy-(C₁-C₈)-alkyl, (C₁-C₈)-Alkylaminosulfonylamino, (C₃-C₈)-Cycloalkylaminosulfonylamino, Diazo, Aryldiazo, Tris-[(C₁-C₈)-alkyl]silyl, Bis-[(C₁-C₈)-alkyl](aryl)silyl, Bis-aryl[(C₁-C₈)-alkyl]silyl steht,
X für O (Sauerstoff) oder NR⁶ steht,
n, m unabhängig voneinander für 0 oder 1 stehen,
V für 0, 1 oder 2 steht,
R⁶ für Wasserstoff, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 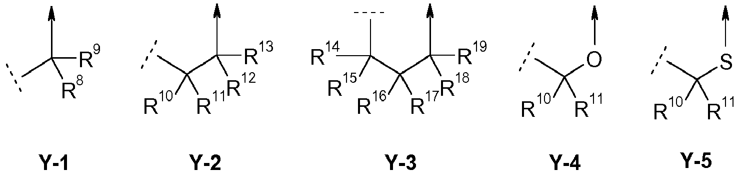 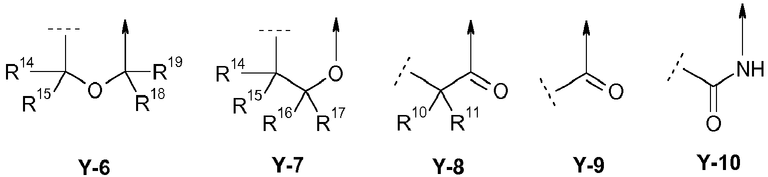 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³ stehen,
R²¹ und R²² gleich oder verschieden sind und unabhängig voneinander für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Haloalkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, COR²³, SO₂R²⁴, (C₁-C₈)-Alkyl-HNO₂S-, (C₃-C₈)-Cy_{C}loalkyl-HNO₂S-, Heterocyclyl, (C₁-C₈)-Alkoxycarbonyl-(C₁-C₈)-alkyl, (C₁-C₈)-Alkoxycarbonyl, Aryl-(C₁-C₈)-Alkoxycarbonyl-(C₁-C₈)-alkyl, Aryl-(C₁-C₈)-Alkoxycarbonyl, Hydroxycarbonyl-(C₁-C₈)-alkyl, Heteroaryl-(C₁-C₈)-Alkoxycarbonyl, (C₂-C₈)-Alkenyloxycarbonyl, (C₂-C₈)-Alkinyloxycarbonyl, Heterocyclyl-(C₁-C₈)-alkyl stehen,
R²³ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, Aryl-(C₁-C₈)-Alkoxycarbonyl-(C₁-C₈)-alkyl, Hydroxycarbonyl-(C₁-C₈)-alkyl, R²¹R²²NOC-(C₁-C₈)-alkyl, Heterocyclyl, Heterocyclyl-(C₁-C₈)-alkyl, (C₁-C₈)-Alkylcarbonyl-(C₁-C₈)-alkyl, (C₃-C₈)-Cycloalkylcarbonyl-(C₁-C₈)-alkyl, Arylcarbonyl-(C₁-C₈)-alkyl, Heteroarylcarbonyl-(C₁-C₈)-alkyl, Heterocyclylcarbonyl-(C₁-C₈)-alkyl steht und
R²⁴ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, Heterocyclyl-(C₁-C₈)-alkyl, (C₃-C₈)-Cycloalkyl-(C₁-C₈)-alkyl, (C₄-C₁₀)-Cycloalkenyl-(C₁-C₈)-alkyl, NR²¹R²² steht.

2. Verwendung gemäß Anspruch 1, wobei in Formel (I)
R¹ für Wasserstoff, (C₁-C₆)-Alkyl, Cyano-(C₁-C₆)-Alkyl, Nitro-(C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₃-C₆)-Cycloalkyloxy-(C₁-C₆)-alkyl, COR²³, Hydroxycarbonyl, (C₁-C₆)-Alkoxycarbonyl, (C₂-C₆)-Alkenyloxycarbonyl, (C₂-C₆)-Alkinyloxycarbonyl, Aryl-(C₁-C₆)-alkoxycarbonyl, Heteroaryl-(C₁-C₆)-alkoxycarbonyl, Heteroaryloxycarbonyl, Aryloxycarbonyl, Heterocyclyloxycarbonyl, (C₃-C₆)-Cycloalkyl-(C₁-C₆)-alkoxycarbonyl, Heterocyclyl-(C₁-C₆)-alkoxycarbonyl, CONR²¹R²², SO₂R²⁴, Hydroxycarbonyl-(C₁-C₆**)**-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, Arylcarbonyl-(C₁-C₆)-alkyl, Heteroarylcarbonyl-(C₁-C₆)-alkyl, Aryloxy-(C₁-C₆)-alkyl, Heteroaryloxy-(C₁-C₆)-alkyl steht,
R² für (C₁-C₆)-Alkyl, Cyano-(C₁-C₆)-Alkyl, (C₂-C₆)-Alkenyl, (C₂-C₆)-Alkinyl, (C₁-C₈)-Haloalkyl, (C₃-C₈)-Cycloalkyl, (C₃-C₈)-Halocycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₂-C₆)-Alkenyloxy-(C₁-C₆)-alkyl, (C₂-C₆)-Alkinyloxy-(C₁-C₆)-alkyl, Nitro-(C₁-C₆)-Alkyl, Aryloxy-(C₁-C₆)-alkyl, Aryl-(C₁-C₆)-alkoxy-(C₁-C₆)-alkyl, Heteroaryloxy-(C₁-C₆)-alkyl, Heteroaryl-(C₁-C₆)-alkoxy-(C₁-C₆)-alkyl, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl, (C₃-C₆)-Cycloalkyl-(C₃-C₆)-Cycloalkyl steht,
R³ und R⁴ unabhängig voneinander für Wasserstoff, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³, CONR²¹R²², Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, Pentafluorthio, (C₁-C₆)-Alkoxy-(C₁-C₆)-haloalkyl, (C₁-C₆)-Haloalkoxy-(C₁-C₆)-haloalkyl, (C₁-C₆)-Haloalkoxy-(C₁-C₆)-alkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Tris-[(C₁-C₆)-alkyl]silyl-(C₂-C₆)-alkinyl, Bis-[(C₁-C₆)-alkyl](aryl)silyl-(C₂-C₆)-alkinyl, Bis-aryl[(C₁-C₆)-alkyl]silyl-(C₂-C₆)-alkinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkoxy-(C₁-C₆)-alkoxy-(C₁-C₆)-alkyl, (C₁-C₆)-Alkylaminosulfonylamino, (C₃-C₆)-Cycloalkylaminosulfonylamino, Diazo, Aryldiazo, Tris-[(C₁-C₆)-alkyl]silyl, Bis-[(C₁-C₆)-alkyl](aryl)silyl, Bis-aryl[(C₁-C₆)-alkyl]silyl steht,
X für O (Sauerstoff) oder NR⁶ steht,
n, m unabhängig voneinander für 0 oder 1 stehen,
V für 0, 1 oder 2 steht,
R⁶ für Wasserstoff, (C₁-C₆)-Alkyl, (C₂-C₆)-Alkenyl, (C₂-C₆)-Alkinyl, (C₁-C₈)-Haloalkyl, (C₃-C₈)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 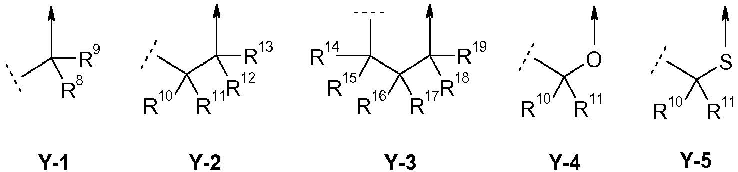 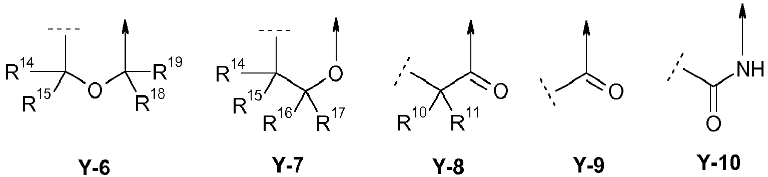 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₆)-Alkyl, (C₂-C₆)-Alkenyl, (C₂-C₆)-Alkinyl, (C₁-C₈)-Haloalkyl, (C₂-C₆)-Haloalkenyl, (C₂-C₆)-Haloalkinyl, (C₃-C₈)-Cycloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, (C₁-C₆)-Alkoxy-(C₁-C₆)-alkyl, (C₁-C₆)-Alkylthio-(C₁-C₆)-alkyl, (C₁-C₆)-Haloalkoxy-(C₁-C₆)-alkyl, (C₁-C₆)-Haloalkylthio-(C₁-C₆)-alkyl, COOR²³ stehen,
R²¹ und R²² gleich oder verschieden sind und unabhängig voneinander für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Haloalkoxy-(C₁-C₆)-alkyl, (C₁-C₆)-Alkylthio-(C₁-C₆)-alkyl, (C₁-C₆)-Haloalkylthio-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, COR²³, SO₂R²⁴, (C₁-C₆)-Alkyl-HNO₂S-, (C₃-C₆)-Cycloalkyl-HNO₂S-, Heterocyclyl, (C₁-C₆)-Alkoxycarbonyl-(C₁-C₆)-alkyl, (C₁-C₆)-Alkoxycarbonyl, Aryl-(C₁-C₆)-Alkoxycarbonyl-(C₁-C₆)-alkyl, Aryl-(C₁-C₆)-Alkoxycarbonyl, Hydroxycarbonyl-(C₁-C₆)-alkyl, Heteroaryl-(C₁-C₆)-Alkoxycarbonyl, (C₂-C₆)-Alkenyloxycarbonyl, (C₂-C₆)-Alkinyloxycarbonyl, Heterocyclyl-(C₁-C₆)-alkyl stehen
R²³ für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, (C₃-C₆)-Cycloalkyl-(C₁-C₆)-alkyl, (C₄-C₈)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, R²¹R²²NOC-(C₁-C₆)-alkyl, Heterocyclyl, Heterocyclyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl steht und
R²⁴ für Wasserstoff, (C₁-C₆)-Alkyl, (C₂-C₆)-Alkenyl, (C₂-C₆)-Alkinyl, (C₁-C₆)-Cyanoalkyl, (C₁-C₈)-Haloalkyl, (C₂-C₆)-Haloalkenyl, (C₂-C₆)-Haloalkinyl, (C₃-C₈)-Cycloalkyl, (C₃-C₈)-Halocycloalkyl, (C₄-C₈)-Cycloalkenyl, (C₄-C₈)-Halocycloalkenyl, (C₁-C₆)-Alkoxy-(C₁-C₆)-alkyl, (C₁-C₆)-Alkoxy-(C₁-C₆)-haloalkyl, Aryl, Aryl-(C₁-C₆)-alkyl, Heteroaryl, Heteroaryl-(C₁-C₆)-alkyl, Heterocyclyl-(C₁-C₆)-alkyl, (C₃-C₆)-Cycloalkyl-(C₁-C₆)-alkyl, (C₄-C₈)-Cycloalkenyl-(C₁-C₈)-alkyl, NR²¹R²² steht.

3. Verwendung gemäß Anspruch 1, wobei in Formel (I)
R¹ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 2-Methoxycyclopropyl, 3-Methoxycyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 3-Ethylcyclobutyl, 3-Methoxycyclobutyl, 3,3-Dimethylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclopentyl, 2-Methylcyclopentyl, 3-Methylcyclopentyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyanomethyl, Cyanoethyl, Cyano-n-propyl, Cyano-n-butyl, Nitromethyl, Nitroethyl, Nitro-n-propyl, Nitro-n-butyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxymethyl, Ethoxymethyl, Ethoxyethyl, Methoxyethyl, Methoxy-n-propyl, Ethoxy-n-propyl, Methoxy-n-butyl, Ethoxy-n-butyl, Methoxy-iso-butyl, Methoxy-n-pentyl, Methoxy-iso-Propyl, iso-Propoxymethyl, iso-Propoxyethyl,n-butyloxymethyl, sec-Butyloxymethyl, tert-Butyloxymethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl, 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, (C₃-C₈)-Halocycloalkyl, (C₄-C₈)-Halocycloalkenyl, Aryl-(C₁-C₅)-alkyl, Heteroaryl-(C₁-C₅)-alkyl, (C₃-C₆)-Cycloalkyl-(C₁-C₆)-alkyl, Heterocyclyl-(C₁-C₅)-alkyl, R²¹R²²N-(C₁-C₆)-alkyl, (C₃-C₆)-Cycloalkyloxy-(C₁-C₅)-alkyl, COR²³, Hydroxycarbonyl, (C₁-C₆)-Alkoxycarbonyl, (C₂-C₆)-Alkenyloxycarbonyl, (C₂-C₆)-Alkinyloxycarbonyl, Aryl-(C₁-C₆)-alkoxycarbonyl, Heteroaryl-(C₁-C₅)-alkoxycarbonyl, Heteroaryloxycarbonyl, Aryloxycarbonyl, Heterocyclyloxycarbonyl, (C₃-C₆)-Cycloalkyl-(C₁-C₅)-alkoxycarbonyl, Heterocyclyl-(C₁-C₅)-alkoxycarbonyl, CONR²¹R²², SO₂R²⁴, Hydroxycarbonyl-(C₁-C₅)-alkyl, (C₁-C₆)-Alkoxycarbonyl-(C₁-C₅)-alkyl, (C₂-C₆)-Alkenyloxycarbonyl-(C₁-C₆)-alkyl, (C₂-C₆)-Alkinyloxycarbonyl-(C₁-C₅)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, Arylcarbonyl-(C₁-C₆)-alkyl, Heteroarylcarbonyl-(C₁-C₆)-alkyl, Aryloxy-(C₁-C₅)-alkyl, Heteroaryloxy-(C₁-C₅)-alkyl steht,
R² für Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 2-Methoxycyclopropyl, 3-Methoxycyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 3-Ethylcyclobutyl, 3-Methoxycyclobutyl, 3,3-Dimethylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclopentyl, 2-Methylcyclopentyl, 3-Methylcyclopentyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyanomethyl, Cyanoethyl, Cyano-n-propyl, Cyano-n-butyl, Trifluormethyl, Pentafluorethyl, Heptafluorpropyl, Nonafluorbutyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxymethyl, Ethoxymethyl, Ethoxyethyl, Methoxyethyl, Methoxy-n-propyl, Ethoxy-n-propyl, Methoxy-n-butyl, Ethoxy-n-butyl, Methoxy-iso-butyl, Methoxy-n-pentyl, Methoxy-iso-Propyl, iso-Propoxymethyl, iso-Propoxyethyl, Nitromethyl, Nitroethyl, Nitro-n-propyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Methylthio-n-butyl, Ethylthio-n-propyl, Trifluormethylthiomethyl, Trifluormethylthioethyl, Trifluormethylthio-n-propyl, Trifluormethylthio-n-butyl, (C₃-C₈)-Halocycloalkyl, Aryl-(C₁-C₆)-alkyl, Heteroaryl, Heteroaryl-(C₁-C₆)-alkyl, (C₃-C₆)-Cycloalkyl-(C₁-C₆)-alkyl, Heterocyclyl, Heterocyclyl-(C₁-C₆)-alkyl, R²¹R²²N-(C₁-C₆)-alkyl, (C₁-C₆)-Alkoxy-(C₁-C₆)-alkoxy-(C₁-C₆)-alkyl, (C₂-C₆)-Alkenyloxy-(C₁-C₆)-alkyl, (C₂-C₆)-Alkinyloxy-(C₁-C₆)-alkyl, Aryloxy-(C₁-C₆)-alkyl, Aryl-(C₁-C₆)-alkoxy-(C₁-C₆)-alkyl, Heteroaryloxy-(C₁-C₆)-alkyl, Heteroaryl-(C₁-C₆)-alkoxy-(C₁-C₆)-alkyl, Hydroxycarbonyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₆)-alkyl, Heterocyclyl-(C₁-C₆)-alkoxycarbonyl-(C₁-C₆)-alkyl, (C₁-C₆)-Alkylcarbonyl-(C₁-C₆)-alkyl, (C₃-C₆)-Cycloalkylcarbonyl-(C₁-C₆)-alkyl, Arylcarbonyl-(C₁-C₆)-alkyl, Heteroarylcarbonyl-(C₁-C₆)-alkyl, Heterocyclylcarbonyl-(C₁-C₆)-alkyl, (C₃-C₆)-Cycloalkyl-(C₃-C₆)-Cycloalkyl steht,
R³ und R⁴ unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Cycloalkyl, (C₃-C₆)-Halocycloalkyl, (C₄-C₆)-Cycloalkenyl, (C₄-C₆)-Halocycloalkenyl, Aryl, Aryl-(C₁-C₅)-alkyl, Heteroaryl, Heteroaryl-(C₁-C₅)-alkyl, Heterocyclyl, Heterocyclyl-(C₁-C₅)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³, CONR²¹R²², Hydroxycarbonyl-(C₁-C₅)-alkyl, (C₁-C₅)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₅)-alkyl, Aryl-(C₁-C₅)-alkoxycarbonyl-(C₁-C₅)-alkyl, Heteroaryl-(C₁-C₅)-alkoxycarbonyl-(C₁-C₅)-alkyl, Heterocyclyl-(C₁-C₅)-alkoxycarbonyl-(C₁-C₅)-alkyl stehen,
R⁵ für Wasserstoff, Fluor, Chlor, Brom, Iod, Cyano, Nitro, NR²¹R²², OR²³, S(O)ᵥR²⁴, Thiocyanato, Isothiocyanato, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, Pentafluorthio, Aryl-(C₁-C₆)-alkyl, Heteroaryl-(C₁-C₆)-alkyl, Heterocyclyl-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Trimethylsilylethinyl, Triethylsilylethinyl, Tris-(iso-propyl)silylethinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkylaminosulfonylamino, (C₃-C₆)-Cycloalkylaminosulfonylamino, Diazo, Aryldiazo, Trimethylsilyl, Triethylsilyl, Tris-(iso-propyl)silyl, Diphenyl(methyl)silyl, Dimethyl(phenyl)silyl, Dimethyl(tert.-butyl)silyl, Diphenyl(tert.-butyl)silyl steht,
X für O (Sauerstoff) oder NR⁶ steht,
n, m unabhängig voneinander für 0 oder 1 stehen,
v für 0, 1 oder 2 steht,
R⁶ für Wasserstoff, Methyl, Ethyl, n-Propyl, iso-Propyl, n-Butyl, sec-Butyl, tert-Butyl, n-Pentyl, Cyclopropyl, Cyclobutyl, Cyclopentyl, Cyclohexyl, Cyclopropylmethyl, Cyclobutylmethyl, Cyclopentylmethyl, 2,2-Difluorethyl, 2,2,2-Trifluorethyl, 3,3,3-Trifluor-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl steht,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 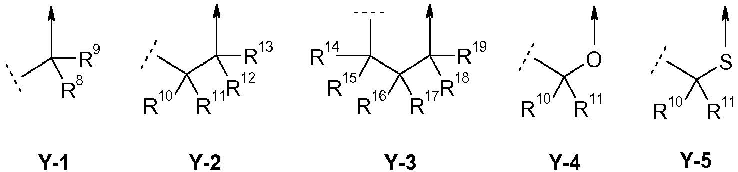 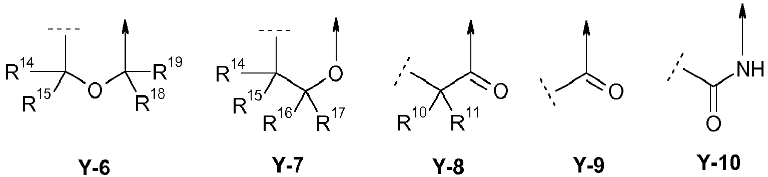 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, Fluor, Methyl, Ethyl, n-Propyl, iso-Propyl, n-Butyl, iso-Butyl, tert.-Butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, Cyclopropylmethyl, Cyclobutylmethyl, Cyclopentylmethyl, Cyclohexylmethyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³ stehen,
R²¹ und R²² gleich oder verschieden sind und unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, (C₁-C₆)-Haloalkyl, (C₂-C₆)-Haloalkenyl, (C₂-C₆)-Haloalkinyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 3-Methoxycyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, gegebenenfalls substituiertes Phenyl, Aryl-(C₁-C₅)-alkyl, Heteroaryl, Heteroaryl-(C₁-C₅)-alkyl, (C₄-C₆)-Cycloalkenyl-(C₁-C₅)-alkyl, COR²³, SO₂R²⁴, -(C₁-C₆)-Alkyl-HNO₂S-, (C₃-C₆)-Cycloalkyl-HNO₂S-, Heterocyclyl, (C₁-C₅)-Alkoxycarbonyl-(C₁-C₅)-alkyl, (C₁-C₅)-Alkoxycarbonyl, Aryl-(C₁-C₅)-Alkoxycarbonyl-(C₁-C₅)-alkyl, Aryl-(C₁-C₅)-Alkoxycarbonyl, Heteroaryl-(C₁-C₅)-Alkoxycarbonyl, (C₂-C₆)-Alkenyloxycarbonyl, (C₂-C₆)-Alkinyloxycarbonyl, Heterocyclyl-(C₁-C₅)-alkyl stehen,
R²³ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, (C₄-C₆)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, Heterocyclyl, Heterocyclyl-(C₁-C₆)-alkyl steht und
R²⁴ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, Heterocyclyl-(C₁-C₆)-alkyl, (C₄-C₆)-Cycloalkenyl-(C₁-C₆)-alkyl, NR²¹R²² steht.

4. Behandlung von Pflanzen, umfassend die Applikation einer zur Steigerung der Widerstandsfähigkeit von Pflanzen gegenüber abiotischen Stressfaktoren wirksamen, nicht-toxischen Menge einer oder mehrerer der Verbindungen der Formel (I), oder jeweils deren Salze gemäß einem der Ansprüche 1 bis 3.

5. Behandlung gemäß Anspruch 4, wobei die abiotischen Stressbedingungen einer oder mehrerer Bedingungen ausgewählt aus der Gruppe bestehend aus Dürre, Kältestress, Hitzestress, Trockenstress, osmotischem Stress, Staunässe, erhöhtem Bodensalzgehalt, erhöhtem Ausgesetztsein an Mineralien, Ozonbedingungen, Starklichtbedingungen, beschränkter Verfügbarkeit von Stickstoffnährstoffen und beschränkter Verfügbarkeit von Phosphornährstoffen entsprechen.

6. Verwendung einer oder mehrerer Verbindungen der Formel (I), oder jeweils deren Salze gemäß einem der Ansprüche 1 bis 3 in der Sprühapplikation auf Pflanzen und Pflanzenteilen in Kombinationen mit einem oder mehrer Wirkstoffen ausgewählt aud der Gruppe der Insektizide, Lockstoffe, Akarizide, Fungizide, Nematizide, Herbizide, wachstumsregulatorische Stoffe, Safener, die Pflanzenreife beeinflussende Stoffe und Bakterizide.

7. Verwendung einer oder mehrerer Verbindungen der Formel (I), oder jeweils deren Salze gemäß einem der Ansprüche 1 bis 3 in der Sprühapplikation auf Pflanzen und Pflanzenteilen in Kombinationen mit Düngemitteln.

8. Verwendung einer oder mehrerer Verbindungen der Formel (I), oder jeweils deren Salze gemäß einem der Ansprüche 1 bis 3 zur Applikation auf gentechnisch veränderten Sorten, deren Saatgut, oder auf Anbauflächen auf denen diese Sorten wachsen.

9. Verwendung von Sprühlösungen, die eine oder mehrere der Verbindungen der Formel (I), oder jeweils deren Salze gemäß einem der Ansprüche 1 bis 3 enthalten, zur Steigerung der Widerstandsfähigkeit von Pflanzen gegenüber abiotischen Stressfaktoren.

10. Verfahren zur Erhöhung der Stresstoleranz bei Pflanzen ausgewählt aus der Gruppe der Nutzpflanzen, Zierpflanzen, Rasenarten, oder Bäumen, **dadurch gekennzeichnet, dass** die Applikation einer ausreichenden, nicht-toxischen Menge einer oder mehrere Verbindungen der Formel (I), oder jeweils deren Salze gemäß einem der Ansprüche 1 bis 3 auf die Fläche, wo die entsprechende Wirkung gewünscht wird, umfassend die Anwendung auf die Pflanzen, deren Saatgut oder auf die Fläche auf der die Pflanzen wachsen, erfolgt.

11. Verfahren gemäß Anspruch 10, wobei die Widerstandsfähigkeit der so behandelten Pflanzen gegenüber abiotischem Stress gegenüber nicht behandelten Pflanzen unter ansonsten gleichen physiologischen Bedingungen um mindestens 3% erhöht ist.

12. Substituierte N-(Cycloalkyl)-5-cycloalkyl-3-thio-1,2,4-triazole und N-(Cycloalkyl)-5-heterocyclyl-3-thio-1,2,4-triazole der allgemeinen Formel (II) oder deren Salze 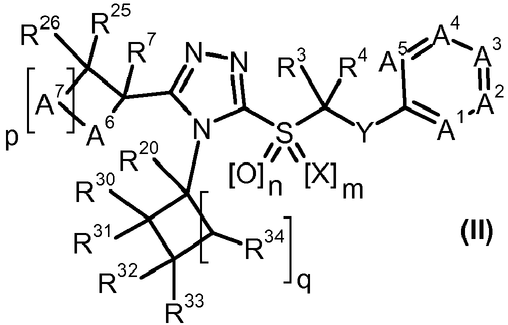 worin
R³ und R⁴ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COOR²³, CONR²¹R²², Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl stehen,
R⁵ für Wasserstoff, Halogen, Cyano, Nitro, NR²¹R²², OR²³, S(O)ᵥR²⁴, Thiocyanato, Isothiocyanato, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, Pentafluorthio, (C₁-C₈)-Alkoxy-(C₁-C₈)-haloalkyl, (C₁-C₈)-Haloalkoxy-(C₁-C₈)-haloalkyl, (C₁-C₈)-Haloalkoxy-(C₁-C₈)-alkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, Heterocyclyl, Heterocyclyl-(C₁-C₈)-alkyl, (C₁-C₈)-Alkoxy-(C₁-C₈)-alkyl, (C₁-C)-Alkylthio-(C₁-C)-alkyl, (C₁-C₈)-Haloalkylthio-(C₁-C)-alkyl, (C₁-C₈)-Alkylcarbonyl-(C₁-C₈)-alkyl, COOR²³, CONR²¹R²², COR²³,-C=NOR²³, R²¹R²²N-(C₁-C₈)-alkyl, R²³OOC-(C₁-C₈)-alkyl, Aryl-(C₁-C₈)-alkinyl, Heteroaryl-(C₁-C₈)-alkinyl, Heterocyclyl-(C₁-C₈)-alkinyl, Tris-[(C₁-C)-alkyl]silyl-(C₂-C)-alkinyl, Bis-[(C₁-C)-alkyl](aryl)silyl-(C₂-C₈)-alkinyl, Bis-aryl[(C₁-C₈)-alkyl]silyl-(C₂-C₈)-alkinyl, (C₃-C₈)-Cycloalkyl-(C₂-C₈)-alkinyl, Aryl-(C₂-C₈)-alkenyl, Heteroaryl-(C₂-C₈)-alkenyl, Heterocyclyl-(C₂-C₈)-alkenyl, (C₃-C₈)-Cycloalkyl-(C₂-C₈)-alkenyl, (C₁-C₈)-Alkoxy-(C₁-C₈)-alkoxy-(C₁-C₈)-alkyl, (C₁-C₈)-Alkylaminosulfonylamino, (C₃-C₈)-Cycloalkylaminosulfonylamino, Diazo, Aryldiazo, Tris-[(C₁-C₈)-alkyl]silyl, Bis-[(C₁-C₈)-alkyl](aryl)silyl, Bis-aryl[(C₁-C₈)-alkyl]silyl steht,
X für O (Sauerstoff) oder NR⁶ steht,
n, m unabhängig voneinander für 0 oder 1 stehen
v für 0, 1 oder 2 steht,
p, q unabhängig voneinander für 0, 1, 2, 3 oder 4 stehen, mit der Maßgabe, dass p und q nicht gleichzeitig für 0 stehen, wenn A⁶ für die die Gruppierung CR²⁷R²⁸ steht
R⁶ für Wasserstoff, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl steht,
R⁷ und R²⁰ unabhängig voneinander für Wasserstoff, Halogen, Cyano, (C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-Alkyl, Cyano-(C₁-C₈)-Alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 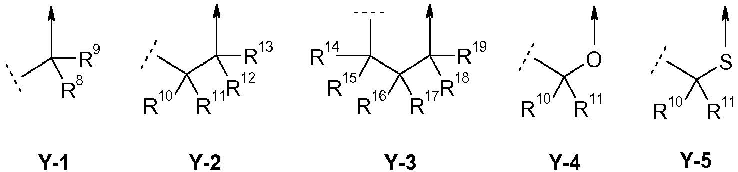 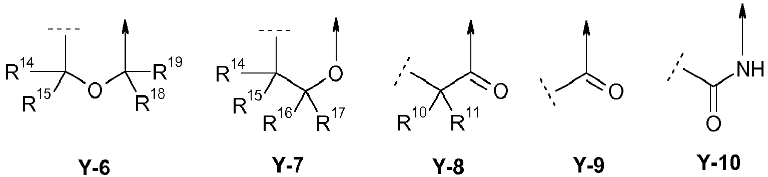 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, (C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C)-Haloalkoxy-(C₁-C)-alkyl, (C₁-C)-Haloalkylthio-(C₁-C)-alkyl, COOR²³ stehen,
R²¹ und R²² gleich oder verschieden sind und unabhängig voneinander für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Haloalkoxy-(C₁-C₈)-alkyl, (C₁-C₈)-Alkylthio-(C₁-C₈)-alkyl, (C₁-C₈)-Haloalkylthio-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, COR²³, SO₂R²⁴, (C₁-C₈)-Alkyl-HNO₂S-, (C₃-C₈)-Cycloalkyl-HNO₂S-, Heterocyclyl, (C₁-C₈)-Alkoxycarbonyl-(C₁-C₈)-alkyl, (C₁-C₈)-Alkoxycarbonyl, Aryl-(C₁-C₈)-Alkoxycarbonyl-(C₁-C₈)-alkyl, Aryl-(C₁-C₈)-Alkoxycarbonyl, Hydroxycarbonyl-(C₁-C₈)-alkyl, Heteroaryl-(C₁-C₈)-Alkoxycarbonyl, (C₂-C₈)-Alkenyloxycarbonyl, (C₂-C₈)-Alkinyloxycarbonyl, Heterocyclyl-(C₁-C₈)-alkyl stehen
R²³ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, (C₄-C₁₀)-Cycloalkenyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, Aryl-(C₁-C₈)-Alkoxycarbonyl-(C₁-C₈)-alkyl, Hydroxycarbonyl-(C₁-C₈)-alkyl, R²¹R²²NOC-(C₁-C₈)-alkyl, Heterocyclyl, Heterocyclyl-(C₁-C₈)-alkyl, (C₁-C₈)-Alkylcarbonyl-(C₁-C₈)-alkyl, (C₃-C₈)-Cycloalkylcarbonyl-(C₁-C₈)-alkyl, Arylcarbonyl-(C₁-C₈)-alkyl, Heteroarylcarbonyl-(C₁-C₈)-alkyl, Heterocyclylcarbonyl-(C₁-C₈)-alkyl steht,
R²⁴ für Wasserstoff, (C₁-C₈)-Alkyl, (C₂-C₈)-Alkenyl, (C₂-C₈)-Alkinyl, (C₁-C₈)-Cyanoalkyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy-(C₁-C₈)-alkyl, (C₁-C₈)-Alkoxy-(C₁-C₈)-haloalkyl, Aryl, Aryl-(C₁-C₈)-alkyl, Heteroaryl, Heteroaryl-(C₁-C₈)-alkyl, Heterocyclyl-(C₁-C₈)-alkyl, (C₃-C₈)-Cycloalkyl-(C₁-C₈)-alkyl, (C₄-C₁₀)-Cycloalkenyl-(C₁-C₈)-alkyl, NR²¹R²² steht,
R²⁵, R²⁶, R²⁷ und R²⁸ unabhängig voneinander für Wasserstoff, Cyano, Halogen, Nitro, Hydroxy, (C₁-C₈)-Alkyl, Cyano-(C₁-C₈)-Alkyl, Nitro-(C₁-C₈)-Alkyl, (C₂-C₈)-Alkenyl, (C₂-C₈)-Alkinyl, (C₁-C₁₀)-Haloalkyl, (C₂-C₈)-Haloalkenyl, (C₂-C₈)-Haloalkinyl, (C₃-C₁₀)-Cycloalkyl, (C₃-C₁₀)-Halocycloalkyl, (C₄-C₁₀)-Cycloalkenyl, (C₄-C₁₀)-Halocycloalkenyl, (C₁-C₈)-Alkoxy, (C₁-C₈)-Haloalkoxy, (C₁-C₈)-Alkylthio, (C₁-C₈)-Haloalkylthio, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, (C₃-C₈)-Cycloalkyloxy-(C₁-C₈)-alkyl, COR²³, COOR²³, CONR²¹R²², SO₂R²⁴, Hydroxycarbonyl-(C₁-C₈)-alkyl, (C₁-C₈)-Alkoxycarbonyl-(C₁-C₈)-alkyl, (C₂-C₈)-Alkenyloxycarbonyl-(C₁-C₈)-alkyl, (C₂-C₈)-Alkinyloxycarbonyl-(C₁-C₈)-alkyl, Aryl-(C₁-C₈)-alkoxycarbonyl-(C₁-C₈)-alkyl, Heteroaryl-(C₁-C₈)-alkoxycarbonyl-(C₁-C₈)-alkyl, Heterocyclyl-(C₁-C₈)-alkoxycarbonyl-(C₁-C₈)-alkyl, (C₁-C₈)-Alkylcarbonyl-(C₁-C₈)-alkyl, Arylcarbonyl-(C₁-C₈)-alkyl, Heteroarylcarbonyl-(C₁-C₈)-alkyl stehen,
R²⁹ für (C₁-C₈)-Alkyl, Cyano-(C₁-C₈)-Alkyl, (C₂-C₈)-Alkenyl, (C₂-C₈)-Alkinyl, (C₁-C₁₀)-Haloalkyl, (C₃-C₁₀)-Cycloalkyl, (C₃-C₁₀)-Halocycloalkyl, (C₁-C₈)-Alkoxy, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, R²¹R²²N-(C₁-C₈)-alkyl, (C₁-C₈)-Alkoxy-(C₁-C₈)-alkoxy-(C₁-C₈)-alkyl, COR²³, COOR²³, CONR²¹R²², SO₂R²⁴, R²³OOC-(C₁-C₈)-alkyl, R²³OC-(C₁-C₈)-alkyl steht und
R³⁰, R³¹, R³², R³³ und R³⁴ unabhängig voneinander für Wasserstoff, Cyano, Halogen, Hydroxy, (C₁-C₈)-Alkyl, (C₂-C₈)-Alkenyl, (C₂-C₈)-Alkinyl, (C₁-C₁₀)-Haloalkyl, (C₁-C₈)-Alkoxy, (C₁-C₈)-Haloalkoxy, (C₁-C₈)-Alkylthio, (C₁-C₈)-Haloalkylthio, (C₂-C₈)-Haloalkenyl, (C₂-C₈)-Haloalkinyl, (C₃-C₁₀)-Cycloalkyl, Aryl, Aryl-(C₁-C₈)-alkyl, Heteroaryl, Heteroaryl-(C₁-C₈)-alkyl, (C₃-C₈)-Cycloalkyl-(C₁-C₈)-alkyl, Heterocyclyl, Heterocyclyl-(C₁-C₈)-alkyl, (C₁-C₈)-Alkoxy-(C₁-C₈)-alkyl, (C₁-C₈)-Alkylthio-(C₁-C₈)-alkyl, (C₁-C₈)-Haloalkoxy-(C₁-C₈)-alkyl, (C₁-C₈)-Haloalkylthio-(C₁-C₈)-alkyl, COR²³, COOR²³, CONR²¹R²² stehen.

13. Substituierte N-(Cycloalkyl)-5-cycloalkyl-3-thio-1,2,4-triazole und N-(Cycloalkyl)-5-heterocyclyl-3-thio-1,2,4-triazole der allgemeinen Formel (II) gemäß Anspruch 12 oder deren Salze, worin
R³ und R⁴ unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Cycloalkyl, (C₃-C₆)-Halocycloalkyl, (C₄-C₆)-Cycloalkenyl, (C₄-C₆)-Halocycloalkenyl, Aryl, Aryl-(C₁-C₅)-alkyl, Heteroaryl, Heteroaryl-(C₁-C₅)-alkyl, Heterocyclyl, Heterocyclyl-(C₁-C₅)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³, CONR²¹R²², Hydroxycarbonyl-(C₁-C₅)-alkyl, (C₁-C₅)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₅)-alkyl, Aryl-(C₁-C₅)-alkoxycarbonyl-(C₁-C₅)-alkyl, Heteroaryl-(C₁-C₅)-alkoxycarbonyl-(C₁-C₅)-alkyl, Heterocyclyl-(C₁-C₅)-alkoxycarbonyl-(C₁-C₅)-alkyl stehen,
R⁵ für Wasserstoff, Fluor, Chlor, Brom, Iod, Cyano, Nitro, NR²¹R²², OR²³, S(O)ᵥR²⁴, Thiocyanato, Isothiocyanato, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, (C₂-C₆)-Haloalkenyl, (C₂-C₆)-Haloalkinyl, Pentafluorthio, Aryl-(C₁-C₆)-alkyl, Heteroaryl-(C₁-C₆)-alkyl, Heterocyclyl-(C₁-C₆)-alkyl, (C₁-C₆)-Alkylcarbonyl-(C₁-C₆)-alkyl, COOR²³, CONR²¹R²², COR²³, -C=NOR²³, R²¹R²²N-(C₁-C₆)-alkyl, R²³OOC-(C₁-C₆)-alkyl, Aryl-(C₁-C₆)-alkinyl, Heteroaryl-(C₁-C₆)-alkinyl, Heterocyclyl-(C₁-C₆)-alkinyl, Trimethylsilylethinyl, Triethylsilylethinyl, Tris-(iso-propyl)silylethinyl, (C₃-C₆)-Cycloalkyl-(C₂-C₆)-alkinyl, Aryl-(C₂-C₆)-alkenyl, Heteroaryl-(C₂-C₆)-alkenyl, Heterocyclyl-(C₂-C₆)-alkenyl, (C₃-C₆)-Cycloalkyl-(C₂-C₆)-alkenyl, (C₁-C₆)-Alkylaminosulfonylamino, (C₃-C₆)-Cycloalkylaminosulfonylamino, Diazo, Aryldiazo, Trimethylsilyl, Triethylsilyl, Tris-(iso-propyl)silyl, Diphenyl(methyl)silyl, Dimethyl(phenyl)silyl, Dimethyl(tert.-butyl)silyl, Diphenyl(tert.-butyl)silyl steht,
X für O (Sauerstoff) oder NR⁶ steht,
n, m unabhängig voneinander für 0 oder 1 stehen,
v für 0, 1 oder 2 steht,
p, q unabhängig voneinander für 0, 1, 2, 3 oder 4 stehen, mit der Maßgabe, daß p und q nicht gleichzeitig für 0 stehen, wenn A⁶ für die die Gruppierung CR²⁷R²⁸ steht,
R⁶ für Wasserstoff, Methyl, Ethyl, n-Propyl, iso-Propyl, n-Butyl, sec-Butyl, tert-Butyl, n-Pentyl, Cyclopropyl, Cyclobutyl, Cyclopentyl, Cyclohexyl, Cyclopropylmethyl, Cyclobutylmethyl, Cyclopentylmethyl, 2,2-Difluorethyl, 2,2,2-Trifluorethyl, 3,3,3-Trifluor-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl steht,
R⁷ und R²⁰ unabhängig voneinander für Wasserstoff, Fluor, Chlor, Brom, Iod, Cyano, Methyl, Ethyl, n-Propyl, iso-Propyl, n-Butyl, sec-Butyl, tert.-Butyl, n-Pentyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, 1-Methylcycloprop-1-yl, 2-Methylcycloprop-1-yl, Cyclopropylmethyl, Cyclobutylmethyl, Cyclopentylmethyl, Cyclohexylmethyl, Cyanomethyl, Cyanoethyl, Cyano-n-propyl, Methoxymethyl, Methoxyethyl, Ethoxymethyl, Ethoxyethyl, Methoxy-n-Propyl, Ethoxy-n-propyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl stehen,
A¹, A², A³, A⁴ und A⁵ gleich oder verschieden sind und unabhängig voneinander für N (Stickstoff) oder die Gruppierung C-R⁵ stehen, wobei jedoch in keinem Fall mehr als zwei N-Atome benachbart sind, und wobei R⁵ in der Gruppierung C-R⁵ jeweils gleiche oder verschiedene Bedeutungen gemäß der oben stehenden Definition hat,
A⁶ und A⁷ gleich oder verschieden sind und unabhängig voneinander für O (Sauerstoff), N (Stickstoff), die Gruppierung CR²⁷R²⁸ oder die Gruppierung N-R²⁹ stehen, wobei jedoch in keinem Fall zwei N-Atome, zwei O-Atome oder ein N- und ein O-Atom gleichzeitig im gebildeten Ring vorhanden sind, und wobei R²⁷ und R²⁸ in der Gruppierung CR²⁷R²⁸ jeweils gleiche oder verschiedene Bedeutungen gemäß der unten stehenden Definition haben,
R³ und R⁴ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
R²⁷ und R²⁸ mit dem Atom, an das sie gebunden sind, einen vollständig gesättigten, oder teilgesättigten, gegebenenfalls durch Heteroatome unterbrochenen und gegebenenfalls weiter substituierten 5-7-gliedrigen Ring bilden,
A¹ und A², wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A² und A³, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
A³ und A⁴, wenn beide für eine Gruppe C-R⁵ stehen, mit den Atomen, an die sie gebunden sind, einen vollständig gesättigten, teilgesättigten oder vollständig ungesättigten, gegebenenfalls durch Heteroatome unterbrochenen und gegebenenfalls weiter substituierten 5-7-gliedrigen Ring bilden,
Y für eine Bindung oder für die Gruppierungen Y-1 bis Y-10 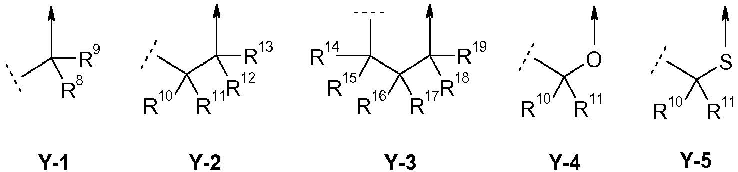 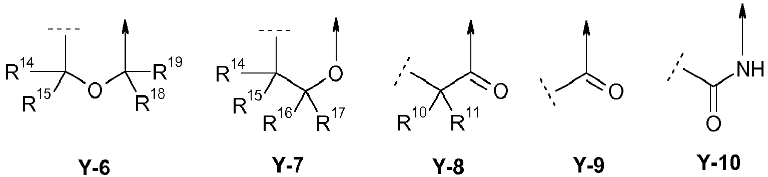 steht, wobei R⁸, R⁹, R¹⁰, R¹¹, R¹², R¹³, R¹⁴, R¹⁵, R¹⁶, R¹⁷, R¹⁸ und R¹⁹ jeweils die Bedeutung gemäß der nachstehenden Definition haben und wobei der Pfeil für eine Bindung zum 6-gliedrigen Ring mit den Gruppierungen A¹, A², A³, A⁴ und A⁵ steht,
R⁸, R⁹, R¹⁰, R¹¹, R¹², R¹³, R¹⁴, R¹⁵, R¹⁶, R¹⁷, R¹⁸ und R¹⁹ unabhängig voneinander für Wasserstoff, Fluor, Methyl, Ethyl, n-Propyl, iso-Propyl, n-Butyl, iso-Butyl, tert.-Butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3,3-Trifluor-n-propyl, Difluor-tert.-butyl, Cyclopropyl, Cyclobutyl, Cyclopentyl, Cyclohexyl, Cyclopropylmethyl, Cyclobutylmethyl, Cyclopentylmethyl, Cyclohexylmethyl, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COOR²³ stehen,
n für 0, 1 oder 2 steht,
R²¹ und R²² gleich oder verschieden sind und unabhängig voneinander für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, (C₁-C₆)-Haloalkyl, (C₂-C₆)-Haloalkenyl, (C₂-C₆)-Haloalkinyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 3-Methoxycyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, gegebenenfalls substituiertes Phenyl, Aryl-(C₁-C₅)-alkyl, Heteroaryl, Heteroaryl-(C₁-C₅)-alkyl, (C₄-C₆)-Cycloalkenyl-(C₁-C₅)-alkyl, COR²³, SO₂R²⁴, -(C₁-C₆)-Alkyl-HNO₂S-, (C₃-C₆)-Cycloalkyl-HNO₂S-, Heterocyclyl, (C₁-C₅)-Alkoxycarbonyl-(C₁-C₅)-alkyl, (C₁-C₅)-Alkoxycarbonyl, Aryl-(C₁-C₅)-Alkoxycarbonyl-(C₁-C₅)-alkyl, Aryl-(C₁-C₅)-Alkoxycarbonyl, Heteroaryl-(C₁-C₅)-Alkoxycarbonyl, (C₂-C₆)-Alkenyloxycarbonyl, (C₂-C₆)-Alkinyloxycarbonyl, Heterocyclyl-(C₁-C₅)-alkyl stehen,
R²³ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, (C₄-C₆)-Cycloalkenyl-(C₁-C₆)-alkyl, (C₁-C₆)-Alkoxycarbonyl-(C₁-C₆)-alkyl, (C₂-C₆)-Alkenyloxycarbonyl-(C₁-C₆)-alkyl, Aryl-(C₁-C₆)-Alkoxycarbonyl-(C₁-C₆)-alkyl, Hydroxycarbonyl-(C₁-C₆)-alkyl, Heterocyclyl, Heterocyclyl-(C₁-C₆)-alkyl steht,
R²⁴ für Wasserstoff, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, Cyanomethyl, Cyanoethyl, Cyano-n-propyl, Cyano-n-butyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Cyclopropyl, Cyclobutyl, Cyclopentyl, Cyclohexyl, , Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 2-Cyanocyclopropyl, 1-Methylcyclobutyl, 2-Methylcyclobutyl, 3-Methylcyclobutyl, 2-Cyanocyclobutyl, 3-Cyanocyclobutyl, 3-Methoxycyclobutyl, 1-Allylcyclopropyl, 1-Ethylcyclopropyl, 1-Methylcyclohexyl, 2-Methylcyclohexyl, 3-Methylcyclohexyl, 2-Methoxycyclohexyl, 3-Methoxycyclohexyl, 4-Methoxycyclohexyl, Cyclopropylmethyl, Cyclobutylmethyl, Cyclopentylmethyl, Cyclohexylmethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, 3,3,3-Trifluor-n-propyl, Difluor-tert.-butyl, (C₂-C₆)-Haloalkenyl, (C₂-C₆)-Haloalkinyl, (C₃-C₆)-Halocycloalkyl, (C₄-C₆)-Cycloalkenyl, (C₄-C₆)-Halocycloalkenyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, gegebenenfalls substituiertes Phenyl, Aryl-(C₁-C₆)-alkyl, Heteroaryl, Heteroaryl-(C₁-C₆)-alkyl, Heterocyclyl-(C₁-C₆)-alkyl, (C₄-C₆)-Cycloalkenyl-(C₁-C₆)-alkyl, NR²¹R²² steht,
R²⁵, R²⁶, R²⁷ und R²⁸ unabhängig voneinander für Wasserstoff, Cyano, Fluor, Chlor, Brom, Iod, Nitro, Hydroxy, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Di-methylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, Cyclopropylmethyl, Cyclobutylmethyl, Cyclopentylmethyl, Cyclohexylmethyl, gegebenenfalls substituiertes Phenyl, Heteroaryl, Heterocyclyl, Cyclopropyl, Cyclobutyl, Cyclopentyl, Cyclohexyl, Spiro[2.2]pent-1-yl, Spiro[2.3]hex-1-yl, Spiro[2.3]hex-4-yl, 3-Spiro[2.3]hex-5-yl, Spiro[3.3]hept-1-yl, Spiro[3.3]hept-2-yl, Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl, Adamantan-2-yl, 1-Methylcyclopropyl, 2-Methylcyclopropyl, 2,2-Dimethylcyclopropyl, 2,3-Dimethylcyclopropyl, 1,1'-Bi(cyclopropyl)-1-yl, 1,1'-Bi(cyclopropyl)-2-yl, 2'-Methyl-1,1'-bi(cyclopropyl)-2-yl, 1-Cyanocyclopropyl, 2-Cyanocyclopropyl, 1-Methylcyclobutyl, 2-Methylcyclobutyl, 3-Methylcyclobutyl, 1-Cyanocyclobutyl, 2-Cyanocyclobutyl, 3-Cyanocyclobutyl, 1-Allylcyclopropyl, 1-Vinylcyclobutyl, 1-Vinylcyclopropyl, 1-Ethylcyclopropyl, 1-Methylcyclohexyl, 2-Methylcyclohexyl, 3-Methylcyclohexyl, 1-Methoxycyclohexyl, 2-Methoxycyclohexyl, 3-Methoxycyclohexyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 2,2-Difluorethyl, 2,2,2-Trifluorethyl, Difluor-tert.-butyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, Methoxymethoxymethyl, Methoxyethoxymethyl, Methoxyethoxyethyl, Methoxymethoxyethyl, Ethoxy-n-propoxymethyl, Ethoxy-n-propoxyethyl, Ethoxyethoxymethyl, Ethoxyethoxyethyl, Cyanomethyl, Cyanoethyl, Cyano-n-propyl, Nitromethyl, Nitroethyl, (C₂-C₅)-Haloalkenyl, (C₂-C₅)-Haloalkinyl, (C₃-C₆)-Halocycloalkyl, (C₄-C₈)-Halocycloalkenyl, Methoxy, Ethoxy, iso-Propyloxy, n-Propyloxy, n-Butyloxy, sec-Butyloxy, tert-Butyloxy, n-Pentyloxy, neo-Pentyloxy, Trifluormethyloxy, Difluormethyloxy, 2,2-Difluorethyloxy, 2,2,2-Trifluorethyloxy, 3,3,3-Trifluor-n-propyloxy, Methylthio, Ethylthio, n-Propylthio, iso-Propylthio, Trifluormethylthio, Pentafluorethylthio, gegebenenfalls substituiertes Phenyl, Aryl-(C₁-C₆)-alkyl, Heteroaryl, Heteroaryl-(C₁-C₆)-alkyl, Heterocyclyl, Heterocyclyl-(C₁-C₆)-alkyl, R²¹R²² N-(C₁-C₆)-alkyl, (C₁-C₆)-Alkoxy-(C₁-C₆)-alkoxy-(C₁-C₆)-alkyl, (C₃-C₆)-Cycloalkyloxy-(C₁-C₅)-alkyl, COR²³, COOR²³, CONR²¹R²², SO₂R²⁴, Hydroxycarbonyl-(C₁-C₅)-alkyl, (C₁-C₆)-Alkoxycarbonyl-(C₁-C₅)-alkyl, (C₂-C₆)-Alkenyloxycarbonyl-(C₁-C₅)-alkyl, (C₂-C₆)-Alkinyloxycarbonyl-(C₁-C₆)-alkyl, Aryl-(C₁-C₆)-alkoxycarbonyl-(C₁-C₆)-alkyl, Heteroaryl-(C₁-C₆)-alkoxycarbonyl-(C₁-C₅)-alkyl, Heterocyclyl-(C₁-C₅)-alkoxycarbonyl-(C₁-C₅)-alkyl, (C₁-C₆)-Alkylcarbonyl-(C₁-C₅)-alkyl, Arylcarbonyl-(C₁-C₅)-alkyl, Heteroarylcarbonyl-(C₁-C₅)-alkyl stehen,
R²⁹ für Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, Cyanomethyl, Cyanoethyl, Cyano-n-propyl, Allyl, Propargyl, 2,2-Difluorethyl, 2,2,2-Trifluorethyl, Cyclopropyl, Cyclobutyl, Cyclopentyl, Cyclohexyl, (C₃-C₁₀)-Halocycloalkyl, Methoxy, Ethoxy, n-Propyloxy, iso-Propyloxy, n-Butyloxy, gegebenenfalls substituiertes Phenyl, Aryl-(C₁-C₆)-alkyl, Heteroaryl, Heteroaryl-(C₁-C₆)-alkyl, Cyclopropylmethyl, Cyclobutylmethyl, Cyclopentylmethyl, Cyclohexylmethyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxy-n-butyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, R²¹R²²N-(C₁-C₆)-alkyl, (C₁-C₆)-Alkoxy-(C₁-C₆)-alkoxy-(C₁-C₆)-alkyl, COR²³, COOR²³, CONR²¹R²², SO₂R²⁴, R²³OOC-(C₁-C₆)-alkyl, R²³OC-(C₁-C₆)-alkyl steht und
R³⁰, R³¹, R³², R³³ und R³⁴ unabhängig voneinander für Wasserstoff, Cyano, Fluor, Chlor, Brom, Iod, Hydroxy, Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Ioddifluormethyl, Bromfluormethyl, 1-Fluorethyl, 2-Fluorethyl, Fluormethyl, Difluormethyl, 1,1-Difluorethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Difluor-tert.-butyl, Methoxy, Ethoxy, iso-Propyloxy, n-Propyloxy, n-Butyloxy, sec-Butyloxy, tert-Butyloxy, n-Pentyloxy, neo-Pentyloxy, Trifluormethyloxy, Difluormethyloxy, 2,2-Difluorethyloxy, 2,2,2-Trifluorethyloxy, 3,3,3-Trifluor-n-propyloxy, Methylthio, Ethylthio, n-Propylthio, iso-Propylthio, Trifluormethylthio, Pentafluorethylthio, Cyclopropyl, Cyclobutyl, Cyclopentyl, Cyclohexyl, gegebenenfalls substituiertes Phenyl, Aryl-(C₁-C₆)-alkyl, Heteroaryl, Heteroaryl-(C₁-C₆)-alkyl, Cyclopropylmethyl, Cyclobutylmethyl, Cyclopentylmethyl, Cyclohexylmethyl, Heterocyclyl, Heterocyclyl-(C₁-C₆)-alkyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Trifluormethoxymethyl, Trifluormethoxyethyl, Trifluormethoxy-n-propyl, Difluormethoxymethyl, Difluormethoxyethyl, Difluormethoxy-n-propyl, 2,2-Difluorethoxymethyl, 2,2-Difluorethoxyethyl, 2,2-Difluorethoxy-n-propyl, 2,2,2-Trifluorethoxymethyl, 2,2,2-Trifluorethoxyethyl, 2,2,2-Trifluorethoxy-n-propyl, Pentafluorethoxymethyl, Pentafluorethoxyethyl, Pentafluorethoxy-n-propyl, Methylthiomethyl, Methylthioethyl, Ethylthioethyl, Methylthio-n-propyl, Ethylthio-n-propyl, Trifluormethylthiomethyl, Trifluormethylthioethyl, Trifluormethylthio-n-propyl, COR²³, COOR²³, CONR²¹R²² stehen.

14. Sprühlösung zur Behandlung von Pflanzen, enthaltend eine zur Steigerung der Widerstandsfähigkeit von Pflanzen gegenüber abiotischen Stressfaktoren wirksame Menge einer oder mehrerer der substituierten Dihydrooxindolylsulfonamide gemäß einem der Ansprüche 12 oder 13.
